(19) **Europäisches Patentamt / European Patent Office / Office européen des brevets**

(11) **EP 4 187 876 B1**

(12) # EUROPEAN PATENT SPECIFICATION

(45) Date of publication and mention
of the grant of the patent:
**26.11.2025 Bulletin 2025/48**

(21) Application number: **20949470.7**

(22) Date of filing: **31.12.2020**

(51) International Patent Classification (IPC):
*H04L 67/51* (2022.01)    *H04L 65/40* (2022.01)
*G06F 3/0488* (2022.01)    *G06F 3/14* (2006.01)
*G06F 40/109* (2020.01)    *G06F 3/0482* (2013.01)
*G06F 40/40* (2020.01)    *G06F 40/58* (2020.01)
*G06V 10/00* (2022.01)    *G06V 10/82* (2022.01)
*H04L 67/1095* (2022.01)    *H04W 4/70* (2018.01)
*H04W 4/80* (2018.01)    *H04W 76/14* (2018.01)
*G06T 5/00* (2024.01)    *G06T 11/60* (2006.01)
*H04L 12/28* (2006.01)    *G06F 40/103* (2020.01)
*G06F 40/166* (2020.01)    *G06V 30/10* (2022.01)
*G06V 30/148* (2022.01)    *H04W 12/06* (2021.01)
*H04W 84/12* (2009.01)    *H04W 84/18* (2009.01)

(52) Cooperative Patent Classification (CPC):
**H04L 67/51; G06F 3/0482; G06F 3/0488;**
**H04L 12/281; H04L 67/1095;** G06F 40/103;
G06F 40/109; G06F 40/166; G06F 40/58;
G06V 30/10; G06V 30/153; H04L 12/2809;
H04L 12/2812; H04W 4/80; H04W 12/06;   (Cont.)

(86) International application number:
**PCT/CN2020/142564**

(87) International publication number:
**WO 2022/032979 (17.02.2022 Gazette 2022/07)**

(54) **INVOKING CAPABILITIES OF OTHER DEVICES, ELECTRONIC DEVICE, AND SYSTEM**

AUFRUFEN VON FÄHIGKEITEN ANDERER VORRICHTUNGEN, ELEKTRONISCHE
VORRICHTUNG UND SYSTEM

APPEL DE CAPACITÉS D'AUTRES DISPOSITIFS, DISPOSITIF ÉLECTRONIQUE ET SYSTÈME

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**

(30) Priority: 13.08.2020   CN 202010814247
09.11.2020   CN 202011240756
22.12.2020   CN 202011527018
22.12.2020   CN 202011529621
22.12.2020   CN 202011526935
22.12.2020   CN 202011527007

(43) Date of publication of application:
**31.05.2023 Bulletin 2023/22**

(73) Proprietor: **Huawei Technologies Co., Ltd.**
**Shenzhen, Guangdong 518129 (CN)**

(72) Inventors:
• **LIU, Min**
**Shenzhen, Guangdong 518129 (CN)**
• **DU, Zhong**
**Shenzhen, Guangdong 518129 (CN)**
• **DING, Ning**
**Shenzhen, Guangdong 518129 (CN)**
• **HU, Kai**
**Shenzhen, Guangdong 518129 (CN)**
• **ZHANG, Dezhou**
**Shenzhen, Guangdong 518129 (CN)**
• **BIAN, Sucheng**
**Shenzhen, Guangdong 518129 (CN)**
• **ZHOU, Xingchen**
**Shenzhen, Guangdong 518129 (CN)**
• **ZHANG, Li**
**Shenzhen, Guangdong 518129 (CN)**

- **TANG, Wuquan**
  **Shenzhen, Guangdong 518129 (CN)**
- **YU, Ping**
  **Shenzhen, Guangdong 518129 (CN)**
- **DU, Yiquan**
  **Shenzhen, Guangdong 518129 (CN)**
- **WANG, Yaojun**
  **Shenzhen, Guangdong 518129 (CN)**
- **YAN, Yulin**
  **Shenzhen, Guangdong 518129 (CN)**
- **YUE, Yi**
  **Shenzhen, Guangdong 518129 (CN)**
- **MA, Liangchuan**
  **Shenzhen, Guangdong 518129 (CN)**

(74) Representative: **Pfenning, Meinig & Partner mbB**
     **Patent- und Rechtsanwälte**
     **Theresienhöhe 11a**
     **80339 München (DE)**

(56) References cited:
    **CN-A- 1 361 622**     **CN-A- 105 549 870**
    **CN-A- 106 202 308**   **CN-A- 106 257 392**
    **CN-A- 109 782 997**   **CN-A- 111 049 935**
    **US-A1- 2011 047 214** **US-A1- 2016 366 541**

(52) Cooperative Patent Classification (CPC): (Cont.)
    H04W 84/12; H04W 84/18

**Description**

**TECHNICAL FIELD**

This application relates to the terminal field, and more specifically, to a method for invoking a capability of another device, a system, a chip, a computer-readable storage medium and a computer program product.

**BACKGROUND**

Currently, users have more devices, more devices are linked together, and technologies such as projection and multi-screen interaction appear successively. However, most of existing inter-device linkage technologies are limited to interface convergence and file transfer. In most cases, the users may need to complete some difficult tasks on a single device, but a capability of the single device is limited. This brings inconvenience to user's operations. US 2011/047214 A1 describes a method of sharing a function via a network includes selecting a second device having a shared function desired by a first device from among at least one device connected to the network, linking the first device with the second device via the network, transmitting original multimedia content from the first device to the second device via the network, and performing the shared function with respect to the original multimedia content in the second device and transmitting result data of the performing of the shared function to the first device via the network.

**SUMMARY**

The present invention provides a method for invoking a capability of another device, a system , a chip, a computer-readable storage medium and a computer program product according to the independent claims, so that a user can use a function of another device on one device. This improves a degree of intelligence of the electronic device, and improves user experience. Particular embodiments are defined in the dependent claims.

According to a first aspect, a system is provided. The system includes a first electronic device and a second electronic device. The first electronic device is configured to request capability information of the second electronic device. The second electronic device is configured to send the capability information to the first electronic device, where the capability information includes one or more functions, and the one or more functions include a first function. The first electronic device is further configured to send first content and first request information to the second electronic device when detecting a first operation of a user, where the first request information is used to request the second electronic device to process the first content by using the first function. The second electronic device is further configured to: process the first content based on the first request information by using the first function, and send a processing result of the first content to the first electronic device. The first electronic device is further configured to prompt the user with the processing result.

In this embodiment of this application, the user can use a function of the second electronic device on the first electronic device, so as to extend a capability boundary of the first electronic device. This helps conveniently and efficiently complete a relatively difficult task of the first electronic device, and helps improve user experience.

In some possible implementations, an interface of the second electronic device may not change in a process in which the second electronic device receives the first content and the first request information, and sends the processing result of the first content to the first electronic device.

In some possible implementations, the first electronic device is specifically configured to display the function list when detecting an operation that the user selects the first content and an operation that the user clicks the right mouse button.

In some possible implementations, the type of the first content is text, and functions in the function list may include word extraction and translation. The type of the first content is a picture, and functions in the function list may include object recognition and shopping.

According to the first aspect, the first electronic device is specifically configured to: display a function list in response to receiving the capability information, where the function list includes the one or more functions; in response to detecting an operation that the user selects the first function from the one or more functions, start to detect content selected by the user; and in response to an operation that the user selects the first content, send the first content and the first request information to the second electronic device.

In this embodiment of this application, after receiving the capability information sent by the second electronic device, the first electronic device may display the function list. The function list may display the one or more functions of the second electronic device. After selecting the first function, the user may select content that needs to be processed. This helps the user process the first content by using the first function, and helps improve user experience.

According to the first aspect, the first electronic device is specifically configured to send the first content and the first request information to the second electronic device in response to detecting an operation that the user selects the first content, but does not select other content within preset duration elapsed since the user selects the first content.

In this embodiment of this application, the first electronic device may send the first content and the first request information to the second electronic device when detecting the operation that the user selects the first content, but does not select other content within the preset duration. This helps improve accuracy of detecting content selected by the user by the first electronic device, and helps improve user experience.

According to the first aspect, the first electronic device is further configured to send second content and second request information to the second electronic device in response to detecting an operation that the user selects the second content, where the second request information is used to request the second electronic device to process the second content by using the first function.

In this embodiment of this application, after the user selects the first content, if the first electronic device continues to detect the operation that the user selects the second content, the user does not need to tap the first function again, and the first electronic device may directly send the second content and the second request information to the second electronic device. This helps improve convenience of processing the second content by the user by using the first function, and helps improve user experience.

With reference to the first aspect, in some implementations of the first aspect, the first function is a text editing function, and the first electronic device is specifically configured to: obtain audio content when detecting the first operation; and display first text content corresponding to the audio content, and send the first text content and the first request information to the second electronic device, where the first request information is used to request the second electronic device to perform text editing on the first text content. The second electronic device is specifically configured to: display the first text content in response to receiving the first text content and the first request information; display second text content in response to detecting an editing operation performed by the user on the first text content, where the second text content is text content obtained after the first text content is edited; and send the second text content to the first electronic device. The first electronic device is specifically configured to replace the first text content with the second text content.

In this embodiment of this application, after obtaining the audio content, the first electronic device may send the first text content corresponding to the audio content to the second electronic device, and request the second electronic device to edit the first text content. After detecting that the user edits the first text content, the second electronic device may send the second text content obtained after the editing to the first electronic device, so that the first electronic device can replace the first text content with the second text content.

For example, because a mobile phone has a relatively small screen and has no keyboard, it is inconvenient for the user to perform an editing operation. After determining that a notebook computer has a text editing function, the mobile phone may send first text content corresponding to obtained audio content to the notebook computer. After detecting editing performed by the user on the first text content, the notebook computer sends second text content obtained after editing to the mobile phone, so that the mobile phone can replace the first text content with the second text content. This can improve efficiency of performing text editing by the user.

In some possible implementations, the first operation is an operation that the first electronic device detects that the user taps recording-to-text.

With reference to the first aspect, in some implementations of the first aspect, the editing operation includes a format modification operation on the first text content; and the second electronic device is further configured to send format information of the second text content to the first electronic device.

In this embodiment of this application, when detecting the format modification operation performed by the user on the first text content, the second electronic device may further send the format information of the second text content to the second electronic device. This helps the first electronic device determine character information of the second text content and format information corresponding to the character information, and helps improve efficiency of editing the text content by the user.

With reference to the first aspect, in some implementations of the first aspect, the format information of the second text content includes one or more of a font color, a font size, a font background color, a font tilt, or a font underline of the second text content, and a carriage return operation of the second text content.

With reference to the first aspect, in some implementations of the first aspect, the first content includes text content, the first function is a translation function, and the first electronic device is specifically configured to send the text content and the first request information to the second electronic device when detecting the first operation, where the first request information is used to request the second electronic device to translate the text content by using the translation function. The second electronic device is specifically configured to: translate the text content by using the translation function, and send a translation result to the first electronic device. The first electronic device is further configured to prompt the user with the translation result.

With reference to the first aspect, in some implementations of the first aspect, the first content includes image information, the first function is an object recognition function, and the first electronic device is specifically configured to send the image information and the first request information to the second electronic device when detecting the first operation, where the first request information is used to request the second electronic device to recognize an object in the image information by using the object recognition function. The second electronic device is specifically configured to: recognize the object in the image information by using the object recognition function, and send an object recognition result to the first electronic device. The first electronic device is further configured to prompt the user with the object recognition result.

With reference to the first aspect, in some implementations of the first aspect, the first content includes first image information, the first function is a retouching function, and the first electronic device is specifically configured to: display one or more image parameters when detecting the first operation, where the one or more image parameters include a first image parameter; and detect an operation that the user adjusts the first image parameter to a first value, and send the first image information and the first request information to the second electronic device, where the first request information is used to request the second electronic device to adjust the first image parameter of the first image information to the first value by using the retouching function. The second electronic device is specifically configured to: adjust the first image parameter of the first image information to the first value by using the retouching function, to obtain second image information; and send the second image information to the first electronic device. The first electronic device is further configured to replace the first image information with the second image information.

According to a second aspect, a method for invoking a capability of another device is provided. The method is applied to a first electronic device, and the method includes: The first electronic device requests capability information of a second electronic device. The first electronic device receives the capability information sent by the second electronic device, where the capability information includes one or more functions, and the one or more functions include a first function. The first electronic device sends first content and first request information to the second electronic device when detecting a first operation of a user, where the first request information is used to request the second electronic device to process the first content by using the first function. The first electronic device receives a result of processing the first content by the second electronic device. The first electronic device prompts the user with the processing result.

In this embodiment of this application, the user can use a function of the second electronic device on the first electronic device, so as to extend a capability boundary of the first electronic device. This helps conveniently and efficiently complete a relatively difficult task of the first electronic device, and helps improve user experience.

According to the second aspect, that the first electronic device sends first content and first request information to the second electronic device when detecting a first operation of a user includes: The first electronic device displays a function list in response to receiving the capability information, where the function list includes the one or more functions. In response to detecting an operation that the user selects the first function from the one or more functions, the first electronic device starts to detect content selected by the user. In response to an operation that the user selects the first content, the first electronic device sends the first content and the first request information to the second electronic device.

In this embodiment of this application, after receiving the capability information sent by the second electronic device, the first electronic device may display the function list. The function list may display the one or more functions of the second electronic device. After selecting the first function, the user may select content that needs to be processed. This helps the user process the first content by using the first function, and helps improve user experience. According to the second aspect, that the first electronic device sends the first content and the first request information to the second electronic device in response to detecting an operation that the user selects the first function includes: The first electronic device sends the first content and the first request information to the second electronic device in response to detecting an operation that the user selects the first content, but does not select other content within preset duration elapsed since the user selects the first content.

In this embodiment of this application, the first electronic device may send the first content and the first request information to the second electronic device when detecting the operation that the user selects the first content, but does not select other content within the preset duration. This helps improve accuracy of detecting content selected by the user by the first electronic device, and helps improve user experience.

According to the second aspect, the method further includes: The first electronic device sends second content and second request information to the second electronic device in response to detecting an operation that the user selects the second content, where the second request information is used to request the second electronic device to process the second content by using the first function.

In this embodiment of this application, after the user selects the first content, if the first electronic device continues to detect the operation that the user selects the second content, the user does not need to tap the first function again, and the first electronic device may directly send the second content and the second request information to the second electronic device. This helps improve convenience of processing the second content by the user by using the first function, and helps improve user experience. (Next paragraph: [0332])

## BRIEF DESCRIPTION OF DRAWINGS

FIG. 1 is a schematic diagram of a hardware structure of an electronic device according to an embodiment of this application;

FIG. 2 is a block diagram of a software structure according to an embodiment of this application;

FIG. 3(a) to FIG. 3(c) are a schematic diagram of a network architecture according to an embodiment of this application;

FIG. 4 shows a notification processing method according to an embodiment of this application;

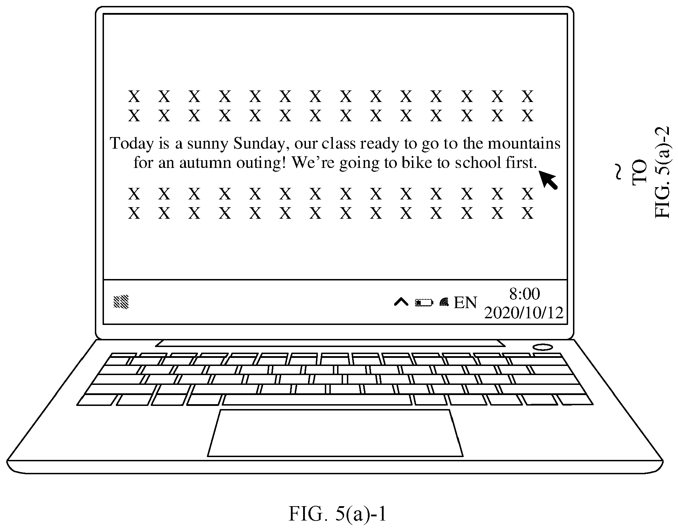

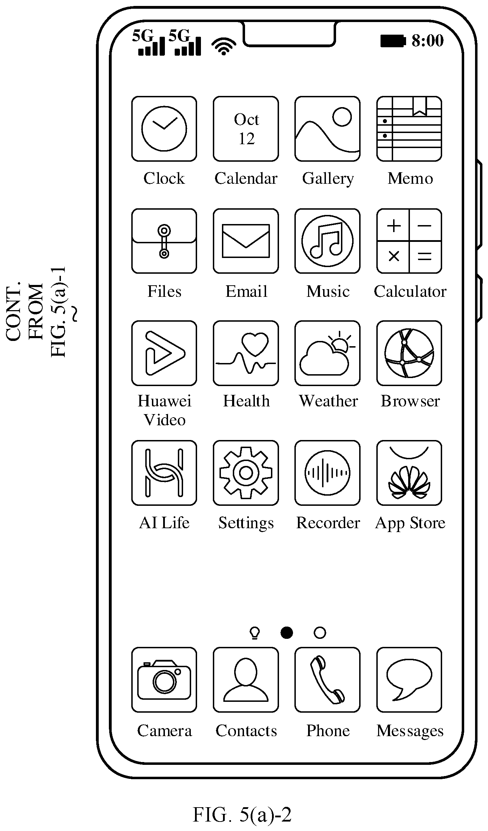

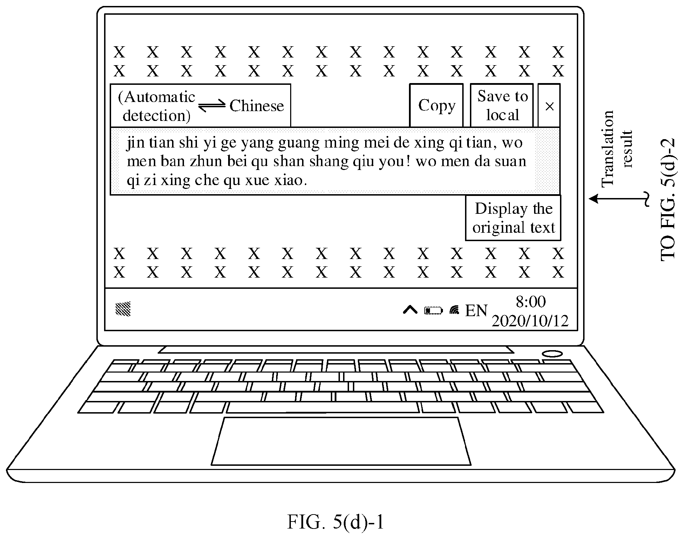

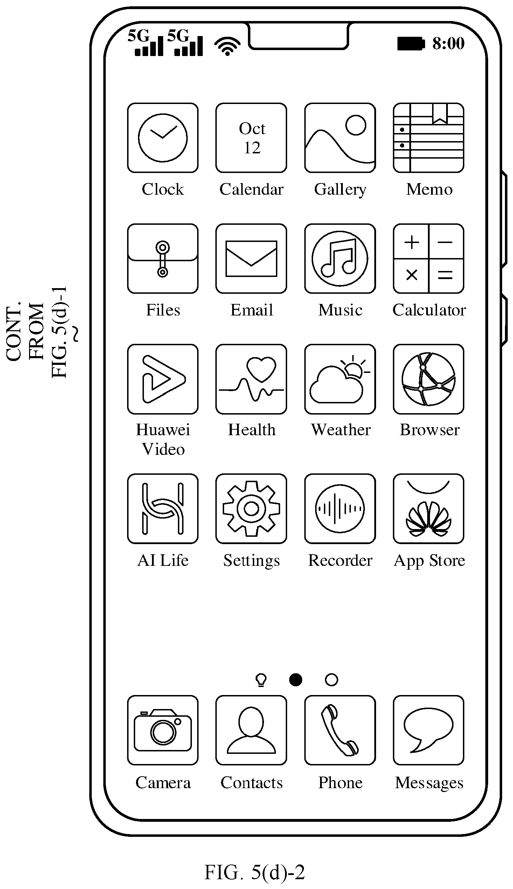

FIG. 5(a)-1 and FIG. 5(a)-2 to FIG. 5(d)-1 and FIG. 5(d)-2 show a group of graphical user interfaces according to an embodiment of this application;

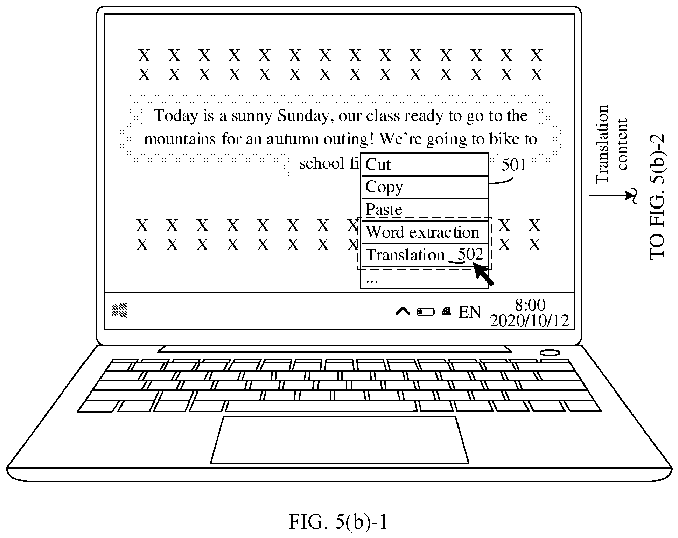

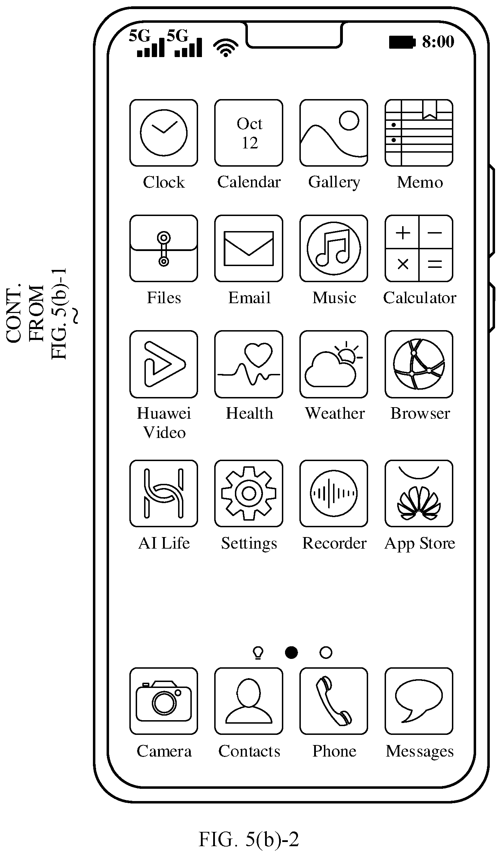

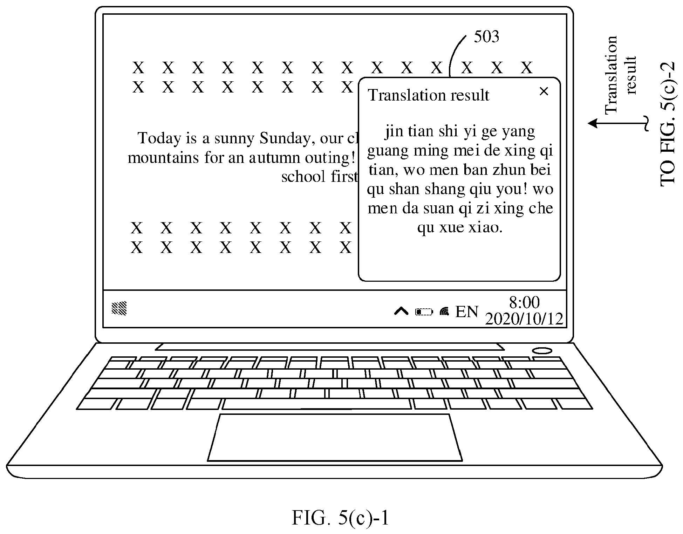

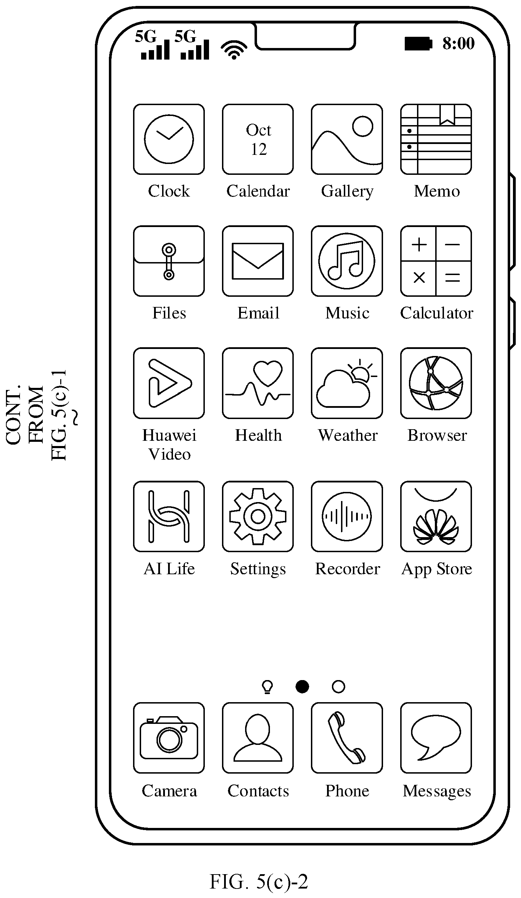

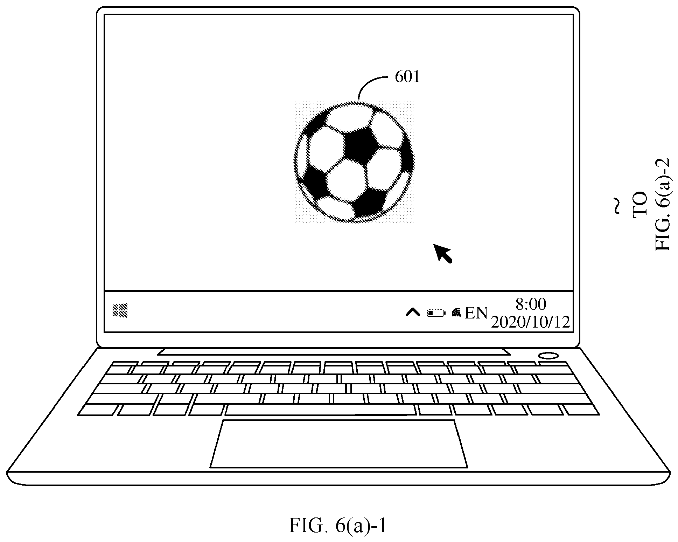

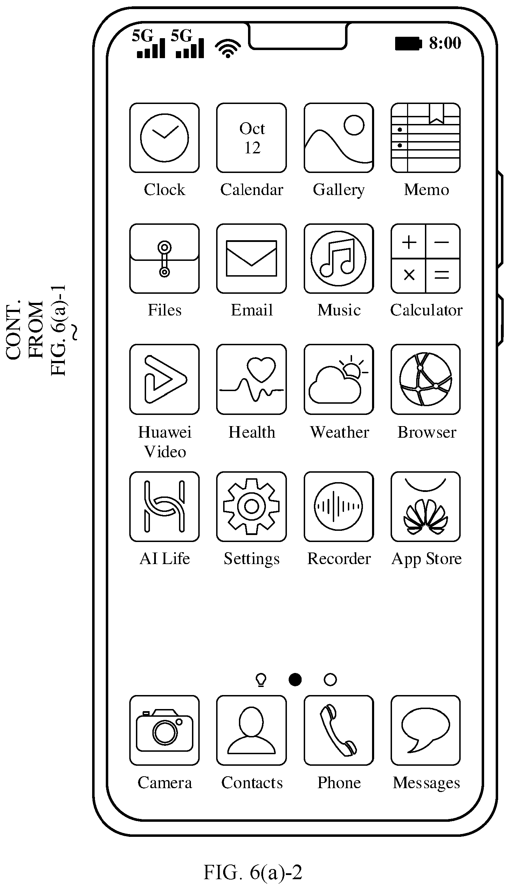

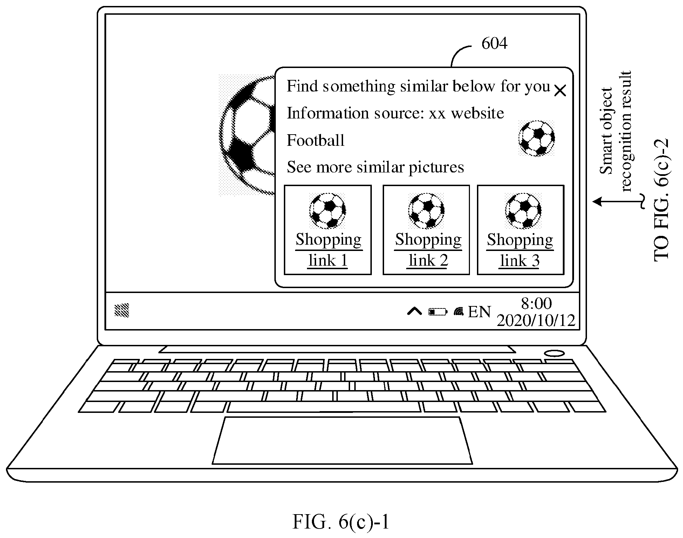

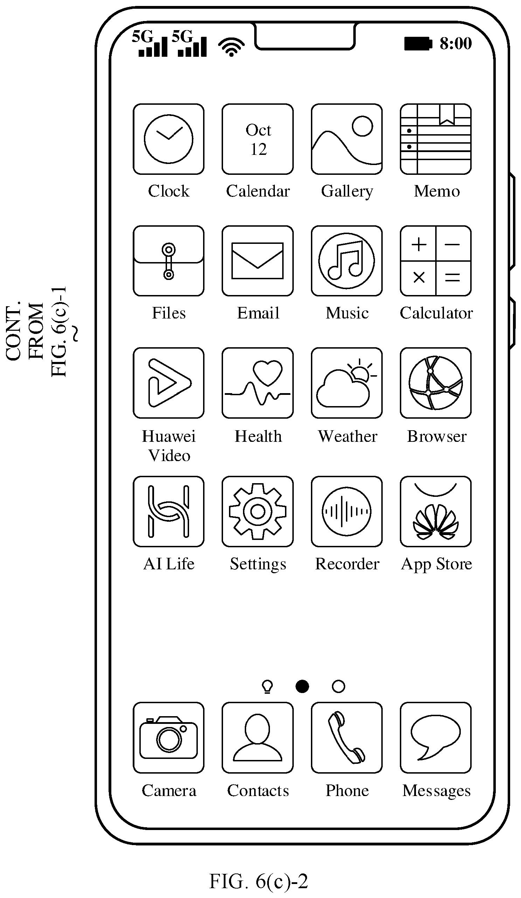

FIG. 6(a)-1 and FIG. 6(a)-2 to FIG. 6(c)-1 and FIG. 6(c)-2 show another group of graphical user interfaces according to an embodiment of this application;

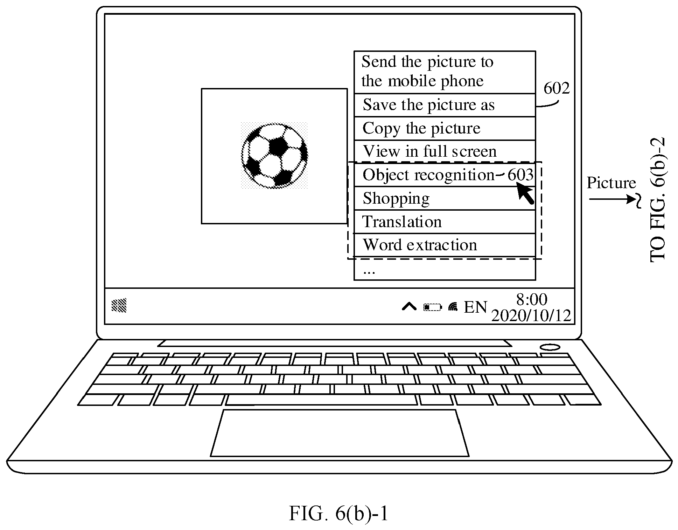

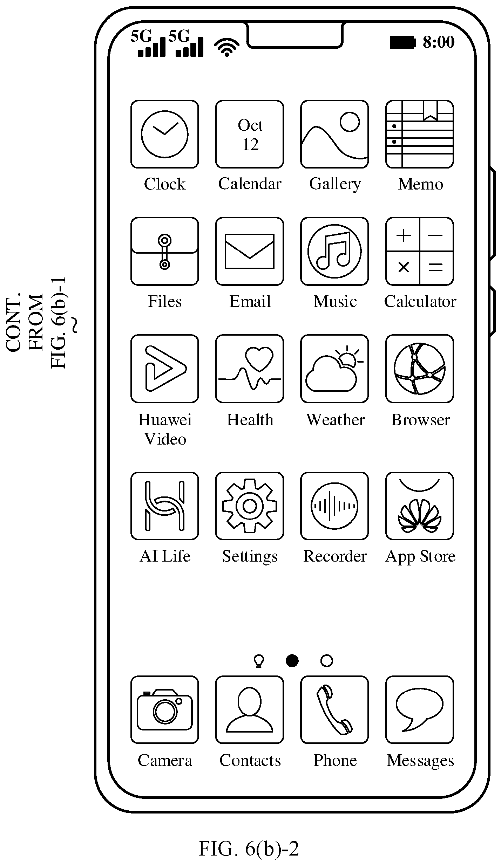

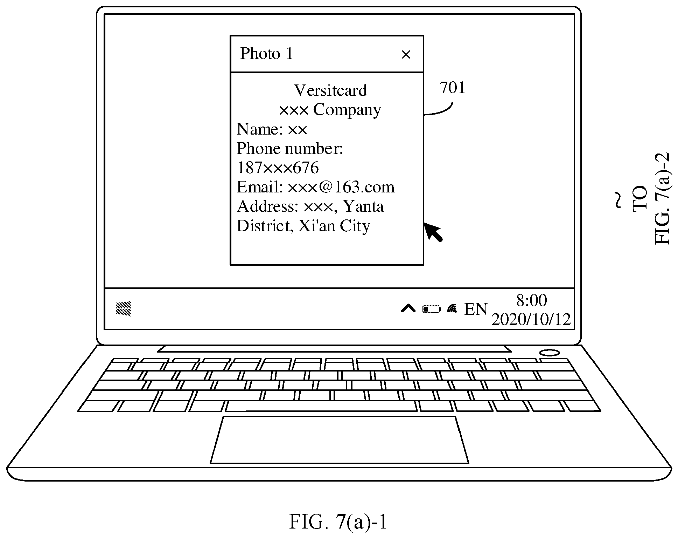

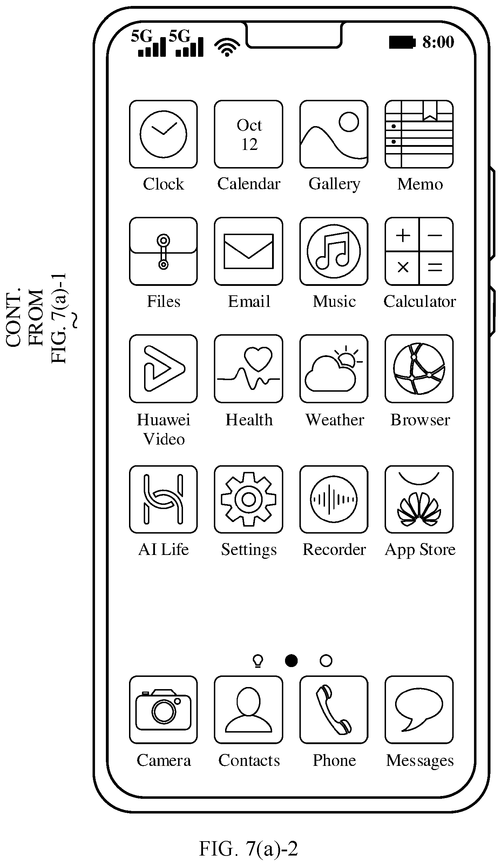

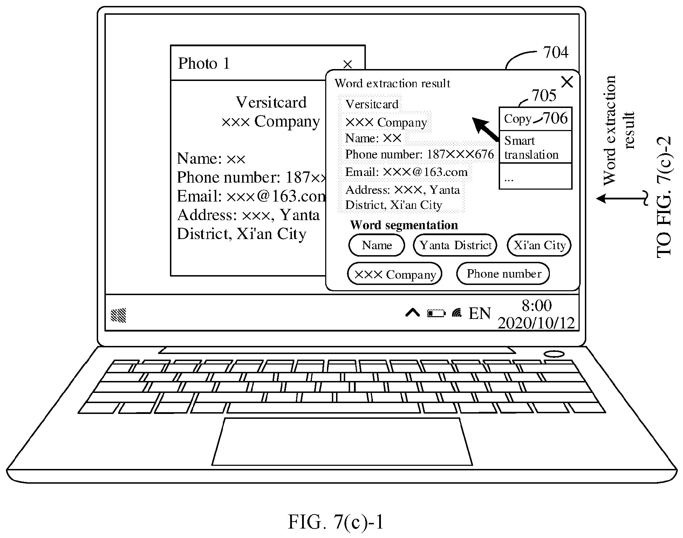

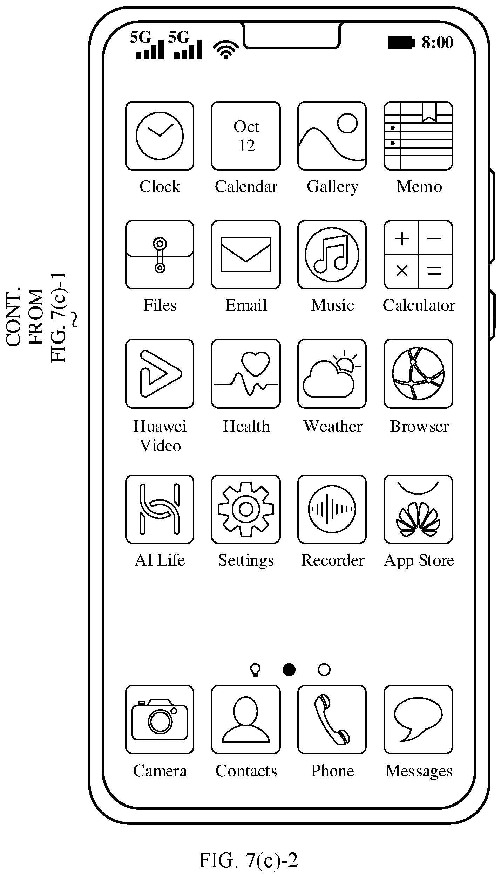

FIG. 7(a)-1 and FIG. 7(a)-2 to FIG. 7(c)-1 and FIG. 7(c)-2 show another group of graphical user interfaces according to an embodiment of this application;

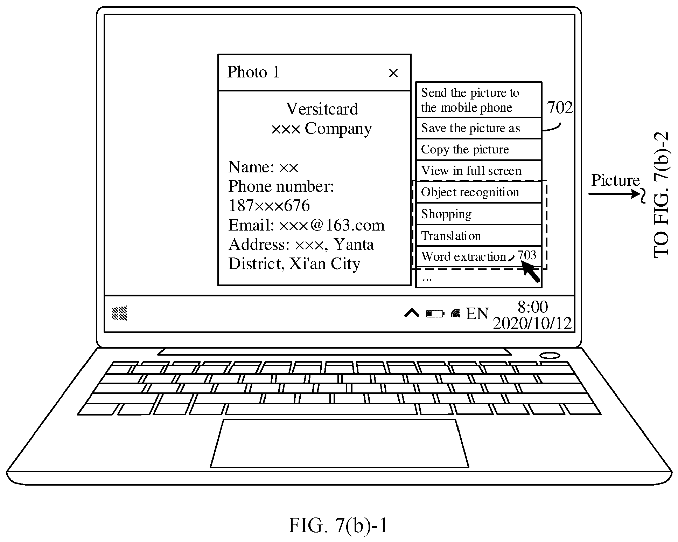

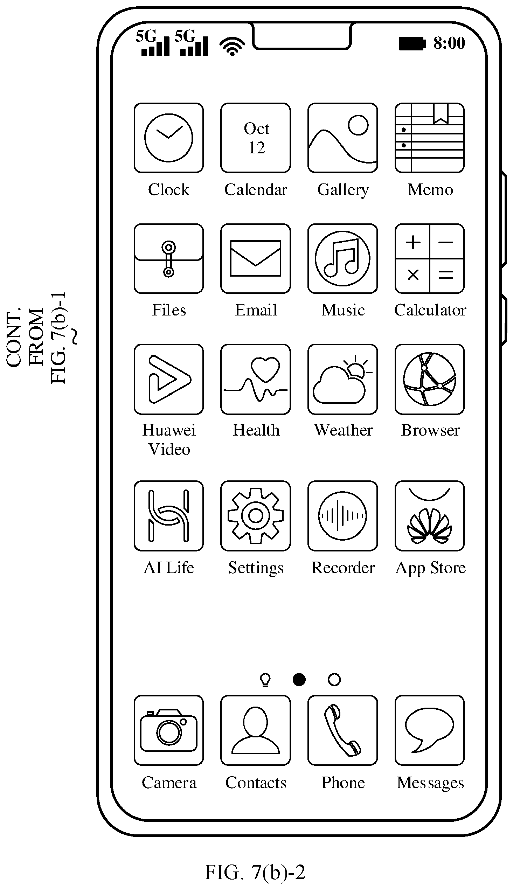

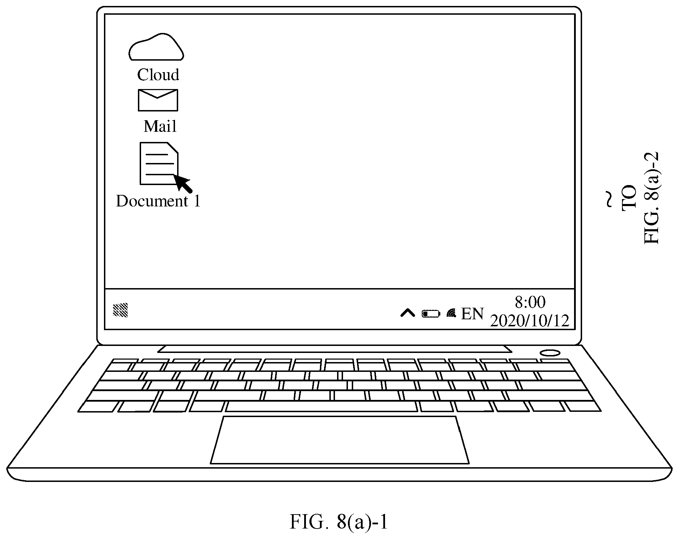

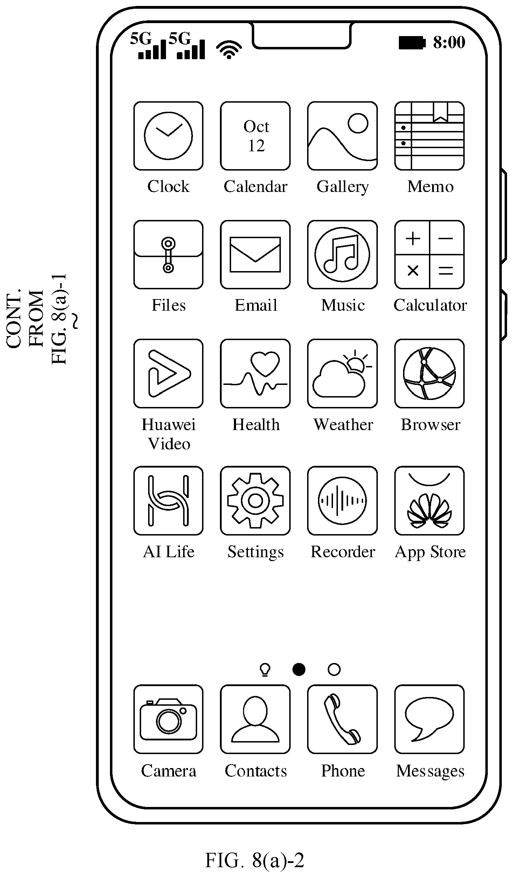

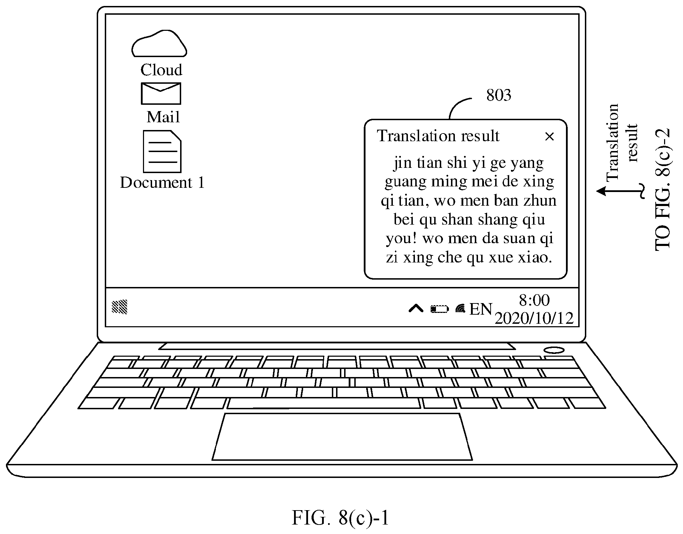

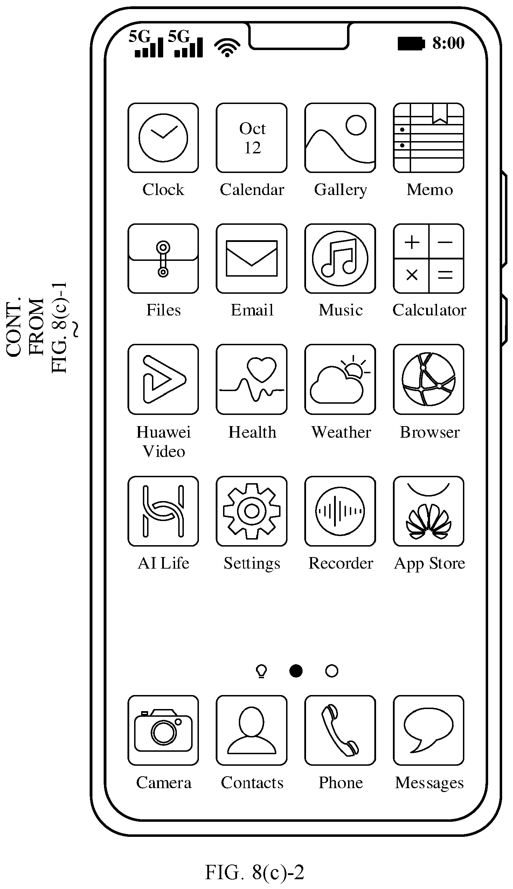

FIG. 8(a)-1 and FIG. 8(a)-2 to FIG. 8(c)-1 and FIG. 8(c)-2 show another group of graphical user interfaces according to an embodiment of this application;

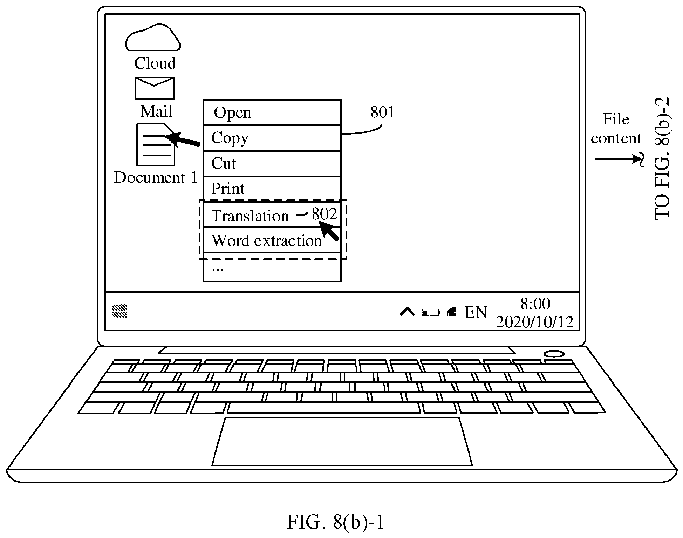

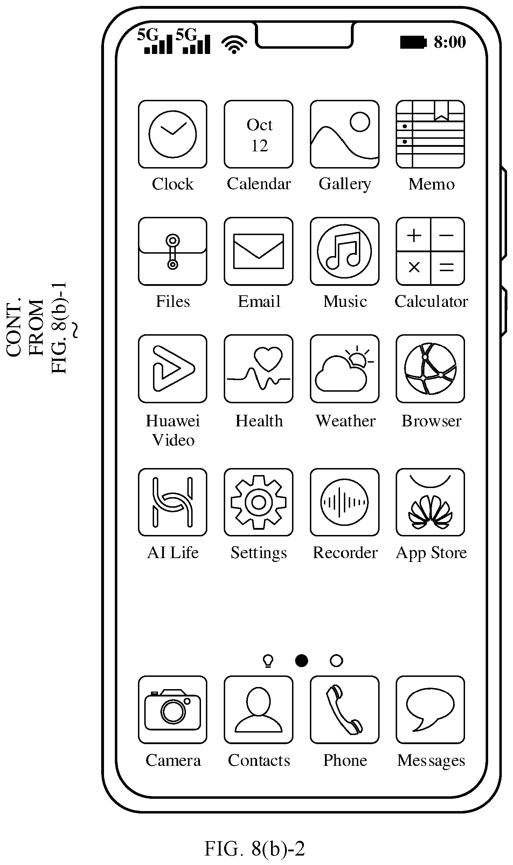

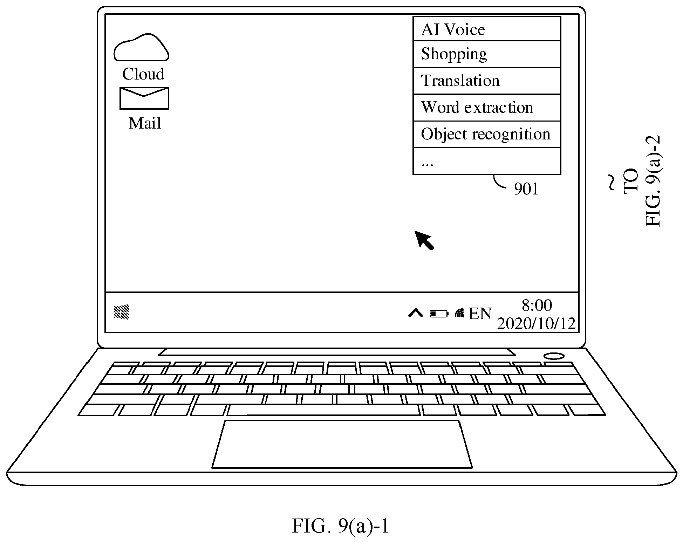

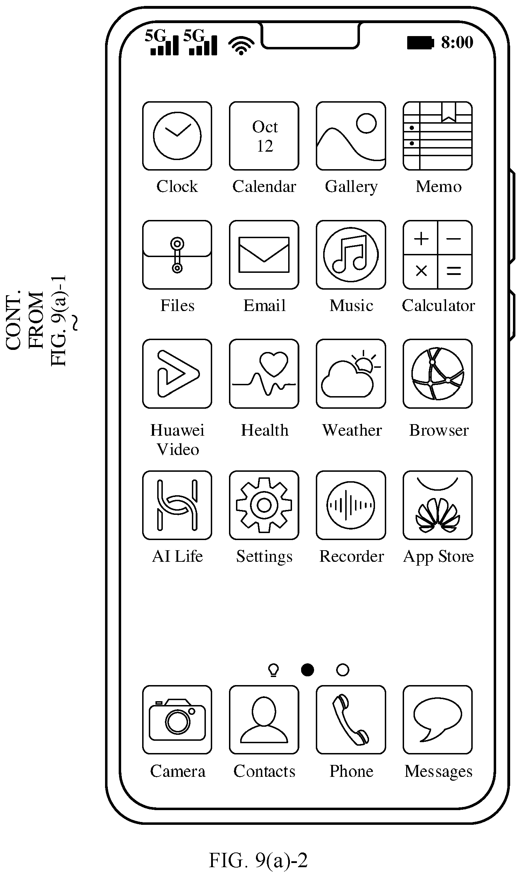

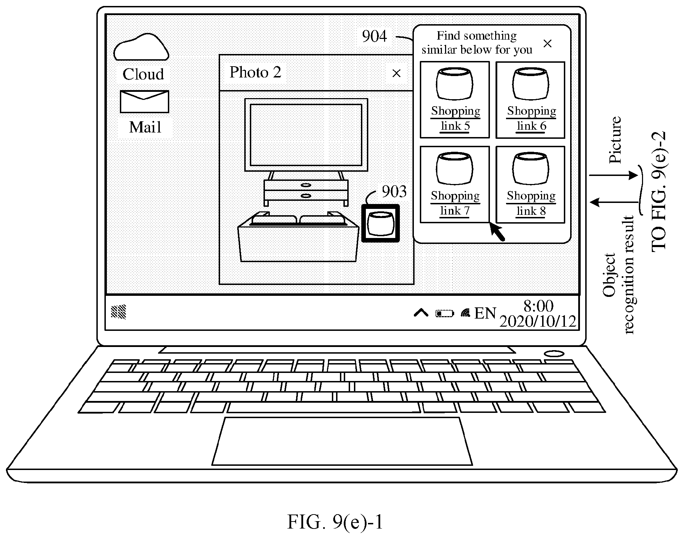

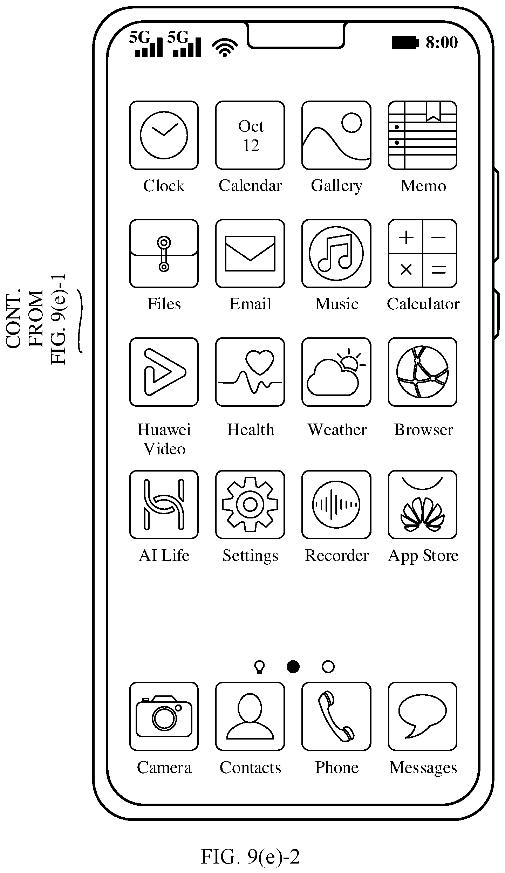

FIG. 9(a)-1 and FIG. 9(a)-2 to FIG. 9(e)-1 and FIG. 9(e)-2 show another group of graphical user interfaces according to an embodiment of this application;

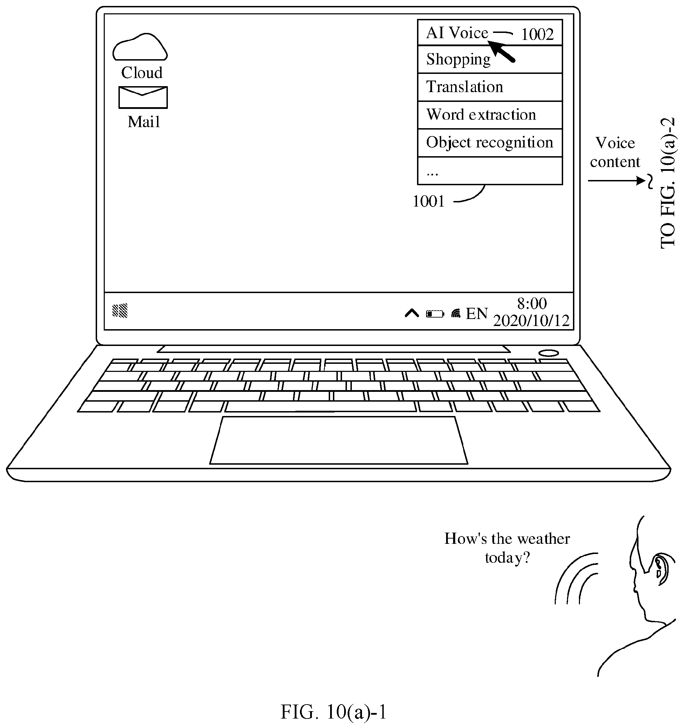

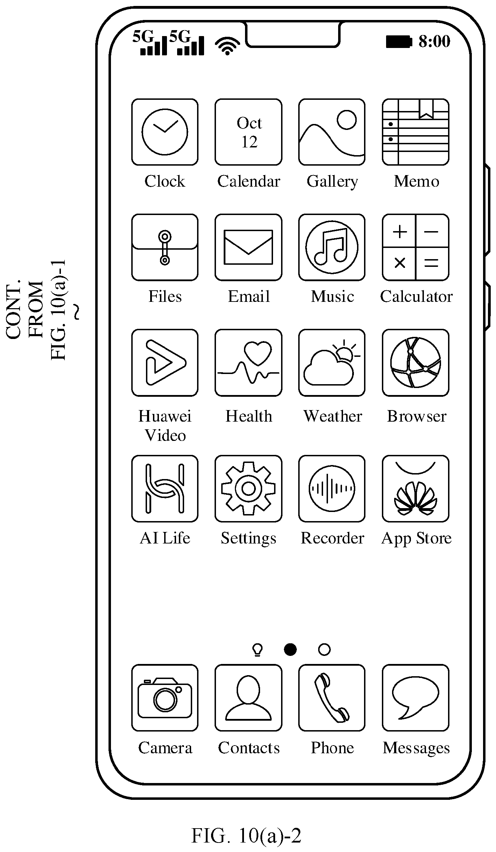

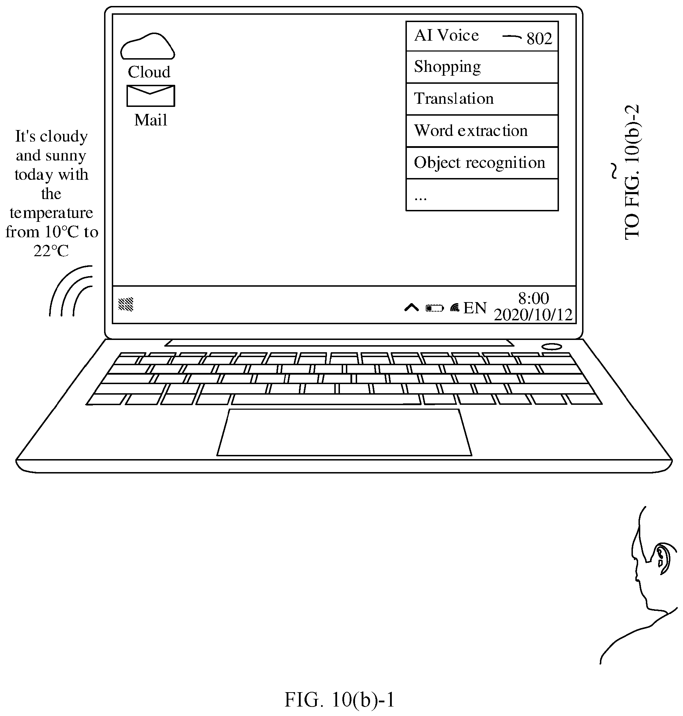

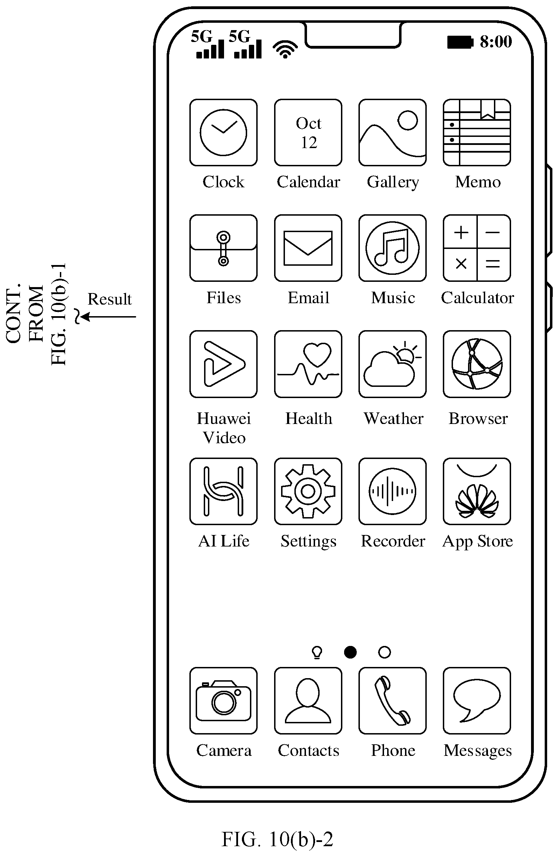

FIG. 10(a)-1 and FIG. 10(a)-2 and FIG. 10(b)-1 and FIG. 10(b)-2 show another group of graphical user interfaces according to an embodiment of this application;

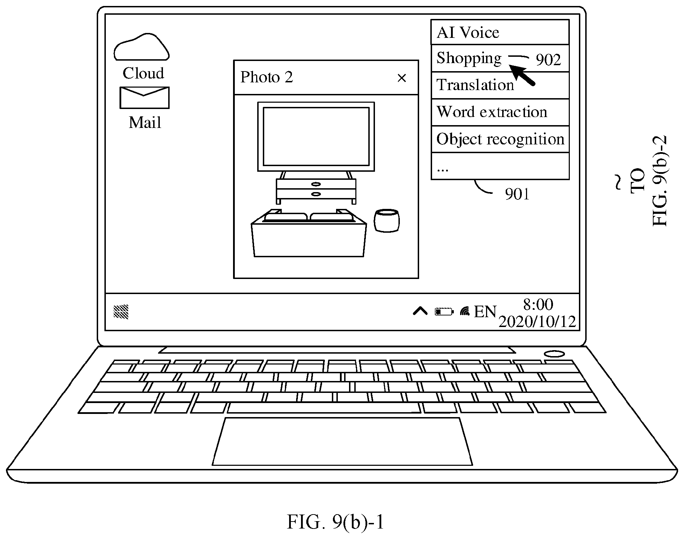

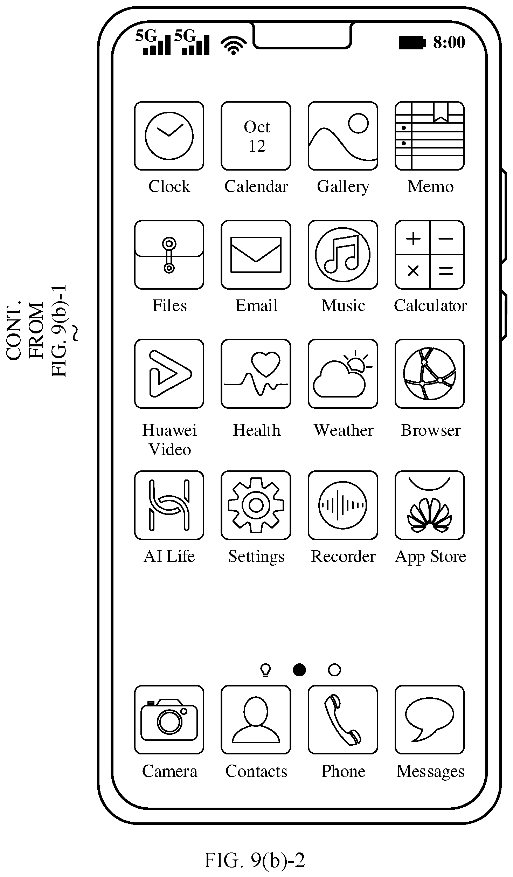

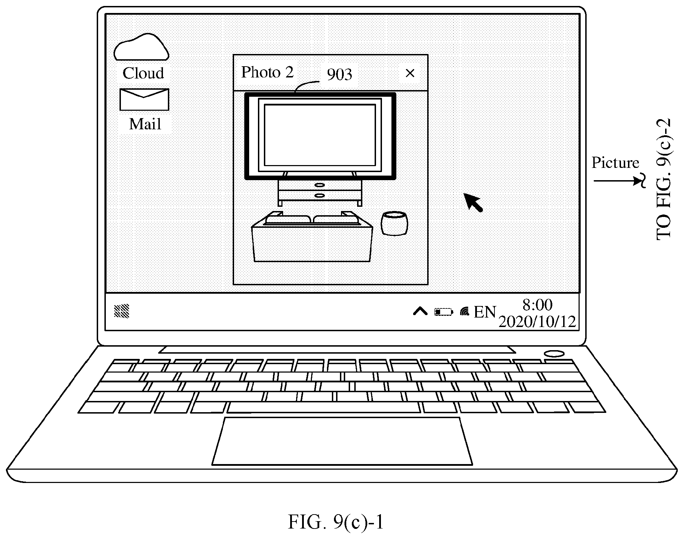

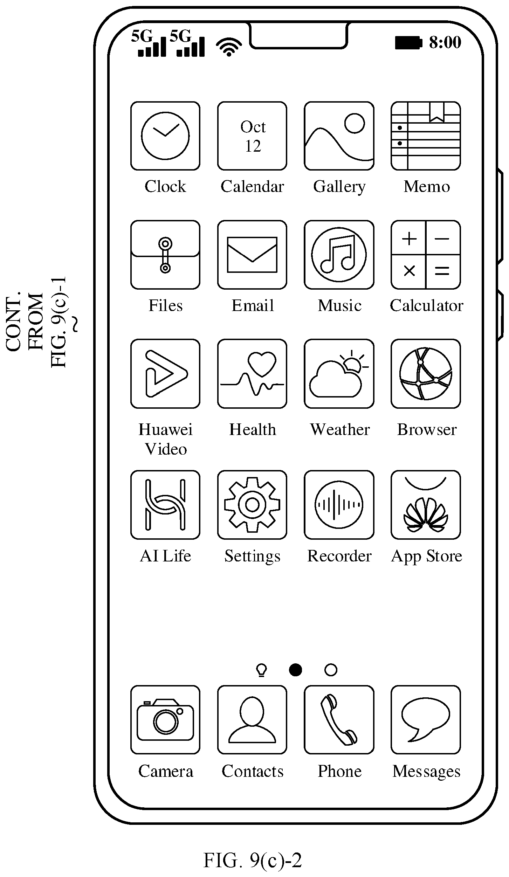

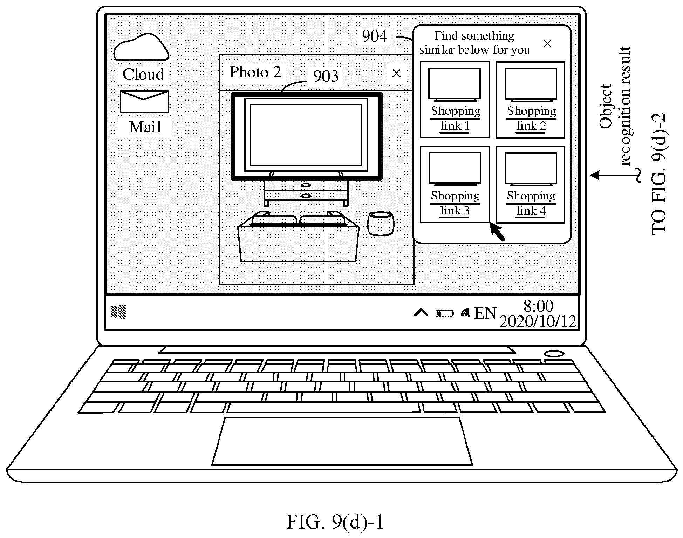

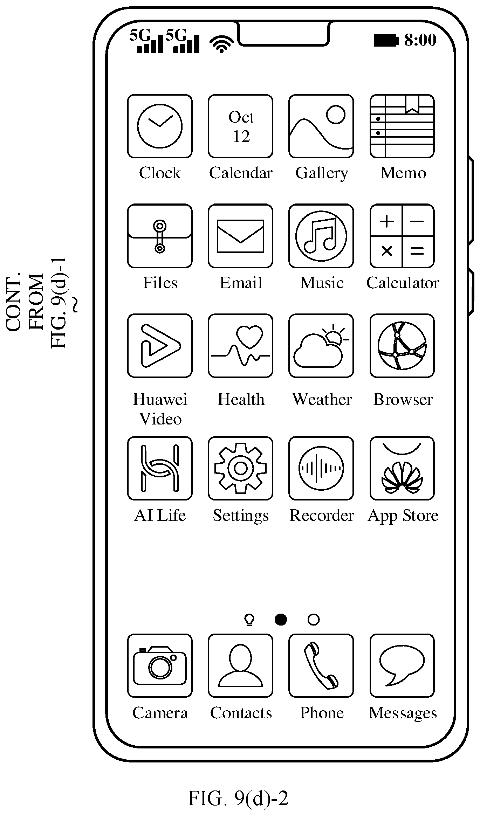

FIG. 11(a)-1 to FIG. 11(a)-3 to FIG. 11(e) show another group of graphical user interfaces according to an embodiment of this application;

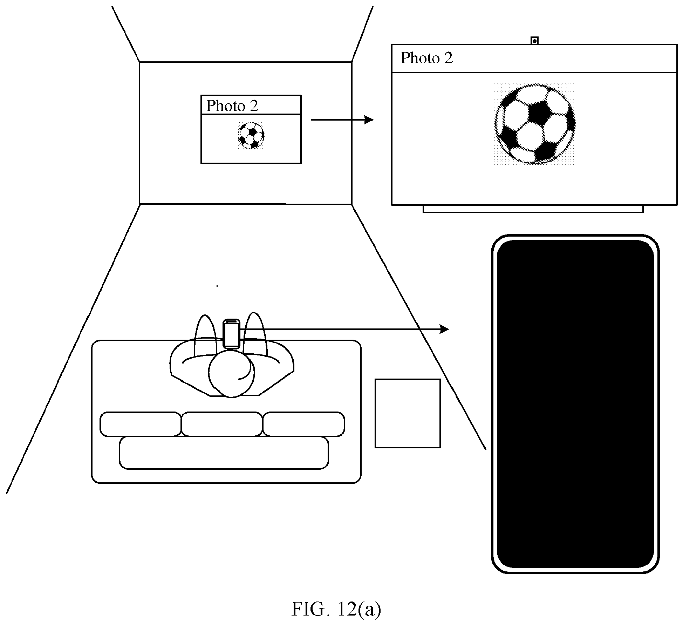

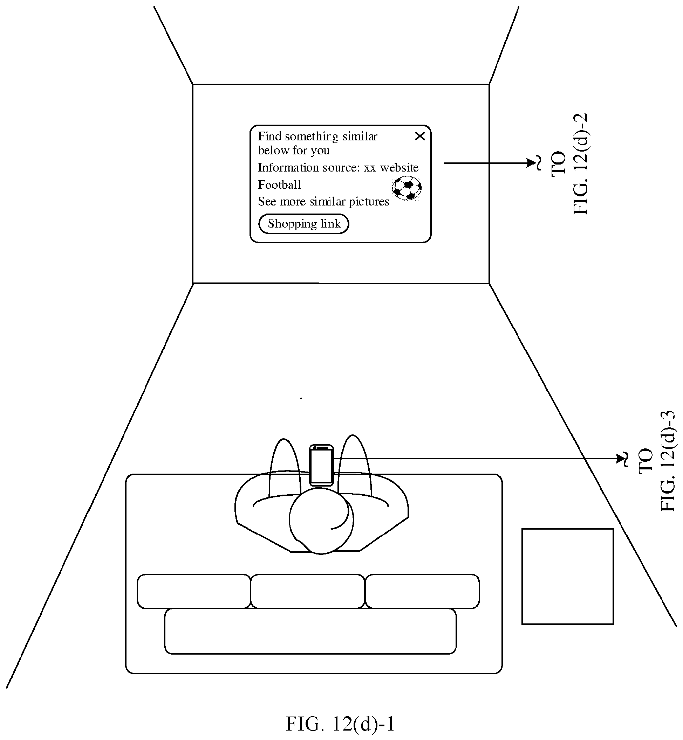

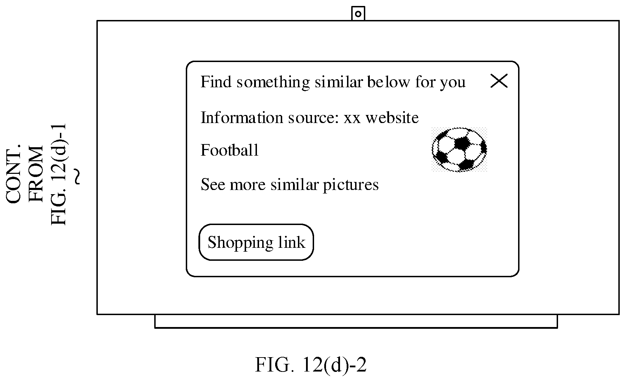

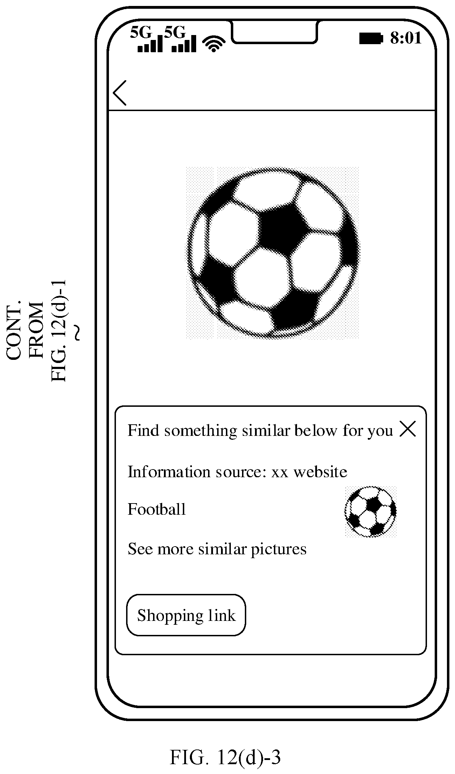

FIG. 12(a) to FIG. 12(d)-1 to FIG. 12(d)-3 show another group of graphical user interfaces according to an embodiment of this application;

FIG. 13(a)-1 to FIG. 13(a)-3 to FIG. 13(c) show another group of graphical user interfaces according to an embodiment of this application;

FIG. 14(a)-1 to FIG. 14(a)-3 to FIG. 14(f) show another group of graphical user interfaces according to an embodiment of this application;

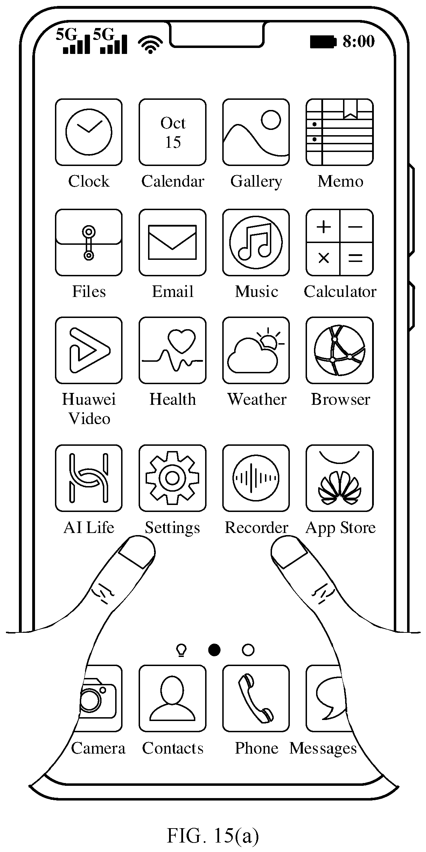

FIG. 15(a) to FIG. 15(e) show another group of graphical user interfaces according to an embodiment of this application;

FIG. 16(a)-1 to FIG. 16(a)-3 to FIG. 16(e) show another group of graphical user interfaces according to an embodiment of this application;

FIG. 17(a)-1 to FIG. 17(a)-3 to FIG. 17(e) show another group of graphical user interfaces according to an embodiment of this application;

FIG. 18(a)-1 to FIG. 18(a)-3 to FIG. 18(c)-1 to FIG. 18(c)-3 show another group of graphical user interfaces according to an embodiment of this application;

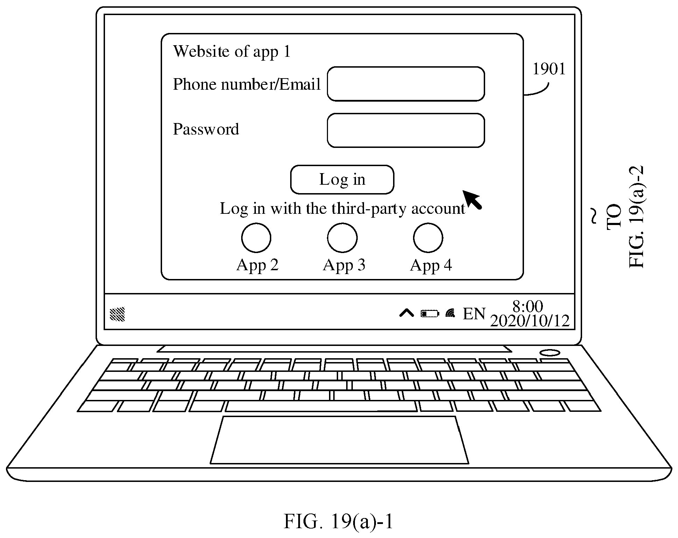

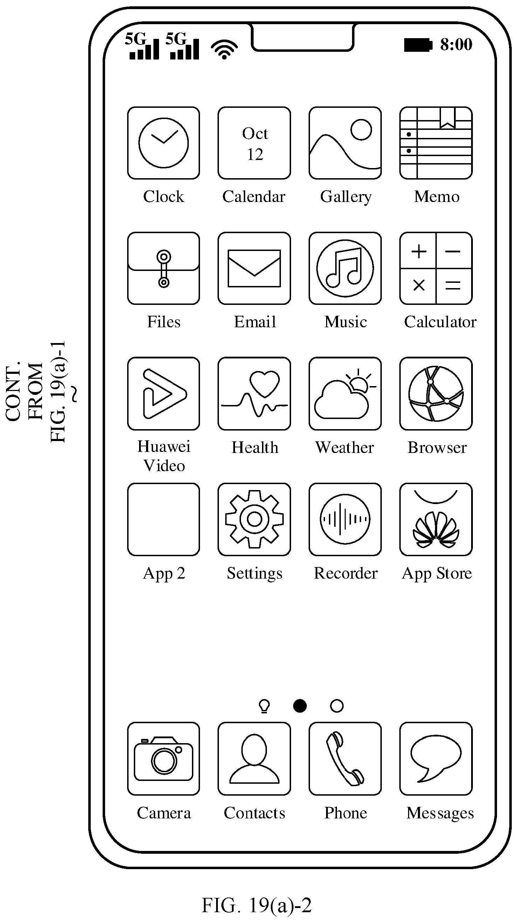

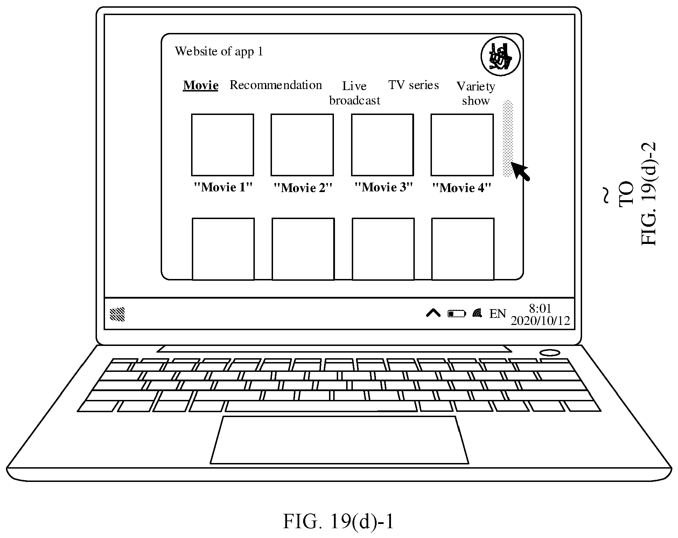

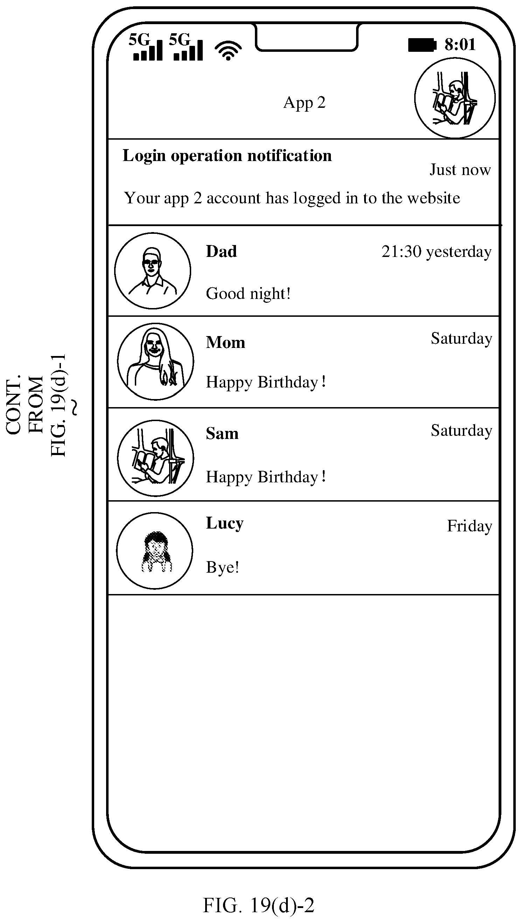

FIG. 19(a)-1 and FIG. 19(a)-2 to FIG. 19(d)-1 and FIG. 19(d)-2 show another group of graphical user interfaces according to an embodiment of this application;

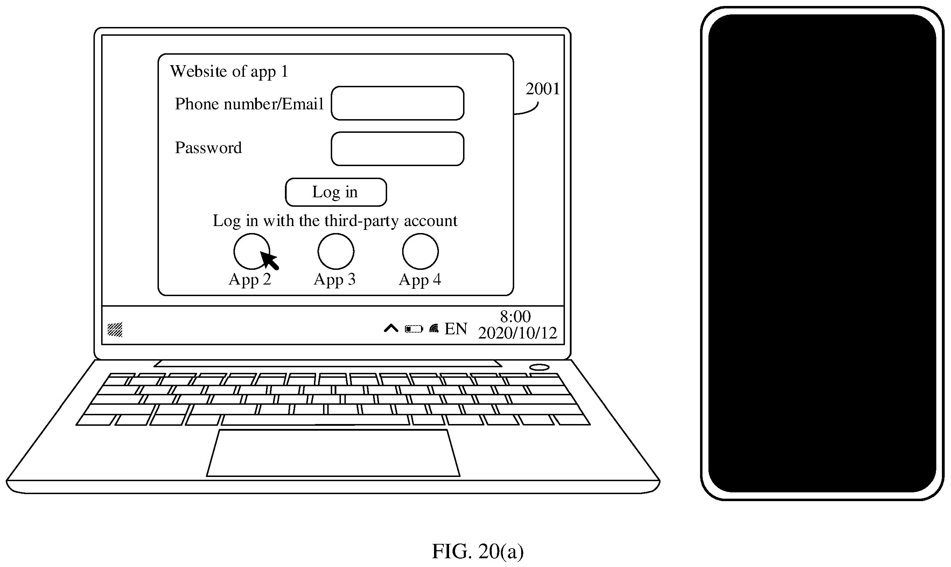

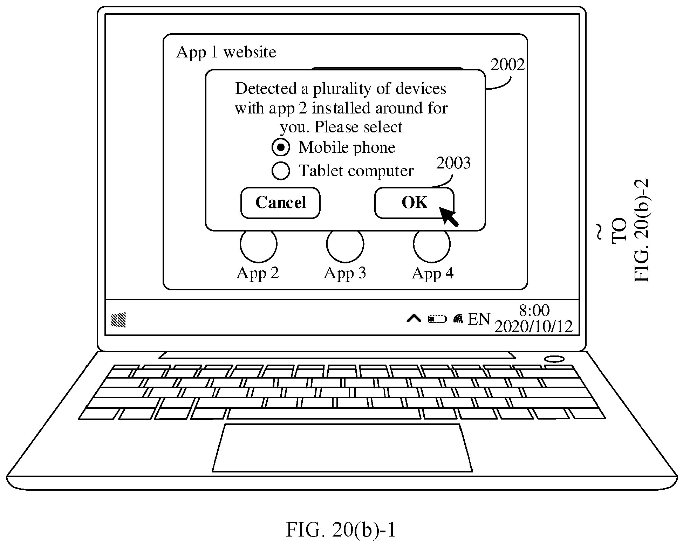

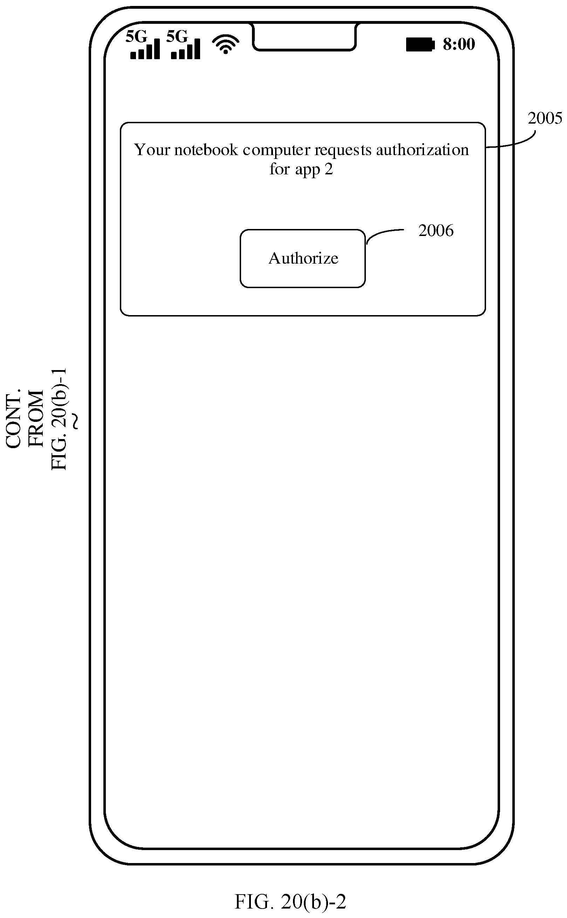

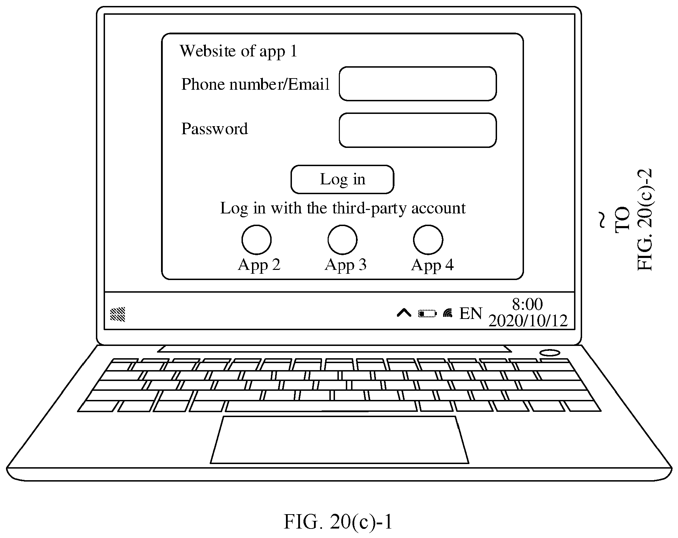

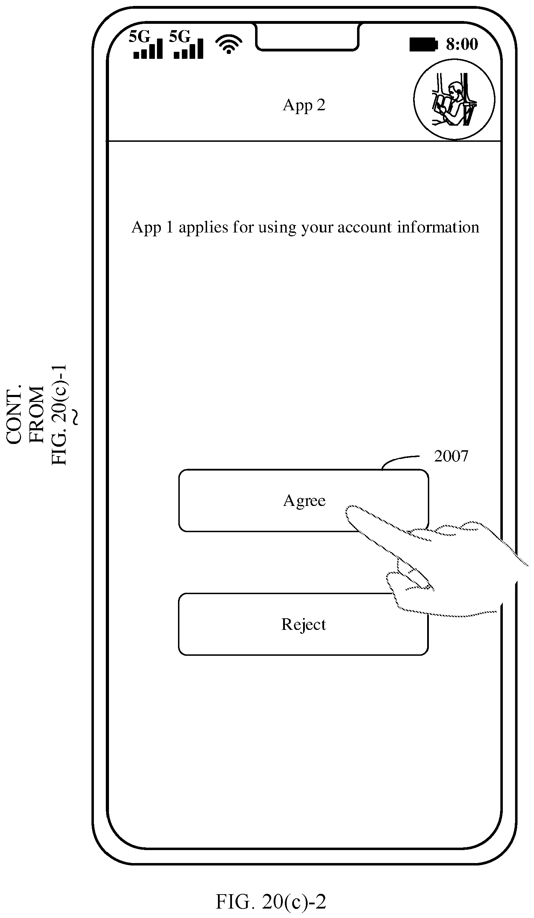

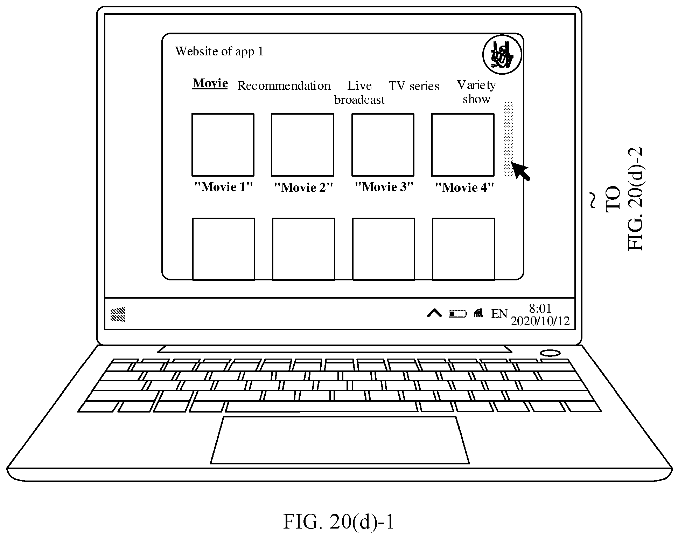

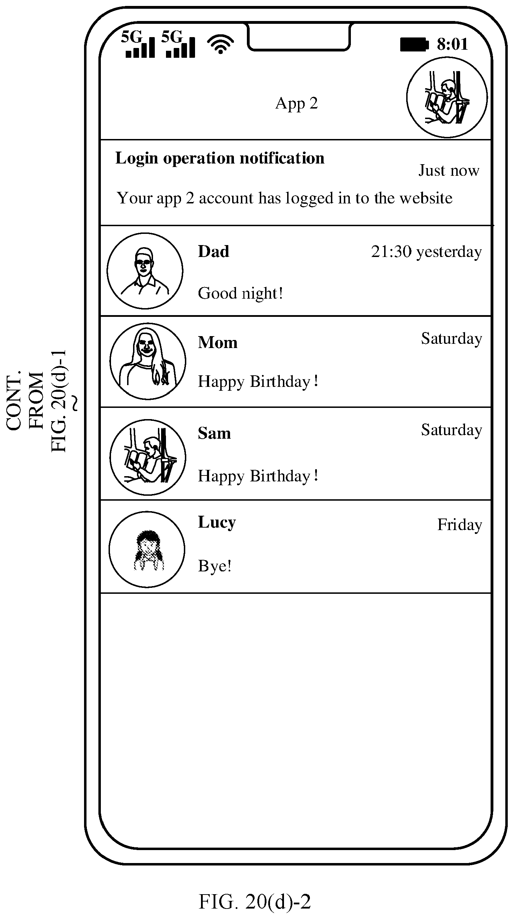

FIG. 20(a) to FIG. 20(d)-1 and FIG. 20(d)-2 show another group of graphical user interfaces according to an embodiment of this application;

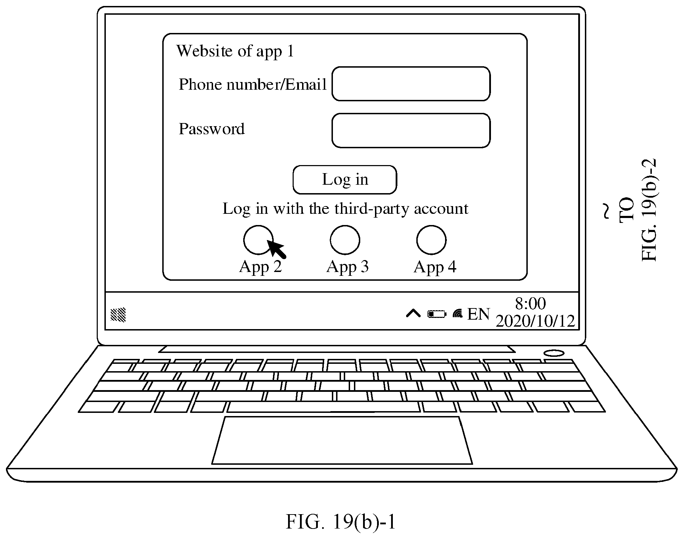

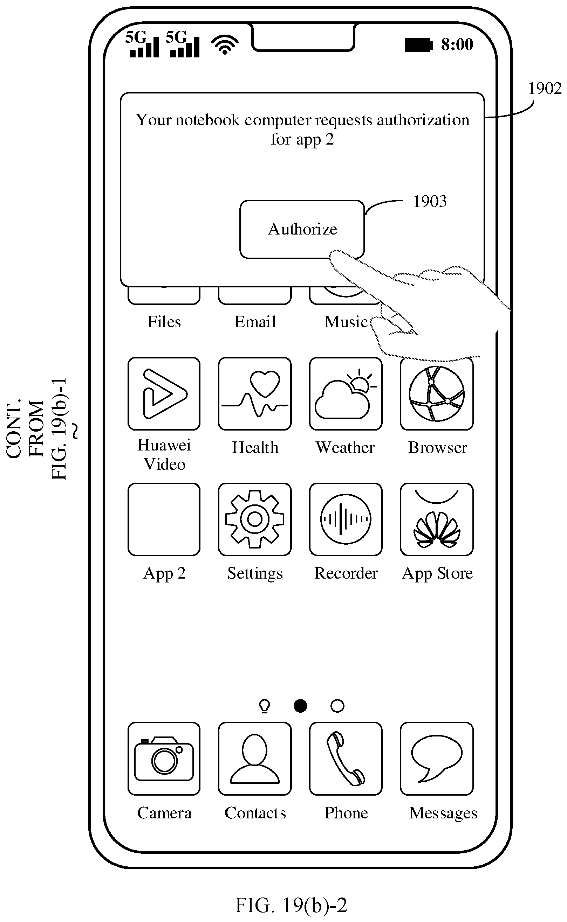

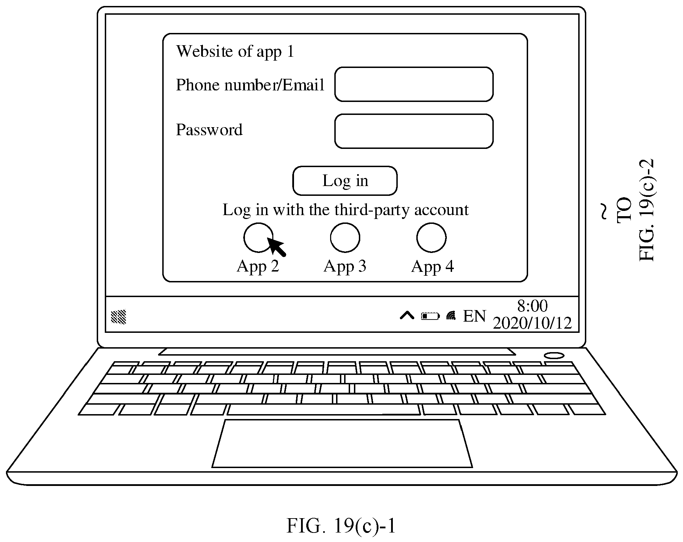

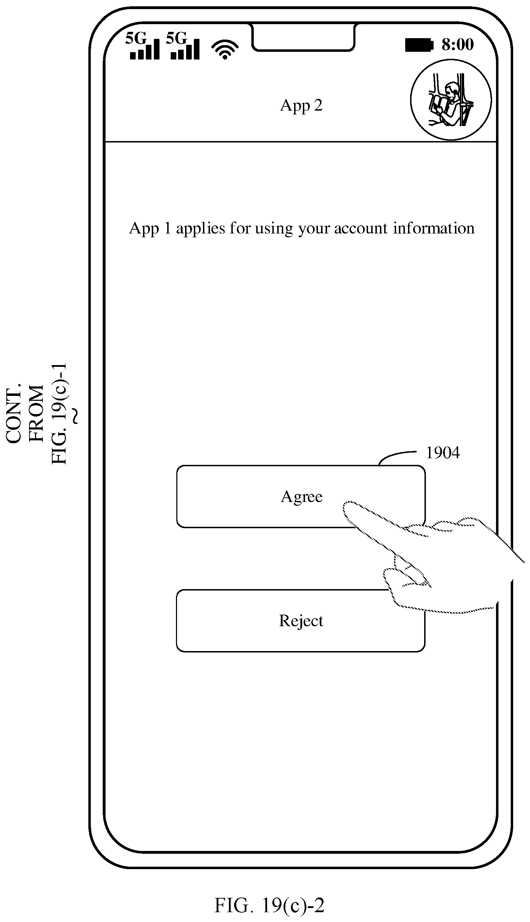

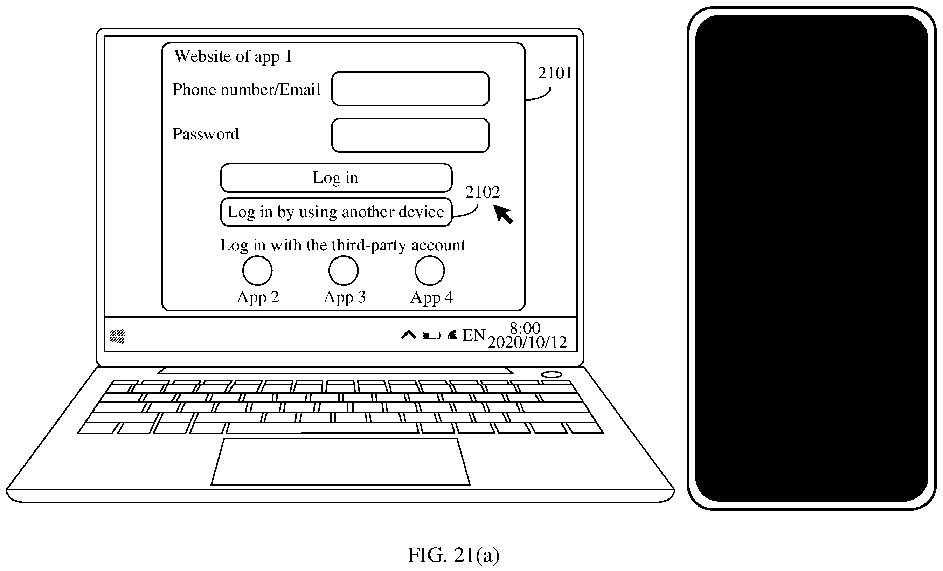

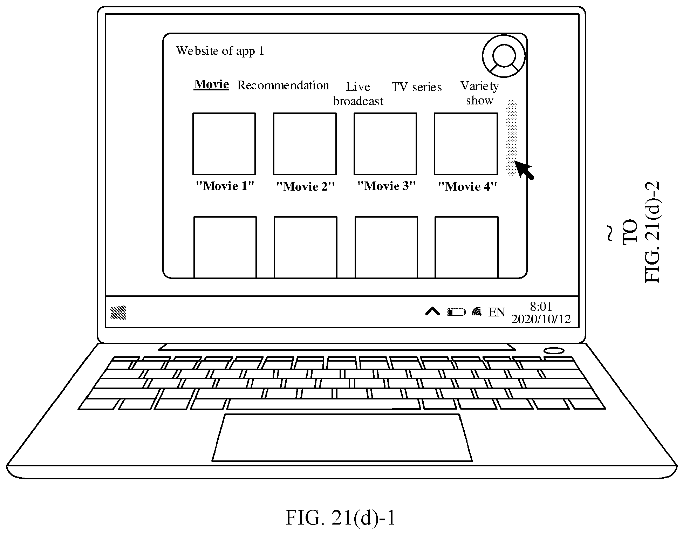

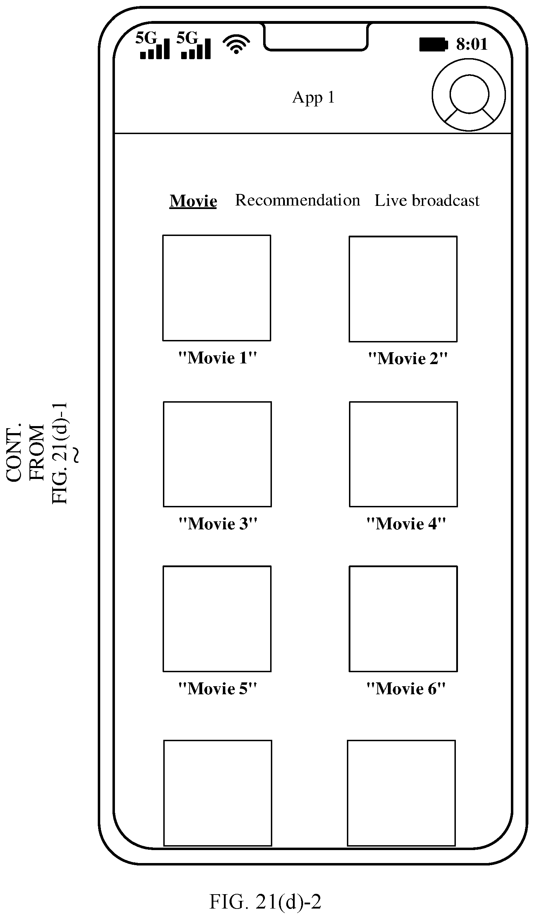

FIG. 21(a)-1 and FIG. 21(a)-2 to FIG. 21(d)-1 and FIG. 21(d)-2 show another group of graphical user interfaces according to an embodiment of this application;

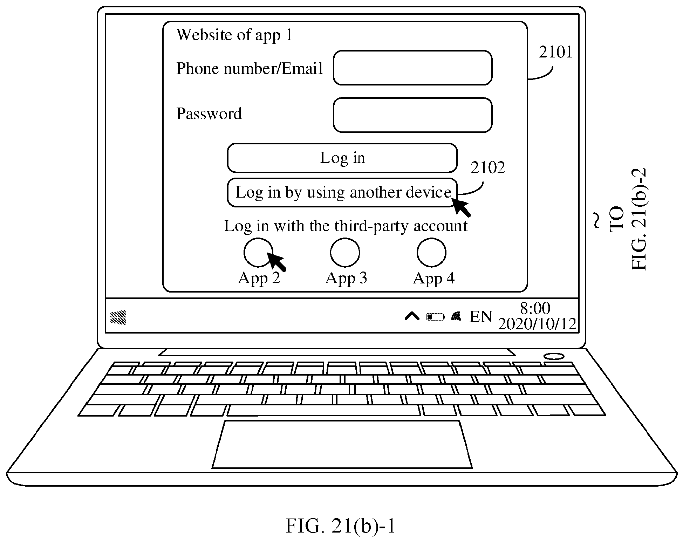

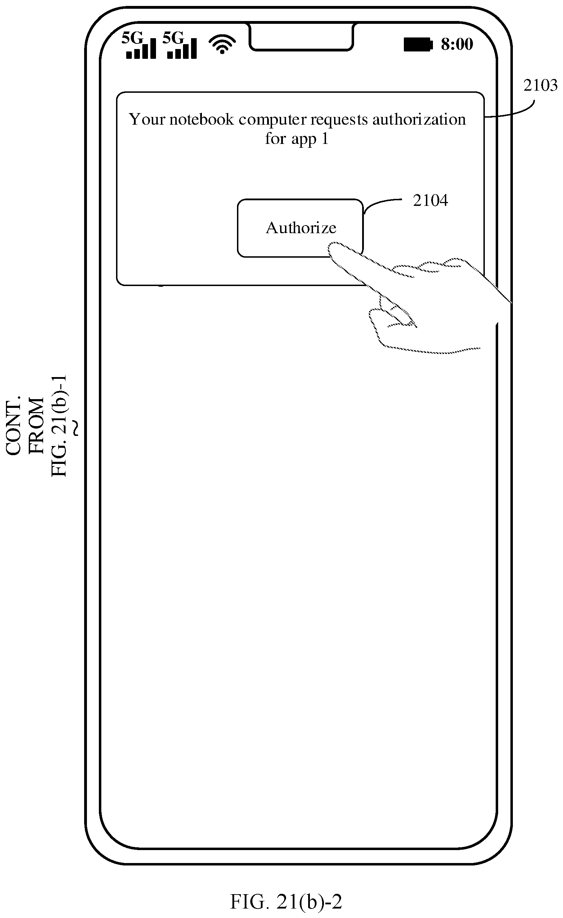

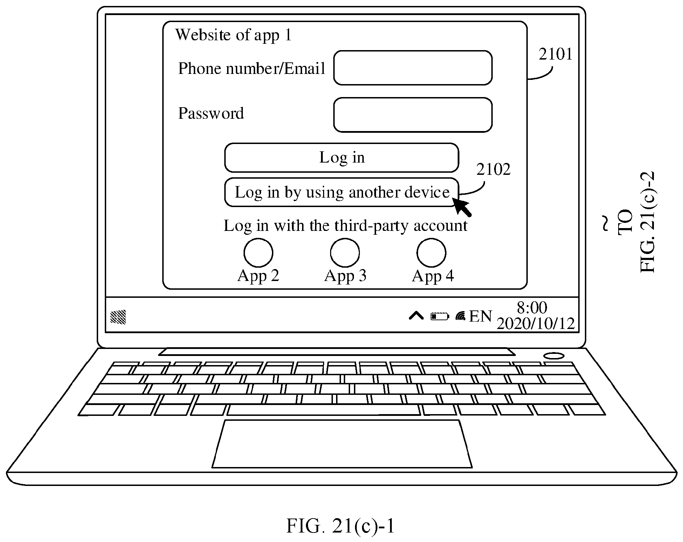

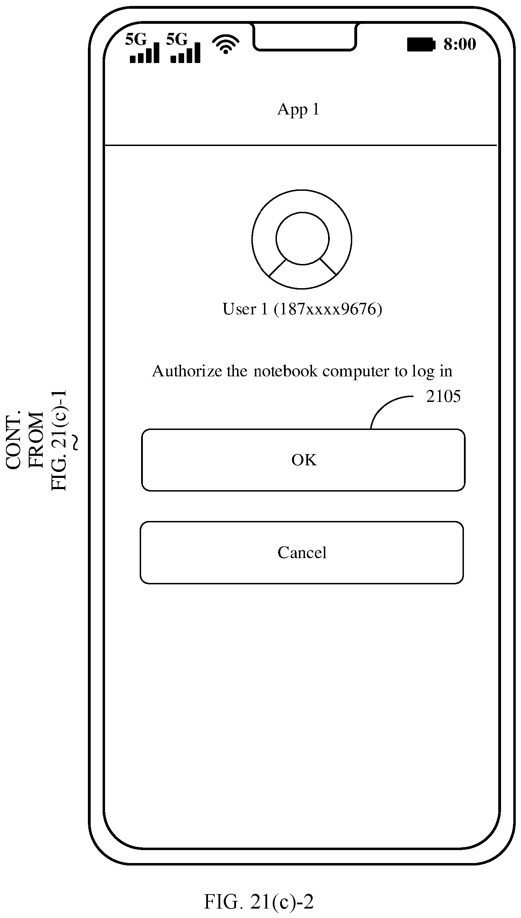

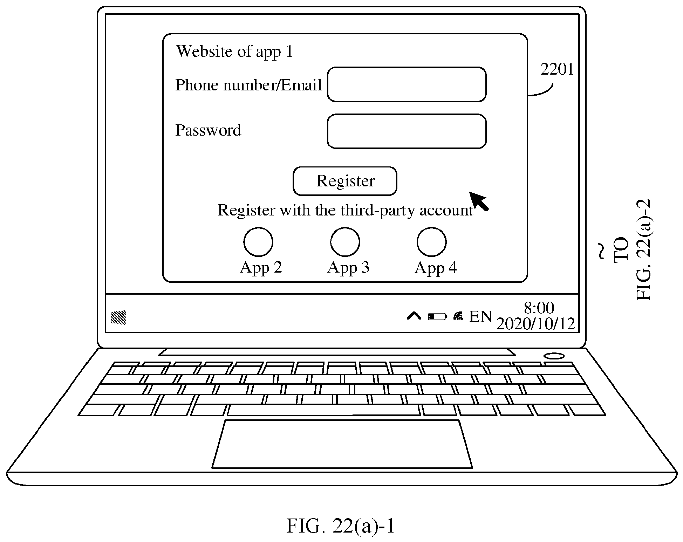

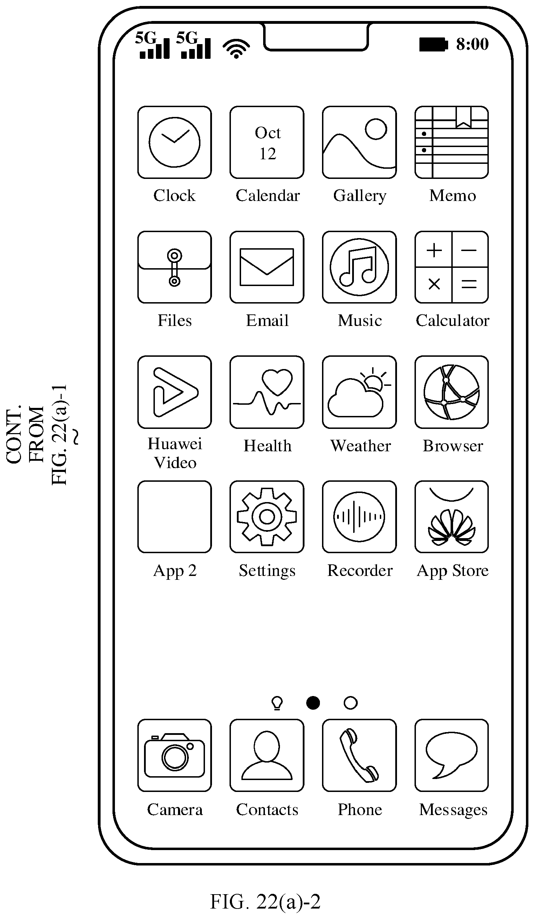

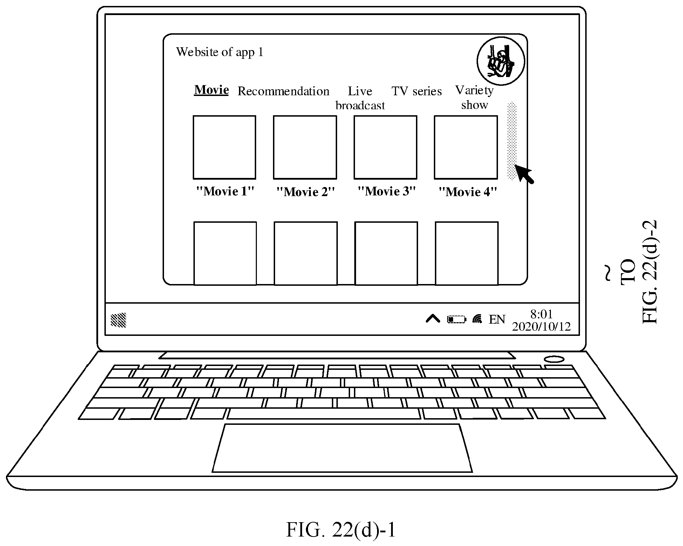

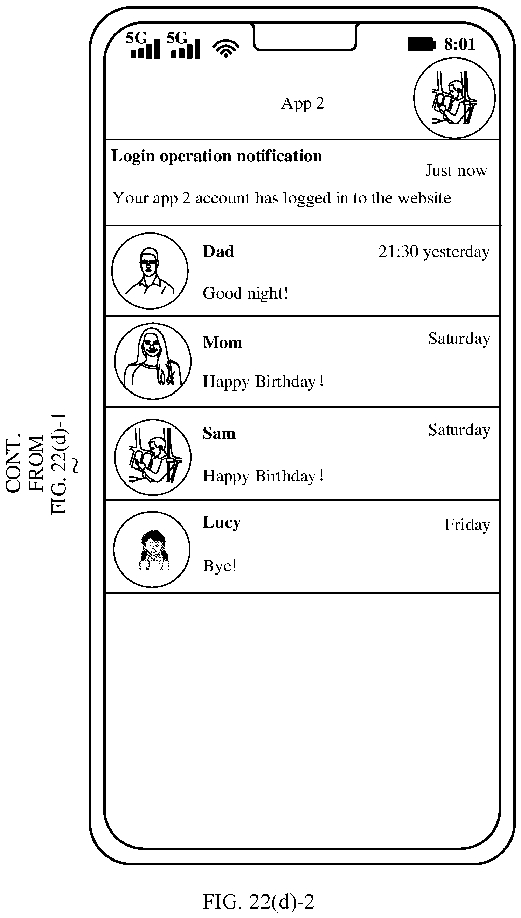

FIG. 22(a)-1 and FIG. 22(a)-2 to FIG. 22(d)-1 and FIG. 22(d)-2 show another group of graphical user interfaces according to an embodiment of this application;

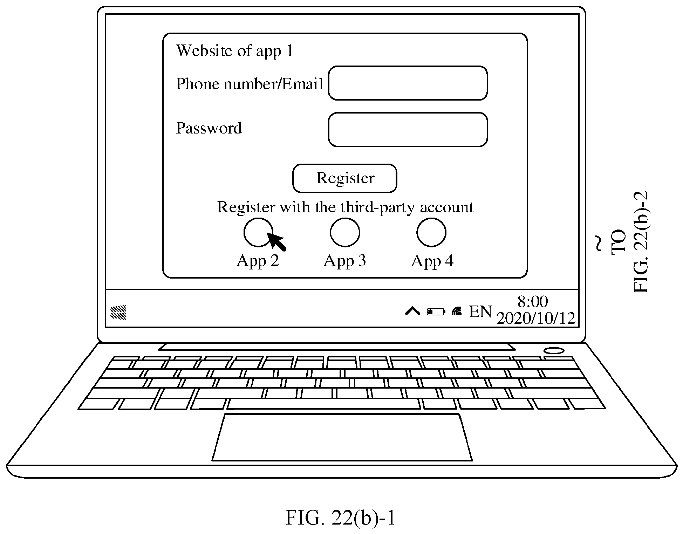

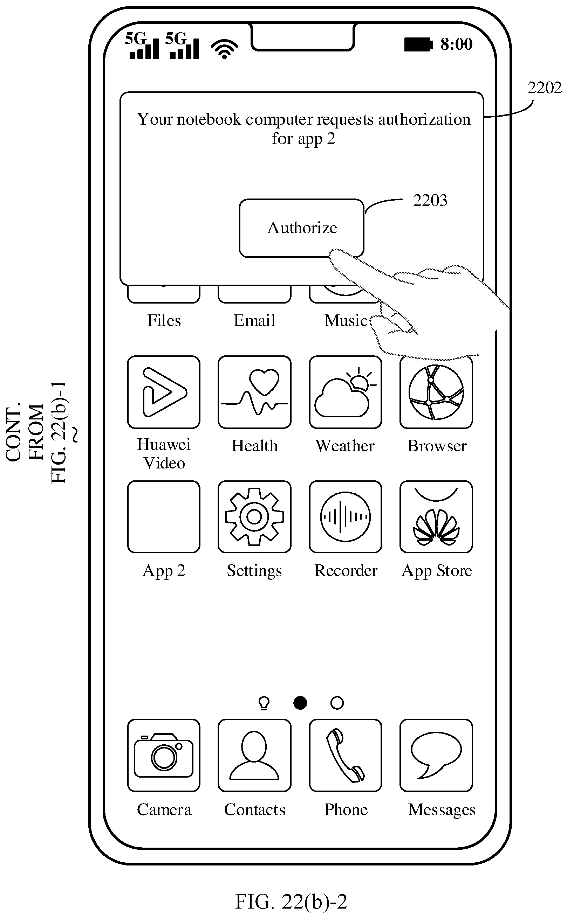

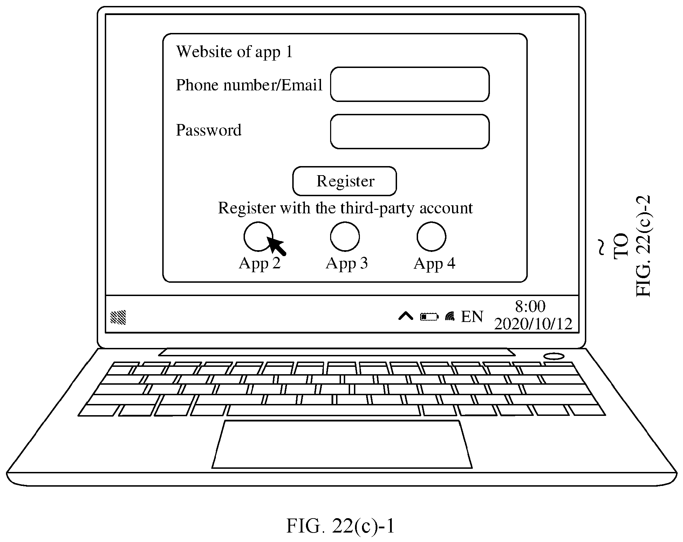

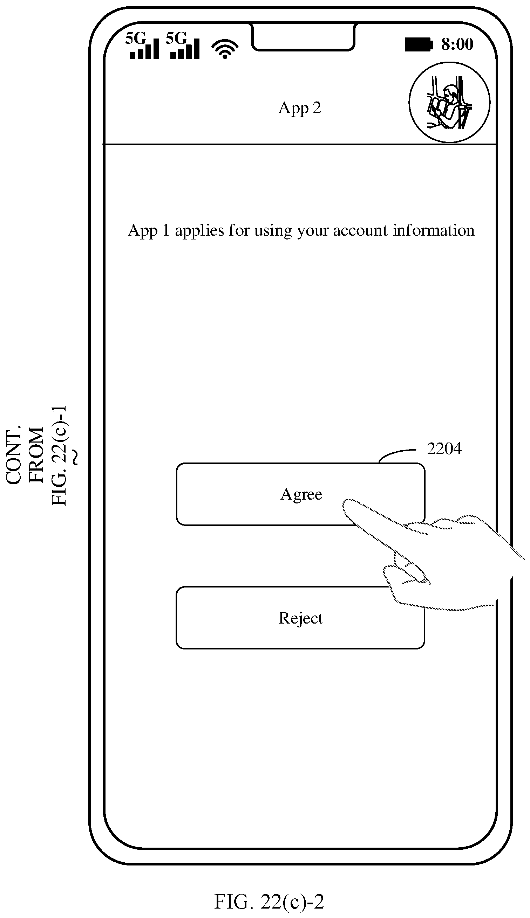

FIG. 23(a)-1 and FIG. 23(a)-2 to FIG. 23(d) show another group of graphical user interfaces according to an embodiment of this application;

FIG. 24(a)-1 and FIG. 24(a)-2 to FIG. 24(d) show another group of graphical user interfaces according to an embodiment of this application;

FIG. 25(a)-1 and FIG. 25(a)-2 to FIG. 25(e)-1 and FIG. 25(e)-2 show another group of graphical user interfaces according to an embodiment of this application;

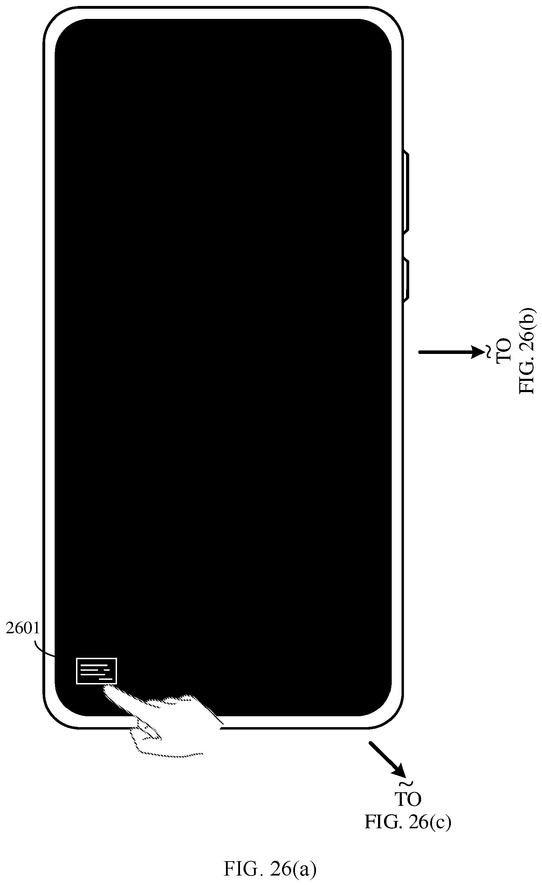

FIG. 26(a) to FIG. 26(c) show another group of graphical user interfaces according to an embodiment of this application;

FIG. 27(a)-1 and FIG. 27(a)-2 to FIG. 27(g)-1 and FIG. 27(g)-2 show another group of graphical user interfaces according to an embodiment of this application;

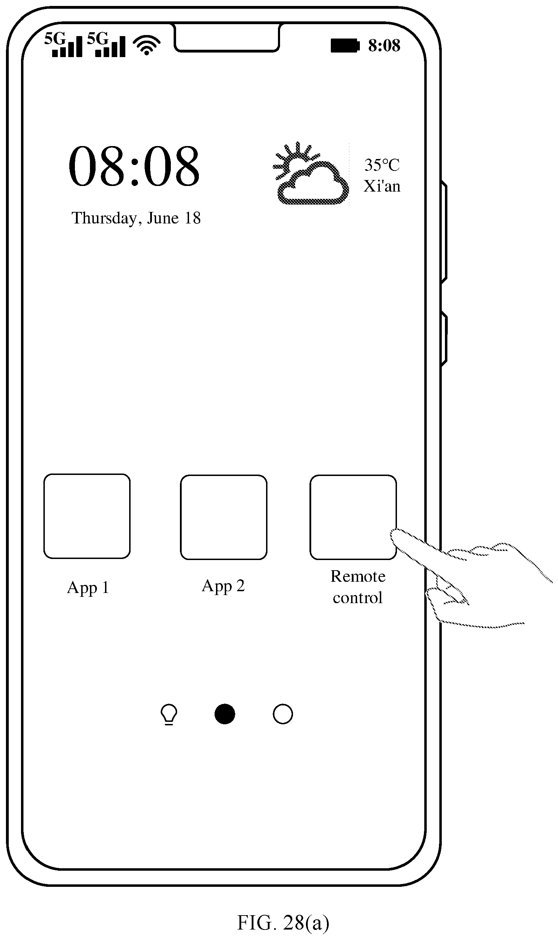

FIG. 28(a) to FIG. 28(e) show another group of graphical user interfaces according to an embodiment of this application;

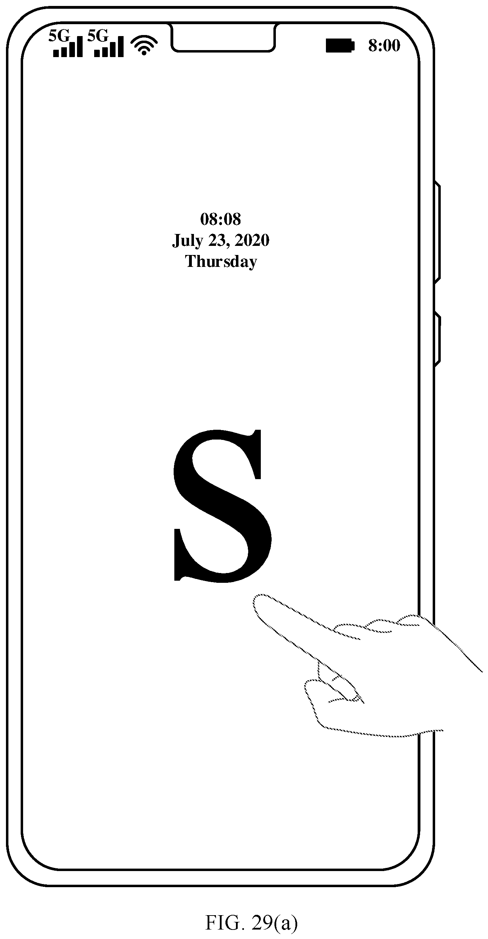

FIG. 29(a) to FIG. 29(d) show another group of graphical user interfaces according to an embodiment of this application;

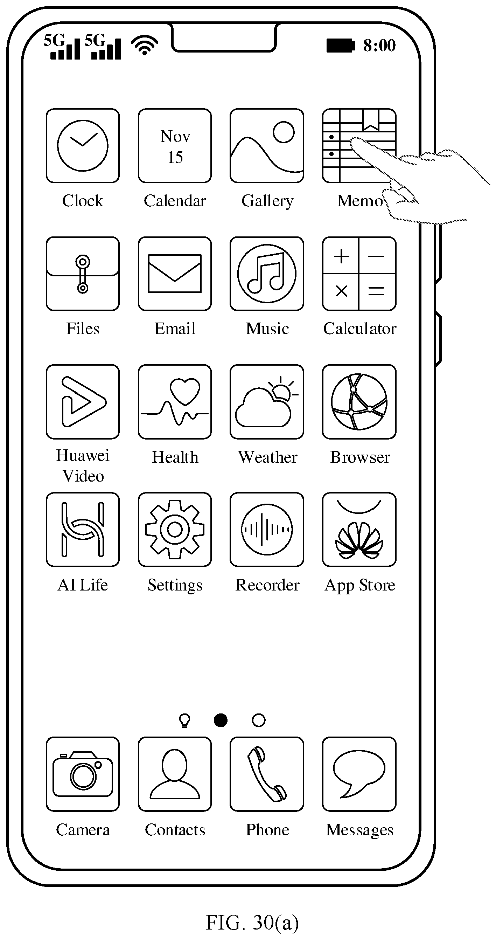

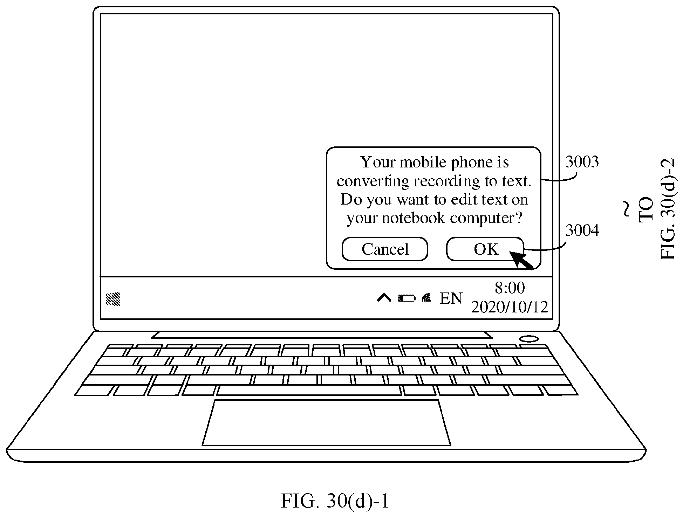

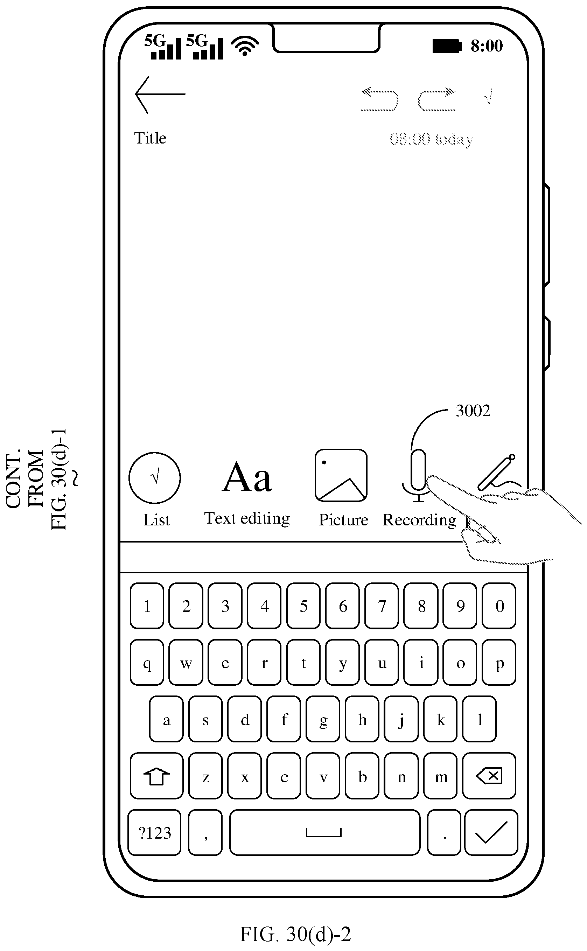

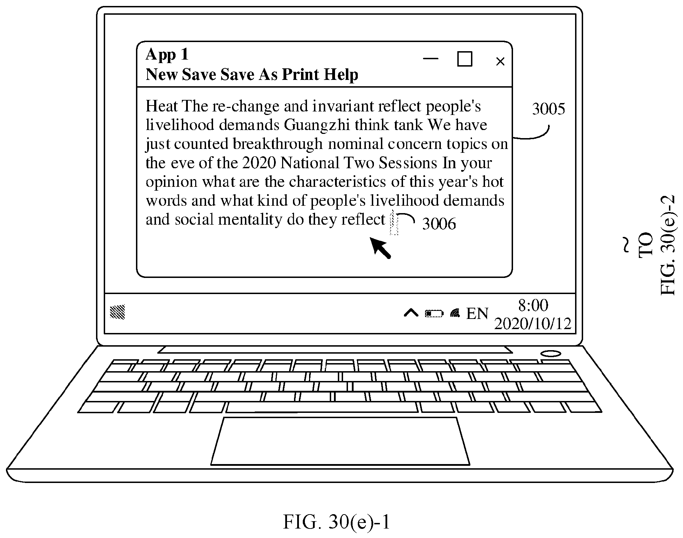

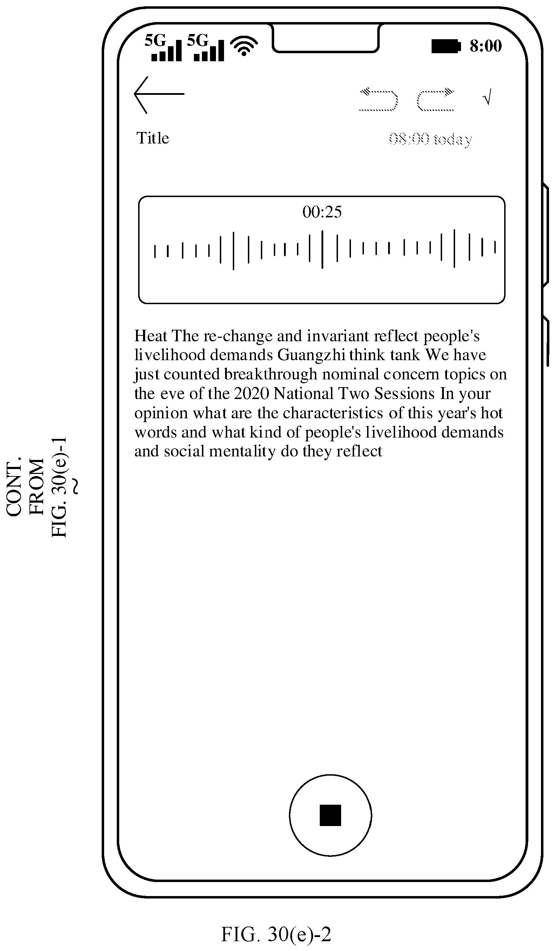

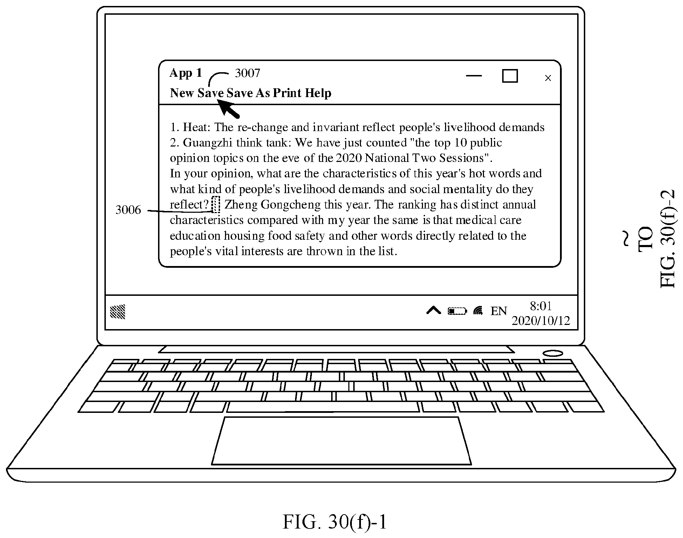

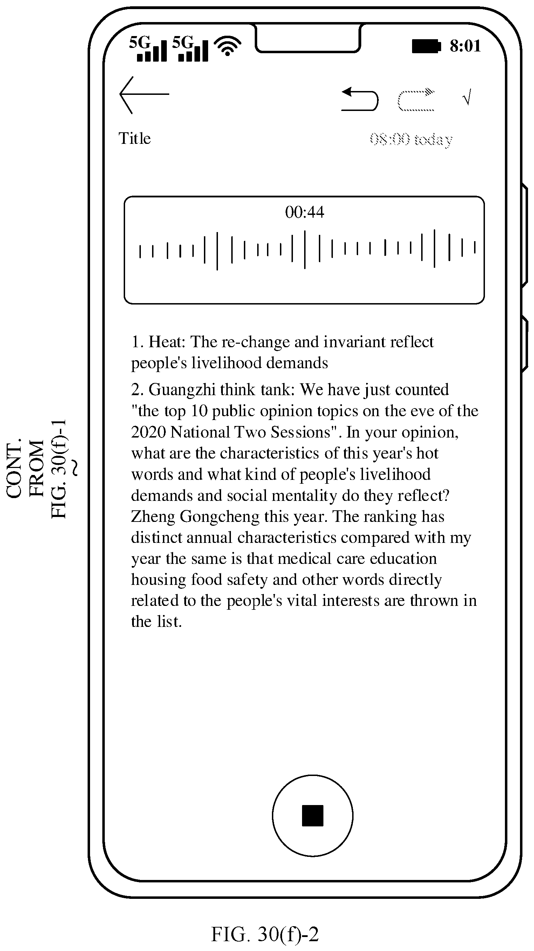

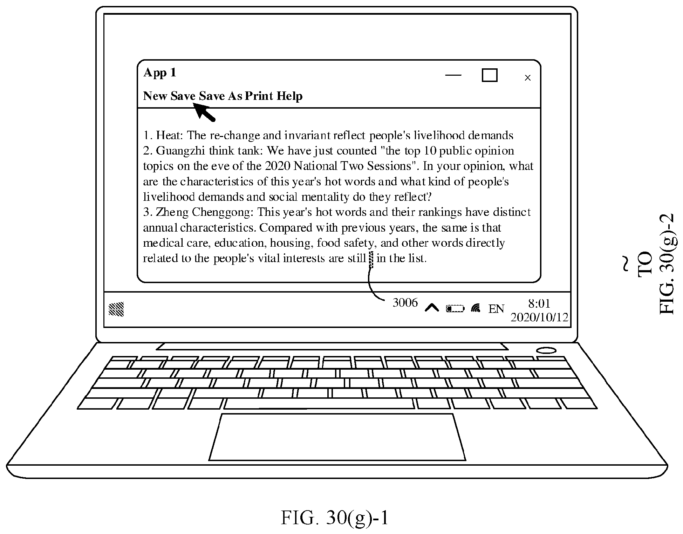

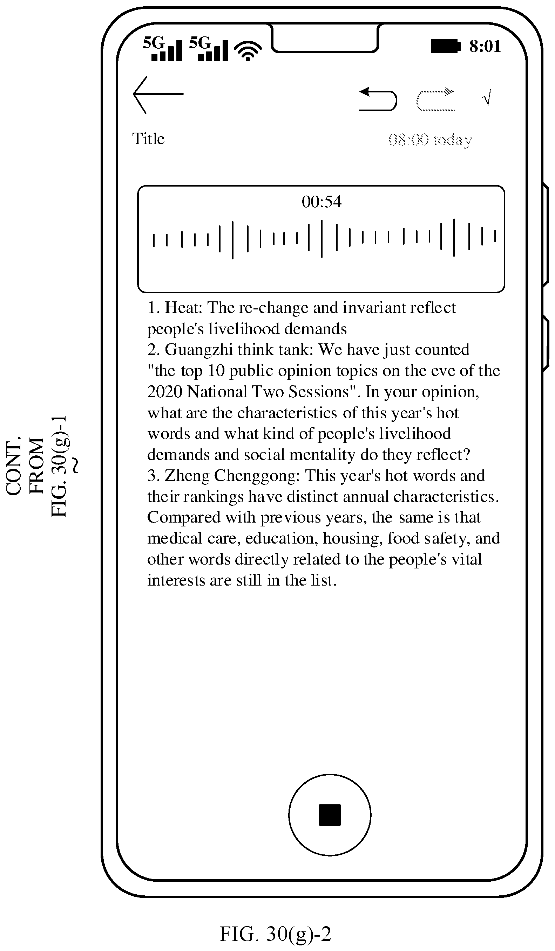

FIG. 30(a) to FIG. 30(k) show another group of graphical user interfaces according to an embodiment of this application;

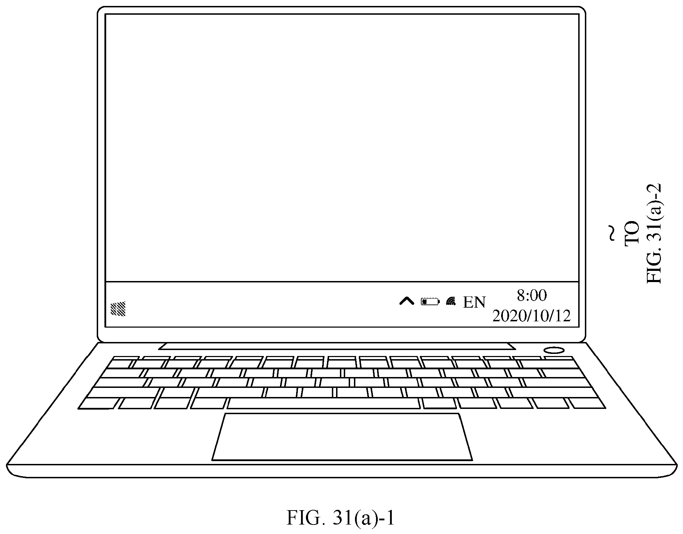

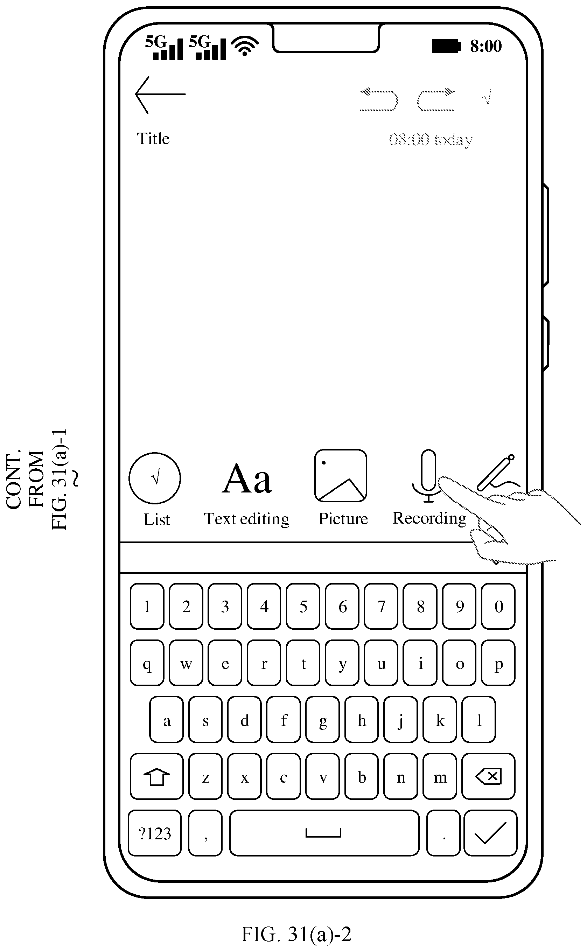

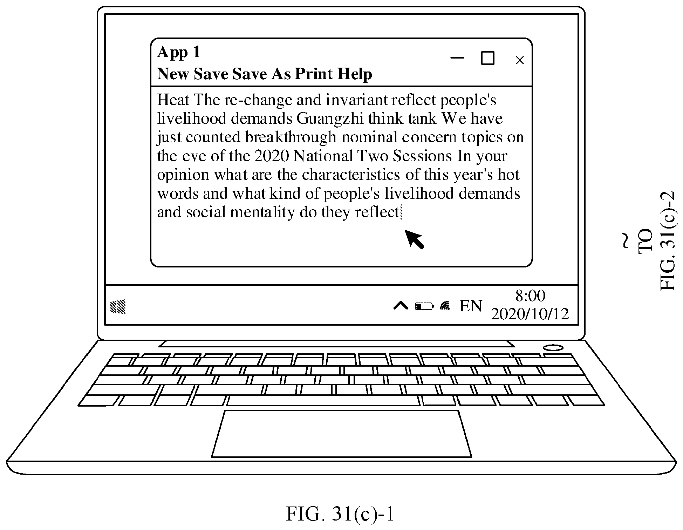

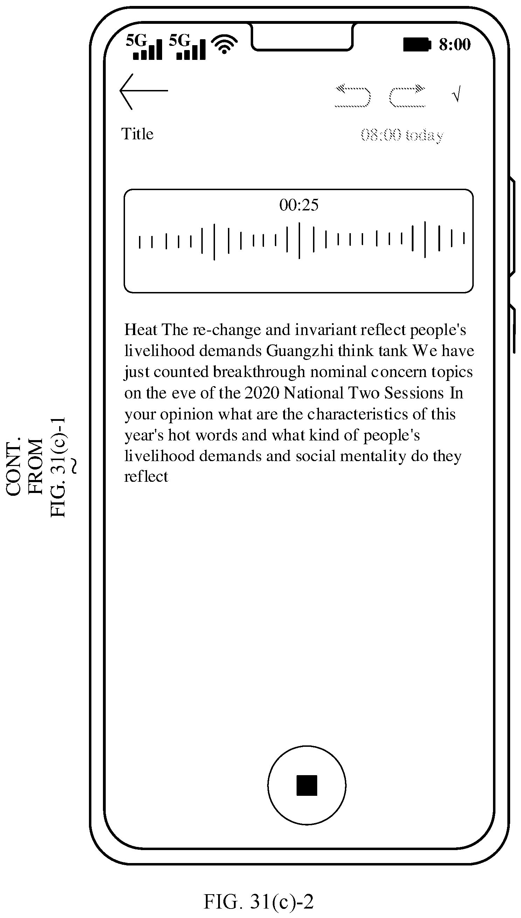

FIG. 31(a)-1 and FIG. 31(a)-2 to FIG. 31(c)-1 and FIG. 31(c)-2 show another group of graphical user interfaces according to an embodiment of this application;

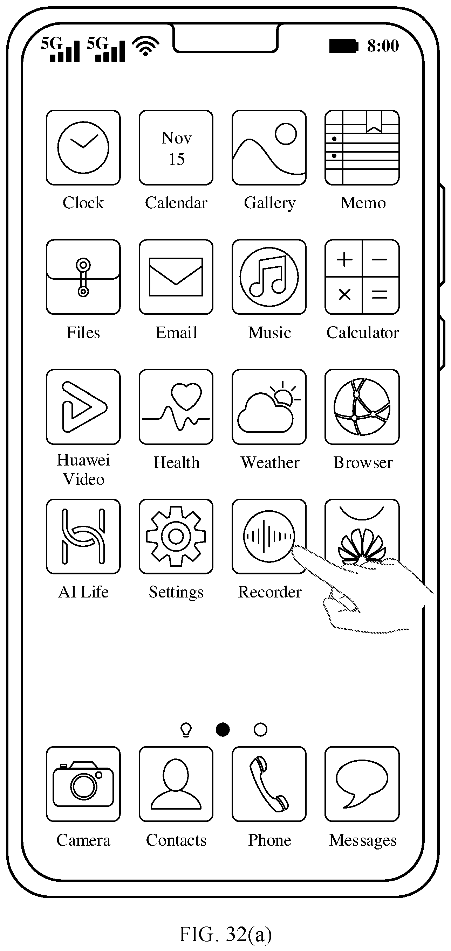

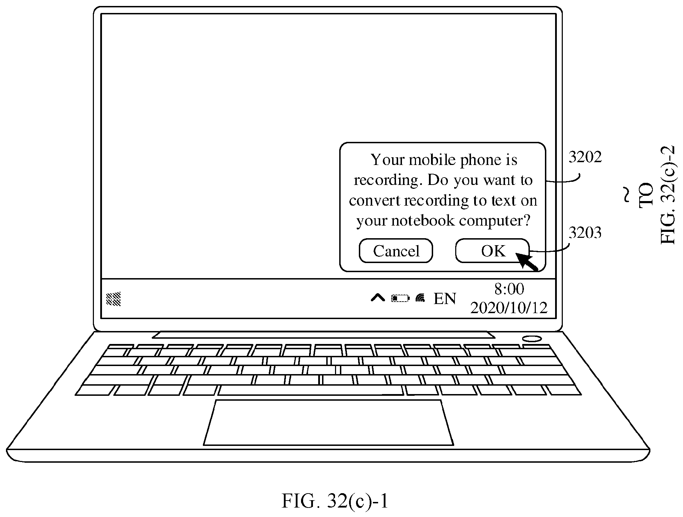

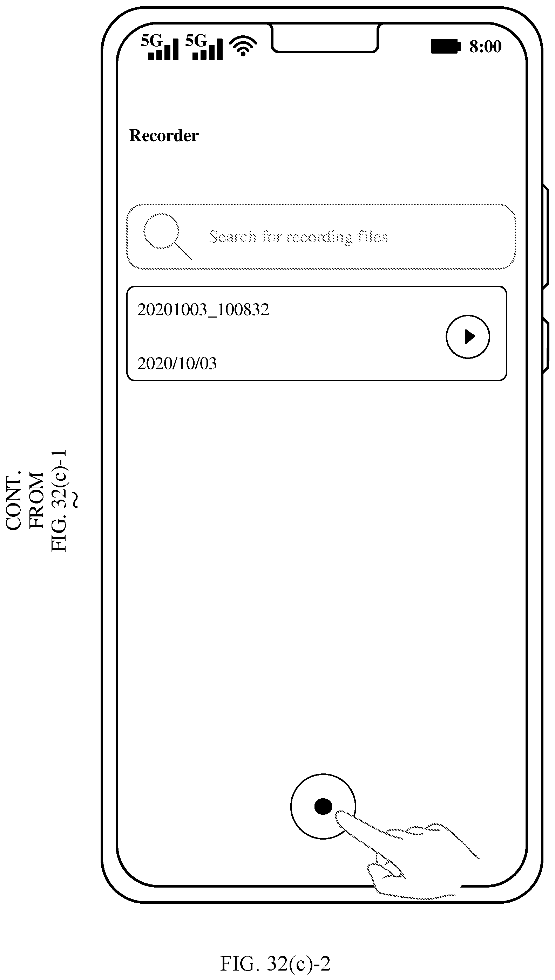

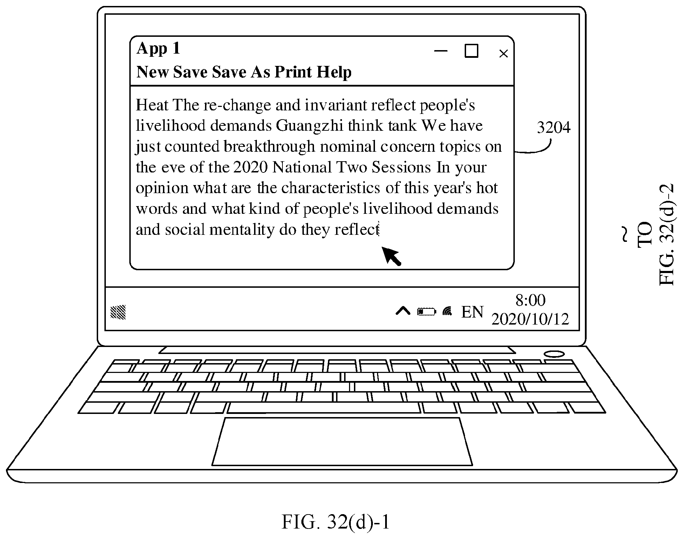

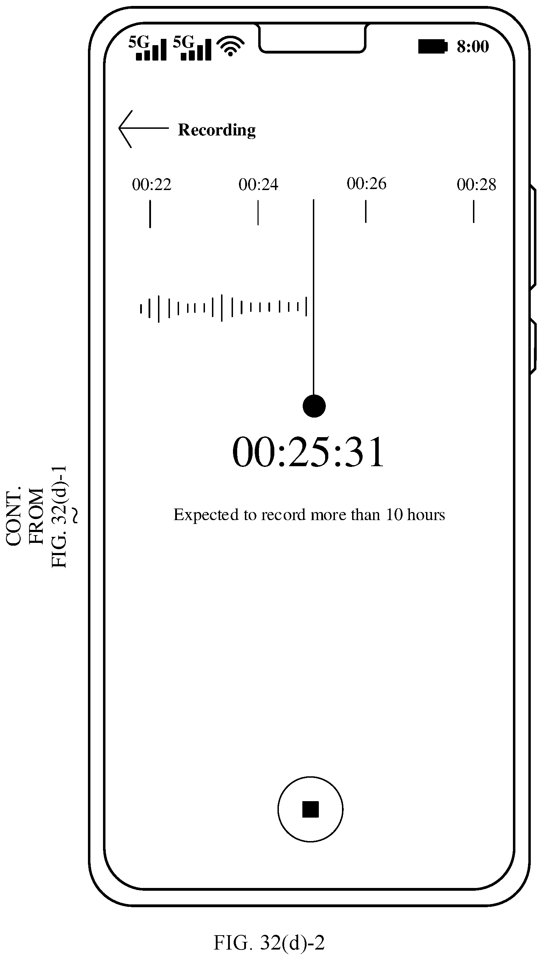

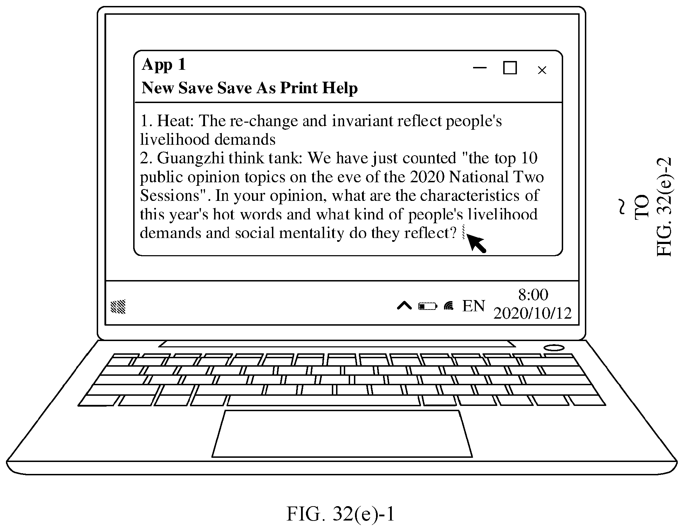

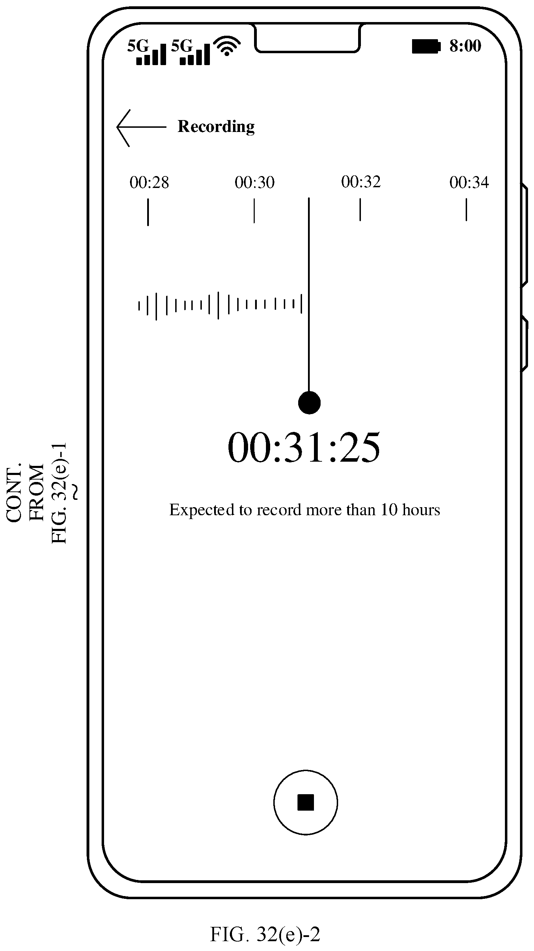

FIG. 32(a) to FIG. 32(e)-1 and FIG. 32(e)-2 show another group of graphical user interfaces according to an embodiment of this application;

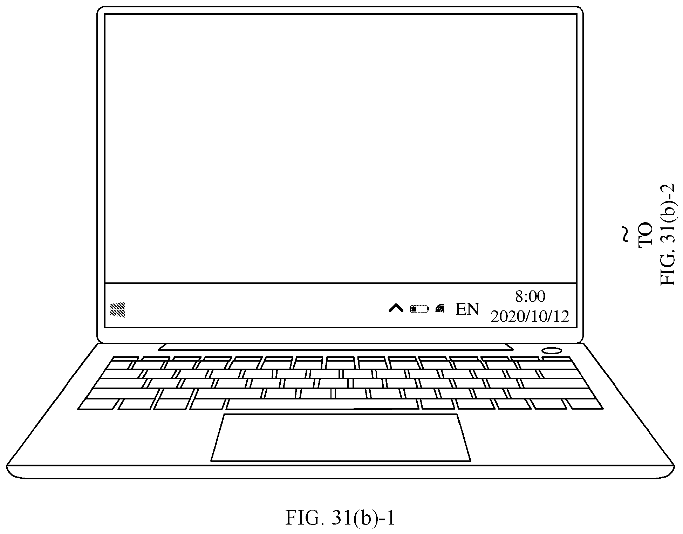

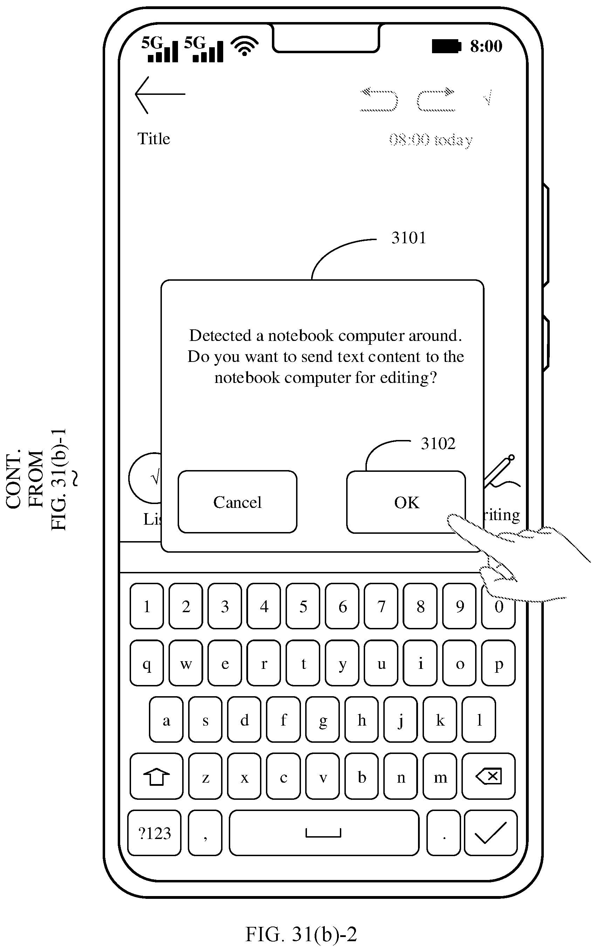

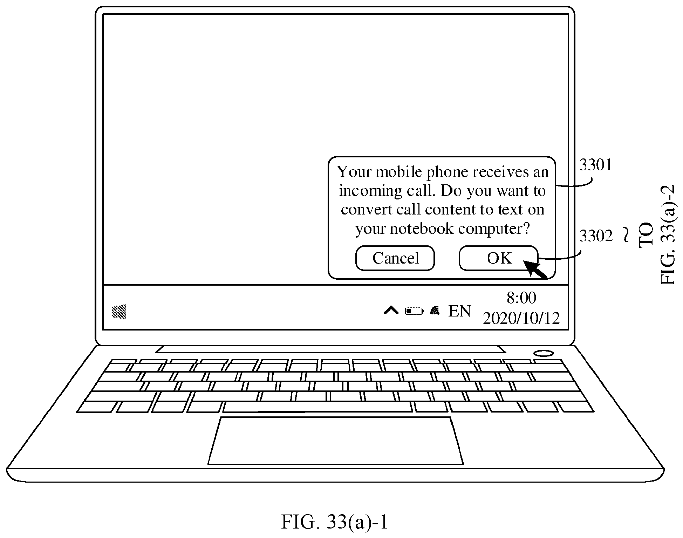

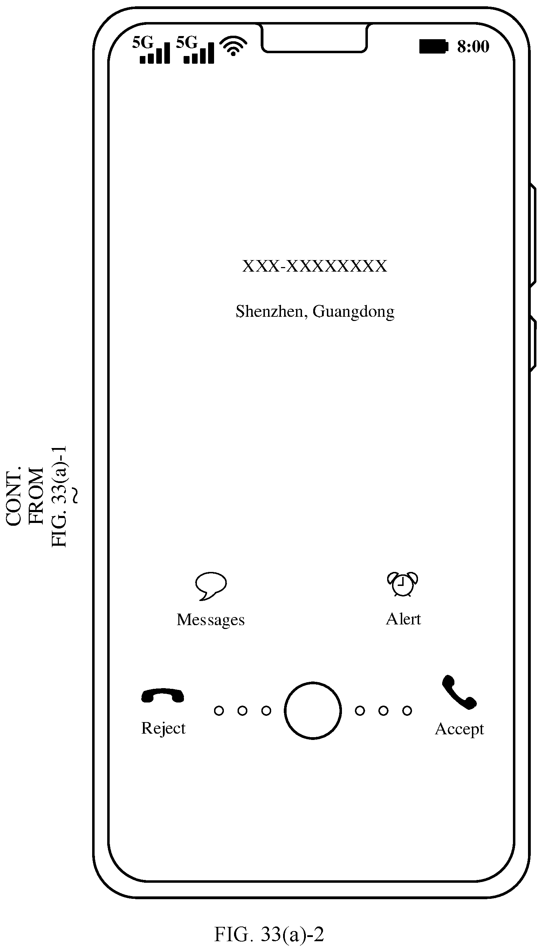

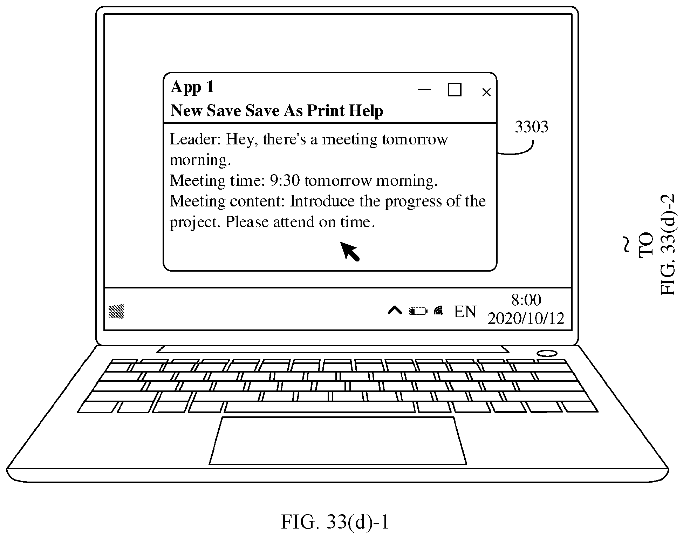

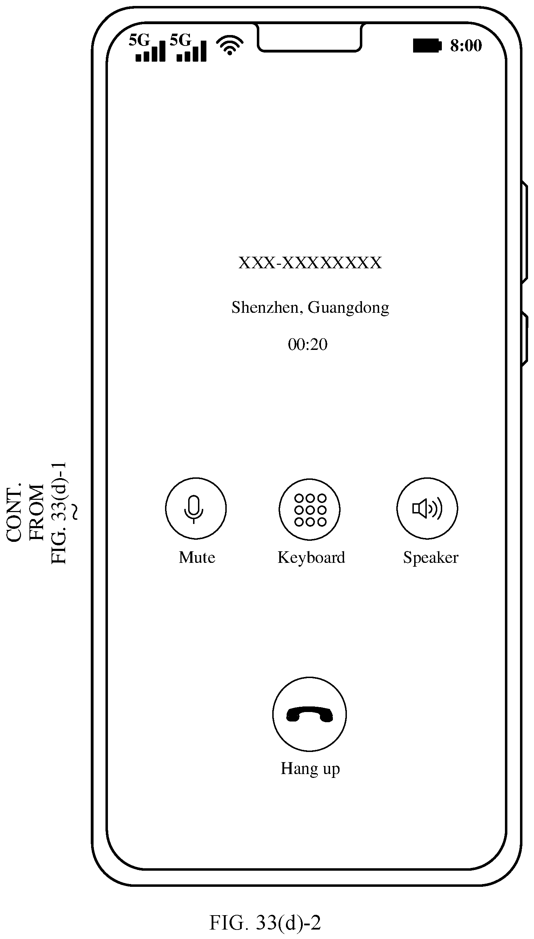

FIG. 33(a)-1 and FIG. 33(a)-2 to FIG. 33(d)-1 and FIG. 33(d)-2 show another group of graphical user interfaces according to an embodiment of this application;

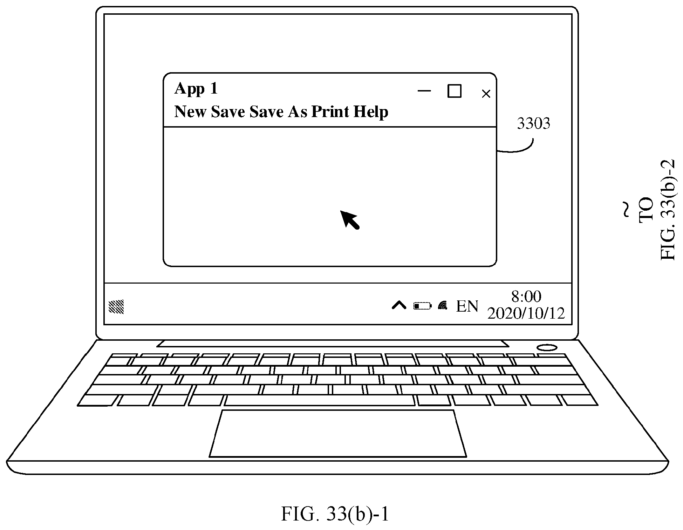

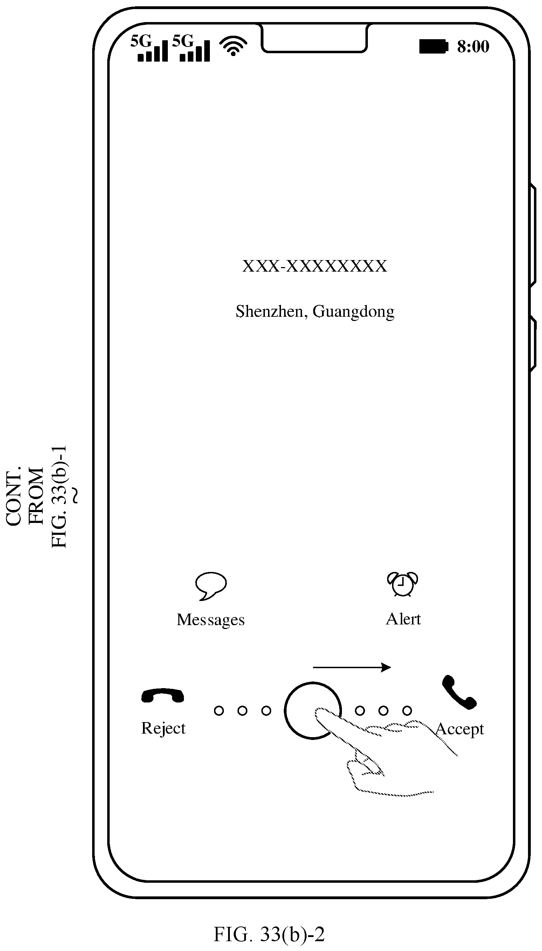

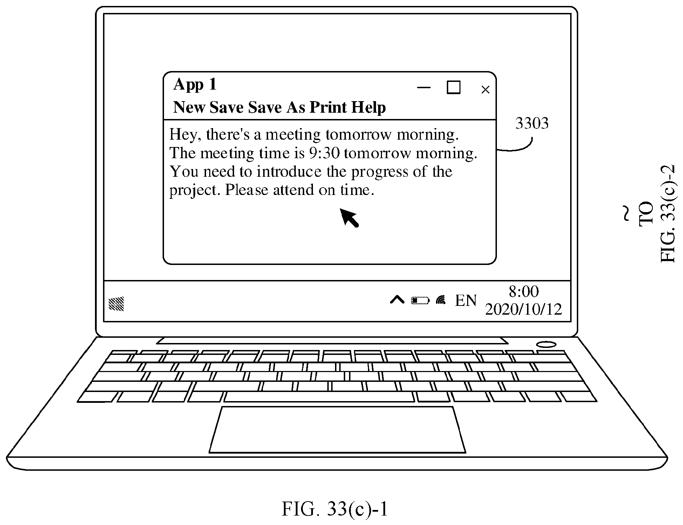

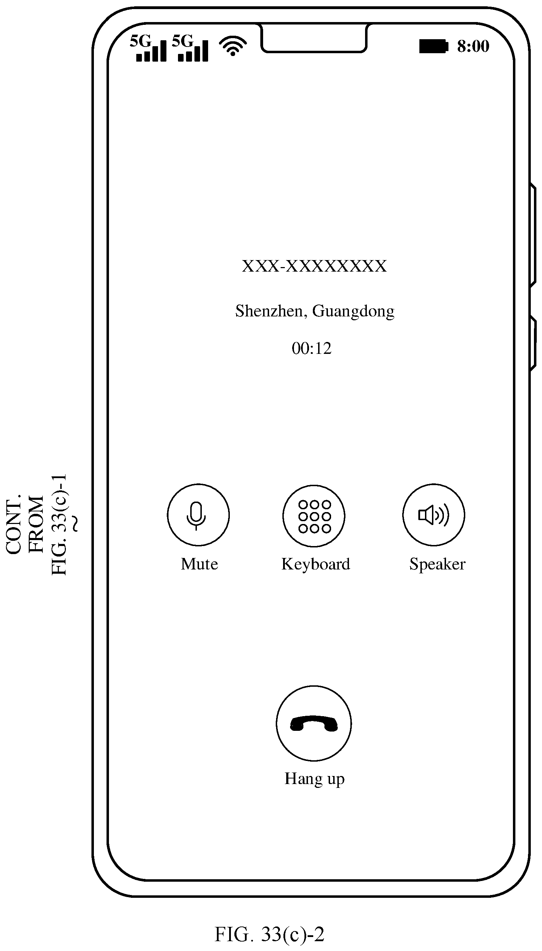

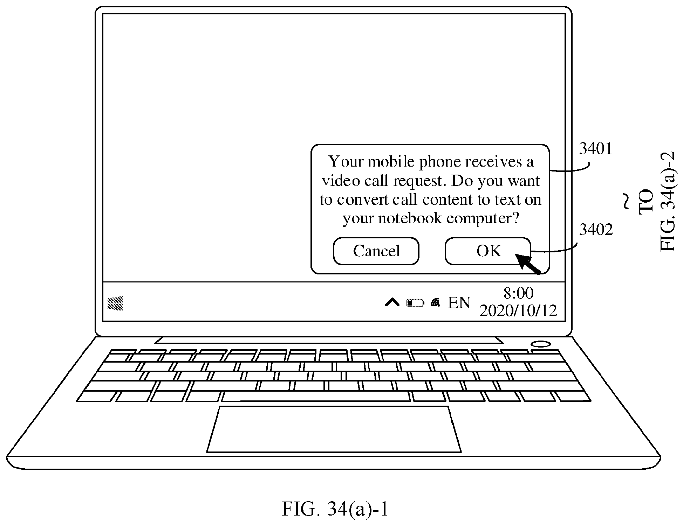

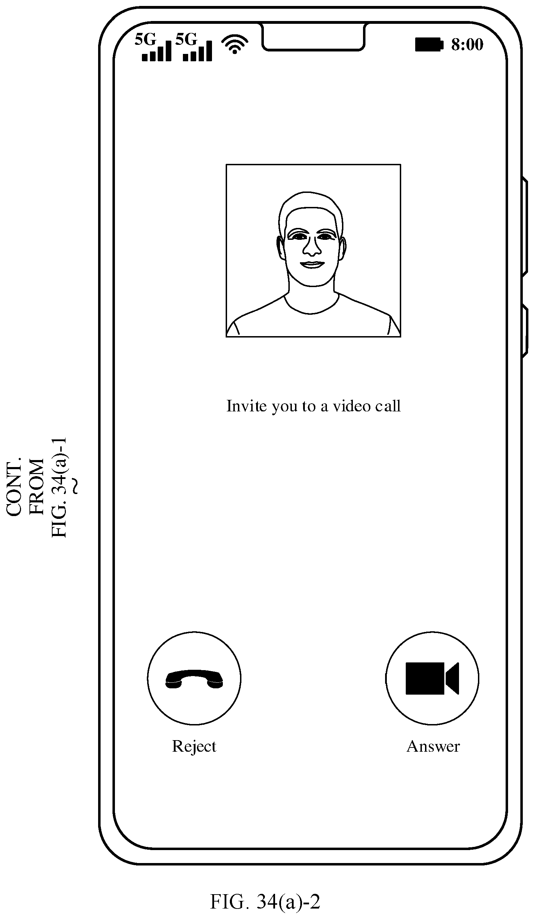

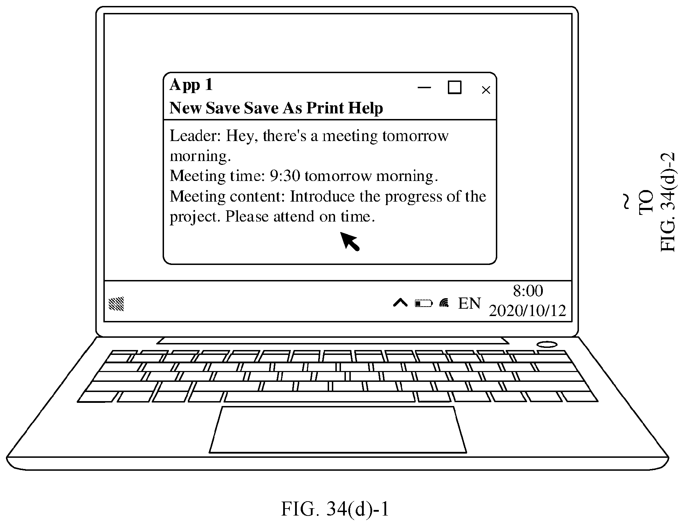

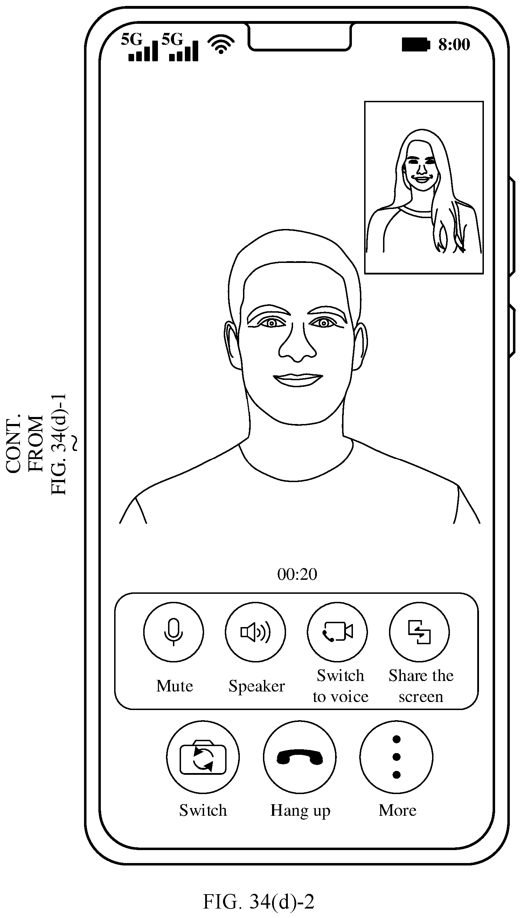

FIG. 34(a)-1 and FIG. 34(a)-2 to FIG. 34(d)-1 and FIG. 34(d)-2 show another group of graphical user interfaces according to an embodiment of this application;

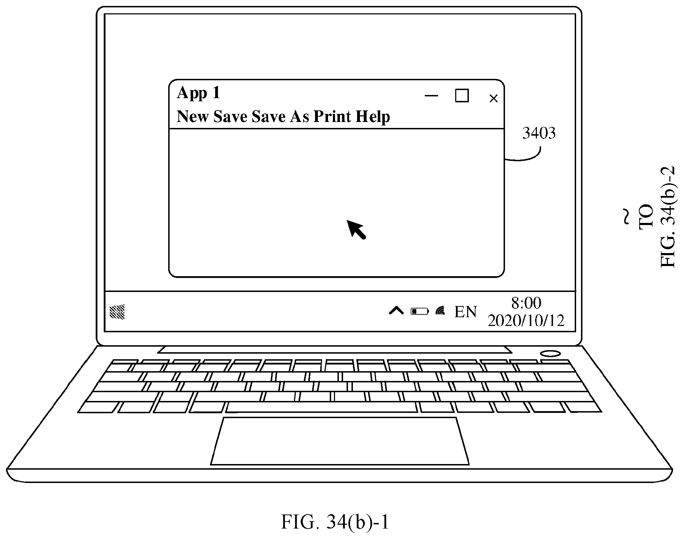

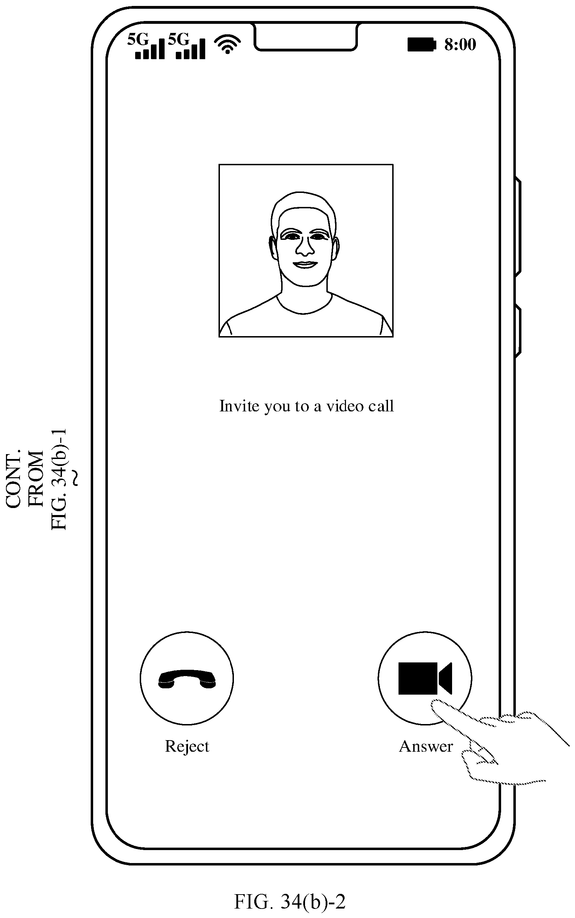

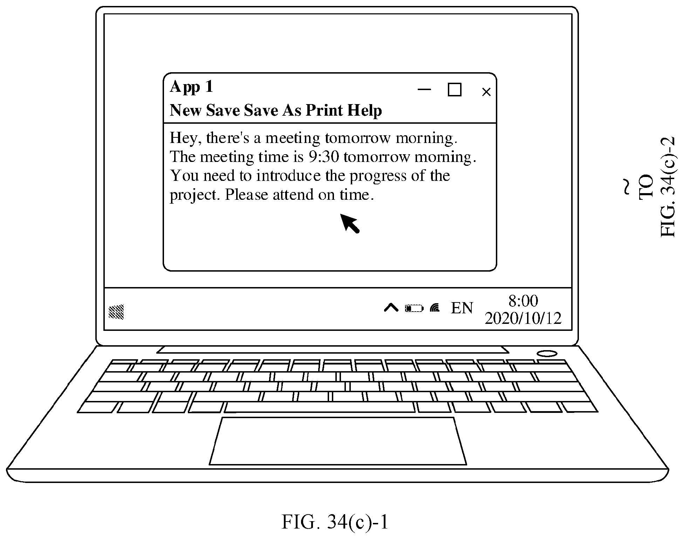

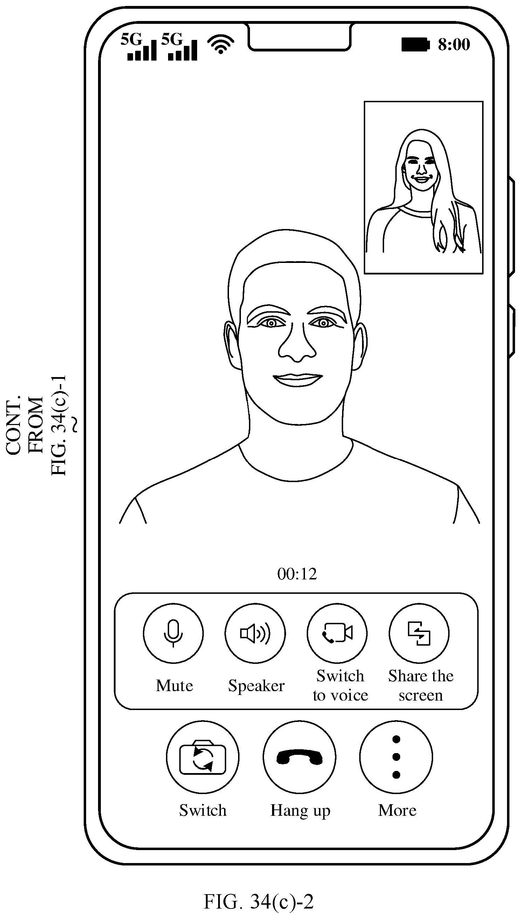

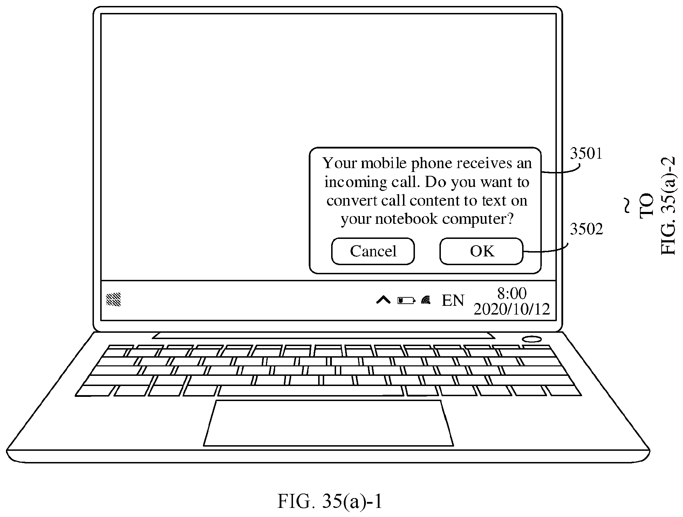

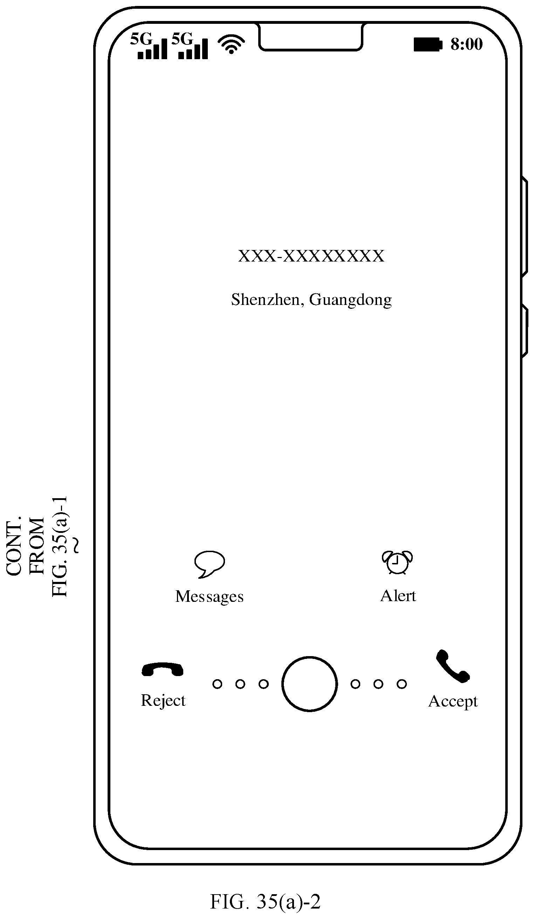

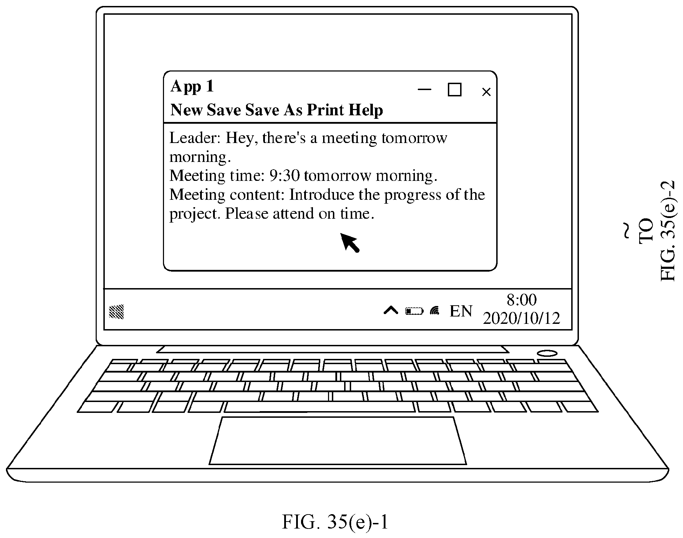

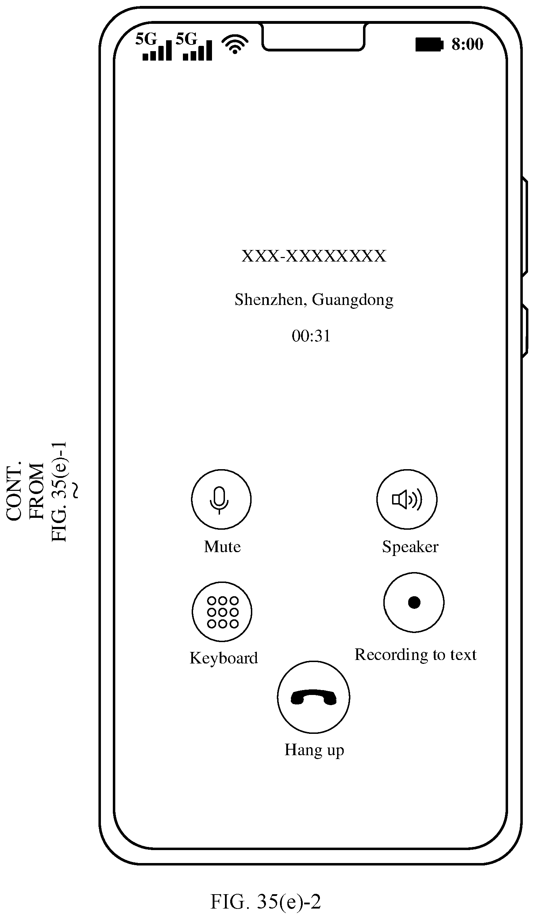

FIG. 35(a)-1 and FIG. 35(a)-2 to FIG. 35(e)-1 and FIG. 35(e)-2 show another group of graphical user interfaces according to an embodiment of this application;

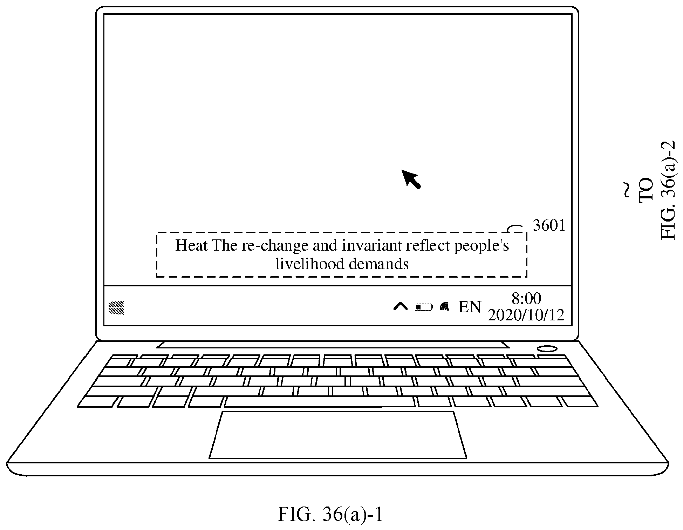

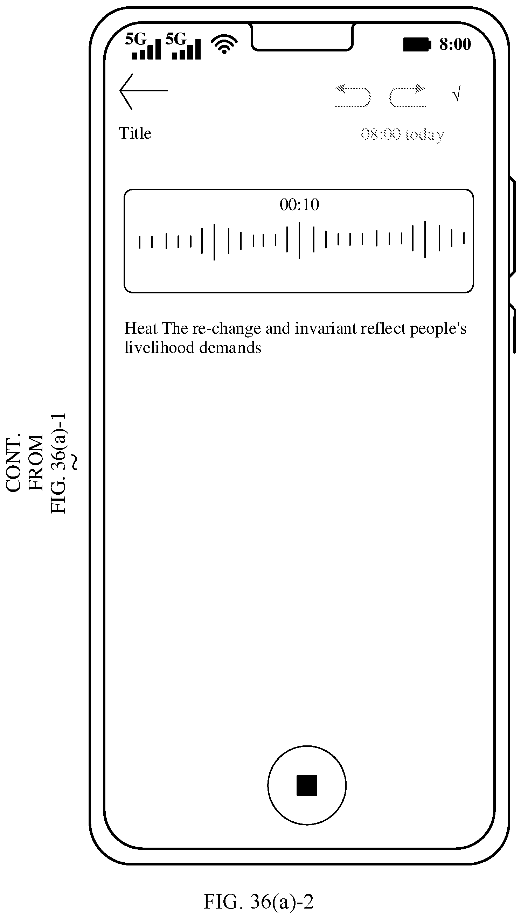

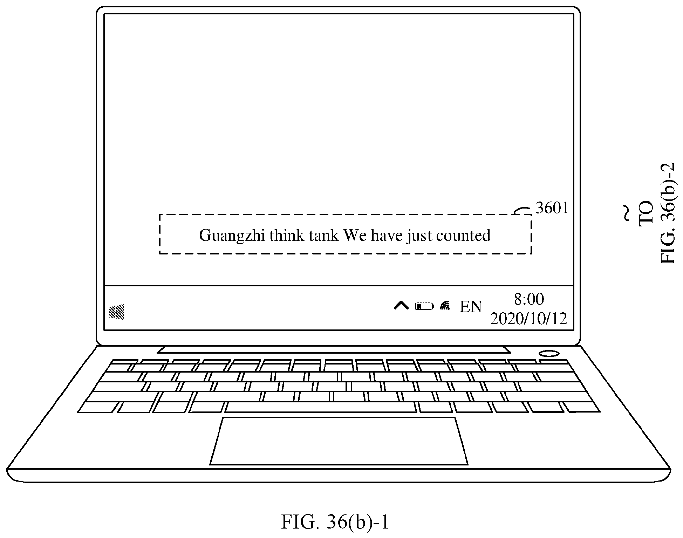

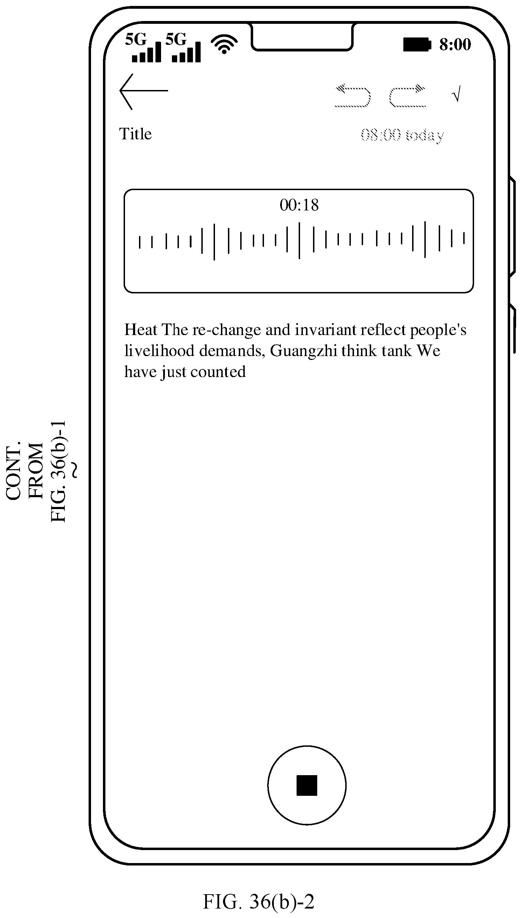

FIG. 36(a)-1 and FIG. 36(a)-2 and FIG. 36(b)-1 and FIG. 36(b)-2 show another group of graphical user interfaces according to an embodiment of this application;

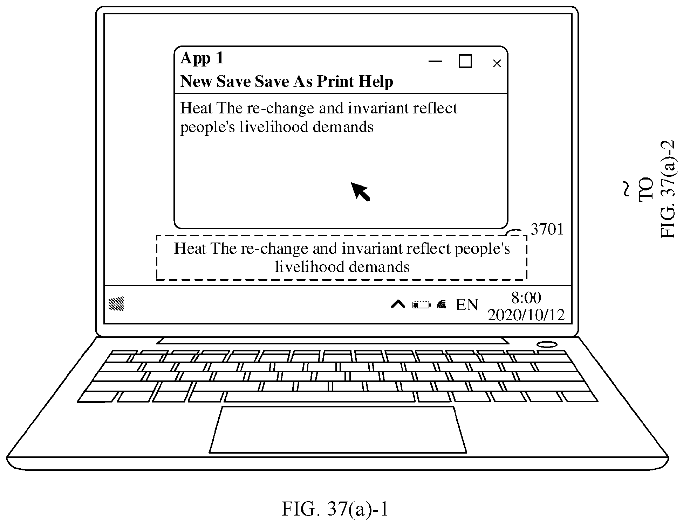

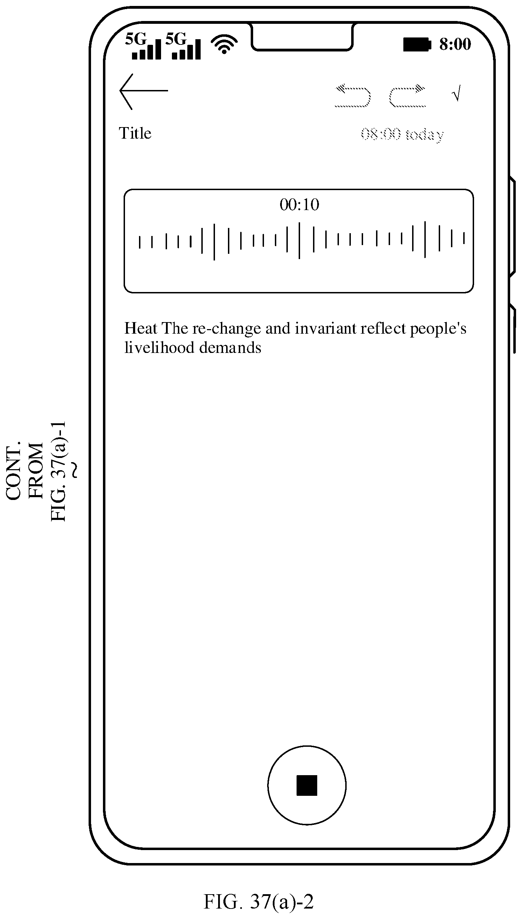

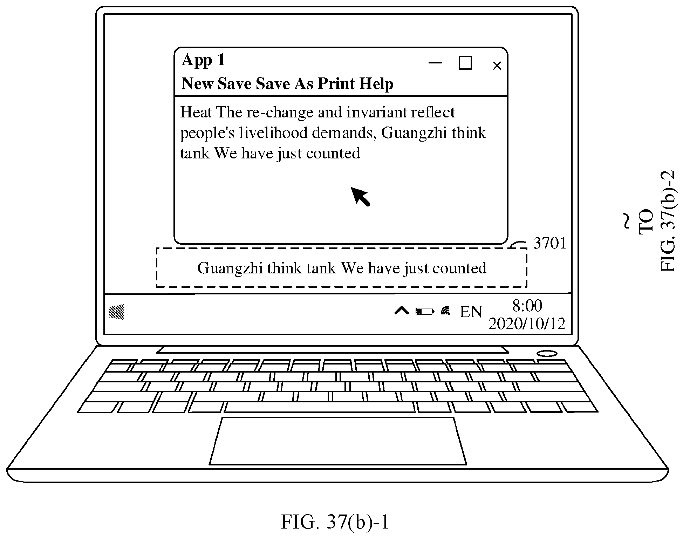

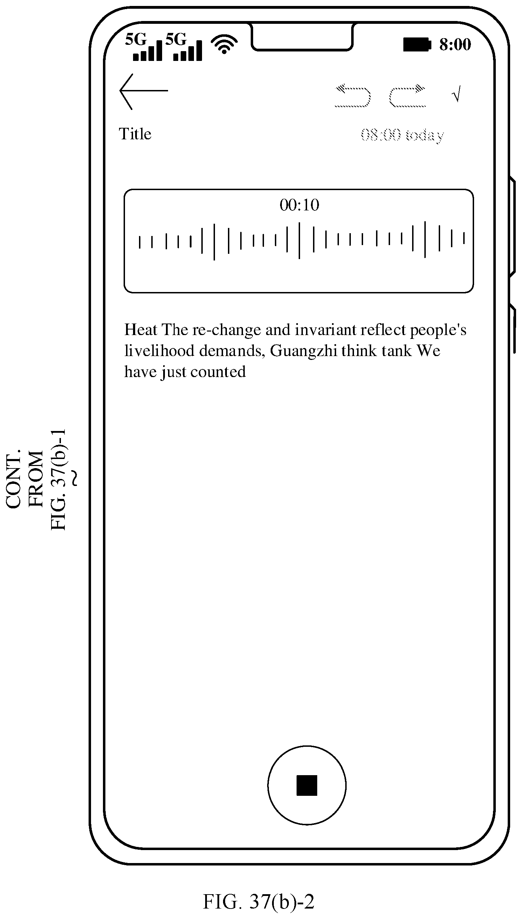

FIG. 37(a)-1 and FIG. 37(a)-2 and FIG. 37(b)-1 and FIG. 37(b)-2 show another group of graphical user interfaces according to an embodiment of this application;

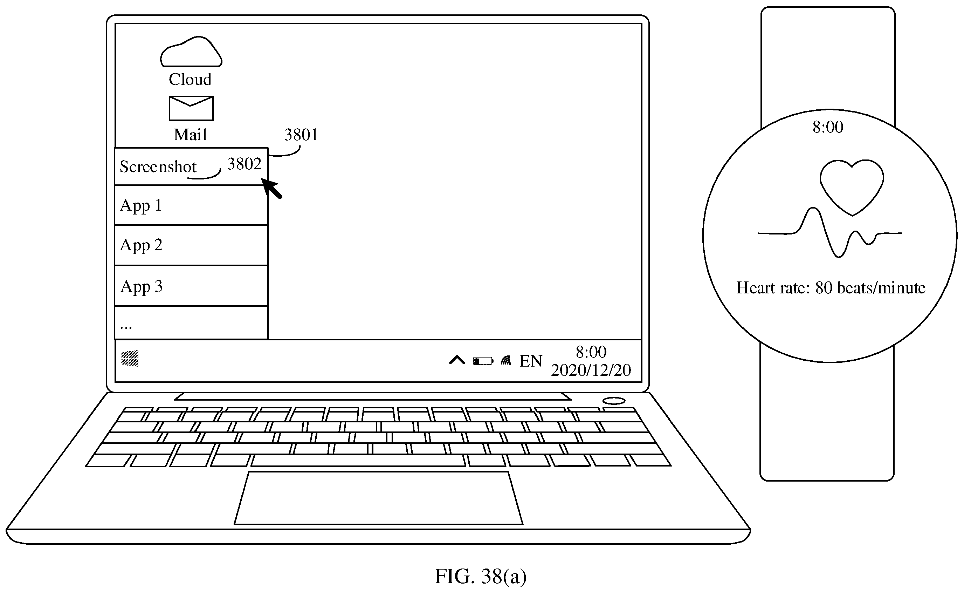

FIG. 38(a) to FIG. 38(d) show another group of graphical user interfaces according to an embodiment of this application;

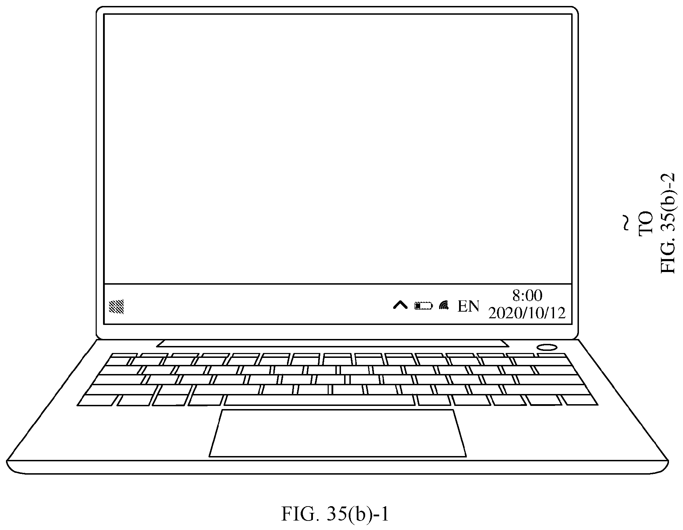

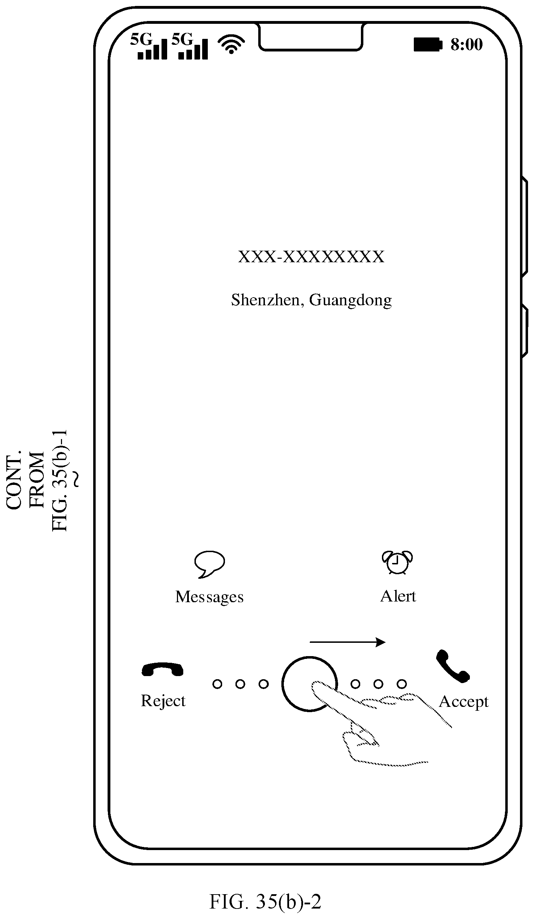

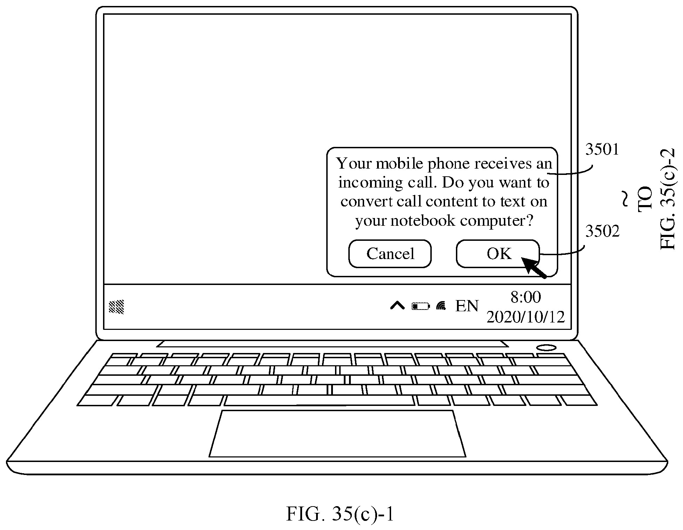

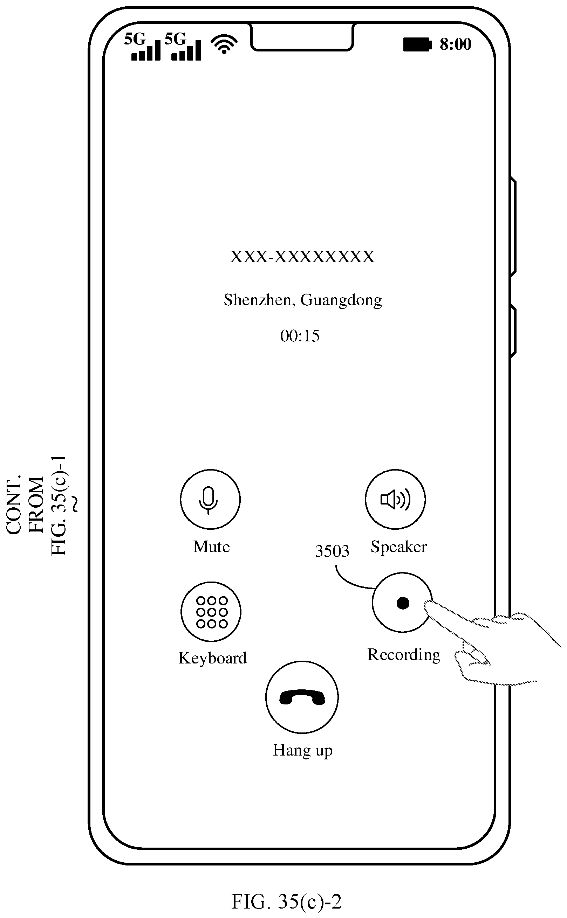

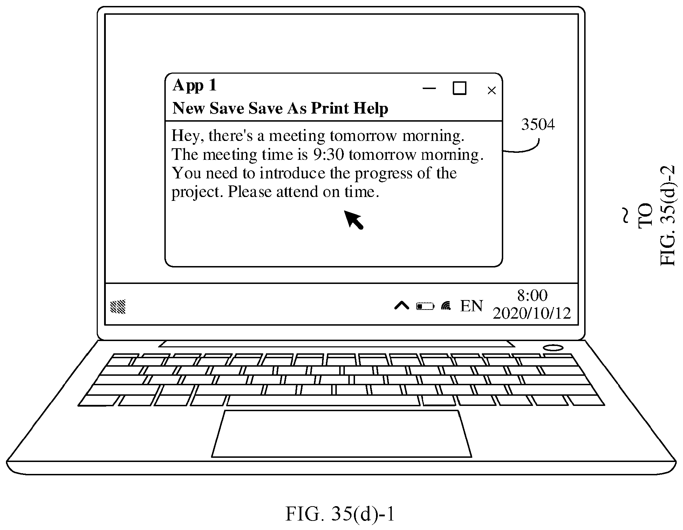

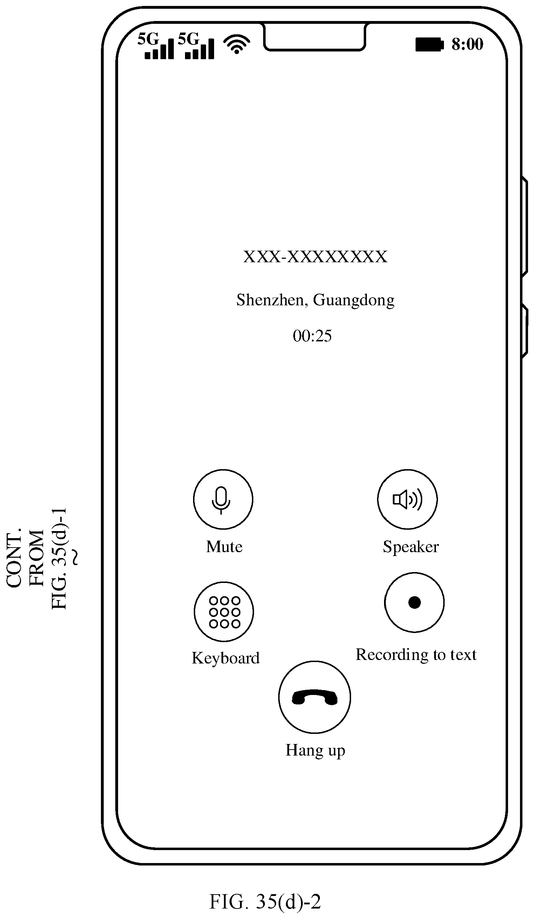

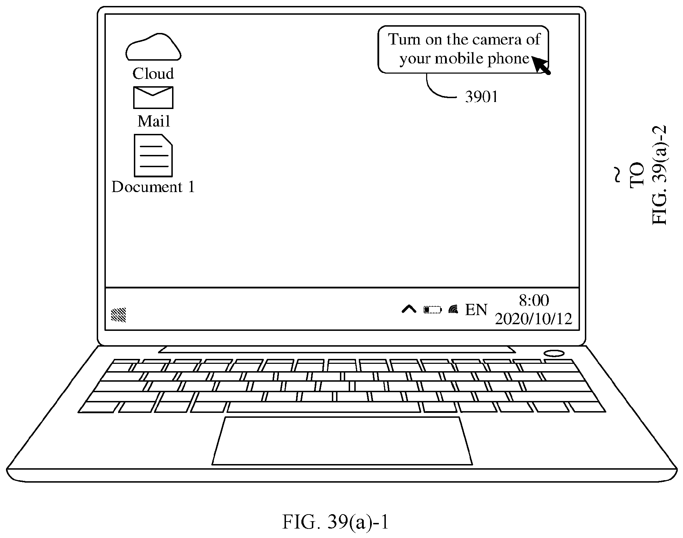

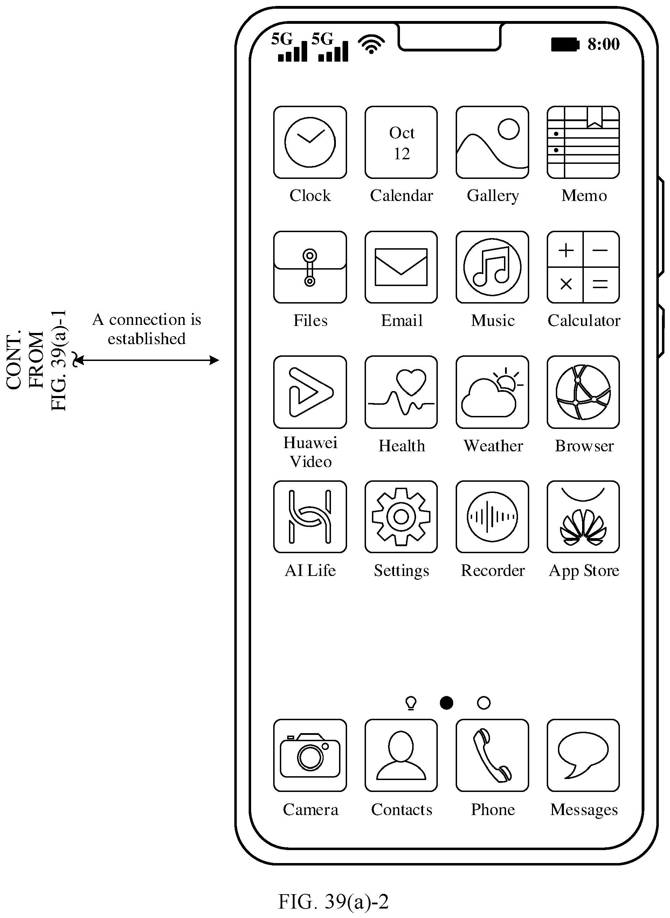

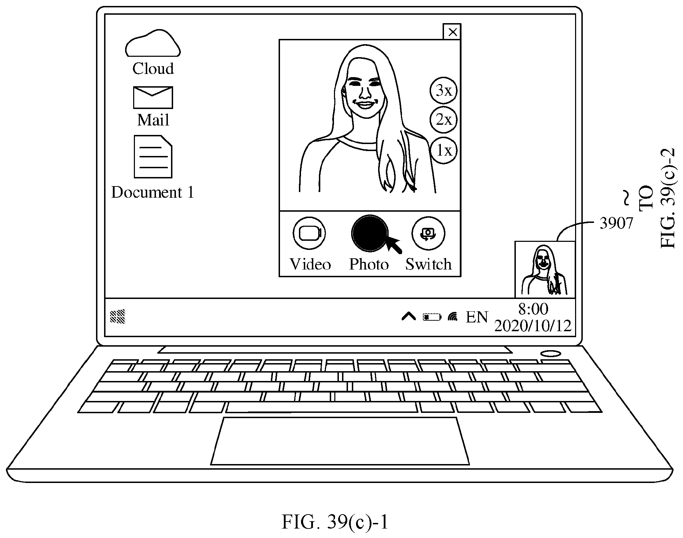

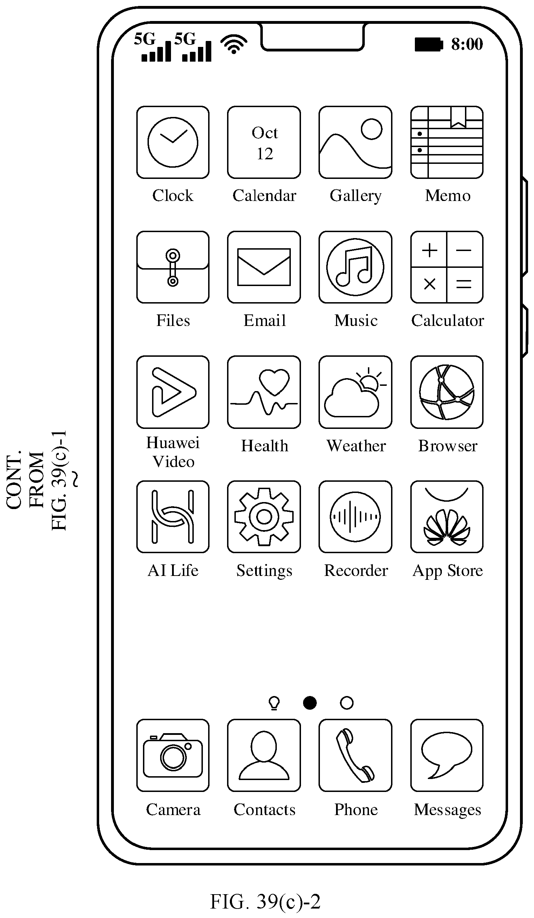

FIG. 39(a)-1 and FIG. 39(a)-2 to FIG. 39(c)-1 and FIG. 39(c)-2 show another group of graphical user interfaces according to an embodiment of this application;

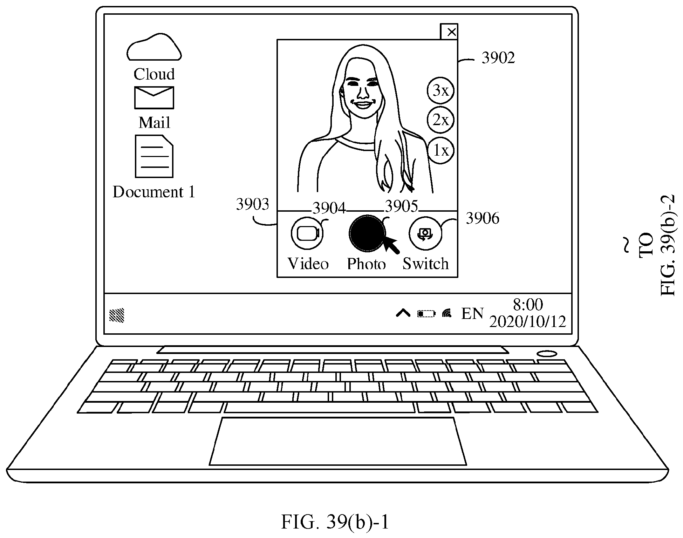

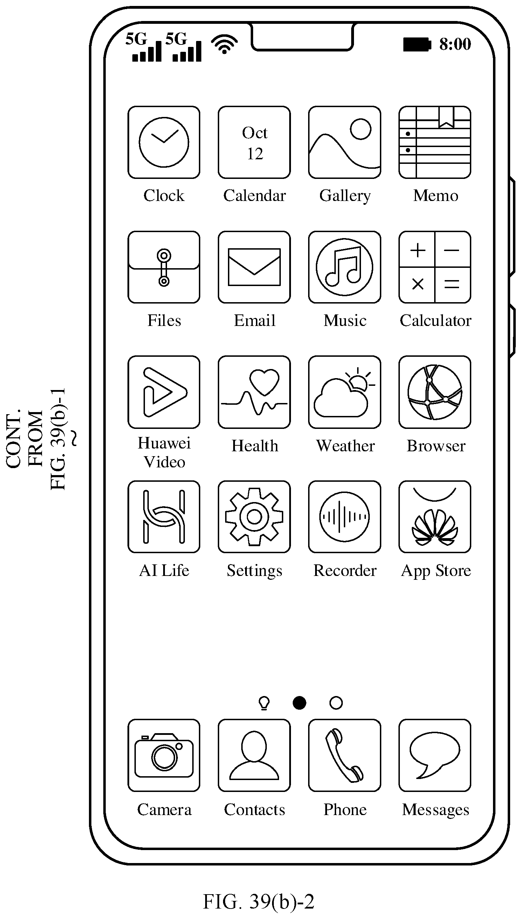

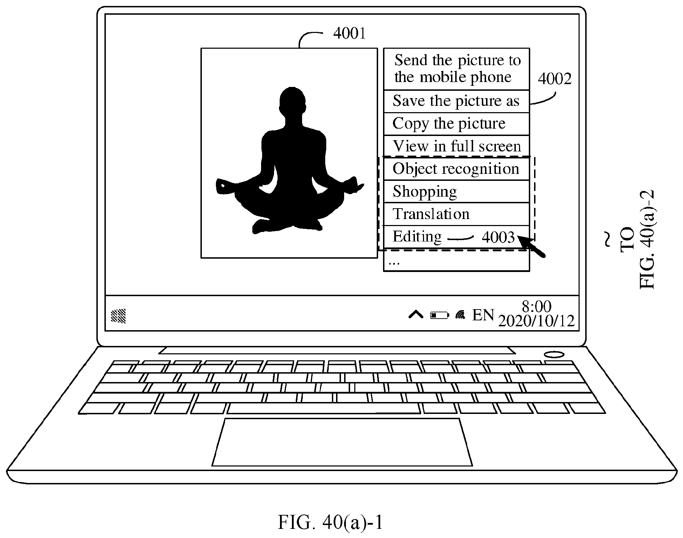

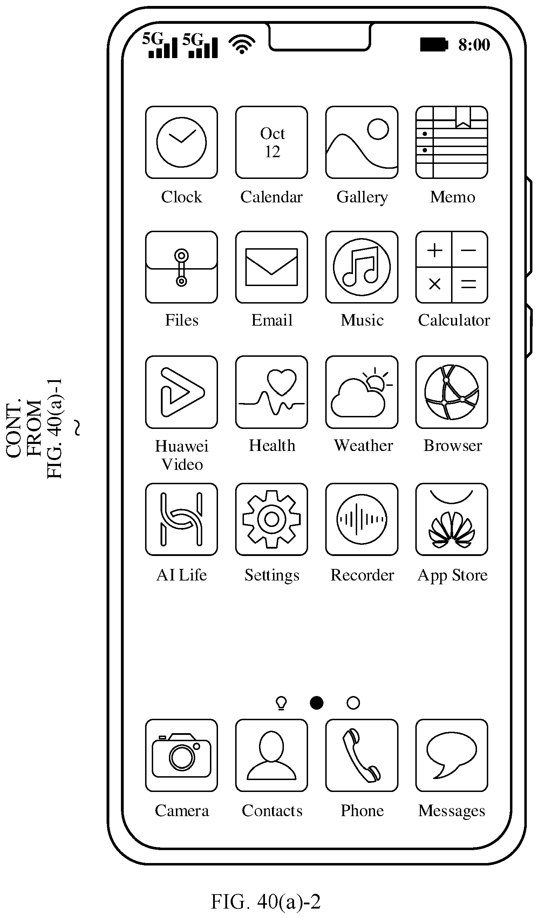

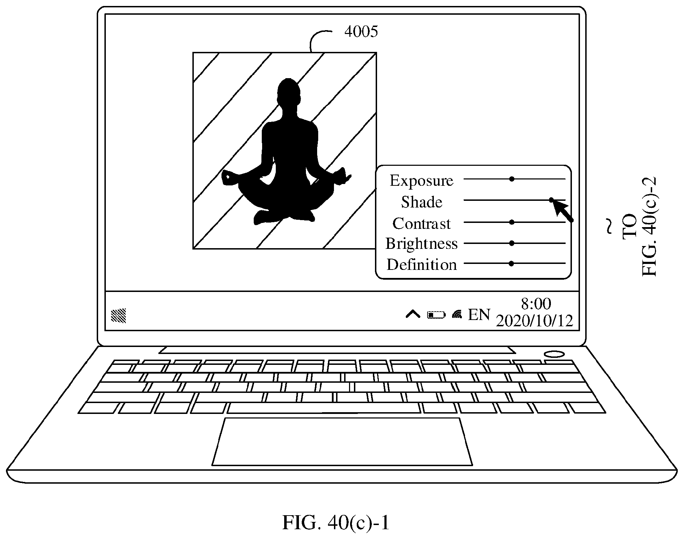

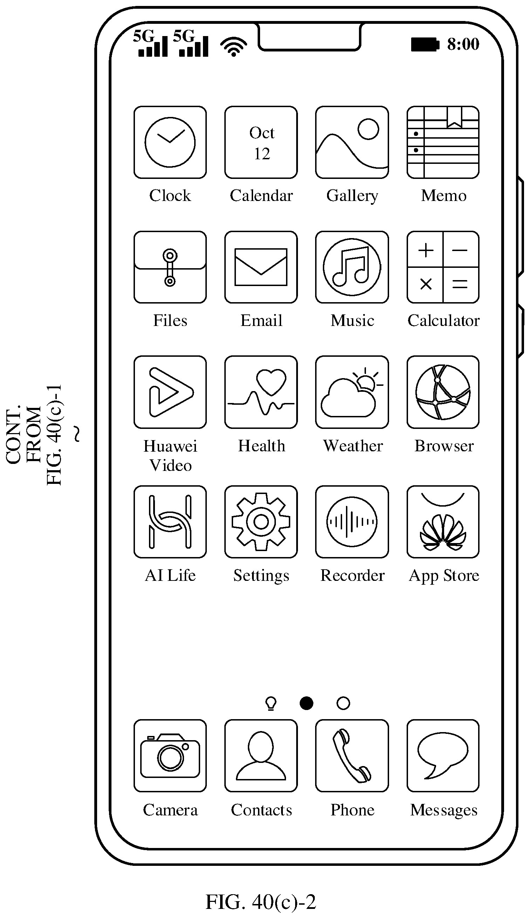

FIG. 40(a)-1 and FIG. 40(a)-2 to FIG. 40(c)-1 and FIG. 40(c)-2 show another group of graphical user interfaces according to an embodiment of this application;

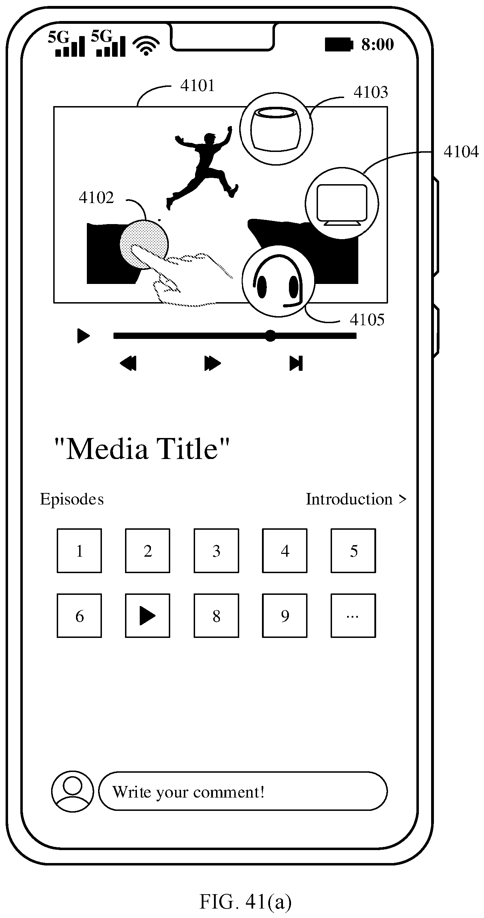

FIG. 41(a) to FIG. 41(c) show another group of graphical user interfaces according to an embodiment of this application;

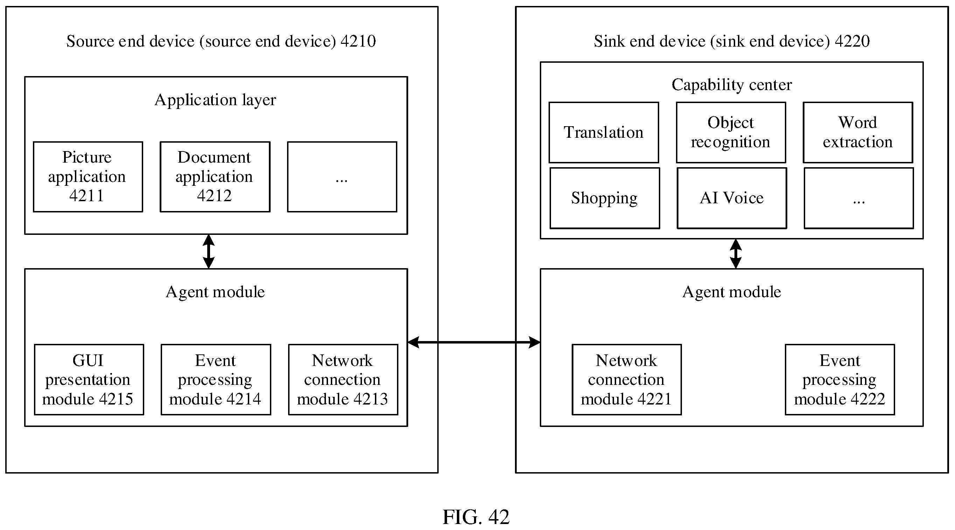

FIG. 42 is a schematic diagram of a system architecture according to an embodiment of this application;

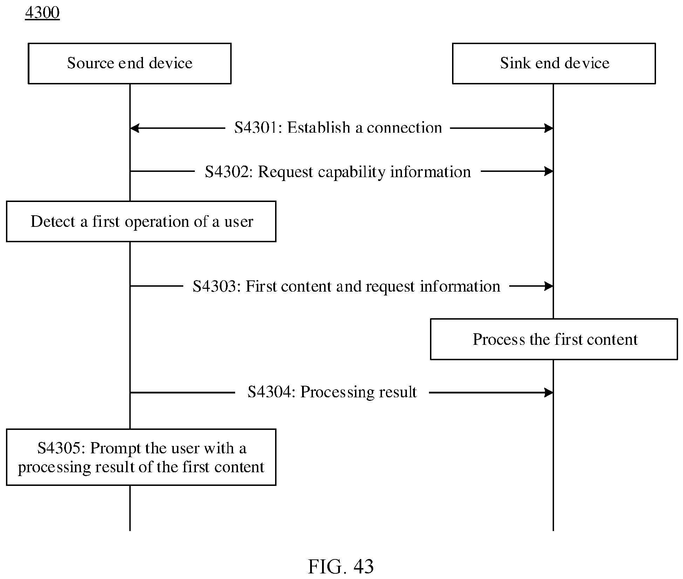

FIG. 43 is a schematic flowchart of a device capability invoking method according to an embodiment of this application;

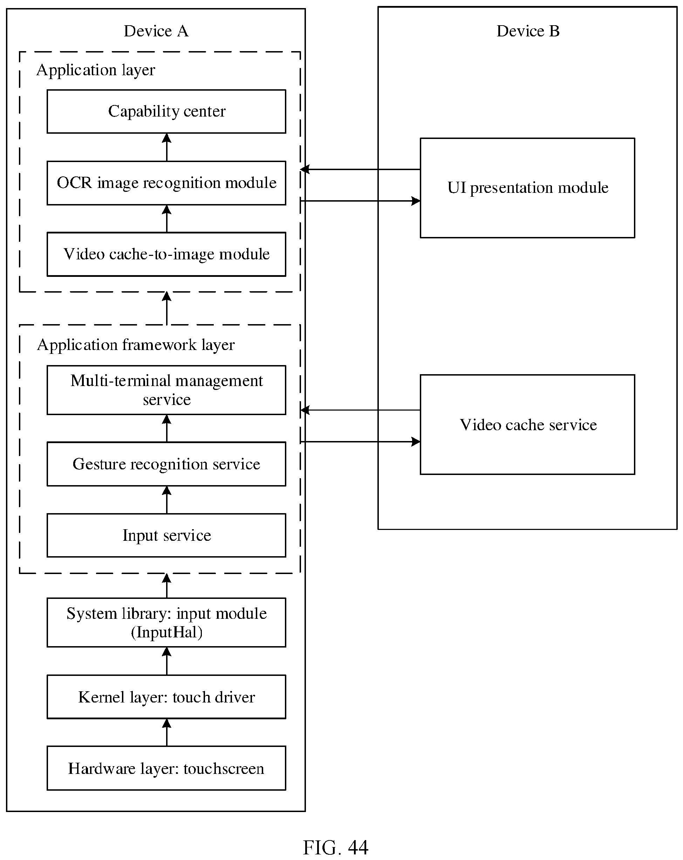

FIG. 44 shows a process of interaction between a device A (for example, a mobile phone) and a device B (for example, a smart television) according to an embodiment of this application;

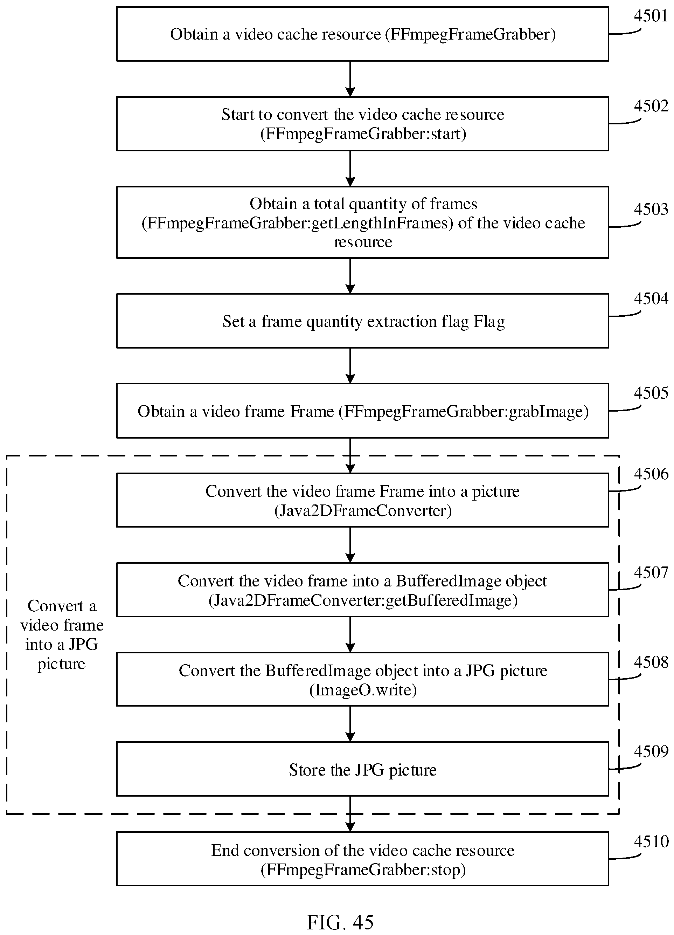

FIG. 45 shows a process in which a device A converts a video resource into image information according to an embodiment of this application;

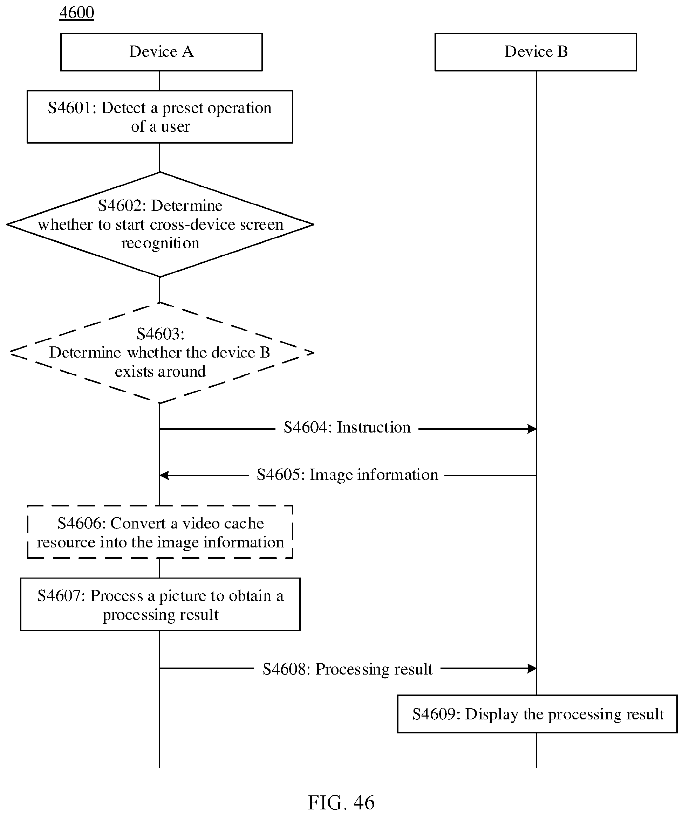

FIG. 46 is another schematic flowchart of a method for invoking a capability of another device according to an embodiment of this application;

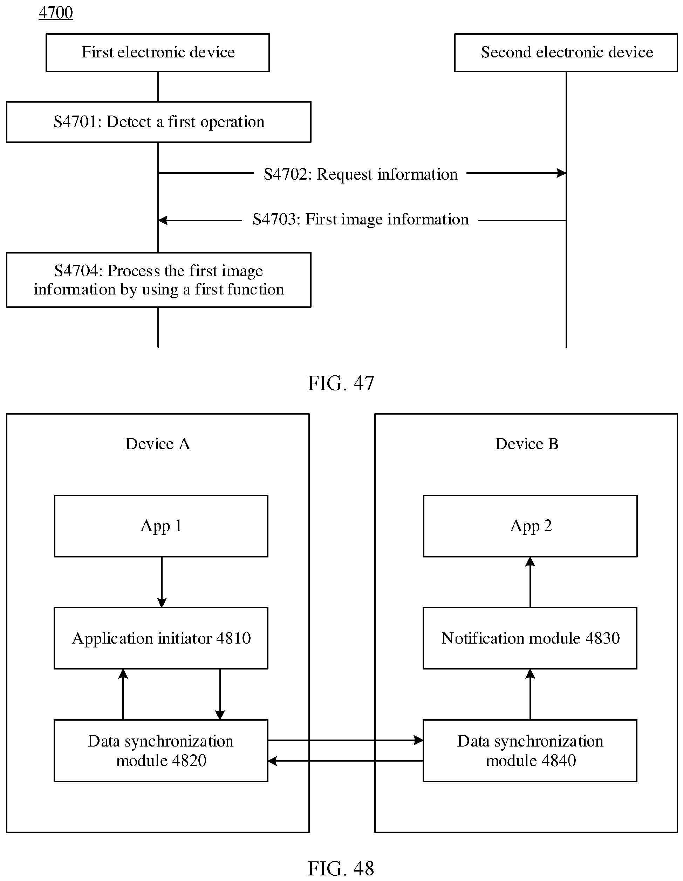

FIG. 47 is another schematic flowchart of a method for invoking a capability of another device according to an embodiment of this application;

FIG. 48 is another schematic diagram of a system architecture according to an embodiment of this application;

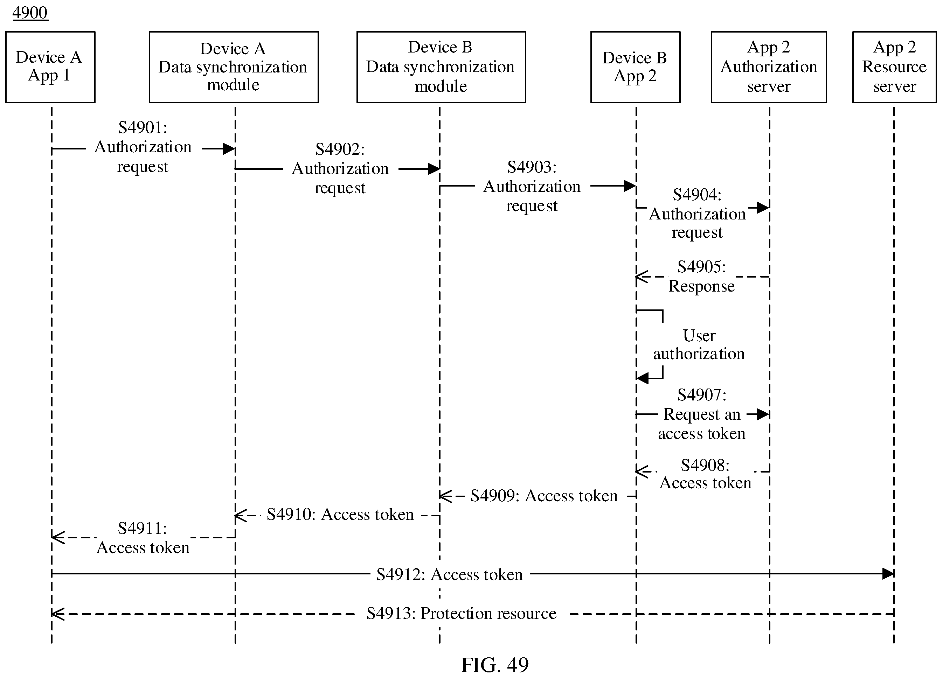

FIG. 49 is a schematic flowchart of a method for obtaining user data by a device A according to an embodiment of this application;

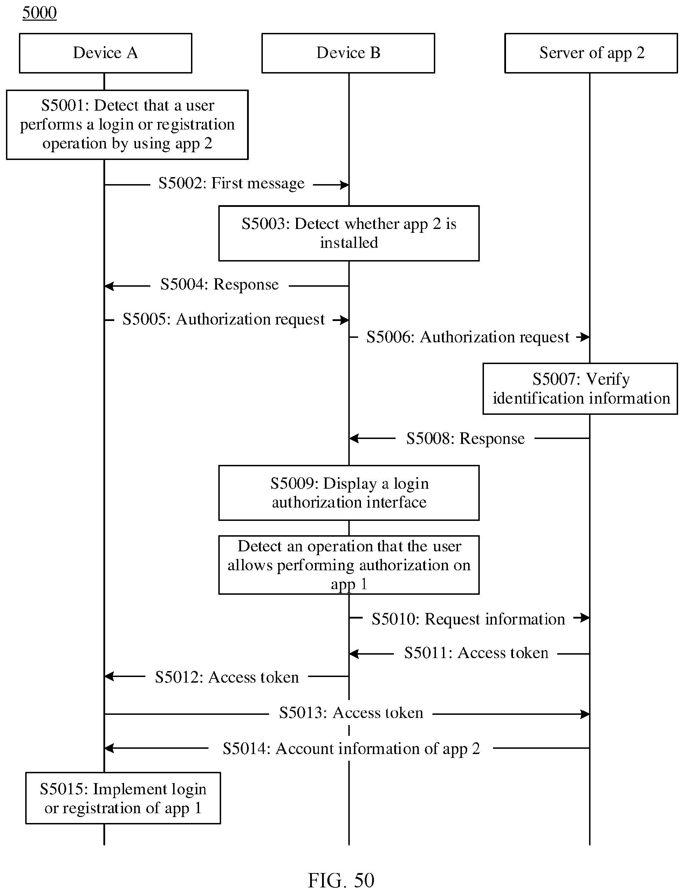

FIG. 50 is a schematic flowchart of a method for performing authorization by using another device according to an embodiment of this application;

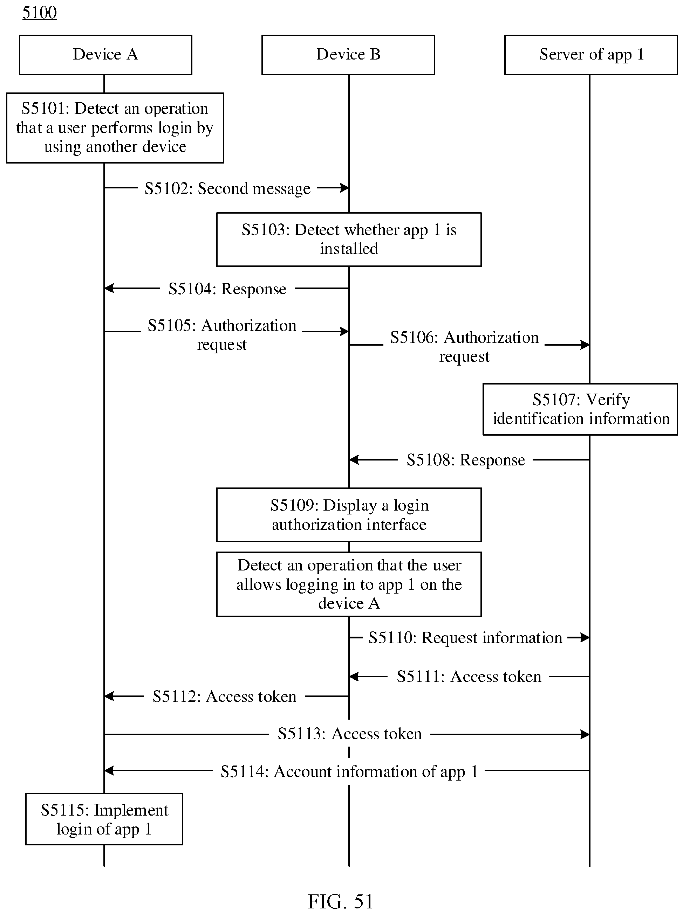

FIG. 51 is another schematic flowchart of a method for performing authorization by using another device according to an embodiment of this application;

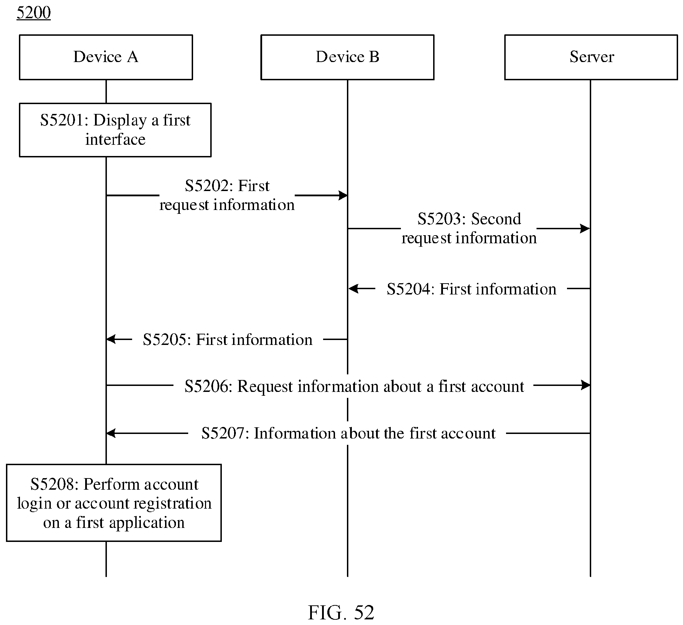

FIG. 52 is another schematic flowchart of a method for performing authorization by using another device according to an embodiment of this application;

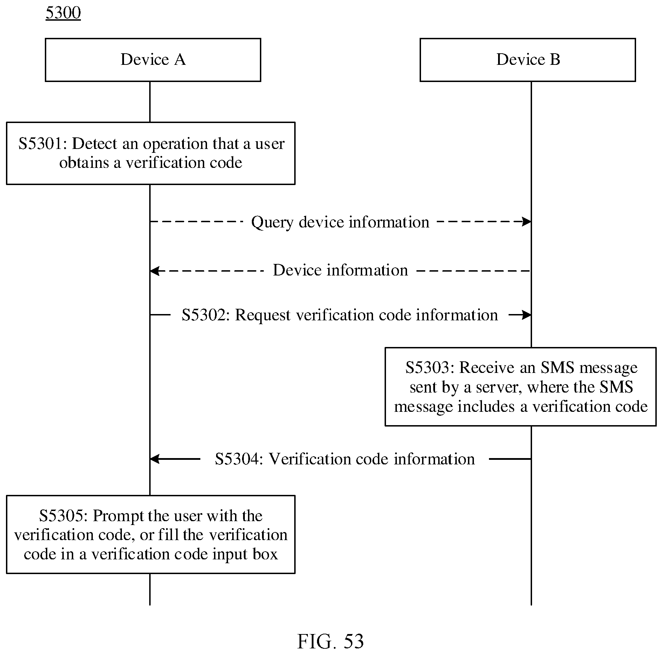

FIG. 53 is a schematic flowchart of a verification code obtaining method according to an embodiment of this application;

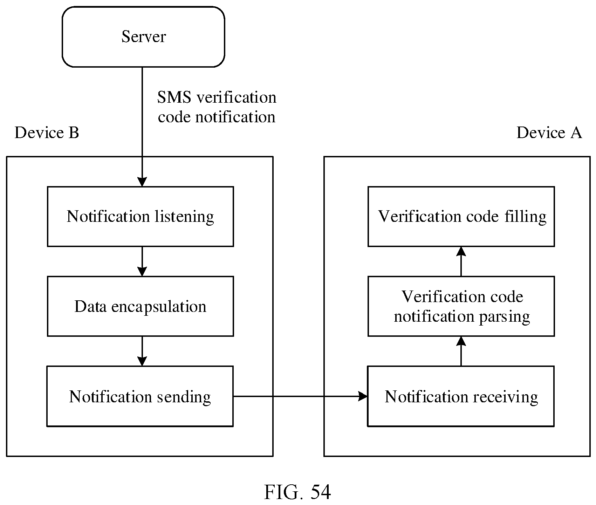

FIG. 54 is a schematic diagram of a process in which a device B transmits a verification code to a device A according to an embodiment of this application;

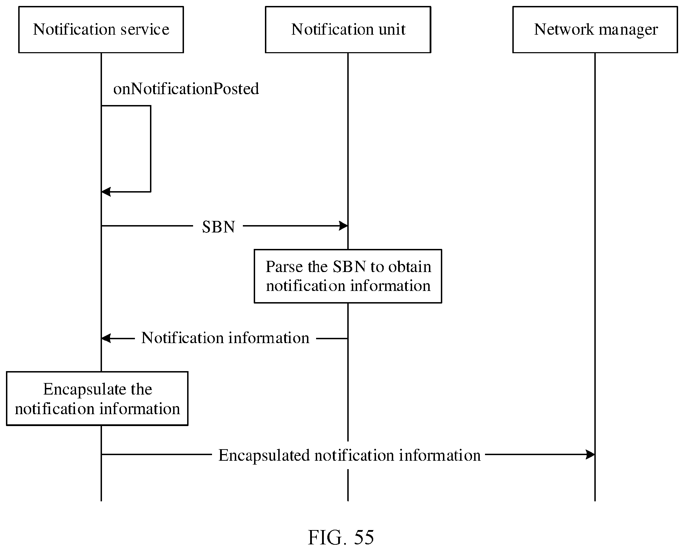

FIG. 55 is a schematic diagram of a process in which a device B parses and reassembles a verification code notification according to an embodiment of this application;

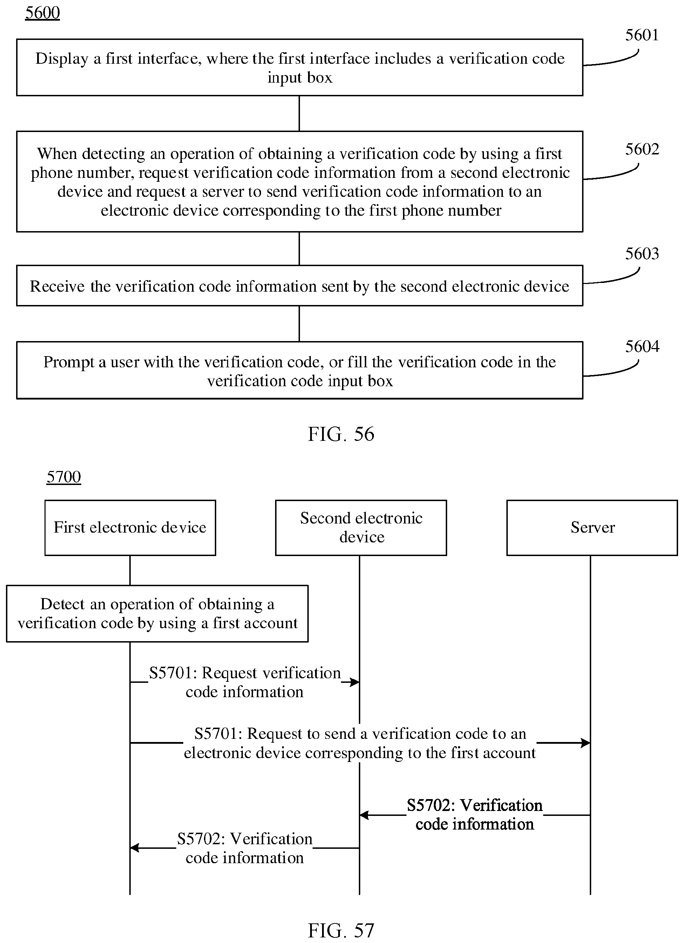

FIG. 56 is another schematic flowchart of a verification code obtaining method according to an embodiment of this application;

FIG. 57 is another schematic flowchart of a verification code obtaining method according to an embodiment of this application;

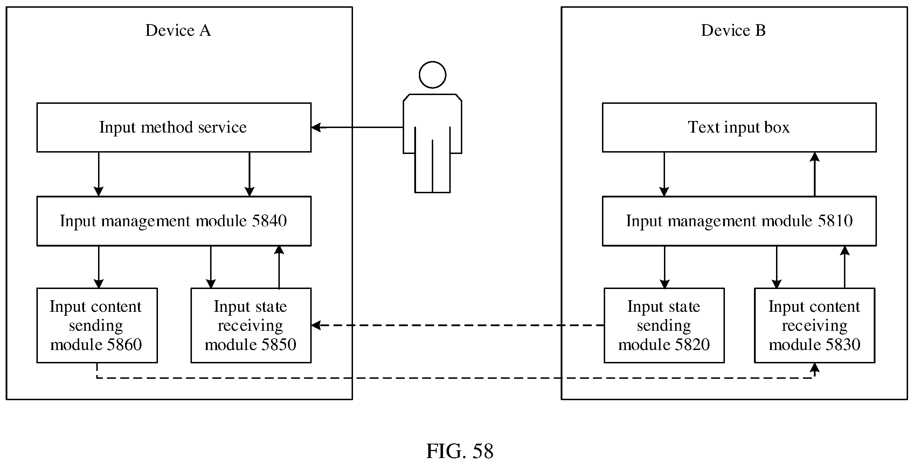

FIG. 58 is another schematic diagram of a system architecture according to an embodiment of this application;

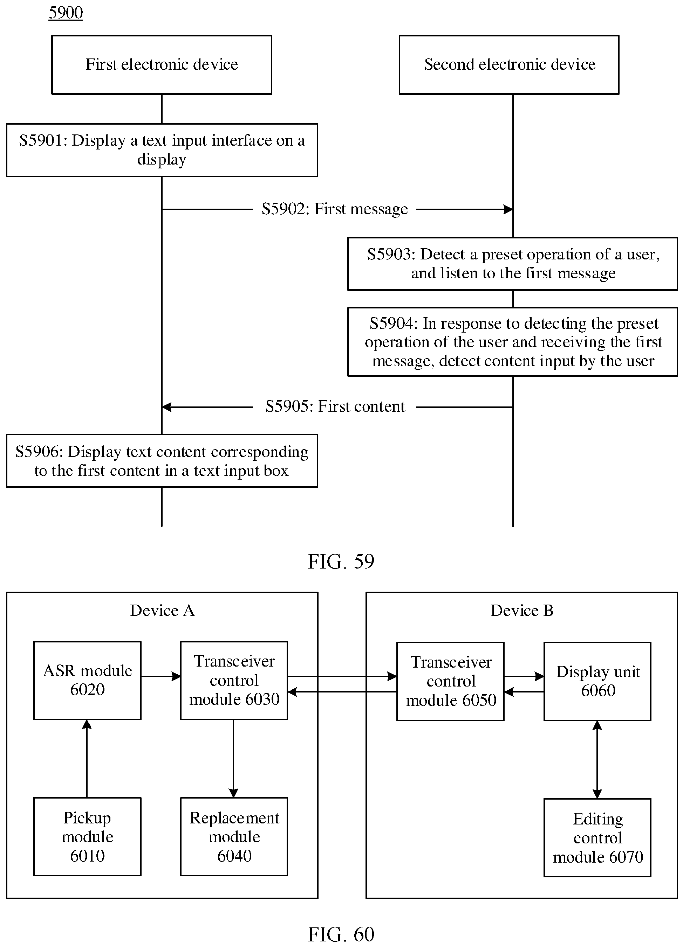

FIG. 59 is a schematic flowchart of a text input method according to an embodiment of this application;

FIG. 60 is another schematic diagram of a system architecture according to an embodiment of this application;

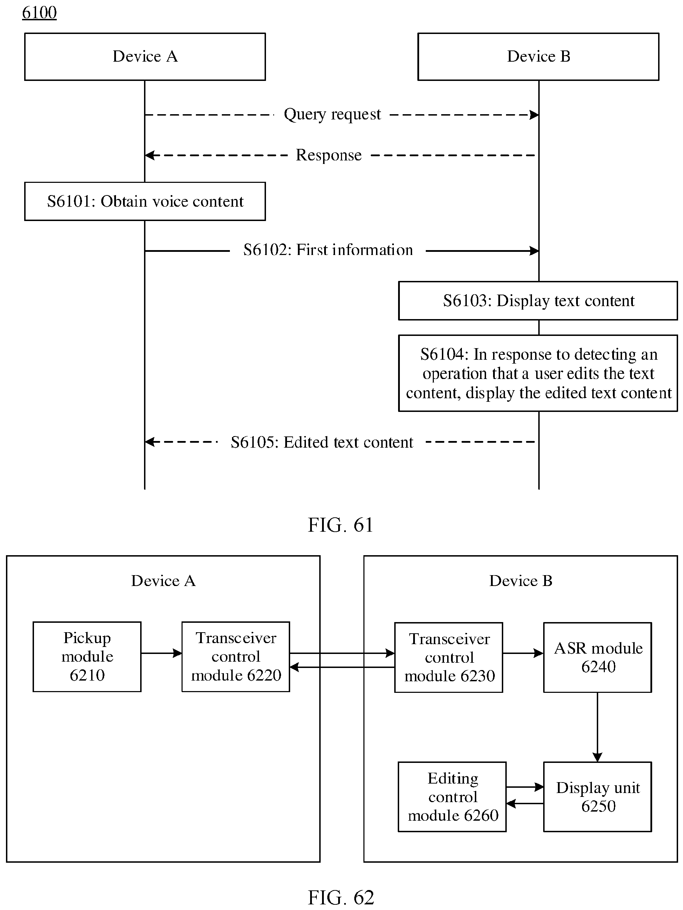

FIG. 61 is a schematic flowchart of a text editing method according to an embodiment of this application;

FIG. 62 is another schematic diagram of a system architecture according to an embodiment of this application;

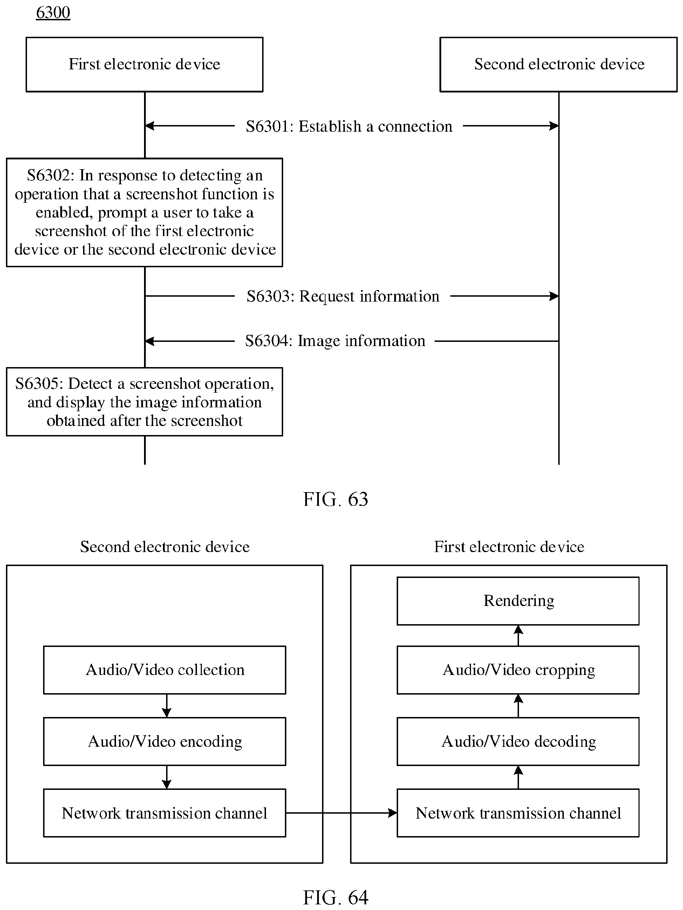

FIG. 63 is a schematic flowchart of a method for taking a screenshot of an image according to an embodiment of this application;

EP 4 187 876 B1

FIG. 64 is a schematic diagram of a process of transmitting image information between a first electronic device and a second electronic device according to an embodiment of this application;

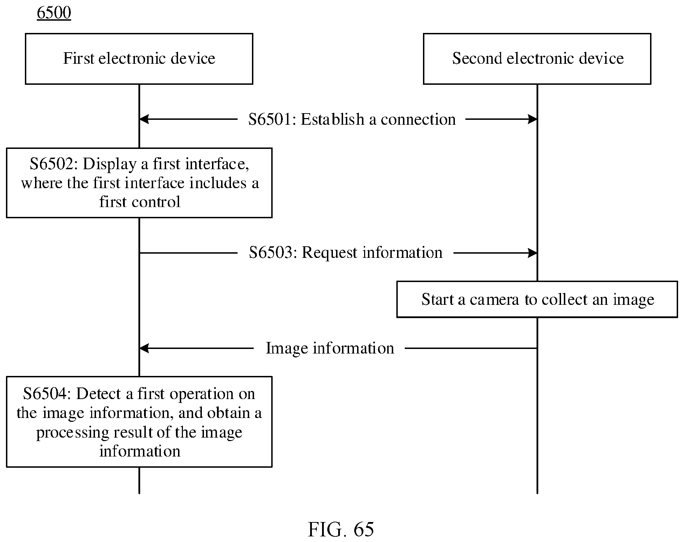

FIG. 65 is a schematic flowchart of a method for invoking a camera of another device to capture an image according to an embodiment of this application;

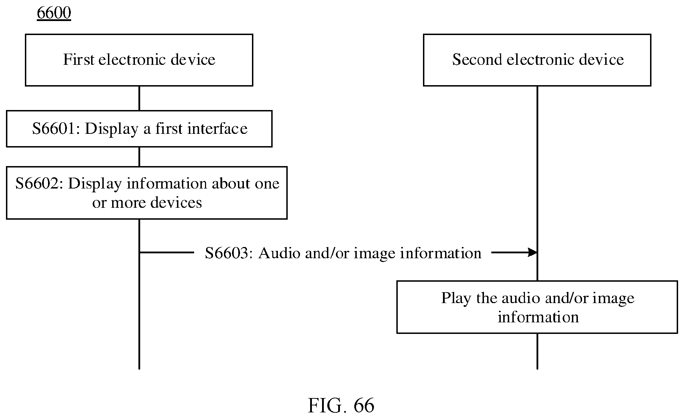

FIG. 66 is a schematic flowchart of a method for invoking another device to play audio or image information according to an embodiment of this application;

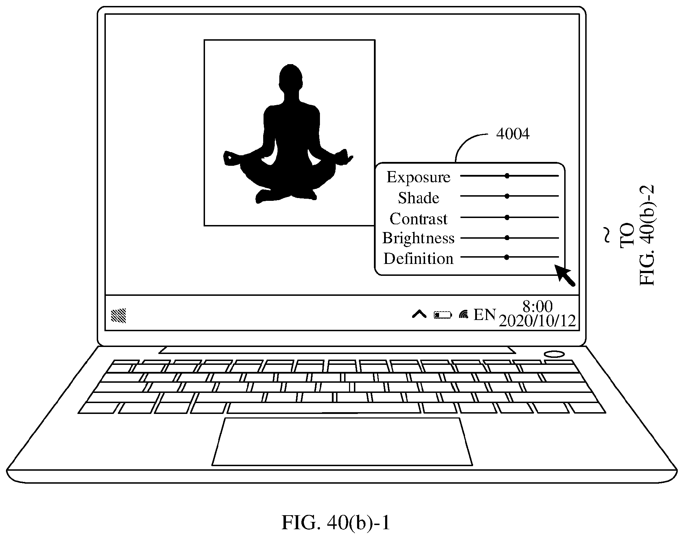

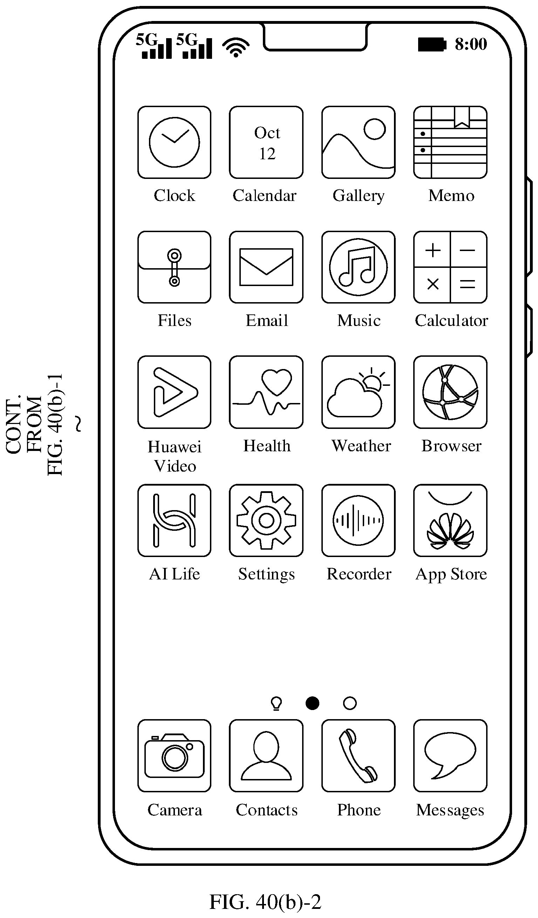

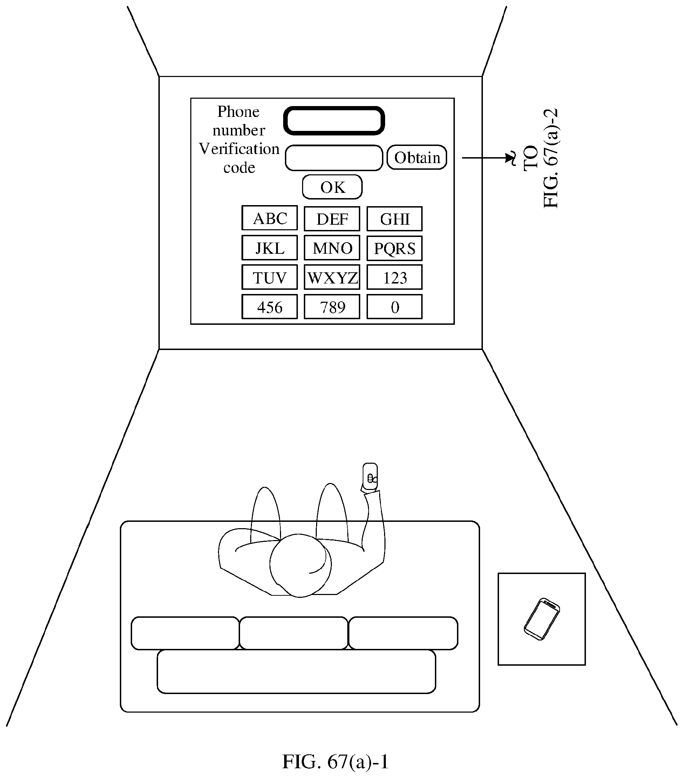

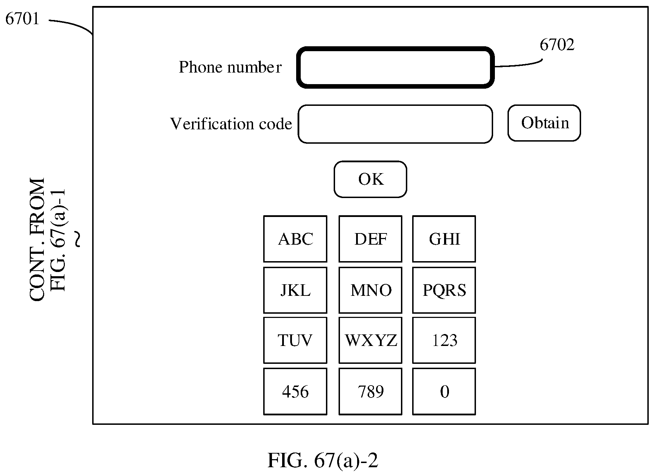

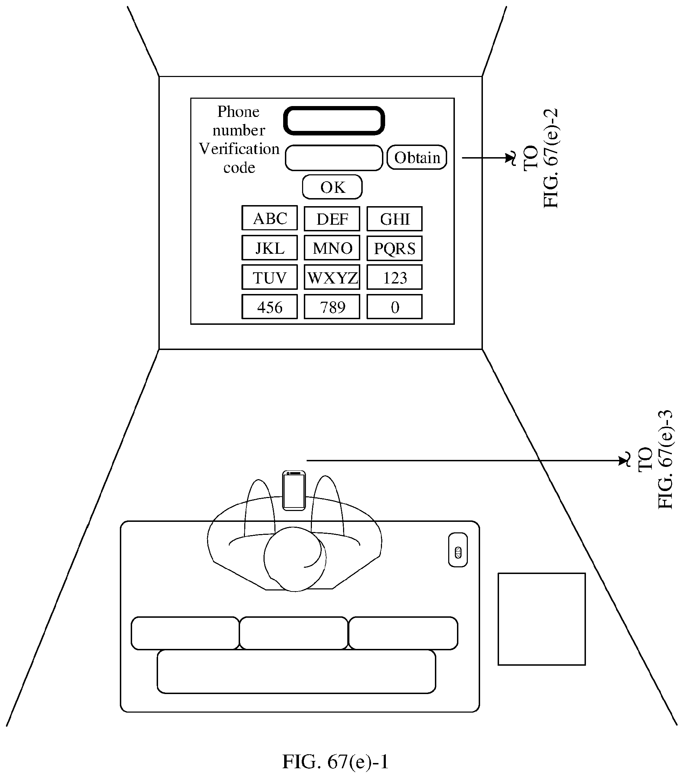

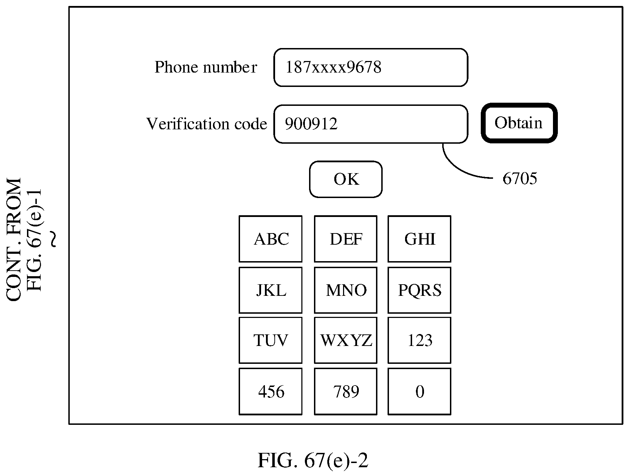

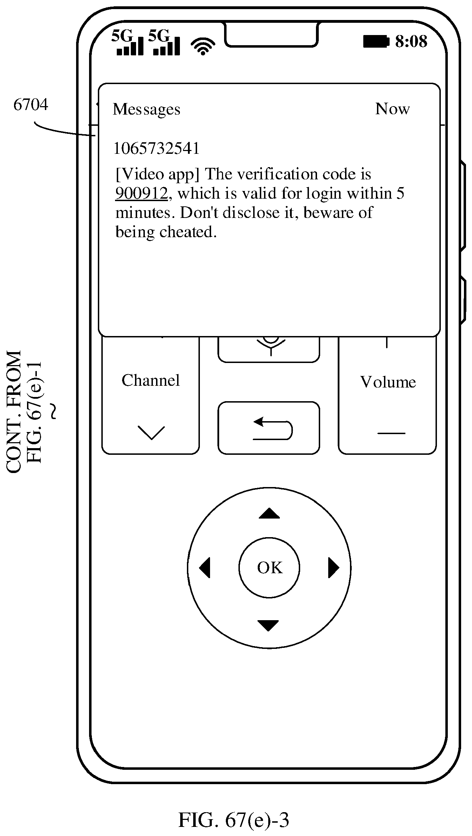

FIG. 67(a)-1 and FIG. 67(a)-2 to FIG. 67(e)-1 to FIG. 67(e)-3 show another group of graphical user interfaces according to an embodiment of this application;

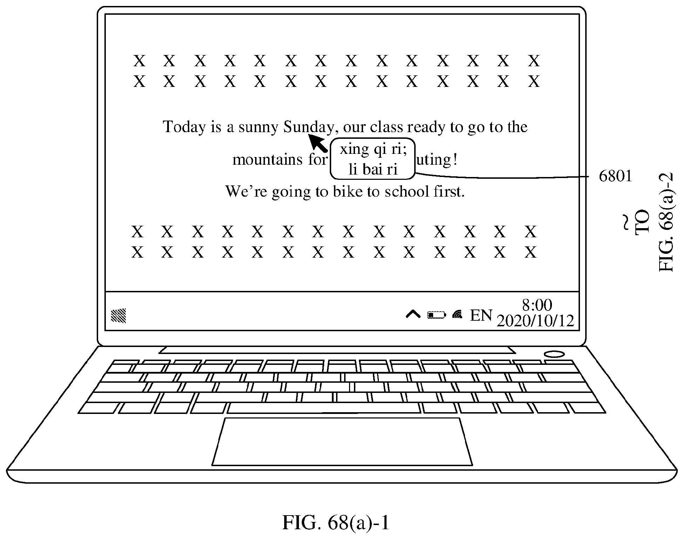

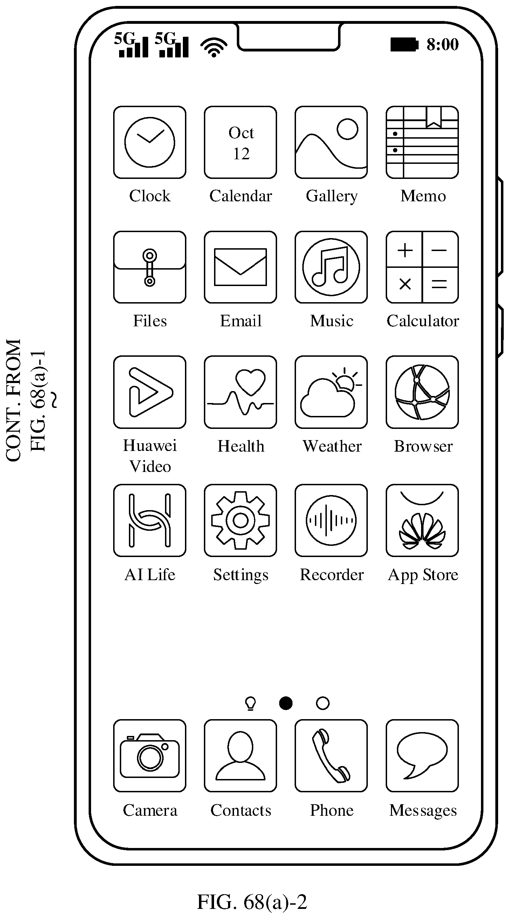

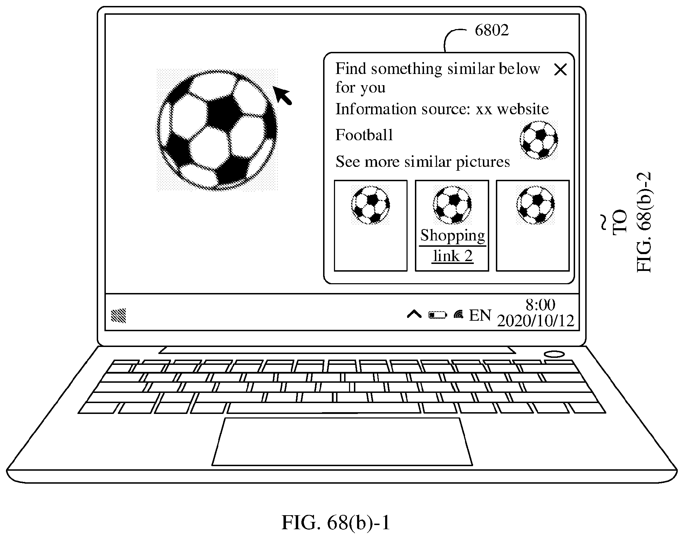

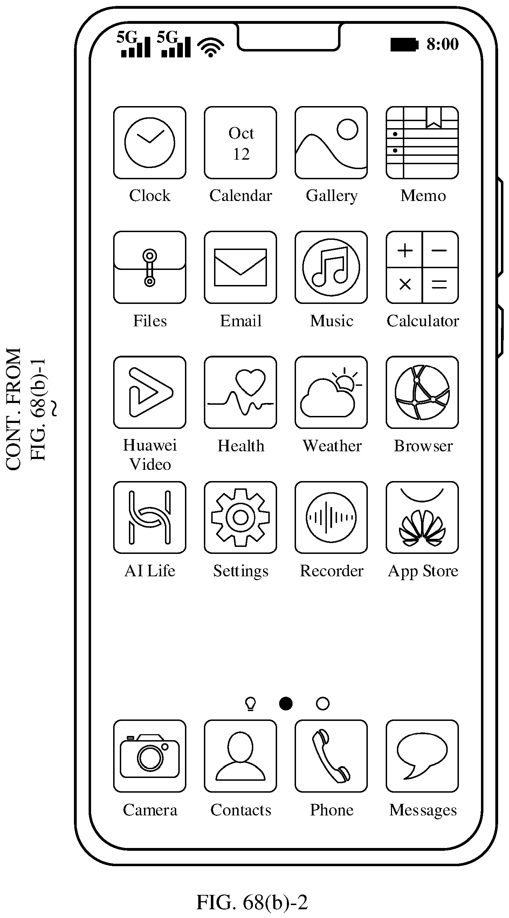

FIG. 68(a)-1 and FIG. 68(a)-2 and FIG. 68(b)-1 and FIG. 68(b)-2 show another group of graphical user interfaces according to an embodiment of this application;

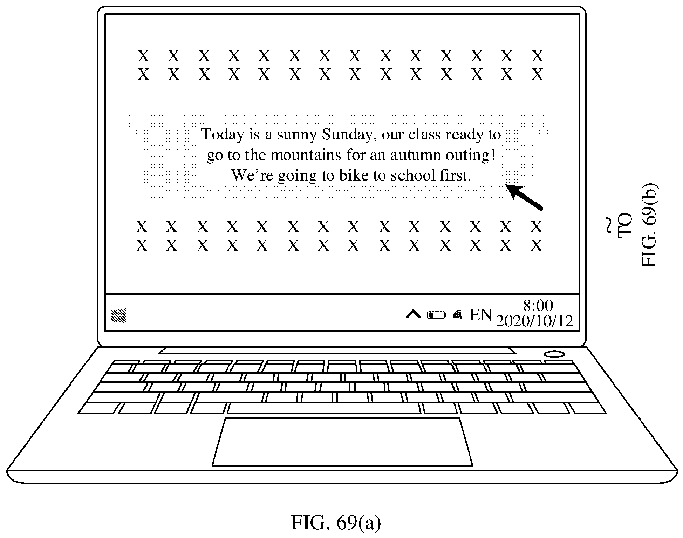

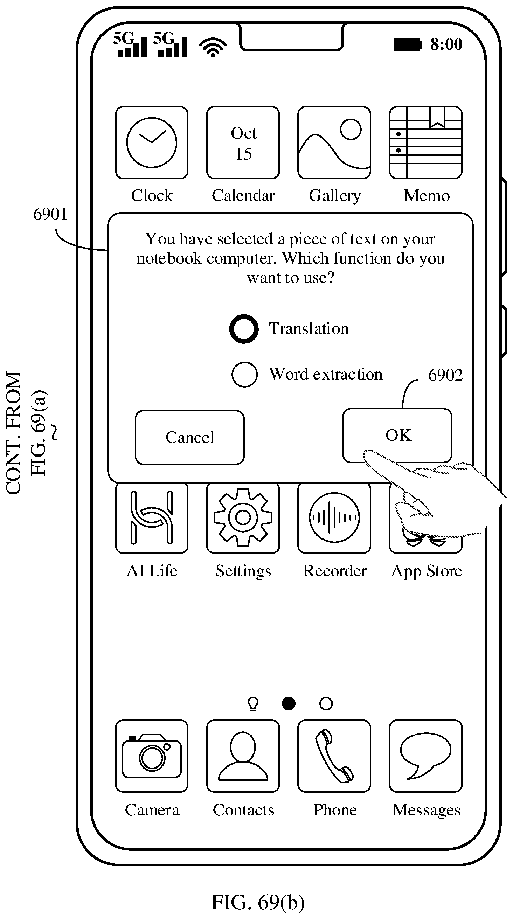

FIG. 69(a) and FIG. 69(b) show another group of graphical user interfaces according to an embodiment of this application;

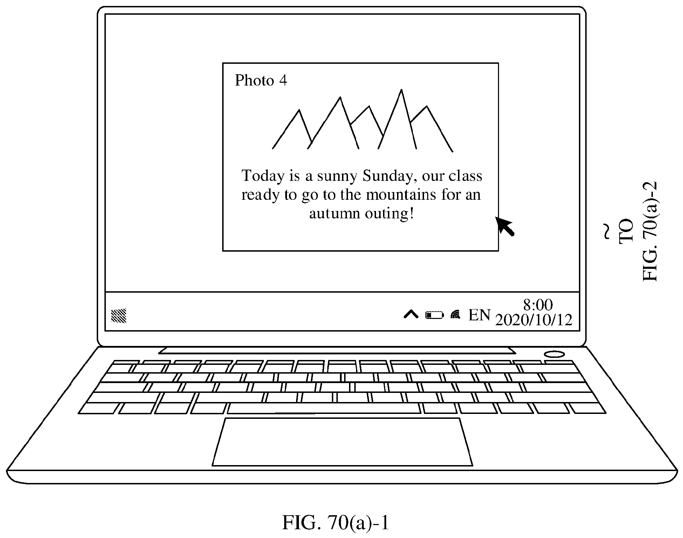

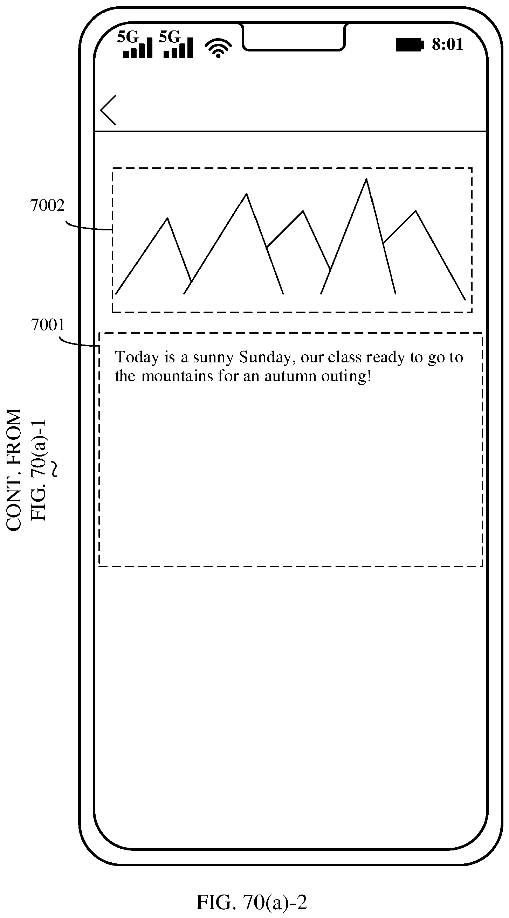

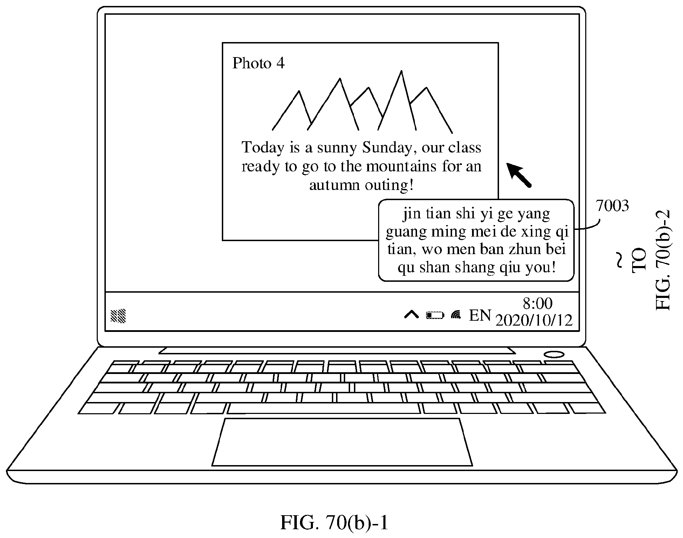

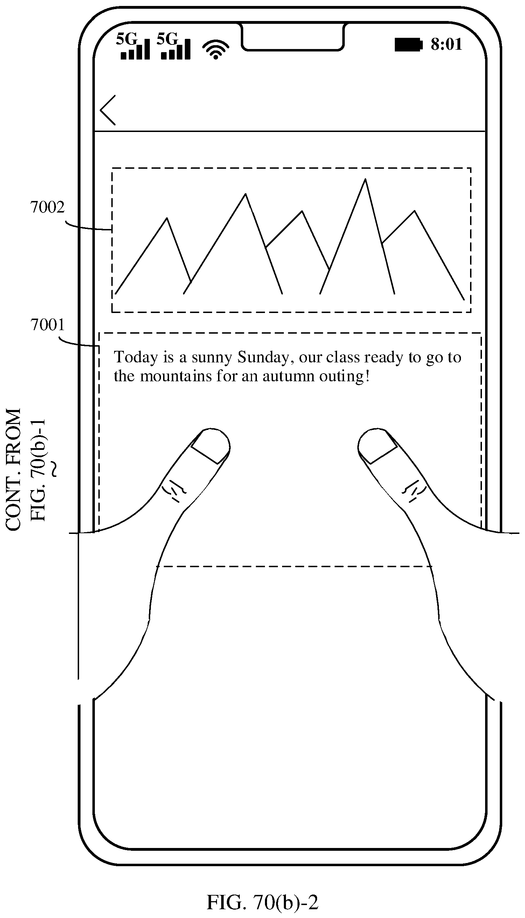

FIG. 70(a)-1 and FIG. 70(a)-2 and FIG. 70(b)-1 and FIG. 70(b)-2 show another group of graphical user interfaces according to an embodiment of this application; and

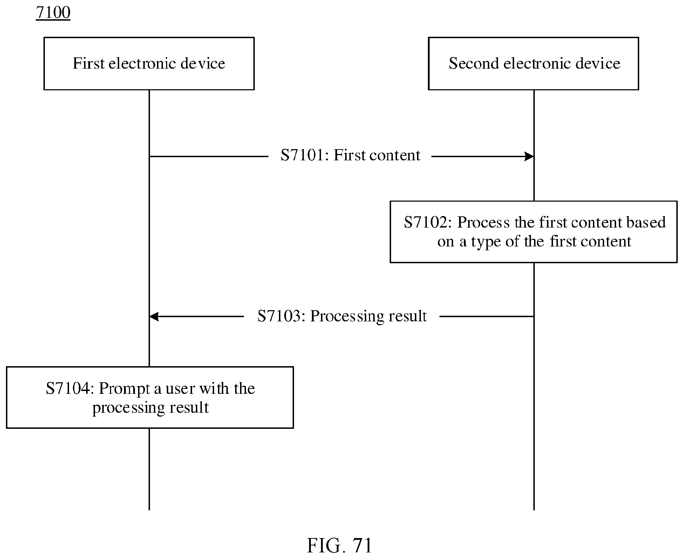

FIG. 71 is a schematic flowchart of a method for invoking a capability of another device according to an embodiment of this application.

## DESCRIPTION OF EMBODIMENTS

The following describes the technical solutions in embodiments of this application with reference to the accompanying drawings in embodiments of this application. In descriptions of embodiments of this application, "/" means "or" unless otherwise specified. For example, A/B may represent A or B. In this specification, "and/or" describes only an association relationship for describing associated objects and represents that three relationships may exist. For example, A and/or B may represent the following three cases: Only A exists, both A and B exist, and only B exists. In addition, in the descriptions of embodiments of this application, "a plurality of" means two or more.

The terms "first" and "second" mentioned below are merely intended for a purpose of description, and shall not be understood as an indication or implication of relative importance or implicit indication of a quantity of indicated technical features. Therefore, a feature limited by "first" or "second" may explicitly or implicitly include one or more features. In the descriptions of embodiments, unless otherwise specified, "a plurality of" means two or more.

A method provided in embodiments of this application may be applied to an electronic device, for example, a mobile phone, a tablet computer, a wearable device, a vehicle-mounted device, an augmented reality (augmented reality, AR) device/a virtual reality (virtual reality, VR) device, a notebook computer, an ultra-mobile personal computer (ultra-mobile personal computer, UMPC), a netbook, or a personal digital assistant (personal digital assistant, PDA). A specific type of the electronic device is not limited in embodiments of this application.

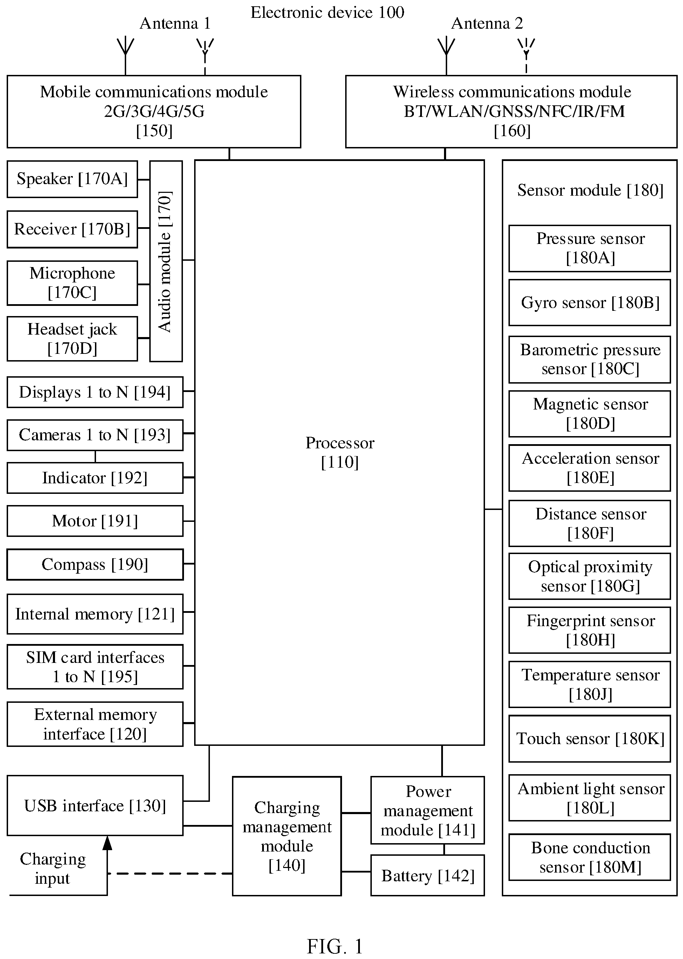

For example, FIG. 1 is a schematic diagram of a structure of an electronic device 100. The electronic device 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communications module 150, a wireless communications module 160, an audio module 170, a speaker 170A, a receiver 170B, a microphone 170C, a headset jack 170D, a sensor module 180, a button 190, a motor 191, an indicator 192, a camera 193, a display 194, a subscriber identification module (subscriber identification module, SIM) card interface 195, and the like. The sensor module 180 may include a pressure sensor 180A, a gyro sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It may be understood that the structure shown in this embodiment of this application constitutes no specific limitation on the electronic device 100. In some other embodiments of this application, the electronic device 100 may include more or fewer components than those shown in the figure, or some components may be combined, or some components may be split, or different component arrangements may be used. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, and/or a neural-network processing unit (neural-network processing unit, NPU). Different processing units may be independent components, or may be integrated into one or more processors.

The controller may be a nerve center and a command center of the electronic device 100. The controller may generate an operation control signal based on instruction operation code and a time sequence signal, to control instruction fetching and instruction execution.

A memory may be further disposed in the processor 110, and is configured to store instructions and data. In some embodiments, the memory in the processor 110 is a cache memory. The memory may store instructions or data just used or cyclically used by the processor 110. If the processor 110 needs to use the instructions or the data again, the processor 110 may directly invoke the instructions or the data from the memory. This avoids repeated access, reduces waiting time of the processor 110, and improves system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

The I2C interface is a two-way synchronization serial bus, and includes one serial data line (serial data line, SDA) and one serial clock line (serial clock line, SCL). In some embodiments, the processor 110 may include a plurality of groups of I2C buses. The processor 110 may be separately coupled to the touch sensor 180K, a charger, a flash, the camera 193, and the like through different I2C bus interfaces. For example, the processor 110 may be coupled to the touch sensor 180K through the I2C interface, so that the processor 110 communicates with the touch sensor 180K through the I2C bus interface, thereby implementing a touch function of the electronic device 100.

The I2S interface may be configured to perform audio communication. In some embodiments, the processor 110 may include a plurality of groups of I2S buses. The processor 110 may be coupled to the audio module 170 through the I2S bus, to implement communication between the processor 110 and the audio module 170. In some embodiments, the audio module 170 may transmit an audio signal to the wireless communications module 160 through the I2S interface, to implement a function of answering a call through a Bluetooth headset.

The PCM interface may also be configured to: perform audio communication, and sample, quantize, and code an analog signal. In some embodiments, the audio module 170 may be coupled to the wireless communications module 160 through a PCM bus interface. In some embodiments, the audio module 170 may alternatively transmit an audio signal to the wireless communications module 160 through the PCM interface, to implement a function of answering a call through a Bluetooth headset. Both the I2S interface and the PCM interface may be configured to perform audio communication.

The UART interface is a universal serial data bus, and is configured to perform asynchronous communication. The bus may be a two-way communications bus. The bus converts to-be-transmitted data between serial communication and parallel communication. In some embodiments, the UART interface is usually configured to connect the processor 110 to the wireless communications module 160. For example, the processor 110 communicates with a Bluetooth module in the wireless communications module 160 through the UART interface, to implement a Bluetooth function. In some embodiments, the audio module 170 may transmit an audio signal to the wireless communications module 160 through the UART interface, to implement a function of playing music through a Bluetooth headset.

The MIPI interface may be configured to connect the processor 110 to a peripheral component such as the display 194 or the camera 193. The MIPI interface includes a camera serial interface (camera serial interface, CSI), a display serial interface (display serial interface, DSI), and the like. In some embodiments, the processor 110 communicates with the camera 193 through the CSI, to implement a photographing function of the electronic device 100. The processor 110 communicates with the display 194 through the DSI interface, to implement a display function of the electronic device 100.

The GPIO interface may be configured by software. The GPIO interface may be configured as a control signal or a data signal. In some embodiments, the GPIO interface may be configured to connect the processor 110 to the camera 193, the display 194, the wireless communications module 160, the audio module 170, the sensor module 180, or the like. The GPIO interface may alternatively be configured as an I2C interface, an I2S interface, a UART interface, an MIPI interface, or the like.

The USB interface 130 is an interface that conforms to a USB standard specification, and may be specifically a mini-USB interface, a micro-USB interface, a USB Type-C interface, or the like. The USB interface 130 may be configured to connect to a charger to charge the electronic device 100, or may be configured to transmit data between the electronic device 100 and a peripheral device, or may be configured to connect to a headset for playing audio through the headset. The interface may be further configured to connect to another electronic device such as an AR device.

It may be understood that an interface connection relationship between the modules shown in this embodiment of this application is merely an example for description, and constitutes no limitation on the structure of the electronic device 100. In other embodiments of this application, the electronic device 100 may alternatively use an interface connection mode different from that in the foregoing embodiment, or use a combination of a plurality of interface connection modes.

The charging management module 140 is configured to receive a charging input from a charger. The charger may be a wireless charger or a wired charger. In some embodiments of wired charging, the charging management module 140 may receive a charging input of a wired charger through the USB interface 130. In some embodiments of wireless charging, the charging management module 140 may receive a wireless charging input through a wireless charging coil of the electronic device 100. The charging management module 140 supplies power to the electronic device through the power management module 141 while charging the battery 142.

The power management module 141 is configured to connect the battery 142 and the charging management module 140 to the processor 110. The power management module 141 receives an input of the battery 142 and/or an input of the charging management module 140, to supply power to the processor 110, the internal memory 121, an external memory, the display 194, the camera 193, the wireless communications module 160, and the like. The power management module 141 may be further configured to monitor parameters such as a battery capacity, a battery cycle count, and a battery health status (electric leakage or impedance). In other embodiments, the power management module 141 may alternatively be disposed in the processor 110. In other embodiments, the power management module 141 and the charging management module 140 may alternatively be disposed in a same device.

A wireless communication function of the electronic device 100 may be implemented through the antenna 1, the antenna 2, the mobile communications module 150, the wireless communications module 160, the modem processor, the baseband processor, and the like.

The antenna 1 and the antenna 2 are configured to transmit and receive an electromagnetic wave signal. Each antenna in the electronic device 100 may be configured to cover one or more communications frequency bands. Different antennas may be further multiplexed, to increase antenna utilization. For example, the antenna 1 may be multiplexed as a diversity antenna of a wireless local area network. In other embodiments, an antenna may be used in combination with a tuning switch.

The mobile communications module 150 may provide a wireless communication solution that is applied to the electronic device 100 and that includes 2G/3G/4G/5G or the like. The mobile communications module 150 may include at least one filter, a switch, a power amplifier, a low noise amplifier (low noise amplifier, LNA), and the like. The mobile communications module 150 may receive an electromagnetic wave through the antenna 1, perform processing such as filtering or amplification on the received electromagnetic wave, and transmit the electromagnetic wave to the modem processor for demodulation. The mobile communications module 150 may further amplify a signal modulated by the modem processor, and convert the signal into an electromagnetic wave for radiation through the antenna 1. In some embodiments, at least some functional modules of the mobile communications module 150 may be disposed in the processor 110. In some embodiments, at least some functional modules of the mobile communications module 150 may be disposed in a same device as at least some modules of the processor 110.

The modem processor may include a modulator and a demodulator. The modulator is configured to modulate a to-be-sent low-frequency baseband signal into a medium-high frequency signal. The demodulator is configured to demodulate a received electromagnetic wave signal into a low-frequency baseband signal. Then, the demodulator transmits the low-frequency baseband signal obtained through demodulation to the baseband processor for processing. The low-frequency baseband signal is processed by the baseband processor and then transmitted to the application processor. The application processor outputs a sound signal through an audio device (which is not limited to the speaker 170A, the receiver 170B, or the like), or displays an image or a video through the display 194. In some embodiments, the modem processor may be an independent device. In other embodiments, the modem processor may be independent of the processor 110, and is disposed in a same device as the mobile communications module 150 or another functional module.

The wireless communications module 160 may provide a wireless communication solution that is applied to the electronic device 100 and that includes a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), near field communication (near field communication, NFC), an infrared (infrared, IR) technology, or the like. The wireless communications module 160 may be one or more components integrating at least one communication processing module. The wireless communications module 160 receives an electromagnetic wave through the antenna 2, performs frequency modulation and filtering processing on an electromagnetic wave signal, and sends a processed signal to the processor 110. The wireless communications module 160 may further receive a to-be-sent signal from the processor 110, perform frequency modulation and amplification on the signal, and convert the signal into an electromagnetic wave for radiation through the antenna 2.

In some embodiments, in the electronic device 100, the antenna 1 is coupled to the mobile communications module 150, and the antenna 2 is coupled to the wireless communications module 160, so that the electronic device 100 can communicate with a network and another device by using a wireless communications technology. The wireless communications technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite based augmentation system (satellite based augmentation system, SBAS).

The electronic device 100 may implement a display function through the GPU, the display 194, the application processor, and the like. The GPU is a microprocessor for image processing, and is connected to the display 194 and the application processor. The GPU is configured to: perform mathematical and geometric computation, and render an image. The processor 110 may include one or more GPUs, which execute program instructions to generate or change display information.

The display 194 is configured to display an image, a video, and the like. The display 194 includes a display panel. The display panel may be a liquid crystal display (liquid crystal display, LCD), an organic light-emitting diode (organic light-emitting diode, OLED), an active-matrix organic light emitting diode (active-matrix organic light emitting diode, AMOLED), a flexible light-emitting diode (flexible light-emitting diode, FLED), a mini-LED, a micro-LED, a micro-OLED, a quantum dot light emitting diode (quantum dot light emitting diode, QLED), or the like. In some embodiments, the electronic device 100 may include one or N displays 194, where N is a positive integer greater than 1.

The electronic device 100 may implement a photographing function through the camera 193, the ISP, the video codec, the GPU, the display 194, the application processor, and the like.

The ISP is configured to process data fed back by the camera 193. For example, during photographing, a shutter is pressed, and light is transmitted to a photosensitive element of the camera through a lens. An optical signal is converted into an electrical signal, and the photosensitive element of the camera transmits the electrical signal to the ISP for processing, to convert the electrical signal into a visible image. The ISP may further perform algorithm optimization on noise, brightness, and complexion of the image. The ISP may further optimize parameters such as exposure and a color temperature of a photographing scenario. In some embodiments, the ISP may be disposed in the camera 193.

The camera 193 is configured to capture a static image or a video. An optical image of an object is generated through the lens, and is projected onto the photosensitive element. The photosensitive element may be a charge coupled device (charge coupled device, CCD) or a complementary metal-oxide-semiconductor (complementary metal-oxide-semiconductor, CMOS) phototransistor. The light-sensitive element converts an optical signal into an electrical signal, and then transmits the electrical signal to the ISP to convert the electrical signal into a digital image signal. The ISP outputs the digital image signal to the DSP for processing. The DSP converts the digital image signal into an image signal in a standard format such as RGB or YUV. In some embodiments, the electronic device 100 may include one or N cameras 193, where N is a positive integer greater than 1.

The digital signal processor is configured to process a digital signal, and may process another digital signal in addition to the digital image signal. For example, when the electronic device 100 selects a frequency, the digital signal processor is configured to perform Fourier transformation on frequency energy.

The video codec is configured to compress or decompress a digital video. The electronic device 100 may support one or more video codecs. In this way, the electronic device 100 may play or record videos in a plurality of coding formats, for example, moving picture experts group (moving picture experts group, MPEG)-1, MPEG-2, MPEG-3, and MPEG-4.

The NPU is a neural-network (neural-network, NN) computing processor, quickly processes input information by referring to a structure of a biological neural network, for example, by referring to a mode of transfer between human brain neurons, and may further continuously perform self-learning. Applications such as intelligent cognition of the electronic device 100 may be implemented through the NPU, for example, image recognition, facial recognition, speech recognition, and text understanding.

The external memory interface 120 may be used to connect to an external storage card, for example, a micro SD card, to extend a storage capability of the electronic device 100. The external storage card communicates with the processor 110 through the external memory interface 120, to implement a data storage function. For example, files such as music and videos are stored in the external storage card.

The internal memory 121 may be configured to store computer-executable program code. The executable program code includes instructions. The processor 110 runs the instructions stored in the internal memory 121, to perform various function applications of the electronic device 100 and data processing. The internal memory 121 may include a program storage area and a data storage area. The program storage area may store an operating system, an application required by at least one function (for example, a voice playing function or an image playing function), and the like. The data storage area may store data (such as audio data and a phone book) and the like created during use of the electronic device 100. In addition, the internal memory 121 may include a high-speed random access memory, and may further include a nonvolatile memory, for example, at least one disk storage device, a flash memory, or a universal flash storage (universal flash storage, UFS).

The electronic device 100 may implement audio functions such as music playing and recording through the audio module 170, the speaker 170A, the receiver 170B, the microphone 170C, the headset jack 170D, the application processor, and the like.

The audio module 170 is configured to convert digital audio information into an analog audio signal for output, or is configured to convert an analog audio input into a digital audio signal. The audio module 170 may be further configured to encode and decode an audio signal. In some embodiments, the audio module 170 may be disposed in the processor 110, or some functional modules of the audio module 170 are disposed in the processor 110.

The speaker 170A, also referred to as a "loudspeaker", is configured to convert an audio electrical signal into a sound signal. The electronic device 100 may be used to listen to music or answer a call in a hands-free mode over the speaker 170A.

The receiver 170B, also referred to as an "earpiece", is configured to convert an audio electrical signal into a sound signal. When a call is answered or speech information is received through the electronic device 100, the receiver 170B may be put close to a human ear to listen to a voice.

The microphone 170C, also referred to as a "mike" or a "mic", is configured to convert a sound signal into an electrical signal. When making a call or sending a voice message, a user may make a sound near the microphone 170C through the mouth of the user, to input a sound signal to the microphone 170C. At least one microphone 170C may be disposed in the electronic device 100. In other embodiments, two microphones 170C may be disposed in the electronic device 100, to collect a sound signal and implement a noise reduction function. In other embodiments, three, four, or more microphones 170C may alternatively be disposed in the electronic device 100, to collect a sound signal, implement noise reduction, and identify a sound source, so as to implement a directional recording function and the like.

The headset jack 170D is configured to connect to a wired headset. The headset jack 170D may be a USB interface 130, or may be a 3.5 mm open mobile terminal platform (open mobile terminal platform, OMTP) standard interface or cellular telecommunications industry association of the USA (cellular telecommunications industry association of the USA, CTIA) standard interface.

The pressure sensor 180A is configured to sense a pressure signal, and can convert the pressure signal into an electrical signal. In some embodiments, the pressure sensor 180A may be disposed on the display 194. There are a plurality of types of pressure sensors 180A, such as a resistive pressure sensor, an inductive pressure sensor, and a capacitive pressure sensor. The capacitive pressure sensor may include at least two parallel plates made of conductive materials. When a force is applied to the pressure sensor 180A, capacitance between electrodes changes. The electronic device 100 determines pressure intensity based on the change in the capacitance. When a touch operation is performed on the display 194, the electronic device 100 detects intensity of the touch operation through the pressure sensor 180A. The electronic device 100 may also calculate a touch location based on a detection signal of the pressure sensor 180A. In some embodiments, touch operations that are performed in a same touch position but have different touch operation intensity may correspond to different operation instructions. For example, when a touch operation whose touch operation intensity is less than a first pressure threshold is performed on a Messages application icon, an instruction for viewing an SMS message is performed. When a touch operation whose touch operation intensity is greater than or equal to the first pressure threshold is performed on the Messages application icon, an instruction for creating an SMS message is performed.

The gyro sensor 180B may be configured to determine a moving posture of the electronic device 100. In some embodiments, an angular velocity of the electronic device 100 around three axes (namely, axes x, y, and z) may be determined through the gyro sensor 180B. The gyro sensor 180B may be configured to implement image stabilization during photographing. For example, when the shutter is pressed, the gyro sensor 180B detects an angle at which the electronic device 100 jitters, calculates, based on the angle, a distance for which a lens module needs to compensate, and allows the lens to cancel the jitter of the electronic device 100 through reverse motion, to implement image stabilization. The gyro sensor 180B may be further used in a navigation scenario and a motion-sensing game scenario.

The barometric pressure sensor 180C is configured to measure barometric pressure. In some embodiments, the electronic device 100 calculates an altitude through the barometric pressure measured by the barometric pressure sensor 180C, to assist in positioning and navigation.

The magnetic sensor 180D includes a Hall sensor. The electronic device 100 may detect opening and closing of a flip cover by using the magnetic sensor 180D. In some embodiments, when the electronic device 100 is a clamshell phone, the electronic device 100 may detect opening and closing of a flip cover based on the magnetic sensor 180D. Further, a feature such as automatic unlocking upon opening of the flip cover is set based on a detected opening or closing state of the flip cover.

The acceleration sensor 180E may detect accelerations in various directions (usually on three axes) of the electronic device 100. When the electronic device 100 is still, a magnitude and a direction of gravity may be detected. The acceleration sensor 180E may be further configured to identify a posture of the electronic device, and is used in an application such as switching between a landscape mode and a portrait mode or a pedometer.

The distance sensor 180F is configured to measure a distance. The electronic device 100 may measure the distance in an infrared manner or a laser manner. In some embodiments, in a photographing scenario, the electronic device 100 may measure a distance through the distance sensor 180F to implement quick focusing.

The optical proximity sensor 180G may include, for example, a light emitting diode (LED) and an optical detector, for example, a photodiode. The light emitting diode may be an infrared light emitting diode. The electronic device 100 emits infrared light by using the light-emitting diode. The electronic device 100 detects infrared reflected light from a nearby object through the photodiode. When sufficient reflected light is detected, the electronic device 100 may determine that there is an object near the electronic device 100. When insufficient reflected light is detected, the electronic device 100 may determine that there is no object near the electronic device 100. The electronic device 100 may detect, by using the optical proximity sensor 180G, that the user holds the electronic device 100 close to an ear for a call, to automatically turn off a screen for power saving. The optical proximity sensor 180G may also be used in a smart cover mode or a pocket mode to automatically perform screen unlocking or locking.

The ambient light sensor 180L is configured to sense ambient light brightness. The electronic device 100 may adaptively adjust brightness of the display 194 based on the sensed ambient light brightness. The ambient light sensor 180L may also be configured to automatically adjust white balance during photographing. The ambient light sensor 180L may also cooperate with the optical proximity sensor 180G to detect whether the electronic device 100 is in a pocket, to avoid an accidental touch.

The fingerprint sensor 180H is configured to collect a fingerprint. The electronic device 100 may use a feature of the collected fingerprint to implement fingerprint-based unlocking, application lock access, fingerprint-based photographing, fingerprint-based call answering, and the like.

The temperature sensor 180J is configured to detect a temperature. In some embodiments, the electronic device 100 executes a temperature processing policy through the temperature detected by the temperature sensor 180J. For example, when the temperature reported by the temperature sensor 180J exceeds a threshold, the electronic device 100 lowers performance of a processor nearby the temperature sensor 180J, to reduce power consumption for thermal protection. In some other embodiments, when the temperature is less than another threshold, the electronic device 100 heats the battery 142 to prevent the electronic device 100 from being shut down abnormally due to a low temperature. In some other embodiments, when the temperature is lower than still another threshold, the electronic device 100 boosts an output voltage of the battery 142 to avoid abnormal shutdown caused by a low temperature.

The touch sensor 180K is also referred to as a touch panel. The touch sensor 180K may be disposed on the display 194, and the touch sensor 180K and the display 194 form a touchscreen, which is also referred to as a "touchscreen". The touch sensor 180K is configured to detect a touch operation performed on or near the touch sensor. The touch sensor may transfer the detected touch operation to the application processor to determine a type of the touch event. A visual output related to the touch operation may be provided through the display 194. In other embodiments, the touch sensor 180K may alternatively be disposed on a surface of the electronic device 100 at a location different from that of the display 194.

The bone conduction sensor 180M may obtain a vibration signal. In some embodiments, the bone conduction sensor 180M may obtain a vibration signal of a vibration bone of a human vocal-cord part. The bone conduction sensor 180M may also be in contact with a body pulse to receive a blood pressure beating signal. In some embodiments, the bone conduction sensor 180M may also be disposed in the headset, to obtain a bone conduction headset. The audio module 170 may obtain a speech signal through parsing based on the vibration signal that is of the vibration bone of the vocal-cord part and that is obtained by the bone conduction sensor 180M, to implement a speech function. The application processor may parse heart rate information based on the blood pressure beating signal obtained by the bone conduction sensor 180M, to implement a heart rate detection function.

The button 190 includes a power button, a volume button, and the like. The button 190 may be a mechanical button, or may be a touch button. The electronic device 100 may receive a key input, and generate a key signal input related to a user setting and function control of the electronic device 100.

The motor 191 may generate a vibration prompt. The motor 191 may be configured to provide an incoming call vibration prompt and a touch vibration feedback. For example, touch operations performed on different applications (for example, photographing and audio play) may correspond to different vibration feedback effects. The motor 191 may also correspond to different vibration feedback effects for touch operations performed on different areas of the display 194. Different application scenarios (for example, a time reminder, information receiving, an alarm clock, and a game) may also correspond to different vibration feedback effects. A touch vibration feedback effect may be further customized.

The indicator 192 may be an indicator light, and may be configured to indicate a charging status and a power change, or may be configured to indicate a message, a missed call, a notification, and the like.

The SIM card interface 195 is configured to connect to a SIM card. The SIM card may be inserted into the SIM card interface 195 or removed from the SIM card interface 195, to implement contact with or separation from the electronic device 100. The electronic device 100 may support one or N SIM card interfaces, where N is a positive integer greater than 1. The SIM card interface 195 may support a nano-SIM card, a micro-SIM card, a SIM card, and the like. A plurality of cards may be inserted into a same SIM card interface 195 at the same time. The plurality of cards may be of a same type or different types. The SIM card interface 195 may be compatible with different types of SIM cards. The SIM card interface 195 is also compatible with an external storage card. The electronic device 100 interacts with a network through the SIM card, to implement functions such as conversation and data communication. In some embodiments, the electronic device 100 uses an embedded SIM (embedded SIM, eSIM) card, that is, an embedded SIM card. The eSIM card may be embedded into the electronic device 100, and cannot be separated from the electronic device 100.

It should be understood that a phone card in embodiments of this application includes but is not limited to a SIM card, an eSIM card, a universal subscriber identity card (universal subscriber identity module, USIM), a universal integrated telephone card (universal integrated circuit card, UICC), or the like.

A software system of the electronic device 100 may use a layered architecture, an event-driven architecture, a microkernel architecture, a micro service architecture, or a cloud architecture. In embodiments of this application, an Android system with a layered architecture is used as an example to describe a software structure of the electronic device 100.

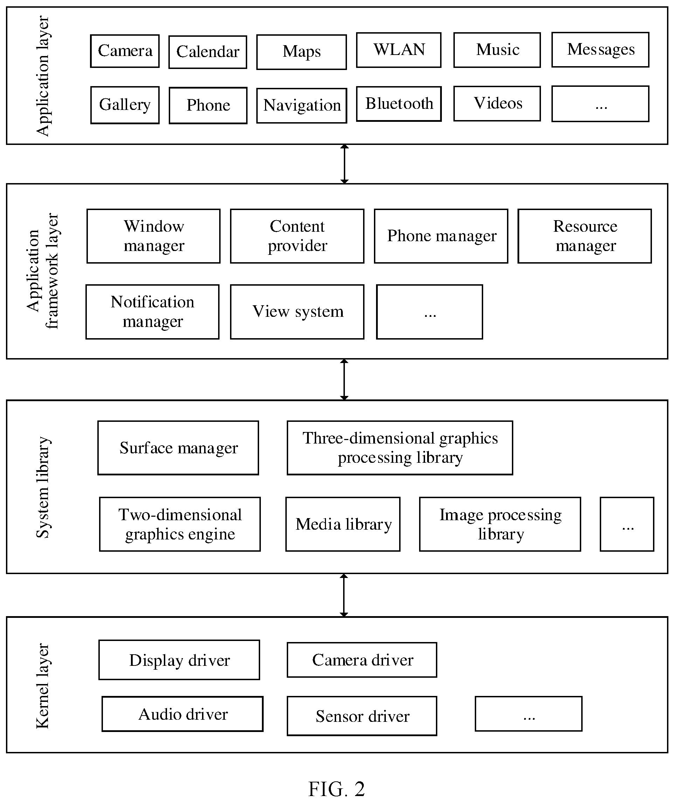

FIG. 2 is a block diagram of the software structure of the electronic device 100 according to an embodiment of this application. In a layered architecture, software is divided into several layers, and each layer has a clear role and task. The layers communicate with each other through a software interface. In some embodiments, the Android system is divided into four layers: an application layer, an application framework layer, an Android runtime (Android runtime) and system library, and a kernel layer from top to bottom. The application layer may include a series of application packages.

As shown in FIG. 2, the application packages may include applications such as Camera, Gallery, Calendar, Phone, Maps, Navigation, WLAN, Bluetooth, Music, Videos, and Messages.

The application framework layer provides an application programming interface (application programming interface, API) and a programming framework for an application at the application layer. The application program framework layer includes some predefined functions.

As shown in FIG. 2, the application framework layer may include a window manager, a content provider, a view system, a phone manager, a resource manager, a notification manager, and the like.

The window manager is configured to manage a window program. The window manager may obtain a size of the display, determine whether there is a status bar, perform screen locking, take a screenshot, and the like.

The content provider is configured to: store and obtain data, and enable the data to be accessed by an application. The data may include a video, an image, audio, calls that are made and received, a browsing history and bookmarks, an address book, and the like.

The view system includes visual controls such as a control for displaying a text and a control for displaying an image. The view system may be configured to construct an application. A display interface may include one or more views. For example, a display interface including a Messages notification icon may include a text display view and an image display view.

The phone manager is configured to provide a communication function of the electronic device 100, for example, management of a call status (including answering or declining a call).

The resource manager provides various resources such as a localized character string, an icon, an image, a layout file, and a video file for an application.

The notification manager enables an application to display notification information in a status bar, and may be configured to convey a notification message. The notification manager may automatically disappear after a short pause without requiring a user interaction. For example, the notification manager is configured to notify download completion, give a message notification, and the like. The notification manager may alternatively be a notification that appears in a top status bar of the system in a form of a graph or a scroll bar text, for example, a notification of an application that is run on the background, or may be a notification that appears on the screen in a form of a dialog window. For example, text information is displayed in the status bar, an announcement is given, the electronic device vibrates, or the indicator light blinks.

The Android runtime includes a kernel library and a virtual machine. The Android runtime is responsible for scheduling and management of the Android system.

The kernel library includes two parts: a function that needs to be called in Java language and a kernel library of Android.

The application layer and the application framework layer run on the virtual machine. The virtual machine executes Java files of the application layer and the application framework layer as binary files. The virtual machine is configured to perform functions such as object lifecycle management, stack management, thread management, security and exception management, and garbage collection.

The system library may include a plurality of functional modules, for example, a surface manager (surface manager), a media library (media library), a three-dimensional graphics processing library (for example, OpenGL ES), and a 2D graphics engine (for example, SGL).

The surface manager is configured to manage a display subsystem and provide fusion of 2D and 3D layers for a plurality of applications.

The media library supports playback and recording in a plurality of commonly used audio and video formats, and static image files. The media library may support a plurality of audio and video coding formats, for example, MPEG-4, H.264, MP3, AAC, AMR, JPG, and PNG.

The three-dimensional graphics processing library is configured to implement three-dimensional graphics drawing, image rendering, composition, layer processing, and the like.

The 2D graphics engine is a drawing engine for 2D drawing.

The kernel layer is a layer between hardware and software. The kernel layer includes at least a display driver, a camera driver, an audio driver, and a sensor driver.

It should be understood that the technical solutions in embodiments of this application may be applied to systems such as Android, iOS, and HarmonyOS.

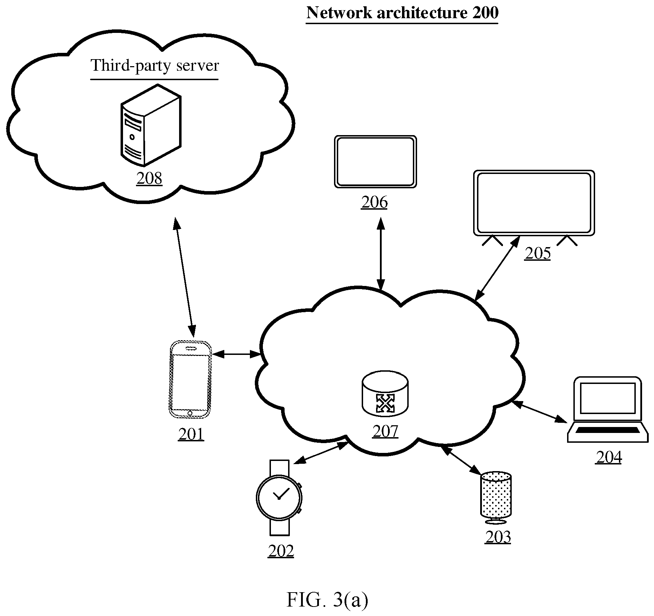

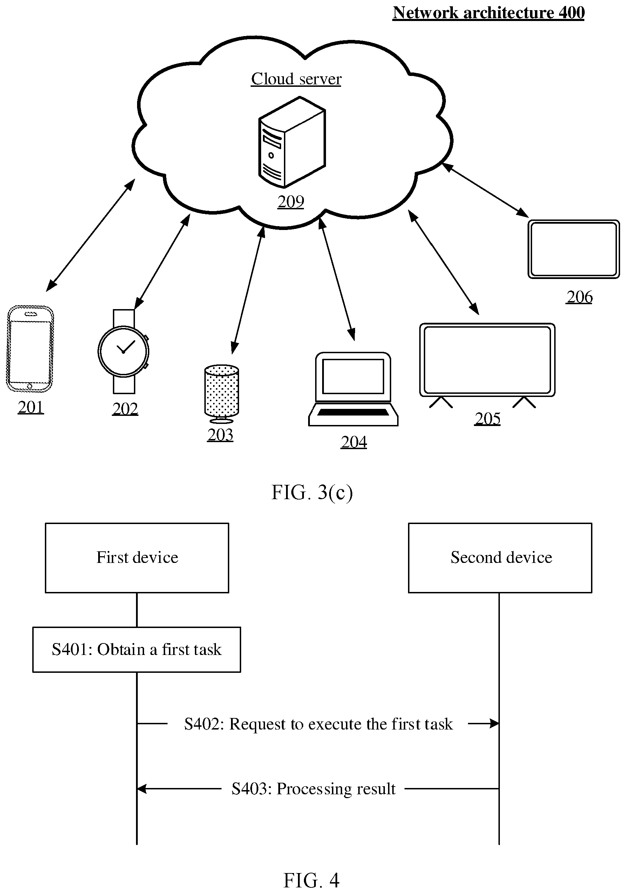

Before the technical solutions in embodiments of this application are described, a network architecture provided in embodiments of this application and a notification method provided in embodiments of this application are first described by using FIG. 3(a) to FIG. 3(c) and FIG. 4.

FIG. 3(a) is a schematic diagram of a network architecture 200 according to an embodiment of this application. The network architecture 200 includes a plurality of electronic devices. The electronic device may include a mobile phone 201, a watch 202, a smart sound box 203, a personal computer (or a notebook computer) 204, a smart television 205, a tablet computer 206, and the like. This is not limited in this embodiment of this application. The electronic devices may communicate with each other. The plurality of electronic devices may be connected to a local area network (local area network, LAN) in a wired or Wi-Fi connection manner, or may perform communication by using a mobile network or the internet.

For example, when an environment in which the network architecture 200 is located is an environment such as a home, the plurality of electronic devices may be located in a same local area network. As shown in FIG. 3(a), the network architecture 200 may further include a router 207. The router 207 may be disposed as an access point (access point, AP) to provide a signal source of a network. Further, each electronic device in the network architecture 200 may access the router 207 as a station (station, STA). The router 207 may communicate with each electronic device in a wired network manner or a wireless network manner. For example, a Wi-Fi link is established between the electronic devices by using a Wi-Fi protocol, to implement communication between the devices. A specific implementation may be that a peer-to-peer (peer-to-peer, P2P) connection (or referred to as Wi-Fi direct (Wi-Fi Direct)) is established between the electronic devices, or the electronic devices access a same router 207, to implement communication between the devices.

Optionally, a Bluetooth link may alternatively be established between the devices by using a Bluetooth protocol, to implement communication between the devices based on the Bluetooth link, or the electronic devices may be interconnected by using a cellular network, or the electronic devices may be interconnected by using a switching device (for example, a USB data cable or a dock device), to implement communication between the electronic devices. This is not limited in this embodiment of this application.

In a possible implementation, the network architecture 200 further includes a third-party server 208. The third-party server 208 may be a server of third-party application software, and is connected to the electronic device by using a network. The third-party server 208 may send notification information to the electronic device. A quantity of third-party servers 208 is not limited to 1, and there may be a plurality of third-party servers 208. This is not limited herein.

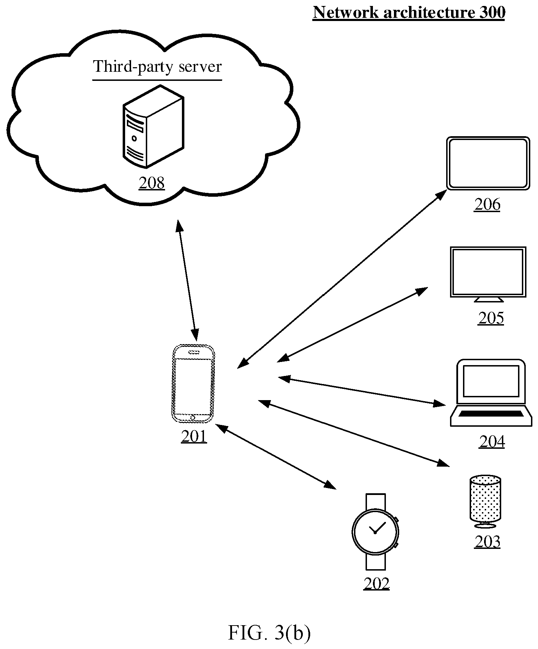

FIG. 3(b) is a schematic diagram of another network architecture 300 according to an embodiment of this application. The network architecture 300 includes a plurality of electronic devices. The electronic device may include a smartphone 201, a smartwatch 202, a smart sound box 203, a personal computer 204, a smart television 205, a tablet computer 206, and the like. This is not limited in this embodiment of this application. There is a central device, for example, the smartphone 201, in the plurality of electronic devices. A Wi-Fi P2P GO (Group Owner) is created on the central device, and other devices are connected to the GO as P2P GCs (Group Clients). In this way, these devices form a one-to-many network and can communicate with each other.

In a possible implementation, the network architecture further includes a third-party server 208. The third-party server 208 may be a server of third-party application software, and is connected to the smartphone 201 by using a network. The third-party server 208 sends notification information to the smartphone 201. A quantity of third-party servers 208 is not limited to 1, and there may be a plurality of third-party servers 208. This is not limited herein.

FIG. 3(c) is a schematic diagram of still another network architecture 400 according to an embodiment of this application. The network architecture 300 includes a plurality of electronic devices. The electronic device may include a smartphone 201, a smartwatch 202, a smart sound box 203, a personal computer 204, a smart television 205, a tablet computer 206, and the like. This is not limited in this embodiment of this application. The smartphone 201, the smartwatch 202, the smart sound box 203, the personal computer 204, the smart television 205, and the tablet computer 206 may be devices with a same account (for example, a Huawei account). In this case, the devices with the account may establish a connection by using a cloud server 209.

With reference to FIG. 4, the following describes a method for invoking a capability of another device according to an embodiment of this application. The method includes the following steps.

S401: A first device obtains a first task.

For example, the first device is a smart television. When a focus of the smart television is a text input box or a button in an input method, the first task obtained by the smart television is that a user currently needs to perform text input.

For example, the first device is a notebook computer. When the notebook computer detects an operation that the user obtains a verification code by using a phone number, the first task obtained by the notebook computer is that the verification code needs to be input.

For example, the first device is a notebook computer. After the notebook computer detects an operation that the user selects a piece of text content and clicks the right mouse button, the first task obtained by the notebook computer is that the user may perform an operation such as copying, pasting, translation, or word extraction on the text content.

For example, the first device is a notebook computer. When the notebook computer detects, on a login interface of a first application, an operation that the user performs login by using a second application, the first task obtained by the notebook computer is that the user expects to log in to the first application by using account information of the second application.

S402: The first device requests a second device to execute the first task.

In this embodiment of this application, the first device may be a device that has a capability of executing the first task. Although the first device has a capability of executing the first task, another device (for example, the second device) that is more suitable for executing the first task may exist around the first device. In this case, the first device may request the second device to execute the first task.

For example, the first task obtained by the smart television is that the user currently needs to perform text input. Although the smart television has a text input function, the smart television may request a mobile phone (a device that is more suitable for performing text input) to perform text input.

For example, the first task obtained by the smart television is a task of playing audio. Although the smart television has a capability of playing audio, another device (for example, a smart sound box) that is more suitable for playing audio may exist around the smart television. In this case, the smart television may request the smart sound box to play audio.

In this embodiment of this application, the first device may alternatively be a device that does not have a capability of executing the first task.

For example, the first task obtained by the notebook computer is that the verification code needs to be input. Because the notebook computer does not include a SIM card corresponding to the phone number input by the user, the notebook computer may send a verification code request to a device (for example, a mobile phone) including the SIM card. The verification code request is used to request the mobile phone to send the obtained verification code to the notebook computer.

For example, the first task obtained by the notebook computer is that the user may perform an operation such as translation on the text content. Because the notebook computer does not include a translation function, the notebook computer may send the text content and request information to a device (for example, a mobile phone) including the translation function. The request information is used to request the mobile phone to translate the text content.

For example, the first task obtained by the notebook computer is that the user expects to log in to the first application by using the account information of the second application. In this case, when determining that the second application is not installed on the notebook computer, the notebook computer may send an authorization request to a device (for example, a mobile phone) on which the second application is installed. The authorization request is used to request the second application on the mobile phone to perform authorization on the first application.

S403: The second device sends a processing result of the first task to the first device.

For example, after the smart television requests the mobile phone to perform text input, the mobile phone may detect text content input by the user on the mobile phone, and synchronize the detected text content to the smart television in real time.

For example, after the notebook computer sends the verification code request to the mobile phone, the mobile phone may send the obtained verification code to the notebook computer.

For example, after the notebook computer sends the text content and the request information to the mobile phone, the mobile phone may translate the text content, and send a translation result to the notebook computer.

For example, after the notebook computer sends the authorization request to the mobile phone, the mobile phone may send login authorization information (for example, an access token (access token)) to the notebook computer, so that the notebook computer can request the account information of the second application from a server of the second application by using the login authorization information.

In this embodiment of this application, when the first device does not have a capability of executing the first task, or the first device finds a device that is more suitable for executing the first task, the first device may request the device that has a capability of executing the first task or the device that is more suitable for executing the first task to execute the first task. This helps the user conveniently and quickly complete the first task, and helps improve user experience.

The following describes embodiments of this application with reference to a graphical user interface (graphical user interface, GUI).

FIG. 5(a)-1 and FIG. 5(a)-2 to FIG. 5(d)-1 and FIG. 5(d)-2 show a group of GUIs according to an embodiment of this application.

Refer to the GUI shown in FIG. 5(a)-1 and FIG. 5(a)-2. The notebook computer displays a piece of original text (English) on a display. In this case, the mobile phone displays a home screen of the mobile phone. When detecting an operation that the user selects the original text content "Today is...first" and clicks a right mouse button, the notebook computer displays the GUI shown in FIG. 5(b)-1 and FIG. 5(b)-2.

In an embodiment, a wireless connection (for example, Bluetooth, Wi-Fi, or NFC) may be established between the notebook computer and the mobile phone, or a wired connection may be established between the notebook computer and the mobile phone.

In an embodiment, a same account (for example, a Huawei ID) is used for logging in to the notebook computer and the mobile phone; or Huawei IDs for logging in to the notebook computer and the mobile phone are in a same family group; or the mobile phone has authorized a capability of the notebook computer to access the mobile phone.

Refer to the GUI shown in FIG. 5(b)-1 and FIG. 5(b)-2. In response to detecting an operation that the user selects the English content and clicks a right mouse button, the notebook computer may display a function list 501. The function list 501 includes functions such as cutting, copying, pasting, word extraction, and translation. The functions such as cutting, copying, and pasting are functions of the notebook computer, and the functions such as word extraction and translation are functions of the mobile phone. When detecting an operation that the user selects a translation function 502, the notebook computer displays the GUI shown in FIG. 5(c)-1 and FIG. 5(c)-2.

In an embodiment, when establishing a wireless connection (or a wired connection) to the mobile phone, the notebook computer may request capability information of the mobile phone from the mobile phone. After receiving the request, the mobile phone may send the capability information of the mobile phone (for example, translation, smart object recognition, word extraction, and smart assistance) to the notebook computer. Therefore, after detecting an operation that the user selects the English content and clicks the right mouse button, the notebook computer may display the functions of the mobile phone in the function list (for example, the word extraction function and the translation function shown in the function list in FIG. 5(b)-1 and FIG. 5(b)-2).

In an embodiment, if a same account (for example, a Huawei ID) is used for logging in to the mobile phone and the notebook computer, the notebook computer may also request capability information of another device with the account from a cloud server. After receiving the request, the cloud server may send a request to the another device (the another device may include the mobile phone) with the account. The request is used to request the capability information of the another device. After receiving the capability information of the another device, the cloud server may send the capability information of the another device to the notebook computer. Therefore, after detecting an operation that the user selects the English content and clicks the right mouse button, the notebook computer may display the functions of the mobile phone in the function list (for example, the word extraction function and the translation function shown in the function list in FIG. 5(b)-1 and FIG. 5(b)-2).

In an embodiment, the word extraction function and the translation function shown in the function list 501 in FIG. 5(b)-1 and FIG. 5(b)-2 may come from different devices. For example, the notebook computer determines that capability information of a mobile phone A includes the word extraction function and capability information of a mobile phone B includes the translation function. Therefore, after detecting an operation that the user selects the English content and clicks a right mouse button, the mobile phone may display, in the function list, a function of the mobile phone A (for example, the word extraction function shown in the function list in FIG. 5(b)-1 and FIG. 5(b)-2) and a function of the mobile phone B (for example, the translation function shown in the function list in FIG. 5(b)-1 and FIG. 5(b)-2).

In an embodiment, after detecting an operation that the user selects the English content, the notebook computer may display the function list 501 without detecting an operation that the user clicks the right mouse button.

Refer to the GUI shown in FIG. 5(c)-1 and FIG. 5(c)-2. In response to detecting an operation that the user selects the translation function 502, the notebook computer sends the original text content and request information to the mobile phone. The request information is used to request the mobile phone to translate the original text content. After receiving the request information and the original text content, the mobile phone may translate the original text content, to obtain corresponding translation content. The mobile phone may send the translation content to the notebook computer. After receiving the translation content, the notebook computer may display a prompt box 503. The prompt box 503 includes the translation content.

In an embodiment, in response to detecting an operation that the user selects the translation function 502, the notebook computer may prompt the user with a language (for example, Chinese, Japanese, Korean, or Spanish) into which the original text is translated. After the notebook computer detects an operation that the user chooses to translate the original text into Chinese, the notebook computer may send the original text content and request information to the mobile phone. The request information is used to request the mobile phone to translate the original text content into Chinese.

In an embodiment, the prompt box 503 may be dragged, and a length and a width of the prompt box 503 may also be adjusted. This helps the user compare the original text with the translation.

Refer to the GUI shown in FIG. 5(d)-1 and FIG. 5(d)-2. The GUI is another display interface of the translation result on the notebook computer. The mobile phone may overwrite the currently selected original text by using a prompt box 504. The prompt box 504 includes the translation content (for example, the mobile phone automatically translates the original text into Chinese), and the prompt box 504 further includes controls such as copying, saving to local, and displaying the original text.

In an embodiment, after receiving the original text and the request information, the mobile phone may translate the original text. For example, if a default language of the mobile phone is Chinese, the mobile phone may translate the original text into Chinese. If the original text is in Chinese, the mobile phone may translate the original text into English by default.

In this embodiment of this application, the user can use a function of another device on one device, so as to extend a capability boundary of the device, and help the device conveniently and efficiently complete some relatively difficult tasks. For the GUIs shown in FIG. 5(a)-1 and FIG. 5(a)-2 to FIG. 5(d)-1 and FIG. 5(d)-2, the user does not need to log in to a translation website or start a translation application (for example, switch between translation software and original text), and the notebook computer may directly display the translation function of the mobile phone on a display interface of the original text, to translate the original text in real time by using the mobile phone. This can improve efficiency of translating the original text by the user, avoid excessive user operations during translation of the original text, and improve user experience.

FIG. 6(a)-1 and FIG. 6(a)-2 to FIG. 6(c)-1 and FIG. 6(c)-2 show another group of GUIs according to an embodiment of this application.

Refer to the GUI shown in FIG. 6(a)-1 and FIG. 6(a)-2. The notebook computer displays a picture 601 on a display. In this case, the mobile phone displays a home screen of the mobile phone. When detecting, on the picture, an operation that the user clicks the right mouse button, the notebook computer displays the GUI shown in FIG. 6(b)-1 and FIG. 6(b)-2.

In an embodiment, a wireless connection (for example, Bluetooth, Wi-Fi, or NFC) may be established between the notebook computer and the mobile phone, or a wired connection may be established between the notebook computer and the mobile phone.

In an embodiment, a same account (for example, a Huawei ID) is used for logging in to the notebook computer and the mobile phone; or Huawei IDs for logging in to the notebook computer and the mobile phone are in a same family group; or the mobile phone has authorized a capability of the notebook computer to access the mobile phone.

Refer to the GUI shown in FIG. 6(b)-1 and FIG. 6(b)-2. In response to detecting, on the picture, an operation that the user clicks the right mouse button, the notebook computer may display a function list 602. The function list 602 includes functions such as sending a picture to the mobile phone, saving a picture as a file, copying a picture, viewing a picture in full screen, object recognition, shopping, translation, and word extraction. The functions such as sending a picture to the mobile phone, saving a picture as a file, copying a picture, viewing a picture in full screen are functions of the notebook computer, and the functions such as object recognition, shopping, translation, and word extraction are functions of the mobile phone. When detecting an operation that the user selects an object recognition function 603, the notebook computer displays the GUI shown in FIG. 6(c)-1 and FIG. 6(c)-2.

It should be understood that, for a process in which the notebook computer displays the functions such as object recognition, shopping, translation, and word extraction from the mobile phone, refer to the descriptions in the embodiment in FIG. 5(a)-1 and FIG. 5(a)-2 to FIG. 5(d)-1 and FIG. 5(d)-2. For brevity, details are not described herein again.

Refer to the GUI shown in FIG. 6(c)-1 and FIG. 6(c)-2. In response to detecting an operation that the user selects the object recognition function 603, the notebook computer sends the picture and request information to the mobile phone. The request information is used to request the mobile phone to recognize content on the picture. After receiving the picture and the request information, the mobile phone may recognize the content on the picture. After recognizing the content on the picture, the mobile phone may send an object recognition result to the notebook computer. In response to receiving the object recognition result of the mobile phone for the picture, the notebook computer may display a prompt box 604. The prompt box 604 includes prompt information "Find something similar below for you", an information source (for example, xx website), a name (for example, football) of an object on the picture, and a plurality of shopping links (for example, a shopping link 1, a shopping link 2, and a shopping link 3) of the object.

In this embodiment of this application, the user does not need to log in to object recognition software or send the picture to an object recognition website for object recognition, and the notebook computer may directly display the object recognition function of the mobile phone on a display interface of the picture, to recognize the content on the picture by using the mobile phone. This can improve efficiency of recognizing the object on the picture, and helps improve user experience.

FIG. 7(a)-1 and FIG. 7(a)-2 to FIG. 7(c)-1 and FIG. 7(c)-2 show another group of GUIs according to an embodiment of this application.

Refer to the GUI shown in FIG. 7(a)-1 and FIG. 7(a)-2. The notebook computer displays a picture 701 on a display. In this case, the mobile phone displays a home screen of the mobile phone. When detecting, on the picture 701, an operation that the user clicks the right mouse button, the notebook computer displays the GUI shown in FIG. 7(b)-1 and FIG. 7(b)-2.

In an embodiment, a wireless connection (for example, Bluetooth, Wi-Fi, or NFC) may be established between the notebook computer and the mobile phone, or a wired connection may be established between the notebook computer and the mobile phone.

In an embodiment, a same account (for example, a Huawei ID) is used for logging in to the notebook computer and the mobile phone; or Huawei IDs for logging in to the notebook computer and the mobile phone are in a same family group; or the mobile phone has authorized a capability of the notebook computer to access the mobile phone.

Refer to the GUI shown in FIG. 7(b)-1 and FIG. 7(b)-2. In response to detecting, on the picture 701, an operation that the user clicks the right mouse button, the notebook computer may display a function list 702. The function list 702 includes functions such as sending a picture to the mobile phone, saving a picture as a file, copying a picture, viewing a picture in full screen, object recognition, shopping, translation, and word extraction. The functions such as sending a picture to the mobile phone, saving a picture as a file, copying a picture, viewing a picture in full screen are functions of the notebook computer, and the functions such as object recognition, shopping, translation, and word extraction are functions of the mobile phone. When detecting an operation that the user selects a word extraction function 703, the notebook computer displays the GUI shown in FIG. 7(c)-1 and FIG. 7(c)-2.

It should be understood that, for a process in which the notebook computer displays the functions such as object recognition, shopping, translation, and word extraction from the mobile phone, refer to the descriptions in the foregoing embodiment. For brevity, details are not described herein again.

Refer to the GUI shown in FIG. 7(c)-1 and FIG. 7(c)-2. In response to detecting an operation that the user selects the word extraction function 703, the notebook computer sends the picture and request information to the mobile phone. The request information is used to request the mobile phone to perform word extraction on the picture. After receiving the picture and the request information, the mobile phone may recognize text on the picture. For example, the mobile phone may recognize the text on the picture through optical character recognition (optical character recognition, OCR).

In an embodiment, after recognizing the text on the picture, the mobile phone may further continue to perform word segmentation processing on the text.

The mobile phone may perform word segmentation processing on the recognized text by using a word segmentation technology in natural language processing (natural language processing, NLP). The word segmentation technology in NLP is a basic module. For Latin languages such as English, words can be extracted simply and accurately because there are spaces between words as word margins. However, Chinese and Japanese characters are closely linked except for punctuation, and there is no clear word margin. Therefore, it is difficult to extract word segments. Currently, word segmentation processing may be performed on text content in some manners. For example, in a dictionary-based manner, that is, a string matching manner, a word section of a piece of text is matched against an existing dictionary, and if the word section is found, the word section may be used as a word segment. For another example, word segmentation processing may be performed by using a forward maximum matching method, a reverse maximum matching method, or a bidirectional maximum matching method. For example, after performing word segmentation processing on text content "ren he jian nan kun ku dou bu neng zu dang wo men qian jin de bu fa", the electronic device obtains 10 word segments: "ren he", "jian nan", "kun ku", "dou", "bu neng", "zu dang", "wo men", "qian jin", "de", and "bu fa".

It should be understood that, in this embodiment of this application, for a manner of performing word segmentation processing on the text content, refer to a word segmentation manner in the conventional technology. For brevity, details are not described herein.

After performing text recognition and word segmentation processing on the picture, the mobile phone may send a word extraction result to the notebook computer. In response to receiving the word extraction result, the notebook computer may display a prompt box 704. The prompt box 704 includes a word extraction result of the text on the picture and a word segmentation result of the recognized text.

When the notebook computer detects an operation that the user selects content of the word extraction result and clicks the right mouse button, the notebook computer may display a function list 705 shown in FIG. 7(c)-1 and FIG. 7(c)-2. The function list 705 includes functions such as copying and translation. The copying function 706 is a function of the notebook computer, and the translation function is a function of the mobile phone. After the mobile phone detects an operation that the user selects the copying function, the mobile phone may copy the word extraction result.

In this embodiment of this application, the user does not need to manually enter the corresponding text with reference to the content on the picture, and the notebook computer may directly display the word extraction function of the mobile phone on a display interface of the picture, to perform word extraction and word segmentation operations on the content on the picture by using the mobile phone. This can improve efficiency of converting the text on the picture into a character string by the user, and helps improve user experience.

FIG. 8(a)-1 and FIG. 8(a)-2 to FIG. 8(c)-1 and FIG. 8(c)-2 show another group of GUIs according to an embodiment of this application.

Refer to the GUI shown in FIG. 8(a)-1 and FIG. 8(a)-2. The notebook computer displays a desktop of the notebook computer on a display. In this case, the mobile phone displays a home screen of the mobile phone. The desktop of the notebook computer includes a document 1. When detecting, on the document 1, an operation that the user clicks the right mouse button, the notebook computer displays the GUI shown in FIG. 8(b)-1 and FIG. 8(b)-2.

In an embodiment, a wireless connection (for example, Bluetooth, Wi-Fi, or NFC) may be established between the notebook computer and the mobile phone, or a wired connection may be established between the notebook computer and the mobile phone.

In an embodiment, a same account (for example, a Huawei ID) is used for logging in to the notebook computer and the mobile phone; or Huawei IDs for logging in to the notebook computer and the mobile phone are in a same family group; or the mobile phone has authorized a capability of the notebook computer to access the mobile phone.

Refer to the GUI shown in FIG. 8(b)-1 and FIG. 8(b)-2. In response to detecting, on the document 1, an operation that the user clicks the right mouse button, the notebook computer may display a function list 801. The function list 801 includes functions such as opening, copying, cutting, printing, translation, and word extraction. The functions such as opening, copying, cutting, and printing are functions of the notebook computer, and the functions such as translation and word extraction are functions of the mobile phone. When detecting an operation that the user selects a translation function 802, the notebook computer displays the GUI shown in FIG. 8(c)-1 and FIG. 8(c)-2.

Refer to the GUI shown in FIG. 8(c)-1 and FIG. 8(c)-2. In response to detecting an operation that the user selects the translation function 802, the notebook computer sends the document 1 and request information to the mobile phone. The request information is used to request the mobile phone to translate content in the document 1. After receiving the request information and the document 1, the mobile phone may translate the content in the document 1, to obtain corresponding translation content. The mobile phone may send the translation content to the notebook computer. After receiving the translation content, the notebook computer may display a prompt box 803. The prompt box 803 includes the translation content.

In an embodiment, in response to detecting an operation that the user selects the translation function 802, the notebook computer may prompt the user with a language (for example, Chinese, Japanese, Korean, or Spanish) into which the original text is translated. After the notebook computer detects an operation that the user chooses to translate the original text into Chinese, the notebook computer may send the document 1 and request information to the mobile phone. The request information is used to request the mobile phone to translate the content in the document 1 into Chinese.

In this embodiment of this application, the user does not need to open the document and copy text in the document to a translation application or a translation website, and the notebook computer may directly display the translation function of the mobile phone after detecting an operation that the user performs a right-click operation on the document, to translate the content in the document by using the mobile phone. This can improve efficiency of translating the original text by the user, avoid excessive user operations during translation of the original text, and improve user experience.

FIG. 9(a)-1 and FIG. 9(a)-2 to FIG. 9(e)-1 and FIG. 9(e)-2 show another group of GUIs according to an embodiment of this application.

Refer to the GUI shown in FIG. 9(a)-1 and FIG. 9(a)-2. The notebook computer displays a desktop of the notebook computer on a display. In this case, the mobile phone displays a home screen of the mobile phone. The desktop of the notebook computer includes a function list 901, and the function list includes functions such as AI Voice, shopping, translation, word extraction, and object recognition. The functions in the function list 901 are from the mobile phone.

In an embodiment, after establishing a wireless connection to the mobile phone, the notebook computer may request capability information of the mobile phone from the mobile phone. After receiving the request, the mobile phone may send the capability information of the mobile phone (for example, AI Voice, shopping, translation, word extraction, and object recognition) to the notebook computer. In this way, the notebook computer may display the function list 901 on the desktop.

In an embodiment, if a same account (for example, a Huawei ID) is used for logging in to the mobile phone and the notebook computer, the notebook computer may also request capability information of another device with the account from a cloud server. After receiving the request, the cloud server may send a request to the another device (for example, the another device may include the mobile phone) with the account. The request is used to request the capability information of the another device. After receiving the capability information of the another device, the cloud server may send the capability information of the another device to the notebook computer. In this way, the notebook computer may display the function list 901 on the desktop.

In an embodiment, the functions such as AI Voice, shopping, translation, word extraction, and object recognition shown in the function list 901 in FIG. 9(a)-1 and FIG. 9(a)-2 may come from different devices. For example, the notebook computer determines that capability information of a mobile phone A includes the AI Voice function and capability information of a mobile phone B includes the functions such as shopping, translation, word extraction, and object recognition. In this way, the notebook computer may display, on the desktop, the function (the AI Voice function shown in the function list in FIG. 9(a)-1 and FIG. 9(a)-2) of the mobile phone A and the functions (the functions such as shopping, translation, word extraction, and object recognition shown in the function list in FIG. 9(a)-1 and FIG. 9(a)-2) of the mobile phone B.

Refer to the GUI shown in FIG. 9(b)-1 and FIG. 9(b)-2. The notebook computer displays a photo 2. In this case, if the user wants to view a shopping link of a commodity on the photo, the user may view the shopping link by using the shopping function. When the notebook computer detects an operation that the user taps a shopping function 902, the notebook computer may display the GUI shown in FIG. 9(c)-1 and FIG. 9(c)-2.

Refer to the GUI shown in FIG. 9(c)-1 and FIG. 9(c)-2. In response to detecting an operation that the user taps the shopping function 902, the notebook computer may display a window 903. A size of the window 903 may change with an operation of the user (for example, the user drags the window 903 to the left or right by using a cursor), and a location of the window 903 may change with an operation of the user (for example, the user drags the window 903 to another display area by using a cursor).

In an embodiment, when the notebook computer detects that the window 903 remains unchanged for first preset duration, the notebook computer may obtain image information of the window 903, and send the image information and first request information to the mobile phone. The first request information is used to request the mobile phone to recognize an object in the image information and request the mobile phone to query a shopping link of the object. In response to receiving the image information and the first request information, the mobile phone recognizes the object in the image information (for example, the mobile phone may recognize the object in the image information as a smart television). In addition, the mobile phone queries the shopping link of the recognized object by using a server (for example, a server of a shopping app). The mobile phone may send a thumbnail and the shopping link (for example, a shopping link 1, a shopping link 2, a shopping link 3, and a shopping link 4) of the queried smart television to the notebook computer.

Refer to the GUI shown in FIG. 9(d)-1 and FIG. 9(d)-2. In response to receiving the thumbnail and the shopping link of the object, the notebook computer may display a prompt box 904. The prompt box 904 includes prompt information "Find something similar below for you" and information such as the thumbnail and the shopping link of the object.

In an embodiment, in response to an operation that the user taps the shopping link 1, the notebook computer may further view, by using a browser application on the notebook computer, a website corresponding to the shopping link, so that the user browses a commodity that needs to be purchased.

Refer to the GUI shown in FIG. 9(e)-1 and FIG. 9(e)-2. In response to an operation that the user adjusts the size and the location of the window 903, the notebook computer displays another object on the photo 2 in the currently displayed window 903. In response to detecting that the window 903 remains unchanged for first preset duration, the notebook computer may obtain another piece of image information of the window 903, and send the another piece of image information and second request information to the mobile phone. The second request information is used to request the mobile phone to recognize an object in the another piece of image information and request the mobile phone to query a shopping link of the object. In response to receiving the another piece of image information and the second request information, the mobile phone recognizes the object in the image information (for example, the mobile phone may recognize the object in the image information as a smart sound box). In addition, the mobile phone queries the shopping link (for example, a shopping link 5, a shopping link 6, a shopping link 7, and a shopping link 8) of the recognized object by using a server (for example, a server of a shopping app). The mobile phone may send a thumbnail and the shopping link of the queried object to the notebook computer.

Refer to the GUI shown in FIG. 9(e)-1 and FIG. 9(e)-2. In response to receiving the thumbnail and the shopping link of the object, the notebook computer may update information about the thumbnail and the shopping link displayed in the prompt box 904. The prompt box 904 includes prompt information "Find something similar below for you" and information such as the thumbnail and the shopping link (for example, a shopping link 5, a shopping link 6, a shopping link 7, and a shopping link 8) of the smart sound box.

In this embodiment of this application, the user does not need to log in to object recognition software or send the picture to an object recognition website for object recognition, and the notebook computer may directly display the object recognition function of the mobile phone on a display interface of the picture, to recognize the content on the picture by using the mobile phone. This can improve efficiency of recognizing the object on the picture, and helps improve user experience. In addition, the user only needs to update a location of a window on the notebook computer, to obtain a shopping link of an object corresponding to an image in the window in real time. This helps improve shopping experience of the user.

FIG. 10(a)-1 and FIG. 10(a)-2 and FIG. 10(b)-1 and FIG. 10(b)-2 show another group of GUIs according to an embodiment of this application.

Refer to the GUI shown in FIG. 10(a)-1 and FIG. 10(a)-2. The notebook computer displays a desktop of the notebook computer on a display. In this case, the mobile phone displays a home screen of the mobile phone. The desktop of the notebook computer includes a function list 1001, and the function list includes functions such as AI Voice, shopping, translation, word extraction, and object recognition. The functions in the function list 1001 are from the mobile phone.

It should be understood that, for a process in which the notebook computer displays the function list 1001, refer to the descriptions in the foregoing embodiment. For brevity, details are not described herein again.

When the notebook computer detects an operation that the user taps an AI Voice function 1002, the notebook computer may start to detect a voice instruction input by the user. For example, as shown in FIG. 10(a)-1 and FIG. 10(a)-2, in response to receiving a voice instruction "How's the weather today?" of the user, the notebook computer may send the voice instruction and request information to the mobile phone. The request information is used to request the mobile phone to recognize a user intent in the voice instruction. In response to receiving the voice instruction and the request information that are sent by the notebook computer, the mobile phone may analyze the voice instruction. An automatic speech recognition (automatic speech recognition, ASR) module of the mobile phone may first forward the speech information into text information, to analyze the text information. The mobile phone may recognize slot information and a user intent in the text information by using a natural language understanding (natural language understanding, NLU) module.

For example, Table 1 shows the user intent and the slot information that are determined by the mobile phone.

**Table 1**

| Intent (intent) | "Query the weather" |
|---|---|
| Slot (slot) | Time="Today" |

It should be understood that, for a process in which the mobile phone analyzes the voice instruction, refer to the conventional technology. For brevity, details are not described herein.

After obtaining the slot information and the user intent in the text information, the mobile phone may send the slot information and the user intent in the text information to an intent processing module of the mobile phone. The intent processing module may determine that the user intent is "query the weather", and the slot information related to the intent is "today", to query today's weather for the user. After querying today's weather information, the mobile phone may send the weather information to the notebook computer.

Refer to the GUI shown in FIG. 10(b)-1 and FIG. 10(b)-2. In response to receiving the weather information, the notebook computer may prompt, by using a voice, the user with "It's cloudy and sunny today with the temperature from 10°C to 22°C".

In an embodiment, after querying the weather information, the mobile phone may send text information corresponding to the weather information to the notebook computer, and the notebook computer may convert the text information into voice information by using the ASR module, to prompt the user with the voice information.

In another embodiment, after querying the weather information, the mobile phone may convert text information corresponding to the weather information into voice information by using the ASR module of the mobile phone, to send the voice information to the notebook computer. In response to receiving the voice information, the notebook computer prompts the user with the voice information.

In this embodiment of this application, when the user uses the AI Voice function of the mobile phone on the notebook computer, the user does not need to switch to the mobile phone to send the voice instruction, but sends the voice instruction to the mobile phone by using the notebook computer. This improves convenience of using AI Voice by the user. Currently, most notebook computers also have an AI Voice capability, but may have a different voice assistant from the mobile phone. For example, a voice assistant of the notebook computer (for example, the notebook computer is running a Windows system) is Cortana, a voice assistant of a Huawei mobile phone is Xiaoyi, and a voice assistant of an Apple mobile phone is Siri. In this way, when using the voice assistant, the user does not need to switch a wakeup word and a use habit. This helps improve user experience. In addition, because the mobile phone supports more data than the notebook computer, accuracy of data obtained by the user can also be ensured.

With reference to FIG. 5(a)-1 and FIG. 5(a)-2 to FIG. 5(d)-1 and FIG. 5(d)-2 to FIG. 8(a)-1 and FIG. 8(a)-2 to FIG. 8(c)-1 and FIG. 8(c)-2, the foregoing describes the case in which the user clicks the right mouse button at a location on the display, to display the capability information of the another device in the function list popped up on the notebook computer, and FIG. 9(a)-1 and FIG. 9(a)-2 to FIG. 9(e)-1 and FIG. 9(e)-2 and FIG. 10(a)-1 and FIG. 10(a)-2 and FIG. 10(b)-1 and FIG. 10(b)-2 describe the case in which the function list 901 and the function list 1001 are newly added on a notebook computer side, to display the capability information of the another device. In this embodiment of this application, a manner in which the user uses the capability information of the another device is not limited. For example, the user may customize, on the notebook computer, a shortcut key for invoking the capability information of the mobile phone. Alternatively, the user may customize a shortcut key to invoke a function list of another device, so that the user can select a function of the another device from the function list. For example, after detecting that the user selects a piece of text and taps a Tab key and a T key on a keyboard, the notebook computer may invoke a translation function of the another device, so that the notebook computer can send the piece of text and request information to the another device. The request information is used to request to translate the piece of text.

It should be understood that, for the GUIs shown in FIG. 5(a)-1 and FIG. 5(a)-2 to FIG. 5(d)-1 and FIG. 5(d)-2 to FIG. 10(a)-1 and FIG. 10(a)-2 and FIG. 10(b)-1 and FIG. 10(b)-2, the mobile phone may receive, when displaying the home screen of the mobile phone, first content and request information that are sent by the notebook computer, so that the mobile phone processes the first content based on the request information by using the first function. This embodiment of this application is not limited thereto, and the mobile phone may receive the first content and the request information in another state.

For example, when the mobile phone is in a screen-off state, the mobile phone receives the first content and the request information, so that the mobile phone processes the first content based on the request information by using the first function. It should be understood that the mobile phone may process the first content by using the first function when the mobile phone is in a screen-off state.

For example, when the mobile phone is running an application (for example, a game app), the mobile phone receives the first content and the request information, so that the mobile phone processes the first content based on the request information by using the first function. It should be understood that a state of the mobile phone (a state of the running application) may not change with receiving of the first content and the request information.

FIG. 11(a)-1 to FIG. 11(a)-3 to FIG. 11(e) show another group of GUIs according to an embodiment of this application.

Refer to the GUI shown in FIG. 11(a)-1 to FIG. 11(a)-3. The smart television displays a photo 1, and the photo 1 includes a piece of English "Today is a sunny...outing!". In this case, the mobile phone displays a home screen of the mobile phone.

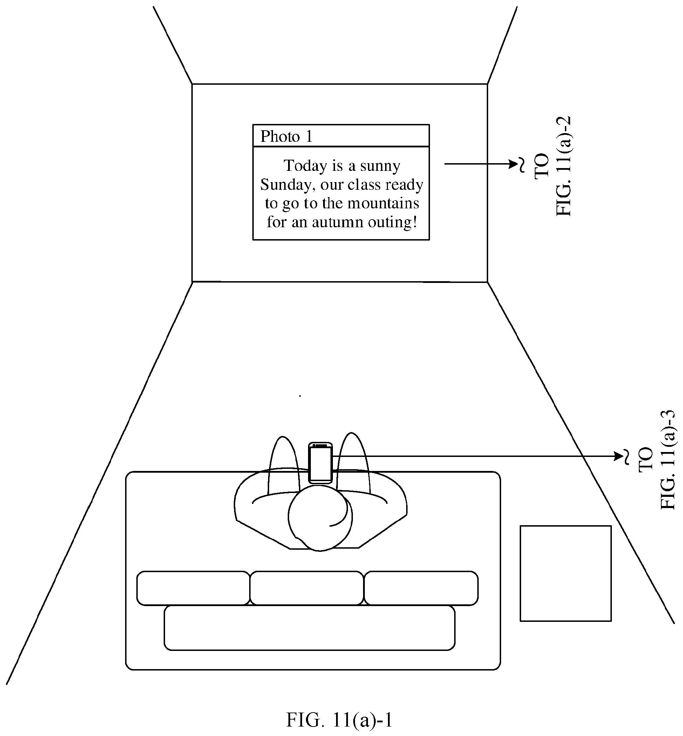

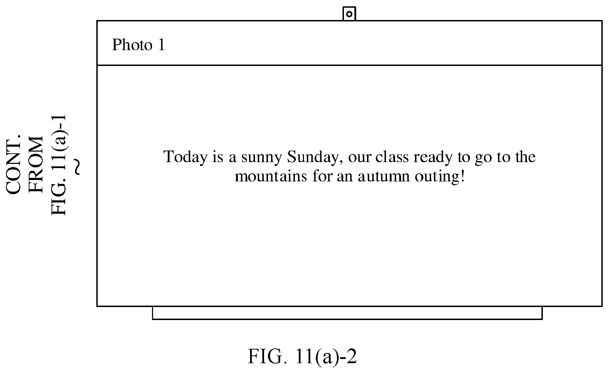

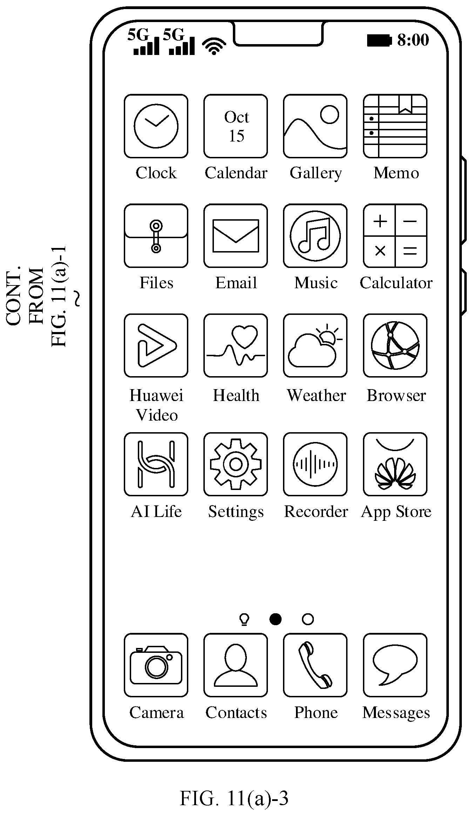

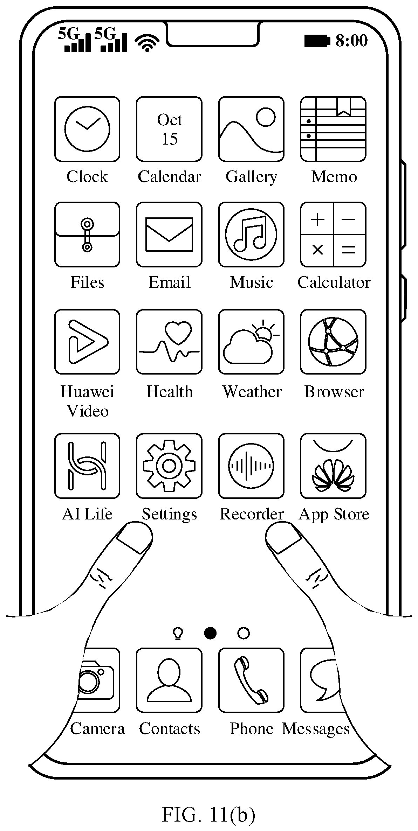

Refer to the GUI shown in FIG. 11(b). After the mobile phone detects an operation that the user presses the screen with two fingers, the mobile phone may send an instruction to the smart television. The instruction is used to instruct the smart television to capture image information currently displayed on the smart television. In response to receiving the instruction sent by the mobile phone, the smart television sends, to the mobile phone, the image information currently displayed on a display. In response to receiving the image information sent by the smart television, the mobile phone may recognize the text on the photo 1 through optical character recognition (optical character recognition, OCR), to obtain character string information "Today is a sunny...outing!".

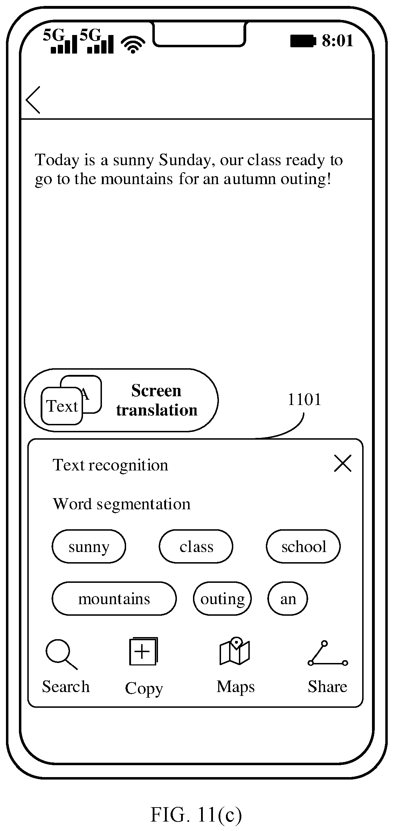

Refer to the GUI shown in FIG. 11(c). The GUI is a character string information display interface. After recognizing the character string information, the mobile phone may display the character string information and display a prompt box 1101 on the display. The prompt box 1101 includes a result of performing word segmentation on the character string information by the mobile phone and a full-screen translation control. The mobile phone may automatically translate the character string information after displaying the character string information display interface for preset duration (for example, 3 seconds).

In an embodiment, if the mobile phone determines, after recognizing the photo 1, that the photo 1 includes only text content, the mobile phone may automatically translate the recognized character string information.

For example, if a default language of the mobile phone is Chinese, and the mobile phone determines that a language corresponding to the character string information is non-Chinese content (for example, English), the mobile phone may automatically translate the character string content into Chinese.

In an embodiment, after obtaining the character string information, the mobile phone may further display prompt information to the user. The prompt information is used to prompt the user with a language (for example, Chinese, Japanese, Korean, or Spanish) into which the character string content is translated.

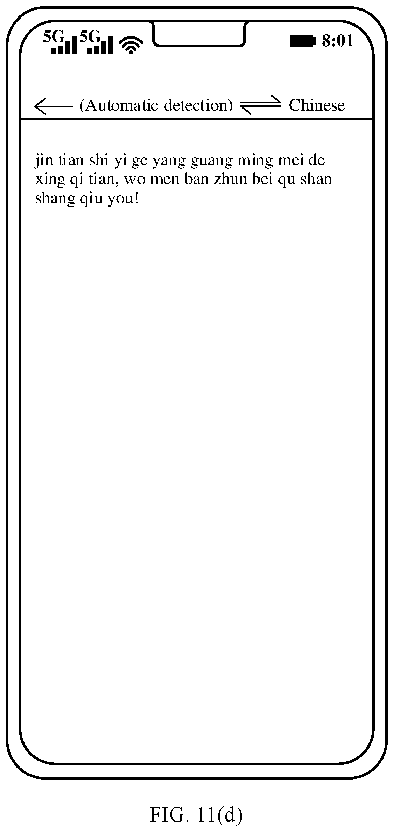

Refer to the GUI shown in FIG. 11(d). The GUI is a translation display interface. After translating the character string information, the mobile phone may display corresponding translation content "jin tian shi yi ge yang guang ming mei de xing qi tian...qiu you!" on the display.

In an embodiment, when displaying the translation display interface, the mobile phone may further send the translation content to the smart television.

In an embodiment, after the mobile phone detects an operation that the user presses the screen with both hands, the mobile phone may directly display the GUI shown in FIG. 11(d).

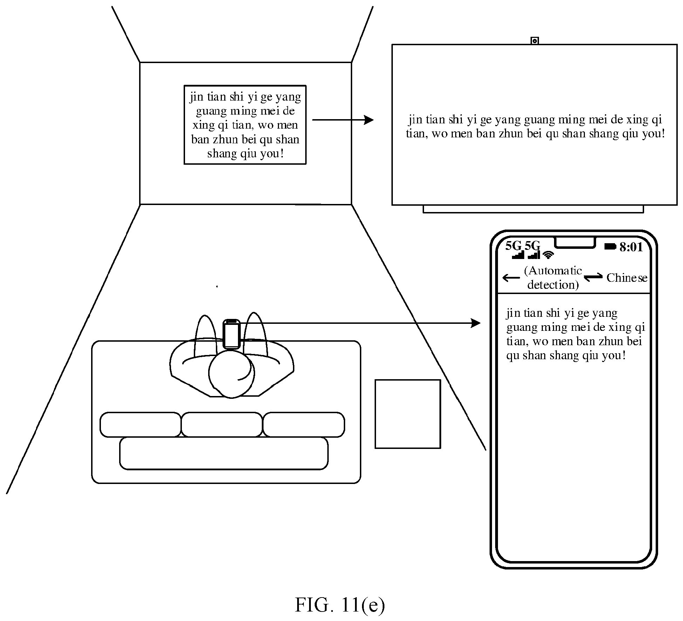

Refer to the GUI shown in FIG. 11(e). In response to receiving the translation content sent by the mobile phone, the smart television may display the translation content.

In this embodiment of this application, the user can use a function of another device (for example, the mobile phone) on one device (for example, the smart television), so as to extend a capability boundary of the device, and help the device conveniently and efficiently complete some relatively difficult tasks. The user does not need to input text on a photo displayed on the smart television into translation software or upload the text to a translation website, but triggers, by using a preset operation, the mobile phone to obtain image information from the smart television. After obtaining the image information, the mobile phone may recognize the character string information, so that the mobile phone translates the character string information. The smart television may directly display, on an original text display interface, a result of translating original text by the mobile phone. This can improve efficiency of translating the original text by the user, avoid excessive user operations during translation of the original text, and improve user experience.

FIG. 12(a) to FIG. 12(d)-1 to FIG. 12(d)-3 show another group of GUIs according to an embodiment of this application.

Refer to the GUI shown in FIG. 12(a). The smart television displays a photo 2, and the photo 2 includes image information of a football. In this case, the mobile phone displays a lock screen interface.

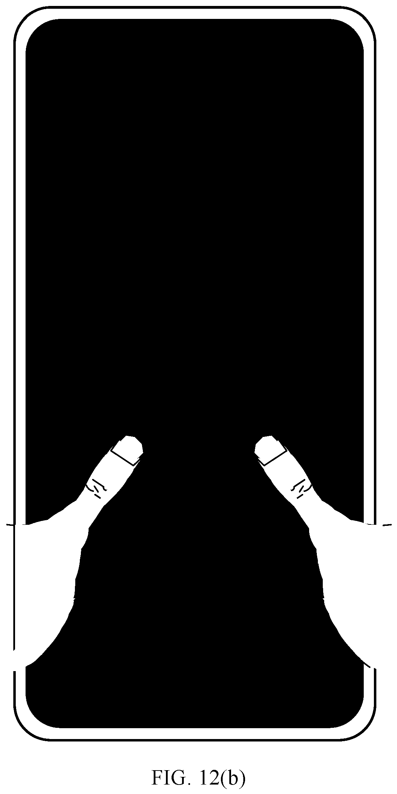

Refer to the GUI shown in FIG. 12(b). After the mobile phone detects an operation that the user presses the screen with two fingers, the mobile phone may send an instruction to the smart television. The instruction is used to instruct the smart television to capture image information currently displayed on the smart television. In response to receiving the instruction sent by the mobile phone, the smart television sends, to the mobile phone, the image information currently displayed on a display. In response to receiving the image information sent by the smart television, the mobile phone may recognize an object in the image information, to obtain an object recognition result of the object.

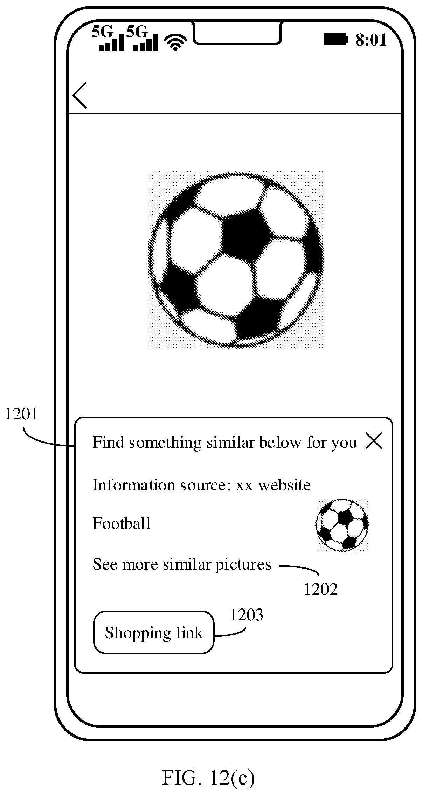

In an embodiment, after the mobile phone detects an operation that the user presses the screen with two fingers, the mobile phone may collect fingerprint information of the user, and match the collected fingerprint information against fingerprint information preset in the mobile phone. If the matching succeeds, the mobile phone may perform an unlocking operation, to enter a non-lock screen interface. After receiving the image information sent by the smart television, the mobile phone may recognize an object in the image information, and display an object recognition result shown in FIG. 12(c).

It should be understood that, if the mobile phone receives the image information and obtains the object recognition result before entering the non-lock screen interface, the mobile phone may directly display the object recognition result after entering the non-lock screen interface; or if the mobile phone receives the image information after entering the non-lock screen interface, the mobile phone may display the object recognition result shown in FIG. 12(c) after recognizing the object in the image information.

In an embodiment, after the mobile phone detects an operation that the user presses the screen with two fingers, the mobile phone may send the instruction to the smart television. When receiving the image information sent by the smart television, the mobile phone may prompt the user that an object in the image information needs to be recognized after unlocking is performed. When the mobile phone detects an unlocking operation of the user, the mobile phone may enter a non-lock screen interface, to recognize an object in the image information, and display an object recognition result shown in FIG. 12(c). It should be understood that, that the mobile phone detects an unlocking operation of the user includes but is not limited to: The mobile phone detects that the user inputs a password, and the password is successfully verified. Alternatively, the mobile phone detects an operation that the user presses a fingerprint collection area with a finger, and the collected fingerprint information matches fingerprint information preset in the mobile phone. Alternatively, the mobile phone enables a camera to collect facial information of the user, and the facial information collected by the camera matches facial information preset in the mobile phone.

In an embodiment, after the mobile phone detects an operation that the user presses the screen with two fingers, the mobile phone may send the instruction to the smart television. When receiving the image information sent by the smart television, the mobile phone may recognize an object in the image information, to obtain an object recognition result. In response to obtaining the object recognition result, the mobile phone may prompt the user to view the object recognition result after performing unlocking. When the mobile phone detects an unlocking operation of the user, the mobile phone may display an object recognition result shown in FIG. 12(c). It should be understood that, for the unlocking operation of the user that is detected by the mobile phone, refer to the descriptions in the foregoing embodiment. For brevity, details are not described herein again.

In an embodiment, if the mobile phone determines, after recognizing the photo 2, that the photo 2 includes only information about an object, the mobile phone may automatically recognize the object.

Refer to the GUI shown in FIG. 12(c). The GUI is an object recognition result display interface. The mobile phone may display a prompt box 1201 on the display. The prompt box 1201 includes prompt information "Find something similar below for you", an information source (for example, "xx website"), name information of the object (for example, "football"), a control 1202 for viewing more similar pictures, and a shopping link 1203.

In an embodiment, when displaying the object recognition result, the mobile phone may further send the object recognition result to the smart television, so that the smart television displays the object recognition result.

Refer to the GUI shown in FIG. 12(d)-1 to FIG. 12(d)-3. In response to receiving the object recognition result sent by the mobile phone, the smart television may display the object recognition result on the display.

In this embodiment of this application, the user does not need to log in to object recognition software or send the photo to an object recognition website for object recognition, but triggers, by using a preset operation of the user, the mobile phone to send an instruction for obtaining image information to the smart television. After obtaining the image information, the mobile phone may use an object recognition function of the mobile phone to recognize an object in the image information. In this way, the smart television may invoke the smart object recognition function of the mobile phone. This can improve efficiency of recognizing the object on the photo, and helps improve user experience.

FIG. 13(a)-1 to FIG. 13(a)-3 to FIG. 13(c) show another group of GUIs according to an embodiment of this application.

Refer to the GUI shown in FIG. 13(a)-1 to FIG. 13(a)-3. The smart television displays a photo 3, and the photo 3 includes a piece of Chinese "miao xie qiu tian de ju zi...fei lai fei qu". In this case, the mobile phone displays a home screen of the mobile phone.

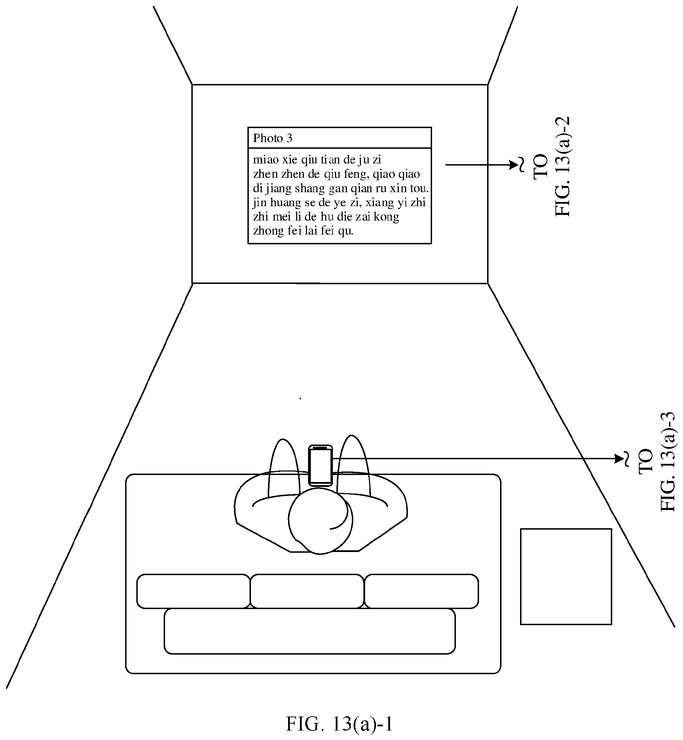

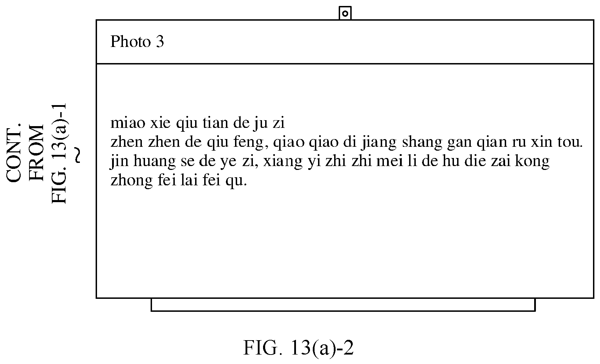

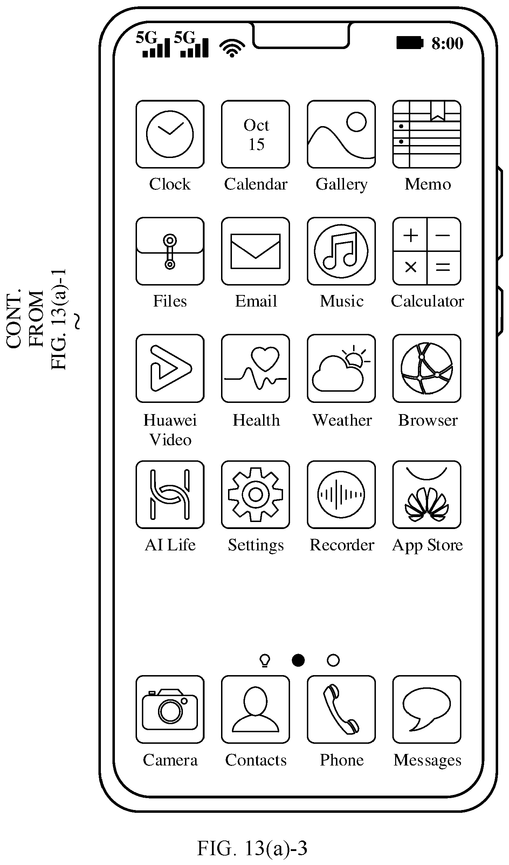

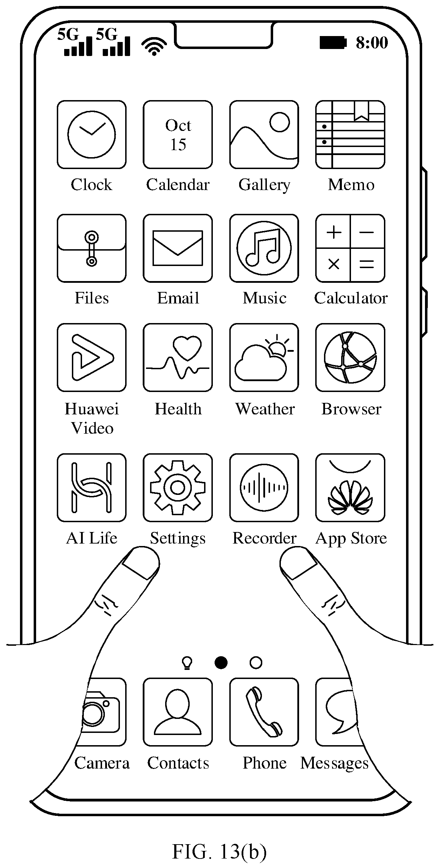

Refer to the GUI shown in FIG. 13(b). After the mobile phone detects an operation that the user presses the screen with two fingers, the mobile phone may send an instruction to the smart television. The instruction is used to instruct the smart television to capture image information currently displayed on the smart television. In response to receiving the instruction sent by the mobile phone, the smart television sends, to the mobile phone, the image information currently displayed on a display. In response to receiving the image information sent by the smart television, the mobile phone may recognize the text on the photo 3 through OCR, to obtain character string information "miao xie qiu tian de ju zi...fei lai fei qu".

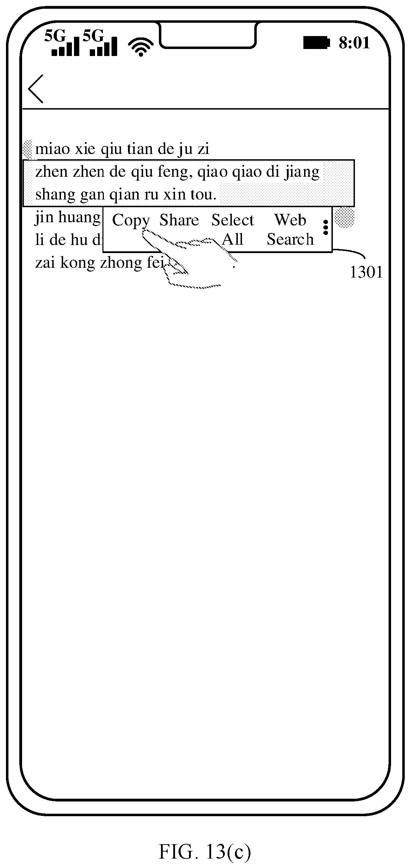

Refer to the GUI shown in FIG. 13(c). The GUI is a character string information display interface. After the mobile phone detects that the user selects a part of the text "zhen zhen de qiu feng...qian ru xin tou", the mobile phone may display a function list 1301. The function list 1301 includes functions such as copying, sharing, selecting all, and web page searching. The user may choose to copy the selected text to the local mobile phone (for example, copy the text to a Memo application on the mobile phone).

In an embodiment, if the mobile phone determines, after recognizing the photo 3, that the photo 3 includes only text content, and the text content is a default language of the mobile phone, the mobile phone may display the character string information recognized by the mobile phone.

For example, if the default language of the mobile phone is Chinese, and the mobile phone determines that a language corresponding to the character string information is Chinese content, the mobile phone may display the character string information.

In an embodiment, after obtaining the character string information, the mobile phone may further display prompt information to the user. The prompt information is used to prompt the user with a language (for example, Chinese, Japanese, Korean, or Spanish) into which the character string content is translated.

In this embodiment of this application, the user does not need to manually enter corresponding text on the mobile phone with reference to the content on the photo on the smart television, but triggers, by using a preset operation of the user, the mobile phone to send an instruction for obtaining image information to the smart television. After obtaining the image information, the mobile phone may use a function of converting image text into a character string of the mobile phone, to obtain the recognized character string information. This helps improve efficiency of converting text on an image to a character string by the user, and helps improve user experience.

The foregoing describes, by using the several groups of GUIs shown in FIG. 11(a)-1 to FIG. 11(a)-3 to FIG. 11(e) to FIG. 13(a)-1 to FIG. 13(a)-3 to FIG. 13(c), a process in which the mobile phone determines, by using the image information obtained from the smart television, content included in the image information, to invoke a corresponding capability of the mobile phone by using the content, to process the content. The following describes a processing manner used when the mobile phone recognizes different types of content (for example, character string information and image information of an object) from the image information obtained by the smart television.

FIG. 14(a)-1 to FIG. 14(a)-3 to FIG. 14(f) show another group of GUIs according to an embodiment of this application.

Refer to the GUI shown in FIG. 14(a)-1 to FIG. 14(a)-3. The smart television displays a photo 4, and the photo 4 includes a piece of English "Today is a sunny...outing!" and image information of an object (for example, a mountain peak). In this case, the mobile phone displays a home screen of the mobile phone.

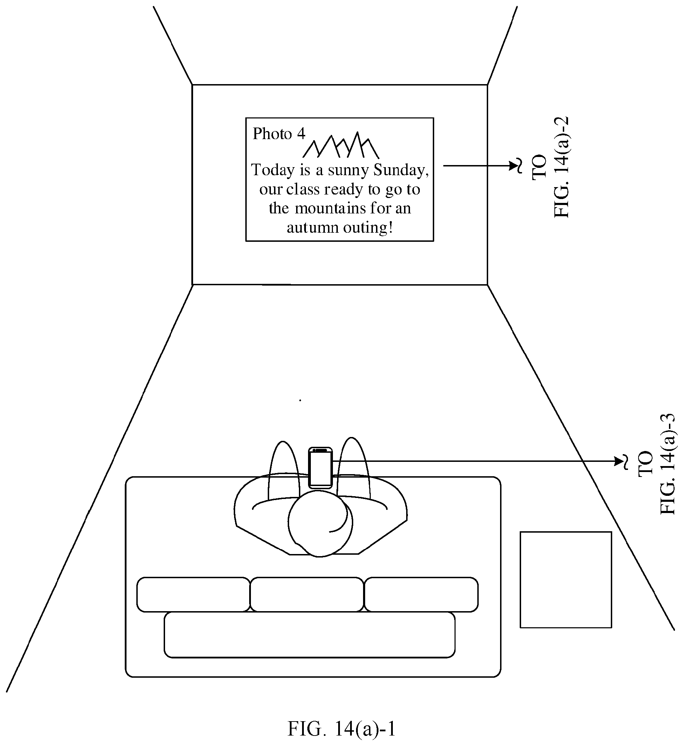

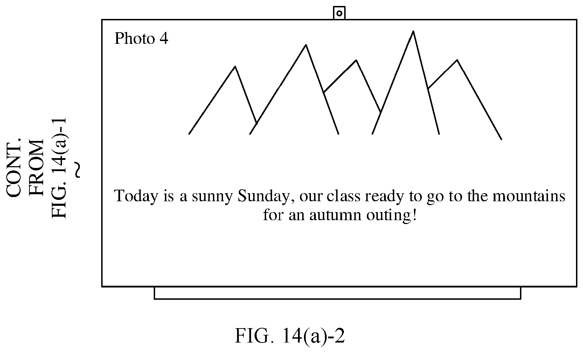

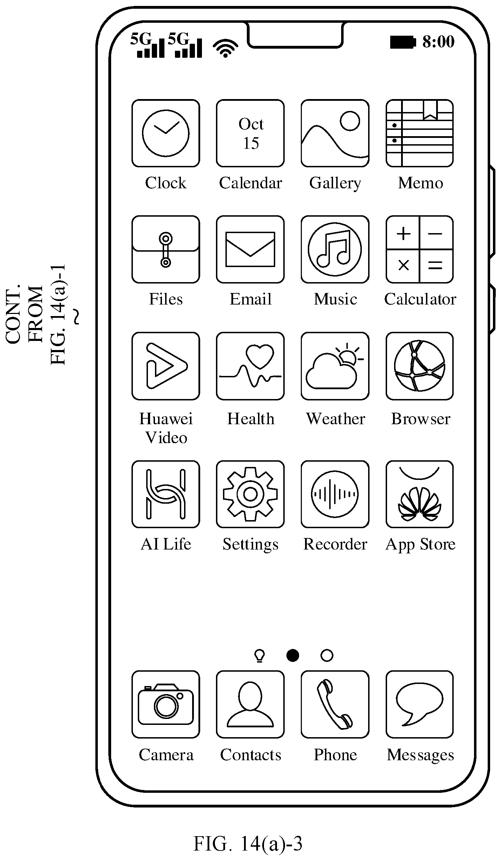

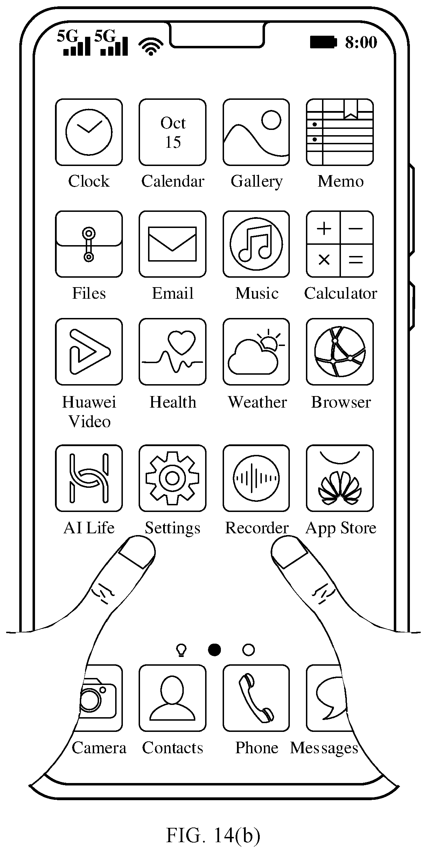

Refer to the GUI shown in FIG. 14(b). After the mobile phone detects an operation that the user presses the screen with two fingers, the mobile phone may send an instruction to the smart television. The instruction is used to instruct the smart television to capture image information currently displayed on the smart television. In response to receiving the instruction sent by the mobile phone, the smart television sends, to the mobile phone, the image information currently displayed on a display. In response to receiving the image information sent by the smart television, the mobile phone may recognize the image information on the photo 4, to obtain character string information (for example, "Today is a sunny...outing!") and the image information of the object.

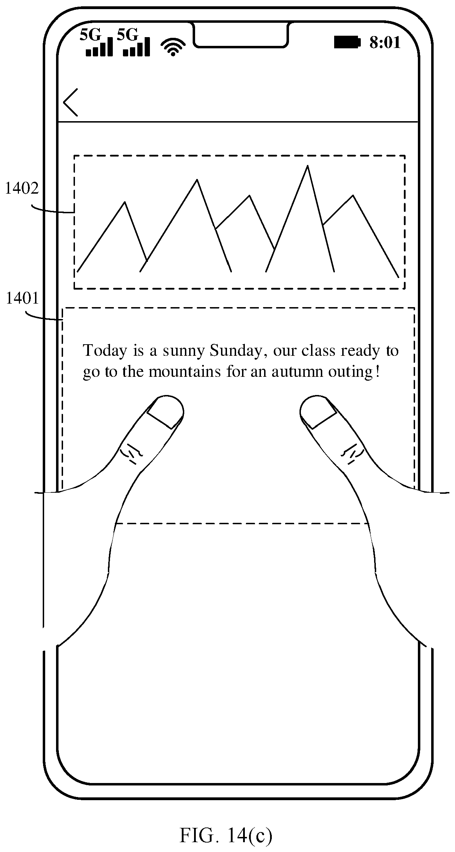

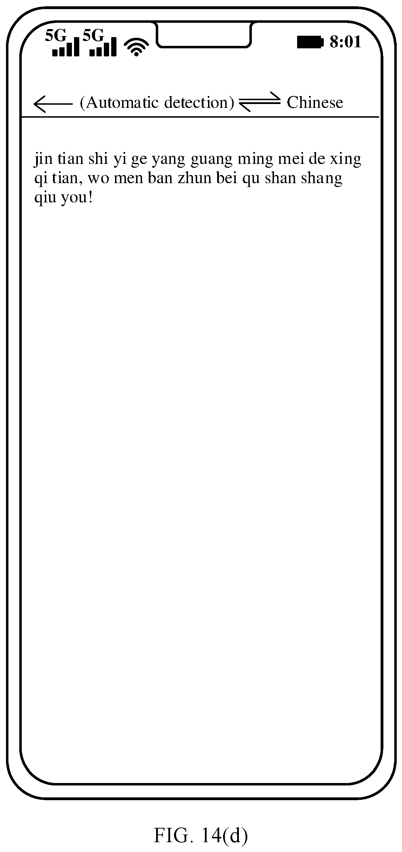

Refer to the GUI shown in FIG. 14(c). After recognizing the image information, the mobile phone may display recognized character string information 1401 and image information 1402 of an object. When the mobile phone detects an operation that the user presses the character string information with two fingers, the mobile phone may display the GUI shown in FIG. 14(d).

Refer to the GUI shown in FIG. 14(d). In response to an operation that the mobile phone detects that the user presses the character string information with two fingers, the mobile phone may translate the character string information. The GUI is a translation result of the character string information.

In an embodiment, if a default language of the mobile phone is Chinese and the mobile phone determines that a language corresponding to the character string information is not Chinese, when the mobile phone detects an operation that the user presses the character string information with two fingers, the mobile phone may automatically translate the character string information into Chinese.

In an embodiment, when detecting an operation that the user presses the character string information with two fingers, the mobile phone may further prompt the user with a language (for example, Chinese, Japanese, Korean, or Spanish) into which the character string information is translated.

In an embodiment, when detecting another preset operation (for example, a three-finger pressing operation) of the user on the character string information, the mobile phone may further translate the character string information.

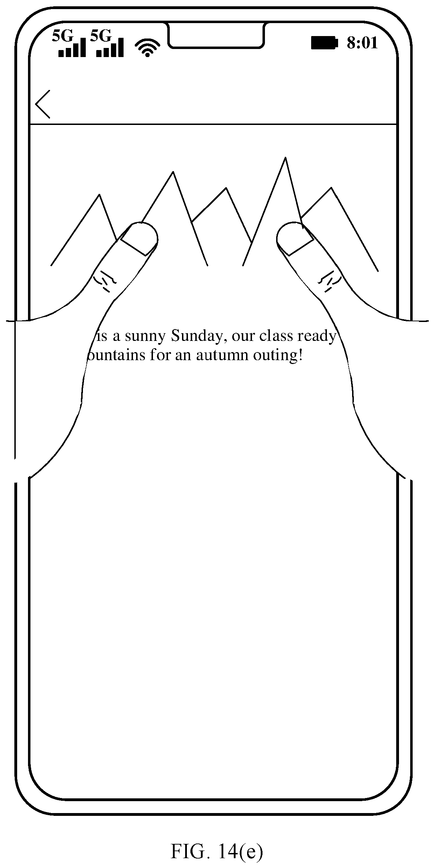

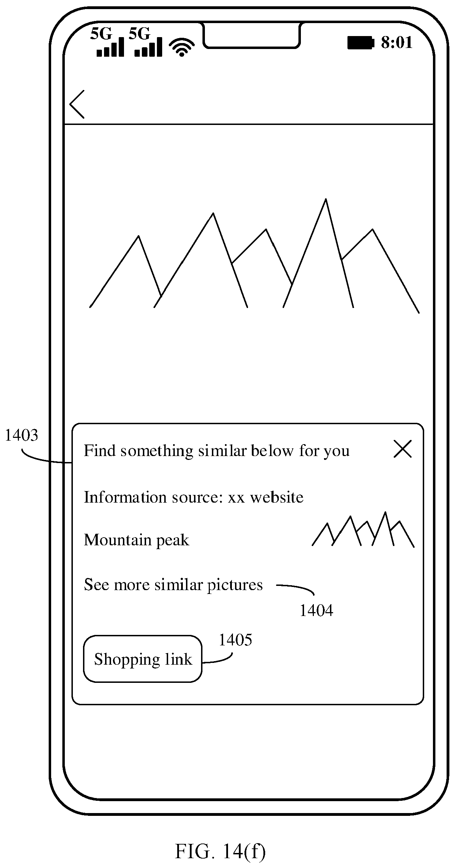

Refer to the GUI shown in FIG. 14(e). When the mobile phone detects an operation that the user presses the image information of the object with two fingers, the mobile phone may display the GUI shown in FIG. 14(f).

Refer to the GUI shown in FIG. 14(f). In response to an operation that the mobile phone detects that the user presses the image information of the object with two fingers, the mobile phone may recognize an object in the image information, to display a prompt box 1403. The prompt box 1403 includes an object recognition result of the object. The object recognition result includes prompt information "Find something similar below for you", an information source (for example, xx website), a name of the object (for example, mountain peak), a control 1404 for viewing more similar pictures, and a shopping link 1405.

In an embodiment, in response to an operation that the mobile phone detects that the user presses the image information of the object with two fingers, the mobile phone may further prompt the user with an operation to be performed on the image information, for example, object recognition or shopping link query.

In an embodiment, when detecting another preset operation (for example, a mid-air gesture) of the user on the image information, the mobile phone may further recognize an object in the image information.

FIG. 15(a) to FIG. 15(e) show another group of GUIs according to an embodiment of this application. Different from the GUI shown in FIG. 14(a)-1 to FIG. 14(a)-3 to FIG. 14(f), before displaying a processing result of the image information sent by the smart television, the mobile phone may prompt the user to select a manner of processing the image information.

Refer to the GUI shown in FIG. 15(a). After the mobile phone detects an operation that the user presses the screen with two fingers, the mobile phone may send an instruction to the smart television. The instruction is used to instruct the smart television to capture image information currently displayed on the smart television. In response to receiving the instruction sent by the mobile phone, the smart television sends, to the mobile phone, the image information currently displayed on a display. In response to receiving the image information sent by the smart television, the mobile phone may recognize the image information on the photo 4, to obtain character string information (for example, "Today is a sunny...outing!") and image information of an object.

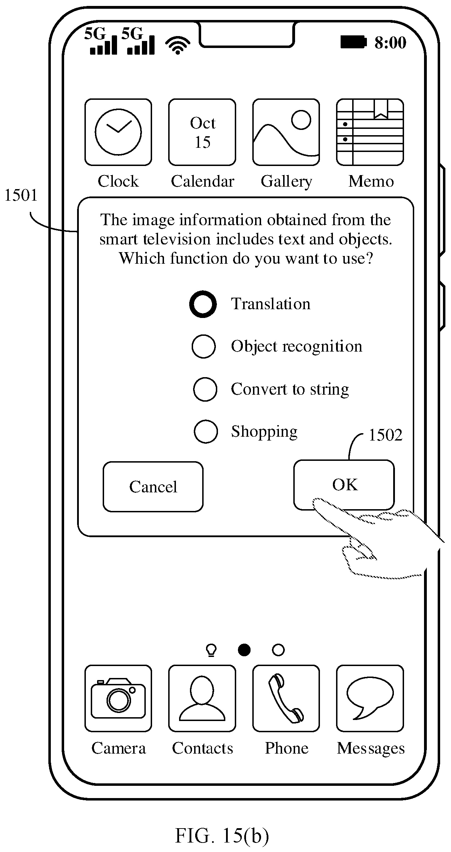

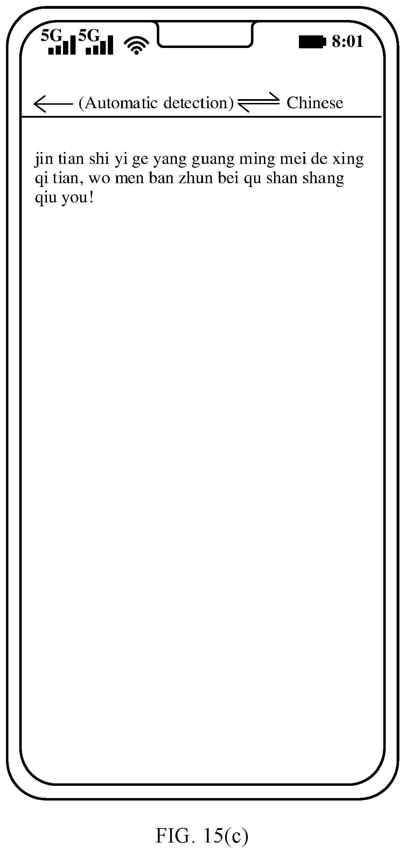

Refer to the GUI shown in FIG. 15(b). In response to obtaining the character string information and the image information of the object, the mobile phone may display a prompt box 1501. The prompt box 1501 includes prompt information "The image information obtained from the smart television includes text and objects. Which function do you want to use?" and a function list (including translation, object recognition, character string conversion, and shopping). When the mobile phone detects an operation that the user selects the translation function and taps a control 1502, the mobile phone may display the GUI shown in FIG. 15(c).

Refer to the GUI shown in FIG. 15(c). In response to an operation that the mobile phone detects that the user selects the translation function and taps the control 1502, the mobile phone may translate the character string information. The GUI is a translation result of the character string information.

In an embodiment, if a default language of the mobile phone is Chinese and the mobile phone determines that a language corresponding to the character string information is not Chinese, when the mobile phone detects an operation that the user selects the translation function and taps the control 1502, the mobile phone may automatically translate the character string information into Chinese.

In an embodiment, when detecting an operation that the user taps the control 1502, the mobile phone may further prompt the user with a language (for example, Chinese, Japanese, Korean, or Spanish) into which the character string information is translated. When detecting that the user chooses to translate the character string information into Chinese, the mobile phone may translate the character string information into Chinese.

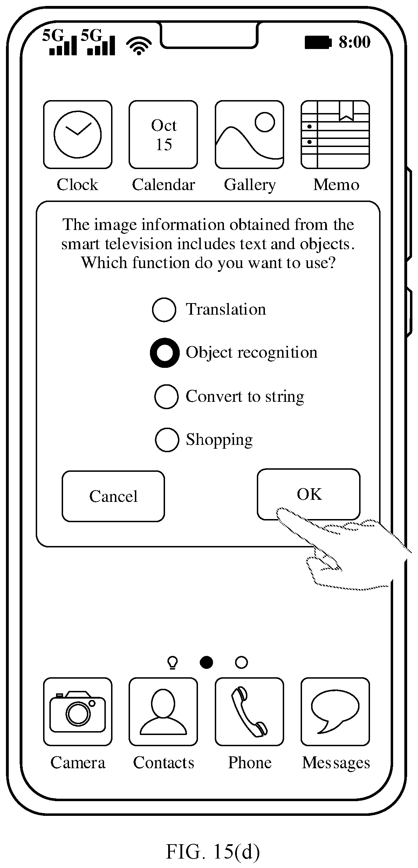

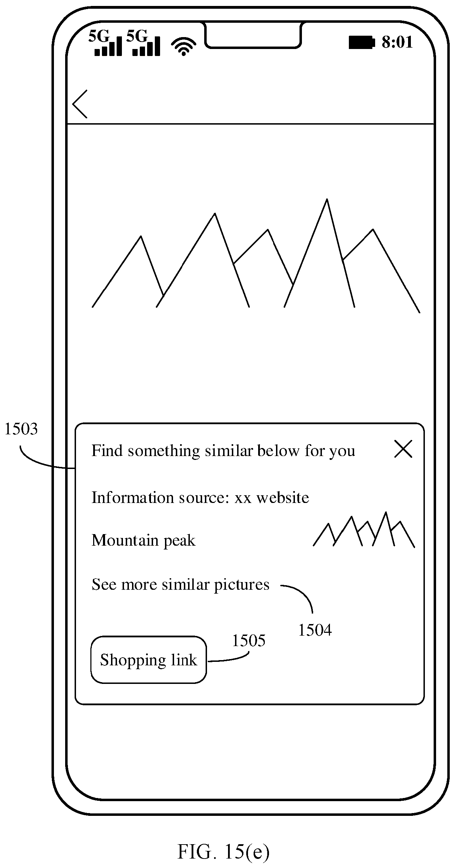

Refer to the GUI shown in FIG. 15(d). When the mobile phone detects an operation that the user selects the object recognition function and taps the control 1502, the mobile phone may display the GUI shown in FIG. 15(e).

Refer to the GUI shown in FIG. 15(e). In response to an operation that the mobile phone detects that the user selects the object recognition function and taps the control 1502, the mobile phone may perform object recognition on the image information of the object, to display a prompt box 1503. The prompt box 1503 includes an object recognition result of the object. The object recognition result includes prompt information "Find something similar below for you", an information source (for example, xx website), a name of the object (for example, mountain peak), a control 1504 for viewing more similar pictures, and a shopping link 1505.

With reference to FIG. 14(a)-1 to FIG. 14(a)-3 to FIG. 14(f) and FIG. 15(a) to FIG. 15(e), the foregoing describes a processing manner used when the mobile phone recognizes different types of content (for example, the character string information and the image information of the object) from the image information obtained by the smart television. With reference to FIG. 16(a)-1 to FIG. 16(a)-3 to FIG. 16(e), the following describes a process in which the mobile phone determines whether the user processes content displayed on the mobile phone or processes content displayed on the smart television.

FIG. 16(a)-1 to FIG. 16(a)-3 to FIG. 16(e) show another group of GUIs according to an embodiment of this application.

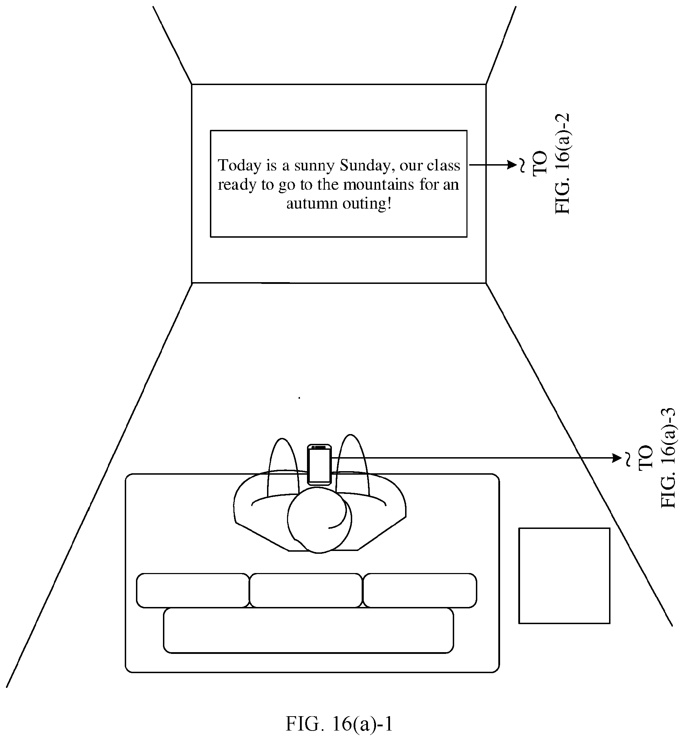

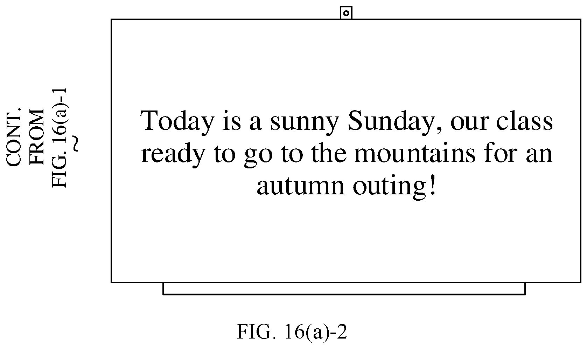

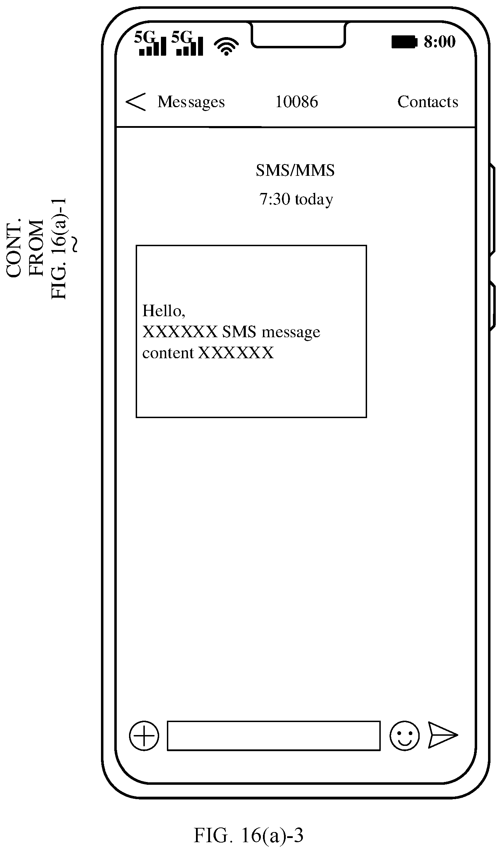

Refer to the GUI shown in FIG. 16(a). The smart television displays a photo 1, and the photo 1 includes a piece of English "Today is a sunny...outing!". In this case, the mobile phone displays a display interface of a Messages application on the mobile phone.

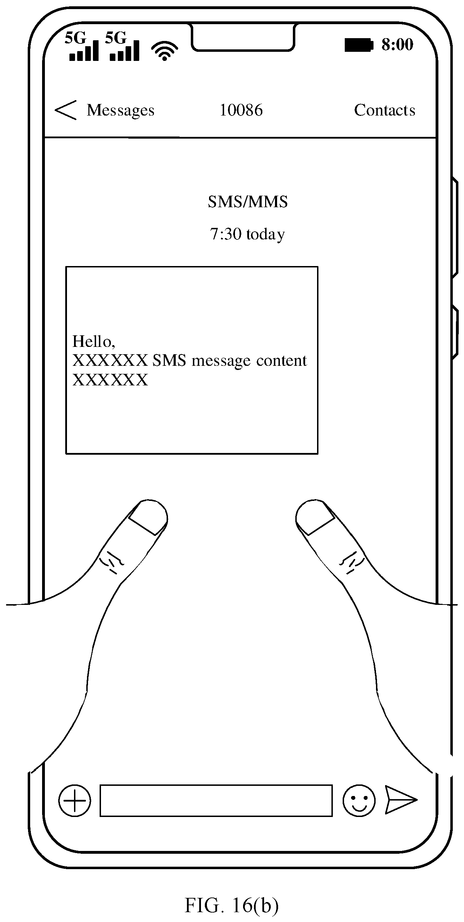

Refer to the GUI shown in FIG. 16(b). When the mobile phone detects an operation that the user presses the display interface of the Messages application with two fingers, the mobile phone may display the GUI shown in FIG. 16(f).

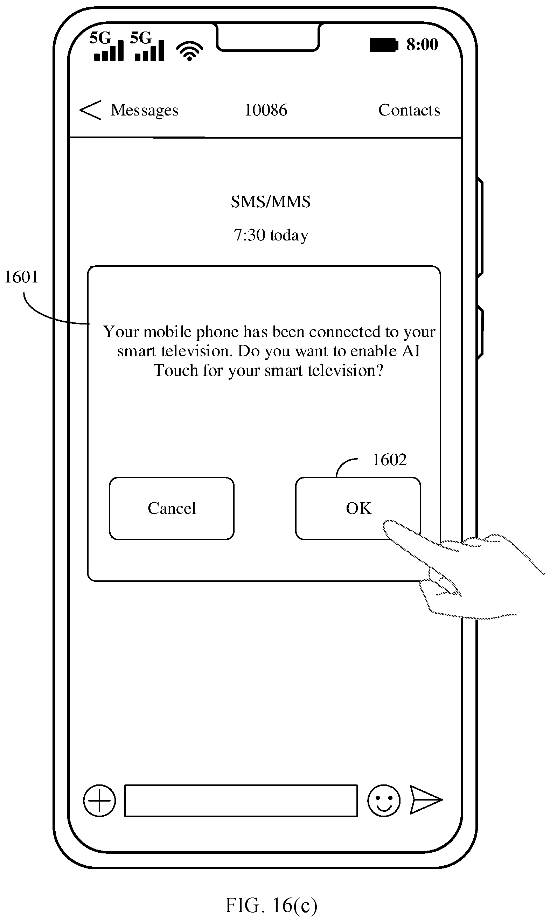

Refer to the GUI shown in FIG. 16(c). In response to an operation that the mobile phone detects that the user presses the display interface of the Messages application with two fingers, the mobile phone may display a prompt box 1601. The prompt box 1601 includes prompt information "Your mobile phone has been connected to your smart television. Do you want to enable AI Touch for your smart television?". When the mobile phone detects an operation that the user taps a control 1602, the mobile phone may send an instruction to the smart television. The instruction is used to instruct the smart television to capture image information currently displayed on the smart television. In response to receiving the instruction sent by the mobile phone, the smart television sends, to the mobile phone, the image information currently displayed on a display. In response to receiving the image information sent by the smart television, the mobile phone may recognize the image information on the photo 1, to obtain character string information (for example, "Today is a sunny...outing!").

In an embodiment, if the mobile phone establishes a wireless connection to each of the smart television and a tablet computer, the mobile phone may further prompt the user to select a device on which AI Touch is to be performed. If the mobile phone detects that the user chooses to perform AI Touch on the smart television, the mobile phone may send the instruction to the smart television.

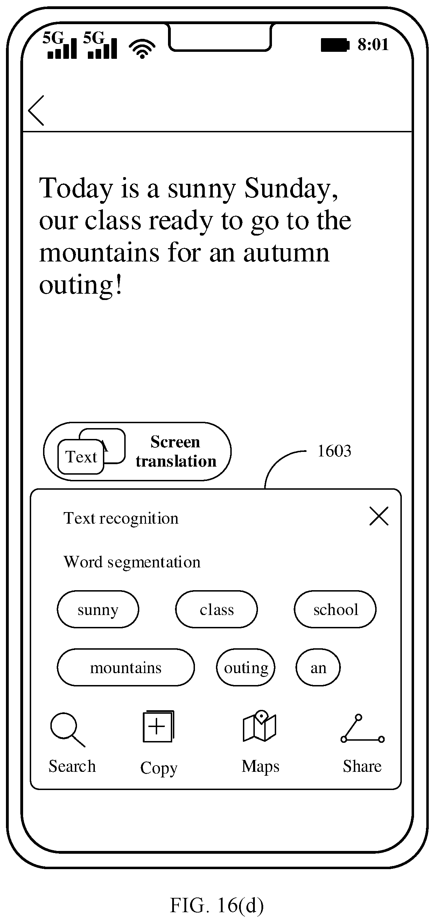

Refer to the GUI shown in FIG. 16(d). The GUI is a character string information display interface. The display interface further includes a prompt box 1603. The prompt box 1603 includes a result of performing word segmentation on the character string information by the mobile phone and a full-screen translation control. The mobile phone may automatically translate the character string information after displaying the character string information display interface for preset duration (for example, 3 seconds).

In an embodiment, if the mobile phone determines, after recognizing the photo 1, that the photo 1 includes only text content, the mobile phone may automatically translate the recognized character string information.

For example, if a default language of the mobile phone is Chinese, and the mobile phone determines that a language corresponding to the character string information is non-Chinese content (for example, English), the mobile phone may automatically translate the character string content into Chinese.

In an embodiment, after obtaining the character string information, the mobile phone may further display prompt information to the user. The prompt information is used to prompt the user with a language (for example, Chinese, Japanese, Korean, or Spanish) into which the character string content is translated.

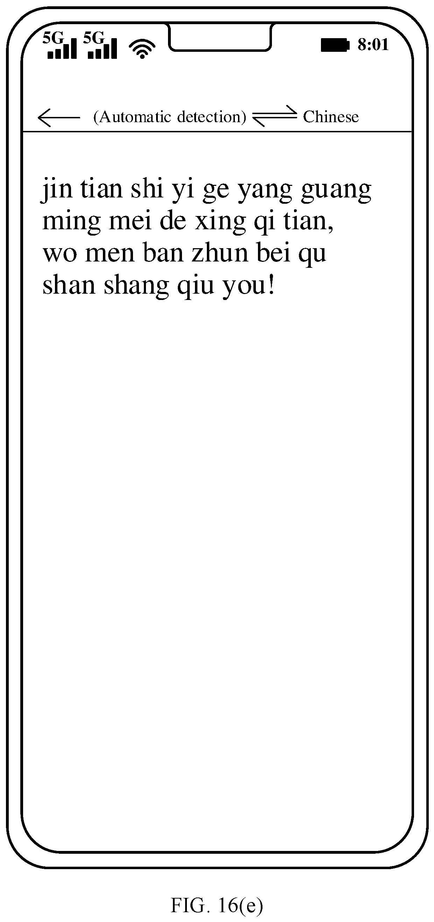

Refer to the GUI shown in FIG. 16(e). The GUI is a translation display interface. After translating the character string information, the mobile phone may display corresponding translation content "jin tian shi yi ge yang guang ming mei de xing qi tian...qiu you!" on the display.

In an embodiment, when displaying the translation display interface, the mobile phone may further send the translation content to the smart television. In this way, the mobile phone displays the GUI shown in FIG. 11(e).

In an embodiment, after the mobile phone detects an operation that the user taps the control 1602, the mobile phone may directly display the GUI shown in FIG. 16(e).

In an embodiment, the mobile phone may determine, based on content currently displayed on the interface, whether the user expects to perform AI Touch on a picture on the mobile phone or perform AI Touch on a picture on the smart television. For example, a wireless connection is established between the mobile phone and the smart television. When the mobile phone displays a home screen of the mobile phone or a lock screen interface of the mobile phone, and the mobile phone detects a preset operation (for example, a two-finger pressing operation) of the user, the mobile phone may determine that the user expects to perform AI Touch on the picture on the smart television. When the mobile phone displays a display interface of an application (for example, a Messages application, a Memo application, or a Browser application), and the mobile phone detects a preset operation (for example, a two-finger pressing operation) of the user, the mobile phone may determine that the user expects to perform AI Touch on the picture on the mobile phone, or the mobile phone may prompt the user to select a device on which AI Touch is to be performed.

In an embodiment, the mobile phone may determine, based on a preset gesture of the user, whether the user expects to perform AI Touch on a picture on the mobile phone or perform AI Touch on a picture on the smart television. For example, when the mobile phone detects a two-finger pressing operation of the user, the mobile phone may determine that AI Touch is performed on the picture on the mobile phone. For example, when the mobile phone detects a two-finger pressing operation of the user and a distance by which the two fingers move on the screen is greater than or equal to a preset distance, the mobile phone may determine that AI Touch is performed on the picture on the smart television. For example, if the mobile phone establishes a wireless connection to each of the smart television and a tablet computer, when the mobile phone detects the two-finger pressing operation of the user and the distance by which the two fingers move on the screen is greater than or equal to the preset distance, the mobile phone may prompt the user to choose to perform AI Touch on the picture on the smart television or a picture on the tablet computer.

With reference to FIG. 11(a)-1 to FIG. 11(a)-3 to FIG. 11(e) to FIG. 16(a)-1 to FIG. 16(a)-3 to FIG. 16(e), the foregoing describes a case in which the mobile phone may send an instruction to the smart television when detecting a preset operation (for example, a two-finger pressing operation). The instruction is used to instruct the smart television to capture image information currently displayed on the smart television. In this embodiment of this application, considering that there is a specific time interval from a moment at which the user views a picture on the smart television to a moment at which the user picks up the mobile phone to perform AI Touch on the picture on the smart television, the instruction sent by the mobile phone to the smart television may be further used to instruct the smart television to capture a video cache resource in a time period, and the video cache resource may include a plurality of frames of images.

FIG. 17(a)-1 to FIG. 17(a)-3 to FIG. 17(e) show another group of GUIs according to an embodiment of this application.

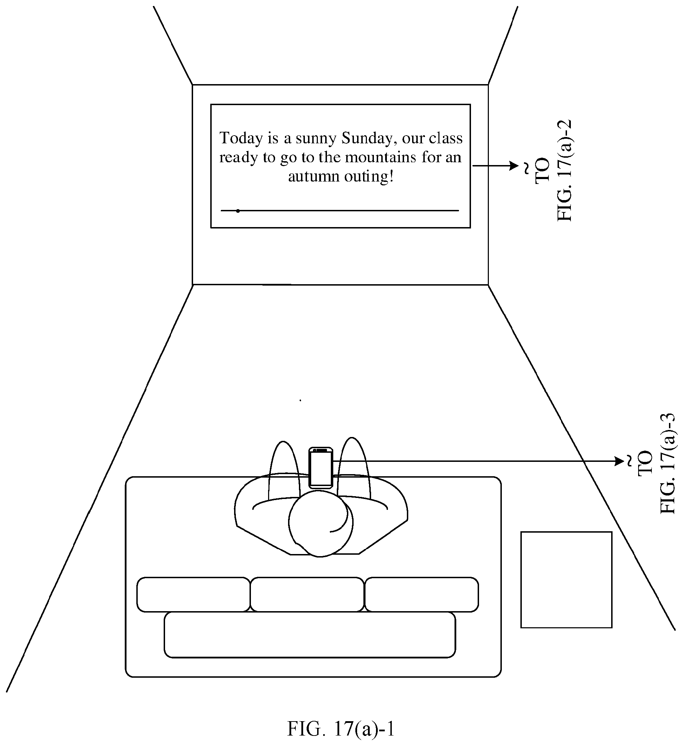

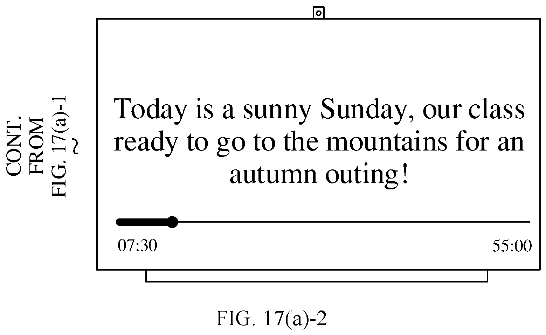

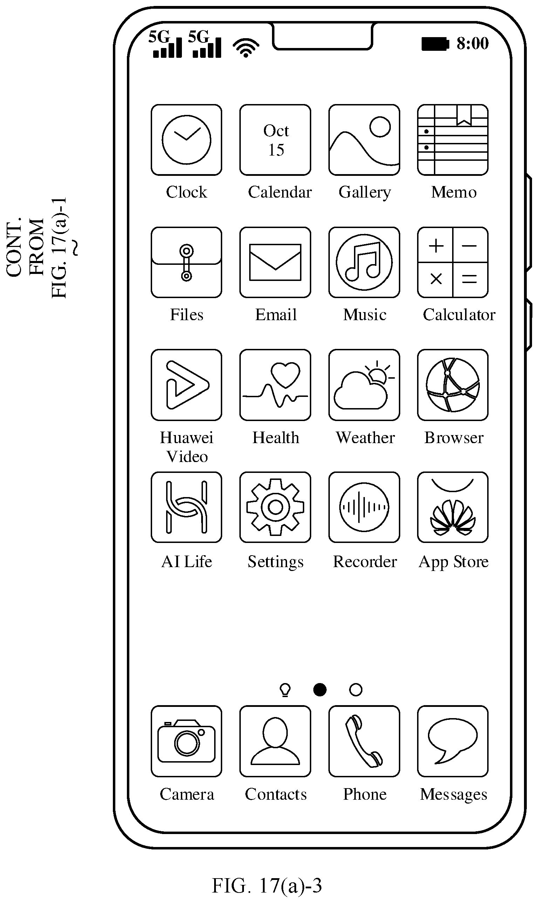

Refer to the GUI shown in FIG. 17(a). The smart television is currently playing a video. In this case, the mobile phone displays a home screen of the mobile phone.

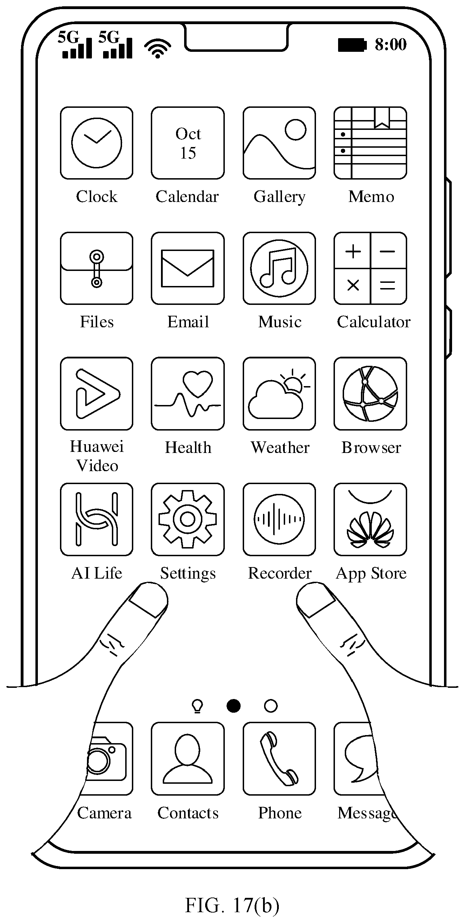

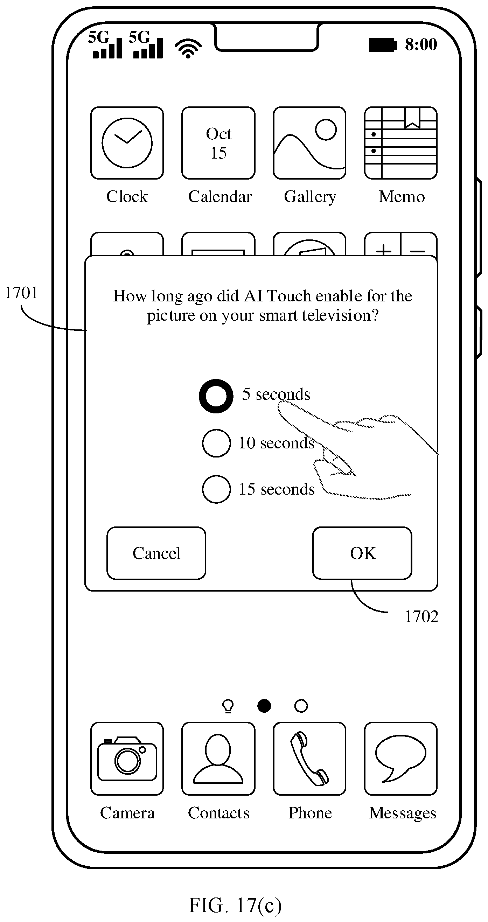

Refer to the GUI shown in FIG. 17(b). When the mobile phone detects a two-finger pressing operation of the user, the mobile phone may display the GUI shown in FIG. 17(c).

Refer to the GUI shown in FIG. 17(c). In response to an operation that the mobile phone detects that the user presses a display interface of a Messages application with two fingers, the mobile phone may display a prompt box 1701. The prompt box 1701 includes prompt information "How long ago did AI Touch enable for the picture on your smart television?". When the mobile phone detects that the user chooses to perform an operation that the user performs AI Touch on a picture 5 seconds ago and taps a control 1702, the mobile phone may send an instruction to the smart television. The instruction is used to instruct the smart television to capture a video cache resource 5 seconds ago. In response to receiving the instruction sent by the mobile phone, the smart television sends the video cache resource 5 seconds ago to the mobile phone.

In an embodiment, when detecting a two-finger pressing operation of the user, the mobile phone may record a timestamp $T_1$ at the moment. There is a specific time interval $T_2$ from a moment at which the user views a related picture on the smart television to a moment at which the user presses the mobile phone with two fingers (for example, the user chooses to perform AI Touch on a picture 5 seconds ago). In this case, the instruction may include the timestamp $T_1$ and the time interval $T_2$. The smart television may intercept a video cache resource of N seconds (for example, N is 2) at a time point of $T_1$-$T_2$, and send the video cache resource to the mobile phone.

For example, if the timestamp $T_1$ is 08:00:15 and the user chooses to perform AI Touch on a picture 5 seconds ago, the smart television may capture a video cache resource near 08:00:10. For example, the smart television may intercept a video cache resource from 08:00:09 to 08:00:11.

After receiving the video cache resource sent by the smart television, the mobile phone may convert the video cache resource into image information. For a specific conversion process, refer to the following description. Details are not described herein again. The mobile phone may recognize the image information obtained through conversion. For example, the mobile phone may recognize the image information to obtain character string information.

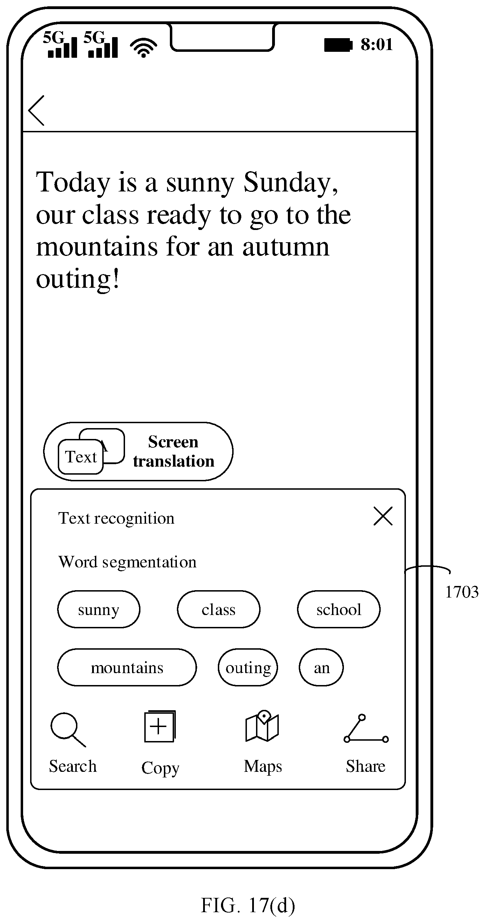

Refer to the GUI shown in FIG. 17(d). The GUI is a character string information display interface. After recognizing the character string information, the mobile phone may display the character string information and display a prompt box 1703 on a display. The prompt box 1703 includes a result of performing word segmentation on the character string information by the mobile phone and a full-screen translation control. The mobile phone may automatically translate the character string information after displaying the character string information display interface for preset duration (for example, 3 seconds).

In an embodiment, if the mobile phone determines, after recognizing the image information obtained through conversion, that the image information includes only text content, the mobile phone may automatically translate the recognized character string information.

For example, if a default language of the mobile phone is Chinese, and the mobile phone determines that a language corresponding to the character string information is non-Chinese content (for example, English), the mobile phone may automatically translate the character string content into Chinese.

In an embodiment, after obtaining the character string information, the mobile phone may further display prompt information to the user. The prompt information is used to prompt the user with a language (for example, Chinese, Japanese, Korean, or Spanish) into which the character string content is translated.

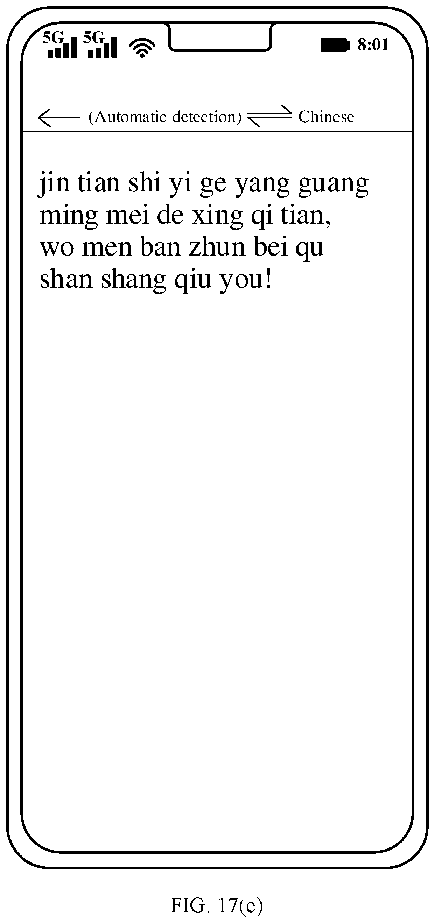

Refer to the GUI shown in FIG. 17(e). The GUI is a translation display interface. After translating the character string information, the mobile phone may display corresponding translation content "jin tian shi yi ge yang guang ming mei de xing qi tian...qiu you!" on the display.

In an embodiment, when displaying the translation display interface, the mobile phone may further send the translation content to the smart television.

In an embodiment, after the mobile phone detects an operation that the user presses the screen with two fingers, the mobile phone may directly display the GUI shown in FIG. 17(e).

FIG. 18(a)-1 to FIG. 18(a)-3 to FIG. 18(c)-1 to FIG. 18(c)-3 show another group of GUIs according to an embodiment of this application.

Refer to the GUI shown in FIG. 18(a)-1 to FIG. 18(a)-3. The smart television displays a login interface of a video app. In this case, the mobile phone displays a home screen of the mobile phone.

When the smart television detects an operation that the user inputs a phone number in a phone number input box and taps a verification code obtaining control 1801, the smart television may request a server to send a verification code to a device corresponding to the phone number.

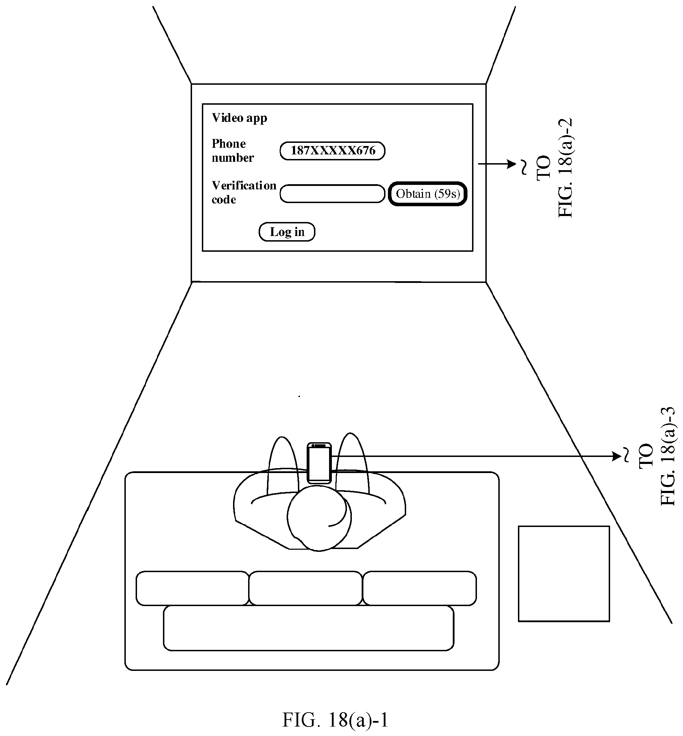

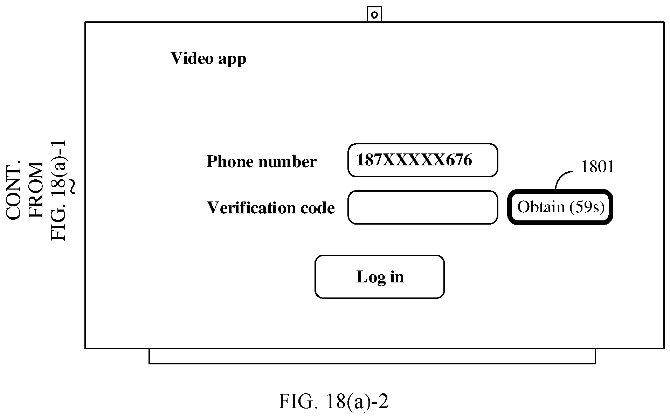

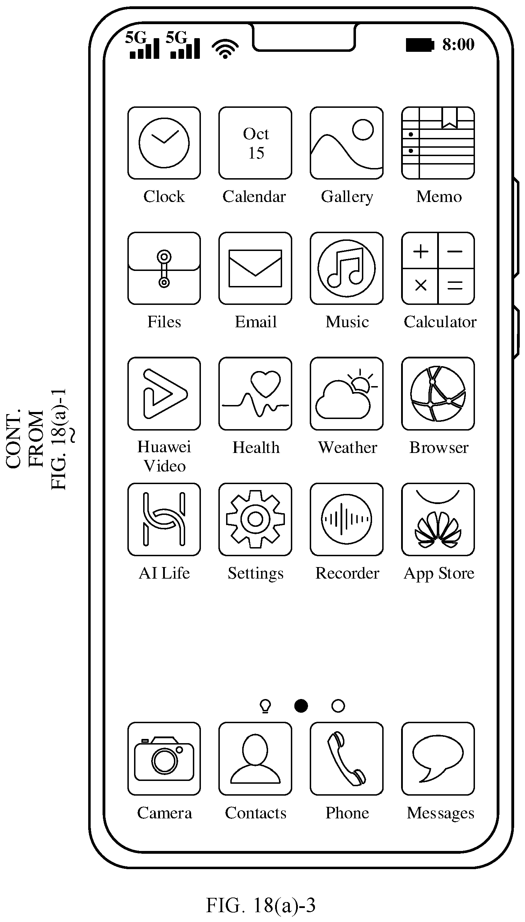

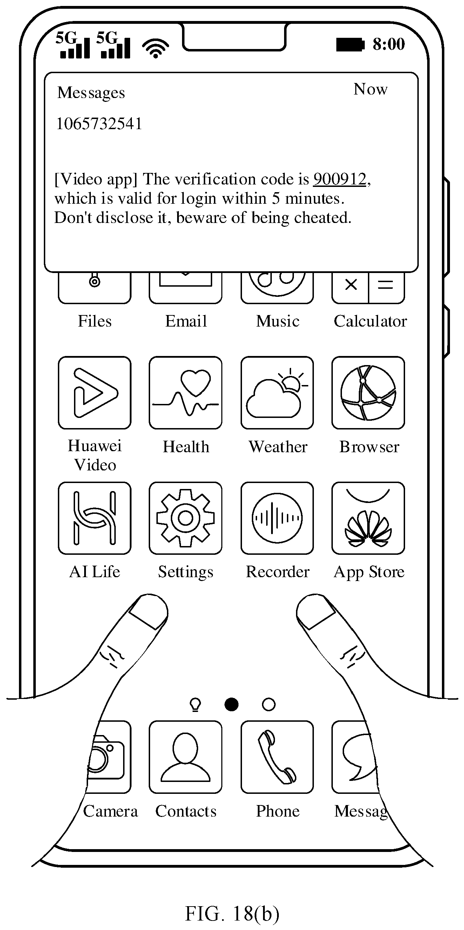

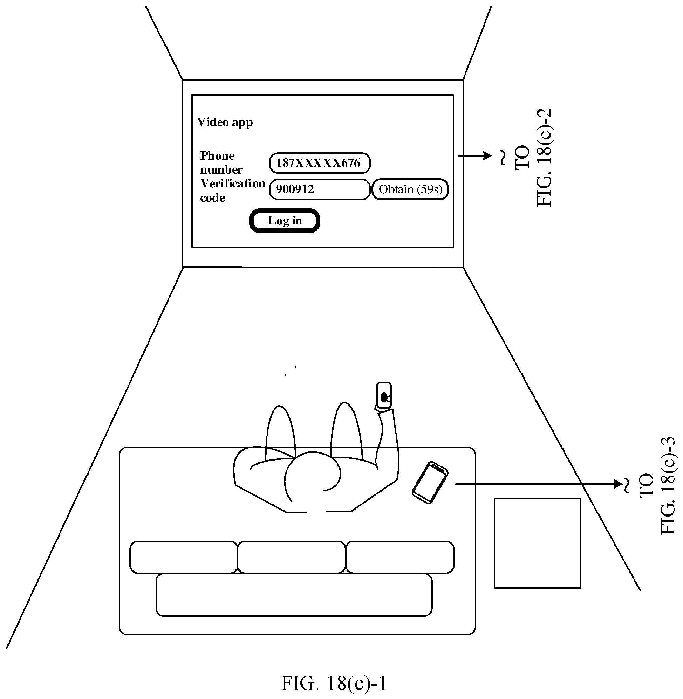

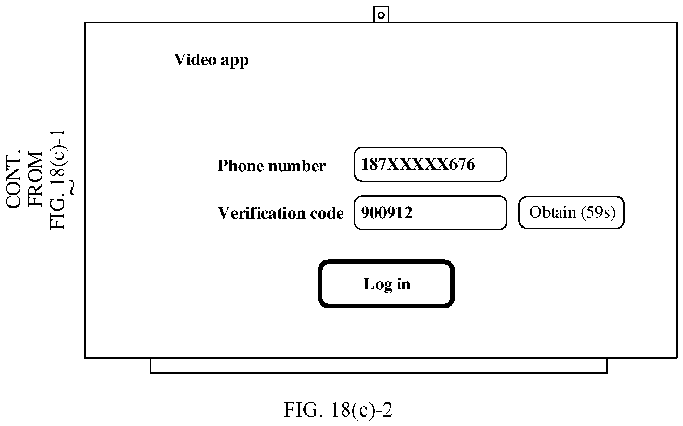

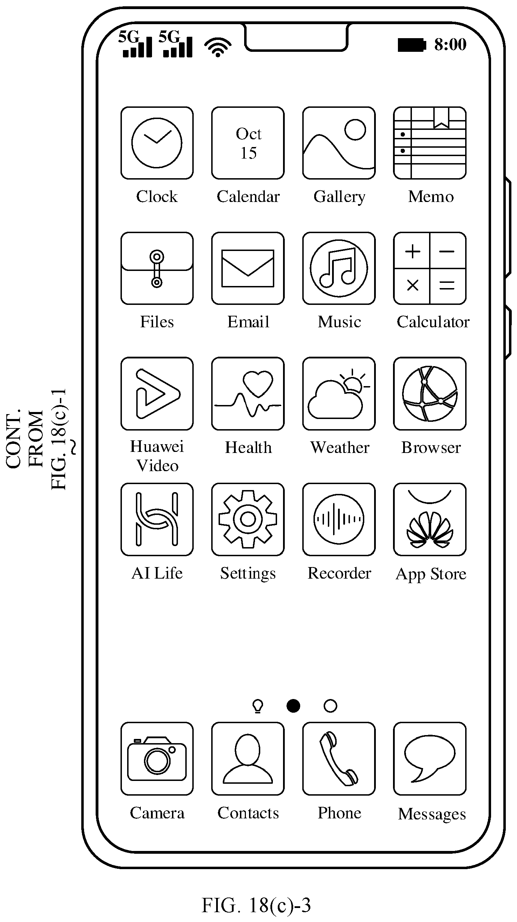

Refer to the GUI shown in FIG. 18(b). The GUI is a display interface displayed when the mobile phone receives the verification code. When the mobile phone detects a two-finger pressing operation of the user on the display interface, the mobile phone may extract verification code information (for example, a digital verification code "900912") from an SMS message. When determining that a wireless connection to the smart television has been established, the mobile phone may send the verification code information to the smart television.

Refer to the GUI shown in FIG. 18(c)-1 to FIG. 18(c)-3. In response to receiving the verification code information sent by the mobile phone, the verification code information may be automatically filled in the verification code input box.

In this embodiment of this application, when receiving the verification code information sent by the server and detecting a preset operation of the user, the mobile phone may send the verification code information to the smart television. This omits a process in which the user views the mobile phone and actively memorizes the verification code, brings convenience to the user, improves efficiency of obtaining the verification code, and improves user experience.

FIG. 19(a)-1 and FIG. 19(a)-2 to FIG. 19(d)-1 and FIG. 19(d)-2 show another group of GUIs according to an embodiment of this application.

Refer to FIG. 19(a)-1 and FIG. 19(a)-2. The notebook computer displays a display interface 1901 of a website of app 1. The display interface 1901 is a web page login interface of app 1. The mobile phone displays a home screen of the mobile phone, and the home screen of the mobile phone includes an icon of app 2.

Refer to FIG. 19(b)-1 and FIG. 19(b)-2. The notebook computer detects an operation that the user performs login by using a third-party account (an account for app 2). In response to detecting an operation that the user performs login by using the account for app 2, the notebook computer may send a query request to a surrounding device. The query request is used to query a surrounding device on which app 2 is installed. If the mobile phone receives the query request and app 2 is installed on the mobile phone, the mobile phone may send a response (ACK) to the notebook computer. In response to receiving the response sent by the mobile phone, the notebook computer may send an authorization request (authorization request) to the mobile phone. The authorization request is used to request app 2 on the mobile phone to perform login authorization on app 1. In response to receiving the authorization request, the mobile phone may display a prompt box 1902. The prompt box 1902 includes prompt information "Your notebook computer requests authorization for app 2".

In an embodiment, in response to detecting an operation that the user performs login by using the account for app 2, the notebook computer may send the query request to devices with a same account (for example, the devices with a same account include the mobile phone) or mobile phones in a same family group (for example, the family group includes an account 1 and an account 2, the devices with the account 1 include the notebook computer, and the devices with the account 2 include the mobile phone).

It should be understood that, in this embodiment of this application, the user may invite an account (for example, Huawei ID 2) of another family member by using an account (for example, Huawei ID 1) for logging in to a device, so that the account of the user and the account of the another family member form a family group. After the family group is formed, the account of the user may share information with the account of the another family member. For example, the account of the user may obtain information such as a device name, a device type, and an address of the user from the account of the another family member. For another example, if the user purchases a member of an application, the another family member may obtain a membership of the user. For another example, members in a same family group may share storage space of a cloud server.

In an embodiment, after receiving the authorization request, the mobile phone may determine whether the notebook computer is a trusted device. For example, if the mobile phone determines that the mobile phone and the notebook computer are devices with a same account, the mobile phone may determine that the notebook computer is a trusted device. Alternatively, if the mobile phone determines that the mobile phone and the notebook computer are devices in a same family group, the mobile phone may determine that the notebook computer is a trusted device. Alternatively, if the mobile phone determines that the user sets the notebook computer as a trusted device on the mobile phone, the mobile phone may determine that the notebook computer is a trusted device. After the mobile phone determines that the notebook computer is a trusted device, the mobile phone may display the prompt box 1902. If the mobile phone determines that the notebook computer is an untrusted device, the mobile phone may prompt, in the prompt box 1902, the user that the notebook computer is an untrusted device.

Refer to FIG. 19(c)-1 and FIG. 19(c)-2. When the mobile phone detects an operation that the user taps a control 1903, the mobile phone may start app 2, and display login authorization information of app 1 on a display interface of app 2. As shown in FIG. 19(c)-1 and FIG. 19(c)-2, the display interface of app 2 includes prompt information "App 1 applies for using your account information". The mobile phone detects an operation that the user taps a control 1904, and may request information (for example, an access token (access token)) used for login authorization from a server of app 2. In response to receiving the information used for login authorization from the server of app 2, the mobile phone may send the information used for login authorization to the notebook computer.

In an embodiment, the mobile phone may prompt, on the display interface of app 2, the user to select content of the account information that app 1 applies for using. For example, the user may choose to allow app 1 to use information such as a nickname and an avatar of the account for app 2, and choose to forbid app 1 to use information such as an area and a gender of the account for app 2.

Refer to FIG. 19(d)-1 and FIG. 19(d)-2. In response to receiving the information used for login authorization from the mobile phone, the notebook computer may request account information for app 2 from the server of app 2 by using the information used for login authorization. In response to requesting the corresponding account information from the server of app 2, the notebook computer may log in to the website of app 1 by using the account information. After performing login, the notebook computer may display a display interface of app 1. Account information for logging in to app 1 may be displayed in an upper right corner of the display interface, and an avatar of the account for logging in to app 1 is the same as the avatar of the account for app 2. The mobile phone may display a chat transcript display interface of app 2, and a latest chat transcript is a login operation notification "Your app 2 account has logged in to the website".

In this embodiment of this application, the notebook computer may conveniently and quickly log in to an application by using the mobile phone on which a third-party application app 2 is installed. This simplifies interaction steps of application login authorization, avoids a complex input process or an active memorizing process of the user, improves efficiency of performing application login by the user, and ensures application login security.

FIG. 20(a) to FIG. 20(d)-1 and FIG. 20(d)-2 show another group of GUIs according to an embodiment of this application.

Refer to FIG. 20(a). The mobile phone displays a lock screen interface. The notebook computer displays a display interface 2001 of a website of app 1. The display interface 2001 is a web page login interface of app 1. The notebook computer detects an operation that the user performs login by using a third-party account (an account for app 2). In response to detecting an operation that the user performs login by using the account for app 2, the notebook computer may send a query request to a surrounding device. The query request is used to query a surrounding device on which app 2 is installed. If the mobile phone and a tablet computer each receive the query request and app 2 is installed on each of the mobile phone and the tablet computer, the mobile phone and the tablet computer each may send a response (ACK) to the notebook computer.

Refer to FIG. 20(b)-1 and FIG. 20(b)-2. In response to receiving the responses of the mobile phone and the tablet computer, the notebook computer may display a prompt box 2002. The prompt box 2002 includes prompt information "Detected a plurality of devices with app 2 installed around for you. Please select". In response to detecting an operation that the user selects the mobile phone and taps a control 2003, the notebook computer sends an authorization request to the mobile phone. The authorization request is used to request app 2 on the mobile phone to perform login authorization on app 1. In response to receiving the authorization request, the mobile phone may display a prompt box 2005. The prompt box 2005 includes prompt information "Your notebook computer requests authorization for app 2".

In an embodiment, in response to detecting an operation that the user performs login by using the account for app 2, the notebook computer may send the query request to devices with a same account (for example, the devices with a same account include the mobile phone and the tablet computer). If app 2 is installed on each of the mobile phone and the tablet computer, the mobile phone and the tablet computer each may send a response (ACK) to the notebook computer.

Alternatively, the notebook computer may send the query request to another device in a same family group (for example, the family group includes an account 1 and an account 2, devices with the account 1 include the notebook computer and the mobile phone, and devices with the account 2 includes the tablet computer). If app 2 is installed on each of the mobile phone and the tablet computer, the mobile phone and the tablet computer each may send a response (ACK) to the notebook computer.

Refer to FIG. 20(c)-1 and FIG. 20(c)-2. When the mobile phone detects an operation that the user taps a control 2006, the mobile phone may start app 2, and display login authorization information of app 1 on a display interface of app 2. As shown in FIG. 20(c)-1 and FIG. 20(c)-2, the display interface of app 2 includes prompt information "App 1 applies for using your account information". The mobile phone detects an operation that the user taps a control 2007, and the mobile phone may request information (for example, an access token) used for login authorization from a server of app 2. In response to receiving the information used for login authorization from the server of app 2, the mobile phone may send the information used for login authorization to the notebook computer.

Refer to FIG. 20(d)-1 and FIG. 20(d)-2. In response to receiving the information used for login authorization from the mobile phone, the notebook computer may request account information for app 2 from the server of app 2 by using the information used for login authorization. In response to requesting the corresponding user information from the server of app 2, the notebook computer may log in to the website of app 1 by using the account information. After performing login, the notebook computer may display a display interface of app 1. Account information for logging in to app 1 may be displayed in an upper right corner of the display interface, and an avatar of the account for logging in to app 1 is the same as the avatar of the account for app 2. The mobile phone may display a chat transcript display interface of app 2, and a latest chat transcript is a login operation notification "Your app 2 account has logged in to the website".

In this embodiment of this application, the notebook computer may conveniently and quickly log in to an application by using a surrounding device on which a third-party application app 2 is installed. When there are a plurality of available surrounding devices, the notebook computer may prompt the user to select a proper device for login. This simplifies interaction steps of application login authorization, avoids a complex input process or an active memorizing process of the user, improves efficiency of performing application login by the user, and ensures application login security.

FIG. 21(a)-1 and FIG. 21(a)-2 to FIG. 21(d)-1 and FIG. 21(d)-2 show another group of GUIs according to an embodiment of this application.

Refer to FIG. 21(a)-1 and FIG. 21(a)-2. The mobile phone displays a lock screen interface. The notebook computer displays a display interface of a website of app 1. The display interface is a web page login interface 2101 of app 1. The notebook computer detects an operation that the user taps a control 2102 for logging in by using another device.

Refer to FIG. 21(b)-1 and FIG. 21(b)-2. In response to detecting an operation that the user taps the control 2102, the notebook computer may send a query request to a surrounding device. The query request is used to query a surrounding device on which app 1 is installed. If the mobile phone receives the query request and app 1 is installed on the mobile phone, the mobile phone may send a response (ACK) to the notebook computer.

Refer to FIG. 21(b)-1 and FIG. 21(b)-2. In response to receiving the response sent by the mobile phone, the notebook computer may send an authorization request to the mobile phone. The authorization request is used to request app 1 on the mobile phone to perform login authorization on app 1 on the notebook computer. In response to receiving the authorization request, the mobile phone may display a prompt box 2103. The prompt box 2103 includes prompt information "Your notebook computer requests authorization for app 1".

In an embodiment, in response to receiving the response sent by the mobile phone, the notebook computer may prompt the user with "App 1 has been installed on your mobile phone. Do you want to use your mobile phone for authorization?". When the notebook computer detects that the user determines to use the mobile phone to perform an authorization operation, the notebook computer may send an authorization request to the mobile phone.

In an embodiment, the notebook computer receives responses from the mobile phone and a tablet computer, and the notebook computer may prompt the user with "App 1 has been installed on your mobile phone and tablet computer. Which device do you want to use for authorization?". When the notebook computer detects that the user determines to use the mobile phone to perform an authorization operation, the notebook computer may send an authorization request to the mobile phone.

In an embodiment, after receiving the authorization request, the mobile phone may determine whether the notebook computer is a trusted device. For example, if the mobile phone determines that the mobile phone and the notebook computer are devices with a same account, the mobile phone may determine that the notebook computer is a trusted device. Alternatively, if the mobile phone determines that the mobile phone and the notebook computer are devices in a same family group, the mobile phone may determine that the notebook computer is a trusted device. Alternatively, if the mobile phone determines that the user sets the notebook computer as a trusted device on the mobile phone, the mobile phone may determine that the notebook computer is a trusted device. After the mobile phone determines that the notebook computer is a trusted device, the mobile phone may display the prompt box 2103. If the mobile phone determines that the notebook computer is an untrusted device, the mobile phone may prompt, in the prompt box 2103, the user that the notebook computer is an untrusted device.

Refer to FIG. 21(c)-1 and FIG. 21(c)-2. In response to an operation that the mobile phone detects that the user taps a control 2104, the mobile phone may display a login authorization interface for starting app 1 and displaying app 1. The login authorization interface includes information prompting the user to perform login confirmation. The mobile phone detects an operation that the user taps a control 2105, and may request information (for example, an access token) used for login authorization from a server of app 1. In response to receiving the information used for login authorization from the server of app 1, the mobile phone may send the information used for login authorization to the notebook computer.

Refer to FIG. 21(d)-1 and FIG. 21(d)-2. In response to receiving the information used for login authorization from the mobile phone, the notebook computer may request, from the server of app 1 by using the information used for login authorization, account information for logging in to app 1 on the mobile phone. In response to requesting the account information from the server of app 1, the notebook computer may log in to the website of app 1 by using the account information. After performing login, the notebook computer may display a display interface of app 1. Avatar information of the account for logging in to app 1 on the mobile phone may be displayed in an upper right corner of the display interface. In this way, a same account is used for logging in to the mobile phone and the notebook computer.

In this embodiment of this application, the notebook computer may conveniently and quickly log in to an application by using the mobile phone on which a third-party application app 1 is installed. This simplifies interaction steps of application login authorization, avoids a complex input process or an active memorizing process of the user, improves efficiency of performing application login by the user, and ensures application login security.

FIG. 22(a)-1 and FIG. 22(a)-2 to FIG. 22(d)-1 and FIG. 22(d)-2 show another group of GUIs according to an embodiment of this application.

Refer to FIG. 22(a)-1 and FIG. 22(a)-2. The notebook computer displays a display interface of a website of app 1. The display interface is a web page registration interface 2201 of app 1. The mobile phone displays a home screen of the mobile phone, and the home screen of the mobile phone includes an icon of app 2.

Refer to FIG. 22(b)-1 and FIG. 22(b)-2. The notebook computer detects an operation that the user performs login registration by using a third-party account (an account for app 2). In response to detecting an operation that the user performs login registration by using the account for app 2, the notebook computer may send a query request to a surrounding device. The query request is used to query a surrounding device on which app 2 is installed. If the mobile phone receives the query request and app 2 is installed on the mobile phone, the mobile phone may send a response (ACK) to the notebook computer. In response to receiving the response sent by the mobile phone, the notebook computer may send an authorization request to the mobile phone. The authorization request is used to request app 2 on the mobile phone to perform login authorization on app 1. In response to receiving the authorization request, the mobile phone may display a prompt box 2202. The prompt box 2202 includes prompt information "Your notebook computer requests authorization for app 2".

Refer to FIG. 22(c)-1 and FIG. 22(c)-2. When the mobile phone detects an operation that the user taps a control 2203, the mobile phone may start app 2, and display login authorization information of app 1 on a display interface of app 2. As shown in FIG. 22(c)-1 and FIG. 22(c)-2, the display interface of app 2 includes prompt information "App 1 applies for using your account information". The mobile phone detects an operation that the user taps a control 2204, and may request information (for example, an access token (access token)) used for login authorization from a server of app 2. In response to receiving the information used for login authorization from the server of app 2, the mobile phone may send the information used for login authorization to the notebook computer.

Refer to FIG. 22(d)-1 and FIG. 22(d)-2. In response to receiving the information used for login authorization from the mobile phone, the notebook computer may request account information for app 2 from the server of app 2 by using the information used for login authorization. In response to requesting the account information from the server of app 2, the notebook computer may log in to the website of app 1 by using the account information. After performing login, the notebook computer may display a display interface of app 1. Account information for logging in to app 1 may be displayed in an upper right corner of the display interface, and an avatar of the account for logging in to app 1 is the same as the avatar of the account for app 2. The mobile phone may display a chat transcript display interface of app 2, and a latest chat transcript is a login operation notification "Your app 2 account has logged in to the website".

In this embodiment of this application, the notebook computer may conveniently and quickly register with the account for app 1 by using the mobile phone on which a third-party application app 2 is installed. This simplifies interaction steps of application registration, avoids a complex input process of the user, and improves efficiency of performing account registration by the user.

FIG. 23(a)-1 and FIG. 23(a)-2 to FIG. 23(d) show another group of GUIs according to an embodiment of this application.

The user is using the notebook computer, and the mobile phone is placed by the user on a table beside the mobile phone. The notebook computer may be a device without a SIM card, and the mobile phone is a device on which a SIM card is installed.

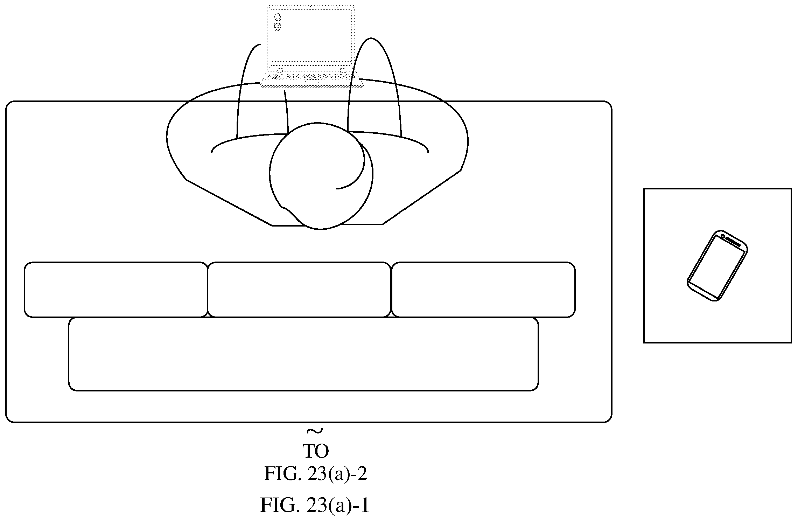

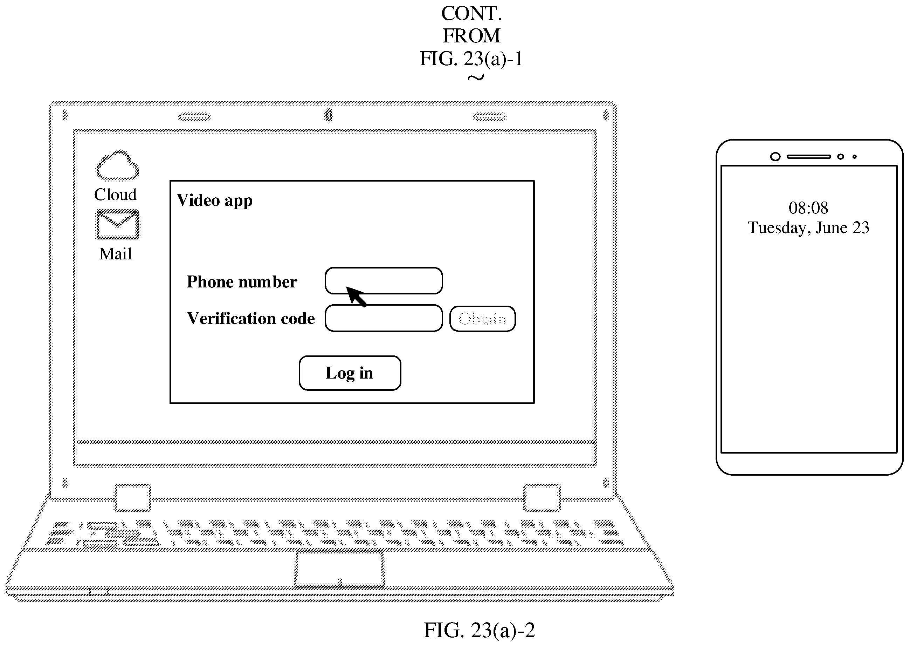

Refer to the GUI shown in FIG. 23(a). After the notebook computer detects an operation that the user starts a video application (application, App), the notebook computer may display a login interface of the video app on a display. The login interface includes a phone number input box, a verification code input box, a verification code obtaining control, and a login control. In this case, the mobile phone is placed by the user on a table beside the mobile phone, and the mobile phone is in a screen-locked state.

It should be understood that this embodiment of this application is also applicable to web (web) page login.

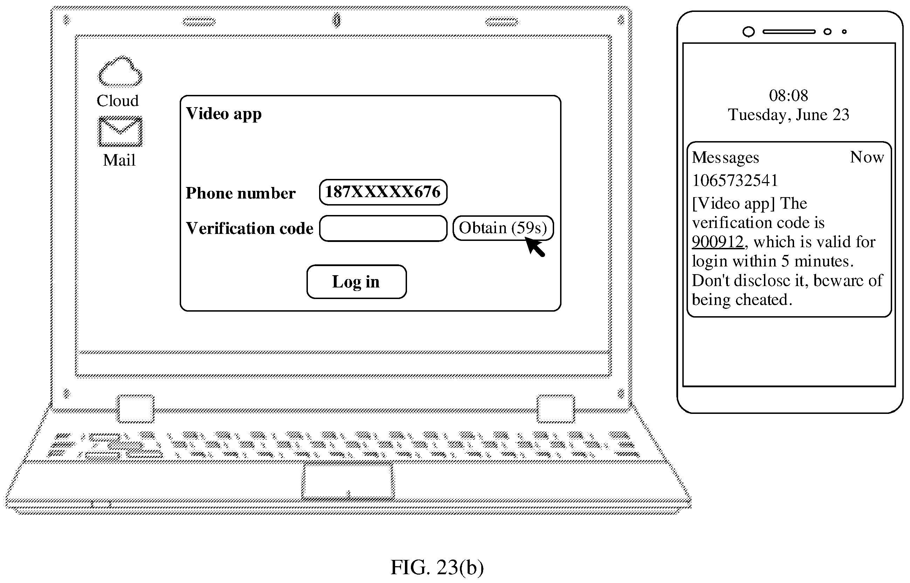

Refer to the GUI shown in FIG. 23(b). After the notebook computer detects that the user inputs a phone number "187 ××××676" in the phone number input box and taps the obtaining control, the notebook computer may send verification code request information to the mobile phone. The verification code request information is used to request the mobile phone to return a latest SMS message including a verification code. In this case, the mobile phone obtains an SMS message from a server of the video app. Content of the SMS message is "The verification code is 900912, which is valid for login within 5 minutes. Do not disclose it, beware of being cheated.". The mobile phone receives the verification code request information from the notebook computer. After receiving the SMS message, the mobile phone may parse the content of the SMS message to obtain the content of the SMS message. The mobile phone may send the content of the SMS message to the notebook computer.

In an embodiment, the notebook computer and a mobile phone A may be devices with a same ID. In this case, the notebook computer may prestore information about the mobile phone. For example, the notebook computer may store a device name and address information of the mobile phone A and phone number information corresponding to the mobile phone. After the notebook computer detects that the user taps the obtaining control, the notebook computer may first query phone number information corresponding to another device with the same ID. If the phone number corresponding to the mobile phone A with the same ID is consistent with a phone number detected by the notebook computer in the mobile phone number input box, the notebook computer may directly send the verification code request information to the mobile phone A.

In an embodiment, if information about other devices stored in the notebook computer does not include a device corresponding to the phone number, the notebook computer may first query device information of surrounding devices. For example, the notebook computer may query, in a broadcast manner, the surrounding devices for information about phone numbers corresponding to the surrounding devices. The notebook computer receives device information sent by a mobile phone B (for example, including phone number information of the mobile phone B) and device information sent by a mobile phone C (for example, including phone number information of the mobile phone C). The notebook computer may determine, based on the device information of the two devices, a device that receives the verification code. If the notebook computer determines that the phone number of the mobile phone B is consistent with the phone number detected by the notebook computer in the phone number input box, the notebook computer may send the verification code request information to a device B.

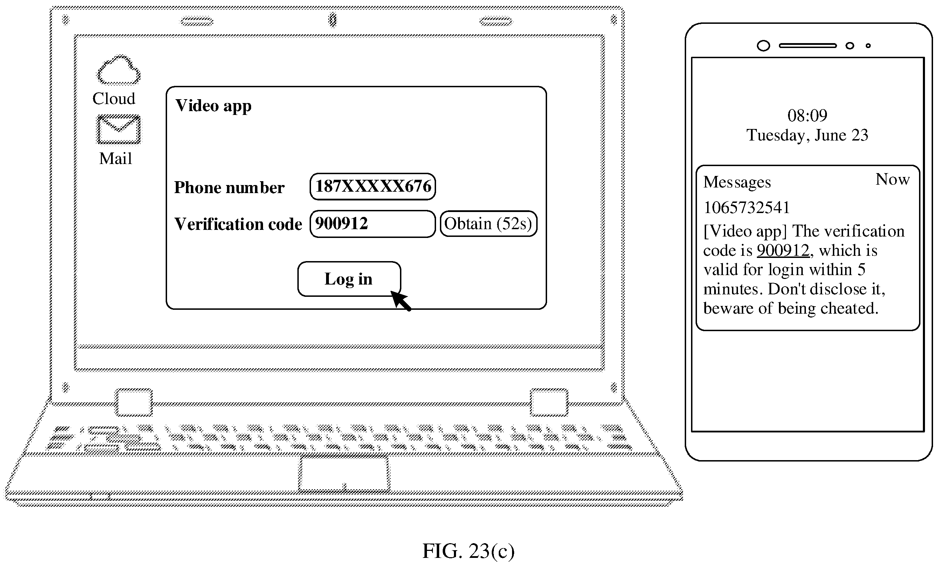

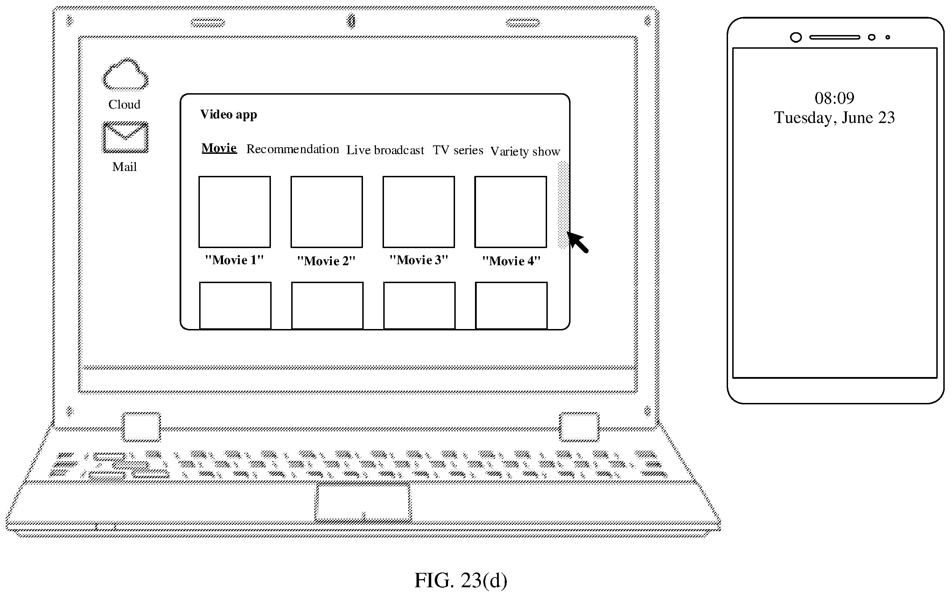

Refer to the GUI shown in FIG. 23(c). After receiving the content of the SMS message sent by the mobile phone, the notebook computer may parse the content of the SMS message to obtain the verification code in the SMS message, and automatically fill the verification code in the verification code input box. After the notebook computer detects an operation that the user taps the login control, the notebook computer completes login to the video app, to display the GUI shown in FIG. 23(d).

Refer to the GUI shown in FIG. 23(d). The notebook computer may display a display interface of the video app. In addition, after the mobile phone sends the verification code to the notebook computer, the mobile phone may hide the SMS message.

In this embodiment of this application, when the user logs in to or registers with a device A (for example, a PC or a pad) without a SIM card, and inputs a phone number and taps to obtain a verification code, the device B corresponding to the phone number may forward an SMS message including the verification code to the device A after receiving the SMS message including the verification code. After extracting the verification code, the device A automatically fills the verification code in the input box. This avoids a process in which the user searches for the device B and the user needs to actively memorize the device B, improves efficiency of filling the verification code, and helps improve user experience.

In an embodiment, the verification code request information is used to request the mobile phone to extract a verification code from a latest SMS message including the verification code and send the verification code to the notebook computer. After the mobile phone receives the SMS message including the verification code from the server of the video app, the mobile phone extracts the verification code in the SMS message. After extracting the verification code, the mobile phone may directly send the extracted verification code to the notebook computer.

In an embodiment, the notebook computer may be a device on which another SIM card is installed. For example, a phone number corresponding to the SIM card installed on the notebook computer is $182\times\times\times\times834$. In this case, when determining that the phone number input by the user in the phone number input box does not match the SIM card installed on the notebook computer, the notebook computer may send the verification code request information to the mobile phone.

In an embodiment, an account for logging in to the notebook computer is associated with an account for logging in to the mobile phone. For example, if the account for logging in to the notebook computer and the account for logging in to the mobile phone are a same account, the notebook computer may prestore address information of the mobile phone and information about the SIM card installed on the mobile phone.

FIG. 24(a)-1 and FIG. 24(a)-2 to FIG. 24(d) show another group of GUIs according to an embodiment of this application.

The user is using a tablet computer (Pad), and the mobile phone is placed by the user on a table beside the mobile phone. The pad may be a device without a SIM card, and the mobile phone is a device on which a SIM card is installed.

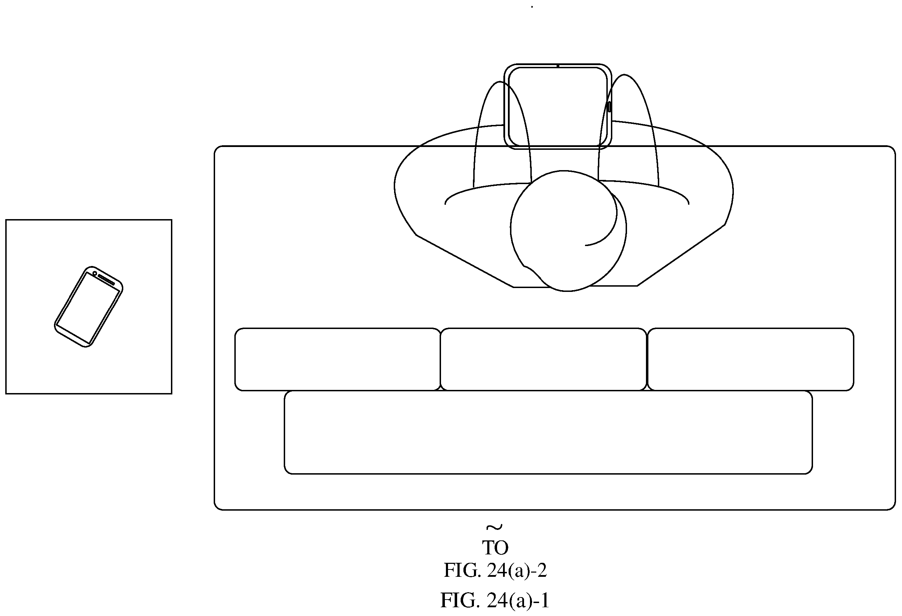

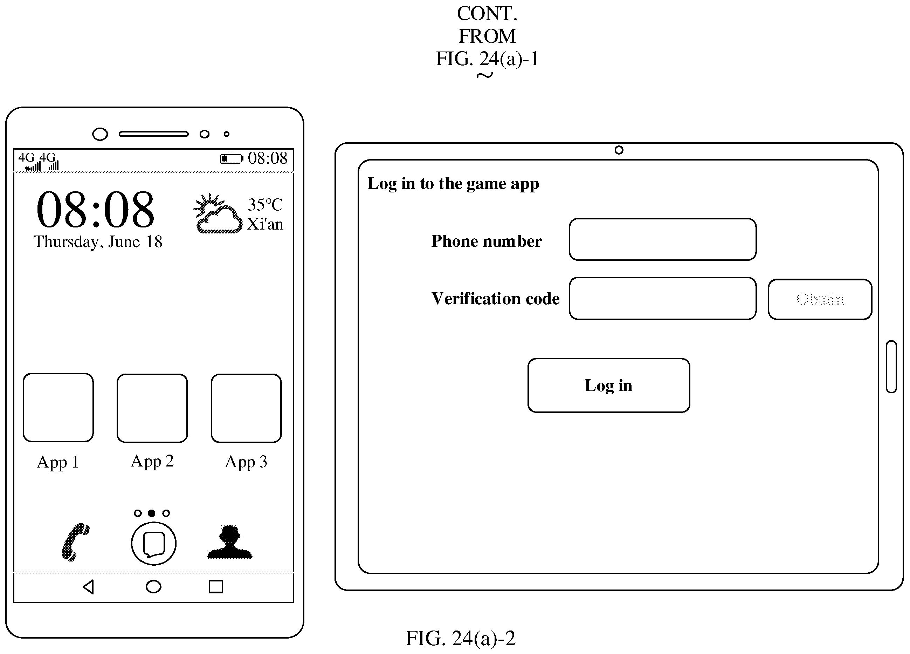

Refer to the GUI shown in FIG. 24(a). When the pad detects that the user starts a game app, the pad may display a login interface of the game app. The login interface includes a phone number input box, a verification code input box, a verification code obtaining control, and a login control. In this case, the mobile phone is in an unlocked state.

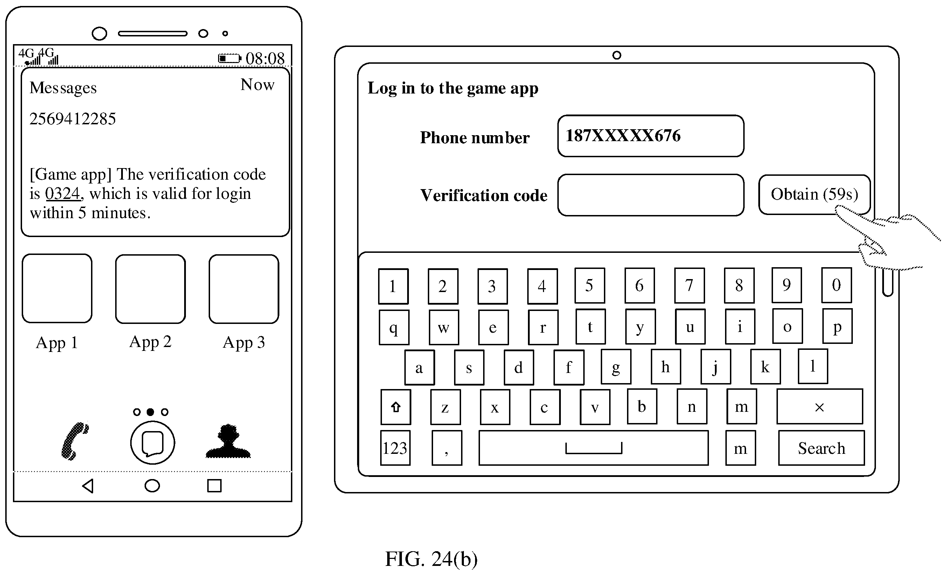

Refer to the GUI shown in FIG. 24(b). After the pad detects an operation that the user inputs a phone number in the phone number input box and taps the obtaining control, the pad may send verification code request information to the mobile phone. The verification code request information is used to request the mobile phone to return a latest SMS message including a verification code. In this case, the mobile phone obtains an SMS message from a server of the game app. Content of the SMS message is "Verification code 0324, valid for login within 5 minutes". In addition, the mobile phone receives the verification code request information from the pad. After receiving the SMS message, the mobile phone may parse the content of the SMS message to obtain the content of the SMS message. The mobile phone may send the content of the SMS message to the pad.

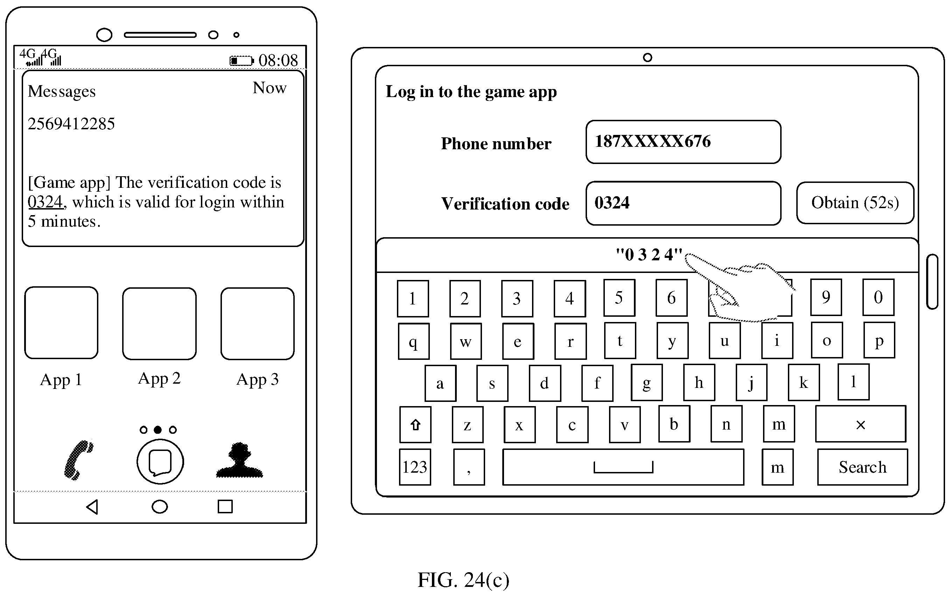

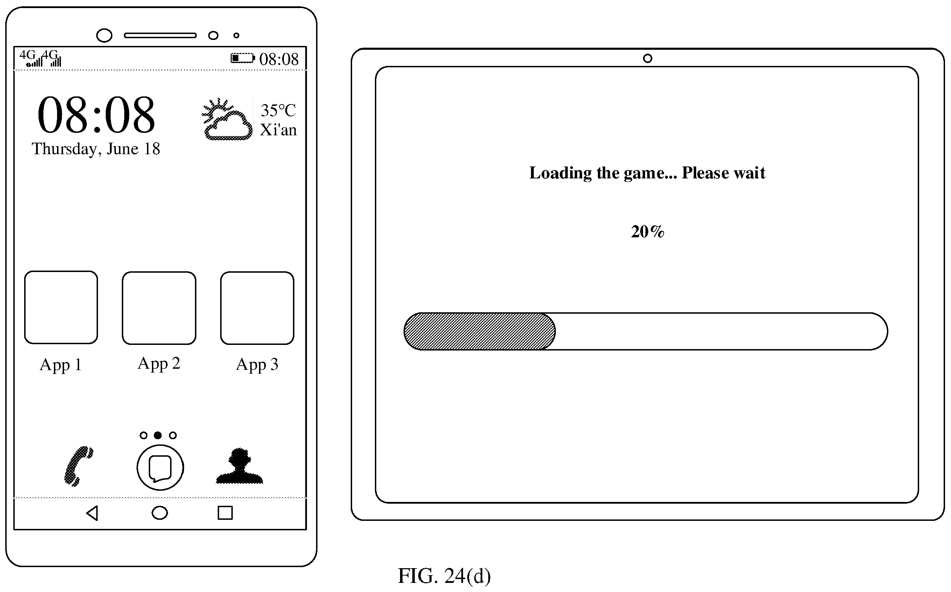

Refer to the GUI shown in FIG. 24(c). After receiving the content of the SMS message sent by the mobile phone, the pad may parse the content of the SMS message to obtain the verification code in the SMS message, and automatically recommend the verification code to a recommended location of an input method (the top of the input method displayed on the pad shown in FIG. 24(c)). When the pad detects that the user taps the verification code at the top of the input method, the pad may fill the verification code in the verification code input box, to log in to the game app, and display the GUI shown in FIG. 24(d).

Refer to the GUI shown in FIG. 24(d). The pad may display a loading interface of the game app. In addition, after the mobile phone sends the verification code to the pad, the mobile phone may hide the SMS message.

It should be understood that, for the GUIs shown in FIG. 23(a)-1 and FIG. 23(a)-2 to FIG. 23(d) and FIG. 24(a)-1 and FIG. 24(a)-2 to FIG. 24(d), the mobile phone receives, in a screen-locked state or on a home screen of the mobile phone, the verification code request information sent by the notebook computer, so that the mobile phone sends the content of the SMS message to the notebook computer or sends the verification code to the notebook computer based on the verification code request information. The mobile phone may alternatively receive the verification code request information in another state.

For example, the mobile phone receives the verification code request information when running an application (for example, the game app), so that the mobile phone sends the content of the SMS message to the notebook computer or sends the verification code to the notebook computer based on the verification code request information. It should be understood that a state of the mobile phone (a state of the running application) may not change with receiving of the verification code request information.

FIG. 25(a)-1 and FIG. 25(a)-2 to FIG. 25(e)-1 and FIG. 25(e)-2 show another group of GUIs according to an embodiment of this application.

Refer to FIG. 25(a)-1 and FIG. 25(a)-2. The user is using a television remote control to search for a movie, and the smart television displays a movie search display interface. In this case, a cursor of the smart television is located in a text input box 2501. When detecting that the user moves the cursor to the text input box 2501, the smart television may send a broadcast message to a surrounding device. The broadcast message may be used to indicate that the smart television needs to perform text input.

In an embodiment, when detecting that the user moves the cursor to a key (for example, an "ABC" key) in an input method displayed on the smart television, the smart television may send the broadcast message to the surrounding device.

It should be understood that the movie search display interface displayed on the smart television shown in FIG. 25(a)-1 and FIG. 25(a)-2 may also be referred to as a text input interface. The text input interface in this embodiment of this application may include a text input box, or the text input interface may include a text input box and an input method.

In an embodiment, the broadcast message may carry a communication address (for example, an internet protocol (internet protocol, IP) address, a port number, or a Bluetooth address) of the smart television.

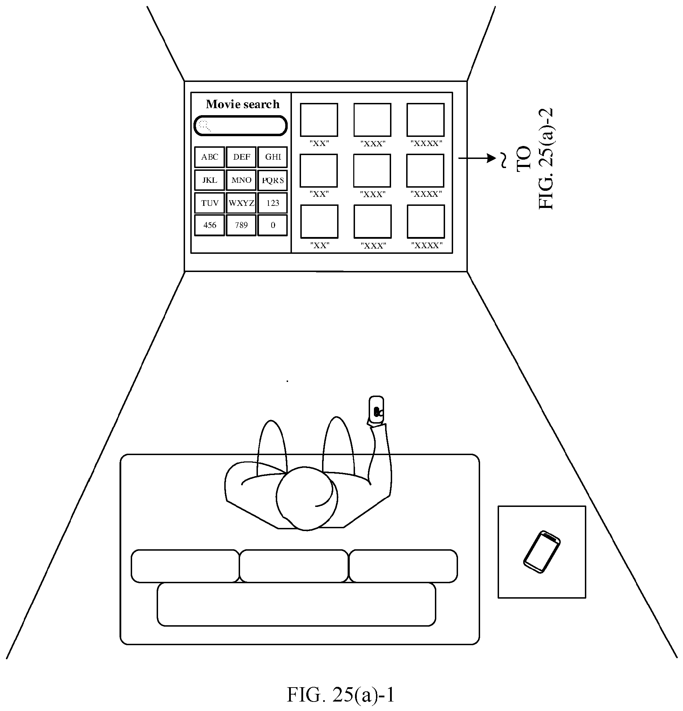

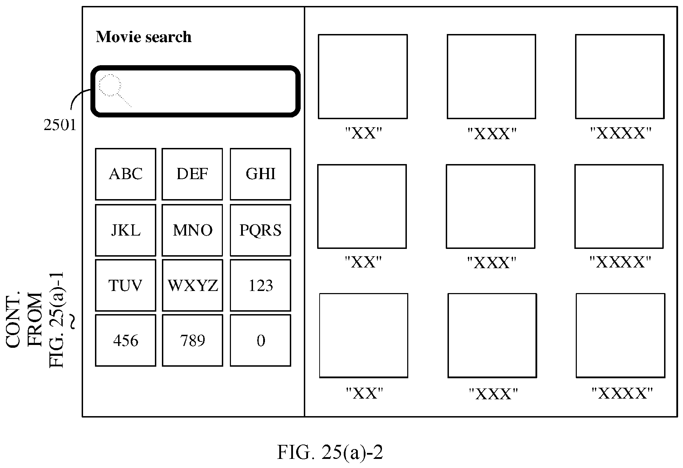

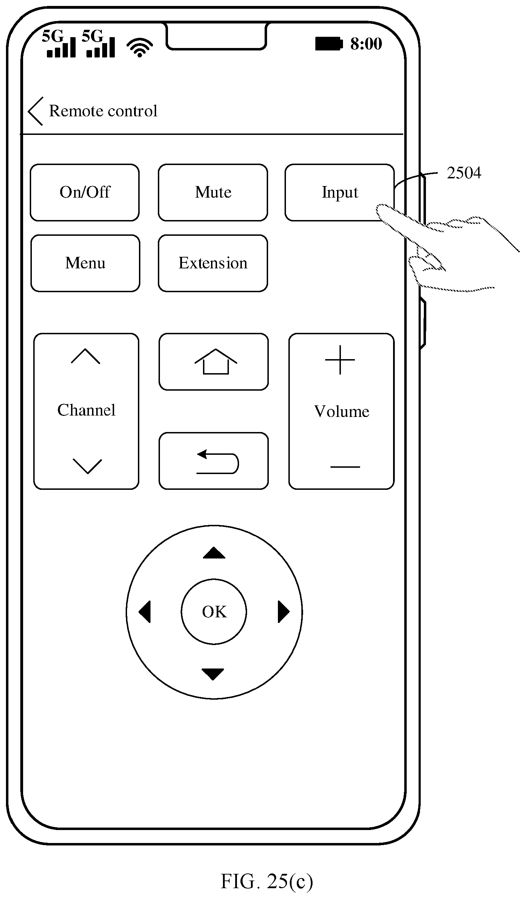

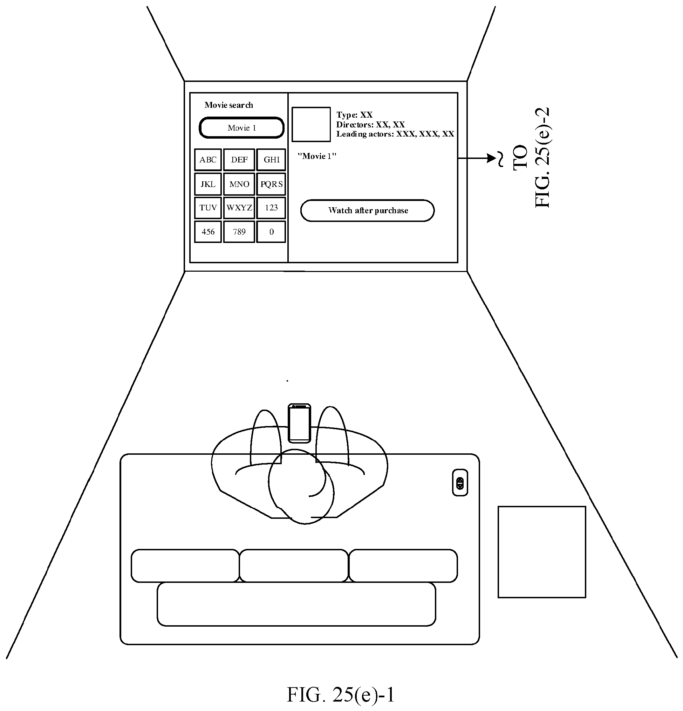

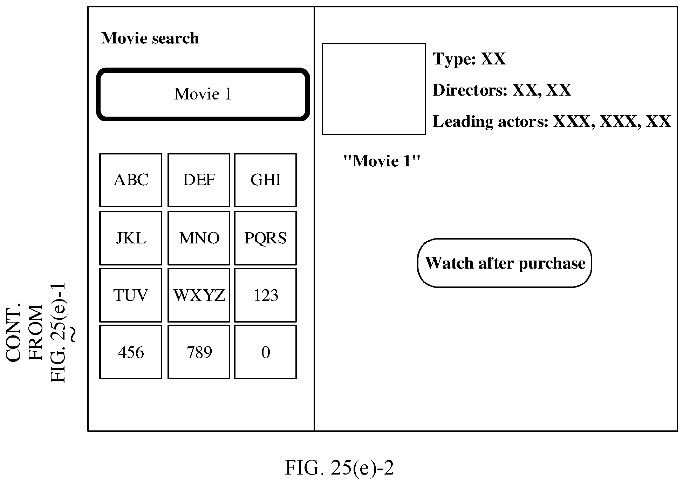

Refer to FIG. 25(b)-1 to FIG. 25(b)-3. The mobile phone displays a prompt box 2502, and the user may choose not to use the television remote control to perform text input, but selects the mobile phone to perform text input. The prompt box 2502 may prompt the user with "The smart television requires text input. Do you want to start the remote control application for text input?". After detecting an operation that the user taps a control 2503, the mobile phone may display the GUI shown in FIG. 25(c).

In an embodiment, when the mobile phone detects an operation that the user taps the control 2503, the mobile phone may establish a connection to the smart television by using the communication address carried in the broadcast message.

In an embodiment, after the mobile phone establishes a connection to the smart television, the mobile phone may send device information of the mobile phone (for example, a device name "P40" of the mobile phone and a user name "Tom" of the mobile phone) to the smart television. After receiving the device information sent by the mobile phone, the smart television may display prompt information on a display of the smart television. For example, the prompt information is "Please perform text input on Tom's P40".

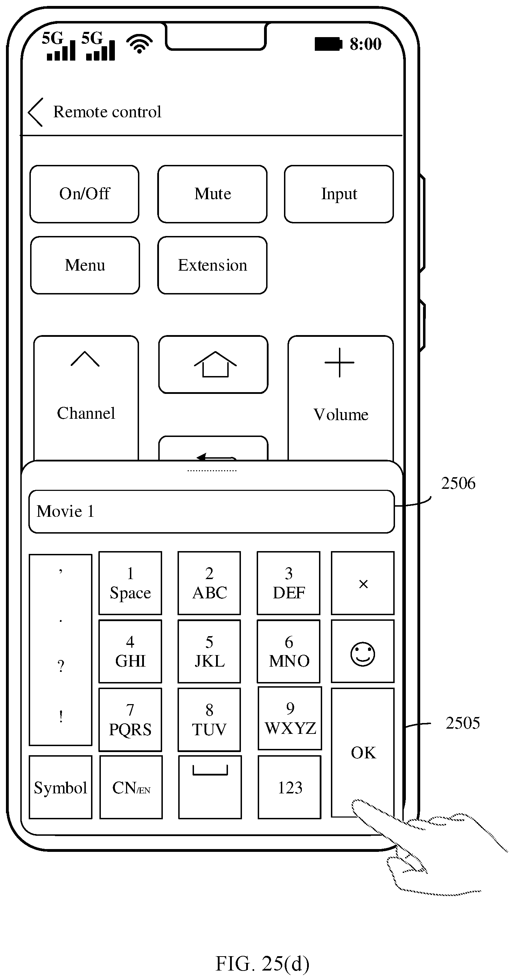

Refer to the GUI shown in FIG. 25(c). The GUI is a display interface of a remote control application on the mobile phone. The display interface includes a plurality of function controls, for example, functions such as on/off, mute, input, menu, extension, channel, volume, and back. After the mobile phone detects an operation that the user taps an input control 2504, the mobile phone may display the GUI shown in FIG. 25(d).

In an embodiment, it is assumed that the mobile phone is on a lock screen interface when receiving the broadcast message. In this case, when the mobile phone detects an operation that the user taps the control 2503, the mobile phone may enable a camera to collect facial information of the user. If the facial information collected by the camera matches facial information preset in the mobile phone, the mobile phone may first perform unlocking, to enter a non-lock screen interface, and automatically start the remote control application on the non-lock screen interface. Alternatively, when the mobile phone detects an operation that the user taps the control 2503, the mobile phone may collect fingerprint information of the user. If the collected fingerprint information matches fingerprint information preset in the mobile phone, the mobile phone may first perform unlocking, to enter a non-lock screen interface, and automatically start the remote control application on the non-lock screen interface.

Refer to the GUI shown in FIG. 25(d). The GUI is another display interface of a remote control application on the mobile phone. After the mobile phone detects that the user taps the control 2504, the mobile phone may invoke an input method of the mobile phone. The user may perform text content input by using the input method invoked by the mobile phone. After the mobile phone detects an operation that the user inputs text content "movie 1" in a text input box 2506 and taps a control 2505, the mobile phone may send the text content to the smart television.

In an embodiment, after the mobile phone detects an operation that the user taps the control 2503, the mobile phone may directly display the GUI shown in FIG. 25(d). In other words, after the mobile phone detects an operation that the user taps the control 2503, the mobile phone may first perform an unlocking operation by using the collected facial information or fingerprint information, to enter a non-lock screen interface. On the non-lock screen interface, the mobile phone automatically starts the remote control application and invokes the input method of the mobile phone, to display the GUI shown in FIG. 25(d).

In an embodiment, if the mobile phone is on a non-lock screen interface when receiving the broadcast message, the mobile phone may directly invoke the input method of the mobile phone on the non-lock screen interface without starting the remote control application. The user may perform text input by using the input method invoked by the mobile phone. After the mobile phone detects an operation that the user inputs text content "movie 1" in the text input box 2506 by using the input method and taps the control 2505, the mobile phone may send the text content to the smart television.

In an embodiment, the mobile phone may send text content input by the user to the smart television in real time. For example, when detecting that the user inputs text content "mo" in the text input box 2506, the mobile phone may send the text information to the smart television, to display the text content "mo" in the text input box 2501 of the smart television. When the mobile phone detects that the user then inputs text content "vie" in the text input box 2506, the mobile phone may continue to send the text content "vie" to the smart television, to display the text content "movie" in the text input box 2501 of the smart television. When the mobile phone detects that the user then inputs text content "1" in the text input box 2506, the mobile phone may continue to send the text content "1" to the smart television, to display the text content "movie 1" in the text input box 2501 of the smart television.

It should be understood that, if the mobile phone detects that the user deletes the text content in the text input box 2506, the mobile phone may indicate, to the smart television in real time, the text content deleted by the user, so that the text content in the text input box 2501 of the smart television is synchronized with the text content in the text input box 2506 of the mobile phone.

Refer to FIG. 25(e)-1 and FIG. 25(e)-2. After receiving the text content sent by the mobile phone, the smart television may display the text content (for example, "movie 1") in the text input box 2501 of the smart television. In addition, the smart television may display information corresponding to the movie 1 (for example, information such as a type, a director, and a leading actor).

In this embodiment of this application, after receiving the broadcast message sent by the smart television, the mobile phone may provide text input for the smart television. This helps improve convenience of performing text input by the user. In addition, the mobile phone and the smart television do not need to be devices with a same account, and the mobile phone can provide text content input for the smart television as long as the mobile phone is near the smart television. This helps improve user experience.

FIG. 26(a) to FIG. 26(c) show another group of GUIs according to an embodiment of this application.

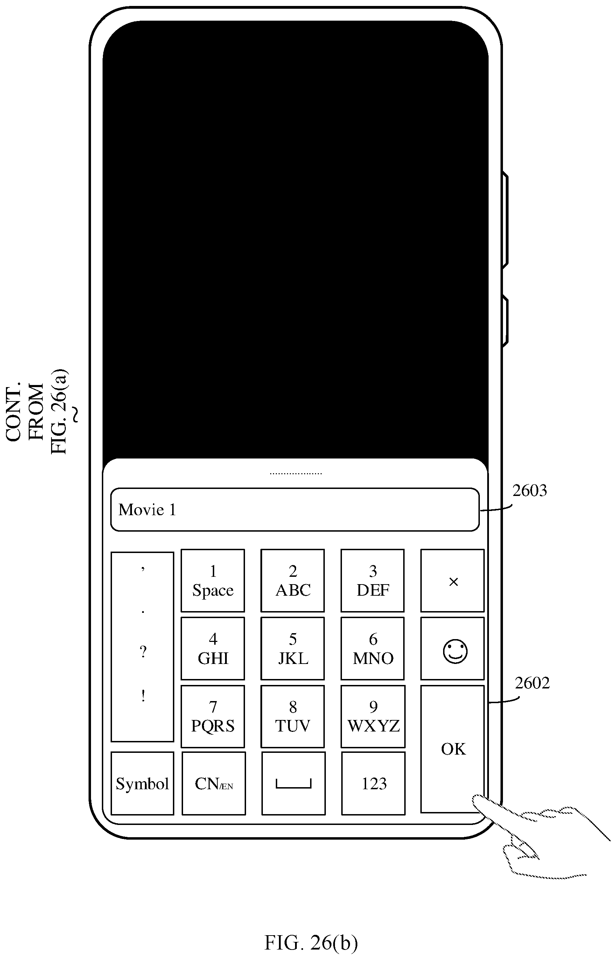

Refer to the GUI shown in FIG. 26(a). When the mobile phone receives a broadcast message sent by the smart television, the mobile phone may display a text input icon 2601 on a lock screen interface. When detecting an operation that the user taps the icon 2601, the mobile phone may display the GUI shown in FIG. 26(b).

In an embodiment, when the mobile phone detects an operation that the user taps the icon 2601, the mobile phone may establish a connection to the smart television based on a communication address of the smart television that is carried in the broadcast message.

Refer to the GUI shown in FIG. 26(b). The GUI is a display interface displayed after the mobile phone detects that the user taps the icon 2601. The mobile phone may display an input method on the lock screen interface, and the user may input text content in a text input box 2603. After the mobile phone detects that the user inputs the text content (for example, "movie 1") in the text input box 2603 and taps a control 2602, the mobile phone may send the text content to the smart television. The smart television may display the GUI shown in FIG. 25(e)-1 and FIG. 25(e)-2.

In an embodiment, the mobile phone may send the content in the text input box 2603 to the smart television in real time, so that the text content in the text input box 2501 of the smart television is synchronized with the content in the text input box 2603 of the mobile phone.

In this embodiment of this application, after receiving the broadcast message sent by the smart television, the mobile phone may prompt, by using the icon, the user that the mobile phone may assist the smart television in performing text content input. In this way, text content input can be completed in a screen-locked state, and the mobile phone does not need to enter a screen-unlocked state, and the mobile phone does not need to start a remote control application. The mobile phone may provide text input for the smart television on the lock screen interface. This helps improve convenience of performing text input by the user on a large-screen device, and improve user experience. In addition, the mobile phone and the smart television do not need to be devices with a same account, and the mobile phone can provide text content input for the smart television as long as the mobile phone is near the smart television. This helps improve user experience.

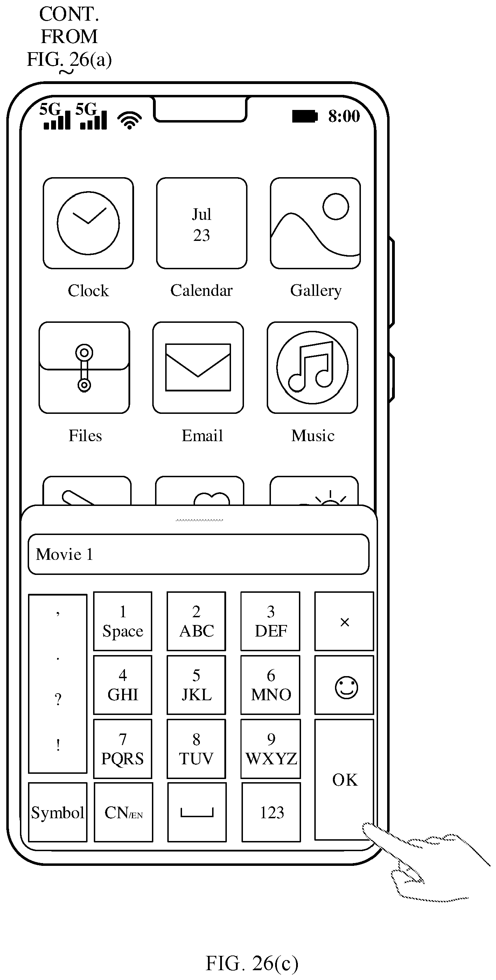

Refer to the GUI shown in FIG. 26(c). The GUI is a display interface displayed after the mobile phone detects that the user taps the icon 2601. When the mobile phone detects an operation that the user taps the icon 2601, the mobile phone may enable a camera to collect facial information of the user. If the facial information collected by the camera matches facial information preset in the mobile phone, the mobile phone may first perform unlocking, to enter a non-lock screen interface, and automatically invoke the input method of the mobile phone on the non-lock screen interface. Alternatively, when the mobile phone detects an operation that the user taps the icon 2601, the mobile phone may collect fingerprint information of the user. If the collected fingerprint information matches fingerprint information preset in the mobile phone, the mobile phone may first perform unlocking, to enter a non-lock screen interface, and automatically invoke the input method of the mobile phone on the non-lock screen interface.

In this embodiment of this application, after receiving the broadcast message sent by the smart television, the mobile phone may prompt, by using the icon, the user that the mobile phone may assist the smart television in performing text content input. In this way, the mobile phone may automatically invoke the input method after entering the non-lock screen interface, and the mobile phone does not need to start a remote control application. The mobile phone may provide text input for the smart television on the non-lock screen interface without starting an application. This helps improve convenience of performing text input by the user on a large-screen device, and improve user experience. FIG. 27(a)-1 and FIG. 27(a)-2 to FIG. 27(g)-1 and FIG. 27(g)-2 show another group of GUIs according to an embodiment of this application.

Refer to FIG. 27(a)-1 and FIG. 27(a)-2. The user is using a television remote control to search for a movie, and the smart television displays a movie search display interface. In this case, a cursor of the smart television is located in a text input box 2701. When detecting that the user moves the cursor to the input box 2701, the smart television may send a broadcast message to a surrounding device. The broadcast message may be used to indicate that the smart television needs to perform text input.

In an embodiment, the broadcast message may carry a communication address (for example, an IP address, a port number, or a Bluetooth address) of the smart television.

Refer to FIG. 27(b)-1 to FIG. 27(b)-3. The user may pick up the mobile phone. In this case, the mobile phone may be in an unlocked state, and the mobile phone displays a home screen of the mobile phone.

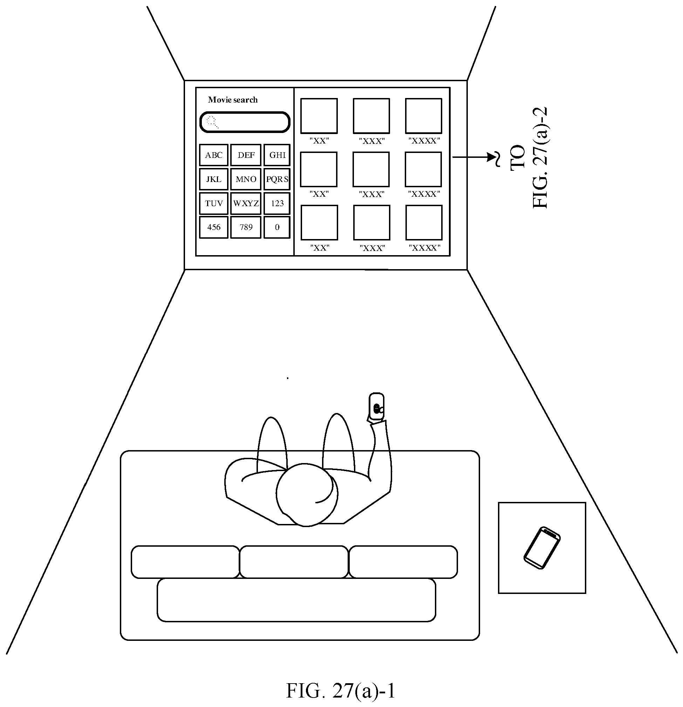

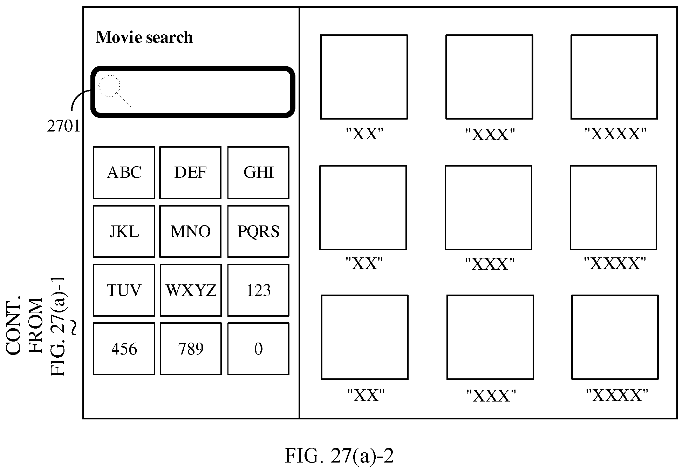

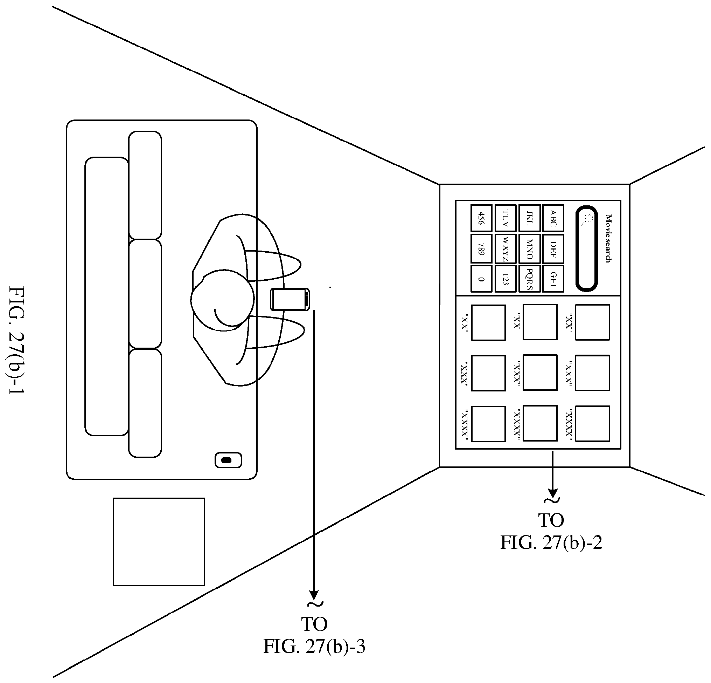

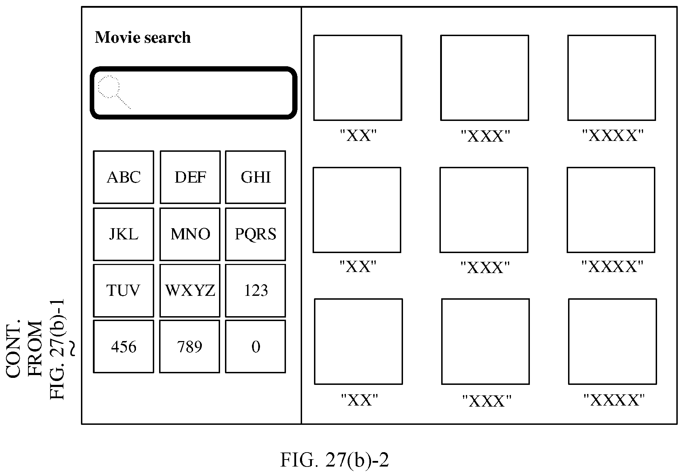

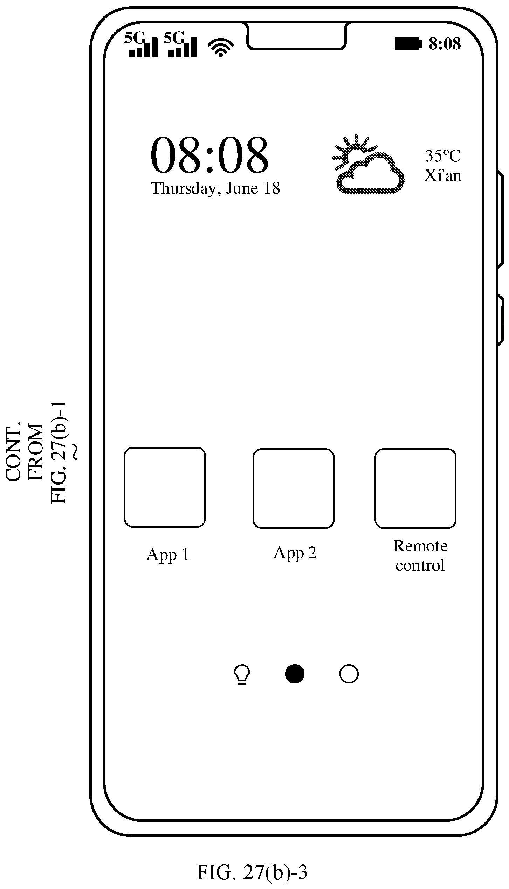

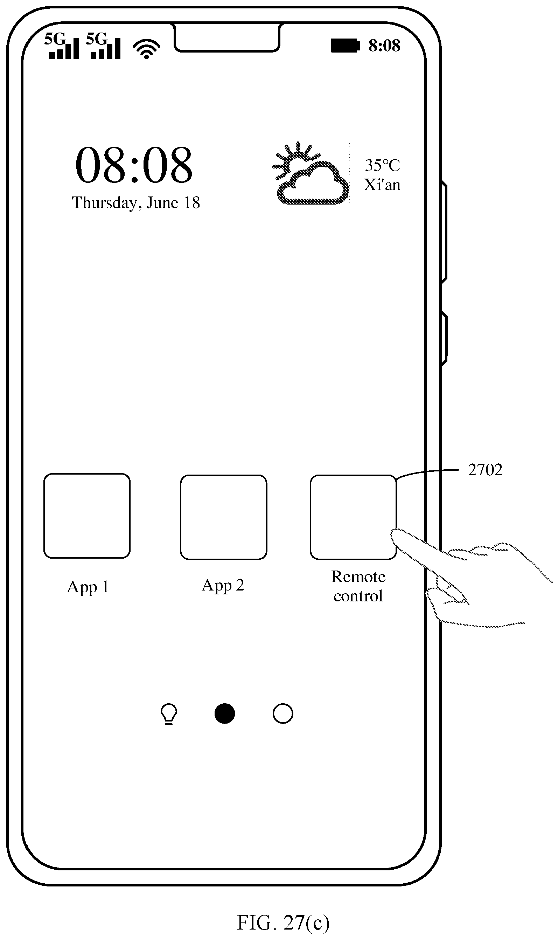

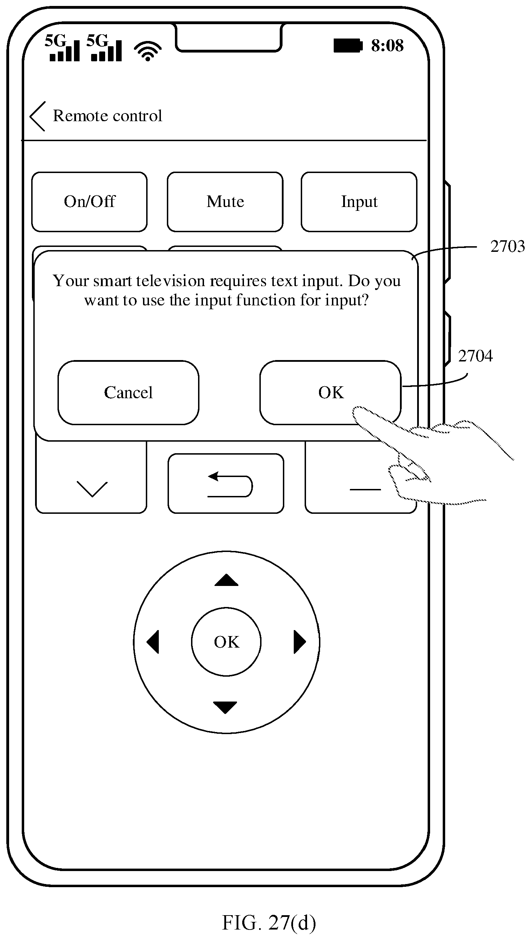

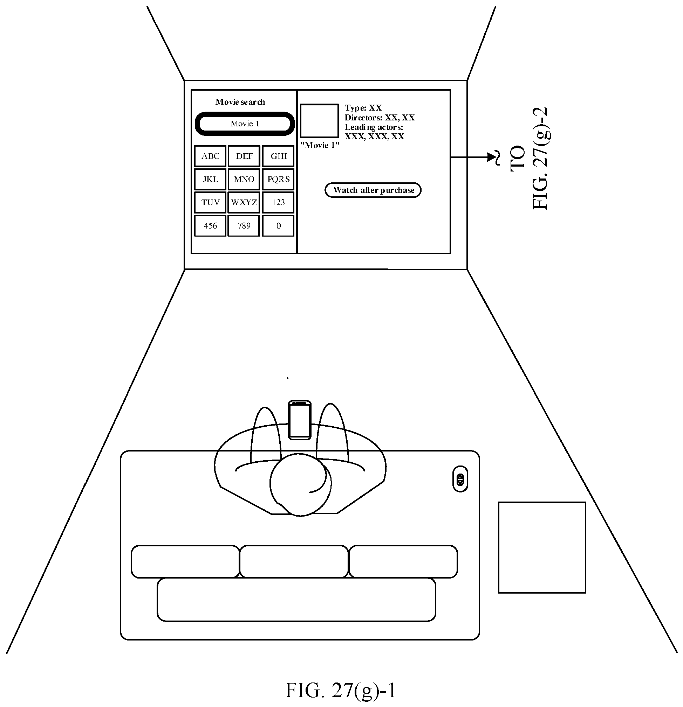

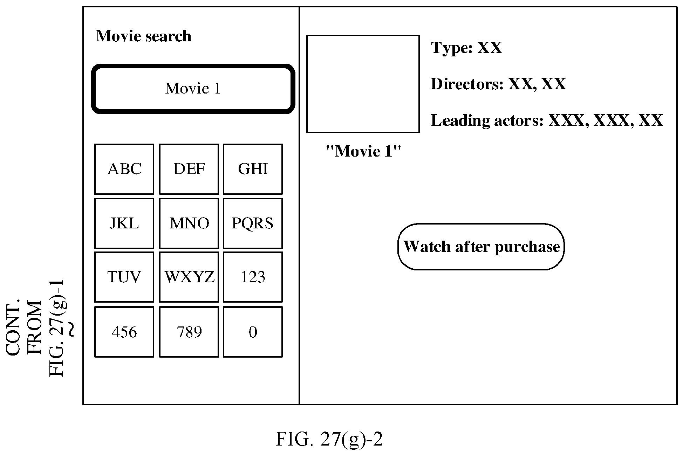

Refer to the GUI shown in FIG. 27(c). The GUI is the home screen of the mobile phone. When the mobile phone detects that the user taps an icon 2702 of a remote control application on the home screen, the mobile phone may start the remote control application. When detecting that the user starts the remote control application, the mobile phone may start to listen to the broadcast message sent by the surrounding device. After the mobile phone receives the broadcast message sent by the smart television, the mobile phone may display the GUI shown in FIG. 27(d).

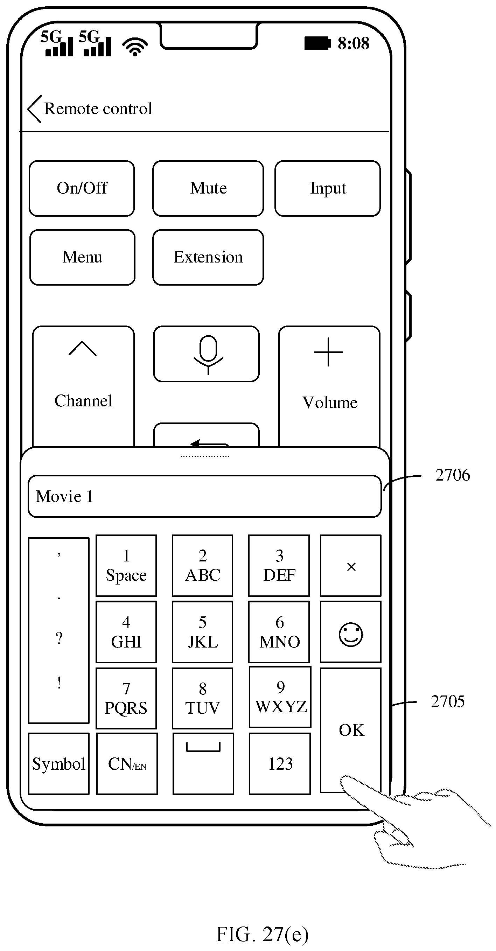

Refer to the GUI shown in FIG. 27(d). The GUI is a display interface of the remote control application on the mobile phone. After the mobile phone receives the broadcast message sent by the smart television, the mobile phone may display a prompt box 2703. The prompt box 2703 includes prompt information "The smart television requires text input. Do you want to use the input function for input?". After the mobile phone detects an operation that the user taps a control 2704, the mobile phone may display the GUI shown in FIG. 27(e).

In an embodiment, when the mobile phone detects an operation that the user taps the control 2704, the mobile phone may establish a connection to the smart television based on the communication address of the smart television that is carried in the broadcast message.

Refer to the GUI shown in FIG. 27(e). The GUI is another display interface of the remote control application on the mobile phone. After the mobile phone detects an operation that the user taps the control 2704, the mobile phone may invoke an input method of the mobile phone. After the mobile phone detects an operation that the user inputs text content "movie 1" in a text input box 2706 and taps a control 2705, the mobile phone may send the text content to the smart television.

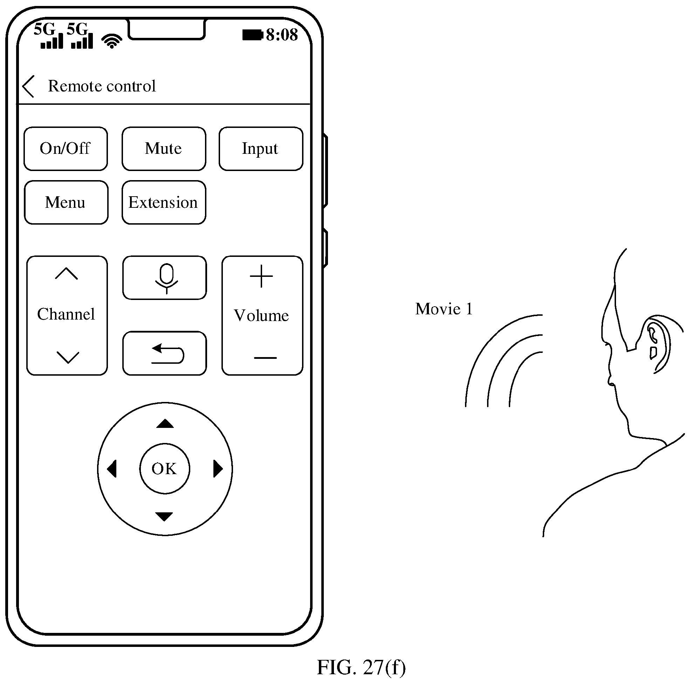

Refer to the GUI shown in FIG. 27(f). The GUI is another display interface of the remote control application on the mobile phone. After the mobile phone detects an operation that the user taps the control 2704, the mobile phone may detect voice content input by the user. As shown in FIG. 27(f), the user sends voice content "movie 1". After detecting the voice content input by the user, the mobile phone may determine text content "movie 1" corresponding to the voice content, so that the mobile phone sends the text content to the smart television.

In this embodiment of this application, the mobile phone may include an ASR module, and the ASR module is mainly used to recognize the voice content of the user as the text content.

In an embodiment, after detecting the voice content input by the user, the mobile phone may send the voice content to the smart television. The smart television may convert the voice content into the text content, to display the text content in the text input box 2701.

In an embodiment, after the mobile phone detects an operation that the user taps the control 2704, the mobile phone may prompt the user to choose to perform text input or voice input. If the user selects text input, the mobile phone may invoke the input method, so that the user can perform text content input by using the input method; or if the user selects voice input, the mobile phone may start to detect the voice content input by the user.

In an embodiment, after detecting an operation that the user starts the remote control application, the mobile phone may start to listen to the broadcast message. After the mobile phone receives the broadcast message sent by the smart television, the mobile phone may not display the prompt box 2703, and the mobile phone may directly invoke the input method to detect the text content input by the user, or the mobile phone may start to listen to the voice content input by the user.

In an embodiment, the mobile phone may send the content in the text input box 2706 to the smart television in real time, so that the text content in the text input box 2701 of the smart television is synchronized with the content in the text input box 2706 of the mobile phone.

Refer to FIG. 27(g)-1 and FIG. 27(g)-2. After receiving the text content sent by the mobile phone, the smart television may display the text content (for example, "movie 1") in the input box 2701 of the smart television. In addition, the smart television may display information corresponding to the movie 1 (for example, information such as a type, a director, and a leading actor).

In this embodiment of this application, the mobile phone does not need to establish a connection to the smart television or bind to the smart television in advance, but temporarily establishes, in a dynamic matching manner when the smart television needs to perform input, an association between a device that provides input and a device that receives input. When the smart television needs to perform input, the user may pick up any device (for example, the mobile phone or a pad) around the user to perform input. This helps improve convenience of performing text input by the user, and improve user experience. In addition, the mobile phone starts listening after starting the remote control application, and after detecting the broadcast message, prompts, by using the prompt box, the user to perform text input. This helps the user determine that the mobile phone may be used as an input device. Before the user initiates an input operation on the mobile phone, the mobile phone does not display any prompt information that may cause interference to the user. This avoids interference to the user, and helps improve user experience.

FIG. 28(a) to FIG. 28(e) show another group of GUIs according to an embodiment of this application.

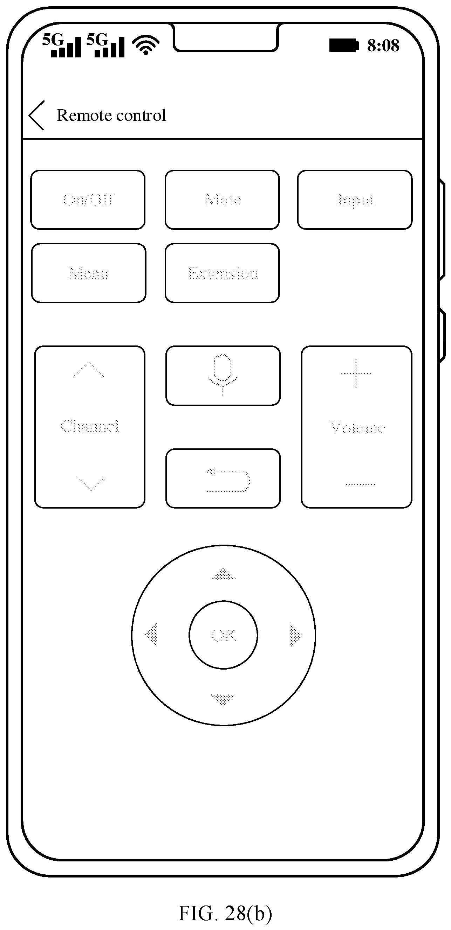

Refer to the GUI shown in FIG. 28(a). The GUI is a home screen of the mobile phone. When the mobile phone detects an operation that the user taps an icon of a remote control application on the home screen, the mobile phone may start to listen to a broadcast message sent by a surrounding device and display the GUI shown in FIG. 28(b).

Refer to the GUI shown in FIG. 28(b). The GUI is a display interface of the remote control application on the mobile phone. When the mobile phone does not receive the broadcast message sent by the smart television, a button color on the display interface is gray ("gray" indicates that the control is unavailable).

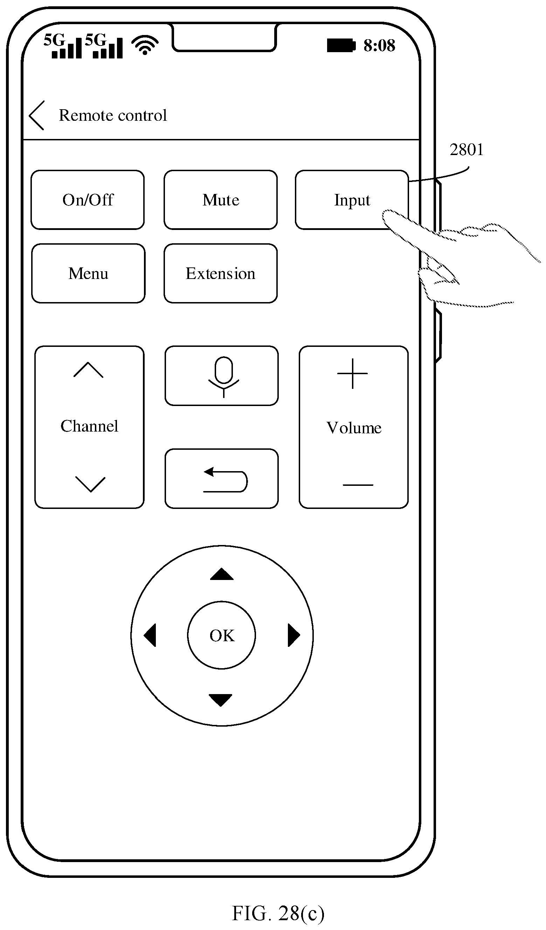

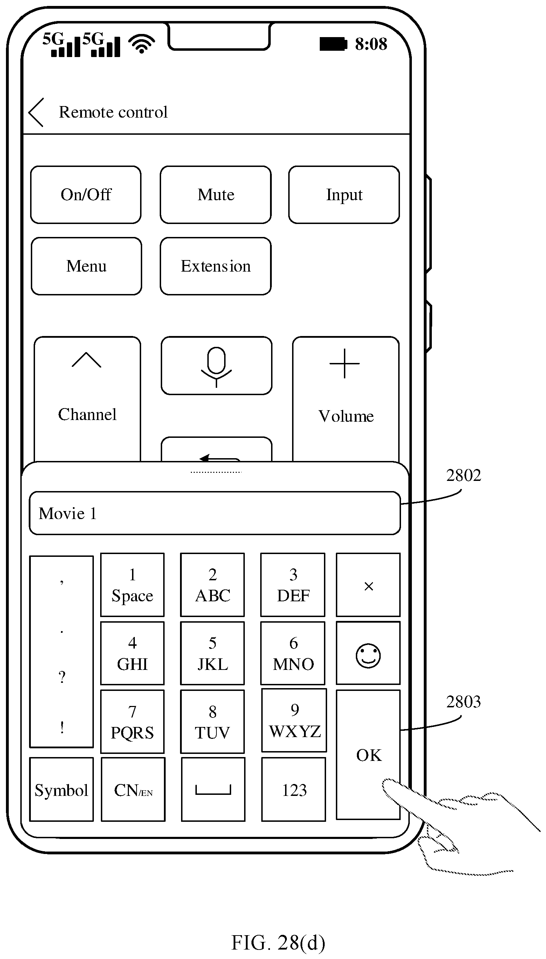

Refer to the GUI shown in FIG. 28(c). The GUI is another display interface of the remote control application on the mobile phone. When the mobile phone receives the broadcast message sent by the smart television, the button color on the display interface changes from gray to black ("black" indicates that the control is available). In this case, the user may use an input function on the remote control to perform text content input. When the mobile phone detects an operation that the user taps an input control 2801, the mobile phone may display the GUI shown in FIG. 28(d).

In an embodiment, when the mobile phone receives the broadcast message sent by the smart television, the mobile phone may establish a connection to the smart television based on a communication address of the smart television that is carried in the broadcast message.

Refer to the GUI shown in FIG. 28(d). The GUI is another display interface of the remote control application on the mobile phone. After the mobile phone detects an operation that the user taps the control 2801, the mobile phone may invoke an input method of the mobile phone. After the mobile phone detects an operation that the user inputs text content "movie 1" in a text input box 2802 and taps a control 2803, the mobile phone may send the text content to the smart television.

It should be understood that, in this embodiment of this application, when the mobile phone receives the broadcast message sent by the smart television, the mobile phone may directly display the GUI shown in FIG. 28(d). That is, when the mobile phone receives the broadcast message sent by the smart television, the mobile phone may automatically invoke the input method of the mobile phone when the button color on the display interface changes from gray to black.

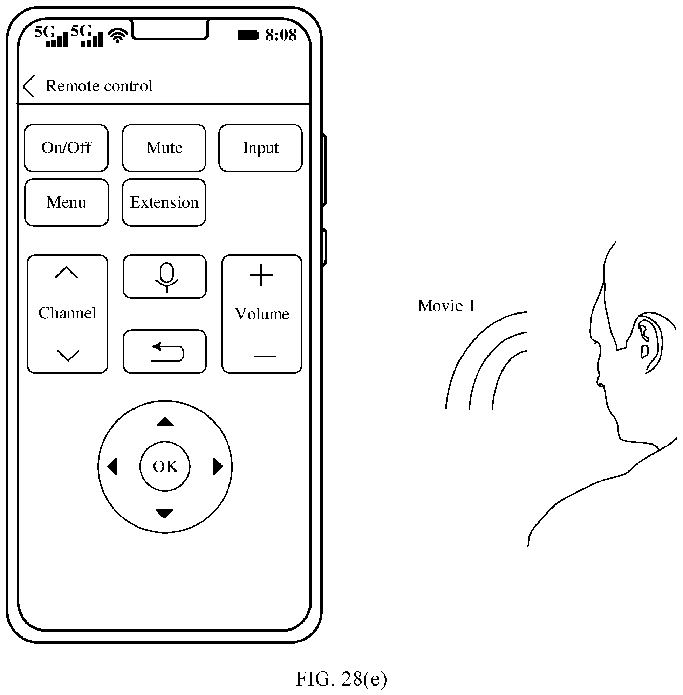

Refer to the GUI shown in FIG. 28(e). The GUI is another display interface of the remote control application on the mobile phone. After the mobile phone receives the broadcast message, the mobile phone may detect voice content input by the user. As shown in FIG. 28(e). the user sends voice content "movie 1". After detecting the voice content of the user, the mobile phone may determine text content "movie 1" corresponding to the voice content, so that the mobile phone sends the text content to the smart television.

In an embodiment, after the mobile phone receives the broadcast message sent by the smart television, when the button color on the display interface of the remote control application changes from gray to black, the mobile phone may further prompt the user to select to perform text input or voice input. If the user selects text input, the mobile phone may invoke the input method, so that the user can perform text content input by using the input method; or if the user selects voice input, the mobile phone may start to detect the voice content input by the user.

In an embodiment, the mobile phone may send the content in the text input box 2802 to the smart television in real time, so that the text content in the text input box of the smart television is synchronized with the content in the text input box 2802 of the mobile phone.

After receiving the text content sent by the mobile phone, the smart television may display the text content (for example, "movie 1") in the input box of the smart television. In addition, the smart television may display information corresponding to the movie 1 (for example, information such as a type, a director, and a leading actor).

In this embodiment of this application, the mobile phone does not need to establish a connection to the smart television or bind to the smart television in advance, but temporarily establishes, in a dynamic matching manner when the smart television needs to perform input, an association between a device that provides input and a device that receives input. When the smart television needs to perform input, the user may pick up any device (for example, the mobile phone or a pad) around the user to perform input. This helps improve convenience of performing text input by the user, and improve user experience. In addition, the mobile phone starts listening after starting the remote control application, and after detecting the broadcast message, prompts, by using a control color change, that the mobile phone may be used as an input device. Before the user initiates an input operation on the mobile phone, the mobile phone does not display any prompt information that may cause interference to the user. This avoids interference to the user, and helps improve user experience.

FIG. 29(a) to FIG. 29(d) show another group of GUIs according to an embodiment of this application.

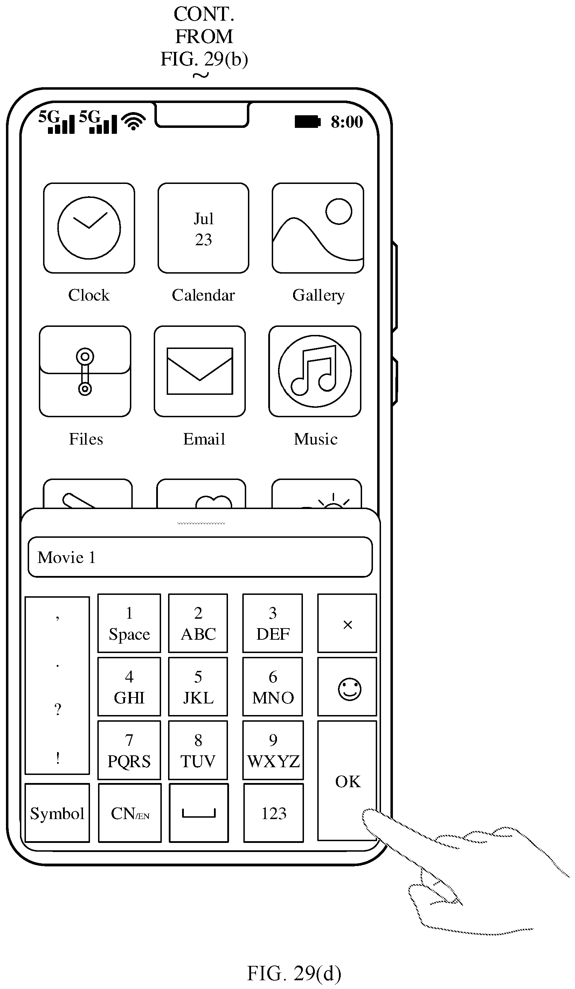

Refer to the GUI shown in FIG. 29(a). The GUI is a lock screen interface of the mobile phone. When the mobile phone detects a preset operation of the user on the lock screen interface (for example, the mobile phone detects that the user draws "S" on the lock screen interface), the mobile phone may start to listen to a broadcast message sent by a surrounding device. When the mobile phone detects the broadcast message sent by the smart television, the mobile phone may display the GUI shown in FIG. 29(d).

In an embodiment, a trigger condition for the mobile phone to start to listen to the broadcast message sent by the surrounding device may be that the mobile phone detects, on a currently displayed interface, a pattern of a preset shape drawn by the user; or may be that the mobile phone detects a mid-air gesture on a current interface; or may be that the mobile phone detects an operation that the user presses a physical button (for example, a volume button and a power button) of the mobile phone; or may be that the mobile phone detects a preset gesture on a current interface and an operation that the user presses a physical button.

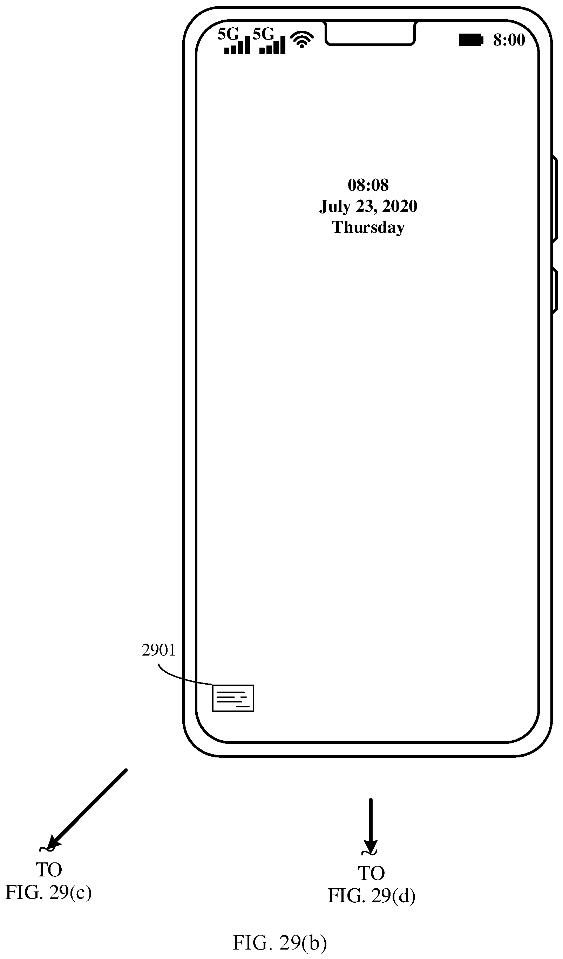

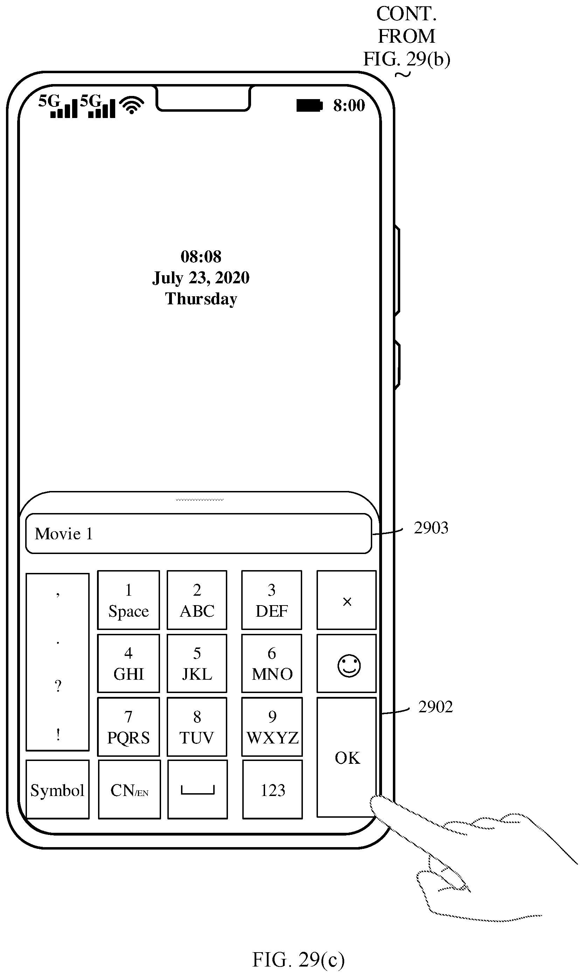

Refer to the GUI shown in FIG. 29(b). The GUI is another lock screen interface of the mobile phone. In response to receiving the broadcast message sent by the smart television, the mobile phone may display a text input icon 2901 on the lock screen interface. When detecting an operation that the user taps the icon 2901, the mobile phone may display the GUI shown in FIG. 29(c), or may display the GUI shown in FIG. 29(d).

Refer to the GUI shown in FIG. 29(c). The GUI is a display interface displayed after the mobile phone detects that the user taps the icon 2901. The mobile phone may display an input method on the lock screen interface, and the user may input text content in a text input box 2903. After the mobile phone detects that the user inputs the text content (for example, "movie 1") in the text input box 2903 and taps a control 2902, the mobile phone may send the text content to the smart television. The smart television may display the GUI shown in FIG. 25(e)-1 and FIG. 25(e)-2.

Refer to the GUI shown in FIG. 29(d). The GUI is another display interface displayed after the mobile phone detects that the user taps the icon 2901. In response to detecting an operation that the user taps the icon 2901, the mobile phone may enable a camera to collect facial information of the user. If the facial information collected by the camera matches facial information preset in the mobile phone, the mobile phone may first perform unlocking, to enter a non-lock screen interface, and automatically invoke the input method of the mobile phone on the non-lock screen interface. Alternatively, when the mobile phone detects an operation that the user taps the icon 2901, the mobile phone may collect fingerprint information of the user. If the collected fingerprint information matches fingerprint information preset in the mobile phone, the mobile phone may first perform unlocking, to enter a non-lock screen interface, and automatically invoke the input method of the mobile phone on the non-lock screen interface. After the mobile phone detects that the user inputs the text content (for example, "movie 1") in the text input box 2903 and taps a control 2902, the mobile phone may send the text content to the smart television. The smart television may display the GUI shown in FIG. 25(e)-1 and FIG. 25(e)-2. In an embodiment, after the mobile phone detects the preset operation of the user, if the mobile phone receives the broadcast message sent by the smart television, the mobile phone may directly display the GUI shown in FIG. 29(c) or FIG. 29(d). That is, in response to receiving the broadcast message sent by the smart television, the mobile phone may directly invoke the input method on the lock screen interface, or the mobile phone may invoke the input method after entering the non-lock screen interface.

In an embodiment, the mobile phone may send text content input by the user to the smart television in real time. For example, when detecting that the user inputs text content "mo" in the text input box 2903, the mobile phone may send the text information to the smart television, to display the text content "mo" in the text input box of the smart television. When the mobile phone detects that the user then inputs text content "vie" in the text input box 2903, the mobile phone may continue to send the text content "vie" to the smart television, to display the text content "vie" in the text input box of the smart television. When the mobile phone detects that the user then inputs text content "1" in the text input box 2903, the mobile phone may continue to send the text content "1" to the smart television, to display the text content "movie 1" in the text input box of the smart television.

FIG. 30(a) to FIG. 30(k) show another group of GUIs according to an embodiment of this application.

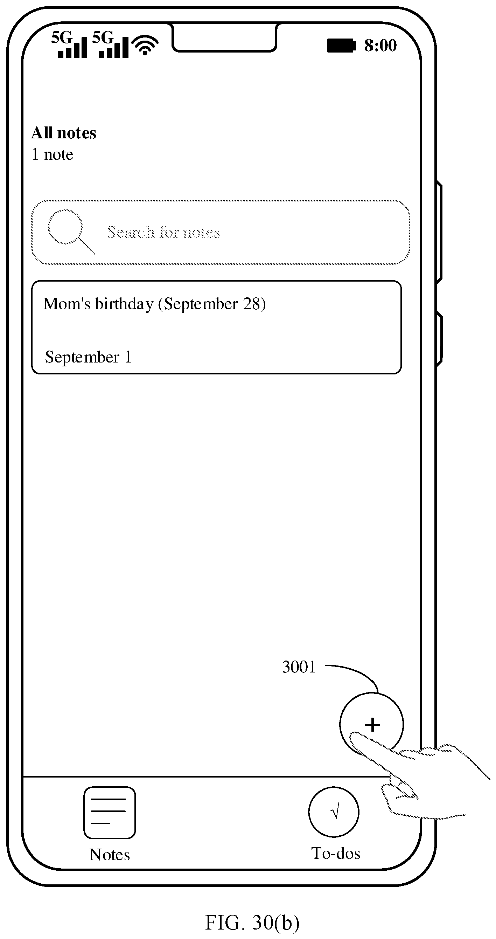

Refer to the GUI shown in FIG. 30(a). The GUI is a home screen of the mobile phone. The home screen of the mobile phone includes icons of a plurality of applications, and the plurality of applications include Clock, Calendar, Gallery, Memo, Files, Email, Music, Calculator, and the like. When detecting an operation that the user taps an icon of Memo, the mobile phone may display the GUI shown in FIG. 30(b).

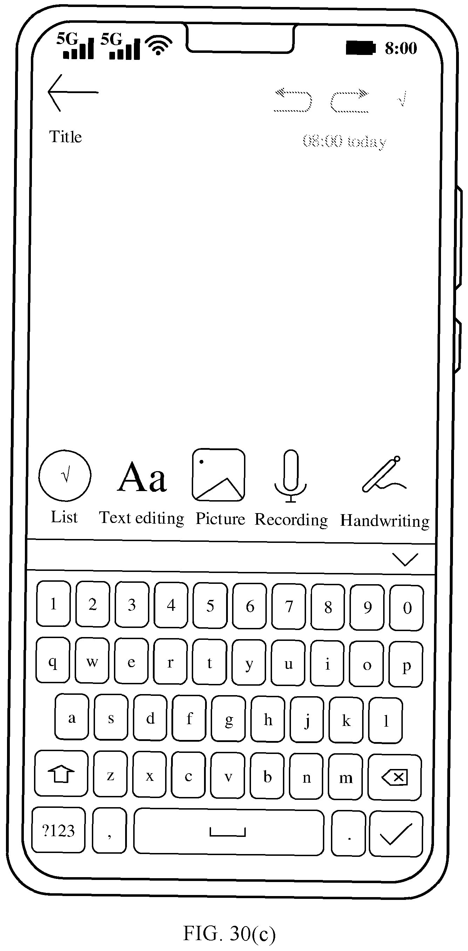

Refer to the GUI shown in FIG. 30(b). The GUI is a display interface of the Memo application. The display interface displays a note recorded on September 1, and content of the note is "Mother's birthday (September 28)". The display interface further includes a control 3001 for creating a note. When the mobile phone detects an operation that the user taps the control 3001, the mobile phone may display the GUI shown in FIG. 30(c).

Refer to the GUI shown in FIG. 30(c). The GUI is another display interface of the Memo application. The user may edit a title and text of a note on the interface. The display interface further includes list, text editing, picture insertion, recording-to-text, and handwriting controls.

Refer to FIG. 30(d)-1 and FIG. 30(d)-2. When the mobile phone detects an operation that the user taps a recording-to-text control 3002, the mobile phone may send request information to the notebook computer. The request information is used to request the notebook computer to edit text content corresponding to voice content obtained by the mobile phone. In response to receiving the request information, the notebook computer may display a prompt box 3003. The prompt box 3003 includes prompt information "Your mobile phone is converting recording to text. Do you want to edit text on your notebook computer?".

Refer to FIG. 30(e)-1 and FIG. 30(e)-2. In response to an operation that the user taps a control 3004, the notebook computer may start app 1. App 1 is an application on which text editing may be performed. In response to the operation that the user taps the control 3002, the mobile phone may detect voice content in an environment, and convert the detected voice content into text content. After the mobile phone converts the voice content into the text content, the mobile phone may further send the text content obtained through conversion to the notebook computer. In this way, the text content "Heat The re-change...the social mentality" is simultaneously displayed on the display interface of the Memo application on the mobile phone and a display window 3005 of app 1 on the notebook computer.

In an embodiment, the mobile phone may include a microphone and an ASR module. The microphone is configured to collect voice content in an environment, and the ASR module is configured to convert the received voice content into text content.

In an embodiment, the text content on the display interface of app 1 on the notebook computer and the text content on the display interface of the Memo application on the mobile phone may be synchronized in real time. For example, the mobile phone may convert voice content into text content at a specific time interval (for example, 5 seconds). Within 0 to 5 seconds, the mobile phone converts collected voice content into text content "Heat The re-change and invariant reflect people's livelihood demands", so that the mobile phone can display the text content on the display interface of Memo. In addition, the mobile phone may send the text content to the notebook computer, so that the notebook computer can display the text content on the display interface of app 1. Within 5 to 10 seconds, the mobile phone converts collected voice content into text content "Guangzhi think tank We have just counted on the eve of the 2020 National Two Sessions", so that the mobile phone can display the text content on the display interface of Memo. In addition, the mobile phone may send the text content to the notebook computer, so that the notebook computer can display the text content on the display interface of app 1.

In an embodiment, after starting app 1, the notebook computer may display a cursor 3006. After receiving the text content sent by the mobile phone, the notebook computer may display the cursor 3006 at the end of the text content.

Refer to the GUI shown in FIG. 30(f)-1 and FIG. 30(f)-2. The mobile phone may continue to detect voice content and convert the voice content into text content. The mobile phone may synchronize the text content to app 1 on the notebook computer in real time. In addition, in response to an editing operation of the user, the notebook computer may edit the text content in app 1. For example, the user may add content to the text content sent by the mobile phone (add "1" before "Heat", and add "2" before "Guangzhi think tank"). For another example, the user may modify inaccurate content in the text content (for example, modify "nominal" to "public opinion", and modify "breakthrough" to "top 10"). For another example, the user may modify a format of the text content (for example, the notebook computer detects an operation that the user presses Enter after "people's livelihood demands").

As shown in FIG. 30(f)-1 and FIG. 30(f)-2, in response to detecting an operation that the user taps a Save control 3007, the notebook computer may send the edited text content to the mobile phone, so that the mobile phone displays, on the display interface of Memo, the text content edited on the notebook computer.

In an embodiment, after detecting voice content in an environment, the mobile phone converts the voice content into text content, and sends the text content to the notebook computer, but the mobile phone may not display the text content. After the mobile phone receives the edited text content from the notebook computer, the mobile phone may display the edited text content on the display interface of the Memo application.

In an embodiment, after detecting that the user moves the cursor to a location that needs to be edited, the notebook computer may edit text content near the location. For example, the cursor 3006 is currently placed after "social mentality", and after the notebook computer detects that the user adds a symbol "?" after "social mentality", the cursor 3006 may be moved after "social mentality?". In addition, after receiving other text content sent by the mobile phone, the notebook computer may continue to display the received text content.

Refer to FIG. 30(g)-1 and FIG. 30(g)-2. When the notebook computer continues to detect an editing operation performed by the user on the text content, the notebook computer may edit the text content received from the mobile phone. For example, the notebook computer may detect an operation that the user modifies "is succeeding" to "Zheng Chenggong". For another example, the notebook computer may detect an operation that the user adds a symbol ". "after "annual characteristics". For another example, the notebook computer may detect an operation that the user inserts a symbol "," into "healthcare education housing food safety". For another example, the notebook computer may detect an operation that the user presses Enter after "social mentality?".

As shown in FIG. 30(g)-1 and FIG. 30(g)-2, when the notebook computer detects an operation that the user taps the Save control 3007, the notebook computer may send the edited text content to the mobile phone, so that the mobile phone displays, on the display interface of Memo, the text content edited on the notebook computer.

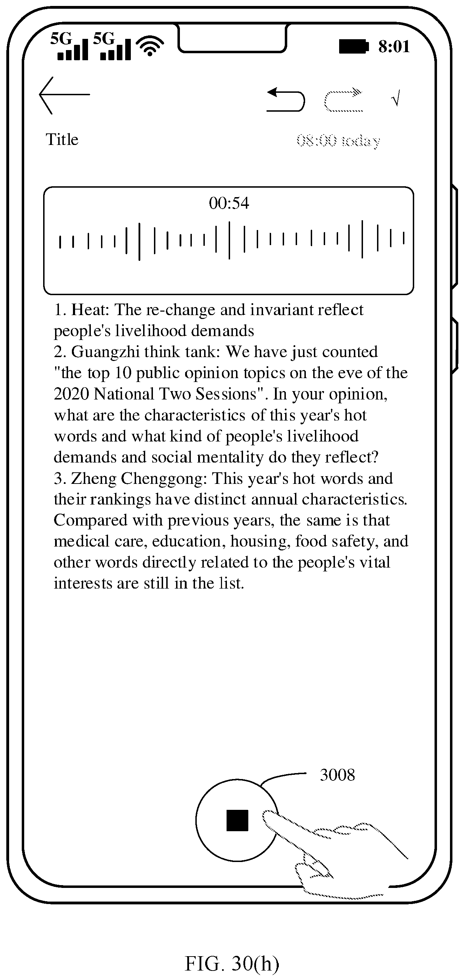

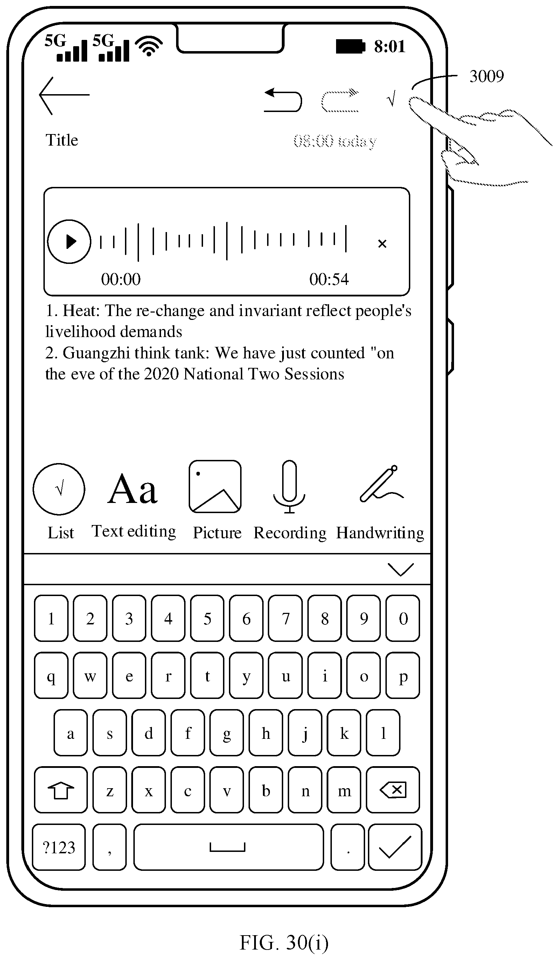

Refer to the GUI shown in FIG. 30(h). The GUI is another display interface of the Memo application. When the mobile phone detects an operation that the user taps a control 3008 for stopping recording, the mobile phone may display the GUI shown in FIG. 30(i).

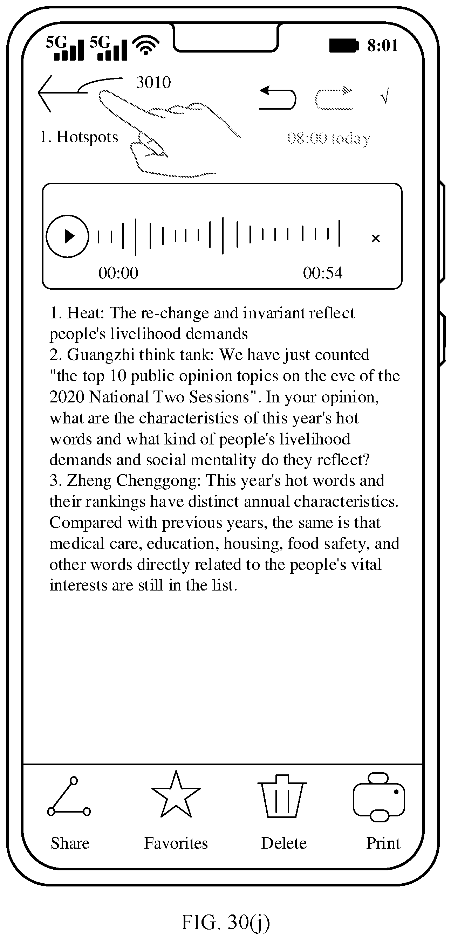

Refer to the GUI shown in FIG. 30(i). The GUI is another display interface of the Memo application. The user may continue to edit, on the mobile phone, the text content edited on the notebook computer (for example, the user may insert a picture into the text content). When the mobile phone detects an operation that the user taps a control 3009, the mobile phone may save the text content displayed on the current interface, and display the GUI shown in FIG. 30(j).

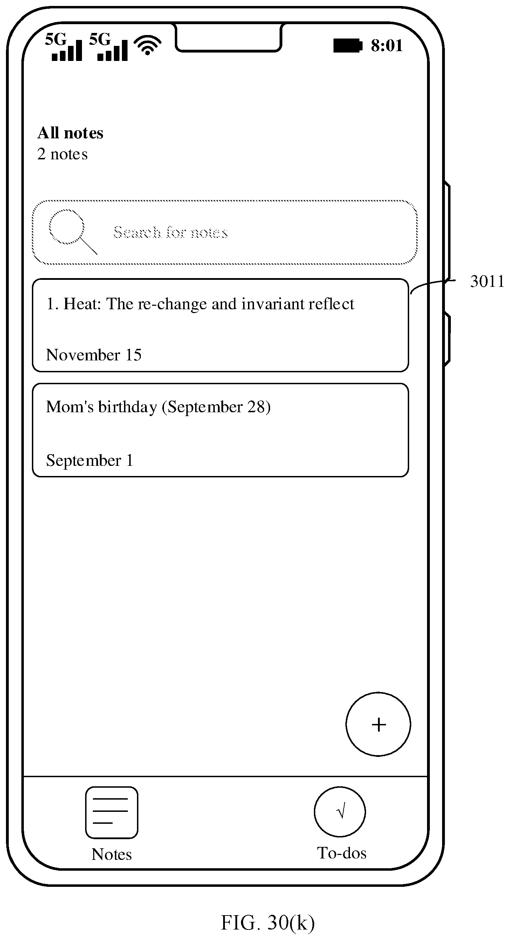

Refer to the GUI shown in FIG. 30(j). The GUI is another display interface of the Memo application. In response to detecting an operation that the user taps the control 3009, the mobile phone may update the title of the note to "1. Hotspots". When the mobile phone detects an operation that the user taps a control 3010, the mobile phone may display the GUI shown in FIG. 30(k).

Refer to the GUI shown in FIG. 30(k). The GUI is another display interface of the Memo application. The mobile phone may show that the Memo application currently includes two notes, and newly added note content may be displayed on the top.

In an embodiment, if the notebook computer does not detect that the user taps the control 304 when the mobile phone starts to perform recording-to-text conversion, the mobile phone may start to perform recording-to-text conversion, and the notebook computer may continue to display a prompt box 3001. In a process in which the mobile phone performs recording-to-text conversion, if the notebook computer detects an operation that the user taps the control 3004, the notebook computer may send a response to the mobile phone. The response is used to indicate that the notebook computer may perform text editing. After receiving the response, the mobile phone may send, to the notebook computer, text content 1 obtained through voice-to-text conversion before the response is received, and the notebook computer may start app 1 and display the text content 1. Then, if the mobile phone continues to detect voice content input by the user, the mobile phone may continue to send, to the notebook computer, text content 2 corresponding to the voice content input by the user. The notebook computer may append the text content 2 sent by the mobile phone to the text content 1.

In this embodiment of this application, when the mobile phone performs a recording-to-text operation, the mobile phone may notify the notebook computer that a recording-to-text function is being performed, so that the notebook computer can prompt the user whether to edit the text content on the notebook computer. When the user chooses to perform editing on the notebook computer, the notebook computer may display, in real time, the text content sent by the mobile phone. This helps the user edit the text content, and helps improve user experience.

FIG. 31(a)-1 and FIG. 31(a)-2 to FIG. 31(c)-1 and FIG. 31(c)-2 show another group of GUIs according to an embodiment of this application.

Refer to FIG. 31(a)-1 and FIG. 31(a)-2. When the mobile phone detects that the user taps a recording-to-text control, the mobile phone may display the interface shown in FIG. 31(b)-1 and FIG. 31(b)-2. In this case, the mobile phone may send request information to the notebook computer. The request information is used to request the notebook computer to edit text content corresponding to voice content obtained by the mobile phone.

Refer to FIG. 31(b)-1 and FIG. 31(b)-2. In response to receiving the request information sent by the mobile phone, the notebook computer may start app 1. In response to the fact that the mobile phone receives a response of the notebook computer to the request information, the mobile phone may display a prompt box 3101. The prompt box 3101 includes prompt information "Detected a notebook computer around. Do you want to send the text content to the notebook computer for editing?". When the mobile phone detects an operation that the user taps a control 3102, the mobile phone starts to detect voice content in an environment.

Refer to FIG. 31(c)-1 and FIG. 31(c)-2. After detecting the voice content in the environment, the mobile phone may start to perform recording-to-text conversion. The mobile phone may collect voice content and convert the voice content into text content "Heat The re-change...the social mentality". In addition, the mobile phone may further send the text content obtained through conversion to the notebook computer, so that the notebook computer displays the text content by using app 1.

In an embodiment, when the notebook computer detects an operation that the user edits the text content on the notebook computer and detects an operation that the user taps to save, the notebook computer may send the edited text content to the mobile phone, so that the mobile phone displays the edited text content on a display interface of Memo. For a specific process, refer to the processes of FIG. 30(f)-1 and FIG. 30(f)-2 and FIG. 30(g)-1 and FIG. 30(g)-2. For brevity, details are not described herein again.

In this embodiment of this application, when the mobile phone performs a recording-to-text operation, if the mobile phone determines that there is a surrounding device (for example, the notebook computer) that is convenient for the user to perform text editing, the mobile phone may prompt the user whether to perform text editing on the notebook computer. When the user chooses to perform editing on the notebook computer, the notebook computer may display, in real time, the text content sent by the mobile phone. This helps the user edit the text content, and helps improve user experience.

FIG. 32(a) to FIG. 32(e)-1 and FIG. 32(e)-2 show another group of GUIs according to an embodiment of this application.

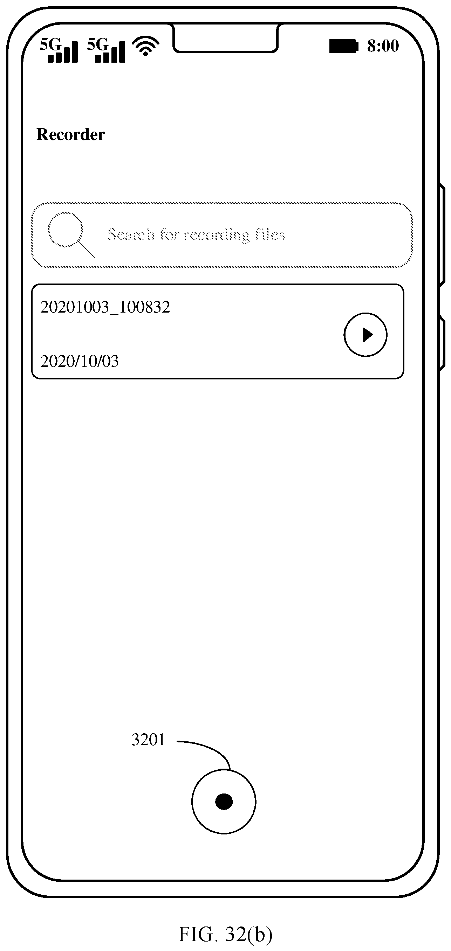

Refer to the GUI shown in FIG. 32(a). The GUI is a home screen of the mobile phone. The home screen of the mobile phone includes icons of a plurality of applications, and the plurality of applications include a Recorder application and the like. When detecting an operation that the user taps an icon of the Recorder application, the mobile phone may display the GUI shown in FIG. 32(b).

Refer to the GUI shown in FIG. 32(b). The GUI is a display interface of the Recorder application. The display interface displays a recording file recorded on October 3, and the recording file is named "20201003_100832". The display interface further includes a control 3201 for creating a recording file.

Refer to FIG. 32(c)-1 and FIG. 32(c)-2. When the mobile phone detects an operation that the user taps the control 3201, the mobile phone may send indication information to the notebook computer. The indication information indicates that the mobile phone is recording. In response to receiving the indication information, the notebook computer may display a prompt box 3202. The prompt box 3202 includes prompt information "Your mobile phone is recording. Do you want to convert recording to text on your notebook computer?".

Refer to FIG. 32(d)-1 and FIG. 32(d)-2. In response to an operation that the notebook computer detects that the user taps a control 3203, the notebook computer may start app 1. In response to an operation that the mobile phone detects that the user taps the control 3201, the mobile phone may display a recording interface. The recording interface shows that recording has been performed for 25 seconds 31 currently, and the mobile phone is expected to perform recording for more than 10 hours.

When collecting voice content, the mobile phone may further send the voice content to the notebook computer. After receiving the voice content, the notebook computer may convert the voice content into text content "Heat The re-change...the social mentality", so that the notebook computer can display the text content in app 1.

In an embodiment, the notebook computer may include an ASR module. The ASR module is configured to convert received voice content into text content.

Refer to FIG. 32(e)-1 and FIG. 32(e)-2. In response to an editing operation of the user, the notebook computer may edit the text content in app 1. For example, the user may add content to the text content sent by the mobile phone (add "1" before "Heat", and add "2" before "Guangzhi think tank"). For another example, the user may modify inaccurate content in the text content (for example, modify "nominal" to "public opinion", and modify "breakthrough" to "top 10"). For another example, the user may modify a format of the text content (for example, the notebook computer detects an operation that the user presses Enter after "people's livelihood demands").

In an embodiment, when detecting an operation that the user taps a Save control, the notebook computer may send the edited text content to the mobile phone, so that the mobile phone can save the edited text content in an application (for example, Memo).

In this embodiment of this application, when detecting that the user starts recording, the mobile phone may send the indication information to the surrounding notebook computer, so that the notebook computer prompts the user whether to perform recording-to-text conversion on the notebook computer. This can help the user convert the voice content collected by the mobile phone into the text content on the notebook computer, utilize convenience of performing editing on the notebook computer, and help improve user experience.

FIG. 33(a)-1 and FIG. 33(a)-2 to FIG. 33(d)-1 and FIG. 33(d)-2 show another group of GUIs according to an embodiment of this application.

Refer to FIG. 33(a)-1 and FIG. 33(a)-2. The mobile phone displays a caller ID display interface, and the caller ID display interface shows that a phone number "XXX-XXXXXXX" from Shenzhen, Guangdong is making a call. In response to the fact that the mobile phone receives the incoming call, the mobile phone sends indication information to the surrounding notebook computer. The indication information indicates that the mobile phone detects the incoming call of the user. In response to receiving the indication information, the notebook computer may display a prompt box 3301. The prompt box 3301 includes prompt information "Your mobile phone receives an incoming call. Do you want to convert call content to text on your notebook computer?".

Refer to FIG. 33(b)-1 and FIG. 33(b)-2. In response to an operation that the notebook computer detects that the user taps a control 3302, the notebook computer may start app 1 and send a response to the mobile phone. The response is used to indicate that the notebook computer may be used as a text content editing device. In response to an operation that the mobile phone detects that the user accepts the incoming call, the mobile phone may establish a call connection to a peer device. The mobile phone may receive voice content of another user that is sent by the peer device. In response to receiving the voice content of the another user, the mobile phone may send the voice content to the notebook computer.

In an embodiment, when detecting an operation that the user accepts the incoming call, the mobile phone may send indication information to the notebook computer. The indication information indicates that the mobile phone is on a call, and requests the notebook computer to edit text content corresponding to call content. After receiving the indication information, the notebook computer may prompt the user with "Your mobile phone is on a call. Do you want to convert call content to text on your notebook computer?" When the notebook computer detects that the user determines to use the notebook computer to perform an operation of converting call content into text, the notebook computer may start app 1, and receive voice content of another user from the mobile phone. Therefore, the notebook computer may convert the voice content into the text content.

In an embodiment, after receiving the response, the mobile phone may convert the obtained voice content of the another user into text content, so that the mobile phone can send the text content to the notebook computer.

Refer to FIG. 33(c)-1 and FIG. 33(c)-2. In response to receiving the voice content from the mobile phone, the notebook computer may convert the voice content into text content "Hey, there is a meeting tomorrow morning...Please attend on time", to display the text content by using app 1.

In an embodiment, when the notebook computer detects an operation that the user edits the text content on the notebook computer and detects an operation that the user taps to save, the notebook computer may send the edited text content to the mobile phone, so that the mobile phone displays the edited text content on a display interface of Memo. For a specific process, refer to the processes of FIG. 30(f)-1 and FIG. 30(f)-2 and FIG. 30(g)-1 and FIG. 30(g)-2. For brevity, details are not described herein again.

In this embodiment of this application, when the mobile phone detects the incoming call, if the mobile phone determines that there is a surrounding device (for example, the notebook computer) that is convenient for the user to perform text editing, the mobile phone may indicate, to the notebook computer, that the mobile phone detects the incoming call. When the user chooses to perform editing on the notebook computer, the notebook computer may convert, in real time, the voice content obtained from the mobile phone into the text content, and display the text content to the user. This helps the user edit the text content, and helps improve user experience.

FIG. 34(a)-1 and FIG. 34(a)-2 to FIG. 34(d)-1 and FIG. 34(d)-2 show another group of GUIs according to an embodiment of this application.

Refer to FIG. 34(a)-1 and FIG. 34(a)-2. The mobile phone displays a video call interface of a social application. The video call interface shows that another user is inviting the user to make a video call. In response to the fact that the mobile phone receives the video call, the mobile phone sends indication information to the surrounding notebook computer. The indication information indicates that the mobile phone detects a video call request of the another user. In response to receiving the indication information, the notebook computer may display a prompt box 3401. The prompt box 3401 includes prompt information "Your mobile phone receives a video call request. Do you want to convert call content to text on your notebook computer?".

Refer to FIG. 34(b)-1 and FIG. 34(b)-2. In response to an operation that the notebook computer detects that the user taps a control 3402, the notebook computer may start app 1 and send a response to the mobile phone. The response is used to indicate that the notebook computer may be used as a text content editing device. In response to an operation that the mobile phone detects that the user accepts the video call request, the mobile phone may establish a video call connection to a peer device. The mobile phone may receive voice content of another user that is sent by the peer device. In response to receiving the voice content of the another user, the mobile phone may send the voice content to the notebook computer.

In an embodiment, after receiving the response, the mobile phone may convert the obtained voice content of the another user into text content, so that the mobile phone can send the text content to the notebook computer.

Refer to FIG. 34(c)-1 and FIG. 34(c)-2. In response to receiving the voice content from the mobile phone, the notebook computer may convert the voice content into text content "Hey, there is a meeting tomorrow morning...Please attend on time", to display the text content by using app 1.

In an embodiment, when the notebook computer detects an operation that the user edits the text content on the notebook computer and detects an operation that the user taps to save, the notebook computer may send the edited text content to the mobile phone, so that the mobile phone displays the edited text content on a display interface of Memo. For a specific process, refer to the processes of FIG. 30(f)-1 and FIG. 30(f)-2 and FIG. 30(g)-1 and FIG. 30(g)-2. For brevity, details are not described herein again.

In this embodiment of this application, when the mobile phone detects the video call, if the mobile phone determines that there is a surrounding device (for example, the notebook computer) that is convenient for the user to perform text editing, the mobile phone may indicate, to the notebook computer, that the mobile phone detects the incoming call. When the user chooses to perform editing on the notebook computer, the notebook computer may convert, in real time, the voice content obtained from the mobile phone into the text content, and display the text content to the user. This helps the user edit the text content, and helps improve user experience.

It should be understood that, with reference to FIG. 33(a)-1 and FIG. 33(a)-2 to FIG. 33(d)-1 and FIG. 33(d)-2 and FIG. 34(a)-1 and FIG. 34(a)-2 to FIG. 34(d)-1 and FIG. 34(d)-2, the foregoing describes a case in which the mobile phone indicates the surrounding notebook computer when the mobile phone receives an incoming call and a video call request, so that the notebook computer prompts the user whether to convert call content into text on the notebook computer. In this embodiment of this application, after receiving a voice call request of another user, the mobile phone may also indicate the notebook computer, so that the notebook computer prompts the user whether to convert call content into text on the notebook computer.

FIG. 35(a)-1 and FIG. 35(a)-2 to FIG. 35(e)-1 and FIG. 35(e)-2 show another group of GUIs according to an embodiment of this application.

Refer to FIG. 35(a)-1 and FIG. 35(a)-2. The mobile phone displays a caller ID display interface, and the caller ID display interface shows that a phone number "XXX-XXXXXXX" from Shenzhen, Guangdong is making a call. In response to the fact that the mobile phone receives the incoming call, the mobile phone sends indication information to the surrounding notebook computer. The indication information indicates that the mobile phone detects the incoming call of the user. In response to receiving the indication information, the notebook computer may display a prompt box 3501. The prompt box 3501 includes prompt information "Your mobile phone receives an incoming call. Do you want to convert call content to text on your notebook computer?".

Refer to FIG. 35(b)-1 and FIG. 35(b)-2. When the notebook computer detects, within preset duration, an operation that the user does not tap a cancel control or an OK control 3502, the notebook computer may hide the prompt box 3501. In response to an operation that the mobile phone detects that the user accepts the incoming call, the mobile phone may establish a call connection to a peer device.

Refer to FIG. 35(c)-1 and FIG. 35(c)-2. In a call process of the user, when detecting an operation that the user taps a recording control 3503, the mobile phone may send indication information to the notebook computer. The indication information indicates that the mobile phone is on a call, and requests the notebook computer to edit text content corresponding to call content. In response to receiving the indication information, the notebook computer may display the prompt box 3501 again. When the notebook computer detects an operation that the user taps the control 3502, the notebook computer may send a response to the mobile phone. The response is used to indicate that the notebook computer may edit the text content corresponding to the call content. In response to receiving the response, the mobile phone may send the call content to the notebook computer.

Refer to FIG. 35(d)-1 and FIG. 35(d)-2. In response to receiving the call content sent by the mobile phone, an ASR module of the notebook computer may convert the call content into text content "Hey, tomorrow morning...attend", and display the text content in app 1.

Refer to FIG. 35(e)-1 and FIG. 35(e)-2. The notebook computer detects an editing operation of the user, may edit the text content, and display the edited text content in app 1 ("Leader: Hey, tomorrow morning...attend").

In this embodiment of this application, when detecting, in a process in which the user answers an incoming call, an operation that the user taps recording, the mobile phone sends indication information to the notebook computer, to indicate the notebook computer to edit text content corresponding to call content. When the user chooses to perform editing on the notebook computer, the notebook computer may convert, in real time, the voice content obtained from the mobile phone into the text content, and display the text content to the user. This helps the user edit the text content, and helps improve user experience.

With reference to FIG. 36(a)-1 and FIG. 36(a)-2 and FIG. 36(b)-1 and FIG. 36(b)-2 and FIG. 37(a)-1 and FIG. 37(a)-2 and FIG. 37(b)-1 and FIG. 37(b)-2, the following describes another two display manners on the notebook computer.

FIG. 36(a)-1 and FIG. 36(a)-2 and FIG. 36(b)-1 and FIG. 36(b)-2 show another group of GUIs according to an embodiment of this application.

As shown in FIG. 36(a)-1 and FIG. 36(a)-2, the mobile phone may display a recording-to-text interface in Memo. The mobile phone detects voice content input by the user "Heat The re-change and invariant reflect people's livelihood demands". The mobile phone may convert the voice content into text content, to send the text content to the notebook computer. After receiving the text content, the notebook computer may display the text content to the user by using captions. For example, the notebook computer may display the text content "Heat The re-change and invariant reflect people's livelihood demands" in a caption display area 3601.

As shown in FIG. 36(b)-1 and FIG. 36(b)-2, when the mobile phone then detects voice content input by the user "Guangzhi think tank We have just counted", the mobile phone may convert the voice content into text content, to send the text content to the notebook computer. After receiving the text content, the notebook computer may display the text content to the user by using captions. For example, the notebook computer may display the text content "Guangzhi think tank We have just counted" in the caption display area 3601.

FIG. 37(a)-1 and FIG. 37(a)-2 and FIG. 37(b)-1 and FIG. 37(b)-2 show another group of GUIs according to an embodiment of this application.

As shown in FIG. 37(a)-1 and FIG. 37(a)-2, the mobile phone may display a recording-to-text interface in Memo. The mobile phone detects voice content input by the user "Heat The re-change and invariant reflect people's livelihood demands". The mobile phone may convert the voice content into text content, to send the text content to the notebook computer. After receiving the text content, the notebook computer may display the text content to the user by using captions. In addition, the notebook computer may further start app 1 and display the text content in app 1. For example, the notebook computer may display the text content "Heat The re-change and invariant reflect people's livelihood demands" in a caption display area 3701, and display the text content in app 1. The user may edit the text content in app 1.

As shown in FIG. 37(b)-1 and FIG. 37(b)-2, when the mobile phone then detects voice content input by the user "Guangzhi think tank We have just counted", the mobile phone may convert the voice content into text content, to send the text content to the notebook computer. After receiving the text content, the notebook computer may display the text content to the user by using captions. In addition, the notebook computer may further display the text content after "Heat The re-change and invariant reflect people's livelihood demands" in app 1. For example, the notebook computer may display the text content "Guangzhi think tank We have just counted" in the caption display area 3701, and display "Heat The re-change and invariant reflect people's livelihood demands, Guangzhi think tank We have just counted" in app 1.

FIG. 38(a) to FIG. 38(d) show another group of GUIs according to an embodiment of this application.

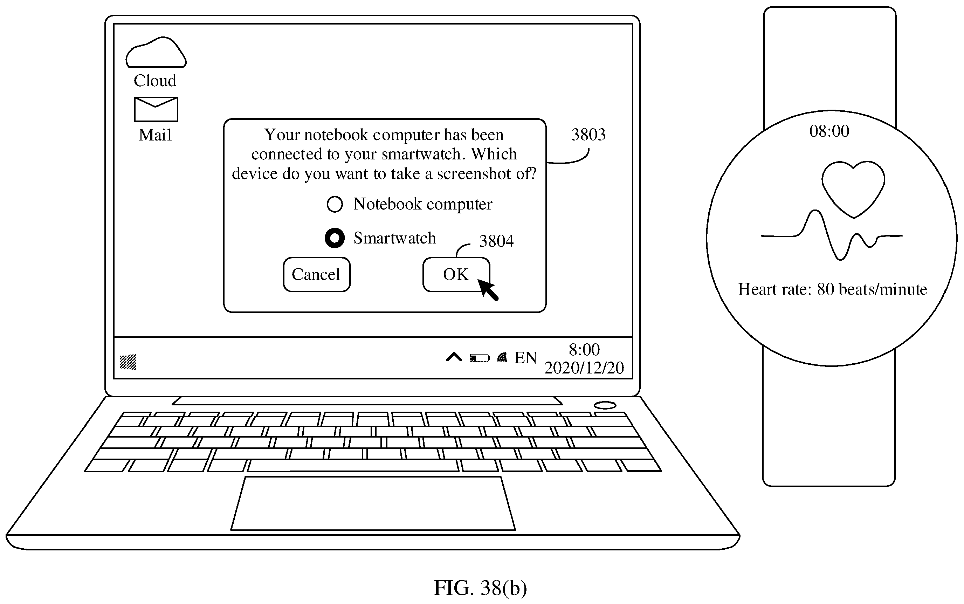

As shown in FIG. 38(a), a smartwatch displays a heart rate detection interface. After detecting that the user taps a start control, the notebook computer may display a function bar 3801. The function bar 3801 includes a screenshot control 3802. After detecting an operation that the user taps the control 3802, the notebook computer may display the GUI shown in FIG. 38(b).

As shown in FIG. 38(b), in response to detecting an operation that the user taps the control 3802, the notebook computer may display a prompt box 3803. The prompt box 3803 includes prompt information "Your notebook computer and your smartwatch are connected. Which device do you want to take a screenshot of?". In response to an operation that the user selects the smartwatch and taps a control 3804, the notebook computer may request currently displayed picture information from the smartwatch. The smartwatch may send the currently displayed picture information to the notebook computer.

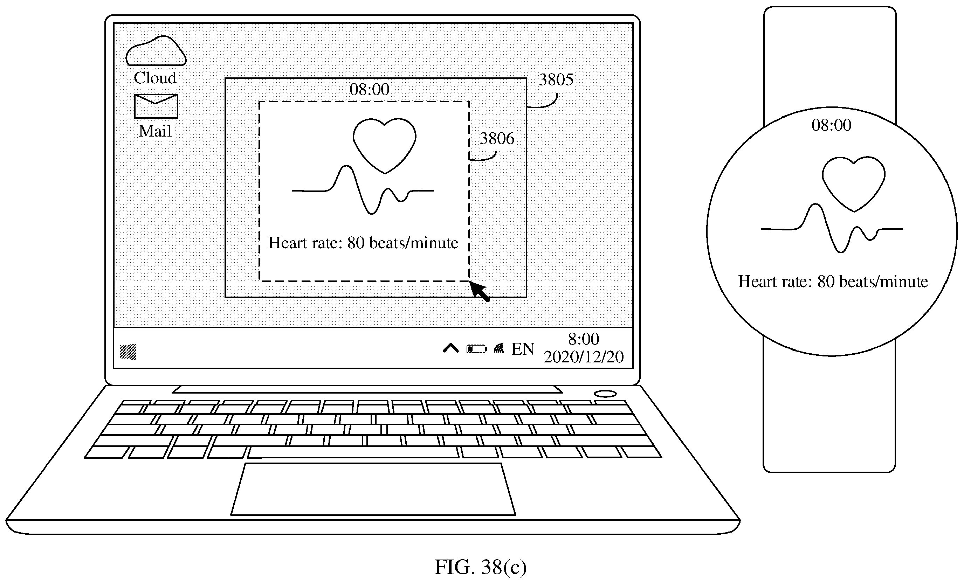

As shown in FIG. 38(c), in response to receiving the picture information of the smartwatch from the smartwatch, the notebook computer may display the current picture information of the smartwatch in a window 3805. In addition, the notebook computer may display a window 3806, and a size of the window 3806 may change with movement of a cursor. For example, the user may always click the left mouse button and move the mouse, to select image content that the user wants to capture. When the notebook computer detects an operation that the user releases the left mouse button, the notebook computer may capture image information in the window 3806.

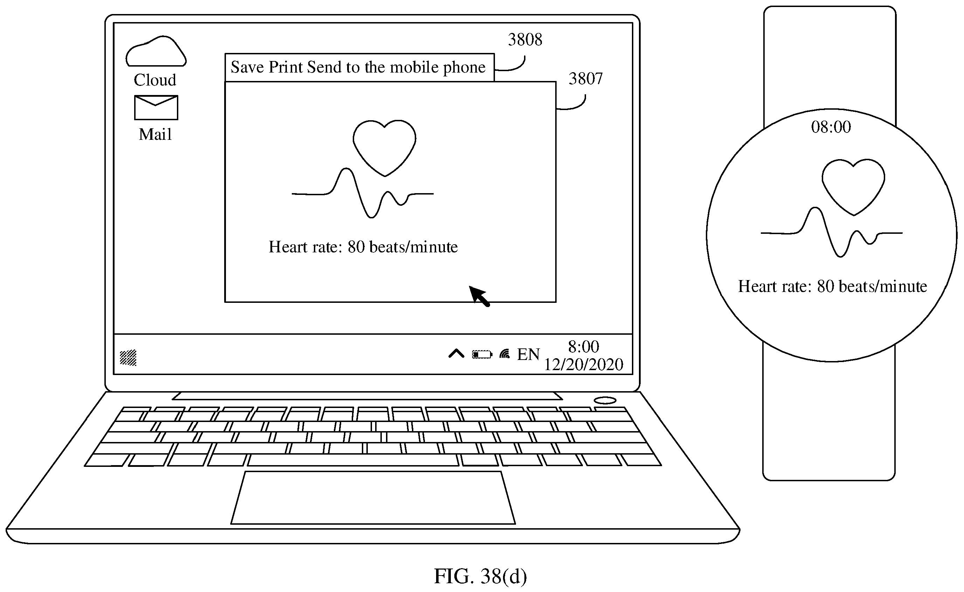

As shown in FIG. 38(d), the notebook computer may display the captured image information in a window 3807 and display a function bar 3808. The function bar 3808 includes functions such as saving, printing, and sending to the mobile phone.

In this embodiment of this application, for some devices (for example, the smartwatch or the smart television) that are inconvenient to take a screenshot, another device may be used to perform a screenshot operation. This helps the user obtain, in real time, image information that the user wants to obtain.

FIG. 39(a)-1 and FIG. 39(a)-2 to FIG. 39(c)-1 and FIG. 39(c)-2 show another group of GUIs according to an embodiment of this application.

As shown in FIG. 39(a)-1 and FIG. 39(a)-2, the mobile phone displays a home screen of the mobile phone, and the notebook computer displays a desktop of the notebook computer. After a connection (for example, Bluetooth, Wi-Fi, or NFC) is established between the mobile phone and the notebook computer, the notebook computer may display a control 3901. The control is used to turn on a camera of the mobile phone.

As shown in FIG. 39(b)-1 and FIG. 39(b)-2, when the notebook computer detects an operation that the user taps the control 3901, the notebook computer sends indication information to the mobile phone. The indication information indicates the mobile phone to turn on a camera (or indicates the mobile phone to turn on a rear-facing camera) and transmit, to the notebook computer, image information collected by the camera of the mobile phone. After receiving the indication information, the mobile phone may turn on the camera and collect the image information. After collecting the image information, the mobile phone may send the image information to the notebook computer. As shown in FIG. 39(b)-1 and FIG. 39(b)-2, after receiving the image information sent by the mobile phone, the notebook computer may display a preview window 3902 of the image information collected by the camera of the mobile phone and a function bar 3903. The function bar 3903 includes a video control 3904, a photo control 3905, and a camera switching control 3906.

As shown in FIG. 39(c)-1 and FIG. 39(c)-2, when the notebook computer detects an operation that the user taps the photo control 3904, the notebook computer may obtain image information in the window 3902 at a moment when the user taps the photo control 3904, and display, on the desktop, a thumbnail 3907 corresponding to the image information.

The user may view a full image by clicking the thumbnail 3907.

In this embodiment of this application, the notebook computer may invoke a camera of another device to collect image information, and the notebook computer can conveniently control and capture the image information. This omits an operation process of transmitting image information between devices by the user, and helps improve user experience.

FIG. 40(a)-1 and FIG. 40(a)-2 to FIG. 40(c)-1 and FIG. 40(c)-2 show another group of GUIs according to an embodiment of this application.

As shown in FIG. 40(a)-1 and FIG. 40(a)-2, the notebook computer displays a photo 4001, and the mobile phone displays a home screen of the mobile phone. When the notebook computer detects a right-click operation performed by the user on the photo 4001, the notebook computer may display a function bar 4002. The function bar 4002 includes functions such as sending a picture to the mobile phone, saving a picture as a file, copying a picture, viewing a picture in full screen, object recognition, shopping, translation, word extraction, and editing. The functions such as object recognition, shopping, translation, word extraction, and editing are functions of the mobile phone.

As shown in FIG. 40(b)-1 and FIG. 40(b)-2, when the notebook computer detects an operation that the user taps an editing function 4003, the notebook computer may display a function bar 4004. The function bar 4004 includes controls for adjusting exposure, shadow, contrast, brightness, and definition of the photo.

As shown in FIG. 40(c)-1 and FIG. 40(c)-2, when the notebook computer detects an operation that the user adjusts a shadow value of the photo 4001 to a first value, the notebook computer may send the photo 4001 and request information to the mobile phone. The request information is used to request the mobile phone to adjust the shadow value of the photo 4001 to the first value. The mobile phone may adjust the shadow value of the photo 4001 to the first value based on the request information, and send a photo obtained after the shadow adjustment to the notebook computer. As shown in FIG. 40(c)-1 and FIG. 40(c)-2, the notebook computer may display a photo 4005 obtained after the mobile phone performs shadow adjustment.

There are many types of retouching software in the mobile phone, which are simple and easy to operate. The notebook computer has retouching software such as PS, but learning costs of the user are relatively high. Therefore, the notebook computer invokes a retouching function of the mobile phone. This helps the user process a picture by using the retouching function of the mobile phone on the notebook computer, and helps improve user experience of performing retouching by the user.

FIG. 41(a) to FIG. 41(c) show another group of GUIs according to an embodiment of this application.

As shown in the GUI in FIG. 41(a), the GU is a video play interface of the mobile phone, and the video play interface includes a video play window 4101. When the mobile phone detects a preset operation (for example, touching and holding) of the user at any location in the window 4101, the mobile phone may display, at the location, a floating ball 4102, an icon 4103 corresponding to a smart sound box, an icon 4104 corresponding to the smart television, and an icon 4105 corresponding to a headset.

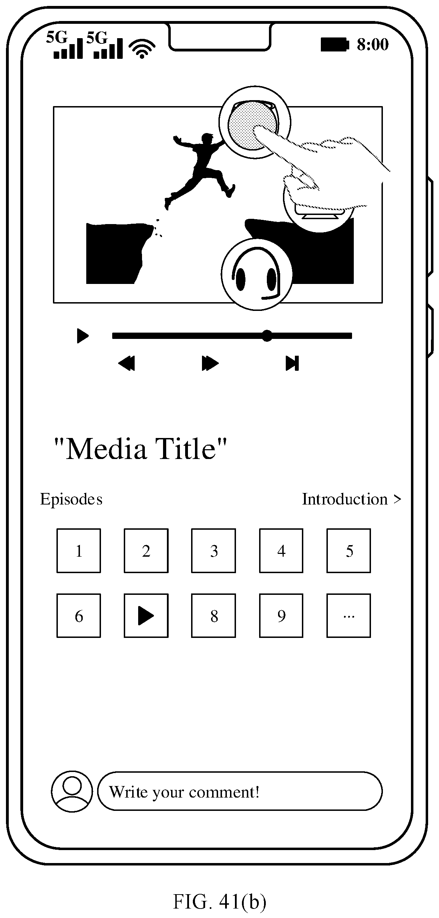

As shown in the GUI in FIG. 41(b), when the mobile phone detects an operation that the user taps the floating ball 4102 to slide, the mobile phone may control the floating ball 4102 to move along a moving track of a finger of the user. When the mobile phone detects that the user taps the floating ball and drags the floating ball to coincide with the icon 4103, the mobile phone may send audio corresponding to the video content to the smart sound box for playing.

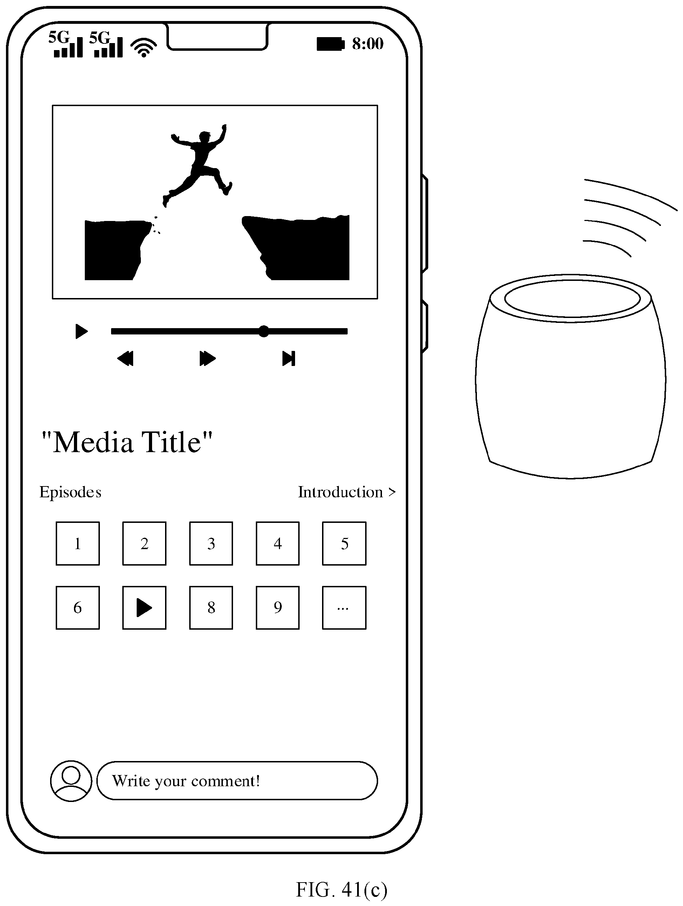

As shown in FIG. 41(c), the mobile phone may continue to play video content for the user, and the smart sound box may play audio corresponding to the video content for the user.

The smart sound box has relatively high sound quality, and the smart television has relatively high picture quality. Therefore, when watching a video by using the mobile phone, the user may send audio corresponding to the video to the smart sound box, so as to ensure that the user hears the audio of relatively high sound quality while watching the video.

In an embodiment, when the mobile phone detects that the user drags the floating ball to coincide with the icon 4104, the mobile phone may prompt the user to play, on the smart television, only audio corresponding to the video, only image information corresponding to the video, or image information and audio corresponding to the video. For example, when the mobile phone detects that the user chooses to play only the image information on the smart television, the mobile phone may send the image information corresponding to the video to the smart television, so that the smart television can play the image information and the mobile phone can continue to play the audio corresponding to the video. For example, when the mobile phone detects that the user chooses to play only the audio on the smart television, the mobile phone may send the audio corresponding to the video to the smart television, so that the smart television can play the audio and the mobile phone can continue to play the image information corresponding to the video.

With reference to FIG. 42 and FIG. 43, the following describes implementation processes of the GUIs shown in FIG. 5(a)-1 and FIG. 5(a)-2 to FIG. 5(d)-1 and FIG. 5(d)-2 to FIG. 10(a)-1 and FIG. 10(a)-2 and FIG. 10(b)-1 and FIG. 10(b)-2.

FIG. 42 is a schematic diagram of a system architecture according to an embodiment of this application. The system architecture includes a source end (source end) device 4210 (for example, the notebook computer in the foregoing embodiment) and a sink end (sink end) device 4220 (for example, the mobile phone in the foregoing embodiment). The source end device includes an application layer and an agent module. The application layer includes a picture application 4211, a document application 4212, and the like. The agent module includes a network connection module 4213, an event processing module 4214, and a user interface (user interface, UI) presentation module 4215. The network connection module 4213 is configured to establish a wireless connection (or a wired connection) to a network connection module 4221 of the sink end device. The event processing module 4214 is configured to generate a corresponding event and receive, from the network connection module 4214, a result of processing an event by the sink end device. The UI presentation module 4215 is configured to draw a window, to present the result of processing the event by the sink end device.

The sink end device includes a capability center and an agent module. The capability center stores capability information (for example, translation, object recognition, word extraction, shopping, and AI Voice) of the sink end device. The agent module includes the network connection module 4221 and an event processing module 4222. The network connection module 4221 is configured to establish a wireless connection (or a wired connection) to the network connection module 4213 of the source end device. The event processing module 4222 is configured to be responsible for invoking an interface of a corresponding capability in the capability center, and perform corresponding processing on event content sent by the source end device.

FIG. 43 is a schematic flowchart of a device capability invoking method 4300 according to an embodiment of this application. As shown in FIG. 43, the method 4300 may be performed by a source end device and a sink end device shown in FIG. 42. The method 4300 includes the following steps.

S4301: The source end device establishes a connection to the sink end device.

In an embodiment, the source end device and the sink end device may establish a wireless connection (for example, a Bluetooth, Wi-Fi, or NFC connection) by using respective network connection modules.

In an embodiment, if no connection is established between the source end device and the sink end device, the source end device may send a broadcast message to a surrounding device, and use the broadcast message to carry a communication address of the source end device.

For example, the broadcast message may be a Bluetooth low energy (Bluetooth low energy, BLE) data packet, and the source end device may use an access address (access address) field in the BLE data packet to carry a media access control (media access control, MAC) address of the source end device. After receiving the broadcast message, the network connection module 4221 of the sink end device may establish a Bluetooth connection to the source end device based on the MAC address carried in the broadcast message.

For example, the broadcast message may be a user datagram protocol (user datagram protocol, UDP) data packet, and the UDP data packet may carry an internet protocol (internet protocol, IP) address and a port number of the source end device (including a source port number and a destination port number, where the source port number is a port number used when the source end device sends data, and the destination port number is a port used when the source end device receives data). The IP address and the port number of the source end device may be carried in a UDP header of a data part of an IP datagram. After receiving the broadcast message, the network connection module 4221 of the sink end device may establish a transmission control protocol (transmission control protocol, TCP) connection to the source end device based on the IP address and the port number carried in the broadcast message.

S4302: The source end device requests capability information of the sink end device.

In an embodiment, before the source end device requests the capability information of the sink end device, the source end device may first determine whether the source end device and the sink end device are logged in to by using a same account, or the source end device may first determine whether the source end device and the sink end device are in a same family group.

For example, an account for logging in to the source end device is Huawei ID1. After a connection is established between the source end device and the sink end device, information about a device name of the sink end device may be obtained. The source end device may request a cloud server to determine whether a device corresponding to the device name is a device with Huawei ID1. If the cloud server determines that the sink end device is a device with Huawei ID1, the source end device requests the capability information of the sink end device.

For example, an account for logging in to the source end device is Huawei ID1, and an account for logging in to the sink end device is Huawei ID2. After a connection is established between the source end device and the sink end device, information about a device name of the sink end device may be obtained. The source end device may request a cloud server to determine whether a Huawei ID for logging in to a device corresponding to the device name and Huawei ID1 are in a same family group. If the cloud server determines that the Huawei ID (for example, Huawei ID2) for logging in to the device corresponding to the device name and Huawei ID1 are in a same family group, the source end device requests the capability information of the sink end device. It should be understood that, in this embodiment of this application, the user may invite an account (for example, Huawei ID 2) of another family member by using an account (for example, Huawei ID 1) for logging in to a device, so that the account of the user and the account of the another family member form a family group. After the family group is formed, the account of the user may share information with the account of the another family member. For example, the account of the user may obtain information such as a device name, a device type, and an address of the user from the account of the another family member. For another example, if the user purchases a member of an application, the another family member may obtain a membership of the user. For another example, members in a same family group may share storage space of a cloud server.

In an embodiment, that the source end device requests capability information of the sink end device includes: The source end device sends first request information to the sink end device, where the first request information is used to request to obtain the capability information of the sink end device.

For example, the source end device establishes a Bluetooth connection to the sink end device. The source end device sends a BLE data packet to the sink end device. The BLE data packet may carry first request information, and the first request information is used to request the capability information of the sink end device. The BLE data packet includes a protocol data unit (protocol data unit, PDU), and the first request information may be carried in a service data (service data) field in the PDU, or may be carried in a manufacturer specific data (manufacturer specific data) field in the PDU. For example, a payload (payload) of the service data field may include a plurality of bits. The plurality of bits include an extensible bit. The source end device and the sink end device may agree on content of an extensible bit. When an extensible bit is 1, the sink end device may learn that the source end device needs to request the capability information of the sink end device. After receiving the BLE data packet, the network connection module 4221 of the sink end device may send the BLE data packet to the event processing module 4222. The event processing module 4222 determines, by using the first request information in the BLE data packet, that the source end device expects to obtain the capability information of the sink end device, and the sink end device may notify the source end device of the capability information in the capability center of the sink end device.

If the capability center of the sink end device includes capabilities such as translation, object recognition, word extraction, and AI Voice, the event processing module 4222 of the sink end device may use the BLE data packet to carry the capability information. The indication information may be carried in a service data field in the PDU, or may be carried in a manufacturer specific data field in the PDU. For example, a payload of the service data field may include a plurality of bits. The plurality of bits include an extensible bit. The source end device and the sink end device may agree on content of a plurality of extensible bits. For example, the source end device and the sink end device may agree on content of four bits. When the first bit is 1, it indicates that the sink end device has a translation function (when the first bit is 0, it indicates that the sink end device does not have a translation function). When the second bit is 1, it indicates that the sink end device has an object recognition function (when the second bit is 0, it indicates that the sink end device does not have an object recognition function). When the third bit is 1, it indicates that the sink end device has a word extraction function (when the third bit is 0, it indicates that the sink end device does not have a word extraction function). When the fourth bit is 1, it indicates that the sink end device has an AI Voice function (when the fourth bit is 0, it indicates that the sink end device does not have an AI Voice function). After receiving the BLE data packet, the network connection module 4213 of the source end device may forward the BLE data packet to the event processing module 4214, so that the event processing module 4214 determines the capability information of the sink end device. After determining the capability information of the sink end device, the event processing module 4214 may notify the UI presentation module 4215 of the capability information.

In this embodiment of this application, after the sink end device receives the first request information, the sink end device may search for package name information of an application installed at an application layer. For example, the sink end device finds a package name 1 of an application 1, a package name 2 of an application 2, and a package name 3 of an application 3. After finding the package names of all the applications in the applications, the sink end device may query a list of functions that can be shared by the sink end device. For example, Table 2 shows a list of functions that can be shared by the sink end device.

Table 2

| Package name of an application that can be shared | Function corresponding to an application |
|---|---|
| Package name 1 | Translation |
| Package name 2 | Object recognition |

After querying Table 2, the sink end device may learn that package names of applications that can be currently shared by the sink end device are applications corresponding to the package name 1 and the package name 2, which respectively correspond to the translation function and the object recognition function. In this case, the sink end device may send, to the source end device, information about a function that can be shared by the sink end device. Although the sink end device includes the application 3, because the sink end device does not support sharing, the sink end device may not share a function corresponding to the application with the source end device.

It should be understood that Table 2 shown above is merely an example. This is not limited in this embodiment of this application.

For example, the source end device establishes a TCP connection to the sink end device. The source end device sends a TCP data packet to the sink end device. The TCP data packet may carry first request information, and the first request information is used to request the capability information of the sink end device. The TCP data packet includes a TCP header and a TCP data part, and the first request information may be carried in the TCP data part. For example, the TCP data part may include a plurality of bits. The plurality of bits include an extensible bit. The source end device and the sink end device may agree on content of an extensible bit. When an extensible bit is 1, the sink end device may learn that the source end device needs to request the capability information of the sink end device. After receiving the TCP data packet, the network connection module 4221 of the sink end device may send the BLE data packet to the event processing module 4222. The event processing module 4222 determines, by using the first request information in the TCP data packet, that the source end device expects to obtain the capability information of the sink end device, and the sink end device may notify the source end device of the capability information in the capability center of the sink end device.

If the capability center of the sink end device includes capabilities such as translation, object recognition, word extraction, and AI Voice, the event processing module 4222 of the sink end device may use the TCP data packet to carry the capability information. The indication information may be carried in a TCP data part in the TCP data packet. For example, the TCP data part may include a plurality of bits. The plurality of bits include an extensible bit. The source end device and the sink end device may agree on content of a plurality of extensible bits. For example, the source end device and the sink end device may agree on content of four bits. When the first bit is 1, it indicates that the sink end device has a translation function (when the first bit is 0, it indicates that the sink end device does not have a translation function). When the second bit is 1, it indicates that the sink end device has an object recognition function (when the second bit is 0, it indicates that the sink end device does not have an object recognition function). When the third bit is 1, it indicates that the sink end device has a word extraction function (when the third bit is 0, it indicates that the sink end device does not have a word extraction function). When the fourth bit is 1, it indicates that the sink end device has an AI Voice function (when the fourth bit is 0, it indicates that the sink end device does not have an AI Voice function). After receiving the TCP data packet, the network connection module 4213 of the source end device may forward the TCP data packet to the event processing module 4214, so that the event processing module 4214 determines the capability information of the sink end device. After determining the capability information of the sink end device, the event processing module 4214 may notify the UI presentation module 4215 of the capability information.

In an embodiment, the UI presentation module 4215 may display a function list on a display of the source end device, to present the capability information of the sink end device in the function list. For example, as shown in FIG. 9(a)-1 and FIG. 9(a)-2, the UI presentation module 4215 may draw a function list 901. The function list 901 includes various capabilities (for example, functions such as AI Voice, shopping, translation, word extraction, and object recognition) of a mobile phone.

In an embodiment, after the source end device detects a preset operation of a user, the UI presentation module 4215 may display the capability information of the sink end device to the user. For example, as shown in FIG. 6(b)-1 and FIG. 6(b)-2, when a notebook computer detects a right-click operation performed by the user on a picture 601, the UI presentation module 4215 may draw a function list 602. The function list 602 includes various capabilities (for example, object recognition, shopping, translation, and word extraction) of the mobile phone.

In an embodiment, the source end device may establish a correspondence between a content type and an interaction mode selected by the user and the displayed capability information of the sink end. For example, Table 3 shows a correspondence between a content type and an interaction mode selected by the user and the displayed capability information of the sink end.

**Table 3**

| Content type | Interaction mode | Displayed capability information of the sink end |
|---|---|---|
| Picture | Right-click to display a function list on the picture | Shopping, object recognition, translation, word extraction... |
| Text | Right-click to display a function list after the text is selected | Translation, word extraction... |
| File | Right-click to display a function list on the file | Full-text translation, word extraction... |
| ... | ... | ... |

The source end device may display different capability information based on content selected by the user. For example, in the GUI shown in FIG. 5(b)-1 and FIG. 5(b)-2, after detecting that the user selects content of original text and performs a right-click operation, the notebook computer may display the word extraction and translation functions in the function list 501, but does not display the shopping and object recognition functions. For another example, in the GUI shown in FIG. 6(b)-1 and FIG. 6(b)-2, after detecting that the user performs a right-click operation on the picture 601, the notebook computer may display the object recognition, shopping, translation, and word extraction functions in the function list 602.

S4303: The source end device detects a first operation of the user, and sends first content and second request information to the sink end device, where the second request information is used to indicate the sink end device to perform corresponding processing on the first content.

In an embodiment, that the source end device detects a first operation of the user, and sends first content and second request information to the sink end device includes:

When detecting an operation that the user selects the first content, the source end device displays a function list. The function list includes one or more functions, and the one or more functions are capability information obtained by the source end device from the sink end device.

In response to detecting an operation that the user selects a first function from the one or more functions, the source end device sends the first content and the second request information to the sink end device. The second request information is used to request the sink end device to process the first content by using the first function.

For example, as shown in FIG. 5(b)-1 and FIG. 5(b)-2, after detecting that the user selects a piece of English (for example, Today is a...first), the notebook computer may display the function list 501. Translation and word extraction functions in the function list 501 are capability information obtained by the notebook computer from the mobile phone. When the notebook computer detects that the user selects the translation function, the notebook computer may send the English content and request information to the mobile phone. The request information is used to request the mobile phone to translate the English content.

In an embodiment, before the source end device detects the first operation of the user, and sends the first content and the second request information to the sink end device, the method further includes: The source end device displays one or more functions, where the one or more functions are capability information obtained by the source end device from the sink end device, and the one or more functions include a first function.

That the source end device detects a first operation of the user, and sends first content and second request information to the sink end device includes:

In response to an operation that the user selects the first function from the one or more functions, the source end device detects content selected by the user.

In response to an operation that the user selects the first content, the source end device sends the first content and the second request information to the sink end device, where the second request information is used to request the sink end device to process the first content by using the first function.

For example, as shown in FIG. 9(a)-1 and FIG. 9(a)-2, after the notebook computer obtains capability information (for example, including AI Voice, shopping, translation, word extraction, and object recognition functions) of the mobile phone from the mobile phone, the notebook computer may display the function list 901. The function list 901 includes the capability information of the mobile phone. Refer to FIG. 9(b)-1 and FIG. 9(b)-2. In response to detecting an operation that the user selects the shopping function 902 from the function list 901, the notebook computer may start to detect the selected content. As shown in FIG. 9(c)-1 and FIG. 9(c)-2, when the notebook computer detects that the user selects content in the window 903, the notebook computer may send the content in the window 903 and request information to the mobile phone. The request information is used to indicate to perform an object recognition operation on image information in the window 903.

In an embodiment, before the source end device detects the first operation of the user, and sends the first content and the second request information to the sink end device, the method further includes: The source end device displays one or more functions, where the one or more functions are capability information obtained by the source end device from the sink end device, and the one or more functions include a first function.

That the source end device detects a first operation of the user, and sends first content and second request information to the sink end device includes:

In response to an operation that the user selects the first content and selects the first function, the source end device sends the first content and the second request information to the sink end device, where the second request information is used to request the sink end device to process the first content by using the first function.

For example, as shown in FIG. 9(a)-1 and FIG. 9(a)-2, after the notebook computer obtains capability information (for example, including AI Voice, shopping, translation, word extraction, and object recognition functions) of the mobile phone from the mobile phone, the notebook computer may display the function list 901. The function list 901 includes the capability information of the mobile phone. When the notebook computer detects that the user selects a piece of original text content and clicks a translation function in the function list 901, the notebook computer may send the selected English content and request information to the mobile phone. The request information is used to request the mobile phone to translate the English content.

In an embodiment, the capability information obtained by the source end device from the sink end device includes one or more functions, the one or more functions include a first function, and that the source end device sends first content and second request information to the sink end device after detecting a first operation of a user includes:

In response to detecting an operation that the user selects the first content and taps a first button, the source end device sends the first content and the second request information to the sink end device, where the second request information is used to request the sink end device to process the first content by using the first function, and the first button is associated with the first function.

For example, the user may set a mapping relationship between the first function and the first button. For example, the user may associate the translation function with a key Ctrl+T on a keyboard.

S4304: In response to receiving the first content and the second request information, the sink end device processes the first content and sends a processing result of the first content to the source end device.

The following uses an example in which the source end device is a notebook computer and the sink end device is a mobile phone to describe, with reference to the foregoing GUI, specific implementation of sending the first content and the second request information by the source end.

For the GUI shown in FIG. 5(a)-1 and FIG. 5(a)-2 to FIG. 5(d)-1 and FIG. 5(d)-2, refer to the following:

When the notebook computer detects that the English content is selected and detects that the user clicks the right mouse button, the UI presentation module 4215 of the notebook computer may draw the function list 501. When the notebook computer detects an operation that the user selects the translation function 502, the event processing module 4214 of the notebook computer may generate a TCP data packet. A TCP data part of the TCP data packet may include original text content and type information (for example, text or a picture) of the original text content. In this embodiment of this application, a function of the second request information may be implemented by using the type information of the original text content. For example, after learning that the type information of the original text content is text, the mobile phone may learn that the notebook computer expects to perform translation or word extraction on the original text content. Alternatively, the TCP data packet may carry only original text content. After obtaining the original text content, the mobile phone may determine type information of the original text content, to determine, based on the type information (for example, text) of the original text content, that the notebook computer expects to perform translation or word extraction on the original text content.

In an embodiment, the event processing module 4214 may use a TCP data part of the TCP data packet to carry indication information, where the indication information indicates to perform translation or word extraction on the original content. For example, the TCP data part may include a plurality of bits. The plurality of bits include an extensible bit. The notebook computer and the mobile phone may agree on content of an extensible bit. When an extensible bit is 1, the mobile phone may learn that the notebook computer needs to translate the original text content. When the extensible bit is 0, the mobile phone may learn that the notebook computer needs to perform word extraction on the original text content.

The event processing module 4214 may encode the content selected by the user in an encoding mode such as GBK, ISO8859-1, or Unicode, and use one or more extensible bits in the TCP data part to carry information obtained after the encoding. After receiving the TCP data packet, the network connection module 4221 may send the TCP data packet to the event processing module 4222, so that the event processing module 4222 decodes the original text content and the type information of the original text content. For example, after obtaining the original text content (for example, Today is a...first), the type information (for example, text) of the original text content, and the indication information (the extensible bit is 1) indicating the mobile phone to translate the original text content, the event processing module 4222 of the mobile phone may invoke an interface of the translation function in the capability center to translate the original text content.

After obtaining corresponding translation content, the event processing module 4222 may generate a TCP data packet, and use a TCP data part of the TCP data packet to carry the translation content. The event processing module 4222 may encode the translation content in an encoding mode such as GBK, ISO8859-1, or Unicode, and use one or more extensible bits in the TCP data part to carry information obtained after the encoding. The network connection module 4221 sends the information to the notebook computer. After receiving the TCP data packet, the network connection module 4213 of the notebook computer may send the TCP data packet to the event processing module 4214, and the event processing module 4214 may perform decoding by using a corresponding decoding technology, to obtain the translation content.

It should be understood that the foregoing process in which the source end device sends the first content and the second request information to the sink end device may be implemented by using a TCP data packet, or may be implemented by using a BLE data packet. For an implementation process of the BLE data packet, refer to the description in the foregoing embodiment. For brevity, details are not described herein again.

For the GUI shown in FIG. 6(a)-1 and FIG. 6(a)-2 to FIG. 6(c)-1 and FIG. 6(c)-2, refer to the following:

When the notebook computer detects an operation that the user clicks the right mouse button on the picture 601, the UI presentation module 4215 of the notebook computer may draw the function list 602. When the notebook computer detects an operation that the user selects the object recognition function 602, the event processing module 4214 of the notebook computer may generate a TCP data packet. A TCP data part of the TCP data packet may include image content of the picture 601 and type information of the image content. In this embodiment of this application, a function of the second request information may be implemented by using the type information of the first content. For example, after learning that the type information of the first content is an image, the mobile phone may learn that the notebook computer expects to perform object recognition or shopping on the image. Alternatively, the TCP data packet may carry only image content of the picture 601. After obtaining the image content of the picture 601, the mobile phone may determine the type information of the first content, to determine, by using the type information (for example, an image) of the first content, that the notebook computer expects to perform object recognition, shopping, translation, or word extraction on the first content.

In an embodiment, the event processing module 4214 may use a TCP data part of the TCP data packet to carry indication information, where the indication information indicates to perform object recognition, shopping, translation, or word extraction on the image content of the picture 601. For example, the TCP data part may include a plurality of bits. The plurality of bits include an extensible bit. The notebook computer and the mobile phone may agree on content of two extensible bits. When the two extensible bits are 00, the mobile phone may learn that the notebook computer needs to perform object recognition on the image content of the picture 601. When the extensible bits are 01, the mobile phone may learn that the notebook computer needs to query a shopping link of an object on the image content of the picture 601. When the extensible bits are 10, the mobile phone may learn that the notebook computer requests to translate the image content of the picture 601. When the extensible bits are 11, the mobile phone may learn that the notebook computer requests to perform word extraction on the image content of the picture 601.

The event processing module 4214 may encode the image content of the picture 601 by using an image encoding technology, and use one or more extensible bits in the TCP data part to carry information obtained after the encoding. After receiving the TCP data packet, the network connection module 4221 may send the TCP data packet to the event processing module 4222, so that the event processing module 4222 decodes the image content of the picture 601 by using an image decoding technology. For example, after obtaining the image content of the picture 601, the type information (for example, an image) of the image content, and the indication information (the extensible bits are 00) indicating the mobile phone to perform object recognition on the image content, the event processing module 4222 of the mobile phone may invoke an interface of the object recognition function in the capability center to perform object recognition on the image content.

After obtaining an object recognition result (for example, the object recognition result includes a text description of an object in the image, a thumbnail of the object, and a shopping link of the object), the event processing module 4222 may generate a TCP data packet, and use a TCP data part of the TCP data packet to carry the object recognition content. The event processing module 4222 may encode information such as the text description and the shopping link of the object in the image in an encoding mode such as GBK, ISO8859-1, or Unicode, encode the thumbnail of the object by using an image encoding technology, and use one or more extensible bits in the TCP data part to carry information obtained after the encoding. The network connection module 4221 sends the information to the notebook computer. After receiving the TCP data packet, the network connection module 4213 of the notebook computer may send the TCP data packet to the event processing module 4214, and the event processing module 4214 may perform decoding by using a corresponding decoding technology, to obtain the object recognition result.

For the GUI shown in FIG. 7(a)-1 and FIG. 7(a)-2 to FIG. 7(c)-1 and FIG. 7(c)-2, refer to the following:

For a process of sending the photo 1 by the event processing module 4214, refer to the description of the foregoing embodiment. For brevity, details are not described herein again.

A difference from the implementation process shown in FIG. 6(a)-1 and FIG. 6(a)-2 to FIG. 6(c)-1 and FIG. 6(c)-2 lies in that, in FIG. 6(a)-1 and FIG. 6(a)-2 to FIG. 6(c)-1 and FIG. 6(c)-2, bit values carried by the event processing module 4214 in two extensible bits of the TCP data part are 00 (indicating that the mobile phone is requested to perform object recognition on the image content). However, in FIG. 7(a)-1 and FIG. 7(a)-2 to FIG. 7(c)-1 and FIG. 7(c)-2, bit values carried by the event processing module 4214 in two extensible bits of the TCP data part are 11 (indicating that the mobile phone is requested to perform word extraction on the image content).

The event processing module 4222 of the mobile phone decodes the image content of the picture 601 by using an image decoding technology. For example, after obtaining the image content of the photo 1, the type information (for example, an image) of the image content, and the indication information (the extensible bits are 00) indicating the mobile phone to perform word extraction on the image content, the event processing module 4222 of the mobile phone may invoke an interface of the word extraction function in the capability center to perform word extraction on the image content. For a specific word extraction process, refer to the description in the foregoing embodiment. For brevity, details are not described herein again.

It should be further understood that a content implementation process of the GUI shown in FIG. 8(a)-1 and FIG. 8(a)-2 to FIG. 8(c)-1 and FIG. 8(c)-2 is similar to that in FIG. 5(a)-1 and FIG. 5(a)-2 to FIG. 5(d)-1 and FIG. 5(d)-2. A difference lies in that the first content sent by the notebook computer to the mobile phone in FIG. 5(a)-1 and FIG. 5(a)-2 to FIG. 5(d)-1 and FIG. 5(d)-2 is original text content selected by the notebook computer, and a translation result returned by the mobile phone may include translation content corresponding to the selected original text content. However, the first content sent by the notebook computer to the mobile phone in FIG. 8(a)-1 and FIG. 8(a)-2 to FIG. 8(c)-1 and FIG. 8(c)-2 is original text content in the entire document, and a result returned by the mobile phone may include translation content corresponding to the original text content in the entire document.

It should be further understood that an implementation process of the GUI shown in FIG. 9(a)-1 and FIG. 9(a)-2 to FIG. 9(e)-1 and FIG. 9(e)-2 is similar to that in FIG. 6(a)-1 and FIG. 6(a)-2 to FIG. 6(c)-1 and FIG. 6(c)-2. A difference lies in that the first content sent by the notebook computer to the mobile phone in FIG. 6(a)-1 and FIG. 6(a)-2 to FIG. 6(c)-1 and FIG. 6(c)-2 is the picture 601 at a location of a cursor of the notebook computer, and second indication information indicates the mobile phone to perform object recognition on the first content. However, the first content sent by the notebook computer to the mobile phone in FIG. 9(a)-1 and FIG. 9(a)-2 to FIG. 9(e)-1 and FIG. 9(e)-2 is image content displayed in a window 903 displayed by the notebook computer, and second indication information indicates to query a shopping link of an object corresponding to the image content. In addition, as shown in FIG. 6(b)-1 and FIG. 6(b)-2, the notebook computer displays the function list 602 after detecting that the user selects the picture 601 and clicks the right mouse button. When the notebook computer detects that the user selects an object recognition function, the notebook computer may send the picture 601 and request information to the mobile phone, where the request information is used to request the mobile phone to perform object recognition on the picture 601. In FIG. 9(b)-1 and FIG. 9(b)-2 and FIG. 9(c)-1 and FIG. 9(c)-2, the notebook computer first displays the function list 901 before selecting content, and after detecting that the user selects the shopping function 902 from the function list 901, the notebook computer starts to detect the content selected by the user. When the notebook computer detects that the user selects image information in the window 903, the notebook computer may send the image information in the window 903 and request information to the mobile phone, where the request information is used to request the mobile phone to query a shopping link of an object corresponding to the image information.

For the GUI shown in FIG. 10(a)-1 and FIG. 10(a)-2 and FIG. 10(b)-1 and FIG. 10(b)-2, refer to the following:

When the notebook computer detects an operation that the user selects an AI Voice function 1002, the notebook computer may receive, by using a microphone, a voice instruction input by the user, and may generate a TCP data packet by using the event processing module 4214. A TCP data part of the TCP data packet may include the voice instruction and type information of the voice instruction. In this embodiment of this application, a function of the second request information may be implemented by using the type information of the first content. For example, after learning that the type information of the first content is a voice, the mobile phone may learn that the notebook computer expects to process a user intent corresponding to the voice. Alternatively, the TCP data packet may carry only a voice instruction. After obtaining the voice instruction, the mobile phone may determine the type information of the first content, to determine, by using the type information (for example, a voice) of the first content, that the notebook computer expects the mobile phone to process a user intent corresponding to the voice.

In an embodiment, the event processing module 4214 may use a TCP data part of the TCP data packet to carry indication information, where the indication information indicates to process a user intent corresponding to the voice instruction. For example, the TCP data part may include a plurality of bits. The plurality of bits include an extensible bit. The notebook computer and the mobile phone may agree on content of an extensible bit. When the extensible bit is 1, the mobile phone may learn that the notebook computer expects the mobile phone to process the user intent corresponding to the voice instruction.

The event processing module 4214 may encode the voice instruction by using an audio encoding technology, and use one or more extensible bits in the TCP data part to carry information obtained after the encoding. After receiving the TCP data packet, the network connection module 4221 of the mobile phone may send the TCP data packet to the event processing module 4222, so that the event processing module 4222 decodes the voice instruction by using an audio decoding technology. For example, after obtaining the voice instruction, the type information (for example, a voice) of the voice instruction, and the indication information (the extensible bit is 1) indicating the mobile phone to process the user intent corresponding to the voice instruction, the event processing module 4222 of the mobile phone may invoke an interface of the AI Voice function in the capability center to process the user intent corresponding to the voice instruction.

After obtaining a processing result of the user intent, the event processing module 4222 may generate a TCP data packet, and use a TCP data part of the TCP data packet to carry the processing result.

For example, if the processing result is text, the event processing module 4222 may encode the text in an encoding mode such as GBK, ISO8859-1, or Unicode, and use one or more extensible bits in the TCP data part to carry information obtained after the encoding. The network connection module 4221 sends the information to the notebook computer. After receiving the TCP data packet, the network connection module 4213 of the notebook computer may send the TCP data packet to the event processing module 4214, and the event processing module 4214 may perform decoding by using a corresponding decoding technology, to obtain the processing result. The notebook computer may convert the text into voice content by using the ASR module, to prompt the user with the voice content.

For another example, if the processing result is a voice, the event processing module 4222 may encode the voice in an audio encoding mode, and use one or more extensible bits in the TCP data part to carry information obtained after the encoding. The network connection module 4221 sends the information to the notebook computer. After receiving the TCP data packet, the network connection module 4213 of the notebook computer may send the TCP data packet to the event processing module 4214, and the event processing module 4214 may perform decoding by using a corresponding decoding technology, to obtain the processing result. In this way, the notebook computer may prompt the user with the voice content.

S4305: The source end device prompts the user with the processing result of the first content.

For example, as shown in FIG. 5(c)-1 and FIG. 5(c)-2, the UI presentation module 4215 of the notebook computer may draw a window 503, and display translation content by using the window 503.

For example, as shown in FIG. 5(d)-1 and FIG. 5(d)-2, the UI presentation module 4215 of the notebook computer may draw a window on original text content, to display the translation content in the window.

For example, as shown in FIG. 6(c)-1 and FIG. 6(c)-2, the UI presentation module 4215 of the notebook computer may draw a window 604, and display information about an object, thumbnail information of the object, and a corresponding shopping link in the window 604.

For example, as shown in FIG. 7(c)-1 and FIG. 7(c)-2, the UI presentation module 4215 of the notebook computer may draw a window 704, and display a word segmentation result of content on the photo 1 in the window 704.

For example, as shown in FIG. 10(b)-1 and FIG. 10(b)-2, the notebook computer may prompt, by using a speaker, the user with "It's cloudy and sunny today with the temperature from 10°C to 22°C".

In this embodiment of this application, the user can use a function of the second electronic device on the first electronic device, so as to extend a capability boundary of the first electronic device. This helps conveniently and efficiently complete a relatively difficult task of the first electronic device, and helps improve user experience.

In an embodiment, the source end device is a notebook computer, and the sink end device is a mobile phone. For example, as shown in FIG. 40(c)-1 and FIG. 40(c)-2, when the notebook computer detects an operation that the user adjusts a shadow value of the photo 4001, the notebook computer may send the photo 4001 and request information to the mobile phone. The request information includes the shadow value adjusted by the user and detected by the notebook computer, and the request information is used to request the mobile phone to retouch the photo 4001 based on the shadow value by using a retouching function.

For example, the photo 4001 and the request information may be carried in a BLE data packet. The photo 4001 and the request information may be carried in a service data field in a PDU, or may be carried in a manufacturer specific data field in a PDU. For example, a payload of the service data field may include a plurality of bits. The plurality of bits include an extensible bit. The first electronic device and the second electronic device may agree on content of an extensible bit. The notebook computer may encode the photo 4001 by using an image encoding technology, and use a plurality of extensible bits to carry encoded data. The notebook computer and the mobile phone may further agree on a plurality of extensible bits to indicate a parameter adjusted by the user and detected by the notebook computer. For example, if some extensible bits are 001, it indicates that the notebook computer detects that the user adjusts a shadow value of the photo. For example, if some extensible bits are 010, it indicates that the notebook computer detects that the user adjusts brightness of the photo. For example, if some extensible bits are 011, it indicates that the notebook computer detects that the user adjusts contrast of the photo.

The notebook computer and the mobile phone may further agree on a plurality of extensible bits to represent a specific parameter value. For example, if some extensible bits are 001, it indicates that a parameter value adjusted by the user and detected by the notebook computer is 1. For example, if some extensible bits are 010, it indicates that a parameter value adjusted by the user and detected by the notebook computer is 2. For example, if some extensible bits are 011, it indicates that a parameter value adjusted by the user and detected by the notebook computer is 3.

After receiving the BLE data packet, the mobile phone may obtain the photo 4001 and request information. The mobile phone may learn of parameters that are adjusted by the user and parameter values of these adjusted parameters by using the request information. The mobile phone may adjust the photo 4001 based on the request information. After adjusting the photo 4001, the mobile phone may send the adjusted photo 4005 to the notebook computer. It should be understood that, for a process in which the mobile phone sends the adjusted photo 4005 to the notebook computer, refer to the description in the foregoing embodiment. For brevity, details are not described herein again.

As shown in FIG. 40(c)-1 and FIG. 40(c)-2, in response to receiving the photo 4005, the notebook computer may display the photo 4005 on the desktop, or the notebook computer may replace the previously displayed photo 4001 with the photo 4005.

With reference to FIG. 44 to FIG. 47, the following describes implementation processes of the GUIs shown in FIG. 11(a)-1 to FIG. 11(a)-3 to FIG. 11(e) to FIG. 18(a)-1 to FIG. 18(a)-3 to FIG. 18(c)-1 to FIG. 18(c)-3.

FIG. 44 shows a process of interaction between a device A (for example, a mobile phone) and a device B (for example, a smart television) according to an embodiment of this application. Refer to FIG. 44. When detecting a preset operation (for example, a two-finger pressing operation) of the user on the display, the device A triggers an interrupt and notifies a touch driver (touch driver) of a kernel layer to obtain touch panel (touch panel, TP) data. After receiving the interrupt, the touch driver obtains the TP data, converts the data into an input (input) event, and reports the event. An input module (InputHal) in a system library (hardware abstraction layer (hardware abstraction layer, HAL)) reports the TP data to an input (Input) service at an application framework layer, and the input service continues to send the TP data to a mobile phone recognition service. The gesture recognition service determines a gesture type of the user based on the TP data. If the gesture recognition service determines, by using the TP data, that the gesture is a preset gesture (for example, a two-finger pressing operation), the gesture recognition service continues to notify a multi-terminal management service to determine whether the device A establishes a connection to another device. If the multi-terminal management service determines that the device A establishes a connection to the device B, the device A sends an instruction to the device B (for example, the device A sends the instruction to the device B by using a short-distance wireless communications technology). The instruction may be used to instruct the device B to capture currently displayed image information, or the instruction is used to instruct the device B to capture a video cache resource in a time period.

After receiving the instruction, the device B may capture the currently displayed image information (for example, the device B performs a screenshot operation to obtain a picture), or the device B may obtain the video cache resource in the time period from a video cache service. The device B sends the corresponding image information or video cache resource to the device A.

If the device A receives the image information sent by the device B, the device A may recognize the image information by using an OCR image recognition module at the application layer, and process the recognition result by using a capability in the capability center. The device A may display a processing result on the display. Further, the device A may further send the processing result to a UI presentation module of the device B, so that the device B displays the processing result on the display.

If the device A receives the video cache resource sent by the device B, the device A may first convert the video cache resource into image information, to recognize the image information by using the OCR image recognition module. For a subsequent process, refer to the foregoing description. For brevity, details are not described herein again.

FIG. 45 shows a process in which a device A converts a video resource into image information. It should be understood that, in this embodiment of this application, the device A may convert the video cache resource received from the device B into the image information, or the device B may obtain the video cache resource in the time period from the video cache service, convert the video cache resource into the image information, and send the image information to the device A. The process of converting the video resource into the image information includes the following steps:

S4501: Obtain the video cache resource (FFmpegFrameGrabber).

S4502: Start to convert the video cache resource (FFmpegFrameGrabber:start).

S4503: Obtain a total quantity of frames (FFmpegFrameGrabber:getLengthInFrames) of the video cache resource.

S4504: Set a frame quantity extraction flag Flag. For example, the flag Flag may be 10 frames per second, 20 frames per second, or 30 frames per second.

S4505: Obtain a video frame Frame (FFmpegFrameGrabber:grabImage) based on the flag Flag.

S4506: Convert the video frame Frame into a picture (Java2DFrameConverter).

For example, a format of the picture may be JPG.

S4507: Convert the video frame into a BufferedImage object (Java2DFrameConverter: getBufferedImage).

S4508: Convert the BufferedImage object into a JPG image (ImageO.write).

S4509: Store the JPG picture.

S4510: End conversion of the video cache resource (FFmpegFrameGrabber:stop).

It should be understood that the foregoing shows only one manner of converting the video cache resource into the picture. In this embodiment of this application, the device A or the device B may alternatively convert the video cache resource into the picture in another manner. This conversion manner is not specifically limited in this embodiment of this application.

FIG. 46 is a schematic flowchart of a method 4600 for invoking a capability of another device according to an embodiment of this application. The method 4600 may be performed by a device A (for example, a mobile phone) and a device B (for example, a smart television). The method 4600 includes the following steps.

S4601: The device A detects a preset operation of a user.

For example, as shown in FIG. 11(b), the mobile phone detects a two-finger pressing operation of the user on a home screen of the mobile phone.

S4602: In response to detecting the preset operation of the user, the device A determines whether to start cross-device screen recognition.

In an embodiment, the device A establishes a wireless connection (for example, a Wi-Fi/Bluetooth/NFC connection) to the device B. When detecting the preset operation of the user, the device A may determine to start cross-device screen recognition, to perform S4604.

Alternatively, when detecting the preset operation of the user, the device A may prompt the user to choose to perform screen recognition on the device A or the device B. If the device A detects that the user chooses to perform screen recognition on the device B, the device A may determine to start cross-device screen recognition, to perform S4604.

Alternatively, when detecting the preset operation of the user on a preset interface (for example, the device A displays the home screen of the device A or a lock screen interface of the device A), the device A may determine to start cross-device screen recognition, and the mobile phone A may perform S4604.

In an embodiment, it is assumed that the device A does not establish a wireless connection to another device.

In this case, when detecting the preset operation of the user, the device A may prompt the user to choose to perform screen recognition on the device A or another device. If the device A detects that the user chooses to perform screen recognition on another device, the device A may start device searching, to perform S4603.

Alternatively, the device A may determine, based on content displayed on a current display interface, whether to start cross-device screen recognition. When the device A displays the home screen of the device A or the lock screen interface of the device A, and the device A detects the preset operation (for example, a two-finger pressing operation) of the user, the device A may determine that the user wants to perform AI Touch on a picture on another device, and the device A starts device searching, to perform S4603. When the device A displays a display interface of an application (for example, a Messages application, a Memo application, or a Browser application), and the device A detects the preset operation (for example, a two-finger pressing operation) of the user, the device A may determine that the user does not want to perform cross-device screen recognition, so that the device A recognizes a picture displayed by the device A.

S4603: The device A determines whether the device B exists around.

In an embodiment, the device A may determine whether the device B having a screen exists around.

For example, the device A may send a broadcast message to a surrounding device. The broadcast message is used to query whether the surrounding device is a large-screen device. If the device A receives response information (ACK) of the device B, the device A may perform S4604.

S4604: The device A sends an instruction to the device B, where the instruction is used to request image information.

In an embodiment, the instruction is used to request the device B to capture image information displayed when the instruction is obtained (for example, instruct the device B to perform a screenshot operation to obtain a picture).

In an embodiment, the instruction is used to request a video cache resource in a first time period. In this case, the instruction may include a timestamp $T_1$ and a time interval $T_2$. After receiving the instruction, the device B may intercept a video cache resource near a moment $T_1$-$T_2$.

It should be understood that the time interval $T_2$ may be a time interval indicated by the user and detected by the device. Alternatively, the instruction may not carry the time interval $T_2$, and the time interval may be preset in the device B. Further, the device B may further preset the time interval $T_2$ based on information about the user. For example, if the user is 20 to 40 years old, the time interval may be set to 5 seconds; or if the user is 41 to 60 years old, the time interval may be set to 10 seconds.

S4605: The device B sends the image information to the device A.

For example, the device A obtains, from the device B, a picture obtained by performing a screenshot operation by the device B.

For example, the device A obtains the video cache resource from the device B.

S4606: If the device A obtains the video cache resource from the device B, the device A may convert the video cache resource into a picture.

It should be understood that, for a manner in which the device A converts the video cache resource into the picture, refer to the description in the foregoing embodiment. For brevity, details are not described herein again.

S4607: The device A processes the picture to obtain a processing result.

In an embodiment, the device A may perform corresponding processing based on content obtained by recognizing the picture.

For example, for the GUI shown in FIG. 11(a)-1 to FIG. 11(a)-3 to FIG. 11(e), after obtaining the picture, the mobile phone may recognize the picture (for example, through OCR) to obtain character string information. If the mobile phone determines that a language (for example, English) corresponding to the character string information is not a default language of the mobile phone, the device A may translate the character string information, to obtain a translation corresponding to the character string information.

For example, for the GUI shown in FIG. 12(a) to FIG. 12(d)-1 to FIG. 12(d)-3, after obtaining the picture, the mobile phone may recognize the picture (for example, through OCR) to image information of an object. In this case, the device A may recognize the object based on the image information of the object, to obtain an object recognition result of the object.

For example, for the GUI shown in FIG. 13(a)-1 to FIG. 13(a)-3 to FIG. 13(c), after obtaining the picture, the mobile phone may recognize the picture (for example, through OCR) to obtain character string information. If the mobile phone determines that a language (for example, Chinese) corresponding to the character string information is a default language of the mobile phone, the device A may display the character string information.

In an embodiment, after receiving the picture, the device A prompts the user with a manner that is used to process the picture. When the device A detects that the user performs an operation of processing the picture in a manner, the device A processes the picture in the manner.

For example, as shown in FIG. 15(b), when the mobile phone detects that the user chooses to translate content on the picture, the mobile phone may translate the character string information obtained through recognition, to obtain a translation corresponding to the character string information.

In an embodiment, the device A may first recognize the content on the picture, to obtain a recognition result. The recognition result includes a first part of content and a second part of content, and a type of the first part of content is different from a type of the second part of content. When the mobile phone detects a preset operation of the user on the first part of content, the mobile phone processes the first part of content, to obtain a processing result. For example, as shown in FIG. 14(c), the result of recognizing the picture by the mobile phone includes character string information (whose type is text) and image information of an object (whose type is a picture). In this case, when the mobile phone detects a two-finger pressing operation of the user on the character string information, the mobile phone may translate the character string information. Alternatively, as shown in FIG. 14(e), when the mobile phone detects a two-finger pressing operation of the user on the image information of the object, the mobile phone may recognize the object. In an embodiment, when detecting a first preset operation (for example, a three-finger pressing operation) of the user, the mobile phone may process the first part of content; or when detecting a second preset operation (for example, a mid-air gesture) of the user, the mobile phone may process the second part of content.

S4608: The device A sends the processing result to the device B.

S4609: The device B displays the processing result.

For example, as shown in FIG. 11(e), after obtaining a translation, the mobile phone may send the translation to the smart television, so that the smart television can display the translation content on the display.

For example, as shown in FIG. 12(d)-1 to FIG. 12(d)-3, after obtaining an object recognition result, the mobile phone may send the object recognition result to the smart television, so that the smart television can display the object recognition result on the display.

In this embodiment of this application, the user can use a function of another device (for example, the mobile phone) on one device (for example, the smart television), so as to extend a capability boundary of the device, and help the device conveniently and efficiently complete some relatively difficult tasks, thereby helping improve user experience.

FIG. 47 is a schematic flowchart of a method 4700 for invoking a capability of another device according to an embodiment of this application. The method 4700 may be performed by a first electronic device and a second electronic device. The method 4700 includes the following steps.

S4701: The first electronic device detects a first operation of a user.

For example, as shown in FIG. 3(b), the mobile phone detects a two-finger pressing operation of the user on a home screen of the mobile phone.

S4702: The first electronic device sends request information to the second electronic device in response to the first operation, where the request information is used to request first image information on the second electronic device.

In an embodiment, the first electronic device may send a BLE data packet to the second electronic device in response to the first operation, where the BLE data packet may include the request information.

In an embodiment, the first electronic device may send the request information to the second electronic device by using a transmission control protocol (transmission control protocol, TCP) connection.

In an embodiment, if an account for the first electronic device is associated with an account for the second electronic device, the first electronic device may further send the request information to the second electronic device by using a server.

Optionally, that the first electronic device sends request information to the second electronic device in response to the first operation includes: In response to the first operation, the first electronic device prompts the user whether to process the image information on the second electronic device. The first electronic device sends the request information to the second electronic device in response to an operation that the user determines to process the image information on the second electronic device.

For example, as shown in FIG. 16(c), when the mobile phone detects a two-finger pressing operation of the user, the mobile phone may display the prompt box 1601, where prompt information in the prompt box 1601 is used by the user to determine whether to perform AI Touch on the smart television. When the mobile phone detects an operation that the user taps the control 1602, the mobile phone may send the request information to the smart television.

Optionally, the method 4700 further includes: The first electronic device detects a third operation of the user. In response to the third operation, the first electronic device processes image information displayed by the first electronic device.

In an embodiment, the first operation and the third operation may be different operations. For example, when the mobile phone detects a two-finger pressing operation of the user, the mobile phone may determine that AI Touch is performed on the picture on the mobile phone. For example, when the mobile phone detects a two-finger pressing operation of the user and a distance by which the two fingers move on the screen is greater than or equal to a preset distance, the mobile phone may determine that AI Touch is performed on the picture on the smart television.

S4703: The second electronic device sends the first image information to the second electronic device in response to the request information.

In an embodiment, the second electronic device may send the first image information to the first electronic device by using a TCP connection.

In an embodiment, the second electronic device may send the first image information to the first electronic device by using a BLE data packet.

In an embodiment, the second electronic device may send the first image information to the first electronic device by using a server.

S4704: The first electronic device processes the first image information by using a first function.

Optionally, the first function includes a first sub-function and a second sub-function, and that the first electronic device processes the first image information by using a first function includes: When the first image information includes first content, the first electronic device processes the first content by using the first sub-function; or when the first image information includes second content, the first electronic device processes the second content by using the second sub-function.

For example, as shown in FIG. 11(d), when the mobile phone determines that the image information sent by the smart television includes text content, the mobile phone may translate the text content by using a translation function, to obtain a translation result.

For example, as shown in FIG. 12(c), when the mobile phone determines that the image information sent by the smart television includes information about an object (for example, football), the mobile phone may perform object recognition on the object by using an object recognition function, to obtain an object recognition result.

Optionally, the first electronic device further has a second function. That the first electronic device processes the first image information by using a first function includes: In response to receiving the first image information, the first electronic device prompts the user to process the first image information by using the first function or the second function. In response to an operation that the user selects the first function, the first electronic device processes the first image information by using the first function.

For example, as shown in FIG. 15(b), after the mobile phone receives the image information sent by the smart television, the mobile phone may prompt the user to select a function to process the image information. When the mobile phone detects that the user selects a translation function, the mobile phone may translate text in the image information by using the translation function, to obtain a translation result.

Optionally, that the first electronic device processes the first image information by using a first function includes: In response to receiving the first image information, the first electronic device displays the first image information, where the first image information includes a first part and a second part. In response to a second operation performed by the user on the first part, the first electronic device processes the first part by using the first function.

For example, as shown in FIG. 14(c), the mobile phone may display the image information received from the smart television, and the image information includes an area 1401 and an area 1402. When the mobile phone detects a two-finger pressing operation of the user in the area 1401, the mobile phone may perform a translation operation on text content in the area 1401, to obtain a translation result.

Optionally, the method 4700 further includes: The first electronic device sends a processing result of the first image information to the second electronic device. The second electronic device is further configured to display the processing result.

In this embodiment of this application, after obtaining the processing result, the first electronic device may not display the processing result, but sends the processing result to the second electronic device and displays the processing result by using the second electronic device. The first electronic device is insensitive to the user, and helps improve user experience.

Optionally, the method 4700 further includes: The first electronic device displays the processing result of the first image information.

In this embodiment of this application, the first electronic device may display the processing result after obtaining the processing result, or display the processing result on both the first electronic device and the second electronic device after sending the processing result to the second electronic device. This helps improve user experience.

With reference to FIG. 48 to FIG. 52, the following describes implementation processes of FIG. 19(a)-1 and FIG. 19(a)-2 to FIG. 19(d)-1 and FIG. 19(d)-2 to FIG. 22(a)-1 and FIG. 22(a)-2 to FIG. 22(d)-1 and FIG. 22(d)-2 in embodiments of this application.

FIG. 48 is a schematic diagram of a system architecture according to an embodiment of this application. The system architecture includes a device A (for example. a notebook computer) and a device B (for example, a mobile phone). The device A includes app 1 to be logged in or registered, an application initiator 4810, and a data synchronization module 4820. The application initiator 4810 is configured to process an application startup request and provide application information (for example, app 2, app 3, and app 4 shown in FIG. 3(a)) that can respond to a specific service, and the data synchronization module 4820 is configured to process request forwarding and data synchronization between the device A and another device. The device B includes app 2, a notification module 4830, and a data synchronization module 4840. App 2 is an application that supports login authorization (for example, OAuth login authorization) for another application, and the notification module 4830 is configured to notify or prompt a user of specific information or an operation.

When detecting that the user logs in to app 1 or registers with an account of app 1 on the device A, the device A selects app 2 authorized by a third party for login or registration. The application initiator 4810 of the device A queries whether app 2 is installed on the device A. In addition, the application initiator 4810 may send a query request to the data synchronization module 4820. The query request is used to query whether app 2 is installed on a surrounding device. The data synchronization module 4820 may send a first message. The first message may include the query request.

For example, the first message may be a broadcast message, the broadcast message may be a BLE data packet, and the BLE data packet may carry the query request. The BLE data packet includes a protocol data unit (protocol data unit, PDU), and the query request may be carried in a service data (service data) field in the PDU, or may be carried in a manufacturer specific data (manufacturer specific data) field in the PDU. For example, a payload (payload) of the service data field may include a plurality of bits. The plurality of bits include an extensible bit. The device A and the surrounding device (including the device B) may agree on content of an extensible bit. When an extensible bit is 1, the device B may learn that the device A queries whether app 2 is installed on the device B.

The broadcast message may further carry a media access control (media access control, MAC) address of the device A. For example, if the broadcast message is a BLE data packet, the MAC address of the device A may be carried in an access address (access address) field in the BLE data packet.

For example, the first message may be a broadcast message, the broadcast message may be a user datagram protocol (user datagram protocol, UDP) data packet, and the UDP data packet may carry the query request. The UPD data packet includes a data part of an IP datagram. A data part of the IP datagram may include an extensible bit. The device A and the surrounding device (including the device B) may agree on content of an extensible bit. When an extensible bit is 1, the device B may learn that the device A queries whether app 2 is installed on the device B.

The UDP data packet may carry an IP address and a port number of the device A (including a source port number and a destination port number, where the source port number is a port number used by the device A to send data, and the destination port number is a port used by the device A to receive data). The IP address and the port number of the device A may be carried in a UDP header of a data part of an IP datagram.

In an embodiment, the data synchronization module 4820 may send the query request to devices with a same account (including the device B), or the data synchronization module 4820 may send the query request to devices in a same family group (including the device B). For example, the data synchronization module 4820 may use a BLE data packet or a UDP data packet to carry the query request, and send the query request to the data synchronization module 4840 of the device B. For a specific process of using the BLE data packet or the UDP data packet for sending, refer to the description in the foregoing embodiment. For brevity, details are not described herein again.

For example, if the device A and the device B are devices with a same account, the device A may store information such as a device type, a device name, and a MAC address of the device B. When the device A detects that the user performs login authorization or registration on app 1 by using app 2, the device A may send a BLE data packet to the device B based on the MAC address of the device B. The BLE data packet may include a PDU. The query request may be carried in a service data field in the PDU, or may be carried in a manufacturer specific data field in the PDU. For example, a payload of the service data field may include a plurality of bits. The plurality of bits include an extensible bit. The device A and the device B may agree on content of an extensible bit. When an extensible bit is 1, the device B may learn that the device A queries whether app 2 is installed on the device B.

In an embodiment, if the device A and the device B are devices with a same account, the device A may further store information about an application installed on the device B. For example, the device B may send a BLE data packet to the device A, and the BLE data packet may carry package name information of all applications installed on the device B. The package name information of all the applications installed on the device B may be carried in a service data field in the PDU, or may be carried in a manufacturer specific data field in the PDU. For example, a payload of the service data field may include a plurality of bits. The plurality of bits include an extensible bit. The device B may encode the package name information of all the applications in an encoding mode such as GBK, ISO8859-1, or Unicode (for example, UTF-8 or UTF-16), and use one or more extensible bits to carry information obtained after the encoding. After receiving the BLE data packet sent by the device B, the device A may decode information in a corresponding bit, to obtain information about an application installed on the device B.

In an embodiment, after receiving the first message sent by the data synchronization module 4820 of the device A, the data synchronization module 4840 of the device B may first establish a connection to the device A. For example, if a BLE data packet sent by the device A to the device B carries a MAC address of the device A, after obtaining the MAC address of the device A, the device B may establish a Bluetooth connection to the device A. For example, if a UDP data packet carries an IP address and a destination port number of the device A, the device B may establish a transmission control protocol (transmission control protocol, TCP) connection to the device A by using the IP address and the destination port number.

The data synchronization module 4840 of the device B sends a response to the query request to the data synchronization module 4820 of the device A.

For example, the response may be carried in a BLE data packet, the BLE data packet includes a protocol data unit, and the response may be carried in a service data field in the PDU, or may be carried in a manufacturer specific data field in the PDU. For example, a payload of the service data field may include a plurality of bits. The plurality of bits include an extensible bit. The device A and the device B may agree on content of an extensible bit. When an extensible bit is 1, the device A may learn that app 2 is installed on the device B.

For example, the device B may send the response to the device A by using a TCP connection to the device A.

After receiving the response sent by the data synchronization module 4840 of the device B, the data synchronization module 4820 of the device A may forward the response to the application initiator 4810. The application initiator 4810 may determine installation information of app 2 on the device A and installation information of app 2 on surrounding devices (or devices with a same account and devices in a same family group).

In an embodiment, if app 2 is not installed on the device A, and the device A receives only a response sent by the device B, the device A may not prompt the user with the installation information of app 2 on the device A and the installation information of app 2 on the surrounding devices (or devices with a same account or devices in a same family group), but directly sends an authorization request to the device B.

In an embodiment, if app 2 is not installed on the device A, and the device A receives responses sent by at least two devices (for example, the device B and a device C), the device A may prompt the user that app 2 is installed on the device B and the device C, and prompt the user to select one of the devices for login authorization. For example, as shown in FIG. 20(b)-1 and FIG. 20(b)-2, the notebook computer may prompt the user that app 2 is installed on both the mobile phone and the tablet computer.

In an embodiment, if app 2 is installed on the device A, and the device A receives a response sent by at least one device, the device A may prompt the user that app 2 is installed on the device A and the device B, and prompt the user to select one of the devices for login authorization.

In an embodiment, if app 2 is installed on the device A, and the device A does not receive a response sent by another device, the device A may start app 2 for login authorization.

When the device A detects that the user selects app 2 on the device B to perform an operation of login authorization, the application initiator 4810 of the device A may send an authorization request (authorization request) to the data synchronization module 4820. The authorization request is used to request app 2 on the device B to perform login authorization on app 1.

It should be understood that, for a process in which the device A sends the authorization request to the device B, refer to the foregoing process in which the device A sends the query request to the device B. For brevity, details are not described herein again.

After receiving the authorization request, the data synchronization module 4840 of the device B may send the authorization request to the notification module 4830. The notification module 4830 may prompt the user to perform authorization on app 2 based on the authorization request. For example, as shown in FIG. 19(b)-1 and FIG. 19(b)-2, after receiving the authorization request sent by the notebook computer, the mobile phone may display the prompt box 1902. The prompt box 1902 includes prompt information "Your notebook computer requests authorization for app 2". When detecting an authorization operation of the user, the device B may start app 2 and prompt the user that app 1 applies for using account information of app 2. When detecting that the user allows app 1 to use the account information of app 2, the device B may request, from a server of app 2, information (for example, an access token) used for login authorization. The server of app 2 may send the information used for login authorization to the device B.

In an embodiment, when detecting that the user allows app 1 to use the account information of app 2, the device B may send a hypertext transfer protocol (hyper text transfer protocol, HTTP) request to the server of app 2 based on a uniform resource locator (uniform resource locator, URL) address of app 2. The HTTP request may carry request information, and the request information is used to request information used for login authorization. In response to receiving the HTTP request, the server of app 2 sends an HTTP response to the device B. The HTTP response may carry the information used for login authorization.

It should be understood that, when the user installs app 2 on the device B, the device B may obtain the URL address of app 2 from the server of app 2. When detecting that the user allows app 1 to use the account information of app 2, the device B may send the HTTP request to the server of app 2.

The device B may send the information used for login authorization to the device A, so that the device A requests the account information of app 2 from the server of app 2 by using the information used for login authorization, thereby implementing login or registration of app 1 on the device A.

In an embodiment, the information used for login authorization may be an access token. The access token may include a character string.

For example, the device B may send a BLE data packet to the device A, and the BLE data packet may include the access token. The access token may be carried in a service data field or a manufacturer specific data field in the PDU. For example, a payload of the service data field may include a plurality of bits. The plurality of bits include an extensible bit. The device B may encode the access token in an encoding mode such as GBK, ISO8859-1, or Unicode (for example, UTF-8 or UTF-16), and use one or more extensible bits to carry information obtained after the encoding. After receiving the BLE data packet sent by the device B, the device A may decode information in a corresponding bit, to obtain the access token.

For example, the device B may alternatively send the access token to the device A by using a TCP connection.

It should be understood that, in this embodiment of this application, signaling between the device B and the server of app 2 may be transmitted through a network transmission channel, and signaling between the device A and the server of app 2 may also be transmitted through the network transmission channel.

It should be further understood that, when the user installs app 1 on the device A (or opens a login or registration interface of app 1 by using a web page), the device A may obtain a URL address of the server of app 2 from a server of app 1. Therefore, when receiving the access token, the device A may send an HTTP request to the server of app 2 based on the URL address of the server of app 2. The HTTP request may carry the access token. In response to receiving the HTTP request from the device A, the server of app 2 may determine that the access token is sent by the server of app 2 to the device B. In this case, the server of app 2 may send an HTTP response to the device A. The HTTP response includes the account information of app 2 that is logged in to on the device B.

It should be further understood that, if app 1 supports login authorization or registration by using a third-party account (for example, app 2), a developer of app 1 may write the URL address of the server of app 2 into an installation package of app 1 and upload the URL address to the server of app 1. Therefore, when the user installs app 1 on the device A, the device A may obtain the installation package of app 1 from the server of app 1, to obtain the URL address of the server of app 2.

With reference to FIG. 49, the following describes a schematic flowchart of a method 800 for obtaining user data by a device A. As shown in FIG. 49, the method 4900 includes the following steps.

S4901: App 1 of the device A sends an authorization request (authorization request) to the data synchronization module 4820 of the device A.

For example, the device A may use a BLE data packet to carry the authorization request; or the device A may use a UDP data packet to carry the authorization request.

S4902: The data synchronization module 4820 of the device A forwards the authorization request to the data synchronization module 4840 of the device B.

It should be understood that, for a process in which the data synchronization module 4820 of the device A forwards the authorization request to the data synchronization module 4840 of the device B, refer to the process in which the data synchronization module 4820 of the device A sends the query request to the data synchronization module 4840 of the device B. For brevity, details are not described herein again.

In an embodiment, the authorization request includes identification information of app 1.

For example, the identification information of app 1 may be a unique ID (for example, client_id) of app 1.

In this embodiment of this application, if app 1 supports login authorization by using a third-party application (for example, app 2), when a user installs app 1 on the device A, the device A may obtain the identification information of app 1 from a server of app 1.

It should be understood that, if app 1 supports login authorization by using the third-party application (for example, app 2), a developer of app 1 obtains the identification information of app 1 from a developer of app 2, writes the identification information of app 1 into an installation package of app 1, and uploads the identification information to the server of app 1. When the user installs app 1 on the device A, the device A may obtain the identification information of app 1 from the server of app 1. The developer of app 2 may upload the identification information of app 1 to the server of app 2. When obtaining the authorization request, the server of app 2 may verify the identification information in the authorization request by using the identification information uploaded by the developer of app 2.

In an embodiment, the identification information of app 1 may be obtained by the device A from the server of app 1 when app 1 is installed, or may be obtained in real time. For example, in response to an operation that the user detects, on a login or registration interface of app 1, that the user taps app 2 to perform account login or account registration on app 1, the device A may request the identification information of app 1 from the server of app 1. The identification information of app 1 is carried in the authorization request, so that the server of app 2 can perform authentication on app 1. In this way, the device B can send information used for login authorization (for example, an access token) to the device A.

S4903: The data synchronization module 4840 of the device B sends the authorization request to app 2 of the device B.

S4904: App 2 of the device B sends the authorization request to an authorization server of app 2.

It should be understood that, after receiving the authorization request sent by the data synchronization module 4840, app 2 of the device B may send an HTTP request to the authorization server of app 2 based on a URL address of the authorization server of app 2. The HTTP request may carry the authorization request.

It should be further understood that, when the user installs app 2 on the device B, the device B may obtain the URL address of the authorization server of app 2 from the authorization server of app 2. When the device B receives the authorization request from the device A, the device B may determine that the device A expects to perform login authorization on app 1 by using app 2. so that the device B can send the HTTP request to the authorization server of app 2 based on the URL address of the authorization server of app 2. The HTTP request may carry the authorization request.

S4905: In response to receiving the authorization request sent by the device B, the authorization server of app 2 sends a response to the authorization request to app 2 of the device B.

In an embodiment, the response may be an authorization code (authorization code).

In an embodiment, the authorization server of app 2 may verify the identification information of app 1 in the authorization request. If the verification succeeds, the authorization server of app 2 may send a response to the device B.

It should be understood that, after receiving the HTTP request sent by the device B, the authorization server of app 2 may send an HTTP response to the device B. The HTTP response includes a response to the authorization request.

S4906: In response to receiving the response from the authorization server of app 2, the device B prompts the user to determine whether to allow login authorization on app 1.

S4907: In response to an operation that the device B detects that the user allows performing login authorization on app 1, app 2 of the device B sends request information to the authorization server of app 2. The request information is used to request the access token.

S4908: In response to receiving the request information from the device B, the authorization server of app 2 sends the access token to app 2 of the device B.

It should be understood that, in S4904 to S4908, information between the device B and the authorization server of app 2 may be transmitted through a network channel between the device B and the authorization server of app 2.

It should be understood that, for a process in which the device B sends the request information to the authorization server of app 2 and a process in which the authorization server of app 2 sends the access token to the device B, refer to the description in the foregoing embodiment. For brevity, details are not described herein again.

S4909: App 2 of the device B sends the access token to the data synchronization module of the device B.

S4910: The data synchronization module of the device B sends the access token to the data synchronization module of the device A.

It should be understood that, for a process in which the device B sends the access token to the device A, refer to the description in the foregoing embodiment. For brevity, details are not described herein again.

S4911: The data synchronization module of the device A sends the access token to app 1 of the device A.

S4912: App 1 of the device A sends the access token to a resource server of app 2.

After the device A receives the access token sent by the device B, the device A sends an HTTP request to a URL address of the resource server of app 2 based on an operation that the user detects, on the login (or registration) interface of app 1, that the user taps app 2. The HTTP request may carry the access token.

It should be understood that, when the user installs app 1 on the device A, the device A may obtain the URL address of the resource server of app 2 from the resource server of app 2.

It should be further understood that the authorization server of app 2 and the resource server of app 2 may be two independent servers, or the authorization server of app 2 and the resource server of app 2 may be located in a same server. This is not limited in this embodiment of this application.

In an embodiment, app 1 of the device A may send the identification information of app 1 to the resource server of app 2.

S4913: In response to receiving the access token, the resource server of app 2 sends a protection resource (protect resource) to app 1 of the device A, where the protection resource includes account information of app 2.

After receiving the HTTP request sent by the device A, the resource server of app 2 may obtain the access token from the HTTP request. Because the access token is sent by the authorization server of app 2 to the device B, the resource server of app 2 may determine the account information of app 2 through which the device A expects to request to log in to the device B. Therefore, the resource server of app 2 may send an HTTP response to the device A, where the HTTP response may carry the protection resource.

After obtaining the protection resource, app 1 of the device A may implement login based on user data in the protection resource. For example, app 1 obtains the account information of app 2 from the obtained protection resource, and app 1 may generate an account of app 1 by using the account information of app 2, or query an account of app 1 that has been associated with the account of app 2, so as to implement login.

FIG. 50 is a schematic flowchart of a method 5000 for performing authorization by using another device according to an embodiment of this application. The method 5000 includes the following steps.

S5001: The device A detects, on a login or registration interface of app 1, that a user performs a login or registration operation by using a third-party application app 2.

For example, as shown in FIG. 19(a)-1 and FIG. 19(a)-2, the mobile phone detects an operation that the user logs in by using a third-party account (app 2).

S5002: In response to the operation, the device A sends a first message, where the first message is used to query whether app 2 is installed on a device that receives the first message.

In an embodiment, the first message is used to query whether app 2 is installed and logged in to on a device that receives the first message.

It should be understood that, for a process in which the device A sends the first message, refer to the description in the foregoing embodiment. For brevity, details are not described herein again.

S5003: When receiving the first message, the device B may detect whether app 2 is installed on the device B.

For example, the device A may send a BLE data packet to the device B, and the BLE data packet may include package name information of app 2. The BLE data packet includes a protocol data unit, and the packet name information of app 2 may be carried in a service data field in the PDU, or may be carried in a manufacturer specific data field in the PDU. For example, a payload of the service data field may include a plurality of bits. The plurality of bits include an extensible bit. The device A may encode the package name information of app 2 in an encoding mode such as GBK, ISO8859-1, or Unicode (for example, UTF-8 or UTF-16), and use one or more extensible bits to carry information obtained after the encoding. After receiving the BLE data packet sent by the device A, the device B may decode information in a corresponding bit to obtain the package name information of app 2, to learn that the device A expects to query whether app 2 is installed on the device B.

The device B may query package name information of all applications installed at an application layer. If package name information of an application in the device B is the same as package name information carried in the BLE data packet, the device B may determine that app 2 is installed.

In an embodiment, the first message is used to query whether app 2 is installed and logged in to on a device that receives the first message.

For example, the device A may send a BLE data packet to the device B. The BLE data packet may include the package name information of app 2 and indication information, and the indication information indicates the device B to determine whether an application corresponding to the package name information is logged in. The BLE data packet includes a protocol data unit, and the package name information of app 2 and the indication information may be carried in a service data field in the PDU, or may be carried in a manufacturer specific data field in the PDU. For example, a payload of the service data field may include a plurality of bits. The plurality of bits include an extensible bit. The device A may encode the package name information of app 2 in an encoding mode such as GBK, ISO8859-1, or Unicode (for example, UTF-8 or UTF-16), and use one or more extensible bits to carry information obtained after the encoding. The device A may further set an extensible bit to 1 ("1" is used to indicate the device B to query whether an application corresponding to the package name information is installed and logged in). After receiving the BLE data packet sent by the device A, the device B may decode information in a corresponding bit to obtain the package name information of app 2, and determine, by using the bit 1, that the device A expects to query whether an application corresponding to the package name information is installed and logged in to on the device B.

The device B may query package name information of all applications installed at an application layer. If package name information of an application in the device B is the same as package name information carried in the BLE data packet, the device B may determine that app 2 is installed. After determining that app 2 is installed, the data synchronization module of the device B may invoke a query login interface (for example, a content provider interface) to send a request to app 2 at the application layer. The request is used to request app 2 to determine whether the account is used for login, and if app 2 is logged in to by using the account, app 2 may send a response to the data synchronization module. The response is used to indicate that app 2 is logged in to by using the account. In this way, the device B may determine that app 2 is installed and logged in to on the device B.

S5004: When determining that app 2 is installed, the device B may send a response to the device A, where the response is used to indicate that app 2 is installed on the device B.

In an embodiment, if the first message is used to query whether app 2 is installed and logged in to on a device that receives the first message, when determining that app 2 is installed and logged in, the device B may send a response to the device A, where the response is used to indicate that app 2 is installed and logged in to on the device B.

It should be understood that, for a process in which the device B sends the response to the device A, refer to the description in the foregoing embodiment. For brevity, details are not described herein again.

In an embodiment, the method 5000 further includes: The device A requests identification information of app 1 on the device A from a server of app 1.

In an embodiment, the identification information of app 1 is a unique identifier of app 1.

It should be understood that, for a process in which the device A obtains the identification information of app 1, refer to the description in the foregoing embodiment. For brevity, details are not described herein again.

S5005: The device A sends an authorization request (authorization request) to the device B, where the authorization request is used to request app 2 on the device B to perform login authorization on app 1, and the authorization request includes the identification information.

S5006: In response to receiving the authorization request, the device B sends the authorization request to a server of app 2.

In an embodiment, the device B sends the authorization request to an authorization server of app 2.

In this embodiment of this application, the authorization request sent by the device B to the server of app 2 may be transmitted through a network transmission channel between the device B and the server of app 2.

In an embodiment, when the device B receives the authorization request, if app 2 is installed on the device B but app 2 does not have a login account, the device B may first prompt the user with an account for logging in to app 2. After the device B detects that the user logs in to app 2, the device B may send the authorization request to the server of app 2.

S5007: In response to receiving the authorization request, the server of app 2 verifies the identification information of app 1.

Because the server of app 1 has previously requested the identification information of app 1 from the server of app 2, app 2 may store the identification information of app 1 that is sent to the server of app 1. After obtaining the authorization request sent by the device A, the server of app 2 may verify, based on the identification information of app 1 that is stored in the server of app 2, the identification information of app 1 that is sent by the device B.

S5008: In response to successfully verifying the identification information of app 1, the server of app 2 sends a response.

In an embodiment, the response may be used to indicate the device B to query whether the user allows login authorization on app 1.

In an embodiment, the response may be an authorization code.

S5009: In response to receiving the response from the server of app 2, the device B may display a login authorization interface.

For example, as shown in FIG. 19(c)-1 and FIG. 19(c)-2, in response to receiving the authorization code from the server of app 2, the mobile phone may display login authorization information of app 1 on a display interface of app 2. As shown in FIG. 19(c)-1 and FIG. 19(c)-2, the display interface of app 2 includes prompt information "App 1 applies for using your account information".

In an embodiment, the login authorization interface may further include a plurality of options of account information of app 2, for example, avatar information, a gender, and a nickname of the account of app 2. The user may select some or all of the plurality of options.

S5010: In response to an operation that the user allows performing login authorization on app 1, the device B sends request information to the server of app 2, where the request information is used to request an access token (access token).

In an embodiment, the device B sends the request information to the authorization server of app 2.

S5011: In response to obtaining the request information from the device B, the server of app 2 sends the access token (access token) to the device B.

It should be understood that signaling in both S5012 and S5013 may be transmitted through the network transmission channel between the device B and the server of app 2.

For example, in response to an operation that the user allows performing login authorization on app 1, the device B may send an HTTP request to the server of app 2 based on a URL address of the server of app 2, where the HTTP request may carry the request information. In response to receiving the HTTP request sent by the device B, the server of app 2 may send an HTTP response to the device B, where the HTTP response includes the access token.

S5012: In response to receiving the access token from the server of app 2, the device B sends the access token to the device A.

It should be understood that, for a process in which the device B sends the access token to the device A, refer to the description in the foregoing embodiment. For brevity, details are not described herein again.

S5013: In response to receiving the access token from the device B, the device A sends the access token to the server of app 2.

In an embodiment, the device A sends the access token to a resource server of app 2.

In an embodiment, the device A may send the access token and the identification information of app 1 to the resource server of app 2. After receiving the access token and the identification information of app 1, the resource server of app 2 may first verify the identification information of app 1. If the resource server of app 2 successfully verifies the identification information of app 1, the resource server of app 2 may send the account information of app 2 to the device A.

For example, after the device A receives the access token sent by the device B, the device A sends an HTTP request to a URL address of the resource server of app 2 based on an operation that the user detects, on the login (or registration) interface of app 1, that the user taps app 2. The HTTP request may carry the access token.

S5014: In response to receiving the access token from the device A, the server of app 2 may send the account information of app 2 to the device A.

For example, in response to receiving the HTTP request sent by the device A, the resource server of app 2 may obtain the access token in the HTTP request. Because the access token is an access token sent by the authorization server of app 2 to the device B, the resource server of app 2 may learn that the device A expects to use the access token to request the account information of app 2 for logging in to the device B. Therefore, the resource server of app 2 sends an HTTP response to the device A, where the HTTP response may carry the account information of app 2 for logging in to the device B.

In an embodiment, if the user selects some account information (for example, the user selects the avatar information and the nickname of the account of app 2) in S5011, the server of app 2 may determine the some account information authorized by the user. After the server of app 2 receives the access token sent by the device A, the server of app 2 may send the some account information to the device A.

S5015: In response to receiving the account information of app 2 from the server of app 2, the device A implements login or registration of app 1.

After obtaining the account information, app 1 of the device A may implement login based on user data in the account information. For example, app 1 may generate an account of app 1 by using the account information of app 2, or query an account of app 1 that has been associated with the account of app 2, so as to implement login.

It should be understood that, for S5015. refer to an implementation process in the conventional technology. For brevity, details are not described herein again.

FIG. 51 is a schematic flowchart of a method 5100 for performing authorization by using another device according to an embodiment of this application. The method 5100 includes the following steps.

S5101: The device A detects, on a login or registration interface of app 1, that a user performs a login or registration operation by using another device.

For example, as shown in FIG. 21(a)-1 and FIG. 21(a)-2, the mobile phone detects an operation that the user taps the control 2102 for logging in by using another device.

S5102: In response to the operation, the device A sends a second message, where the second message is used to query whether app 1 is installed on a surrounding device.

It should be understood that, for a process in which the device A sends the second message, refer to the process in which the device A sends the first message in the foregoing method 5000. For brevity, details are not described herein again.

S5103: When receiving the second message, the device B may detect whether app 1 is installed on the device B.

It should be understood that, for a process in which the device B detects whether app 1 is installed, refer to the foregoing process in which the device B detects whether app 2 is installed. For brevity, details are not described herein again.

S5104: When determining that app 1 is installed, the device B may send a response to the device A, where the response is used to indicate that app 1 is installed on the device B.

It should be understood that, for a process in which the device B sends the response to the device A, refer to the description in the foregoing embodiment. For brevity, details are not described herein again.

S5105: The device A sends an authorization request (authorization request) to the device B, where the authorization request is used to request app 1 on the device B to perform login authorization on app 1 on the device A.

In an embodiment, the authorization request may include identification information of app 1.

It should be understood that, for a process in which the device A obtains the identification information of app 1, refer to the description in the foregoing embodiment. For brevity, details are not described herein again.

S5106: In response to receiving the authorization request, the device B sends the authorization request to a server of app 1.

In an embodiment, the device B sends the authorization request to an authorization server of app 1.

In this embodiment of this application, the authorization request sent by the device B to the server of app 1 may be transmitted through a network transmission channel between the device B and the server of app 1.

For example, after receiving the authorization request sent by the device A, the device B may send an HTTP request to the server of app 1 based on a URL address of the server of app 1. The HTTP request may include the authorization request.

It should be understood that, when the user installs app 1 on the device B, the device B may obtain the URL address of the server of app 1 from the server of app 1.

S5107: In response to receiving the authorization request, the server of app 1 verifies the identification information of app 1. After obtaining the authorization request sent by the device A, the server of app 1 may verify, based on the identification information of app 1 that is stored in the server of app 1, the identification information of app 1 that is sent by the device B.

S5108: In response to successfully verifying the identification information of app 1, the server of app 1 sends a response to the device B.

In an embodiment, the response may be used to indicate the device B to query whether the user allows login authorization on app 1.

In an embodiment, the response may be an authorization code.

For example, in response to receiving the HTTP request, if the server of app 1 successfully verifies the identification information of app 1, the server of app 1 may send an HTTP response to the device B. The HTTP response may carry a response to the authorization request.

S5109: In response to receiving the response from the server of app 1, the device B may display a login authorization interface.

For example, as shown in FIG. 21(c)-1 and FIG. 21(c)-2, in response to receiving the response from the server of app 1, the mobile phone may display "Authorize the notebook computer to log in" on a display interface of app 1.

S5110: In response to an operation that the user allows performing login authorization on app 1, the device B sends request information to the server of app 1, where the request information is used to request an access token (access token).

In an embodiment, the device B sends the request information to the authorization server of app 1.

S1011: In response to obtaining the request information from the device B, the server of app 1 sends the access token (access token) to the device B.

It should be understood that signaling in both S5110 and S5111 may be transmitted through the network transmission channel between the device B and the server of app 1.

It should be understood that, for a process in which the device B sends the request information to the server of app 1, refer to the foregoing process in which the device B sends the request information to the server of app 2, and for a process in which the server of app 1 sends the access token to the device B, refer to the foregoing process in which the server of app 2 sends the access token to the device B.

S5112: In response to receiving the access token from the server of app 1, the device B sends the access token to the device A.

It should be understood that, for a process in which the device B sends the access token to the device A, refer to the description in the foregoing embodiment.

S1513: In response to receiving the access token from the device B, the device A sends the access token to the server of app 1.

In an embodiment, the device A sends the access token to a resource server of app 2.

In an embodiment, the device A sends the access token and the identification information of app 1 to the resource server of app 2.

S5114: In response to receiving the access token from the device A, the server of app 1 may send the account information of app 1 to the device A.

It should be understood that, for a process in which the device A sends the access token to the server of app 1, refer to the foregoing process in which the device A sends the access token to the server of app 2, and for a process in which the server of app 1 sends the account information of app 1 to the device A, refer to the foregoing process in which the server of app 2 sends the account information of app 2 to the device A. For brevity, details are not described herein again.

S5115: In response to receiving the account information of app 1 from the server of app 1, the device A implements login or registration of app 1.

For example, as shown in FIG. 21(d)-1 and FIG. 21(d)-2, after receiving the account information sent by the server of app 1, the notebook computer may log in to app 1, where an account for logging in to app 1 on the notebook computer is the same as an account for logging in to app 1 on the mobile phone.

FIG. 52 is a schematic flowchart of a method 5200 for performing authorization by using another device according to an embodiment of this application. The method is applicable to a system including a device A (for example, a notebook computer in the foregoing embodiment) and a device B (for example, a mobile phone in the foregoing embodiment). The method 5200 includes the following steps.

S5201: The device A displays a first interface, where the first interface is an account login interface or an account registration interface of a first application.

For example, as shown in FIG. 19(a)-1 and FIG. 19(a)-2, the notebook computer may display an account login interface of app 1, where the login interface includes information for logging in by using a third-party account (for example, app 2, app 3, and app 4).

S5202: In response to detecting an operation that a user performs account login or account registration on the first application by using a second application, the device A sends first request information to the device B, where the first request information is used to request the second application on the device B to perform authorization on the first application.

For example, as shown in FIG. 19(b)-1 and FIG. 19(b)-2, when the notebook computer detects an operation that the user taps app 2 to perform account login on app 1, the notebook computer may send the first request information to the mobile phone.

In an embodiment, the method further includes: The device A sends a query request before sending the first request information to the device B, where the query request is used to request an electronic device that receives the query request to determine whether the second application is installed. The device A receives a first response sent by the device B, where the first response is used to indicate that the second application is installed on the device B.

It should be understood that, for a process in which the device A sends the query request to the device B and the device B determines whether the second application is installed, refer to the description in the foregoing embodiment. For brevity, details are not described herein again.

In an embodiment, the method further includes: The device A sends a query request before sending the first request information to the device B, where the query request is used to request an electronic device that receives the query request to determine whether the second application is installed and logged in to. The device A receives a first response sent by the device B, where the first response is used to indicate that the second application is installed and logged in to on the device B.

It should be understood that, for a process in which the device B determines whether the second application is installed and logged in to, refer to the description in the foregoing embodiment. For brevity, details are not described herein again.

In an embodiment, the method 5200 further includes: The device A receives a second response sent by a device C, where the second response is used to indicate that the second application is installed on the device C. The device A prompts the user to choose to perform authorization on the first application by using the second application on the device B or the device C. The device A sends the first request information to the device B in response to an operation that the user selects the second electronic device.

For example, as shown in FIG. 20(b)-1 and FIG. 20(b)-2, after receiving the responses sent by the mobile phone and the tablet computer, the notebook computer may display the prompt box 2002. The prompt box 2002 includes prompt information "Detected a plurality of devices with app 2 installed around for you. Please select". In response to detecting an operation that the user selects the mobile phone and taps the control 2003, the notebook computer sends an authorization request to the mobile phone. The authorization request is used to request app 2 on the mobile phone to perform login authorization on app 1.

S5203: The device B sends second request information to a server corresponding to the second application based on the first request information, where the second request information is used to request first information, the first information is used by the device A to request information about a first account, and the first account is a login account of the second application on the device B.

In an embodiment, the first information is an access token.

In an embodiment, that the device B sends second request information to a server corresponding to the second application based on the first request information includes: The device B sends the first request information to the server in response to receiving the first request information. In response to receiving a third response sent by the server for the first request information, the device B prompts the user whether to allow the first application to use the information about the first account. The device B sends the second request information to the server in response to an operation that the user allows the first application to use the information about the first account.

For example, as shown in FIG. 19(c)-1 and FIG. 19(c)-2, after the mobile phone receives the third response from the server, the mobile phone may prompt the user with "App 1 applies for using your account information". When the mobile phone detects an operation that the user taps the control 1904, the mobile phone may send the second request information to the notebook computer, where the second request information is used to request the access token.

In an embodiment, the third response may be an authorization code.

S5204: The device B receives the first information sent by the server.

It should be understood that, for a process of S5204, refer to the description in the embodiment shown in FIG. 48. For brevity, details are not described herein again.

S5205: The device B sends the first information to the device A.

It should be understood that, for a process of S5205, refer to the description in the embodiment shown in FIG. 48. For brevity, details are not described herein again.

S5206: The device A requests the information about the first account from the server based on the first information.

It should be understood that, for a process of S5206, refer to the process of S4912. For brevity, details are not described herein again.

S5207: The device A receives the information about the first account that is sent by the server.

S5208: The device A performs account login or account registration on the first application based on the information about the first account.

It should be understood that, for a process in which the device A receives the information about the first account that is sent by the server and performs account login or account registration based on the information about the first account, refer to the description in S4913.

With reference to FIG. 53 to FIG. 57, the following describes implementation processes of FIG. 23(a)-1 and FIG. 23(a)-2 to FIG. 23(d) and FIG. 24(a)-1 and FIG. 24(a)-2 to FIG. 24(d) in embodiments of this application.

FIG. 53 is a schematic flowchart of a verification code obtaining method 5300 according to an embodiment of this application. The method 5300 may be performed by a device A and a device B. The device A is a device without a calling card, or the device A is a device including a first calling card, and the device B is a device including a second calling card. The method 5300 includes the following steps.

S5301: The device A detects an operation that a user taps to obtain a verification code.

For example, the device A may be a notebook computer shown in FIG. 24(b), the device B may be a mobile phone shown in FIG. 24(b), and the operation may be an operation that the notebook computer detects that the user taps an "obtain a verification code" control.

For example, for a notebook computer running a Windows operating system, the notebook computer may add (or inject) a hook (hook) event to a process ID of a video app. The hook event establishes an association relationship between the "obtain a verification code" control and a phone number input box. After the notebook computer detects an operation that the user taps the "obtain a verification code" control, the notebook computer is triggered to call back the hook event to a notification service. After determining that the hook event is the association relationship between the "obtain a verification code" control and the phone number input box, the notification service may obtain content in the phone number input box. In this way, the notification service may request, based on the content in the phone number input box, a server to send an SMS message to a corresponding phone number.

S5302: The device A requests verification code information from the device B.

In an embodiment, that the device A requests verification code information from the device B includes: The device A sends verification code request information to the device B, where the verification code request information is used to request the verification code information.

For example, the verification code request information is used to request the device B to send, to the device A, a latest received SMS message that includes a verification code, or the verification code request information is used to request the device B to send, to the device A, a verification code in a latest received SMS message that includes a verification code.

For example, the verification code request information may be carried in a BLE data packet. The BLE data packet includes a PDU. The verification code request information may be carried in a service data field in the PDU, or may be carried in a manufacturer specific data field in the PDU. For example, a payload (payload) of the service data field may include a plurality of bits. The plurality of bits include an extensible bit. The device A and the device B may agree on content of an extensible bit. When an extensible bit is 1, the device B may learn that the device A expects to request verification code information.

In an embodiment, when the device A detects that the user taps the "obtain a verification code" control, the device A may be triggered to broadcast a BLE data packet to a surrounding device. The BLE data packet includes a field, the field is used to query device information of the surrounding device, and the device information includes phone number information and address information. For example, the BLE data packet includes a PDU. The query request may be carried in a service data field in the PDU, or may be carried in a manufacturer specific data field in the PDU. For example, a payload of the service data field may include a plurality of bits. The plurality of bits include an extensible bit. The device A and the device B may agree on content of an extensible bit. When an extensible bit is 1, the device B may learn that the device A expects to request phone number information and MAC address information of the device B.

After receiving the BLE data packet, a surrounding device of the device A may send device information of the surrounding device to the device A. For example, device information that is sent by the device B and that is received by the device A includes information about a first phone number, and address information of the device B is a first media access control (media access control, MAC) address. Device information that is sent by a device C and that is received by the device A includes information about a second phone number, and address information of the device C is a second MAC address. When the device A determines that the first phone number is the same as a phone number input by the user, the device A may send the verification code request information to the device B. For example, the BLE data packet includes a PDU, and the phone number information of the device B may be carried in a service data field or a manufacturer specific data field in the PDU. For example, a payload of the service data field may include a plurality of bits. The plurality of bits include an extensible bit. The device B may encode the phone number information of the device B in an encoding mode such as ISO8859-1, and use one or more extensible bits to carry information obtained after the encoding. After receiving the BLE data packet sent by the device B, the device A may decode information in a corresponding bit, to obtain the phone number information of the device B. A first MAC address of the device B may be carried in an access address (access address) field in the BLE data packet.

In an embodiment, the BLE data packet includes a field, and the field is used to indicate to search for a device corresponding to a phone number input by the user on the device A. For example, the BLE data packet includes a PDU, and the device A may use a service data field or a manufacturer specific data field in the PDU to carry the phone number information that is input by the user and that is detected on the device A. For example, a payload of the service data field may include a plurality of bits. The plurality of bits include an extensible bit. The device A may encode, in an encoding mode such as ISO8859-1, the phone number information that is input by the user and that is detected on the device A, and use one or more extensible bits to carry information obtained after the encoding. After receiving the BLE data packet sent by the device A, a surrounding device of the device A may decode information in a corresponding bit, to obtain the phone number information input by the user on the device A. After receiving the BLE data packet, the surrounding device of the device A determines whether the phone number information carried in the field is the same as a phone number corresponding to a calling card on the device. If yes, the device sends an ACK to the device A (for example, when an extensible bit in the service data field is "1"); or otherwise, the device sends a NACK to the device A (for example, when an extensible bit in the service data field is "0"). After receiving the BLE data packet, the device B may send a response ACK to the device A. After receiving the BLE data packet, the device C sends a response NACK to the device A.

Because the device A and the device B may have established connections (for example, Bluetooth connections) to the device C, the device A may store the address information of the device B and the address information of the device C. In this case, the device B and the device C may not carry their respective address information in a process of sending responses to the device A.

If the device B and the device C determine that no connection has been established to the device A, if the device B determines that a phone number corresponding to the second calling card is the same as the phone number in the BLE data packet, the device B may send the address information of the device B to the device A while sending the response.

In an embodiment, the device A and the device B are devices with a same account.

For example, the device A and the device B are devices with a same Huawei account. In this case, the device A may obtain the MAC address of the device B and the phone number information on the device B in advance. After the device B logs in to a same Huawei ID as the device A, the device B may send the MAC address of the device B and the phone number information on the device B to the server. The server may send the MAC address and the phone number information of the device B to the device A. Alternatively, the server may send the address information of the device B to the device A. After receiving the address information of the device B, the device A may request the phone number information of the device B from the device B, to store the phone number information of the device B in the device A.

After the device A obtains the phone number input by the user, if the phone number input by the user is the same as the phone number of the device B, the device A may directly send the verification code request information to the device B through near-field communication. Alternatively, the device A may request the verification code information from the device B by using the server.

S5303: The device B receives an SMS message sent by the server, where the SMS message includes a verification code.

After receiving the verification code request information sent by the device A, the device B may first store the verification code request information sent by the device A. After receiving the verification code from the server, the device B may query whether the verification code includes the verification code request information of the device A. If the device B determines that the device B stores the verification code request information of the device A, the device B may send the verification code information to the device A.

In an embodiment, the verification code information may be the SMS message, or the verification code information is the verification code in the SMS message.

In an embodiment, the device B receives verification code request information of the device A and verification code request information of a device D. In this case, the device B may first determine a sequence of receiving the verification code request information of the device A and receiving the verification code request information of the device D. After receiving two SMS messages that include the verification code, the device B may determine, according to this sequence, a device to which the corresponding verification code information is sent.

For example, if the device B first receives the verification code request information of the device D, the device B may send, to the device D, the SMS message that is received earlier in the two SMS messages that include the verification code or the verification code in the SMS message. The device B may send, to the device A, the SMS message that is received later in the two SMS messages that include the verification code or the verification code in the SMS message.

S5304: The device B sends the verification code information to the device A.

In an embodiment, the verification code information sent by the device B to the device A may be content of an SMS message received by the device B, or may be a verification code extracted by the device B.

For example, the verification code information may be carried in a BLE data packet. The BLE data packet includes a PDU. The verification code information may be carried in a service data field in the PDU, or may be carried in a manufacturer specific data field in the PDU. For example, a payload of the service data field may include a plurality of bits. The plurality of bits include an extensible bit. The device A and the device B may agree on content of an extensible bit. The device B may encode the verification code information in an encoding mode such as GBK or ISO8859-1, and use one or more extensible bits to carry information obtained after the encoding. After receiving the BLE data packet sent by the device B, the device A may decode information in a corresponding bit, to obtain the verification code information.

The following describes in detail, by using FIG. 54 and FIG. 55, a process in which the device B transmits the verification code to the device A.

As shown in FIG. 54, a notification service of the device B may be configured to perform steps of notification listening and data encapsulation.

Notification listening: The notification service (notification service) of the device B registers a notification listener service (notification listener service) with a system. When a notification that includes a verification code is received, the system calls back an onNotificationPosted method, so that the notification service can obtain an original verification code notification (status bar notification, SBN).

It should be understood that the foregoing system callback method is described by using onNotificationPosted in an Android architecture as an example. This embodiment of this application is not limited thereto. The device B may alternatively be an electronic device running another operating system, and the callback method is not limited thereto.

Data encapsulation: Because a data type of the original verification code notification is not suitable for network-based transmission, the device B may parse and reassemble original notification data for compatibility of various operating systems (such as Android, Windows, and iOS).

FIG. 55 shows a process in which a device B parses and reassembles a verification code notification. As shown in FIG. 55, after obtaining the SBN by using the onNotificationPosted method, the notification service may send the SBN to a notification unit (NotificationUtil), and the notification unit extracts main information of the SBN.

The notification unit may first parse the information in the SBN to obtain the following information:

(1) Identity information of the notification: The identity information of the notification is information that can indicate uniqueness of the notification, for example, an application package name, an application ID, or a key value (key).
(2) Content information of the notification: When cross-device presentation needs to be performed, content of the notification needs to be parsed, for example, an icon of the notification, a title of the notification, and content of the notification, where the content of the notification includes a verification code.
(3) Action information of the notification, that is, an action part of the notification: When a click action of the notification needs to be responded to, the action part of the notification needs to be parsed.

After the SBN is parsed, content obtained through parsing may be extracted and encapsulated. The notification unit of the device B may parse the SBN to obtain notification information (notification information). For example, the notification information may include the content of the notification, or the notification information may include the verification code in the content of the notification. The device B may send the notification information to the notification service. The notification service encapsulates the notification information and sends the notification information to a network manager (network manager). The network manager may convert the notification information into a byte stream (for example, a binary byte stream), and send the notification information to the device A through a network channel (for example, Wi-Fi or Bluetooth).

In this embodiment of this application, the device B performs data reassembling once on the notification information obtained through parsing, encapsulates the notification information, and sends the encapsulated notification information to the device A. In this way, a data structure for network transmission can be well unified. All data is encapsulated before being sent over a network, and then sent through the network channel.

A sending channel of the notification may be a network channel created based on the transmission control protocol/internet protocol (transmission control protocol/internet protocol, TCP/IP). When a device goes online, a (socket) link is established between two parties. In addition, to ensure that a notification message can reach a sink end device successfully, availability of the channel is checked before each notification is sent. When the network is unreachable, a socket connection is actively initiated once. After the connection is successfully initiated, the notification information is sent to the destination end device.

In an embodiment, after sending the verification code information to the device A, the device B may delete the stored verification code information of the device A.

S5305: Based on the verification code information, the device A prompts the user with the verification code, or fills the verification code in a verification code input box.

For example, as shown in FIG. 23(c), the notebook computer may automatically fill the verification code (for example, "900912") in the verification code input box.

For example, as shown in FIG. 24(c), the tablet computer may display the obtained verification code at a recommended display location of an input method.

As shown in FIG. 54, after receiving the verification code information sent by the device B, the device A may parse the verification code information. If the verification code information is the content of the notification received by the device B, the device A may first extract the verification code in the content of the notification.

In this embodiment of this application, the device A may fill the verification code in the verification code input box in the following several manners.

Manner 1: Proactive intervention by the user

After obtaining the verification code, a notification service of the device A places content of the verification code to a system clipboard. After the device A detects, in the verification code input box, an operation that the user performs pasting by performing a right-click operation or performs active pasting by pressing Ctrl+V, the device may paste the verification code in the clipboard to the verification code input box.

Manner 2: Input method recommendation

An input method of the device A listens to the received verification code information, or listens to content in a clipboard. After the verification code information is obtained through listening, the verification code is used as a first candidate word recommendation candidate.

Manner 3: Filling by using an automatic filling framework

After obtaining the verification code, the notification service of the device A places the verification code content to the automatic filling framework, and finally the automatic filling framework completes filling in the verification code input box.

In this embodiment of this application, interaction between devices can help the user quickly and conveniently fill the verification code in the SMS message, so as to avoid a process of viewing a device that receives the verification code, memorizing the verification code, and manually filling the verification code. This greatly simplifies operation steps of filling the verification code by the user, and helps improve user experience.

FIG. 56 is a schematic flowchart of a verification code obtaining method 5600 according to an embodiment of this application. The method 5600 is applied to a first electronic device. The first electronic device is connected to a second electronic device by using a short-distance wireless communications technology, the first electronic device is a device without a calling card, or the first electronic device is a device including a first calling card, and the second electronic device is a device including a second calling card. The method 5600 includes the following steps.

S5601: The first electronic device displays a first interface, where the first interface includes a verification code input box.

For example, as shown in FIG. 23(b), a phone number input box and a verification code input box are displayed on a login interface of a video app on the notebook computer. The phone number input box includes a phone number "187××××676" input by the user. The notebook computer is a device without a calling card, and the mobile phone is a device including a second calling card (a phone number corresponding to the second calling card is "187××××676").

For example, as shown in FIG. 24(b), a phone number input box and a verification code input box are displayed on a login interface of a game app on the tablet computer. The phone number input box includes a phone number "187××××676" input by the user. The tablet computer is a device without a calling card, and the mobile phone is a device including a second calling card (a phone number corresponding to the second calling card is "187××××676").

It should be understood that FIG. 23(a)-1 and FIG. 23(a)-2 to FIG. 23(d) and FIG. 24(a)-1 and FIG. 24(a)-2 to FIG. 24(d) in embodiments of this application are described by using an example in which the phone number input box and the verification code input box are on a same interface. Alternatively, the phone number input box and the verification code input box may be on different interfaces. For example, the first electronic device may first display a second interface, where the second interface includes a phone number input box and a verification code obtaining control. When the first electronic device detects that a user inputs a first phone number in the phone number input box and taps the verification code obtaining control, the first electronic device may jump to the first interface.

S5602: When detecting an operation of obtaining a verification code by using the first phone number, the first electronic device requests verification code information from the second electronic device and requests a server to send the verification code information to an electronic device corresponding to the first phone number, where a phone number corresponding to the second calling card is the first phone number.

In an embodiment, that the first electronic device requests verification code information from the second electronic device includes: The first electronic device sends verification code request information to the second electronic device, where the verification code request information is used to request the verification code information.

For example, as shown in FIG. 23(b), after the notebook computer detects an operation that the user taps an "obtain a verification code" control, the notebook computer may determine that the user expects to obtain a verification code by using the phone number "187××××676". The notebook computer may request the verification code information from the mobile phone.

For example, as shown in FIG. 24(b), after the tablet computer detects an operation that the user taps an "obtain a verification code" control, the tablet computer may determine that the user expects to obtain a verification code by using the phone number " 187××××676". The tablet computer may request the verification code information from the mobile phone.

Optionally, the first electronic device may store device information of the second electronic device in advance, where the device information of the second electronic device includes information about a phone number corresponding to the second calling card. For example, the first electronic device and the second electronic device may be devices with a same Huawei ID, and the first electronic device may store device information such as a device type, a device name, address information, and a phone number corresponding to a calling card of the second electronic device in advance. In this way, when the first electronic device detects an operation that the user taps the "obtain a verification code" control, the first electronic device may search for device information of another device with a same Huawei ID. If a phone number in the device information of the another device with a same Huawei ID is the same as a phone number input by the user in a phone number input box, the first electronic device may determine a device corresponding to the phone number as the second electronic device. The first electronic device may request the verification code information from the second electronic device by using a short-distance wireless communications technology (for example, by using a BLE data packet). If the first electronic device does not receive the verification code information within preset time, the first electronic device may determine that the second electronic device is not around the first electronic device, and the first electronic device may directly request the verification code information from the second electronic device by using the server. Alternatively, after determining the second electronic device, the first electronic device may directly request the verification code information from the second electronic device by using the server.

If the phone number in the device information of the another device with a same Huawei ID is different from the phone number input by the user in the phone number input box, the first electronic device may send a query request to a surrounding device of the first electronic device, where the query request is used to query a phone number of the surrounding device. After receiving the query request, the surrounding device of the first electronic device may send a response to the first electronic device, where the response carries information about the phone number. The first electronic device may determine the second electronic device based on information about phone numbers in one or more received responses and the phone number input by the user in the phone number input box. Therefore, the first electronic device requests the verification code information from the second electronic device.

S5603: The first electronic device receives the verification code information sent by the second electronic device.

Optionally, the verification code information is a verification code.

For example, after receiving an SMS message, the second electronic device may extract a verification code in content of the SMS message, to use the verification code information to carry the verification code and send the verification code information to the first electronic device.

As shown in FIG. 23(c), after receiving an SMS message, the mobile phone may extract a verification code "900912" in the SMS message, to use the verification code information to carry the verification code and send the verification code information to the notebook computer.

For example, the verification code information is content of the SMS message, and the method further includes: The first electronic device extracts the verification code in the content of the SMS message.

As shown in FIG. 23(c), after receiving the SMS message, the mobile phone may extract the content of the SMS message (for example, the content of the SMS message includes "Verification code 900912, 5 minutes...beware of being cheated") and send the content to the notebook computer. Therefore, the notebook computer extracts the verification code by using the content of the SMS message.

S5604: Based on the verification code information, the first electronic device prompts the user with the verification code, or automatically fills the verification code in the verification code input box.

For example, as shown in FIG. 23(c), the notebook computer may automatically fill the verification code (for example, "900912") in the verification code input box.

For example, as shown in FIG. 24(c), the tablet computer may display the obtained verification code at a recommended display location of an input method.

The method in this embodiment of this application helps the user quickly and conveniently fill the verification code in the SMS message, avoids a process of viewing the mobile phone, memorizing the verification code, and manually filling the verification code by the user, greatly simplifies operation steps of the user, improves a degree of intelligence of the electronic device, and helps improve user experience.

It should be understood that, in the foregoing embodiment, the verification code information is obtained by using the phone number. This embodiment of this application is not limited thereto. The verification code may alternatively be obtained by using an email address. FIG. 57 is a schematic flowchart of a verification code obtaining method 5700 according to an embodiment of this application. The method 5700 may be performed by a first electronic device and a second electronic device. As shown in FIG. 57, the method 5700 includes the following steps.

S5701: When detecting an operation of obtaining a verification code by using a first account, the first electronic device requests verification code information from the second electronic device, and requests a server to send the verification code information to an electronic device corresponding to the first account, where the electronic device corresponding to the first account is the second electronic device.

Optionally, the first account includes a phone number or an email account.

For example, the first account is a phone number. As shown in FIG. 23(b), the operation of obtaining the verification code by using the first account may be an operation that the notebook computer detects that the user taps an "obtain a verification code" control. As shown in FIG. 24(b), the operation of obtaining the verification code by using the first account may be an operation that the tablet computer detects that the user taps an "obtain a verification code" control.

For example, a phone number input box in FIG. 23(b) may alternatively be an email address input box, and a phone number input box in FIG. 24(b) may alternatively be an email address input box.

Optionally, before the first electronic device requests the verification code information from the second electronic device, the method further includes: The first electronic device sends a query request to a surrounding device, where the query request is used to request account information of the surrounding device, and the surrounding device includes the second electronic device. The second electronic device sends response information to the first electronic device, where the response information includes information about the first account. That the first electronic device requests verification code information from the second electronic device includes: The first electronic device requests the verification code information from the second electronic device based on the response information. For example, when determining that the account information carried in the response information includes the first account, the first electronic device may determine that the second electronic device is a device that receives the verification code information, so that the first electronic device can request the verification code information from the second electronic device.

For example, the first account is a phone number, and the query request is used to request a phone number of the surrounding device. After the second electronic device receives the query request, if the second electronic device is a dual-card device (including two calling cards), the second electronic device may use the response information to carry information about two phone numbers. When determining that the two phone numbers include the first account, the first electronic device may determine that the second electronic device is a device that receives the verification code information, to request the verification code information from the second electronic device.

For example, the first account is an email address, and the query request is used to request an email address stored in the surrounding device. After receiving the query request, the second electronic device may determine that app 1 and app 2 in the second electronic device are email applications and email addresses that are logged in to are an email address 1 and an email address 2. In this case, the second electronic device may use the response information to carry information about the email address 1 and the email address 2. When determining that the two email addresses include the first account, the first electronic device may determine that the second electronic device is a device that receives the verification code information, to request the verification code information from the second electronic device.

In this embodiment of this application, the first electronic device may send the query request to the surrounding device, to determine the second electronic device by using account information carried in a response sent by the surrounding device, so as to request the verification code information from the second electronic device. In this way, the first electronic device does not need to store account information of the second electronic device in advance, but determines the second electronic device from the surrounding device in real time when the verification code needs to be obtained. This helps improve accuracy of obtaining the verification code.

Optionally, before the first electronic device requests the verification code information from the second electronic device, the method further includes: The first electronic device sends a query request to a surrounding device, where the query request is used to request the surrounding device to determine whether an account of the surrounding device includes the first account, and the surrounding device includes the second electronic device. The second electronic device sends response information to the first electronic device, where the response information is used to indicate that an account of the second electronic device includes the first account. That the first electronic device requests verification code information from the second electronic device includes: The first electronic device requests the verification code information from the second electronic device based on the response information.

For example, the first account is a phone number, and the query request is used to query whether a phone number of the surrounding device includes the first account. After receiving the query request, the second electronic device may determine, by using information about the first account that is carried in the query request, whether a phone number of the second electronic device includes the first account. If the second electronic device is a dual-card device, the second electronic device may determine whether phone numbers (for example, a phone number 1 and a phone number 2) corresponding to two calling cards include the first account. If the second electronic device determines that the phone number 1 and the phone number 2 include the first account (or the second electronic device determines that the phone number 1 is the same as the first account or the phone number 2 is the same as the first account), the second electronic device may send an acknowledgement to the first electronic device. After receiving the acknowledgement, the first electronic device may determine that the second electronic device is a device that receives the verification code information, to request the verification code information from the second electronic device.

For example, the first account is an email address, and the query request is used to query whether an email address of the surrounding device includes the first account. After receiving the query request, the second electronic device may determine, by using information about the first account that is carried in the query request, whether an email address of the second electronic device includes the first account. For example, if app 1 and app 2 of the second electronic device are email applications, and corresponding email addresses are an email address 1 and an email address 2 respectively, the second electronic device may determine whether the email address 1 and the email address 2 include the first account. If the second electronic device determines that the email address 1 and the email address 2 include the first account (or the second electronic device determines that the email address 1 is the same as the first account or the email address 2 is the same as the first account), the second electronic device may send an acknowledgement to the first electronic device. After receiving the acknowledgement, the first electronic device may determine that the second electronic device is a device that receives the verification code information, to request the verification code information from the second electronic device.

In this embodiment of this application, the first electronic device may query, by using the query request, whether the account of the surrounding device includes the first account, and the surrounding device determines whether the account of the surrounding device includes the first account. After receiving the response of the second electronic device, the first electronic device may determine that the account of the second electronic device includes the first account. The first electronic device may determine the second electronic device as a device that receives the verification code information, to request the verification code information from the second electronic device. In this way, the first electronic device does not need to store account information of the second electronic device in advance, but determines the second electronic device from the surrounding device in real time when the verification code needs to be obtained. This helps improve accuracy of obtaining the verification code.

It should be understood that, for a process in which the first electronic device sends the query request to the second electronic device and the second electronic device sends the response information to the first electronic device, refer to the description in the foregoing method 5300. For brevity, details are not described herein again.

It should be further understood that a sequence in which the first electronic device requests the verification code information from the second electronic device and the first electronic device requests the server to send the verification code information to the electronic device corresponding to the first account is not limited in this embodiment of this application.

Optionally, the first electronic device may store device information of the second electronic device, where the device information of the second electronic device includes account information of the second electronic device. When determining that the account information of the second electronic device includes the first account, the first electronic device may determine that the second electronic device is a device that receives the verification code information.

In this embodiment of this application, the first electronic device may prestore account information of one or more electronic devices. In this way, when the first electronic device needs to obtain the verification code by using the first account, the first electronic device may first determine the second electronic device from the one or more electronic devices. If the first electronic device may determine the second electronic device from the one or more electronic devices, the first electronic device may request the verification code information from the second electronic device. This can avoid a process in which the first electronic device determines the second electronic device from the surrounding device, and improve efficiency of obtaining the verification code by the first electronic device.

S5702: After receiving the verification code information sent by the server, the second electronic device sends the verification code information to the first electronic device.

After the first electronic device requests the server to send the verification code information to the electronic device corresponding to the first account, the server may send the verification code information to the electronic device corresponding to the first account. The first account may correspond to one or more electronic devices, and the one or more electronic devices include the second electronic device. After receiving the verification code information sent by the server, the second electronic device may send the verification code information to the first electronic device.

Optionally, the server may send an SMS message or an email to the second electronic device, where the SMS message or the email includes the verification code information. The verification code information may include content of the SMS message or content of the email. After receiving the content of the SMS message or the content of the email, the first electronic device may extract the verification code from the content of the SMS message, or extract the verification code from the content of the email.

Optionally, the verification code information may be a verification code. After receiving the SMS message or the email from the server, the second electronic device may extract the verification code from the SMS message or the email, to send the extracted verification code to the first electronic device

It should be understood that, for a process in which the second electronic device sends the verification code information to the first electronic device, refer to the description in the method 500. For brevity, details are not described herein again.

Optionally, the verification code may be a number, a letter, or a combination of a number and a letter; or the verification code may be different types of text (for example, Chinese, Korean, and Japanese); or the SMS message or the email sent by the server to the second electronic device may carry a voice verification code, and the second electronic device may extract the corresponding verification code in the voice verification code, or the second electronic device may send the voice verification code to the first electronic device, and the first electronic device extracts the verification code in the voice verification code.

Optionally, after obtaining the verification code information, the first electronic device may prompt the user with the verification code, or automatically fill the verification code in a verification code input box.

In this embodiment of this application, when the first electronic device needs to obtain the verification code, the first electronic device may request the verification code information from the second electronic device, and the second electronic device may send the verification code information to the first electronic device when receiving the verification code information sent by the server. This omits a process in which a user views the second electronic device and actively memorizes the verification code, brings convenience to the user, improves efficiency of obtaining the verification code, and improves user experience.

FIG. 58 is a diagram of a system architecture according to an embodiment of this application. The system includes a device A and a device B. The device A is an input device (for example, the mobile phone in FIG. 25(a)-1 and FIG. 25(a)-2 to FIG. 25(e)-1 and FIG. 25(e)-2 to FIG. 29(a) to FIG. 29(d)), and the device B is an input device (for example, the smart television in FIG. 25(a)-1 and FIG. 25(a)-2 to FIG. 25(e)-1 and FIG. 25(e)-2 and FIG. 27(a)-1 and FIG. 27(a)-2 to FIG. 27(g)-1 and FIG. 27(g)-2).

The device B detects that a text input box of the device B obtains a focus. In this case, the device B enters an input state.

After receiving information indicating that the device B enters the input state, an input management module 5810 of the device B notifies an input state sending module 5820 of the device B to send a broadcast message to a surrounding device, where the broadcast message is used to indicate that the device B needs to perform text input; and notifies an input content receiving module 5830 of the device B to enter an input content receiving state.

After receiving the foregoing instruction, the input state sending module 5820 of the device B sends the broadcast message to the surrounding device. After receiving the instruction for entering the input content receiving state, the input content receiving module 5830 of the device B starts to listen to a message that includes input content and that is sent by the surrounding device.

For example, the broadcast message may be a BLE data packet, the BLE data packet may carry indication information, and the indication information indicates that the device B needs to perform text input. The BLE data packet includes a PDU, and the indication information may be carried in a service data (service data) field in the PDU, or may be carried in a manufacturer specific data (manufacturer specific data) field in the PDU. For example, a payload (payload) of the service data field may include a plurality of bits. The plurality of bits include an extensible bit. The device A and the device B may agree on content of an extensible bit. When an extensible bit is 1, the device A may learn that the device B needs to perform text input.

In an embodiment, the broadcast message may further carry a MAC address of the device B. For example, if the broadcast message is a BLE data packet, the MAC address of the device B may be carried in an access address (access address) field in the BLE data packet.

For example, the broadcast message may be a user datagram protocol (user datagram protocol, UDP) data packet. The UDP data packet may carry the indication information, and the indication information indicates that the device B needs to perform text input. The UPD data packet includes a data part of an IP datagram. A data part of the IP datagram may include an extensible bit. The device A and the device B may agree on content of an extensible bit. When an extensible bit is 1, the device A may learn that the device B needs to perform text input.

In an embodiment, the UDP data packet may carry an IP address and a port number of the device B (including a source port number and a destination port number, where the source port number is a port number used by the device B to send data, and the destination port number is a port used by the device B to receive data). The IP address and the port number of the device B may be carried in a UDP header of a data part of an IP datagram. Alternatively, the UDP data packet may carry an IP address but does not carry a port number.

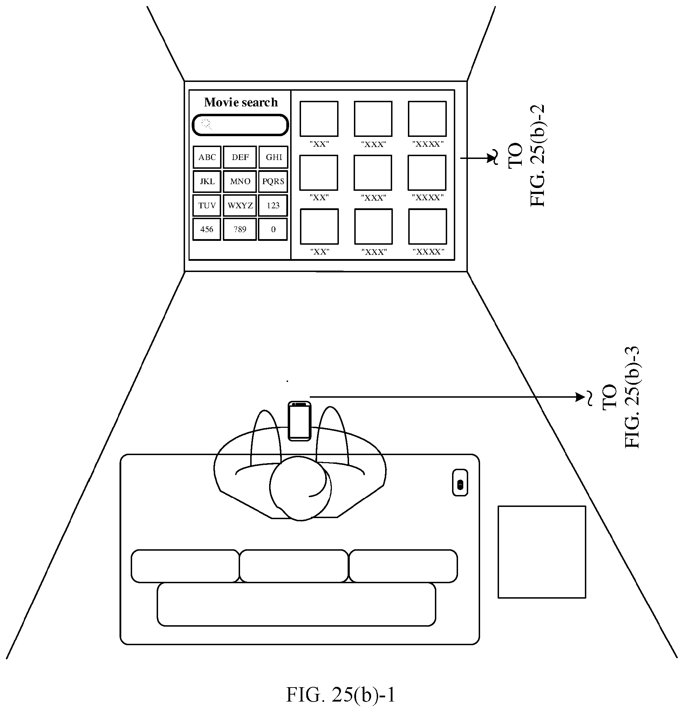

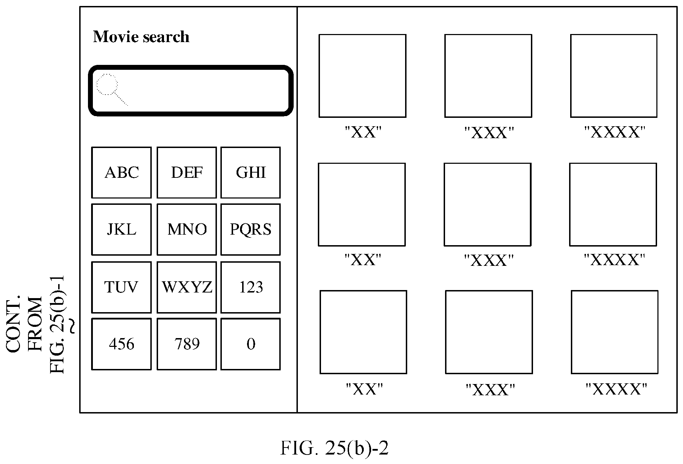

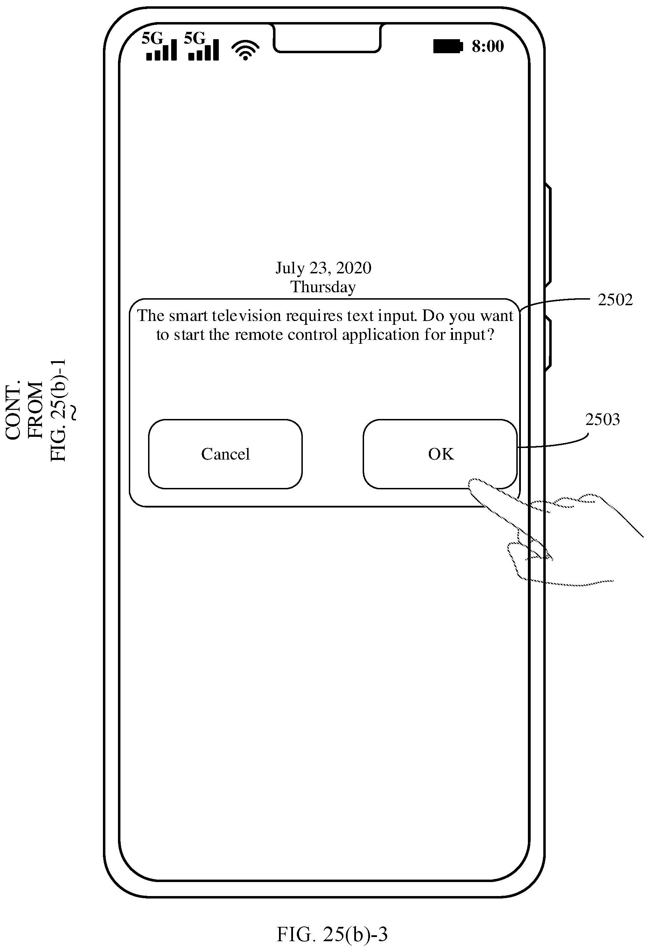

An input state receiving module 5850 of the device A may be always in a broadcast message listening state. After receiving the broadcast message sent by the input state sending module 5820 of the device B, the input state receiving module 5850 notifies an input management module 5840 of the device A of an event that the device B needs text input. The input management module 5840 of the device A notifies a display to display a prompt box (as shown in FIG. 25(b)), or prompts a user with a text input icon (as shown in FIG. 26(a)).

After detecting an operation that the user taps the control 2503, the device A starts a remote control application. After detecting an operation that the user taps the input control 2504, the device A displays an input method. Alternatively, after detecting, on a lock screen interface, an operation that the user taps the icon 2601, the device A displays an input method on the lock screen interface.

After obtaining text content input by the user in a text input box, the input management module 5840 of the device A may send the text content to an input content sending module 5860 of the device A.

For example, if a BLE data packet sent by the device B to the device A carries a MAC address of the device B, after obtaining the MAC address of the device B, the device A may establish a Bluetooth connection to the device B. The device A may send the text content to the device B by using the BLE data packet. The text content may be carried in a service data field or a manufacturer specific data field in the PDU. For example, a payload of the service data field may include a plurality of bits. The plurality of bits include an extensible bit. The device A may encode, in an encoding mode such as GBK, ISO8859-1, or Unicode (for example, UTF-8 or UTF-16), the text content that is input by the user and that is detected on the device A, and use one or more extensible bits to carry information obtained after the encoding. After receiving the BLE data packet sent by the device A, the device B may decode information in a corresponding bit, to obtain the text content input by the user on the device A.

For example, if a UDP data packet carries an IP address and a destination port number of the device B, the device A may establish a transmission control protocol (transmission control protocol, TCP) connection to the device B by using the IP address and the destination port number. The device A may send, to the destination port number by using the TCP connection, the text content that is input by the user and that is detected on the device A.

For example, if the UDP data packet carries the IP address of the device B but does not carry the destination port number, after obtaining the IP address of the device B, the device A may not establish a TCP connection to the device B. The device A may send the UDP data packet to the device B. The UDP data packet may carry the text content that is input by the user and that is detected on the device A. For example, the text content may be carried in a data part of an IP datagram in the UDP data packet. The data part includes an extensible field, and the device A and the device B may agree on an extensible bit to carry the text content. The device A may encode, in an encoding mode such as GBK, ISO8859-1, or Unicode, the text content that is input by the user and that is detected on the device A, and use one or more extensible bits to carry information obtained after the encoding. After receiving the UDP data packet sent by the device A, the device B may decode information in a corresponding bit, to obtain the text content input by the user on the device A.

After receiving the text content sent by the input content sending module 5860, the input content receiving module 5830 in the input content receiving state sends the text content to the input management module 5810 of the device B. The input management module 5810 of the device B displays the received text content in the text input box.

The foregoing provides the implementation processes of the GUIs shown in FIG. 25(a)-1 and FIG. 25(a)-2 to FIG. 25(e)-1 and FIG. 25(e)-2 and FIG. 26(a) to FIG. 26(c). The input state receiving module 5850 of the device A may be always in the broadcast message listening state. The following describes implementation processes of the GUIs shown in FIG. 27(a)-1 and FIG. 27(a)-2 to FIG. 27(g)-1 and FIG. 27(g)-2 and FIG. 28(a) to FIG. 28(e). In the implementation processes of the GUIs shown in FIG. 27(a)-1 and FIG. 27(a)-2 to FIG. 27(g)-1 and FIG. 27(g)-2 and FIG. 28(a) to FIG. 28(e), a difference from FIG. 25(a)-1 and FIG. 25(a)-2 to FIG. 25(e)-1 and FIG. 25(e)-2 and FIG. 26(a) to FIG. 26(c) lies in that the input state receiving module 5850 of the device A starts to listen to a broadcast message only when the device A detects a preset operation of a user.

After the device A detects that the user starts a remote control application, the input management module 5840 may notify the input state receiving module 5850 to enter a broadcast message listening state, so as to start to listen to the broadcast message. Alternatively, when detecting that the user taps an input control, the device A displays an input method, and the input management module 5840 detects that a mobile phone displays the input method. The input management module 5840 notifies the input state receiving module 5850 to enter the broadcast message listening state, so as to start to listen to the broadcast message.

It should be understood that this embodiment of this application is described by using an example in which the device A detects that the user enters the broadcast message listening state after starting the remote control application. This embodiment of this application is not limited thereto. The device A may alternatively enter the broadcast message listening state after detecting that another application (for example, app 1) is started. For example, after the device A detects that the user taps an icon of app 1, app 1 at an application layer sends, to a system service at an application framework layer, a label (for example, a process identifier (process identifier, PID)) corresponding to app 1 and a process name corresponding to app 1, and the system service may determine, based on the label and the process name, that app 1 is started. After determining that app 1 is started, the system service may trigger the input state receiving module 5850 (for example, the wireless communications module in FIG. 1) of the device A to enter the broadcast message listening state.

In an embodiment, the device A may alternatively enter the broadcast message listening state after detecting the preset operation of the user. For example, the preset operation may be an operation such as double tapping, touching and holding, folding, or expanding a screen. After detecting the preset operation of the user, the device A may trigger the input state receiving module 5850 to enter the broadcast message listening state. After receiving a broadcast message sent by a surrounding device, the device A may automatically display the input method.

The input state receiving module 5850 of the device A receives a broadcast message sent by the input state sending module 5820 of the device B, and learns that the device B needs text input. It should be understood that, for a manner in which the device B sends the broadcast message, refer to the description in the foregoing embodiment. For brevity, details are not described herein again.

The input state receiving module 5850 of the device A notifies the input management module 5840 of the device A of an event that the device B needs text input. The input management module 5840 of the device A obtains text content input by the user by using an input method service. The input management module 5840 of the device A invokes the input content sending module 5860 of the device A to send the text content input by the user to the device B. It should be understood that, for a manner in which the device A sends the content input by the user to the device B, refer to the description in the foregoing embodiment. For brevity, details are not described herein again.

After receiving the text content sent by the input content sending module 5860 of the device A, the input content receiving module 5830 of the device B in the input content receiving state sends the text content to the input management module 5810 of the device B. The input management module 5810 of the device B displays the received text content in the text input box.

In the foregoing procedure, cross-device text input function from the device A to the device B is completed.

In the foregoing procedure, Bluetooth communication or local area network communication may be selected for communication between the device A and the device B according to a requirement. When the device B sends the broadcast message, one manner of Bluetooth or a local area network may be selected, or both manners may be selected.

The device A may select, based on whether the device A and the device B are paired through Bluetooth or whether the device A and the device B are in a same local area network, a manner with a highest speed to send the text content input by the user to the device B.

For example, if the BLE data packet that is sent by the device B and that is received by the device A includes a MAC address of the device B, the device A may determine, based on the MAC address of the device B, whether Bluetooth pairing has been performed between the device A and the device B. If Bluetooth pairing has been performed between the device A and the device B, the device A may perform Bluetooth pairing with the device B and establish a Bluetooth connection. After the Bluetooth connection is established, the device A may send a BLE data packet to the device B. The BLE data packet carries the text content input by the user.

For example, if the broadcast message received by the device A includes an IP address of the device B, the device A may determine, based on the IP address of the device B, whether the device A and the device B are in a same local area network. If the device A determines that the device A and the device B are in the same local area network, when the UDP data packet further carries a destination port number of the device B, the device A may establish a TCP connection to the device B. After the TCP connection is established, the device A may send the text information to the device B by using the TCP connection. Alternatively, if the device B uses a UDP data packet to carry only the IP address of the device B but not to carry the destination port number, the device A may send the UDP data packet to the device B. The UDP data packet carries the text content input by the user.

In an embodiment, to ensure that the text content input by the user and sent by the device A to the device B is not disclosed, the device A may encrypt the text content by using an encryption key of the device B for sending. For example, the device B stores a public key and a private key, and the device B may use the broadcast message to carry the public key of the device B. For example, the public key of the device B may be carried in a service data field or a manufacturer specific field in the BLE data packet. When sending the text content to the device B, the device A may encrypt the text content by using the public key of the device B. For example, if the device A establishes a TCP connection to the device B, the device A may send, to the device B by using the TCP connection, the text content encrypted by using the public key; or if the device A does not establish a TCP connection to the device B, the device B may send a UDP data packet to the device A, where a data part of an IP datagram in the UPD data packet may carry the text content encrypted by using the public key; or the device A may send a BLE data packet to the device B, where a service data field or a manufacturer specific field in the BLE data packet may carry the text content encrypted by using the public key. After receiving the text content encrypted by using the public key, the device B may perform decryption by using the private key, to obtain the text content sent by the device A. Another device may also listen to the text content encrypted by using the public key. However, because the another device does not have the private key of the device B, the another device cannot decrypt the text content encrypted by using the public key. This ensures that the text content sent by the device A to the device B is not disclosed.

In this embodiment of this application, the device A and the device B do not need to actively enter pairing in advance or establish a connection by using a network. When the device B needs to perform text input, the device A may dynamically obtain related information, and may assist the device B in completing text content input.

FIG. 59 is a schematic flowchart of a text input method 5900 according to an embodiment of this application. The method 5900 may be performed by a first electronic device and a second electronic device, and the method 5900 includes the following steps.

S5901: The first electronic device displays a text input interface on a display, where the text input interface includes a text input box.

For example, a display interface of the smart television shown in FIG. 25(a)-1 and FIG. 25(a)-2 is a text input interface, and the text input interface includes the text input box 2501.

S5902: The first electronic device sends a first message in response to displaying the text input interface, where the first message is used to indicate that the first electronic device needs to perform text input.

In an embodiment, that the first electronic device responds to displaying the text input interface includes: The first electronic device responds to the fact that a current focus of the first electronic device is in a text input box on the text input interface. Alternatively, that the first electronic device responds to displaying the input interface includes: The first electronic device responds to the fact that a current focus of the first electronic device is on a key of an input method displayed on the text input interface.

For example, the display interface of the smart television shown in FIG. 25(a)-1 and FIG. 25(a)-2 is a text input interface, and a current focus of the smart television displayed on the text input interface is the text input box 2501. In response to the fact that the current focus of the smart television is the text input box 2501, the smart television sends the first message.

In an embodiment, that the first electronic device sends a first message in response to displaying the text input interface includes: The first electronic device sends the first message to one or more devices in response to displaying the text input interface.

For example, the one or more devices and the first electronic device are devices with a same account (for example, a Huawei account); or the one or more devices and the first electronic device are accounts in a same family group.

For example, the one or more devices may be devices that have completed Bluetooth pairing with the first electronic device; or the one or more devices may be devices that are in same Wi-Fi as the first electronic device.

In an embodiment, that the first electronic device sends a first message in response to displaying the text input interface includes: The first electronic device sends a broadcast message to a surrounding device in response to displaying the text input interface, where the broadcast message is used to indicate that the first electronic device needs to perform text input.

It should be understood that, for a manner in which the first electronic device sends the broadcast message, refer to the description in the foregoing embodiment. For brevity, details are not described herein again.

S5903: The second electronic device detects a preset operation of a user, and listens to the first message.

It should be understood that, in this embodiment of this application, a sequence in which the second electronic device detects the operation of the user and listens to the first message is not specifically limited. The second electronic device may first detect the operation of the user, and then receive the first message; or the second electronic device may first receive the first message, and then detect the preset operation of the user.

In an embodiment, the preset operation may be an operation that the user starts an application; or the preset operation may be a preset gesture of the user (for example, the user draws a preset pattern on a display of the second electronic device, or a mid-air gesture of the user); or the preset operation may be an operation that the user presses a physical button; or the preset operation may be a combination of a preset gesture and pressing a physical button.

In an embodiment, the preset operation may be an operation that the user picks up the second electronic device.

For example, the second electronic device includes a gyro sensor (for example, the gyro sensor 180B in FIG. 1), and the second electronic device may detect, by using the gyro sensor, whether the user picks up the second electronic device.

In an embodiment, the preset operation may be an operation that the user unlocks the second electronic device.

In an embodiment, when detecting the preset operation of the user and listening to the first message, the second electronic device may further detect whether the first electronic device falls within a preset angle range of the second electronic device.

For example, the second electronic device may be a device having an angle of arrival (angle of arrival, AOA) calculation capability. For example, the second electronic device may include a compass and a Bluetooth/Wi-Fi antenna array. The second electronic device may calculate an orientation of the first electronic device, and the Bluetooth/Wi-Fi antenna array of the second electronic device may receive a wireless signal of the first electronic device, and calculate the orientation of the first electronic device according to formulas (1) and (2):

$$\varphi = \left(2\pi d \cos(\theta)\right) / \lambda \tag{1}$$

$$\theta = \cos^{-1}\left((\varphi\lambda) / (2\pi d)\right) \tag{2}$$

Herein, d is a distance between the Bluetooth/Wi-Fi antenna array of the second electronic device and a Bluetooth/Wi-Fi antenna of the first electronic device, $\varphi$ is a phase difference between the Bluetooth/Wi-Fi antenna array of the second electronic device and the Bluetooth/Wi-Fi antenna of the first electronic device, $\lambda$, is a wavelength of a Bluetooth signal (for example, the first message) sent by the first electronic device, and $\theta$ is an angle of arrival.

In an embodiment, that the second electronic device detects a preset operation of a user, and listens to the first message includes: The second electronic device detects the preset operation of the user. The second electronic device start to listen to the first message in response to detecting the preset operation of the user.

For example, as shown in FIG. 27(c), after the mobile phone detects that the user starts a remote control application, the mobile phone starts to listen to the first message.

For example, as shown in FIG. 29(a), after the mobile phone detects an operation that the user draws "S" on the display interface, the mobile phone starts to listen to the first message.

It should be understood that, considering that there may be a specific time interval from a moment at which the second electronic device displays the text input interface to a moment at which the mobile phone detects the preset gesture of the user, the first electronic device may send a plurality of first messages within first preset duration (for example, one minute) when displaying the text input interface. In this way, it can be ensured that the second electronic device can receive the first message after detecting the preset operation of the user.

In an embodiment, that the second electronic device detects a preset operation of a user, and listens to the first message includes: The second electronic device listens to the first message. The second electronic device detects the preset operation of the user in response to receiving the first message.

For example, as shown in FIG. 27(c), before the mobile phone detects that the user starts the remote control application, the mobile phone receives the first message. However, because the mobile phone has not detected the preset operation of the user, the mobile phone may first save the first message without giving any text input prompt to the user. As shown in FIG. 27(d), when the mobile phone detects an operation that the user starts the remote control application, the mobile phone may directly display the prompt box 2703, to prompt the user to perform text input on the smart television by using the mobile phone; or when the mobile phone detects an operation that the user starts the remote control application, the mobile phone may directly invoke the input method to display the GUI shown in FIG. 27(e).

For example, as shown in FIG. 29(a), before the mobile phone detects the operation that the user draws "S" on a lock screen interface, the mobile phone receives the first message. However, because the mobile phone has not detected the preset operation of the user, the mobile phone may first save the first message without giving any text input prompt to the user. When the mobile phone detects the operation that the user draws "S", the mobile phone may directly display the GUI shown in FIG. 29(b); or the mobile phone may directly display the GUI shown in FIG. 29(c); or the mobile phone displays the GUI shown in FIG. 29(d) after entering the lock screen interface.

It should be understood that, considering that there may be a specific time interval from a moment at which the first electronic device displays the text input interface to a moment at which the second electronic device detects the preset gesture of the user, the second electronic device may keep listening to the first message. If the mobile phone detects the preset gesture of the user after receiving the first message, when detecting that the text input interface is displayed, the first electronic device may send a plurality of first messages within second preset duration (for example, 5 seconds). After receiving the first message, the second electronic device may start to detect the preset operation of the user.

S5904: In response to detecting the preset operation of the user and receiving the first message, the second electronic device detects first content input by the user.

It should be understood that the foregoing describes a case in which the second electronic device may start to listen to the first message in response to detecting the preset operation of the user, or the second electronic device may start to detect the preset operation of the user in response to listening to the first message. In this embodiment of this application, there may be no association between detecting the preset operation of the user and listening to the first message by the second electronic device. The second electronic device may detect the input of the user, provided that the second electronic device detects the preset operation of the user and receives the first message.

In an embodiment, that the second electronic device detects, in response to detecting the preset operation of the user and receiving the first message, content input by the user includes: In response to detecting the preset operation of the user and receiving the first message, and detecting that a time interval between a moment at which the second electronic device detects the preset operation of the user and a moment at which the second electronic device receives the first message is less than a preset time interval, the second electronic device detects the content input by the user.

In an embodiment, that the second electronic device detects, in response to detecting the preset operation of the user and receiving the first message, content input by the user includes: The second electronic device detects, in response to detecting the preset operation of the user, receiving the first message, and determining that the first electronic device falls within a preset angle range of the second electronic device, the content input by the user.

In an embodiment, that the second electronic device detects, in response to detecting the preset operation of the user and receiving the first message, content input by the user includes: The second electronic device detects the input of the user if the second electronic device detects the preset operation of the user within third preset duration starting from receiving the first message.

In this embodiment of this application, if the second electronic device does not detect the preset operation of the user for a long time after receiving the first message, the user may not perform text input on the first electronic device by using the second electronic device. The second electronic device may ignore the first message after the third preset duration is exceeded. That is, when the second electronic device detects the preset operation of the user after the third preset duration, the second electronic device does not give any text input prompt to the user, or the second electronic device does not invoke the input method. This can avoid interference caused to the user if the user performs the preset operation on the second electronic device after the user does not use the second electronic device for a long time.

For example, as shown in FIG. 27(e), when the mobile phone detects that the user starts the remote control application and receives the first message, the mobile phone may invoke the input method, so that the mobile phone starts to detect the content input by the user.

For example, as shown in FIG. 29(c), when the mobile phone detects an operation that the user draws "S" on the lock screen interface and receives the first message, the mobile phone may invoke the input method, so that the mobile phone starts to detect the content input by the user.

In an embodiment, the first message sent by the first electronic device may be received by a plurality of electronic devices (for example, the plurality of electronic devices include the second electronic device, a third electronic device, and a fourth electronic device). If the second electronic device and the third electronic device request to establish a connection to the first electronic device within fourth preset duration starting from a moment at which the first electronic device sends the first message, the first electronic device may establish a connection to the second electronic device and the third electronic device, so that the second electronic device and the third electronic device can invoke the input method to detect the content input by the user.

If the fourth electronic device also receives the first message after the fourth preset duration, the fourth electronic device requests to establish a connection to the first electronic device. In this case, the first electronic device may reject the request of the fourth electronic device, so that the fourth electronic device does not display any text input prompt or the fourth electronic device does not invoke the input method. This also helps avoid interference caused to the user by the prompt information or the input method that is displayed on the electronic device that receives the first message after a period of time.

In an embodiment, the first electronic device may establish a connection only to a device (for example, the second electronic device) that first requests to establish a connection. The first electronic device may ignore a request of another electronic device. This helps avoid interference caused when input is performed by using a plurality of devices.

S5905: The second electronic device sends the first content to the first electronic device in response to detecting an operation that the user inputs the first content.

For example, as shown in FIG. 27(e), after the mobile phone detects an operation that the user inputs text content "movie 1", the mobile phone may send the text content to the smart television.

For example, as shown in FIG. 27(f), after the mobile phone detects an operation that the user inputs voice content "movie 1", the mobile phone may send the text content to the smart television.

For example, as shown in FIG. 28(e), after the mobile phone detects an operation that the user inputs voice content "movie 1", the mobile phone may send the text content to the smart television.

For example, as shown in FIG. 29(c), after the mobile phone detects an operation that the user inputs text content "movie 1", the mobile phone may send the text content to the smart television.

It should be understood that, in this embodiment of this application, the mobile phone may send the detected content to the smart television in real time. For a specific process, refer to the description in the foregoing embodiment. For brevity, details are not described herein again.

In an embodiment, the first content includes information about a first account, and the method 5900 further includes: The second electronic device sends indication information to the first electronic device, where the indication information indicates that the second electronic device is a device including the first account.

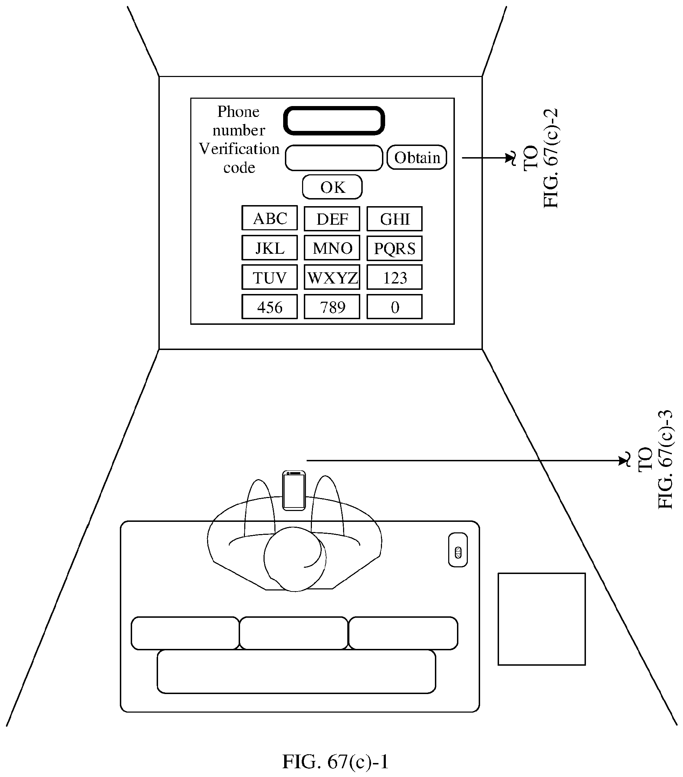

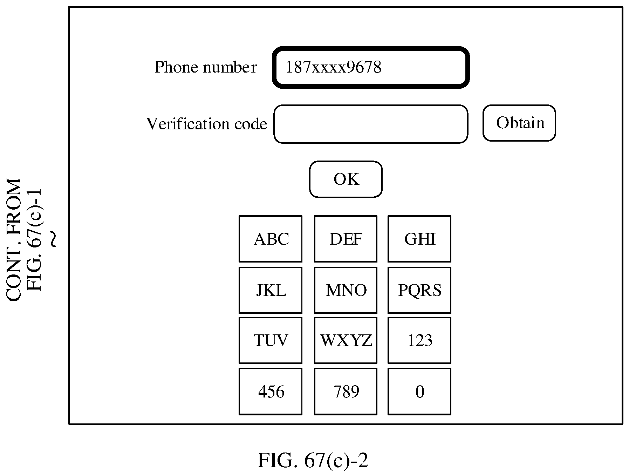

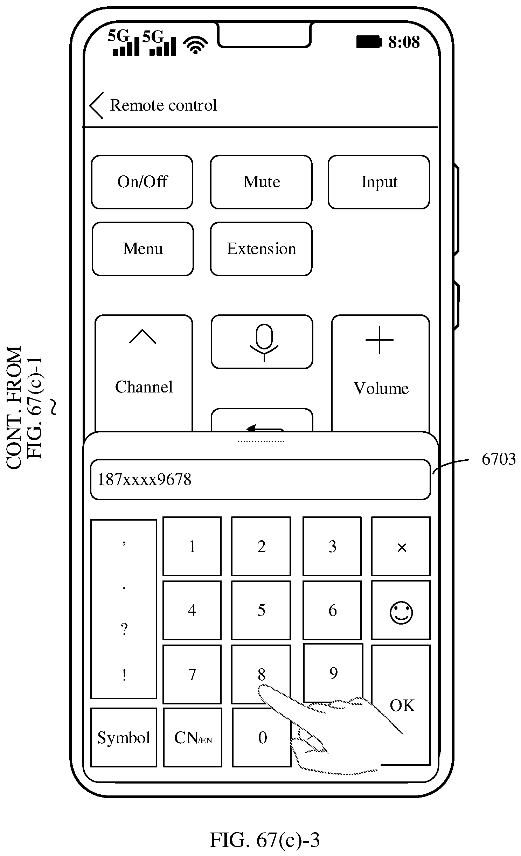

For example, as shown in FIG. 67(c)-1 to FIG. 67(c)-3, the mobile phone detects that the user inputs text content "187xxxx9678", and sends the text content to the smart television. The mobile phone may determine that the text content "187xxxx9678" input by the user is a phone number corresponding to a SIM card in the mobile phone. In this case, the mobile phone may send indication information to the smart television. The indication information indicates that the mobile phone is a device corresponding to the phone number "187xxxx9678".

For example, the mobile phone may send the indication information to the smart television by using a BLE data packet. The indication information may be carried in a service data field or a manufacturer specific data field in a PDU. For example, a payload of the service data field may include a plurality of bits. The plurality of bits include an extensible bit. The mobile phone and the smart television may agree on an extensible bit. For example, when an extensible bit is "1", the smart television may learn that the mobile phone is a device corresponding to the first account in the text content.

In an embodiment, the method 5900 further includes: When detecting an operation that the user obtains a verification code by using the first account, the first electronic device requests verification code information from the second electronic device, and requests a server to send the verification code information to an electronic device corresponding to the first account. The second electronic device sends the verification code information to the first electronic device when receiving the verification code information sent by the server.

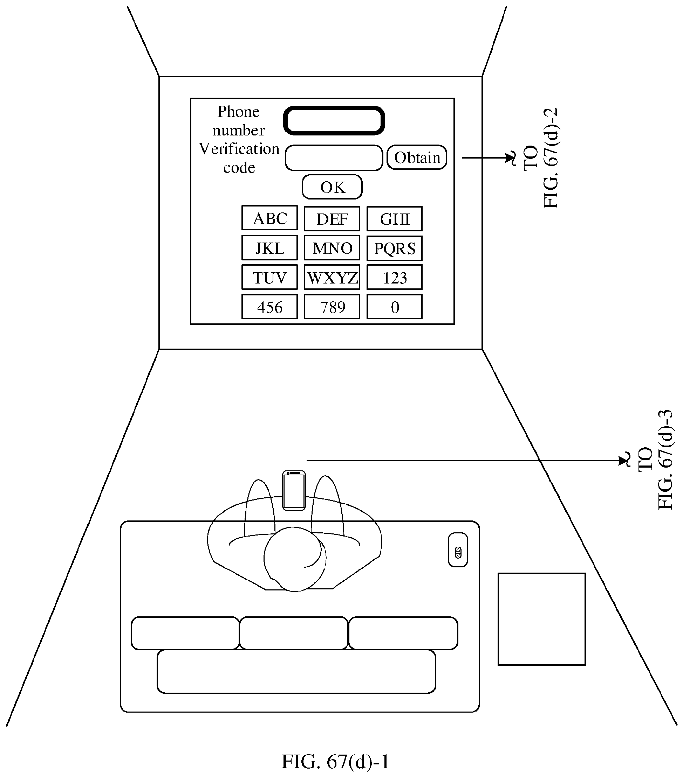

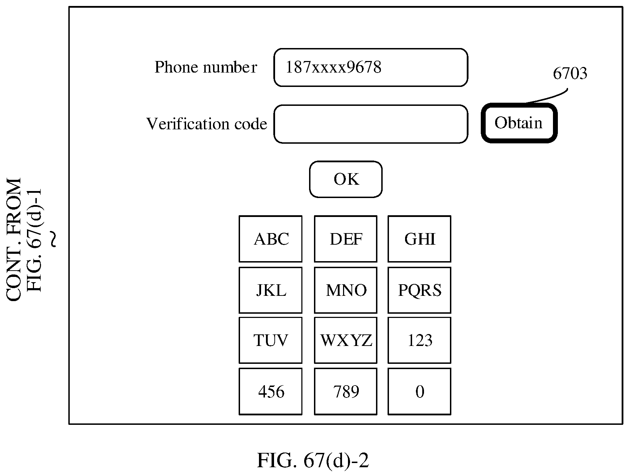

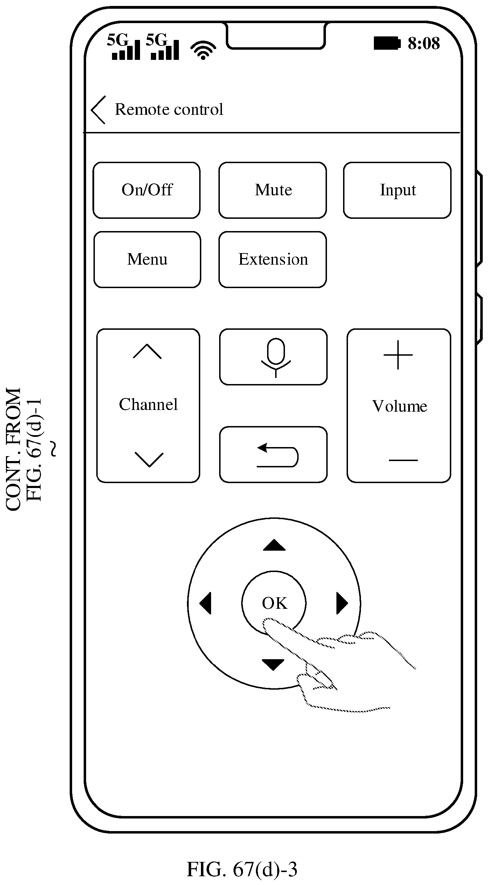

For example, as shown in FIG. 67(d)-1 to FIG. 67(d)-3, when the smart television detects that the user taps an OK control by using a remote control, the smart television may request the server to send the verification code information to a device corresponding to the phone number "187xxxx9678". Because the smart television obtains the indication information from the mobile phone, the smart television may determine that the mobile phone is the device corresponding to the phone number "187xxxx9678", so that the smart television can request the verification code information from the mobile phone. When receiving the verification code information from the server, the mobile phone may send the verification code information to the smart television, so that the smart television prompts the user with the verification code information, or the smart television can fill the verification code information in a verification code input box. For example, as shown in FIG. 67(e)-1 to FIG. 67(e)-3, after receiving the verification code information sent by the mobile phone, the smart television may fill a verification code "900912" in the verification code input box.

S5906: The first electronic device displays text content corresponding to the first content in the text input box.

For example, as shown in FIG. 25(e)-1 and FIG. 25(e)-2, after receiving text content "movie 1" sent by the mobile phone, the smart television may display the text content in the text input box.

For example, if the smart television receives voice content sent by the mobile phone, the smart television may first convert the voice content into text content, to display the text content in the text input box 2501.

In an embodiment, if the second electronic device detects that the content input by the user is voice content, the second electronic device may convert the voice content into text content and then send the text content to the first electronic device, so that the first electronic device displays the corresponding text content in the text input box 2501.

In this embodiment of this application, when the first electronic device needs to perform text input, the user may pick up any device (for example, a mobile phone or a pad) around the user to perform input. This helps improve convenience of performing text input by the user, and improve user experience. In addition, when detecting the preset operation of the user and receiving the first message, the second electronic device may prompt, by using a prompt box, the user to perform text input. This helps the user determine that the second electronic device may be used as an input device. Before detecting the preset operation performed by the user on the second electronic device and receiving the first message, the second electronic device does not display any prompt information that may cause interference to the user. This avoids interference to the user, and helps improve user experience.

With reference to FIG. 60 to FIG. 63, the following describes implementation processes of FIG. 30(a) to FIG. 30(k) to FIG. 37(a)-1 and FIG. 37(a)-2 and FIG. 37(b)-1 and FIG. 37(b)-2 in embodiments of this application.

With reference to FIG. 60, the following describes a system architecture according to an embodiment of this application. The system architecture includes a device A and a device B. The device A may be a device (for example, a mobile phone) having a pickup function, and the device B may be a device (for example, a notebook computer) having an efficient editing function. The device A includes a pickup module 6010, an ASR module 6020, a transceiver control module 6030, and a replacement module 6040. The device B includes a transceiver control module 6050, a display unit 6060, and an editing control module 6070.

The pickup module 6010 is configured to obtain voice content that needs to be processed. In this embodiment of this application, a manner in which the device A obtains the voice content is not specifically limited, and there may be various obtaining manners. For example, the voice content may be a voice recorded from a surrounding environment of the device A in real time; or may be audio of audio/video played by a user on the mobile phone; or may be audio (including far-end and near-end audio) obtained by the device A when the device A makes a call by using a mobile network; or may be an audio/video file in the mobile phone. The pickup module converts related audio into a specific audio format, for example, a pulse code modulation (pulse code modulation, PCM) audio stream at a sampling rate, to serve as input into the ASR module.

The ASR module 6020 may convert the voice content into text content. A specific PCM audio stream is input to the ASR module 6020, so that a phoneme sequence with a highest probability is obtained through a trained deep neural network acoustic model, and then a text series with a highest probability is obtained through a corresponding language model, thereby completing conversion from the voice content to the text content.

The transceiver control module 6030 is configured to control information synchronization between the device A and another device. In this embodiment of this application, the transceiver control module 6030 may be responsible for transparent transmission of information, and the transceiver control module 6030 does not involve logical processing of transmitted content. Information may be transmitted by using a local area network, for example, Bluetooth, Wi-Fi, or another transmission protocol (for example, the internet). The device A establishes a connection network link with another device (for example, the device B) by using a network communication protocol, and then initiates transmission.

It should be understood that, for function descriptions of the transceiver control module 6050, refer to the transceiver control module 6030. For brevity, details are not described herein again.

The display unit 6060 is configured to prompt the user whether to start text editing on the device B. The transceiver control module 6050 receives an indication that is sent by the transceiver control module 6030 and that is used by the device A to obtain audio content (for example, voice content or an audio file). Alternatively, after receiving an indication that is sent by the transceiver control module 6030 and that is used to perform text editing on the device B, the transceiver control module 6050 may pop up a prompt in a notification form by using the display unit 6060. If the device B detects that the user determines to perform a text editing operation by using the device B, the device B may send a response to the transceiver control module 6030 by using the transceiver control module 6050. The response may be used to indicate that the device B may be used as a text editing device. After the transceiver control module 6030 of the device A receives the response, the device A starts to transmit an ASR result to the device B in real time.

In an embodiment, after the device A detects that audio content (for example, voice content or an audio file) is obtained, the transceiver control module 6030 may send a query request. The query request is used to query a surrounding device having a text editing function.

For example, if the device A and the device B are devices with a same account, the device A may store information such as a device type, a device name, and a MAC address of the device B. When the device A detects that the voice content is obtained, the device A may send a BLE data packet to the device B based on the MAC address of the device B. The BLE data packet may include a PDU. The query request may be carried in a service data field in the PDU, or may be carried in a manufacturer specific data field in the PDU. For example, a payload of the service data field may include a plurality of bits. The plurality of bits include an extensible bit. The device A and the device B may agree on content of an extensible bit. When an extensible bit is 1, the device B may learn that the device A queries whether the device B has a text editing function.

For example, as shown in FIG. 32(c)-1 and FIG. 32(c)-2, when the mobile phone detects an operation that the user taps the control 3201 (the control 3201 is a control for starting recording), the mobile phone may send a BLE data packet. The BLE data packet may carry the query request.

In an embodiment, when the device A detects that the user performs a voice-to-text operation, the device A may send a BLE data packet to the device B based on the MAC address of the device B.

For example, as shown in FIG. 30(d)-1 and FIG. 30(d)-2, when the mobile phone detects that the user taps the control 3002 (the control 3002 is a control used by the mobile phone to perform voice-to-text conversion), the mobile phone may send a BLE data packet. The BLE data packet may carry the query request.

The transceiver control module of the device B may invoke an interface (for example, a content provider interface) for querying a text editing function to send a request to one or more applications at an application layer, where the request is used to request the application to determine whether the application has a text editing function. If the application has a text editing function, the application may send a response to a data synchronization module, where the response is used to indicate that app 2 has been logged in to by using an account. In this way, the device B may determine that app 2 is installed and logged in to on the device B.

After the device B determines that the device B has a text editing function, the device B may send a response to the device A. The response may be carried in a BLE data packet. The BLE data packet may include a PDU. The query request may be carried in a service data field in the PDU, or may be carried in a manufacturer specific data field in the PDU. For example, a payload of the service data field may include a plurality of bits. The plurality of bits include an extensible bit. The device A and the device B may agree on content of an extensible bit. When an extensible bit is 1, the device A may learn that the device B has a text editing function.

After the device A determines that the device B has a text editing function, the device A may send text content corresponding to the obtained audio content and indication information to the device B. The indication information indicates to edit the text content on the device B.

For example, the device A may send a BLE data packet to the device B based on the MAC address of the device B. The BLE data packet may include a PDU. The text content and the indication information may be carried in a service data field in the PDU, or may be carried in a manufacturer specific data field in the PDU. For example, a payload of the service data field may include a plurality of bits. The plurality of bits include an extensible bit. The device A and the device B may agree on content of an extensible bit. The device A may encode, in an encoding mode such as GBK, ISO8859-1, or Unicode (for example, UTF-8 or UTF-16), the text content output by the ASR module of the device A, and use one or more extensible bits to carry information obtained after the encoding. The device A may set an extensible bit to 1. After receiving the BLE data packet, the device B may obtain the text content and the indication information through decoding, so that the device B can display the text content based on the indication information.

Alternatively, after the device A determines that the device B has a text editing function, the device A may send text content corresponding to the obtained audio content to the device B.

For example, the device A may send a BLE data packet to the device B based on the MAC address of the device B. The BLE data packet may include a PDU. The text content may be carried in a service data field in the PDU, or may be carried in a manufacturer specific data field in the PDU. For example, a payload of the service data field may include a plurality of bits. The plurality of bits include an extensible bit. The device A and the device B may agree on content of an extensible bit. The device A may encode, in an encoding mode such as GBK, ISO8859-1, or Unicode (for example, UTF-8 or UTF-16), the text content output by the ASR module of the device A, and use one or more extensible bits to carry information obtained after the encoding. After receiving the BLE data packet, the device B may obtain the text content through decoding, so that the device B can display the text content.

In an embodiment, if the device A and the device B are devices with a same account, the device A may store information such as a device type, a device name, and a MAC address of the device B, and whether the device B has a text editing function. In this case, when the device A obtains audio content, the device A may send text content corresponding to the audio content and indication information to the device B. The indication information indicates to edit the text content on the device B. In response to receiving the text content and the indication information, the device B may prompt, by using the display unit 860, the user whether to perform text editing on the device B. In response to detecting that the user performs a text editing operation on the device B, the device B may start an application that can be used for text editing, to display the text content obtained from the device A.

Alternatively, the device A may send text content corresponding to the audio content to the device B. In response to receiving the text content by the device B, the device B may edit the text content on the device B, so that the device B can prompt, by using the display unit 860, the user whether to perform text editing on the device B. In response to detecting that the user performs a text editing operation on the device B, the device B may start an application that can be used for text editing, to display the text content obtained from the device A.

In this embodiment of this application, the display unit 6060 may be further configured to display the text content output by the ASR module (including an intermediate result and a final determining result). The display unit 6060 may be further configured to display the text content edited by the user on the device B.

In an embodiment, after receiving the text content sent by the transceiver control module 6030, the transceiver control module 6050 of the device B may append the text content to previously displayed text content. For example, the device B is a Windows system. After receiving text content, the transceiver control module 6050 of the device B may invoke a QT interface to perform the following steps: (1) Select all text content displayed by app 1. (2) Move a cursor to the end of the text. (3) Insert new text content sent by the device A. (4) Save all the text content in app 1.

The editing control module 6070 is configured to save, edit, and display the received information.

In this embodiment of this application, there may be two results sent by the ASR module 6020 to the device B.

The first is an intermediate result. For example, before a sentence is finished, the text content determined by the ASR module 6020 is not finally determined, and may be used as an intermediate result. The intermediate result is displayed to reflect real-time performance, but is not saved as a final result.

For example, the ASR module of the device A detects that the user sends a word to the device B each time the user speaks the corresponding word, so that the text content can be synchronously displayed on the device A and the device B. For example, the user says "I am XX". When the device A detects that the user says "I", the ASR module of the device A may send the corresponding text ("I") to the device B after determining the text content "I", so that the device B can display the text content "I". When the device A detects that the user says "am", the ASR module of the device A may send the corresponding text ("am") to the device B after determining the text content "am", so that the device B can append the text content "am" to the text content "I", until "I am XX" is displayed.

For example, the ASR module of the device A detects that the user sends a phrase to the device B each time the user speaks the corresponding phrase, so that the text content can be synchronously displayed on the device A and the device B. For example, the user says "any difficulty cannot stop us from advancing". When the device A detects that the user says "any", the ASR module of the device A may send the corresponding text ("any") to the device B after determining the text content "any", so that the device B can display the text content "any". When the device A detects that the user says "difficulty", the ASR module of the device A may send the corresponding text ("difficulty") to the device B after determining the text content "difficulty", so that the device B can append the text content "difficulty" to the text content "any", until "any difficulty cannot stop us from advancing" is displayed.

In an embodiment, the content displayed on the device A may be synchronized with the content displayed on the device B. When determining that the user finishes a sentence, the device A may correct the text content previously converted by the ASR module. For example, the user says "I want to eat noodles today", and the ASR module of the device A detects that the user sends corresponding text content to the device B each time the user speaks a word or a phrase. When the device A detects that the user speaks "want to", the ASR module may determine that corresponding text is "to", and the device A sends the corresponding text content ("to") to the device B, and the device B may display the text content "to". However, after determining that the user finishes the sentence, the device A may determine that an error exists in "to" in the previously converted text content "I want to eat noodles today". In this case, the device A may automatically correct "to" to "want to", to update the text content spoken by the user (from "I to eat noodles today" to "I want to eat noodles today"). The device A may send the updated text content to the device B, so that the device B can also update "to" in the previously displayed text content "I to eat noodles today" to "want to", to display the updated text content "I want to eat noodles today".

The second is that, after a sentence is finished, a recognition result of the sentence determined by the ASR module 6020 is not changed back, and such a result replaces the previous intermediate result for display and serves as a saved result.

For example, the ASR module of the device A may convert each word or each phrase spoken by the user into text content, but the device A may not send the text content to the device B before determining that the user does not finish a sentence. Instead, after determining that the user finishes a sentence and corrects previously converted text content, the device A sends the text content corresponding to the sentence to the device B.

In an embodiment, the ASR module of the device A may convert each word or each phrase spoken by the user into text content and send the text content to the device B. The device B may display, by using captions, the text content sent by the device A, but the device B may not display the text content in app 1. After the device A determines that the user finishes a sentence (and corrects previously converted text content), the device A may send, to the device B, text content corresponding to the sentence and indication information. The indication information indicates the device B to display the text content corresponding to the sentence in app 1. After receiving the text content and the indication information, the device B may display the text content corresponding to the sentence in app 1.

In a process in which the device A synchronizes an output result of the ASR module in real time, if the device B detects that the user edits the text content on the device B, the editing control module 6070 also re-saves and displays the edited result, and a subsequent ASR result is appended.

The editing control module 6070 is further configured to send the text content edited by the user to the transceiver control module 6050, so that the transceiver control module 6050 sends the edited text content to the transceiver control module 6030.

The replacement module 6040 is configured to: after receiving the edited text content sent by the transceiver control module 6030, replace the originally displayed text content with the edited text content.

In an embodiment, when recording ends or audio obtaining ends, the device A may indicate, to the device B, that the recording ends or the audio obtaining ends. After the editing is complete on the device B, the user can synchronize the editing result to device A at a time. The entire synchronization process is completed.

FIG. 61 is a schematic flowchart of a text editing method 6100 according to an embodiment of this application. The method 6100 may be implemented by a device A and a device B, and the method 6100 includes the following steps.

S6101: The device A obtains audio content.

For example, as shown in FIG. 30(d)-1 and FIG. 30(d)-2, when the mobile phone detects an operation that the user taps the control 3002, the mobile phone starts to collect voice content in an environment.

For example, as shown in FIG. 30(c), when the mobile phone detects an operation that the user taps the control 3201, the mobile phone starts to collect voice content in an environment.

For example, as shown in FIG. 33(b)-1 and FIG. 33(b)-2, when the mobile phone detects an operation that the user accepts the incoming call, the mobile phone may obtain voice content of another user.

For example, as shown in FIG. 34(b)-1 and FIG. 34(b)-2, when the mobile phone detects an operation that the user accepts the video call request, the mobile phone may obtain voice content of another user.

S6102: The device A sends first information to the device B based on the audio content.

In an embodiment, the first information is text content corresponding to the audio content.

It should be understood that, in this embodiment of this application, after obtaining the voice content, the device A may first convert the voice content into text content by using an ASR module, to send the text content to the device B. For a process in which the device A converts the voice content into the text content, refer to the description in the foregoing embodiment. For brevity, details are not described herein again.

In an embodiment, before the device A sends the voice content to the device B, the method further includes:

The device A sends a query request, where the query request is used to request a device that receives the query request to determine whether the device has a text editing function.

In response to receiving request information sent by the device A, the device B sends a response to the device A, where the response is used to indicate that the device B has a text editing function.

In response to receiving the response, the device A sends the first information to the device B.

In this embodiment of this application, the device A sends the query request to a surrounding device through broadcasting. Alternatively, the device A may store device information of the device B (for example, the device A and the device B are devices with a same account, or the device A and the device B are devices with different accounts in a same family group).

It should be understood that, for a process in which the device A sends the query request, refer to the description in the foregoing embodiment. For brevity, details are not described herein again.

In an embodiment, in response to receiving the query request, the device B may prompt the user whether to perform text editing on the device B. In response to an operation that the user determines to perform text editing on the device B, the device B sends the response to the device A.

For example, as shown in FIG. 30(d)-1 and FIG. 30(d)-2, after the notebook computer detects the query request sent by the mobile phone, the notebook computer may display the prompt box 3003. The prompt box 3003 includes prompt information "Your mobile phone is converting recording to text. Do you want to edit text on your notebook computer?". In response to an operation that the user taps the control 3004, the notebook computer may send the response to the mobile phone.

In an embodiment, after receiving the response sent by the device B, the device A may send request information to the device A. The request information is used to request the device B to edit the text content output by the device A; or the request information is used to request the device B to edit the text content corresponding to the audio content.

For example, as shown in FIG. 30(d)-1 and FIG. 30(d)-2, when the mobile phone detects an operation that the user taps the control 3002, the mobile phone may send a query request to a surrounding device, where the query request is used to query whether the surrounding device has a text editing function. In response to receiving a response sent by the notebook computer, the mobile phone may determine that the notebook computer has the text editing function. The mobile phone may send request information to the notebook computer. The request information is used to edit the text content output by the mobile phone. In response to receiving the request information from the mobile phone, the notebook computer may display the prompt box 3003. In response to an operation that the user taps the control 3004, the notebook computer may send a response to the mobile phone. The response is used to indicate that the notebook computer may edit the text content. In response to receiving the response, the mobile phone may send the text content to the notebook computer.

For example, as shown in FIG. 32(c)-1 and FIG. 32(c)-2, when detecting an operation that the user taps the control 3201, the mobile phone sends a query request to a surrounding device. In response to receiving a response sent by the notebook computer, the mobile phone may determine that the notebook computer has a text editing function. The mobile phone may send request information to the notebook computer. The request information is used to request the notebook computer to edit text content corresponding to audio content obtained by the mobile phone. In response to receiving the request information, the notebook computer may display the prompt box 3202. The prompt box 3202 includes prompt information "Your mobile phone is recording. Do you want to convert recording to text on your notebook computer?". In response to an operation that the user taps the control 3203, the notebook computer may send a response to the mobile phone. The response is used to indicate that the notebook computer may edit the text content corresponding to recording. In response to receiving the response, the mobile phone may send the text content to the notebook computer.

It should be further understood that the device B may send the response information to the device A by using a BLE data packet. For a specific sending process, refer to the foregoing process in which the device A sends the BLE data packet to the device B. For brevity, details are not described herein again.

For example, the request information may be carried in a user datagram protocol (user datagram protocol, UDP) data packet. The UPD data packet includes a data part of an IP datagram. A data part of the IP datagram may include an extensible bit. The device A and the device B may agree on content of an extensible bit. When an extensible bit is 1, the device B may learn that the device A requests to edit the text content.

The UDP data packet may further carry an IP address and a port number of the device A (including a source port number and a destination port number, where the source port number is a port number used by the device A to send data, and the destination port number is a port used by the device A to receive data). The IP address and the port number of the device A may be carried in a UDP header of a data part of an IP datagram. In response to receiving the UDP data packet, the device B may establish a transmission control protocol (transmission control protocol, TCP) connection to the device A.

It should be understood that, after the device B establishes the TCP connection to the device A, the device B may send the response to the device A by using the TCP connection.

For example, if a UDP data packet carries an IP address and a destination port number of the device A, the device B may establish a TCP connection to the device A by using the IP address and the destination port number. Then, the device A may send, to the device B by using the TCP connection, the text content input by the ASR module of the device A.

In an embodiment, the method 6100 further includes: The device A displays the text content when the device A converts the voice content into the text content.

For example, as shown in FIG. 30(e)-1 and FIG. 30(e)-2, after detecting voice content in an environment, the mobile phone may convert the voice content into text content, so that the text content is displayed on a display interface of a Memo application.

S6103: The device B displays, based on the first information, the text content corresponding to the audio content.

For example, as shown in FIG. 30(e)-1 and FIG. 30(e)-2, after receiving text content sent by the mobile phone, the notebook computer may display the text content by using app 1.

S6104: In response to detecting an operation that the user edits the text content, the device B may display the edited text content.

For example, as shown in FIG. 30(f)-1 and FIG. 30(f)-2 and FIG. 30(g)-1 and FIG. 30(g)-2, after the notebook computer detects an operation that the user edits the text content, the notebook computer may display the edited text content.

In an embodiment, the method 6100 further includes: The device B sends the edited text content to the device A.

In an embodiment, the device B detects a first operation of the user, and sends the edited text content to the device A.

For example, as shown in FIG. 30(f)-1 and FIG. 30(f)-2, when the notebook computer detects an operation that the user taps the control 307, the notebook computer may send the edited text content to the mobile phone.

For example, as shown in FIG. 30(g)-1 and FIG. 30(g)-2, when the notebook computer detects an operation that the user taps the control 307, the notebook computer may send the edited text content to the mobile phone.

In an embodiment, after receiving the edited text content, the device A may use the edited text content to edit the previously displayed text content. For example, as shown in FIG. 30(e)-1 and FIG. 30(e)-2 and FIG. 30(f)-1 and FIG. 30(f)-2, when the notebook computer detects an operation that the user taps the Save control 3007, the notebook computer may send the edited text content to the mobile phone. The mobile phone may replace the previously displayed text content with the text content edited by the user.

In this embodiment of this application, when detecting the editing operation performed by the user on the text content sent by the device A, the device B may correspondingly edit the text content. For example, refer to FIG. 30(g)-1 and FIG. 30(g)-2. When the notebook computer detects an editing operation performed by the user on the text content, the notebook computer may edit the text content received from the mobile phone. For example, the notebook computer may detect an operation that the user modifies "is succeeding" to "Zheng Chenggong". For another example, the notebook computer may detect an operation that the user adds a symbol "."after "annual characteristics". For another example, the notebook computer may detect an operation that the user inserts a symbol "," into "healthcare education housing food safety". For another example, the notebook computer may detect an operation that the user presses Enter after "social mentality?".

The device B may send the edited text content to the device A by using the BLE data packet or the TCP connection. For a sending manner, refer to the description in the foregoing embodiment. For brevity, details are not described herein again.

In an embodiment, if the device B detects that the user edits a format of the text content, when sending the edited text content to the device A, the device B may further indicate the format information of the text content to the device A. For example, the format of the text content may include a line feed (or carriage return) operation between two words in the text content, or a space between two words. For example, as shown in FIG. 30(g)-1 and FIG. 30(g)-2, when sending the edited text content to the mobile phone, the notebook computer may further indicate, to the mobile phone, that a line feed exists between "demands" and "2" and a line feed exists between "?" and "3".

In an embodiment, after detecting an operation that the user modifies the format of the text content, the device B may send the edited text content and the format information of the text content to the device A. For an implementation in which the device B sends the edited text content to the device A, refer to the description in the foregoing embodiment. For brevity, details are not described herein again. The following describes an implementation in which the device B sends the format information of the edited text content to the device A. For example, the format of the text content includes a font size, a font color, a font tilt, a font underline, a font background color, and a carriage return operation after a word in the text content.

For example, the device A may send the format information of the edited text content to the device B by using the BLE data packet. The text content may be carried in a service data field or a manufacturer specific data field in the PDU. For example, a payload of the service data field may include a plurality of bits. The plurality of bits include an extensible bit. For a character (for example, a word, a character, or a symbol) in the edited text content, the device A and the device B may agree on content of some extensible bits. For example, when an extensible bit is 000, the device A may learn that the character is not tilted, does not have an underline, and does not have a carriage return operation after the character. For example, when an extensible bit is 100, the device A may learn that the character is tilted, does not have an underline, and does not have a carriage return operation after the character. For example, when an extensible bit is 010, the device A may learn that the character is not tilted, has an underline, and does not have a carriage return operation after the character. For example, when an extensible bit is 001, the device A may learn that the character is not tilted, does not have an underline, and has a carriage return operation after the character.

For a character (for example, a word, a character, or a symbol) in the edited text content, the device A and the device B may agree on content of some extensible bits. For example, when an extensible bit is 000, the device A may learn that a font color of the character is black. For example, when an extensible bit is 001, the device A may learn that the font color of the character is gray. For example, when an extensible bit is 010, the device A may learn that the color of the character is blue. For example, when an extensible bit is 100, the device A may learn that the font color of the character is blue.

It should be understood that, for a process in which the device B indicates the font background color of a character in the edited text content to the device A, refer to the description in the foregoing embodiment.

For a character (for example, a word, a character, or a symbol) in the edited text content, the device A and the device B may agree on content of some extensible bits. For example, when an extensible bit is 000, the device A may learn that a font size of the character is 10. For example, when an extensible bit is 001, the device A may learn that the font size of the character is 12. For example, when an extensible bit is 010, the device A may learn that the font size of the character is 14. For example, when an extensible bit is 100, the device A may learn that the font size of the character is 18.

It should be understood that the format of the text content is not specifically limited in this embodiment of this application. After receiving the format information of the edited text content, the device B may display the edited text content based on the edited text content and the format information of the edited text content. The text content displayed on the device B corresponds to the text content displayed on the device A.

In an embodiment, the method 6100 further includes: The device A replaces the original text content with the edited text content received from the device B. In response to receiving the edited text content from the device B, the device A displays a second interface, where the second interface includes the edited text content.

For example, as shown in FIG. 30(f)-1 and FIG. 30(f)-2 and FIG. 30(g)-1 and FIG. 30(g)-2, in response to an operation that the user taps the Save control 3007. the notebook computer sends the edited text content to the mobile phone. After receiving the edited text content, the mobile phone may replace, with the edited text content, the text content originally displayed on the interface.

In an embodiment, when sending the edited text content to the device A, the device B may further send identification information of the edited text content to the device A.

It should be understood that S6104 is an optional step, and the device B may not send the edited text content to the device A. Instead, the edited text content is saved locally on the device B.

FIG. 62 shows another system architecture according to an embodiment of this application. The system architecture includes a device A and a device B. The device A may be a device (for example, a mobile phone) having a pickup function, and the device B may be a device (for example, a notebook computer) having an efficient editing function. The device A includes a pickup module 6210 and a transceiver control module 6220. The device B includes a transceiver control module 6230, an ASR module 6240. a display module 6250, and an editing control module 6260.

Different from the system architecture shown in FIG. 60, the ASR module may be included in the device B. The device A may be responsible for obtaining voice content or an audio file. The device A sends the obtained voice content or audio file to the transceiver control module 6230 of the device B by using the transceiver control module 6220, so that the ASR module 6240 of the device B converts the voice content or the audio file into text content, and the device B can display the converted text content to a user. After detecting an editing operation performed by the user on the text content by using the editing control module 6260, the device B may further display the edited text content by using the display module 6240.

With reference to FIG. 63 and FIG. 64, the following describes an implementation process of FIG. 38(a) to FIG. 38(d) in embodiments of this application.

FIG. 63 is a schematic flowchart of a method 6300 for taking a screenshot of an image according to an embodiment of this application. The method 6300 may be performed by a first electronic device and a second electronic device. The method 6300 includes the following steps.

S6301: The first electronic device establishes a connection to the second electronic device.

For example, as shown in FIG. 38(a), the notebook computer may establish a wireless connection (for example, a Bluetooth, Wi-Fi, or NFC connection) to the smartwatch.

In this embodiment of this application, if an account for logging in to the first electronic device is associated with an account for logging in to the second electronic device, the first electronic device may also establish a connection to the second electronic device by using a server.

S6302: In response to detecting an operation that a screenshot function is enabled, the first electronic device prompts a user to take a screenshot of image information on the first electronic device or the second electronic device.

For example, as shown in FIG. 38(b), the notebook computer may display the prompt box 3803. The prompt box 3803 is used to prompt the user to take a screenshot of the notebook computer or the smartwatch.

S6303: The first electronic device sends request information to the second electronic device in response to an operation that the user selects the first electronic device, where the request information is used to request image information displayed on the second electronic device.

For example, the request information may be carried in a BLE data packet. The BLE data packet includes a PDU. The request information may be carried in a service data field in the PDU, or may be carried in a manufacturer specific data field in the PDU. For example, a payload of the service data field may include a plurality of bits. The plurality of bits include an extensible bit. The first electronic device and the second electronic device may agree on content of an extensible bit. When an extensible bit is 1, the second electronic device may learn of the image information that the first electronic device requests the second electronic device to display.

S6304: In response to receiving the request information, the second electronic device sends, to the first electronic device, the image information displayed on the second electronic device.

FIG. 64 shows a process of transmitting the image information between the first electronic device and the second electronic device. After receiving the request information, the second electronic device may sample the entire display interface of the second electronic device according to a specific sampling frequency (for example, 60 Hz), perform data encoding on the sampled image information, and send the encoded image information to the first electronic device.

For example, the first electronic device may use the BLE data packet to carry the encoded data. The encoded data may be carried in a service data field in a PDU, or may be carried in a manufacturer specific data field in a PDU. For example, a payload of the service data field may include a plurality of bits. The plurality of bits include an extensible bit. The first electronic device and the second electronic device may agree on content of an extensible bit. After receiving the BLE data packet, the first electronic device may perform image decoding in a corresponding bit, to obtain the image information. In this way, the decoded image information is displayed in the window 3805.

S6305: The first electronic device detects a screenshot operation of the user, and displays the image information obtained after the screenshot.

For example, as shown in FIG. 38(d), after the notebook computer detects the screenshot operation of the user, the notebook computer may display the image information obtained after the screenshot in the window 3807.

It should be understood that, for a process in which the notebook computer takes a screenshot, refer to an existing screenshot technology. For brevity, details are not described herein again.

With reference to FIG. 65, the following describes an implementation process of FIG. 39(a)-1 and FIG. 39(a)-2 to FIG. 39(c)-1 and FIG. 39(c)-2 in embodiments of this application.

FIG. 65 is a schematic flowchart of a method 6500 for invoking a camera of another device to capture an image according to an embodiment of this application. The method 6500 may be performed by a first electronic device and a second electronic device. The second electronic device includes a camera. The method 6500 includes the following steps.

S6501: The first electronic device establishes a connection to the second electronic device.

For example, as shown in FIG. 39(a)-1 and FIG. 39(a)-2, the notebook computer may establish a wireless connection (for example, a Bluetooth, Wi-Fi, or NFC connection) to the mobile phone.

In this embodiment of this application, if an account for logging in to the first electronic device is associated with an account for logging in to the second electronic device, the first electronic device may also establish a connection to the second electronic device by using a server.

S6502: The first electronic device displays a first interface, where the first interface includes a first control, and the first control is used to start the camera of the second electronic device.

For example, after the first electronic device establishes the connection to the second electronic device, the first electronic device may send a BLE data packet to the second electronic device. The BLE data packet may include a query request, and the query request is used to request the second electronic device to query whether the camera is included. The query request may be carried in a service data field in a PDU, or may be carried in a manufacturer specific data field in a PDU. For example, a payload of the service data field may include a plurality of bits. The plurality of bits include an extensible bit. The first electronic device and the second electronic device may agree on content of an extensible bit. When an extensible bit is 1, the second electronic device may learn that the first electronic device requests to query whether the second electronic device includes the camera.

In response to receiving the query request, the second electronic device may query, at a hardware layer of the second electronic device, whether the camera is included. If the second electronic device determines that the hardware layer includes the camera, the second electronic device may send a response to the first electronic device. The response is used to indicate that the second electronic device includes the camera.

For example, the second electronic device may send a BLE data packet to the first electronic device. The BLE data packet may include the response. The response may be carried in a service data field in a PDU, or may be carried in a manufacturer specific data field in a PDU. For example, a payload of the service data field may include a plurality of bits. The plurality of bits include an extensible bit. The first electronic device and the second electronic device may agree on content of an extensible bit. When an extensible bit is 1, the first electronic device may learn that the second electronic device includes the camera. For example, the mobile phone includes a camera, and the notebook computer may display the control 3901.

In an embodiment, if the notebook computer further receives a response from another device (for example, a smart camera), the notebook computer may further display another control. The another control is used to enable a camera of the smart camera.

S6503: The first electronic device detects an operation that a user turns on the camera of the second electronic device, and sends request information to the second electronic device, where the request information is used to request the second electronic device to turn on the camera and send collected image information to the first electronic device.

For example, when the first electronic device detects an operation that the user turns on the camera of the second electronic device, the first electronic device may send a BLE data packet to the second electronic device. The BLE data packet includes the request information. The request information may be carried in a service data field in a PDU, or may be carried in a manufacturer specific data field in a PDU. For example, a payload of the service data field may include a plurality of bits. The plurality of bits include an extensible bit. The first electronic device and the second electronic device may agree on content of an extensible bit. When an extensible bit is 1, the second electronic device may learn that the second electronic device expects to turn on the camera and send, to the first electronic device, the image information collected by using the camera.

In response to receiving the request information, the second electronic device may enable the camera and send, to the first electronic device, the image information collected by using the camera. For example, the second electronic device may perform data encoding on the collected image information, and use a service data field or a manufacturer specific data field of the BLE data packet to carry the encoded image information. After receiving the BLE data packet, the first electronic device may perform image decoding on the BLE data packet, to display the decoded image information in the window 3902.

S6504: The first electronic device detects a first operation performed by the user on the image information, and obtains a processing result of the image information.

For example, the first operation may be a photographing operation. As shown in FIG. 39(b)-1 and FIG. 39(b)-2, when the notebook computer detects an operation that the user taps the control 3905, the notebook computer may take a screenshot of the image information in the window 3902 (take a screenshot of a frame of image at a moment at which it is detected that the user taps the control 3905), to obtain a photographing result.

For example, the first operation may be a video recording operation. When the notebook computer detects an operation that the user taps the control 3904, the notebook computer may record the image information in the window 3902, to obtain the recorded video information.

In this embodiment of this application, the first electronic device may invoke the camera of the second electronic device, so that the image information collected by the camera of the second electronic device can be displayed on the first electronic device in real time. This helps the user process, on the first electronic device, the image information collected by the camera of the second electronic device, avoids a process in which the user obtains the image information by using the second electronic device and transmits the image information between the first electronic device and the second electronic device, and helps improve user experience.

With reference to FIG. 66, the following describes an implementation process of FIG. 41(a) to FIG. 41(c) in embodiments of this application.

FIG. 66 is a schematic flowchart of a method 6600 for invoking another device to play audio or image information according to an embodiment of this application. The method 6600 may be performed by a first electronic device and a second electronic device. The method 6600 includes the following steps.

S6601: The first electronic device displays a first interface, where the first interface is a video play interface.

For example, as shown in FIG. 41(a), the mobile phone displays the video play interface. The mobile phone may display image information corresponding to the video on a display, and output audio corresponding to the video by using a speaker.

S6602: The first electronic device detects a first operation of a user on the first interface, and displays information about one or more devices.

For example, as shown in FIG. 41(a), when the mobile phone detects a pressing operation of the user in the window 4101, the mobile phone may display the icon 4103 corresponding to a smart sound box, the icon 4104 corresponding to a smart television, and the icon 4105 corresponding to a headset.

S6603: The first electronic device detects an operation that the user selects the second electronic device, and sends audio corresponding to a video to the second electronic device, or sends image information corresponding to the video to the second electronic device, or sends image information and audio corresponding to the video to the second electronic device.

For example, as shown in FIG. 41(b), when the mobile phone detects that the user overlaps the floating ball 4102 with the icon 4103, the mobile phone may determine that the user selects the smart sound box. Because the smart sound box has an audio play capability, the mobile phone may send the audio corresponding to the video to the smart sound box.

For example, if the mobile phone detects that the user overlaps the floating ball 4102 with the icon 4104, the mobile phone may prompt the user to send the audio corresponding to the video, or the image information corresponding to the video, or the audio and the image information corresponding to the video to the smart television. When the mobile phone detects that the user sends the image information corresponding to the video to the smart television, the mobile phone may send the image information to the smart television, and continue to play the audio corresponding to the video by using the speaker of the mobile phone.

For example, if the mobile phone detects that the user overlaps the floating ball 4102 with the icon 4105, the mobile phone may send the audio corresponding to the video to the headset, and the mobile phone continues to display the image information corresponding to the video on the display.

It should be understood that, for a process in which the mobile phone sends the audio to the smart sound box and a process in which the mobile phone sends the image information to the smart television, refer to the description in the foregoing embodiment. For brevity, details are not described herein again.

In an embodiment, when the mobile phone detects a pressing operation of the user in the window 4101, the mobile phone may send a query request to a surrounding device. The query request is used to query whether the surrounding device has an audio or video play capability. It should be understood that, for a process in which the mobile phone sends the query request to the surrounding device, refer to the description in the foregoing embodiment. For brevity, details are not described herein again.

When receiving the query request sent by the mobile phone, the surrounding device may query whether a hardware layer includes hardware related to audio or video play. For example, after receiving the query request, the smart sound box may query whether the hardware layer includes the speaker and the display. If the smart sound box determines that the hardware layer includes the speaker but does not include the display, the smart sound box may send a response to the mobile phone. The response is used to indicate that the smart sound box includes the speaker but does not include the display.

For example, the smart sound box may send a BLE data packet to the mobile phone. The BLE data packet may include the response. The response may be carried in a service data field in a PDU, or may be carried in a manufacturer specific data field in a PDU. For example, a payload of the service data field may include a plurality of bits. The plurality of bits include an extensible bit. The smart sound box and the mobile phone may agree on content of an extensible bit. When an extensible bit is 10, the mobile phone may learn that the smart sound box has an audio play capability but does not have an image information display capability.

For example, the smart television may send a BLE data packet to the mobile phone. The BLE data packet may include a response of the smart television to the query request. The response may be carried in a service data field in a PDU, or may be carried in a manufacturer specific data field in a PDU. For example, a payload of the service data field may include a plurality of bits. The plurality of bits include an extensible bit. The smart television and the mobile phone may agree on content of an extensible bit. When an extensible bit is 11, the mobile phone may learn that the smart television has an audio play capability and an image information display capability.

When the mobile phone determines that the user selects a device, the mobile phone may determine whether the device has only one capability (for example, has only an audio play capability). If the mobile phone determines that the device has only the audio play capability, the mobile phone may send only the audio to the device for playing. If the mobile phone determines that the device has the audio play capability and an image display capability, the mobile phone may prompt the user to play only the audio, or play only the image information, or play the audio and the image information on the device.

FIG. 67(a)-1 and FIG. 67(a)-2 to FIG. 67(e)-1 to FIG. 67(e)-3 show another group of GUIs according to an embodiment of this application.

As shown in FIG. 67(a)-1 and FIG. 67(a)-2, the user is controlling a display interface 6701 of the smart television by using a remote control, and the interface 6701 is a login interface of a video app. The interface 6701 includes a phone number input box 6702 and a verification code input box. A current focus of the smart television is on the phone number input box 6701. In response to the fact that the focus of the smart television is on the phone number input box 6701, the smart television may send a first message. The first message is used to indicate that the smart television needs to perform text input.

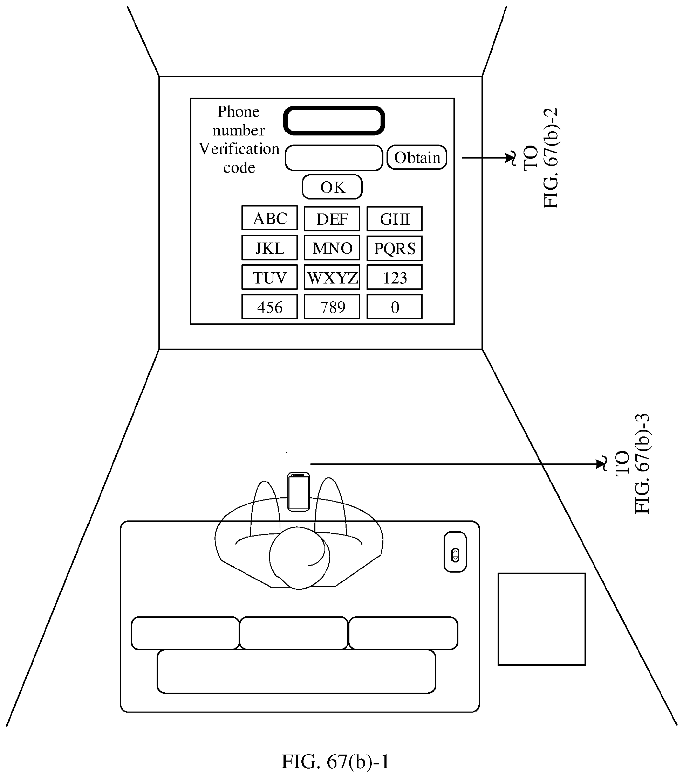

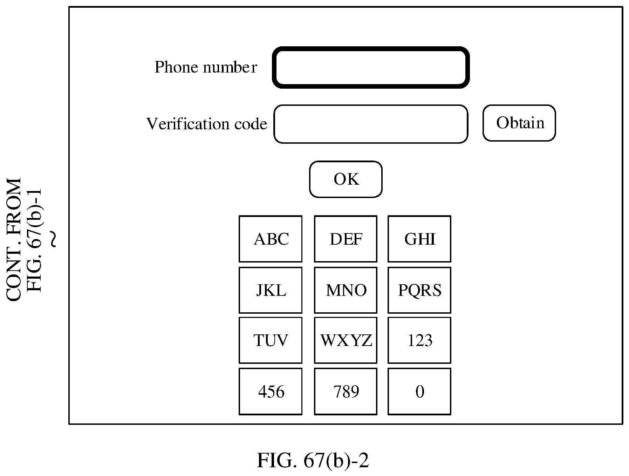

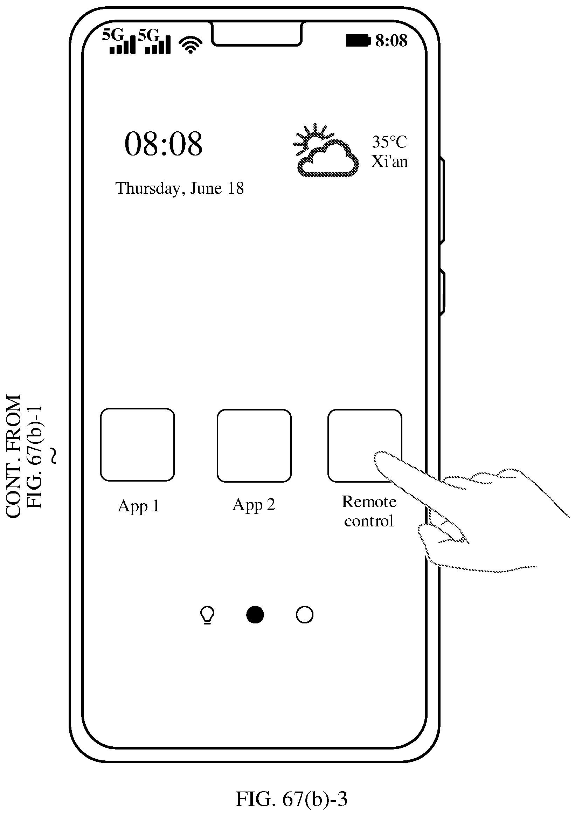

As shown in FIG. 67(b)-1 to FIG. 67(b)-3. the user chooses to use a remote control application of the mobile phone to perform text input on the smart television. The mobile phone currently displays a home screen of the mobile phone, and the home screen of the mobile phone includes an icon of the remote control application. When the mobile phone detects that the user starts the remote control application and receives the first message, the mobile phone may display the GUI shown in FIG. 67(c)-1 to FIG. 67(c)-3.

It should be understood that, for a process in which the mobile phone detects that the user starts the remote control application and receives the first message, refer to the procedure shown in FIG. 59. For brevity, details are not described herein again.

As shown in FIG. 67(c)-1 to FIG. 67(c)-3, in response to detecting that the user starts the remote control application and receives the first message, the mobile phone may start the remote control application and display an input method. When the mobile phone detects that the user inputs text content (for example, "187xxxx9678") in a text input box of the mobile phone, the mobile phone may send the text content to the smart television. In response to receiving the text content, the smart television may display the text content "187xxxx9678" in the text input box 6702 of the smart television.

In an embodiment, when the mobile phone detects that the user inputs the text content "187xxxx9678" in the text input box, the mobile phone may determine that a phone number corresponding to a SIM card included in the mobile phone is 187xxxx9678. In this case, the mobile phone may further send indication information to the smart television. The indication information indicates that the phone number corresponding to the SIM card included in the mobile phone is 187xxxx9678. After receiving the indication information, the smart television may determine that the phone number corresponding to the SIM card in the mobile phone is 187xxxx9678.

As shown in FIG. 67(d)-1 to FIG. 67(d)-3, when the smart television detects that the user uses the remote control application on the mobile phone to place the focus of the smart television on a control 6703 and detects that the user taps an OK control, the smart television may determine that the user expects to obtain a verification code by using the phone number 187xxxx9678 in the phone number input box. Because the indication information sent by the mobile phone indicates that the phone number corresponding to the SIM card included in the mobile phone is 187xxxx9678, the smart television may request verification code information from the mobile phone. In addition, the smart television may further request a server to send the verification code information to a device corresponding to the phone number 187xxxx9678.

As shown in FIG. 67(e)-1 to FIG. 67(e)-3, when receiving the verification code information sent by the server, the mobile phone may display an SMS message prompt window 6704. The SMS message prompt window 6704 includes content of an SMS message "The verification code is 900912, which is valid for login within 5 minutes. Do not disclose it, beware of being cheated.". In response to receiving the SMS message sent by the server, the mobile phone may send the content of the SMS message to the smart television, or the mobile phone may send the verification code to the smart television after extracting the verification code from the SMS message.

In an embodiment, if the mobile phone sends the content of the SMS message to the smart television, after receiving the content of the SMS message, the smart television may extract the verification code from the content of the SMS message, and fill the verification code in a verification code input box 6705.

In an embodiment, if the mobile phone sends the verification code to the smart television, after receiving the verification code, the smart television may directly fill the verification code in the verification code input box 6705.

In this embodiment of this application, when the smart television needs to perform text input, the user may pick up any device (for example, the mobile phone) around the user to perform input. This helps improve convenience of performing text input by the user, and improve user experience.

In addition, if the mobile phone determines that the content input by the user is a first account (for example, a phone number or an email address) on the mobile phone, the mobile phone may indicate, to the smart television, that the mobile phone is a device corresponding to the first account. When the smart television detects that the user obtains the verification code by using the first account, the smart television may directly request the verification code information from the mobile phone. After receiving the verification code information, the mobile phone may send the verification code information to the smart television. This omits a process in which the user views the mobile phone and actively memorizes the verification code, brings convenience to the user, improves efficiency of obtaining the verification code, and improves user experience.

FIG. 68(a)-1 and FIG. 68(a)-2 and FIG. 68(b)-1 and FIG. 68(b)-2 show another group of GUIs according to an embodiment of this application.

As shown in FIG. 68(a)-1 and FIG. 68(a)-2, a connection may be established between the notebook computer and the mobile phone. The notebook computer displays a piece of English content. When the notebook computer detects that the user moves a cursor to "Sunday", the notebook computer may send text content (the text content includes "Sunday") to the mobile phone. In response to receiving the text content, the mobile phone may translate the text content by using a translation function, to obtain a translation result. For example, the translation result obtained by the mobile phone is "xing qi ri; li bai ri". The mobile phone may send the translation result to the notebook computer. In response to receiving the translation result, the notebook computer may display a prompt box 6801 near the text content "Sunday". The prompt box 6801 includes the corresponding translation result "xing qi ri; li bai ri".

As shown in FIG. 68(b)-1 and FIG. 68(b)-2, a connection may be established between the notebook computer and the mobile phone. The notebook computer displays a picture. When the notebook computer detects that the user moves the cursor to the picture, the notebook computer may send the picture to the mobile phone. In response to receiving the picture, the mobile phone may recognize an object in the picture by using an object recognition function, to obtain an object recognition result. The mobile phone may send the object recognition result to the notebook computer. In response to receiving the object recognition result, the notebook computer may display a prompt box 6802 near the picture. The prompt box 6802 includes prompt information "Find something similar below for you", an information source (for example, xx website), a name (for example, football) of an object on the picture, and a plurality of shopping links (for example, a shopping link 1, a shopping link 2, and a shopping link 3) of the object.

In this embodiment of this application, when detecting that the user moves the cursor to content, the notebook computer may send the content to the mobile phone. The mobile phone may determine a type (for example, a character or a picture) of the content, to determine a function that is used to process the content. In this way, the user does not need to input the content on the mobile phone and obtain a processing result of the content, but the user may directly view the processing result of the content on the notebook computer. This avoids an additional operation of the user, and helps improve user experience.

FIG. 69(a) and FIG. 69(b) show another group of GUIs according to an embodiment of this application.

As shown in FIG. 69(a) and FIG. 69(b), a connection may be established between the notebook computer and the mobile phone. The notebook computer displays a piece of English content. When the notebook computer detects that the user selects a part of English "Today is...first", the notebook computer may send text content (the text content includes "Today is... first") to the mobile phone. In response to receiving the text content, the mobile phone may display a prompt box 6901. The prompt box 6901 includes prompt information "You have selected a piece of text on your notebook computer. Which function do you want to use?". When the mobile phone detects an operation that the user selects a translation function and taps a control 6902, the mobile phone may translate the text content to obtain a translation result. The mobile phone may send the translation result to the notebook computer.

It should be understood that, for a display process displayed after the notebook computer receives the translation result, refer to FIG. 5(c)-1 and FIG. 5(c)-2 or FIG. 5(d)-1 and FIG. 5(d)-2. For brevity, details are not described herein again.

FIG. 70(a)-1 and FIG. 70(a)-2 and FIG. 70(b)-1 and FIG. 70(b)-2 show another group of GUIs according to an embodiment of this application.

As shown in the GUI shown in FIG. 70(a)-1 and FIG. 70(a)-2, the notebook computer displays a photo 4, and the photo 4 includes a piece of English "Today is a sunny...outing!" and image information of an object (for example, a mountain peak). In this case, the mobile phone displays a home screen of the mobile phone. In response to the fact that a cursor of the notebook computer is located on the photo 4, the notebook computer may send image information corresponding to the photo 4 to the mobile phone. In response to receiving the image information sent by the notebook computer, the mobile phone may recognize the image information on the photo 4, to obtain character string information (for example, "Today is a sunny...outing!") and the image information of the object.

After recognizing the image information, the mobile phone may display an area 7001 corresponding to the recognized character string information and an area 7002 corresponding to the image information of the object. When the mobile phone detects a two-finger pressing operation performed by the user in the area 7001, the mobile phone may translate the character string information and obtain a translation result. The mobile phone may send the translation result to the notebook computer.

As shown in the GUI in FIG. 70(b)-1 and FIG. 70(b)-2, in response to receiving the translation result sent by the mobile phone, the notebook computer may display a prompt box 7003. The prompt box 7003 includes the translation result "jin tian...qiu you!".

In an embodiment, when the mobile phone detects a two-finger pressing operation performed by the user in the area 7002, the mobile phone may recognize the object in the image information and obtain an object recognition result. The mobile phone may send the object recognition result to the notebook computer. In response to receiving the object recognition result, the notebook computer may display the object recognition result.

FIG. 71 is a schematic flowchart of a method 7100 for invoking a capability of another device according to an embodiment of this application. As shown in FIG. 71, the method 7100 includes the following steps.

S7101: A first electronic device sends first content to a second electronic device.

In an embodiment, after the first electronic device establishes a connection to the second electronic device, when a focus of the first electronic device is on the first content, the first electronic device may trigger sending of the first content to the second electronic device. For example, the first electronic device is a notebook computer. When the notebook computer detects that a user moves a cursor to the first content, the notebook computer may send the first content to the second electronic device (for example, a mobile phone).

It should be understood that, for a process in which the first electronic device sends the first content to the second electronic device, refer to the description in the foregoing embodiment. For brevity, details are not described herein again.

Optionally, the method 7100 further includes: Before receiving the first content, the second electronic device sends first request information to the first electronic device in response to detecting a first operation of the user, where the first request information is used to request the first content. The first electronic device sends the first content to the second electronic device in response to receiving the first request information.

For example, as shown in FIG. 11(b), in response to the fact that the mobile phone detects a two-finger pressing operation of the user, the mobile phone may send request information to the smart television. The request information is used to request the smart television to send image information to the mobile phone. It should be understood that, for a process in which the mobile phone requests the image information from the smart television, refer to the process shown in FIG. 11(a)-1 to FIG. 11(a)-3 to FIG. 11(e). For brevity, details are not described herein again.

Optionally, the method 7100 further includes: That a first electronic device sends first content to a second electronic device includes: The first electronic device sends the first content to the second electronic device in response to detecting a second operation of the user.

For example, as shown in FIG. 69(a) and FIG. 69(b), the second operation may be an operation that the user selects the first content. When the notebook computer detects that the user selects the first content, the notebook computer may send the first content to the mobile phone.

S7102: The second electronic device processes the first content based on a type of the first content, to obtain a processing result.

Optionally, that the second electronic device processes the first content based on a type of the first content includes: When the type of the first content is a first type, the second electronic device processes the first content by using a first function; or when the type of the first content is a second type, the second electronic device processes the first content by using a second function.

For example, as shown in FIG. 68(a)-1 and FIG. 68(a)-2, when the mobile phone determines that the type of the first content sent by the notebook computer is text, the mobile phone may translate the text by using a translation function. As shown in FIG. 68(b)-1 and FIG. 68(b)-2, when the mobile phone detects that the first content sent by the notebook computer is image information and the image information includes information about an object (for example, football), the mobile phone may recognize the object in the image information by using an object recognition function.

Optionally, that the second electronic device processes the first content based on a type of the first content includes: The second electronic device prompts, based on the type of the first content, the user to process the first image information by using a first function or a second function. In response to an operation that the user selects the first function, the second electronic device processes the first content by using the first function.

For example, as shown in FIG. 69(a) and FIG. 69(b), when the mobile phone determines that the type of the first content sent by the notebook computer is text, the mobile phone may prompt the user to process the first content by using a translation or word extraction function. When the mobile phone detects that the user selects the translation function, the mobile phone may translate the first content by using the translation function.

Optionally, that the second electronic device processes the first content based on a type of the first content includes: The second electronic device displays the first content in response to receiving the first content, where the first content includes a first part and a second part. In response to a third operation performed by the user on the first part, the second electronic device processes the first part based on a type of the first part.

For example, as shown in FIG. 70(a)-1 and FIG. 70(a)-2, when the mobile phone detects that the first content sent by the notebook computer is image information and the mobile phone recognizes the image information, the mobile phone may display a recognition result. The recognition result includes an area 7001 and an area 7002. The area 7001 includes text content (for example, "Today is...outing!"), and the area 7002 includes image information of an object (for example, a mountain peak). For example, when the mobile phone detects a third operation (for example, a two-finger pressing operation) of the user in the area 7001, the mobile phone may translate the content in the area 7001 based on a type (for example, text) of the content in the area 7001, to obtain a translation result.

S7103: The second electronic device sends the processing result to the first electronic device.

S7104: The first electronic device prompts the user with the processing result.

It should be understood that, for a process of S7103 and S7104, refer to the description in S4304 and S4305. For brevity, details are not described herein again.

In this embodiment of this application, the user can use a function of the second electronic device on the first electronic device, so as to extend a capability boundary of the first electronic device. This helps conveniently and efficiently complete a relatively difficult task of the first electronic device, and helps improve user experience.

Terms such as "component", "module", and "system" used in this specification are used to indicate computer-related entities, hardware, firmware, combinations of hardware and software, software, or software being executed. For example, a component may be, but is not limited to, a process that runs on a processor, a processor, an object, an executable file, an execution thread, a program, and/or a computer. As illustrated by using figures, both a computing device and an application that runs on the computing device may be components. One or more components may reside within a process and/or a thread of execution, and a component may be located on one computer and/or distributed between two or more computers. In addition, these components may be executed from various computer-readable media that store various data structures. For example, the components may communicate by using a local and/or remote process and based on, for example, a signal having one or more data packets (for example, data from two components interacting with another component in a local system, a distributed system, and/or across a network such as the Internet interacting with other systems by using the signal).

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

A person skilled in the art may clearly understand that, for the purpose of convenient and brief descriptions, for detailed working processes of the foregoing system, apparatus, and unit, refer to corresponding processes in the foregoing method embodiments. Details are not described again herein.

In the several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, or a network device) to perform all or some of the steps of the methods described in embodiments of this application. The foregoing storage medium includes any medium that can store program code, such as a USB flash drive, a removable hard disk, a read-only memory (Read-Only Memory, ROM), a random access memory (Random Access Memory, RAM), a magnetic disk, or an optical disc.

The foregoing descriptions are merely specific implementations of this application, but are not intended to limit the protection scope of the invention, which is defined by the appended claims.

**Claims**

1. A system (200, 300), wherein the system (200, 300) comprises a first electronic device (204) and a second electronic device (201), wherein

the first electronic device (204) is configured to request capability information of the second electronic device (201);
the second electronic device (201) is configured to send the capability information to the first electronic device (204), wherein the capability information comprises one or more functions, and the one or more functions comprise a first function;

the first electronic device (204) is further configured to send first content and first request information to the second electronic device (201) when detecting a first operation of a user, wherein the first request information is used to request the second electronic device (201) to process the first content by using the first function;

the second electronic device (201) is further configured to: process the first content based on the first request information by using the first function, and send a processing result of the first content to the first electronic device (204); and

the first electronic device (204) is further configured to prompt the user with the processing result, wherein the first electronic device (204) is further configured to:

display a function list in response to receiving the capability information, wherein the function list comprises the one or more functions; and

in response to detecting an operation that the user selects the first function from the one or more functions, detect an operation that the user selects the first content, and send the first content and the first request information to the second electronic device (201);

wherein the first electronic device (204) is further configured to send second content and second request information to the second electronic device (201) in response to detecting an operation that the user selects the second content,

**characterized in that**

the second request information is used to request the second electronic device (201) to process the second content by using the first function,

wherein the first electronic device is further configured to:

send the first content and the first request information to the second electronic device (201) in response to detecting an operation that the user selects the first content, but does not select other content within preset duration elapsed since the user selects the first content.

2. The system according to claim 1, wherein the first function is a text editing function, and the first electronic device (204) is further configured to:

obtain audio content when detecting the first operation; and

display first text content corresponding to the audio content, and send the first text content and the first request information to the second electronic device, wherein the first request information is used to request the second electronic device to perform text editing on the first text content;

the second electronic device is further configured to:

display the first text content in response to receiving the first text content and the first request information;

display second text content in response to detecting an editing operation performed by the user on the first text content, wherein the second text content is text content obtained after the first text content is edited; and

send the second text content to the first electronic device; and

the first electronic device (204) is further configured to:

replace the first text content with the second text content.

3. The system according to claim 2, wherein the editing operation comprises a format modification operation on the first text content; and

the second electronic device (201) is further configured to send format information of the second text content to the first electronic device (204), wherein the format information of the second text content comprises one or more of a font color, a font size, a font background color. a font tilt, or a font underline of the second text content, and a carriage return operation of the second text content.

4. The system according to claim 1, wherein the first content comprises text content, the first function is a translation function, and the first electronic device is further configured to:

send the text content and the first request information to the second electronic device (201) when detecting the first operation, wherein the first request information is used to request the second electronic device (201) to translate the text content by using the translation function;

the second electronic device (201) is further configured to: translate the text content by using the translation function, and send a translation result to the first electronic device (204); and

the first electronic device (204) is further configured to prompt the user with the translation result.

5. The system according to claim 1, wherein the first content comprises image information, the first function is an object recognition function, and the first electronic device (204) is further configured to:

send the image information and the first request information to the second electronic device (201) when detecting the first operation, wherein the first request information is used to request the second electronic device (201) to recognize an object in the image information by using the object recognition function;

the second electronic device is further configured to: recognize the object in the image information by using the object recognition function, and send an object recognition result to the first electronic device (204); and

the first electronic device (204) is further configured to prompt the user with the object recognition result.

6. The system according to claim 1, wherein the first content comprises first image information, the first function is a retouching function, and the first electronic device (204) is further configured to:

display one or more image parameters when detecting the first operation, wherein the one or more image parameters comprise a first image parameter; and

detect an operation that the user adjusts the first image parameter to a first value, and send the first image information and the first request information to the second electronic device (201), wherein the first request information is used to request the second electronic device (201) to adjust the first image parameter of the first image information to the first value by using the retouching function;

the second electronic device (201) is further configured to: adjust the first image parameter of the first image information to the first value by using the retouching function, to obtain second image information; and

send the second image information to the first electronic device (204); and

the first electronic device (204) is further configured to replace the first image information with the second image information.

7. A method for invoking a capability of another device, wherein the method is applied to a first electronic device, and the method comprises:

requesting (S4302), by the first electronic device, capability information of a second electronic device;

receiving, by the first electronic device, the capability information sent by the second electronic device, wherein the capability information comprises one or more functions, and the one or more functions comprise a first function;

sending, by the first electronic device, first content and first request information to the second electronic device when detecting a first operation of a user, wherein the first request information is used to request the second electronic device to process the first content by using the first function; and

receiving, by the first electronic device, a result of processing the first content by the second electronic device, and prompting the user with the processing result;

wherein the sending, by the first electronic device, first content and first request information to the second electronic device when detecting a first operation of a user comprises:

displaying, by the first electronic device, a function list in response to receiving the capability information, wherein the function list comprises the one or more functions; and

in response to detecting an operation that the user selects the first function from the one or more functions, detecting an operation that the user selects the first content, and sending the first content and the first request information to the second electronic device,

wherein the method further comprises:

sending, by the first electronic device, second content and second request information to the second electronic device in response to detecting an operation that the user selects the second content, **characterized in that**

the second request information is used to request the second electronic device (201) to process the second content by using the first function,

wherein the sending, by the first electronic device, the first content and the first request information to the second electronic device in response to detecting an operation that the user selects the first function comprises:

sending, by the first electronic device, the first content and the first request information to the second electronic device in response to detecting an operation that the user selects the first content, but does not select other content within preset duration elapsed since the user selects the first content.

8. The method according to claim 7, wherein the first function is a text editing function, and the sending, by the first electronic device, first content and first request information to the second electronic device when detecting a first operation of a user comprises:

obtaining, by the first electronic device, audio content when detecting the first operation; and
displaying, by the first electronic device, first text content corresponding to the audio content, and sending the first text content and the first request information to the second electronic device, wherein the first request information is used to request the second electronic device to perform text editing on the first text content; and
the receiving, by the first electronic device, a result of processing the first content by the second electronic device, and prompting the user with the processing result comprises:
receiving, by the first electronic device, second text content sent by the second electronic device, and replacing the first text content with the second text content, wherein the second text content is text content that is detected by the second electronic device and that is obtained after the user edits the first text content.

9. The method according to claim 8, wherein the processing result further comprises format information of the second text content; and
wherein the format information of the second text content comprises one or more of a font color, a font size, a font background color, a font tilt, or a font underline of the second text content, and a carriage return operation of the second text content.

10. The method according to claim 7, wherein the first content comprises text content, the first function is a translation function, and the sending, by the first electronic device, first content and first request information to the second electronic device when detecting a first operation of a user comprises:

sending, by the first electronic device, the text content and the first request information to the second electronic device when detecting the first operation, wherein the first request information is used to request the second electronic device to translate the text content by using the translation function; and
the receiving, by the first electronic device, a result of processing the first content by the second electronic device, and prompting the user with the processing result comprises:
receiving, by the first electronic device, a result of translating the text content by the second electronic device, and prompting the user with the translation result.

11. The method according to claim 7, wherein the first content comprises image information, the first function is an object recognition function, and the sending, by the first electronic device, first content and first request information to the second electronic device when detecting a first operation of a user comprises:

sending, by the first electronic device, the image information and the first request information to the second electronic device when detecting the first operation, wherein the first request information is used to request the second electronic device to recognize an object in the image information by using the object recognition function; and
the receiving, by the first electronic device, a result of processing the first content by the second electronic device, and prompting the user with the processing result comprises:
receiving, by the first electronic device, a result of recognizing the object by the second electronic device, and prompting the user with the object recognition result.

12. The method according to claim 7, wherein the first content comprises first image information, the first function is a retouching function, and the sending, by the first electronic device, first content and first request information to the second electronic device when detecting a first operation of a user comprises:

displaying one or more image parameters when detecting the first operation, wherein the one or more image parameters comprise a first image parameter; and
detecting an operation that the user adjusts the first image parameter to a first value, and sending the first image information and the first request information to the second electronic device, wherein the first request information is used to request the second electronic device to adjust the first image parameter of the first image information to the first value by using the retouching function; and

the receiving, by the first electronic device, a result of processing the first content by the second electronic device, and prompting the user with the processing result comprises:

receiving, by the first electronic device, second image information sent by the second electronic device, wherein the second image information is image information obtained after the first image parameter of the first image information is adjusted to the first value; and
replacing, by the first electronic device, the first image information with the second image information.

13. A computer-readable storage medium including instructions, wherein when the instructions are run on an electronic device, the electronic device is enabled to perform the method according to any one of claims 7 - 12.

14. A chip configured to execute instructions, wherein when the chip executes the instructions included in the computer -readable storage medium according to claim 13, the chip performs the method according to any one of claims 7 - 12.

15. A computer program product including instructions, which when the computer program product is run on an electronic device, cause the electronic device to perform the method according to any one of claims 7 - 12.

**Patentansprüche**

1. System (200, 300), wobei das System (200, 300) eine erste elektronische Vorrichtung (204) und eine zweite elektronische Vorrichtung (201) umfasst, wobei die erste elektronische Vorrichtung (204) ausgelegt ist zum Anfordern von Fähigkeitsinformationen der zweiten elektronischen Vorrichtung (201);

die zweite elektronische Vorrichtung (201) ausgelegt ist zum Senden der Fähigkeitsinformationen zu der ersten elektronischen Vorrichtung (204), wobei die Fähigkeitsinformationen eine oder mehrere Funktionen umfassen und die eine oder mehreren Funktionen eine erste Funktion umfassen;
die erste elektronische Vorrichtung (204) ferner ausgelegt ist zum Senden von erstem Inhalt und ersten Anforderungsinformationen zu der zweiten elektronischen Vorrichtung (201), wenn eine erste Betätigung eines Benutzers detektiert wird, wobei die ersten Anforderungsinformationen verwendet werden, um von der zweiten elektronischen Vorrichtung (201) anzufordern, den ersten Inhalt durch Verwendung der ersten Funktion zu verarbeiten;
die zweite elektronische Vorrichtung (201) ferner ausgelegt ist zum Verarbeiten des ersten Inhalts auf der Basis der ersten Anforderungsinformationen durch Verwendung der ersten Funktion und Senden eines Verarbeitungsergebnisses des ersten Inhalts zu der ersten elektronischen Vorrichtung (204); und
die erste elektronische Vorrichtung (204) ferner ausgelegt ist zum Auffordern des Benutzers mit dem Verarbeitungsergebnis, wobei die erste elektronische Vorrichtung (204) ferner ausgelegt ist zum
Anzeigen einer Funktionsliste als Reaktion auf Empfang der Fähigkeitsinformationen, wobei die Funktionsliste die eine oder mehreren Funktionen umfasst; und
wenn eine Betätigung detektiert wird, dass der Benutzer die erste Funktion aus der einen oder den mehreren Funktionen auswählt, Detektieren einer Betätigung, dass der Benutzer den ersten Inhalt auswählt, und Senden des ersten Inhalts und der ersten Anforderungsinformationen zu der zweiten elektronischen Vorrichtung (201);
wobei die erste elektronische Vorrichtung (204) ferner ausgelegt ist zum Senden von zweitem Inhalt und zweiten Anforderungsinformationen zu der zweiten elektronischen Vorrichtung (201), wenn eine Betätigung detektiert wird, dass der Benutzer den zweiten Inhalt auswählt,
**dadurch gekennzeichnet, dass**
die zweiten Anforderungsinformationen verwendet werden, um von der zweiten elektronischen Vorrichtung (201) anzufordern, den zweiten Inhalt durch Verwendung der ersten Funktion zu verarbeiten,
wobei die erste elektronische Vorrichtung ferner ausgelegt ist zum
Senden des ersten Inhalts und ersten Anforderungsinformationen zu der zweiten elektronischen Vorrichtung (201), wenn eine Betätigung detektiert wird, dass der Benutzer den ersten Inhalt auswählt, aber innerhalb einer voreingestellten vergangenen Dauer, seit der Benutzer den ersten Inhalt auswählt, keinen anderen Inhalt auswählt.

2. System nach Anspruch 1, wobei die erste Funktion eine Texteditierfunktion ist und die erste elektronische Vorrichtung (204) ferner ausgelegt ist zum Erhalten von Audioinhalt, wenn die erste Betätigung detektiert wird; und

Anzeigen von dem Audioinhalt entsprechendem erstem Textinhalt und Senden des ersten Textinhalts und der ersten Anforderungsinformationen zu der zweiten elektronischen Vorrichtung, wobei die ersten Anforderungsinformationen verwendet werden, um von der zweiten elektronischen Vorrichtung anzufordern, Texteditieren an dem ersten Inhalt auszuführen;

wobei die zweite elektronische Vorrichtung ferner ausgelegt ist zum

Anzeigen des ersten Textinhalts als Reaktion auf Empfang des ersten Textinhalts und der ersten Anforderungsinformationen;

Anzeigen von zweitem Textinhalts, wenn eine Editieroperation detektiert wird, die durch den Benutzer an dem ersten Textinhalt ausgeführt wird, wobei der zweite Textinhalt Textinhalt ist, der erhalten wird, nachdem der erste Textinhalt editiert wird; und

Senden des zweiten Textinhalts zu der ersten elektronischen Vorrichtung; und

die erste elektronische Vorrichtung (204) ferner ausgelegt ist zum Ersetzen des ersten Textinhalts mit dem zweiten Textinhalt.

3. System nach Anspruch 2, wobei die Editieroperation eine Formatsmodifikationsoperation an dem ersten Textinhalt umfasst; und

die zweite elektronische Vorrichtung (201) ferner ausgelegt ist zum Senden von Formatinformationen des zweiten Textinhalts zu der ersten elektronischen Vorrichtung (204), wobei die Formatinformationen des zweiten Textinhalts eine Schriftfarbe, eine Schriftgröße, eine Schrift-Hintergrundfarbe, eine Schriftneigung oder Schriftunterstreichung des zweiten Textinhalts und/oder eine Zeilenumbruchoperation des zweiten Textinhalts umfassen.

4. System nach Anspruch 1, wobei der erste Inhalt Textinhalt umfasst, die erste Funktion eine Übersetzungsfunktion ist und die erste elektronische Vorrichtung ferner ausgelegt ist zum

Senden des Textinhalts und der ersten Anforderungsinformationen zu der zweiten elektronischen Vorrichtung (201), wenn die erste Betätigung detektiert wird, wobei die ersten Anforderungsinformationen verwendet werden, um von der zweiten elektronischen Vorrichtung (201) anzufordern, den Textinhalt durch Verwendung der Übersetzungsfunktion zu übersetzen;

die zweite elektronische Vorrichtung (201) ferner ausgelegt ist zum Übersetzen des Textinhalts durch Verwendung der Übersetzungsfunktion und Senden eines Übersetzungsergebnisses zu der ersten elektronischen Vorrichtung (204); und

die erste elektronische Vorrichtung (204) ferner ausgelegt ist zum Auffordern des Benutzers mit dem Übersetzungsergebnis.

5. System nach Anspruch 1, wobei der erste Inhalt Bildinformationen umfasst, die erste Funktion eine Objekterkennungsfunktion ist und die erste elektronische Vorrichtung (204) ferner ausgelegt ist zum

Senden der Bildinformationen und der ersten Anforderungsinformationen zu der zweiten elektronischen Vorrichtung (201), wenn die erste Betätigung detektiert wird, wobei die ersten Anforderungsinformationen verwendet werden, um von der zweiten elektronischen Vorrichtung (201) anzufordern, durch Verwendung der Objekterkennungsfunktion ein Objekt in den Bildinformationen zu erkennen;

die zweite elektronische Vorrichtung ferner ausgelegt ist zum Erkennen des Objekts in den Bildinformationen durch Verwendung der Objekterkennungsfunktion und Senden eines Objekterkennungsergebnisses zu der ersten elektronischen Vorrichtung (204); und

die erste elektronische Vorrichtung (204) ferner ausgelegt ist zum Auffordern des Benutzers mit dem Objekterkennungsergebnis.

6. System nach Anspruch 1, wobei der erste Inhalt Bildinformationen umfasst, die erste Funktion eine Retuschierfunktion ist und die erste elektronische Vorrichtung (204) ferner ausgelegt ist zum

Anzeigen eines oder mehrerer Bildparameter, wenn die erste Betätigung detektiert wird, wobei der eine oder die mehreren Bildparameter einen ersten Bildparameter umfassen; und

Detektieren einer Betätigung, dass der Benutzer den ersten Bitparameter auf einen ersten Wert einstellt, und Senden der ersten Bildinformationen und der ersten Anforderungsinformationen zu der zweiten elektronischen Vorrichtung (201), wobei die ersten Anforderungsinformationen verwendet werden, um von der zweiten elektronischen Vorrichtung (201) anzufordern, durch Verwendung der Retuschierfunktion den ersten Bildparameter der ersten Bildinformationen auf den ersten Wert einzustellen;

die zweite elektronische Vorrichtung (201) ferner ausgelegt ist zum Einstellen des ersten Bildparameters der ersten Bildinformationen auf den ersten Wert durch Verwendung der Retuschierfunktion, um zweite Bildinformationen zu erhalten; und Senden der zweiten Bildinformationen zu der ersten elektronischen Vorrichtung (204); und

die erste elektronische Vorrichtung (204) ferner ausgelegt ist zum Ersetzen der ersten Bildinformationen mit den zweiten Bildinformationen.

**7.** Verfahren zum Aufrufen einer Fähigkeit einer anderen Vorrichtung, wobei das Verfahren auf eine erste elektronische Vorrichtung angewandt wird und das Verfahren Folgendes umfasst:

Anfordern (S4302) von Fähigkeitsinformationen einer zweiten elektronischen Vorrichtung durch die erste elektronische Vorrichtung;

Empfangen der durch die zweite elektronische Vorrichtung gesendeten Fähigkeitsinformationen durch die erste elektronische Vorrichtung, wobei die Fähigkeitsinformationen eine oder mehrere Funktionen umfassen und die eine oder mehreren Funktionen eine erste Funktion umfassen;

Senden von erstem Inhalt und ersten Anforderungsinformationen zu der zweiten elektronischen Vorrichtung durch die erste elektronische Vorrichtung, wenn eine erste Betätigung eines Benutzers detektiert wird, wobei die ersten Anforderungsinformationen verwendet werden, um von der zweiten elektronischen Vorrichtung anzufordern, den ersten Inhalt durch Verwendung der ersten Funktion zu verarbeiten;

Empfangen, durch die erste elektronische Vorrichtung, eines Ergebnisses des Verarbeitens des ersten Inhalts durch die zweite elektronische Vorrichtung und Auffordern des Benutzers mit dem Verarbeitungsergebnis;

wobei das Senden von erstem Inhalt und ersten Anforderungsinformationen zu der zweiten elektronischen Vorrichtung durch die erste elektronische Vorrichtung, wenn eine erste Betätigung eines Benutzers detektiert wird, Folgendes umfasst:

Anzeigen einer Funktionsliste durch die erste elektronische Vorrichtung als Reaktion auf Empfang der Fähigkeitsinformationen, wobei die Funktionsliste die eine oder mehreren Funktionen umfasst; und

wenn eine Betätigung detektiert wird, dass der Benutzer die erste Funktion aus der einen oder den mehreren Funktionen auswählt, Detektieren einer Betätigung, dass der Benutzer den ersten Inhalt auswählt, und Senden des ersten Inhalts und der ersten Anforderungsinformationen zu der zweiten elektronischen Vorrichtung;

wobei das Verfahren ferner Folgendes umfasst:

Senden von zweitem Inhalt und zweiten Anforderungsinformationen zu der zweiten elektronischen Vorrichtung durch die erste elektronische Vorrichtung, wenn eine Betätigung detektiert wird, dass der Benutzer den zweiten Inhalt auswählt,

**dadurch gekennzeichnet, dass**

die zweiten Anforderungsinformationen verwendet werden, um von der zweiten elektronischen Vorrichtung anzufordern, den zweiten Inhalt durch Verwendung der ersten Funktion zu verarbeiten,

wobei das Senden von erstem Inhalt und ersten Anforderungsinformationen zu der zweiten elektronischen Vorrichtung durch die erste elektronische Vorrichtung, wenn Betätigung detektiert wird, dass der Benutzer die erste Funktion auswählt, Folgendes umfasst:

Senden des ersten Inhalts und der ersten Anforderungsinformationen zu der zweiten elektronischen Vorrichtung durch die erste elektronische Vorrichtung, wenn eine Betätigung detektiert wird, dass der Benutzer den ersten Inhalt auswählt, aber innerhalb einer voreingestellten vergangenen Dauer, seit der Benutzer den ersten Inhalt auswählt, keinen anderen Inhalt auswählt.

**8.** Verfahren nach Anspruch 7, wobei die erste Funktion eine Texteditierfunktion ist und das Senden von erstem Inhalt und ersten Anforderungsinformationen zu der zweiten elektronischen Vorrichtung durch die erste elektronische Vorrichtung, wenn eine erste Betätigung eines Benutzers detektiert wird, Folgendes umfasst:

Erhalten von Audioinhalt durch die erste elektronische Vorrichtung, wenn die erste Betätigung detektiert wird; und Anzeigen von dem Audioinhalt entsprechendem erstem Textinhalt durch die erste elektronische Vorrichtung und Senden des ersten Textinhalts und der ersten Anforderungsinformationen zu der zweiten elektronischen Vorrichtung, wobei die ersten Anforderungsinformationen verwendet werden, um von der zweiten elektronischen Vorrichtung anzufordern, Texteditieren an dem ersten Textinhalt auszuführen; und

das Empfangen eines Ergebnisses des Verarbeitens des ersten Inhalts durch die zweite elektronische Vorrichtung und Auffordern des Benutzers mit dem Verarbeitungsergebnis Folgendes umfasst:

Empfangen von durch die zweite elektronische Vorrichtung gesendetem zweitem Text durch die erste elektronische Vorrichtung und Ersetzen des ersten Textinhalts mit dem zweiten Textinhalt, wobei der zweite Textinhalt Textinhalt ist, der durch die zweite elektronische Vorrichtung detektiert wird und der erhalten wird, nachdem der Benutzer den ersten Textinhalt editiert.

9. Verfahren nach Anspruch 8, wobei das Verarbeitungsergebnis ferner Formatinformationen des zweiten Textinhalts umfasst; und
wobei die Formatinformationen des zweiten Textinhalts eine Schriftfarbe, eine Schriftgröße, eine Schrift-Hintergrundfarbe, eine Schriftneigung oder Schriftunterstreichung des zweiten Textinhalts und/oder eine Zeilenumbruchoperation des zweiten Textinhalts umfassen.

10. Verfahren nach Anspruch 7, wobei der erste Inhalt Textinhalt umfasst, die erste Funktion eine Übersetzungsfunktion ist und das Senden von erstem Inhalt und ersten Anforderungsinformationen zu der zweiten elektronischen Vorrichtung durch die erste elektronische Vorrichtung, wenn eine erste Betätigung eines Benutzers detektiert wird, Folgendes umfasst:

Senden des Textinhalts und der ersten Anforderungsinformationen zu der zweiten elektronischen Vorrichtung durch die erste elektronische Vorrichtung, wenn die erste Betätigung detektiert wird, wobei die ersten Anforderungsinformationen verwendet werden, um von der zweiten elektronischen Vorrichtung anzufordern, den Textinhalt durch Verwendung der Übersetzungsfunktion zu übersetzen; und
das Empfangen, durch die erste elektronische Vorrichtung, eines Ergebnisses der Verarbeitung des ersten Inhalts durch die zweite elektronische Vorrichtung und
Auffordern des Benutzers mit dem Verarbeitungsergebnis Folgendes umfasst:
Empfangen, durch die erste elektronische Vorrichtung, eines Ergebnisses des Übersetzens des Textinhalts durch die zweite elektronische Vorrichtung und Auffordern des Benutzers mit dem Übersetzungsergebnis.

11. Verfahren nach Anspruch 7, wobei der erste Inhalt Bildinformationen umfasst, die erste Funktion eine Objekterkennungsfunktion ist und das Senden von erstem Inhalt und ersten Anforderungsinformationen zu der zweiten elektronischen Vorrichtung durch die erste elektronische Vorrichtung, wenn eine erste Betätigung eines Benutzers detektiert wird, Folgendes umfasst:

Senden der Bildinformationen und der ersten Anforderungsinformationen zu der zweiten elektronischen Vorrichtung durch die erste elektronische Vorrichtung, wenn die erste Betätigung detektiert wird, wobei die ersten Anforderungsinformationen verwendet werden, um von der zweiten elektronischen Vorrichtung anzufordern, durch Verwendung der Objekterkennungsfunktion ein Objekt in den Bildinformationen zu erkennen; und
das Empfangen, durch die erste elektronische Vorrichtung, eines Ergebnisses des Verarbeitens des ersten Inhalts durch die zweite elektronische Vorrichtung und
Auffordern des Benutzers mit dem Verarbeitungsergebnis Folgendes umfasst: Empfangen eines Ergebnisses des Erkennens des Objekts durch die zweite elektronische Vorrichtung und Auffordern des Benutzers mit dem Verarbeitungsergebnis Folgendes umfasst:
Empfangen, durch die erste elektronische Vorrichtung, eines Ergebnisses des Erkennens des Objekts durch die zweite elektronische Vorrichtung und Auffordern des Benutzers mit dem Objekterkennungsergebnis.

12. Verfahren nach Anspruch 7, wobei der erste Inhalt erste Bildinformationen umfasst, die erste Funktion eine Retuschierfunktion ist und das Senden von erstem Inhalt und ersten Anforderungsinformationen zu der zweiten elektronischen Vorrichtung durch die erste elektronische Vorrichtung, wenn eine erste Betätigung eines Benutzers detektiert wird, Folgendes umfasst:

Anzeigen eines oder mehrerer Bildparameter, wenn die erste Betätigung detektiert wird, wobei der eine oder die mehreren Bildparameter einen ersten Bildparameter umfassen; und
Detektieren einer Betätigung, dass der Benutzer den ersten Bitparameter auf einen ersten Wert einstellt, und Senden der ersten Bildinformationen und der ersten Anforderungsinformationen zu der zweiten elektronischen Vorrichtung, wobei die ersten Anforderungsinformationen verwendet werden, um von der zweiten elektronischen Vorrichtung anzufordern, durch Verwendung der Retuschierfunktion den ersten Bildparameter der ersten Bildinformationen auf den ersten Wert einzustellen; und
das Empfangen, durch die erste elektronische Vorrichtung, eines Ergebnisses des Verarbeitens des ersten Inhalts durch die zweite elektronische Vorrichtung und
Auffordern des Benutzers mit dem Verarbeitungsergebnis Folgendes umfasst: Empfangen von durch die zweite elektronische Vorrichtung gesendeten zweiten Bildinformationen durch die erste elektronische Vorrichtung, wobei die zweiten Bildinformationen Bildinformationen sind, die erhalten werden, nachdem der erste Bildparameter der ersten Bildinformationen auf den ersten Wert eingestellt wird; und Ersetzen der ersten mit Bildinformationen mit den zweiten Bildinformationen durch die erste elektronische Vorrichtung.

13. Computerlesbares Speicherungsmedium, das Anweisungen umfasst, wobei, wenn die Anweisungen auf einer elektronischen Vorrichtung laufengelassen werden, die elektronische Vorrichtung befähigt wird, das Verfahren nach einem der Ansprüche 7 - 12 auszuführen.

14. Chip, der dafür ausgelegt ist, Anweisungen auszuführen, wobei, wenn der Chip die in dem computerlesbaren Speicherungsmedium nach Anspruch 13 enthaltenen Anweisungen ausführt, der Chip das Verfahren nach einem der Ansprüche 7 -12 ausführt.

15. Computerprogrammprodukt, das Anweisungen umfasst, die, wenn das Computerprogrammprodukt auf einer elektronischen Vorrichtung laufengelassen wird, bewirken, dass die elektronische Vorrichtung das Verfahren nach einem der Ansprüche 7 -12 ausführt.

## Revendications

1. Système (200, 300), le système (200, 300) comprenant un premier dispositif électronique (204) et un deuxième dispositif électronique (201), où :

le premier dispositif électronique (204) est configuré pour demander des informations de capacité du deuxième dispositif électronique (201) ;
le deuxième dispositif électronique (201) est configuré pour envoyer les informations de capacité au premier dispositif électronique (204), où les informations de capacité comprennent une ou plusieurs fonctions, et les une ou plusieurs fonctions comprennent une première fonction ;
le premier dispositif électronique (204) est en outre configuré pour envoyer un premier contenu et des premières informations de demande au deuxième dispositif électronique (201) lorsqu'il détecte une première opération d'un utilisateur, les premières informations de demande étant utilisées pour demander au deuxième dispositif électronique (201) de traiter le premier contenu à l'aide de la première fonction ;
le deuxième dispositif électronique (201) est en outre configuré pour traiter le premier contenu sur la base des premières informations de demande en utilisant la première fonction, et envoyer un résultat de traitement du premier contenu au premier dispositif électronique (204) ; et
le premier dispositif électronique (204) est en outre configuré pour présenter le résultat de traitement à l'utilisateur, où le premier dispositif électronique (204) est en outre configuré pour :

afficher une liste de fonctions en réponse à la réception des informations de capacité, la liste de fonctions comprenant les une ou plusieurs fonctions ; et
en réponse à la détection d'une opération par laquelle l'utilisateur sélectionne la première fonction parmi les une ou plusieurs fonctions, détecter une opération par laquelle l'utilisateur sélectionne le premier contenu, et envoyer le premier contenu et
les premières informations de demande au deuxième dispositif électronique (201) ; où le premier dispositif électronique (204) est en outre configuré pour envoyer un deuxième contenu et des deuxièmes informations de demande au deuxième dispositif électronique (201) en réponse à la détection d'une opération par laquelle l'utilisateur sélectionne le deuxième contenu,
**caractérisé en ce que**
les deuxièmes informations de demande sont utilisées pour demander au deuxième dispositif électronique (201) de traiter le deuxième contenu en utilisant la première fonction,
le premier dispositif électronique étant en outre configuré pour :
envoyer le premier contenu et les premières informations de demande au deuxième dispositif électronique (201) en réponse à la détection d'une opération par laquelle l'utilisateur sélectionne le premier contenu, mais ne sélectionne pas d'autre contenu dans un délai prédéfini écoulé depuis que l'utilisateur a sélectionné le premier contenu.

2. Système selon la revendication 1, dans lequel la première fonction est une fonction d'édition de texte, et le premier dispositif électronique (204) est en outre configuré pour :

obtenir un contenu audio lors de la détection de la première opération ; et

afficher un premier contenu textuel correspondant au contenu audio, et envoyer le premier contenu textuel et les premières informations de demande au deuxième dispositif électronique, où les premières informations de demande sont utilisées pour demander au deuxième dispositif électronique d'effectuer une édition de texte sur le premier contenu textuel ;

le deuxième dispositif électronique est en outre configuré pour :

afficher le premier contenu textuel en réponse à la réception du premier contenu textuel et des premières informations de demande ;
afficher un deuxième contenu textuel en réponse à la détection d'une opération d'édition effectuée par l'utilisateur sur le premier contenu textuel, où le deuxième contenu textuel est un contenu textuel obtenu après l'édition du premier contenu textuel ; et
envoyer le deuxième contenu textuel au premier dispositif électronique ; et
le premier dispositif électronique (204) est en outre configuré pour :
remplacer le premier contenu textuel par le deuxième contenu textuel.

3. Système selon la revendication 2, dans lequel l'opération d'édition comprend une opération de modification de format sur le premier contenu textuel ; et
le deuxième dispositif électronique (201) est en outre configuré pour envoyer des informations de format du deuxième contenu textuel au premier dispositif électronique (204), où les informations de format du deuxième contenu textuel comprennent une ou plusieurs des informations suivantes : une couleur de police, une taille de police, une couleur d'arrière-plan de police, une inclinaison de police ou un soulignement de police du deuxième contenu textuel, et une opération de retour chariot du deuxième contenu textuel.

4. Système selon la revendication 1, dans lequel le premier contenu comprend un contenu textuel, la première fonction est une fonction de traduction, et le premier dispositif électronique est en outre configuré pour :

envoyer le contenu textuel et les premières informations de demande au deuxième dispositif électronique (201) lors de la détection de la première opération, les premières informations de demande étant utilisées pour demander au deuxième dispositif électronique (201) de traduire le contenu textuel à l'aide de la fonction de traduction ;
le deuxième dispositif électronique (201) étant en outre configuré pour traduire le contenu textuel à l'aide de la fonction de traduction, et envoyer un résultat de traduction au premier dispositif électronique (204) ; et
le premier dispositif électronique (204) est en outre configuré pour présenter le résultat de la traduction à l'utilisateur.

5. Système selon la revendication 1, dans lequel le premier contenu comprend des informations d'image, la première fonction est une fonction de reconnaissance d'objet, et le premier dispositif électronique (204) est en outre configuré pour :

envoyer les informations d'image et les premières informations de demande au deuxième dispositif électronique (201) lors de la détection de la première opération, les premières informations de demande étant utilisées pour demander au deuxième dispositif électronique (201) de reconnaître un objet dans les informations d'image à l'aide de la fonction de reconnaissance d'objet ;
le deuxième dispositif électronique est en outre configuré pour reconnaître l'objet dans les informations d'image en utilisant la fonction de reconnaissance d'objet, et envoyer un résultat de reconnaissance d'objet au premier dispositif électronique (204) ; et
le premier dispositif électronique (204) est en outre configuré pour présenter le résultat de reconnaissance d'objet à l'utilisateur.

6. Système selon la revendication 1, dans lequel le premier contenu comprend des premières informations d'image, la première fonction est une fonction de retouche, et le premier dispositif électronique (204) est en outre configuré pour :

afficher un ou plusieurs paramètres d'image lors de la détection de la première opération, où les un ou plusieurs paramètres d'image comprennent un premier paramètre d'image ; et
détecter une opération par laquelle l'utilisateur ajuste le premier paramètre d'image à une première valeur, et envoyer les premières informations d'image et les premières informations de demande au deuxième dispositif électronique (201), où les premières informations de demande sont utilisées pour demander au deuxième dispositif électronique (201) d'ajuster le premier paramètre d'image des premières informations d'image à la première valeur en utilisant la fonction de retouche ;

le deuxième dispositif électronique (201) est en outre configuré pour ajuster le premier paramètre d'image des premières informations d'image à la première valeur en utilisant la fonction de retouche, afin d'obtenir des deuxièmes informations d'image ;

et

envoyer les deuxièmes informations d'image au premier dispositif électronique (204) ; et

le premier dispositif électronique (204) est en outre configuré pour remplacer les premières informations d'image par les deuxièmes informations d'image

7. Procédé pour invoquer une capacité d'un autre dispositif, le procédé étant appliqué à un premier dispositif électronique, et le procédé comprenant les étapes suivantes :

demander (S4302), par le premier dispositif électronique, des informations de capacité d'un deuxième dispositif électronique ;

recevoir, par le premier dispositif électronique, des informations de capacité envoyées par le deuxième dispositif électronique, où les informations de capacité comprennent une ou plusieurs fonctions, et les une ou plusieurs fonctions comprennent une première fonction ;

envoyer, par le premier dispositif électronique, un premier contenu et des premières informations de demande au deuxième dispositif électronique lors de la détection d'une première opération d'un utilisateur, où les premières informations de demande sont utilisées pour demander au deuxième dispositif électronique de traiter le premier contenu en utilisant la première fonction ; et

recevoir, par le premier dispositif électronique, un résultat de traitement du premier contenu par le deuxième dispositif électronique, et présenter le résultat de traitement à l'utilisateur ;

où l'envoi, par le premier dispositif électronique, d'un premier contenu et de premières informations de demande au deuxième dispositif électronique lors de la détection d'une première opération d'un utilisateur comprend les étapes suivantes :

afficher, par le premier dispositif électronique, une liste de fonctions en réponse à la réception des informations de capacité, où la liste de fonctions comprend les une ou plusieurs fonctions ; et

en réponse à la détection d'une opération par laquelle l'utilisateur sélectionne la première fonction parmi les une ou plusieurs fonctions, détecter une opération par laquelle l'utilisateur sélectionne le premier contenu, et envoyer le premier contenu et des premières informations de demande au deuxième dispositif électronique, où le procédé comprend en outre l'étape suivante :

envoyer, par le premier dispositif électronique, le deuxième contenu et les deuxièmes informations de demande au deuxième dispositif électronique en réponse à la détection d'une opération par laquelle l'utilisateur sélectionne le deuxième contenu,

**caractérisé en ce que**

les deuxièmes informations de demande sont utilisées pour demander au deuxième dispositif électronique (201) de traiter le deuxième contenu en utilisant la première fonction,

où l'envoi, par le premier dispositif électronique, du premier contenu et des premières informations de demande au deuxième dispositif électronique en réponse à la détection d'une opération par laquelle l'utilisateur sélectionne la première fonction comprend :

l'envoi, par le premier dispositif électronique, du premier contenu et des premières informations de demande au deuxième dispositif électronique en réponse à la détection d'une opération par laquelle l'utilisateur sélectionne le premier contenu, mais ne sélectionne pas d'autres contenus dans un délai prédéfini écoulé depuis que l'utilisateur a sélectionné le premier contenu.

8. Procédé selon la revendication 7, dans lequel la première fonction est une fonction d'édition de texte, et l'envoi, par le premier dispositif électronique, du premier contenu et des premières informations de demande au deuxième dispositif électronique lors de la détection d'une première opération d'un utilisateur comprend les étapes suivantes :

obtenir, par le premier dispositif électronique, un contenu audio lors de la détection de la première opération ; et afficher, par le premier dispositif électronique, un premier contenu textuel correspondant au contenu audio, et envoyer le premier contenu textuel et les premières informations de demande au deuxième dispositif électronique, où les premières informations de demande sont utilisées pour demander au deuxième dispositif électronique d'effectuer une édition de texte sur le premier contenu textuel ; et

la réception, par le premier dispositif électronique, d'un résultat de traitement du premier contenu par le deuxième dispositif électronique, et la présentation à l'utilisateur du résultat de traitement, comprennent les étapes suivantes :

recevoir, par le premier dispositif électronique, un deuxième contenu textuel envoyé par le deuxième dispositif électronique, et remplacer le premier contenu textuel par le deuxième contenu textuel, où le deuxième contenu textuel est un contenu textuel qui est détecté par le deuxième dispositif électronique et qui est obtenu après que l'utilisateur a édité le premier contenu textuel.

9. Procédé selon la revendication 8, dans lequel le résultat de traitement comprend en outre des informations de format du deuxième contenu textuel ; et

dans lequel les informations de format du deuxième contenu textuel comprennent une ou plusieurs des informations suivantes : une couleur de police, une taille de police, une couleur d'arrière-plan de police, une inclinaison de police ou un soulignement de police du deuxième contenu textuel, et une opération de retour chariot du deuxième contenu textuel.

10. Procédé selon la revendication 7, dans lequel le premier contenu comprend un contenu textuel, la première fonction est une fonction de traduction, et l'envoi, par le premier dispositif électronique, du premier contenu et des premières informations de demande au deuxième dispositif électronique lors de la détection d'une première opération d'un utilisateur comprend l'étape suivante :

envoyer, par le premier dispositif électronique, le contenu textuel et les premières informations de demande au deuxième dispositif électronique lors de la détection de la première opération, où les premières informations de demande sont utilisées pour demander au deuxième dispositif électronique de traduire le contenu textuel à l'aide de la fonction de traduction ; et
la réception, par le premier dispositif électronique, d'un résultat de traitement du premier contenu par le deuxième dispositif électronique, et la présentation du résultat de traitement à l'utilisateur, comprennent les étapes suivantes :
recevoir, par le premier dispositif électronique, un résultat de la traduction du contenu textuel par le deuxième dispositif électronique, et présenter le résultat de la traduction à l'utilisateur.

11. Procédé selon la revendication 7, dans lequel le premier contenu comprend des informations d'image, la première fonction est une fonction de reconnaissance d'objet, et l'envoi, par le premier dispositif électronique, du premier contenu et des premières informations de demande au deuxième dispositif électronique lors de la détection d'une première opération d'un utilisateur comprend l'étape suivante :

envoyer, par le premier dispositif électronique, des informations d'image et des premières informations de demande au deuxième dispositif électronique lors de la détection de la première opération, où les premières informations de demande sont utilisées pour demander au deuxième dispositif électronique de reconnaître un objet dans les informations d'image à l'aide de la fonction de reconnaissance d'objet ; et
la réception, par le premier dispositif électronique, d'un résultat de traitement du premier contenu par le deuxième dispositif électronique, et la présentation à l'utilisateur du résultat de traitement comprennent les étapes suivantes :
recevoir, par le premier dispositif électronique, un résultat de reconnaissance de l'objet par le deuxième dispositif électronique, et présenter à l'utilisateur le résultat de reconnaissance d'objet.

12. Procédé selon la revendication 7, dans lequel le premier contenu comprend des premières informations d'image, la première fonction est une fonction de retouche, et l'envoi, par le premier dispositif électronique, du premier contenu et des premières informations de demande au deuxième dispositif électronique lors de la détection d'une première opération d'un utilisateur comprend les étapes suivantes :

afficher un ou plusieurs paramètres d'image lors de la détection de la première opération, où les un ou plusieurs paramètres d'image comprennent un premier paramètre d'image ; et
détecter une opération par laquelle l'utilisateur ajuste le premier paramètre d'image à une première valeur, et envoyer les premières informations d'image et les premières informations de demande au deuxième dispositif électronique, où les premières informations de demande sont utilisées pour demander au deuxième dispositif électronique d'ajuster le premier paramètre d'image des premières informations d'image à la première valeur en utilisant la fonction de retouche ; et
la réception, par le premier dispositif électronique, d'un résultat de traitement du premier contenu par le deuxième dispositif électronique, et la présentation du résultat de traitement à l'utilisateur, comprennent l'étape suivante :

recevoir, par le premier dispositif électronique, les deuxièmes informations d'image envoyées par le deuxième dispositif électronique, où les deuxièmes informations d'image sont des informations d'image obtenues après que le premier paramètre d'image des premières informations d'image a été ajusté à la première valeur ; et

remplacer, par le premier dispositif électronique, les premières informations d'image par les deuxièmes informations d'image.

13. Support de stockage lisible par ordinateur comprenant des instructions, où, lorsque les instructions sont exécutées sur un dispositif électronique, le dispositif électronique est activé pour exécuter le procédé selon l'une quelconque des revendications 7 à 12.

14. Puce configurée pour exécuter des instructions, où, lorsque la puce exécute les instructions incluses dans le support de stockage lisible par ordinateur selon la revendication 13, la puce exécute le procédé selon l'une quelconque des revendications 7 à 12.

15. Produit logiciel comprenant des instructions qui, lorsque le produit logiciel est exécuté sur un dispositif électronique, amènent le dispositif électronique à exécuter le procédé selon l'une quelconque des revendications 7 à 12.

Electronic device 100

Antenna 1

Antenna 2

| Mobile communications module<br>2G/3G/4G/5G<br>[150] | Wireless communications module<br>BT/WLAN/GNSS/NFC/IR/FM<br>[160] |

Speaker [170A]

Receiver [170B]

Microphone [170C]

Headset jack [170D]

Audio module [170]

Displays 1 to N [194]

Cameras 1 to N [193]

Indicator [192]

Motor [191]

Compass [190]

Internal memory [121]

SIM card interfaces 1 to N [195]

External memory interface [120]

USB interface [130]

Charging input

Charging management module [140]

Processor [110]

Power management module [141]

Battery [142]

Sensor module [180]

Pressure sensor [180A]

Gyro sensor [180B]

Barometric pressure sensor [180C]

Magnetic sensor [180D]

Acceleration sensor [180E]

Distance sensor [180F]

Optical proximity sensor [180G]

Fingerprint sensor [180H]

Temperature sensor [180J]

Touch sensor [180K]

Ambient light sensor [180L]

Bone conduction sensor [180M]

FIG. 1

FIG. 2

**Network architecture 200**

Third-party server

208

206

205

201

207

204

202

203

FIG. 3(a)

**Network architecture 300**

FIG. 3(b)

**Network architecture 400**

FIG. 3(c)

FIG. 4

FIG. 5(a)-1

CONT.
FROM
FIG. 5(a)-1

5G 5G 8:00

| Clock | Calendar | Gallery | Memo |
| Files | Email | Music | Calculator |
| Huawei Video | Health | Weather | Browser |
| AI Life | Settings | Recorder | App Store |

Camera   Contacts   Phone   Messages

FIG. 5(a)-2

X X X X X X X X X X X X X X
X X X X X X X X X X X X X X

Today is a sunny Sunday, our class ready to go to the
mountains for an autumn outing! We're going to bike to

school fi | Cut                          501
         | Copy
         | Paste

X X X X X X X | Word extraction | X X
X X X X X X X | Translation _502 | X X
                                  ...

▲ ▭ ◢ EN   8:00
           2020/10/12

Translation content

TO FIG. 5(b)-2

FIG. 5(b)-1

CONT. FROM FIG. 5(b)-1

FIG. 5(b)-2

503

X X X X X X X X X X X X X X

X X X X X X X X

Translation result        ×

Today is a sunny Sunday, our cl
mountains for an autumn outing!
school first

jin tian shi yi ge yang
guang ming mei de xing qi
tian, wo men ban zhun bei
qu shan shang qiu you! wo
men da suan qi zi xing che
qu xue xiao.

X X X X X X X X

X X X X X X X X

∧ ▭ ⌕ EN    8:00
           2020/10/12

TO FIG. 5(c)-2

Translation result

FIG. 5(c)-1

CONT. FROM FIG. 5(c)-1

FIG. 5(c)-2

X X X X X X X X X X X X X X
X X X X X X X X X X X X X X

| (Automatic detection) ⇌ Chinese | | Copy | Save to local | × |

jin tian shi yi ge yang guang ming mei de xing qi tian, wo men ban zhun bei qu shan shang qiu you! wo men da suan qi zi xing che qu xue xiao.

| Display the original text |

X X X X X X X X X X X X X X
X X X X X X X X X X X X X X

EN 8:00 2020/10/12

Translation result

TO FIG. 5(d)-2

FIG. 5(d)-1

CONT. FROM FIG. 5(d)-1

FIG. 5(d)-2

601

TO
FIG. 6(a)-2

FIG. 6(a)-1

8:00
2020/10/12
EN

CONT. FROM FIG. 6(a)-1

FIG. 6(a)-2

FIG. 6(b)-1

CONT.
FROM
FIG. 6(b)-1

5G 5G 8:00

| | | | |
|---|---|---|---|
| Clock | Calendar | Gallery | Memo |
| Files | Email | Music | Calculator |
| Huawei Video | Health | Weather | Browser |
| AI Life | Settings | Recorder | App Store |
| Camera | Contacts | Phone | Messages |

FIG. 6(b)-2

FIG. 6(c)-1

604

Find something similar below for you ✕

Information source: xx website

Football

See more similar pictures

Shopping link 1

Shopping link 2

Shopping link 3

Smart object recognition result

TO FIG. 6(c)-2

8:00
2020/10/12

EN

CONT.
FROM
FIG. 6(c)-1

FIG. 6(c)-2

Photo 1      ×

Versitcard
××× Company
Name: ××
Phone number:
187×××676
Email: ×××@163.com
Address: ×××, Yanta
District, Xi'an City

701

8:00
2020/10/12

^ EN

TO
FIG. 7(a)-2

FIG. 7(a)-1

CONT.
FROM
FIG. 7(a)-1

FIG. 7(a)-2

Photo 1 ✕

Versitcard
✕✕✕ Company

Name: ✕✕
Phone number:
187✕✕✕676
Email: ✕✕✕@163.com
Address: ✕✕✕, Yanta
District, Xi'an City

Send the picture to
the mobile phone ⟩ 702

Save the picture as

Copy the picture

View in full screen

Object recognition

Shopping

Translation

Word extraction ⟩ 703

...

∧ ▭ 🔊 EN 8:00
2020/10/12

Picture → TO FIG. 7(b)-2

FIG. 7(b)-1

CONT.
FROM
FIG. 7(b)-1

5G 5G 8:00

| Clock | Calendar | Gallery | Memo |

| Files | Email | Music | Calculator |

| Huawei Video | Health | Weather | Browser |

| AI Life | Settings | Recorder | App Store |

| Camera | Contacts | Phone | Messages |

FIG. 7(b)-2

Photo 1 ×

Versitcard
××× Company

Name: ××
Phone number: 187××
Email: ×××@163.com
Address: ×××, Yanta
District, Xi'an City

704

Word extraction result
Versitcard
××× Company
Name: ××
Phone number: 187×××676
Email: ×××@163.com
Address: ×××, Yanta
District, Xi'an City

705

Copy 706
Smart
translation
...

**Word segmentation**

( Name )  ( Yanta District )  ( Xi'an City )

( ××× Company )  ( Phone number )

Word extraction result

TO FIG. 7(c)-2

∧ ▭ EN  8:00
2020/10/12

FIG. 7(c)-1

CONT.
FROM
FIG. 7(c)-1

FIG. 7(c)-2

EP 4 187 876 B1

FIG. 8(a)-1

TO
FIG. 8(a)-2

130

CONT. FROM FIG. 8(a)-1

FIG. 8(a)-2

FIG. 8(b)-1

CONT.
FROM
FIG. 8(b)-1

5G 5G 8:00

Clock  Calendar  Gallery  Memo

Files  Email  Music  Calculator

Huawei
Video  Health  Weather  Browser

AI Life  Settings  Recorder  App Store

Camera  Contacts  Phone  Messages

FIG. 8(b)-2

Cloud

Mail

Document 1

803

Translation result  ×

jin tian shi yi ge yang guang ming mei de xing qi tian, wo men ban zhun bei qu shan shang qiu you! wo men da suan qi zi xing che qu xue xiao.

EN  8:00
2020/10/12

Translation result

TO FIG. 8(c)-2

FIG. 8(c)-1

FIG. 8(c)-2

| AI Voice |
| Shopping |
| Translation |
| Word extraction |
| Object recognition |
| ... |

901

Cloud

Mail

EN

8:00
2020/10/12

TO
FIG. 9(a)-2

FIG. 9(a)-1

CONT.
FROM
FIG. 9(a)-1

Clock Calendar Gallery Memo

Files Email Music Calculator

Huawei Video Health Weather Browser

AI Life Settings Recorder App Store

Camera Contacts Phone Messages

FIG. 9(a)-2

FIG. 9(b)-1

CONT.
FROM
FIG. 9(b)-1

5G 5G 8:00

| | | | |
|---|---|---|---|
| Clock | Oct 12 Calendar | Gallery | Memo |
| Files | Email | Music | Calculator |
| Huawei Video | Health | Weather | Browser |
| AI Life | Settings | Recorder | App Store |
| Camera | Contacts | Phone | Messages |

FIG. 9(b)-2

FIG. 9(c)-1

CONT.
FROM
FIG. 9(c)-1

FIG. 9(c)-2

| | | | |
|---|---|---|---|
| Clock | Calendar | Gallery | Memo |
| Files | Email | Music | Calculator |
| Huawei Video | Health | Weather | Browser |
| AI Life | Settings | Recorder | App Store |
| Camera | Contacts | Phone | Messages |

FIG. 9(d)-1

CONT. FROM FIG. 9(d)-1

FIG. 9(d)-2

| | | | |
|---|---|---|---|
| Clock | Calendar | Gallery | Memo |
| Files | Email | Music | Calculator |
| Huawei Video | Health | Weather | Browser |
| AI Life | Settings | Recorder | App Store |
| Camera | Contacts | Phone | Messages |

5G 5G 8:00

FIG. 9(e)-1

CONT.
FROM
FIG. 9(e)-1

FIG. 9(e)-2

Cloud

Mail

| AI Voice — 1002 |
| Shopping |
| Translation |
| Word extraction |
| Object recognition |
| ... |

1001

Voice content

TO FIG. 10(a)-2

8:00
EN 2020/10/12

How's the weather today?

FIG. 10(a)-1

FIG. 10(a)-2

CONT. FROM FIG. 10(a)-1

Cloud

Mail

It's cloudy and sunny today with the temperature from 10°C to 22°C

| AI Voice | ⌐ 802 |
|---|---|
| Shopping | |
| Translation | |
| Word extraction | |
| Object recognition | |
| ... | |

TO FIG. 10(b)-2

8:00
2020/10/12

∧ ▭ EN

FIG. 10(b)-1

CONT. FROM FIG. 10(b)-1

Result

**5G** **5G** 📶 ▮ **8:00**

| | | | |
|---|---|---|---|
| Clock | Oct 12 Calendar | Gallery | Memo |
| Files | Email | Music | Calculator |
| Huawei Video | Health | Weather | Browser |
| AI Life | Settings | Recorder | App Store |
| Camera | Contacts | Phone | Messages |

FIG. 10(b)-2

Photo 1

Today is a sunny Sunday, our class ready to go to the mountains for an autumn outing!

TO FIG. 11(a)-2

TO FIG. 11(a)-3

FIG. 11(a)-1

CONT.
FROM
FIG. 11(a)-1

Photo 1

Today is a sunny Sunday, our class ready to go to the
mountains for an autumn outing!

FIG. 11(a)-2

CONT.
FROM
FIG. 11(a)-1

FIG. 11(a)-3

FIG. 11(b)

Today is a sunny Sunday, our class ready to go to the mountains for an autumn outing!

Text    **Screen translation**    1101

Text recognition    ✕

Word segmentation

sunny    class    school

mountains    outing    an

🔍    ⊞    🗺️    ⟋
Search    Copy    Maps    Share

FIG. 11(c)

154

5G 5G 📶 8:01

⟵ (Automatic detection) ⇌ Chinese

jin tian shi yi ge yang guang ming mei de
xing qi tian, wo men ban zhun bei qu shan
shang qiu you!

FIG. 11(d)

jin tian shi yi ge yang guang ming mei de xing qi tian, wo men ban zhun bei qu shan shang qiu you!

jin tian shi yi ge yang guang ming mei de xing qi tian, wo men ban zhun bei qu shan shang qiu you!

5G 5G ▬ 8:01

← (Automatic detection) ⇌ Chinese

jin tian shi yi ge yang guang ming mei de xing qi tian, wo men ban zhun bei qu shan shang qiu you!

FIG. 11(e)

FIG. 12(a)

FIG. 12(b)

FIG. 12(c)

Find something similar below for you

Information source: xx website

Football

See more similar pictures

Shopping link

TO
FIG. 12(d)-2

TO
FIG. 12(d)-3

FIG. 12(d)-1

CONT.
FROM
FIG. 12(d)-1

Find something similar below for you  ✕

Information source: xx website

Football

See more similar pictures

Shopping link

FIG. 12(d)-2

CONT.
FROM
FIG. 12(d)-1

Find something similar below for you ✕

Information source: xx website

Football

See more similar pictures

Shopping link

FIG. 12(d)-3

Photo 3

miao xie qiu tian de ju zi
zhen zhen de qiu feng, qiao qiao
di jiang shang gan qian ru xin tou.
jin huang se de ye zi, xiang yi zhi
zhi mei li de hu die zai kong
zhong fei lai fei qu.

TO
FIG. 13(a)-2

TO
FIG. 13(a)-3

FIG. 13(a)-1

CONT.
FROM
FIG. 13(a)-1

Photo 3

miao xie qiu tian de ju zi
zhen zhen de qiu feng, qiao qiao di jiang shang gan qian ru xin tou.
jin huang se de ye zi, xiang yi zhi zhi mei li de hu die zai kong
zhong fei lai fei qu.

FIG. 13(a)-2

FIG. 13(a)-3

FIG. 13(b)

miao xie qiu tian de ju zi

zhen zhen de qiu feng, qiao qiao di jiang
shang gan qian ru xin tou.

jin huang | Copy  Share  Select    Web  ⋮
li de hu d|                    All    Search
zai kong zhong fei           .

1301

FIG. 13(c)

FIG. 14(a)-1

CONT.
FROM
FIG. 14(a)-1

Photo 4

Today is a sunny Sunday, our class ready to go to the mountains
for an autumn outing!

FIG. 14(a)-2

CONT.
FROM
FIG. 14(a)-1

FIG. 14(a)-3

FIG. 14(b)

5G 5G 📶 📶 🛜    ▬ 8:01

1402

1401

Today is a sunny Sunday, our class ready to
go to the mountains for an autumn outing !

FIG. 14(c)

5G  5G  📶 📶 🛜　　　　🔋 8:01

⟵ (Automatic detection) ⇌ Chinese

jin tian shi yi ge yang guang ming mei de xing
qi tian, wo men ban zhun bei qu shan shang
qiu you!

FIG. 14(d)

FIG. 14(e)

FIG. 14(f)

FIG. 15(a)

FIG. 15(b)

5G 5G 📶 🔋 8:01

⟵ (Automatic detection) ⇌ Chinese

jin tian shi yi ge yang guang ming mei de xing qi tian, wo men ban zhun bei qu shan shang qiu you!

FIG. 15(c)

FIG. 15(d)

FIG. 15(e)

Today is a sunny Sunday, our class ready to go to the mountains for an autumn outing!

TO FIG. 16(a)-2

TO FIG. 16(a)-3

FIG. 16(a)-1

CONT.
FROM
FIG. 16(a)-1

Today is a sunny Sunday, our class ready to go to the mountains for an autumn outing!

FIG. 16(a)-2

CONT.
FROM
FIG. 16(a)-1

~

Messages    10086    Contacts

SMS/MMS

7:30 today

Hello,
XXXXXX SMS message
content XXXXXX

8:00

FIG. 16(a)-3

FIG. 16(b)

FIG. 16(c)

Today is a sunny Sunday, our class ready to go to the mountains for an autumn outing!

Text | Screen translation

1603

Text recognition ✕

Word segmentation

( sunny )   ( class )   ( school )

( mountains )   ( outing )   ( an )

🔍 Search    ⊞ Copy    🗺 Maps    ⟋ Share

FIG. 16(d)

← (Automatic detection) ⇌ Chinese

jin tian shi yi ge yang guang ming mei de xing qi tian, wo men ban zhun bei qu shan shang qiu you!

FIG. 16(e)

Today is a sunny Sunday, our class ready to go to the mountains for an autumn outing!

TO FIG. 17(a)-2

TO FIG. 17(a)-3

FIG. 17(a)-1

CONT. FROM FIG. 17(a)-1

Today is a sunny Sunday, our class ready to go to the mountains for an autumn outing!

07:30      55:00

FIG. 17(a)-2

CONT.
FROM
FIG. 17(a)-1

FIG. 17(a)-3

FIG. 17(b)

FIG. 17(c)

Today is a sunny Sunday, our class ready to go to the mountains for an autumn outing!

Text / Screen translation

Text recognition ✕

Word segmentation

1703

( sunny )   ( class )   ( school )

( mountains )   ( outing )   ( an )

🔍 Search    ⊞ Copy    🗺 Maps    ⟋ Share

FIG. 17(d)

←— (Automatic detection) ⇌ Chinese

jin tian shi yi ge yang guang
ming mei de xing qi tian,
wo men ban zhun bei qu
shan shang qiu you!

FIG. 17(e)

Video app

Phone
number ( 187XXXXX676 )

Verification
code ( ) ( Obtain (59s) )

( Log in )

TO
FIG. 18(a)-2

TO
FIG. 18(a)-3

FIG. 18(a)-1

CONT.
FROM
FIG. 18(a)-1

**Video app**

**Phone number**    187XXXXX676

1801

**Verification code**    Obtain (59s)

**Log in**

FIG. 18(a)-2

CONT.
FROM
FIG. 18(a)-1

FIG. 18(a)-3

FIG. 18(b)

**Video app**

Phone number: 187XXXXX676

Verification code: 900912 — Obtain (59s)

Log in

TO FIG. 18(c)-2

TO FIG. 18(c)-3

FIG. 18(c)-1

EP 4 187 876 B1

CONT.
FROM
FIG. 18(c)-1

**Video app**

**Phone number**  187XXXXX676

**Verification code**  900912    Obtain (59s)

**Log in**

FIG. 18(c)-2

200

CONT.
FROM
FIG. 18(c)-1

5G 5G 8:00

| | | | |
|---|---|---|---|
| Clock | Oct 15 Calendar | Gallery | Memo |
| Files | Email | Music | Calculator |
| Huawei Video | Health | Weather | Browser |
| AI Life | Settings | Recorder | App Store |
| Camera | Contacts | Phone | Messages |

FIG. 18(c)-3

Website of app 1

Phone number/Email

Password

Log in

Log in with the third-party account

App 2     App 3     App 4

EN  8:00
2020/10/12

1901

TO
FIG. 19(a)-2

FIG. 19(a)-1

CONT.
FROM
FIG. 19(a)-1

FIG. 19(a)-2

Website of app 1

Phone number/Email

Password

Log in

Log in with the third-party account

App 2    App 3    App 4

8:00
EN 2020/10/12

TO
FIG. 19(b)-2

FIG. 19(b)-1

CONT. FROM FIG. 19(b)-1

Your notebook computer requests authorization for app 2 — 1902

Authorize — 1903

Files    Email    Music

Huawei Video    Health    Weather    Browser

App 2    Settings    Recorder    App Store

Camera    Contacts    Phone    Messages

FIG. 19(b)-2

FIG. 19(c)-1

CONT.
FROM
FIG. 19(c)-1

5G 5G ⎙ 8:00

App 2

App 1 applies for using your account information

1904

Agree

Reject

FIG. 19(c)-2

Website of app 1

Movie    Recommendation    Live    TV series    Variety
                          broadcast              show

"Movie 1"    "Movie 2"    "Movie 3"    "Movie 4"

EN    8:01
      2020/10/12

FIG. 19(d)-1

TO
FIG. 19(d)-2

App 2

**Login operation notification** Just now

Your app 2 account has logged in to the website

**Dad** 21:30 yesterday

Good night!

**Mom** Saturday

Happy Birthday!

**Sam** Saturday

Happy Birthday!

**Lucy** Friday

Bye!

CONT. FROM FIG. 19(d)-1

FIG. 19(d)-2

FIG. 20(a)

FIG. 20(b)-1

5G 5G 📶 8:00

Your notebook computer requests authorization
for app 2

2005

Authorize

2006

CONT.
FROM
FIG. 20(b)-1

FIG. 20(b)-2

Website of app 1

Phone number/Email [                    ]

Password [                    ]

Log in

Log in with the third-party account

◯      ◯      ◯
App 2   App 3   App 4

∧ ▭ 📶 EN  8:00
          2020/10/12

TO
FIG. 20(c)-2

FIG. 20(c)-1

CONT.
FROM
FIG. 20(c)-1

App 2

App 1 applies for using your account information

2007

Agree

Reject

8:00

FIG. 20(c)-2

Website of app 1

Movie  Recommendation   Live    TV series   Variety
                        broadcast                show

"Movie 1"   "Movie 2"   "Movie 3"   "Movie 4"

EN  8:01
2020/10/12

TO
FIG. 20(d)-2

FIG. 20(d)-1

5G .ıll 5G .ıll 🤶 8:01

App 2

**Login operation notification**

Just now

Your app 2 account has logged in to the website

**Dad**                                                    21:30 yesterday

Good night!

**Mom**                                                         Saturday

Happy Birthday!

**Sam**                                                         Saturday

Happy Birthday!

**Lucy**                                                            Friday

Bye!

CONT. FROM FIG. 20(d)-1 ～

FIG. 20(d)-2

FIG. 21(a)

Website of app 1

Phone number/Email [                    ]

2101

Password [                    ]

[          Log in          ]

2102

[ Log in by using another device ]

Log in with the third-party account

◯          ◯          ◯

App 2        App 3        App 4

EN    8:00
2020/10/12

TO
FIG. 21(b)-2

FIG. 21(b)-1

Your notebook computer requests authorization for app 1

2103

2104

Authorize

CONT.
FROM
FIG. 21(b)-1

FIG. 21(b)-2

Website of app 1

Phone number/Email

Password

Log in

Log in by using another device

Log in with the third-party account

App 2    App 3    App 4

8:00
EN 2020/10/12

2101

2102

TO
FIG. 21(c)-2

FIG. 21(c)-1

App 1

User 1 (187xxxx9676)

Authorize the notebook computer to log in

2105

OK

Cancel

CONT.
FROM
FIG. 21(c)-1

FIG. 21(c)-2

Website of app 1

**Movie**  Recommendation  Live  TV series  Variety
broadcast  show

"Movie 1"  "Movie 2"  "Movie 3"  "Movie 4"

EN  8:01
2020/10/12

FIG. 21(d)-1

TO
FIG. 21(d)-2

App 1

**Movie**   Recommendation   Live broadcast

**"Movie 1"**          **"Movie 2"**

**"Movie 3"**          **"Movie 4"**

**"Movie 5"**          **"Movie 6"**

CONT.
FROM
FIG. 21(d)-1

FIG. 21(d)-2

Website of app 1

Phone number/Email [          ]

2201

Password [          ]

[ Register ]

Register with the third-party account

○ ○ ○
App 2   App 3   App 4

^ ▭ 📶 EN  8:00
2020/10/12

TO
FIG. 22(a)-2

FIG. 22(a)-1

FIG. 22(a)-2

CONT. FROM FIG. 22(a)-1 ~

FIG. 22(b)-1

CONT. FROM FIG. 22(b)-1

2202

Your notebook computer requests authorization for app 2

2203

Authorize

Files    Email    Music

Huawei Video    Health    Weather    Browser

App 2    Settings    Recorder    App Store

Camera    Contacts    Phone    Messages

FIG. 22(b)-2

Website of app 1

Phone number/Email

Password

Register

Register with the third-party account

App 2     App 3     App 4

8:00
EN  2020/10/12

TO
FIG. 22(c)-2

FIG. 22(c)-1

CONT. FROM FIG. 22(c)-1

2204

App 2

App 1 applies for using your account information

Agree

Reject

8:00

FIG. 22(c)-2

FIG. 22(d)-1

TO FIG. 22(d)-2

App 2

**Login operation notification**

Just now

Your app 2 account has logged in to the website

**Dad**                                    21:30 yesterday

Good night!

**Mom**                                        Saturday

Happy Birthday!

**Sam**                                        Saturday

Happy Birthday!

**Lucy**                                          Friday

Bye!

CONT.
FROM
FIG. 22(d)-1

FIG. 22(d)-2

~
TO
FIG. 23(a)-2

FIG. 23(a)-1

CONT.
FROM
FIG. 23(a)-1

FIG. 23(a)-2

Cloud

Mail

**Video app**

**Phone number**     187XXXXX676

**Verification code** [            ]   Obtain (59s)

**Log in**

08:08
Tuesday, June 23

Messages                    Now
1065732541
[Video app] The
verification code is
900912, which is valid for
login within 5 minutes.
Don't disclose it, beware of
being cheated.

FIG. 23(b)

EP 4 187 876 B1

FIG. 23(c)

FIG. 23(d)

EP 4 187 876 B1

FIG. 24(a)-2

TO

FIG. 24(a)-1

4G 4G            08:08

# 08:08
Thursday, June 18

35°C
Xi'an

App 1     App 2     App 3

**Log in to the game app**

**Phone number**

**Verification code**          Obtain

**Log in**

FIG. 24(a)-2

FIG. 24(b)

EP 4 187 876 B1

Messages                          Now

2569412285

[Game app] The verification code is
0324, which is valid for login within
5 minutes.

App 1          App 2          App 3

Log in to the game app

Phone number          187XXXXX676

Verification code     0324          Obtain (52s)

"0 3 2 4"

| 1 | 2 | 3 | 4 | 5 | 6 | | 9 | 0 |
| q | w | e | r | t | y | u | i | o | p |
| a | s | d | f | g | h | j | k | l |
| ⇧ | z | x | c | v | b | n | m | × |
| 123 | , | | | m | Search |

FIG. 24(c)

EP 4 187 876 B1

FIG. 24(d)

Movie search

| ABC | DEF | GHI |
| JKL | MNO | PQRS |
| TUV | WXYZ | 123 |
| 456 | 789 | 0 |

"XX"  "XXX"  "XXXX"

"XX"  "XXX"  "XXXX"

"XX"  "XXX"  "XXXX"

TO
FIG. 25(a)-2

FIG. 25(a)-1

**Movie search**

2501

| ABC | DEF | GHI |
|------|------|------|
| JKL | MNO | PQRS |
| TUV | WXYZ | 123 |
| 456 | 789 | 0 |

CONT.
FROM
FIG. 25(a)-1

"XX"    "XXX"    "XXXX"

"XX"    "XXX"    "XXXX"

"XX"    "XXX"    "XXXX"

FIG. 25(a)-2

FIG. 25(b)-1

Movie search

| ABC | DEF | GHI |
|------|------|------|
| JKL | MNO | PQRS |
| TUV | WXYZ | 123 |
| 456 | 789 | 0 |

CONT.
FROM
FIG. 25(b)-1

"XX"     "XXX"     "XXXX"

"XX"     "XXX"     "XXXX"

"XX"     "XXX"     "XXXX"

FIG. 25(b)-2

July 23, 2020
Thursday

The smart television requires text input. Do you want
to start the remote control application for input?

— 2502

CONT.
FROM
FIG. 25(b)-1

Cancel

OK

2503

FIG. 25(b)-3

FIG. 25(c)

FIG. 25(d)

Movie search

Movie 1

| ABC | DEF | GHI |
| JKL | MNO | PQRS |
| TUV | WXYZ | 123 |
| 456 | 789 | 0 |

Type: XX
Directors: XX, XX
Leading actors: XXX, XXX, XX

"Movie 1"

Watch after purchase

TO
FIG. 25(e)-2

FIG. 25(e)-1

**Movie search**

Movie 1

| | | |
|---|---|---|
| ABC | DEF | GHI |
| JKL | MNO | PQRS |
| TUV | WXYZ | 123 |
| 456 | 789 | 0 |

CONT. FROM FIG. 25(e)-1

**Type: XX**

**Directors: XX, XX**

**Leading actors: XXX, XXX, XX**

**"Movie 1"**

**Watch after purchase**

FIG. 25(e)-2

TO
FIG. 26(b)

2601

TO
FIG. 26(c)

FIG. 26(a)

CONT.
FROM
FIG. 26(a)

Movie 1 — 2603

| , | 1 Space | 2 ABC | 3 DEF | × |
|---|---------|-------|-------|---|
| . ? ! | 4 GHI | 5 JKL | 6 MNO | ☺ |
| | 7 PQRS | 8 TUV | 9 WXYZ | OK |
| Symbol | CN/EN | ⌴ | 123 | |

2602

FIG. 26(b)

CONT.
FROM
FIG. 26(a)

FIG. 26(c)

FIG. 27(a)-1

**Movie search**

2701

| | | |
|---|---|---|
| ABC | DEF | GHI |
| JKL | MNO | PQRS |
| TUV | WXYZ | 123 |
| 456 | 789 | 0 |

CONT. FROM FIG. 27(a)-1

"XX"  "XXX"  "XXXX"

"XX"  "XXX"  "XXXX"

"XX"  "XXX"  "XXXX"

FIG. 27(a)-2

FIG. 27(b)-1

**Movie search**

| | | |
|---|---|---|
| ABC | DEF | GHI |
| JKL | MNO | PQRS |
| TUV | WXYZ | 123 |
| 456 | 789 | 0 |

CONT. FROM FIG. 27(b)-1

"XX"   "XXX"   "XXXX"

"XX"   "XXX"   "XXXX"

"XX"   "XXX"   "XXXX"

FIG. 27(b)-2

**5G** **5G** 8:08

**08:08**
Thursday, June 18

35°C
Xi'an

App 1    App 2    Remote control

CONT. FROM FIG. 27(b)-1

FIG. 27(b)-3

FIG. 27(c)

FIG. 27(d)

FIG. 27(e)

FIG. 27(f)

EP 4 187 876 B1

Movie search

Movie 1

| ABC | DEF | GHI |
| JKL | MNO | PQRS |
| TUV | WXYZ | 123 |
| 456 | 789 | 0 |

"Movie 1"

Type: XX
Directors: XX, XX
Leading actors:
XXX, XXX, XX

Watch after purchase

TO
FIG. 27(g)-2

FIG. 27(g)-1

**Movie search**

Movie 1

| | | |
|---|---|---|
| ABC | DEF | GHI |
| JKL | MNO | PQRS |
| TUV | WXYZ | 123 |
| 456 | 789 | 0 |

"Movie 1"

Type: XX

Directors: XX, XX

Leading actors: XXX, XXX, XX

Watch after purchase

CONT.
FROM
FIG. 27(g)-1

FIG. 27(g)-2

FIG. 28(a)

FIG. 28(b)

FIG. 28(c)

FIG. 28(d)

FIG. 28(e)

FIG. 29(a)

**08:08**
**July 23, 2020**
**Thursday**

2901

TO
FIG. 29(c)

TO
FIG. 29(d)

FIG. 29(b)

FIG. 29(c)

CONT.
FROM
FIG. 29(b)

FIG. 29(d)

FIG. 30(a)

FIG. 30(b)

FIG. 30(c)

Your mobile phone is
converting recording to text.
Do you want to edit text on
your notebook computer?

3003

Cancel    OK

3004

8:00
2020/10/12

EN

TO
FIG. 30(d)-2

FIG. 30(d)-1

CONT.
FROM
FIG. 30(d)-1

5G 5G

8:00

Title

08:00 today

3002

√
List

Aa
Text editing

Picture

Recording

| 1 | 2 | 3 | 4 | 5 | 6 | 7 | 8 | 9 | 0 |

q w e r t y u i o p

a s d f g h j k l

z x c v b n m

?123 , .

FIG. 30(d)-2

**App 1**
— □ ✕
**New Save Save As Print Help**

Heat The re-change and invariant reflect people's livelihood demands Guangzhi think tank We have just counted breakthrough nominal concern topics on the eve of the 2020 National Two Sessions In your opinion what are the characteristics of this year's hot words and what kind of people's livelihood demands and social mentality do they reflect

3005

3006

∧ ▭ EN  8:00
2020/10/12

FIG. 30(e)-2
TO

FIG. 30(e)-1

Title                                    08:00 today

00:25

Heat The re-change and invariant reflect people's livelihood demands Guangzhi think tank We have just counted breakthrough nominal concern topics on the eve of the 2020 National Two Sessions In your opinion what are the characteristics of this year's hot words and what kind of people's livelihood demands and social mentality do they reflect

CONT. FROM FIG. 30(e)-1

FIG. 30(e)-2

App 1 ⌐ 3007 — □ ×

**New Save Save As Print Help**

1. Heat: The re-change and invariant reflect people's livelihood demands
2. Guangzhi think tank: We have just counted "the top 10 public
opinion topics on the eve of the 2020 National Two Sessions".
In your opinion, what are the characteristics of this year's hot words and
what kind of people's livelihood demands and social mentality do they
reflect? Zheng Gongcheng this year. The ranking has distinct annual
characteristics compared with my year the same is that medical care
education housing food safety and other words directly related to the
people's vital interests are thrown in the list.

3006

EN  8:01
2020/10/12

TO FIG. 30(f)-2

FIG. 30(f)-1

Title          08:00 today

00:44

1. Heat: The re-change and invariant reflect people's livelihood demands

2. Guangzhi think tank: We have just counted "the top 10 public opinion topics on the eve of the 2020 National Two Sessions". In your opinion, what are the characteristics of this year's hot words and what kind of people's livelihood demands and social mentality do they reflect? Zheng Gongcheng this year. The ranking has distinct annual characteristics compared with my year the same is that medical care education housing food safety and other words directly related to the people's vital interests are thrown in the list.

CONT.
FROM
FIG. 30(f)-1

FIG. 30(f)-2

**App 1**      — □ ×

**New Save Save As Print Help**

1. Heat: The re-change and invariant reflect people's livelihood demands
2. Guangzhi think tank: We have just counted "the top 10 public opinion topics on the eve of the 2020 National Two Sessions". In your opinion, what are the characteristics of this year's hot words and what kind of people's livelihood demands and social mentality do they reflect?
3. Zheng Chenggong: This year's hot words and their rankings have distinct annual characteristics. Compared with previous years, the same is that medical care, education, housing, food safety, and other words directly related to the people's vital interests are still in the list.

3006    ∧ ▭ ⏻ EN    8:01 2020/10/12

FIG. 30(g)-1

TO FIG. 30(g)-2

CONT.
FROM
FIG. 30(g)-1

5G .ıll 5G .ıll 🛜      ■ 8:01

←        ↰ ↱ √

Title          08:00 today

00:54

1. Heat: The re-change and invariant reflect people's livelihood demands
2. Guangzhi think tank: We have just counted "the top 10 public opinion topics on the eve of the 2020 National Two Sessions". In your opinion, what are the characteristics of this year's hot words and what kind of people's livelihood demands and social mentality do they reflect?
3. Zheng Chenggong: This year's hot words and their rankings have distinct annual characteristics. Compared with previous years, the same is that medical care, education, housing, food safety, and other words directly related to the people's vital interests are still in the list.

FIG. 30(g)-2

5G .ıll 5G .ıll 📶  ▬ 8:01

← ↩ ↪ √

Title                                    08:00 today

00:54

| | | | | || | | ı ı ı | | | | ı ı ı ı ı ı | | | | ı

1. Heat: The re-change and invariant reflect people's livelihood demands
2. Guangzhi think tank: We have just counted "the top 10 public opinion topics on the eve of the 2020 National Two Sessions". In your opinion, what are the characteristics of this year's hot words and what kind of people's livelihood demands and social mentality do they reflect?
3. Zheng Chenggong: This year's hot words and their rankings have distinct annual characteristics. Compared with previous years, the same is that medical care, education, housing, food safety, and other words directly related to the people's vital interests are still in the list.

3008

■

FIG. 30(h)

3009

Title                                08:00 today

00:00                                          00:54

1. Heat: The re-change and invariant reflect people's livelihood demands
2. Guangzhi think tank: We have just counted "on the eve of the 2020 National Two Sessions

List    Text editing    Picture    Recording    Handwriting

| 1 | 2 | 3 | 4 | 5 | 6 | 7 | 8 | 9 | 0 |

| q | w | e | r | t | y | u | i | o | p |

| a | s | d | f | g | h | j | k | l |

| z | x | c | v | b | n | m |

?123    ,    .

FIG. 30(i)

3010

1. Hotspots

08:00 today

00:00                                00:54

1. Heat: The re-change and invariant reflect people's livelihood demands
2. Guangzhi think tank: We have just counted "the top 10 public opinion topics on the eve of the 2020 National Two Sessions". In your opinion, what are the characteristics of this year's hot words and what kind of people's livelihood demands and social mentality do they reflect?
3. Zheng Chenggong: This year's hot words and their rankings have distinct annual characteristics. Compared with previous years, the same is that medical care, education, housing, food safety, and other words directly related to the people's vital interests are still in the list.

Share          Favorites          Delete          Print

FIG. 30(j)

All notes
2 notes

Search for notes

3011

1. Heat: The re-change and invariant reflect

November 15

Mom's birthday (September 28)

September 1

+

Notes

√

To-dos

FIG. 30(k)

8:00
2020/10/12

TO
FIG. 31(a)-2

FIG. 31(a)-1

Title

08:00 today

List   Text editing   Picture   Recording

1 2 3 4 5 6 7 8 9 0
q w e r t y u i o p
a s d f g h j k l
⇧ z x c v b n m ⌫
?123 , ␣ . ✓

CONT. FROM FIG. 31(a)-1

FIG. 31(a)-2

8:00
2020/10/12

EN

∼
TO
FIG. 31(b)-2

FIG. 31(b)-1

CONT. FROM FIG. 31(b)-1

3101

Title                        08:00 today

Detected a notebook computer around.
Do you want to send text content to the
notebook computer for editing?

3102

Cancel                    OK

FIG. 31(b)-2

**App 1**

**New Save Save As Print Help** — □ ×

Heat The re-change and invariant reflect people's livelihood demands Guangzhi think tank We have just counted breakthrough nominal concern topics on the eve of the 2020 National Two Sessions In your opinion what are the characteristics of this year's hot words and what kind of people's livelihood demands and social mentality do they reflect

EN 8:00 2020/10/12

FIG. 31(c)-1

TO FIG. 31(c)-2

Title                                        08:00 today

00:25

Heat The re-change and invariant reflect people's livelihood demands Guangzhi think tank We have just counted breakthrough nominal concern topics on the eve of the 2020 National Two Sessions In your opinion what are the characteristics of this year's hot words and what kind of people's livelihood demands and social mentality do they reflect

CONT. FROM FIG. 31(c)-1

FIG. 31(c)-2

FIG. 32(a)

FIG. 32(b)

Your mobile phone is
recording. Do you want to
convert recording to text on
your notebook computer?

3202

Cancel    OK

3203

8:00
2020/10/12

∧ ▭ ⬚ EN

~
TO

FIG. 32(c)-2

FIG. 32(c)-1

CONT.
FROM
FIG. 32(c)-1

FIG. 32(c)-2

## App 1
### New Save Save As Print Help

Heat The re-change and invariant reflect people's livelihood demands Guangzhi think tank We have just counted breakthrough nominal concern topics on the eve of the 2020 National Two Sessions In your opinion what are the characteristics of this year's hot words and what kind of people's livelihood demands and social mentality do they reflect

3204

EN 8:00 2020/10/12

FIG. 32(d)-1

TO FIG. 32(d)-2

Recording

00:22　　　00:24　　　00:26　　　00:28

00:25:31

Expected to record more than 10 hours

CONT.
FROM
FIG. 32(d)-1

FIG. 32(d)-2

**App 1**                                — □ ×
**New Save Save As Print Help**

1. Heat: The re-change and invariant reflect people's livelihood demands
2. Guangzhi think tank: We have just counted "the top 10 public opinion topics on the eve of the 2020 National Two Sessions". In your opinion, what are the characteristics of this year's hot words and what kind of people's livelihood demands and social mentality do they reflect?

⌃ ▭ 𝄢 EN    8:00
2020/10/12

TO FIG. 32(e)-2

FIG. 32(e)-1

CONT.
FROM
FIG. 32(e)-1

← **Recording**

00:28      00:30      00:32      00:34

# 00:31:25

Expected to record more than 10 hours

FIG. 32(e)-2

Your mobile phone receives an incoming call. Do you want to convert call content to text on your notebook computer?

Cancel    OK

3301

3302

8:00
2020/10/12

EN

TO
FIG. 33(a)-2

FIG. 33(a)-1

XXX-XXXXXXXX

Shenzhen, Guangdong

CONT.
FROM
FIG. 33(a)-1

Messages

Alert

Reject

Accept

FIG. 33(a)-2

FIG. 33(b)-1

XXX-XXXXXXXX

Shenzhen, Guangdong

CONT.
FROM
FIG. 33(b)-1

Messages

Alert

Reject

Accept

FIG. 33(b)-2

**App 1**　　　　　　　　　　　— □ ×
**New Save Save As Print Help**

Hey, there's a meeting tomorrow morning.
The meeting time is 9:30 tomorrow morning.
You need to introduce the progress of the
project. Please attend on time.

3303

∧ ▭ 🔊 EN　8:00
2020/10/12

TO
FIG. 33(c)-2

FIG. 33(c)-1

XXX-XXXXXXXX

Shenzhen, Guangdong

00:12

Mute     Keyboard     Speaker

Hang up

CONT.
FROM
FIG. 33(c)-1

FIG. 33(c)-2

**App 1** — □ ✕
**New Save Save As Print Help**

Leader: Hey, there's a meeting tomorrow
morning.
Meeting time: 9:30 tomorrow morning.
Meeting content: Introduce the progress of the
project. Please attend on time.

3303

8:00
∧ ▭ 🔊 EN 2020/10/12

FIG. 33(d)-1

TO
FIG. 33(d)-2

CONT.
FROM
FIG. 33(d)-1

XXX-XXXXXXXX

Shenzhen, Guangdong

00:20

Mute    Keyboard    Speaker

Hang up

FIG. 33(d)-2

Your mobile phone receives a video call request. Do you want to convert call content to text on your notebook computer?

3401

Cancel     OK

3402

TO FIG. 34(a)-2

EN     8:00
2020/10/12

FIG. 34(a)-1

CONT.
FROM
FIG. 34(a)-1 ~

Invite you to a video call

Reject

Answer

FIG. 34(a)-2

**App 1** — □ ×
**New Save Save As Print Help**

3403

TO
FIG. 34(b)-2

FIG. 34(b)-1

8:00
2020/10/12
EN

Invite you to a video call

Reject          Answer

CONT.
FROM
FIG. 34(b)-1

FIG. 34(b)-2

App 1       — □ ✕

**New Save Save As Print Help**

Hey, there's a meeting tomorrow morning.
The meeting time is 9:30 tomorrow morning.
You need to introduce the progress of the
project. Please attend on time.

∧ ▭ 🔊 EN   8:00
2020/10/12

TO
FIG. 34(c)-2

FIG. 34(c)-1

CONT.
FROM
FIG. 34(c)-1

FIG. 34(c)-2

**App 1**      — ☐ ✕
**New Save Save As Print Help**

Leader: Hey, there's a meeting tomorrow morning.
Meeting time: 9:30 tomorrow morning.
Meeting content: Introduce the progress of the project. Please attend on time.

8:00
∧ ▭ 📶 EN 2020/10/12

FIG. 34(d)-2
TO

FIG. 34(d)-1

CONT.
FROM
FIG. 34(d)-1

FIG. 34(d)-2

Your mobile phone receives an incoming call. Do you want to convert call content to text on your notebook computer?

3501

Cancel    OK

3502

∧ 🔋 📶 EN    8:00
2020/10/12

TO
FIG. 35(a)-2

FIG. 35(a)-1

XXX-XXXXXXXX

Shenzhen, Guangdong

CONT. FROM FIG. 35(a)-1 ~

Messages

Alert

Reject

Accept

FIG. 35(a)-2

8:00
2020/10/12

EN

FIG. 35(b)-1

TO
FIG. 35(b)-2

CONT.
FROM
FIG. 35(b)-1

XXX-XXXXXXXX

Shenzhen, Guangdong

Messages

Alert

Reject

Accept

FIG. 35(b)-2

FIG. 35(c)-1

CONT.
FROM
FIG. 35(c)-1

XXX-XXXXXXXX

Shenzhen, Guangdong

00:15

Mute

Keyboard

3503 Speaker

Recording

Hang up

FIG. 35(c)-2

**App 1** — □ ×
**New Save Save As Print Help**

Hey, there's a meeting tomorrow morning.
The meeting time is 9:30 tomorrow morning.
You need to introduce the progress of the
project. Please attend on time.

3504

8:00
∧ ⬚ 🔊 EN 2020/10/12

FIG. 35(d)-1

TO
FIG. 35(d)-2

XXX-XXXXXXXX

Shenzhen, Guangdong

00:25

Mute

Speaker

Keyboard

Recording to text

Hang up

CONT.
FROM
FIG. 35(d)-1

FIG. 35(d)-2

EP 4 187 876 B1

**App 1** — □ ×
**New Save Save As Print Help**

Leader: Hey, there's a meeting tomorrow morning.
Meeting time: 9:30 tomorrow morning.
Meeting content: Introduce the progress of the project. Please attend on time.

8:00
EN 2020/10/12

TO
FIG. 35(e)-2

FIG. 35(e)-1

327

XXX-XXXXXXXX

Shenzhen, Guangdong

00:31

Mute

Speaker

Keyboard

Recording to text

Hang up

CONT.
FROM
FIG. 35(e)-1

FIG. 35(e)-2

Heat The re-change and invariant reflect people's livelihood demands

3601

TO
FIG. 36(a)-2

8:00
2020/10/12
EN

FIG. 36(a)-1

5G 5G 📶 ■ 8:00

← ↶ ↷ √

Title      08:00 today

00:10

Heat The re-change and invariant reflect people's livelihood demands

■

CONT.
FROM
FIG. 36(a)-1

FIG. 36(a)-2

3601

Guangzhi think tank We have just counted

TO
FIG. 36(b)-2

FIG. 36(b)-1

8:00
2020/10/12

EN

5G 5G 8:00

Title 08:00 today

00:18

Heat The re-change and invariant reflect people's livelihood demands, Guangzhi think tank We have just counted

CONT.
FROM
FIG. 36(b)-1

FIG. 36(b)-2

App 1      — ☐ ✕

**New Save Save As Print Help**

Heat The re-change and invariant reflect
people's livelihood demands

3701

Heat The re-change and invariant reflect people's
livelihood demands

8:00
2020/10/12

^ 🔋 📶 EN

FIG. 37(a)-1

TO
FIG. 37(a)-2

FIG. 37(a)-2

**App 1**      — □ ✕

**New Save Save As Print Help**

Heat The re-change and invariant reflect people's livelihood demands, Guangzhi think tank We have just counted

3701

Guangzhi think tank We have just counted

∧ ⬜ 📶 EN   8:00
2020/10/12

FIG. 37(b)-1

TO
FIG. 37(b)-2

00:10

Heat The re-change and invariant reflect people's livelihood demands, Guangzhi think tank We have just counted

CONT. FROM FIG. 37(b)-1

FIG. 37(b)-2

Cloud

Mail

3801

Screenshot   3802

App 1

App 2

App 3

...

∧ ▭ 📶 EN  8:00
2020/12/20

8:00

Heart rate: 80 beats/minute

FIG. 38(a)

FIG. 38(b)

08:00

Heart rate: 80 beats/minute

3805

3806

08:00

Heart rate: 80 beats/minute

Cloud

Mail

EN

8:00
2020/12/20

FIG. 38(c)

3808

Save Print Send to the mobile phone

3807

Cloud

Mail

Heart rate: 80 beats/minute

EN  8:00
12/20/2020

08:00

Heart rate: 80 beats/minute

FIG. 38(d)

EP 4 187 876 B1

FIG. 39(a)-1

TO
FIG. 39(a)-2

CONT.
FROM
FIG. 39(a)-1

A connection is
established

5G 5G

8:00

Clock

Oct
12

Calendar

Gallery

Memo

Files

Email

Music

Calculator

Huawei
Video

Health

Weather

Browser

AI Life

Settings

Recorder

App Store

Camera

Contacts

Phone

Messages

FIG. 39(a)-2

FIG. 39(b)-1

TO
FIG. 39(b)-2

CONT. FROM FIG. 39(b)-1

5G  5G  8:00

Clock    Calendar    Gallery    Memo

Files    Email    Music    Calculator

Huawei Video    Health    Weather    Browser

AI Life    Settings    Recorder    App Store

Camera    Contacts    Phone    Messages

FIG. 39(b)-2

FIG. 39(c)-1

TO FIG. 39(c)-2

3907

CONT.
FROM
FIG. 39(c)-1

FIG. 39(c)-2

4001

| Send the picture to the mobile phone |
|---|
| Save the picture as |
| Copy the picture |
| View in full screen |
| Object recognition |
| Shopping |
| Translation |
| Editing —— 4003 |
| ... |

4002

8:00
2020/10/12
EN

TO
FIG. 40(a)-2

FIG. 40(a)-1

EP 4 187 876 B1

CONT.
FROM
FIG. 40(a)-1

FIG. 40(a)-2

348

4004

Exposure

Shade

Contrast

Brightness

Definition

8:00
EN 2020/10/12

TO
FIG. 40(b)-2

FIG. 40(b)-1

CONT.
FROM
FIG. 40(b)-1

FIG. 40(b)-2

4005

Exposure
Shade
Contrast
Brightness
Definition

TO
FIG. 40(c)-2

8:00
EN 2020/10/12

FIG. 40(c)-1

CONT.
FROM
FIG. 40(c)-1

Clock  Calendar  Gallery  Memo

Files  Email  Music  Calculator

Huawei Video  Health  Weather  Browser

AI Life  Settings  Recorder  App Store

Camera  Contacts  Phone  Messages

5G 5G  8:00

FIG. 40(c)-2

FIG. 41(a)

FIG. 41(b)

FIG. 41(c)

Source end device (source end device) 4210

Application layer

Picture application 4211

Document application 4212

...

Agent module

GUI presentation module 4215

Event processing module 4214

Network connection module 4213

Sink end device (sink end device) 4220

Capability center

Translation

Object recognition

Word extraction

Shopping

AI Voice

...

Agent module

Network connection module 4221

Event processing module 4222

FIG. 42

4300

| Source end device | | Sink end device |

S4301: Establish a connection

S4302: Request capability information

| Detect a first operation of a user |

S4303: First content and request information

| Process the first content |

S4304: Processing result

| S4305: Prompt the user with a processing result of the first content |

FIG. 43

Device A

Application layer

Capability center

OCR image recognition module

Video cache-to-image module

Application framework layer

Multi-terminal management service

Gesture recognition service

Input service

System library: input module (InputHal)

Kernel layer: touch driver

Hardware layer: touchscreen

Device B

UI presentation module

Video cache service

FIG. 44

Obtain a video cache resource (FFmpegFrameGrabber) — 4501

Start to convert the video cache resource
(FFmpegFrameGrabber:start) — 4502

Obtain a total quantity of frames
(FFmpegFrameGrabber:getLengthInFrames) of the video cache
resource — 4503

Set a frame quantity extraction flag Flag — 4504

Obtain a video frame Frame (FFmpegFrameGrabber:grabImage) — 4505

Convert a
video frame
into a JPG
picture

Convert the video frame Frame into a picture
(Java2DFrameConverter) — 4506

Convert the video frame into a BufferedImage object
(Java2DFrameConverter:getBufferedImage) — 4507

Convert the BufferedImage object into a JPG picture
(ImageO.write) — 4508

Store the JPG picture — 4509

End conversion of the video cache resource
(FFmpegFrameGrabber:stop) — 4510

FIG. 45

4600

```
┌─────────────────────────┐                    ┌─────────────────────────┐
│        Device A         │                    │        Device B         │
└─────────────────────────┘                    └─────────────────────────┘

┌─────────────────────────┐
│ S4601: Detect a preset  │
│  operation of a user    │
└─────────────────────────┘

        ╱─────────────────╲
       ╱  S4602: Determine  ╲
      ╱ whether to start cross-device screen ╲
       ╲     recognition    ╱
        ╲─────────────────╱

        ╱─ ─ ─ ─ ─ ─ ─ ─ ╲
       ╱     S4603:         ╲
      ╱ Determine whether the device B ╲
       ╲    exists around   ╱
        ╲─ ─ ─ ─ ─ ─ ─ ─ ╱

          ──────── S4604: Instruction ────────────▶

          ◀──────── S4605: Image information ──────

┌ ─ ─ ─ ─ ─ ─ ─ ─ ─ ─ ─ ─ ┐
│  S4606: Convert a video cache │
│ resource into the image information │
└ ─ ─ ─ ─ ─ ─ ─ ─ ─ ─ ─ ─ ┘

┌─────────────────────────┐
│ S4607: Process a picture to obtain a │
│     processing result   │
└─────────────────────────┘

          ──────── S4608: Processing result ────────▶

                                              ┌─────────────────────────────────┐
                                              │ S4609: Display the processing result │
                                              └─────────────────────────────────┘
```

FIG. 46

4700

| First electronic device |

S4701: Detect a first operation

S4702: Request information →

← S4703: First image information

S4704: Process the first image information by using a first function

| Second electronic device |

FIG. 47

Device A

App 1

Application initiator 4810

Data synchronization module 4820

Device B

App 2

Notification module 4830

Data synchronization module 4840

FIG. 48

4900

FIG. 49

EP 4 187 876 B1

5000

| Device A | Device B | Server of app 2 |
|---|---|---|

S5001: Detect that a user performs a login or registration operation by using app 2

——— S5002: First message ——→

S5003: Detect whether app 2 is installed

←——— S5004: Response ———

├— S5005: Authorization request →

├— S5006: Authorization request →

S5007: Verify identification information

←——— S5008: Response ———

S5009: Display a login authorization interface

Detect an operation that the user allows performing authorization on app 1

├— S5010: Request information →

←——— S5011: Access token ———

←——— S5012: Access token ———

——————— S5013: Access token ——————→

←——————— S5014: Account information of app 2 ———————

S5015: Implement login or registration of app 1

FIG. 50

5100

| Device A | Device B | Server of app 1 |

S5101: Detect an operation that a user performs login by using another device

— S5102: Second message →

S5103: Detect whether app 1 is installed

← S5104: Response —

S5105: Authorization request →

S5106: Authorization request →

S5107: Verify identification information

← S5108: Response —

S5109: Display a login authorization interface

Detect an operation that the user allows logging in to app 1 on the device A

— S5110: Request information →

← S5111: Access token —

← S5112: Access token —

— S5113: Access token →

← S5114: Account information of app 1 —

S5115: Implement login of app 1

FIG. 51

5200

| Device A | Device B | Server |

S5201: Display a first interface

S5202: First request information

S5203: Second request information

S5204: First information

S5205: First information

S5206: Request information about a first account

S5207: Information about the first account

S5208: Perform account login or account registration on a first application

FIG. 52

5300

Device A

Device B

S5301: Detect an operation that a user obtains a verification code

- - - - - - - Query device information - - - - - →

← - - - - - - - Device information - - - - - - -

— S5302: Request verification code information →

S5303: Receive an SMS message sent by a server, where the SMS message includes a verification code

← —— S5304: Verification code information ——

S5305: Prompt the user with the verification code, or fill the verification code in a verification code input box

FIG. 53

Server

SMS verification
code notification

Device B

Device A

Notification listening

Verification code filling

Data encapsulation

Verification code
notification parsing

Notification sending

Notification receiving

FIG. 54

FIG. 55

5600

| Display a first interface, where the first interface includes a verification code input box | 5601 |

| When detecting an operation of obtaining a verification code by using a first phone number, request verification code information from a second electronic device and request a server to send verification code information to an electronic device corresponding to the first phone number | 5602 |

| Receive the verification code information sent by the second electronic device | 5603 |

| Prompt a user with the verification code, or fill the verification code in the verification code input box | 5604 |

FIG. 56

5700

| First electronic device | | Second electronic device | | Server |

Detect an operation of obtaining a verification code by using a first account

S5701: Request verification code information

S5701: Request to send a verification code to an electronic device corresponding to the first account

S5702: Verification code information

S5702: Verification code information

FIG. 57

FIG. 58

EP 4 187 876 B1

5900

First electronic device

Second electronic device

S5901: Display a text input interface on a display

S5902: First message

S5903: Detect a preset operation of a user, and listen to the first message

S5904: In response to detecting the preset operation of the user and receiving the first message, detect content input by the user

S5905: First content

S5906: Display text content corresponding to the first content in a text input box

FIG. 59

Device A

ASR module 6020

Transceiver control module 6030

Pickup module 6010

Replacement module 6040

Device B

Transceiver control module 6050

Display unit 6060

Editing control module 6070

FIG. 60

6100

| Device A | Device B |

Query request →

← Response

S6101: Obtain voice content

S6102: First information →

S6103: Display text content

S6104: In response to detecting an operation that a user edits the text content, display the edited text content

← S6105: Edited text content

FIG. 61

| Device A | Device B |

Pickup module 6210 → Transceiver control module 6220 ⇄ Transceiver control module 6230 → ASR module 6240

Editing control module 6260 ⇄ Display unit 6250

FIG. 62

6300

| First electronic device | | Second electronic device |

S6301: Establish a connection

S6302: In response to detecting an operation that a screenshot function is enabled, prompt a user to take a screenshot of the first electronic device or the second electronic device

S6303: Request information

S6304: Image information

S6305: Detect a screenshot operation, and display the image information obtained after the screenshot

FIG. 63

Second electronic device

First electronic device

| Audio/Video collection |

| Audio/Video encoding |

| Network transmission channel |

| Rendering |

| Audio/Video cropping |

| Audio/Video decoding |

| Network transmission channel |

FIG. 64

6500

```
┌─────────────────────────┐                    ┌─────────────────────────┐
│  First electronic device │                   │ Second electronic device│
└─────────────────────────┘                    └─────────────────────────┘
```

S6501: Establish a connection

┌──────────────────────────────┐
│ S6502: Display a first interface, │
│ where the first interface includes a │
│ first control │
└──────────────────────────────┘

S6503: Request information

┌──────────────────────────────────────┐
│ Start a camera to collect an image │
└──────────────────────────────────────┘

Image information

┌──────────────────────────────┐
│ S6504: Detect a first operation on │
│ the image information, and obtain a │
│ processing result of the image │
│ information │
└──────────────────────────────┘

FIG. 65

6600

```
┌─────────────────────────┐                    ┌─────────────────────────┐
│  First electronic device │                    │ Second electronic device │
└─────────────────────────┘                    └─────────────────────────┘
           │                                               │
┌─────────────────────────┐                                │
│ S6601: Display a first   │                                │
│        interface         │                                │
└─────────────────────────┘                                │
           │                                                │
┌─────────────────────────────┐                            │
│ S6602: Display information   │                            │
│ about one or more devices    │                            │
└─────────────────────────────┘                            │
           │     S6603: Audio and/or image information ───▶ │
           │                                   ┌─────────────────────────────┐
           │                                   │ Play the audio and/or image │
           │                                   │        information          │
           │                                   └─────────────────────────────┘
           │                                                │
```

FIG. 66

Phone
number

Verification
code

Obtain

OK

| ABC | DEF | GHI |
| JKL | MNO | PQRS |
| TUV | WXYZ | 123 |
| 456 | 789 | 0 |

TO
FIG. 67(a)-2

FIG. 67(a)-1

6701

6702

CONT. FROM
FIG. 67(a)-1

Phone number

Verification code

Obtain

OK

| ABC | DEF | GHI |
| JKL | MNO | PQRS |
| TUV | WXYZ | 123 |
| 456 | 789 | 0 |

FIG. 67(a)-2

Phone
number

Verification
code

Obtain

OK

| ABC | DEF | GHI |
| JKL | MNO | PQRS |
| TUV | WXYZ | 123 |
| 456 | 789 | 0 |

TO
FIG. 67(b)-2

TO
FIG. 67(b)-3

FIG. 67(b)-1

CONT. FROM
FIG. 67(b)-1

Phone number

Verification code

Obtain

OK

| ABC | DEF | GHI |
| JKL | MNO | PQRS |
| TUV | WXYZ | 123 |
| 456 | 789 | 0 |

FIG. 67(b)-2

CONT. FROM
FIG. 67(b)-1

5G 5G

08:08

Thursday, June 18

35°C
Xi'an

8:08

App 1    App 2    Remote
control

FIG. 67(b)-3

Phone
number

Verification
code        Obtain     TO FIG. 67(c)-2

OK

| ABC | DEF | GHI |
| JKL | MNO | PQRS |
| TUV | WXYZ | 123 |
| 456 | 789 | 0 |

TO FIG. 67(c)-3

FIG. 67(c)-1

CONT. FROM
FIG. 67(c)-1

Phone number  187xxxx9678

Verification code [          ]  Obtain

OK

| ABC | DEF | GHI |
| JKL | MNO | PQRS |
| TUV | WXYZ | 123 |
| 456 | 789 | 0 |

FIG. 67(c)-2

CONT. FROM
FIG. 67(c)-1

6703

FIG. 67(c)-3

Phone number

Verification code [ Obtain ]

[ OK ]

| ABC | DEF | GHI |
| JKL | MNO | PQRS |
| TUV | WXYZ | 123 |
| 456 | 789 | 0 |

TO FIG. 67(d)-2

TO FIG. 67(d)-3

FIG. 67(d)-1

CONT. FROM FIG. 67(d)-1 ~

Phone number [ 187xxxx9678 ]

6703

Verification code [ ] [ Obtain ]

[ OK ]

| ABC | DEF | GHI |
| JKL | MNO | PQRS |
| TUV | WXYZ | 123 |
| 456 | 789 | 0 |

FIG. 67(d)-2

Phone
number
Verification
code

Obtain

OK

| ABC | DEF | GHI |
| JKL | MNO | PQRS |
| TUV | WXYZ | 123 |
| 456 | 789 | 0 |

TO
FIG. 67(e)-2

TO
FIG. 67(e)-3

FIG. 67(e)-1

CONT. FROM
FIG. 67(e)-1

Phone number   187xxxx9678

Verification code   900912     Obtain

OK     — 6705

| ABC | DEF | GHI |
| JKL | MNO | PQRS |
| TUV | WXYZ | 123 |
| 456 | 789 | 0 |

FIG. 67(e)-2

6704

| | | |
|---|---|---|
| Messages | | Now |
| 1065732541 | | |

[Video app] The verification code is
900912, which is valid for login within 5
minutes. Don't disclose it, beware of
being cheated.

Channel

Volume

OK

FIG. 67(e)-3

X X X X X X X X X X X X X X
X X X X X X X X X X X X X X

Today is a sunny Sunday, our class ready to go to the

mountains for ⌜xing qi ri; li bai ri⌝ uting!

We're going to bike to school first.

X X X X X X X X X X X X X X
X X X X X X X X X X X X X X

⌃ ▭ 📶 EN  8:00
2020/10/12

6801

FIG. 68(a)-2 TO ∼

FIG. 68(a)-1

CONT. FROM
FIG. 68(a)-1

FIG. 68(a)-2

FIG. 68(b)-1

CONT. FROM FIG. 68(b)-1

FIG. 68(b)-2

X X X X X X X X X X X X X X
X X X X X X X X X X X X X X

Today is a sunny Sunday, our class ready to
go to the mountains for an autumn outing!
We're going to bike to school first.

X X X X X X X X X X X X X X
X X X X X X X X X X X X X X

8:00
∧ ▭ EN 2020/10/12

TO ~ FIG. 69(b)

FIG. 69(a)

CONT. FROM FIG. 69(a)

6901

Clock  Calendar  Gallery  Memo

You have selected a piece of text on your notebook computer. Which function do you want to use?

◯ Translation

◯ Word extraction  6902

Cancel  OK

AI Life  Settings  Recorder  App Store

Camera  Contacts  Phone  Messages

FIG. 69(b)

Photo 4

Today is a sunny Sunday, our class ready to go to the mountains for an autumn outing!

8:00
EN 2020/10/12

FIG. 70(a)-2

FIG. 70(a)-1

7002

7001

CONT. FROM
FIG. 70(a)-1

5G 5G 8:01

Today is a sunny Sunday, our class ready to go to
the mountains for an autumn outing!

FIG. 70(a)-2

FIG. 70(b)-1

7002

7001

Today is a sunny Sunday, our class ready to go to the mountains for an autumn outing!

CONT. FROM FIG. 70(b)-1

FIG. 70(b)-2

7100

```
┌─────────────────────────┐                    ┌─────────────────────────┐
│  First electronic device │                    │ Second electronic device │
└─────────────────────────┘                    └─────────────────────────┘
             │                                               │
             │────── S7101: First content ──────────────────▶│
             │                                               │
                                                  ┌──────────────────────────────────┐
                                                  │ S7102: Process the first content based │
                                                  │     on a type of the first content     │
                                                  └──────────────────────────────────┘
             │◀────── S7103: Processing result ──────────────│
             │                                               │
┌──────────────────────────────┐                             │
│ S7104: Prompt a user with the │                             │
│        processing result       │                             │
└──────────────────────────────┘                             │
             │                                               │
```

FIG. 71

## EP 4 187 876 B1

**Patent documents cited in the description**

- US 2011047214 A1